(19) Europäisches Patentamt / European Patent Office / Office européen des brevets

(11) EP 3 588 634 B1

(12) **EUROPÄISCHE PATENTSCHRIFT**

(45) Veröffentlichungstag und Bekanntmachung des Hinweises auf die Patenterteilung:
**22.11.2023 Patentblatt 2023/47**

(21) Anmeldenummer: **18180017.8**

(22) Anmeldetag: **27.06.2018**

(51) Internationale Patentklassifikation (IPC):
***H01M 4/60*** *(2006.01)* ***H01M 4/137*** *(2010.01)*
***H01M 4/1399*** *(2010.01)* ***H01M 10/0569*** *(2010.01)*

(52) Gemeinsame Patentklassifikation (CPC):
**H01M 4/137; H01M 4/1399; H01M 4/604; H01M 10/0569;** H01M 2300/0045; Y02E 60/10

(54) **VERBESSERTES ORGANISCHES ELEKTRODENMATERIAL**

IMPROVED ORGANIC ELECTRODE MATERIAL

MATÉRIAU D’ÉLECTRODE ORGANIQUE AMÉLIORÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.01.2020 Patentblatt 2020/01**

(73) Patentinhaber: **InnovationLab GmbH**
**69115 Heidelberg (DE)**

(72) Erfinder:
- **Wild, Andreas**
  **45721 Haltern am See (DE)**
- **Bakumov, Vadym**
  **45772 Marl (DE)**
- **Korell, Michael**
  **44805 Bochum (DE)**

(74) Vertreter: **Harrison, Robert John et al**
**Sonnenberg Harrison Partnerschaft mbB**
**Herzogspitalstraße 10a**
**80331 München (DE)**

(56) Entgegenhaltungen:
**WO-A1-2017/191481**

- **YIJUN TANG ET AL: "Poly(Vinyl Ferrocene) Redox Behavior in Ionic Liquids", JOURNAL OF THE ELECTROCHEMICAL SOCIETY, Bd. 155, Nr. 5, 1. Januar 2008 (2008-01-01), Seite F82, XP055504451, ISSN: 0013-4651, DOI: 10.1149/1.2868797**
- **YEN-YAO CHENG ET AL: "Electrochemical behavior of organic radical polymer cathodes in organic radical batteries with N-butyl-N-methylpyrrolidinium bis(trifluoromethylsulfonyl)imide ionic liquid electrolytes", ELECTROCHIMICA ACTA., Bd. 66, 1. April 2012 (2012-04-01), Seiten 332-339, XP055504458, GB ISSN: 0013-4686, DOI: 10.1016/j.electacta.2012.02.003**
- **G. HERNÁNDEZ ET AL: "Redox-active poly(ionic liquid)s as active materials for energy storage applications", JOURNAL OF MATERIALS CHEMISTRY A, Bd. 5, Nr. 31, 1. Januar 2017 (2017-01-01) , Seiten 16231-16240, XP055504506, GB ISSN: 2050-7488, DOI: 10.1039/C6TA10056B**
- **Yang Dai ET AL: "Electrochemical Performance of Organic Radical Cathode with Ionic Liquid Based Electrolyte", Journal of The Electrochemical Society, vol. 158, no. 3, 1 January 2011 (2011-01-01), page A291, XP055504460, ISSN: 0013-4651, DOI: 10.1149/1.3533360**
- **G Hernández ET AL: "Electronic Supplementary Information (ESI) Redox-active poly(ionic liquid)s as active materials in energy storage applications", Journal of Materials Chemistry A. This journal is © The Royal Society of Chemistry, 1 January 2017 (2017-01-01), XP055504455, Retrieved from the Internet: URL:http://www.rsc.org/suppdata/c6/ta/c6ta10056b/c6ta10056b1.pdf**
- **Kuang-Yu Hou ET AL: "Study of Ionic Liquid Immobilization on Polyvinyl Ferrocene Substrates for Gas Sensor Arrays", Langmuir, vol. 27, no. 8, 19 April 2011 (2011-04-19) , pages 5136-5146, XP055504453, US ISSN: 0743-7463, DOI: 10.1021/la104191n**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 588 634 B1

## Beschreibung

Die vorliegende Erfindung betrifft ein neuartiges Elektrodenmaterial, welches sich durch eine im Vergleich zu herkömmlichen Elektrodenmaterialien verbesserte Kapazität auszeichnet.

Die vorliegende Erfindung betrifft außerdem ein Verfahren zur Herstellung einer Elektrode und die durch das Verfahren erhaltene Elektrode.

## Hintergrund der Erfindung

Organische Batterien sind elektrochemische Zellen, die ein organisches Ladungsspeichermaterial als aktives Elektrodenmaterial zur Speicherung von elektrischer Ladung verwenden. Diese Batterien weisen vielerlei Vorteile und einen grundsätzlich anderen Wirkmechanismus als metallbasierte Ladungsspeichermaterialien auf.

In der Literatur ist eine Vielzahl organischer Speichermaterialien beschrieben. Einen Überblick darüber gibt der Artikel S. Muench, A. Wild, C. Friebe, B. Häupler, T. Janoschka, U.S. Schubert, Chem. Rev. 2016, 116, 9438 - 9484 (im Folgenden "Muench *et al*.").

Bei der Herstellung von Elektroden aus diesen organischen Speichermaterialien wird üblicherweise das Elektrodenmaterial mit einem Leitfähigkeitsadditiv, zum Beispiel einem Kohlenstoffmaterial, und gegebenenfalls einem Bindeadditiv vermischt und auf ein Substrat aufgetragen.

Die so erhaltenen Elektroden werden im Anschluss daran mit einer Gegenelektrode in eine Batterie eingebaut. Der Aufbau einer solchen Batterie ist dem Fachmann bekannt (Muench *et al*.). In diesen Batterien kann eine Vielzahl von Elektrolyten eingesetzt werden, unter anderem Metallsalze (z.B. Lithiumsalze) oder ionische Flüssigkeiten.

Obwohl die so erhaltenen Elektroden gute Kapazitäten aufweisen, besteht auf diesem technischen Gebiet weiterhin das Bedürfnis, die Kapazitäten von auf organischem Ladungsspeichermaterial basierenden Elektroden zu verbessern.

Die Aufgabe der vorliegenden Erfindung bestand demnach darin, Elektrodenmaterialien aus organischen Speichermaterialien zur Verfügung zu stellen, die eine gegenüber vergleichbaren Elektroden erhöhte Kapazität aufweisen.

Es wurde nun überraschend festgestellt, dass bei Elektroden, die aus bestimmten organischen polymeren Ladungsspeichermaterialien hergestellt wurden, eine deutliche Erhöhung der Kapazität erreicht werden konnte.

Im Einzelnen wurde festgestellt, dass bei in der Hauptkette nichtkonjugierten organischen Redoxpolymeren die Kapazität verbessert werden konnte, wenn bei der Herstellung der Elektrode als weiterer Bestandteil neben dem Leitfähigkeitsadditiv eine ionische Flüssigkeit zugegeben wird.

Die Anmeldung US 2017/0222232 A1 und die Patente US 9,397,341 B2, US 9,520,598 B2 und US 9,276,292 B1 beschreiben Elektroden in Zn / $MnO_2$-Batterien, also metallbasierten und somit nicht organischen Ladungsspeichern, in denen ionische Flüssigkeiten vorliegen.

Diese Beobachtung war insbesondere deshalb völlig überraschend, da eine entsprechende Zugabe von ionischen Flüssigkeiten zu organischem Ladungsspeichermaterial, in dem das entsprechende Polymer in der Hauptkette konjugiert ist, wie zum Beispiel den in Beispiel 1 oder 2 der WO 2017/220965 A1 beschriebenen Polymeren, keinen vergleichbaren Effekt hat.

Die vorliegende Erfindung ist im beigefügten Anspruchssatz beschrieben.

## Detaillierte Beschreibung der Erfindung

### I. Erster Aspekt der Erfindung: Elektrodenmaterial

Die Erfindung betrifft demnach in einem ersten Aspekt ein Elektrodenmaterial umfassend mindestens ein Leitfähigkeitsadditiv, mindestens eine ionische Flüssigkeit und mindestens ein in der Hauptkette nichtkonjugiertes, organisches Redox-Polymer **P**.

Das erfindungsgemäße Elektrodenmaterial ist insbesondere ein Elektrodenslurry oder eine Oberflächenbeschichtung von Elektrodenelementen für elektrische Ladungsspeicher.

### 1.1 Redox-Polymer **P**

Das vom Elektrodenmaterial gemäß dem ersten Aspekt der vorliegenden Erfindung umfasste, in der Hauptkette nichtkonjugierte, organische Redox-Polymer **P** setzt sich im Sinne der Erfindung aus zwei Strukturmerkmalen zusammen:

(1) einem Polymerrückgrat (der "Hauptkette"), in welchem keine Konjugation vorliegt,
(2) redoxaktive organischen Reste, die mit dem Polymerrückgrat regelmäßig oder unregelmäßig verbunden sind, innerhalb welcher eine Konjugation vorliegt oder nicht vorliegt.

I.1.$\alpha$) Im Sinne der Erfindung umfasst das vom Elektrodenmaterial gemäß dem ersten Aspekt der Erfindung umfasste, in der Hauptkette nichtkonjugierte, organische Redox-Polymer **P**

$n^1$ miteinander verknüpfte Wiederholungseinheiten der chemischen Struktur **(I)** und/oder

$n^2$ miteinander verknüpfte Wiederholungseinheiten der chemischen Struktur **(II)** und/oder

$n^3$ miteinander verknüpfte Wiederholungseinheiten der chemischen Struktur **(III)**, in einem Aspekt

$n^1$ miteinander verknüpfte Wiederholungseinheiten der chemischen Struktur **(I)** und/oder

$n^3$ miteinander verknüpfte Wiederholungseinheiten der chemischen Struktur **(III)**, ein einem weiteren Aspekt $n^1$ miteinander verknüpfte Wiederholungseinheiten der chemischen Struktur **(I)** mit

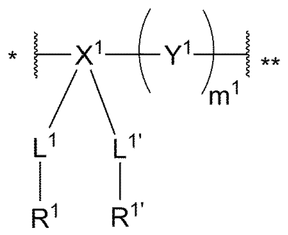 ; 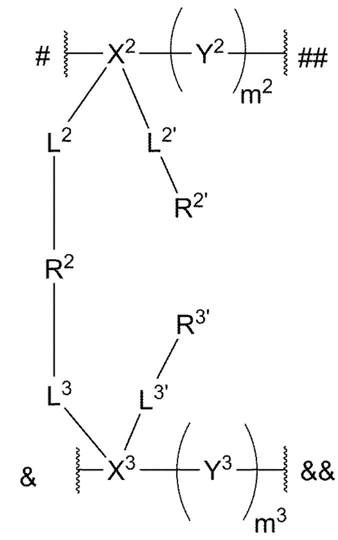 ; 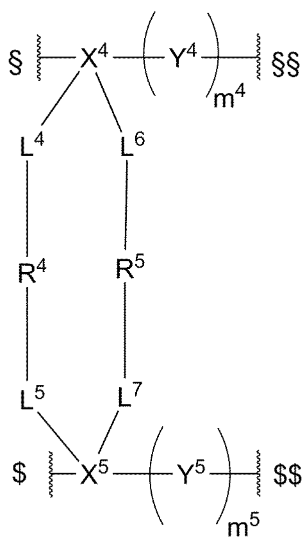 ;

**(I)** **(II)** **(III)** ,

wobei $n^1$, $n^2$ und $n^3$ unabhängig voneinander jeweils eine ganze Zahl $\geq 4$, in einem Aspekt eine ganze Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ sind,

wobei $m^1$, $m^2$, $m^3$, $m^4$ und $m^5$ unabhängig voneinander jeweils eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 sind,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(II)** innerhalb des Polymers **P** gleich oder zumindest teilweise voneinander verschieden sind,

wobei die Wiederholungseinheiten der chemischen Struktur **(III)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei die Wiederholungseinheiten der chemischen Struktur **(II)** innerhalb des Polymers so miteinander verknüpft

sind, dass die durch "##" gekennzeichnete Bindung einer bestimmten Wiederholungseinheit mit der durch "#" gekennzeichneten Bindung der benachbarten Wiederholungseinheit verknüpft ist und die durch "&&" gekennzeichnete Bindung einer bestimmten Wiederholungseinheit mit der durch "&" gekennzeichneten Bindung der benachbarten Wiederholungseinheit verknüpft ist,

wobei die Wiederholungseinheiten der chemischen Struktur **(III)** innerhalb des Polymers so miteinander verknüpft sind, dass die durch "§§" gekennzeichnete Bindung einer bestimmten Wiederholungseinheit mit der durch "§" gekennzeichneten Bindung der benachbarten Wiederholungseinheit verknüpft ist und die durch "$$" gekennzeichnete Bindung einer bestimmten Wiederholungseinheit mit der durch "$" gekennzeichneten Bindung der benachbarten Wiederholungseinheit verknüpft ist,
in einem Aspekt

und wobei $R^1$, $R^2$, $R^4$, $R^5$, $R^{1'}$, $R^{2'}$, $R^{3'}$ in den Strukturen (I), (II) bzw (III) unabhängig voneinander jeweils eine organische redoxaktive Gruppe, die in einem Aspekt aus der Gruppe bestehend aus redoxaktive aromatische Imidfunktion **(A)**, redoxaktive organische Funktion umfassend mindestens ein stabiles Sauerstoffradikal **(B)**, redoxaktive Anthrachinon-/ Carbazolfunktion **(C),** redoxaktive Dialkoxybenzolfunktion **(D),** redoxaktive Benzochinonfunktion **(E)**, redoxaktive Triphenylaminfunktion **(G)**, redoxaktive Viologenfunktion **(H)**, redoxaktive Ferrocenfunktion **(J)** ausgewählt ist, sind, und $R^{1'}$, $R^{2'}$, $R^{3'}$ auch jeweils ein Wasserstoffrest sein können,

und wobei in einem weiteren Aspekt $R^1$, $R^2$, $R^4$, $R^5$ unabhängig voneinander jeweils eine organische redoxaktive Gruppe, die in einem Aspekt aus der Gruppe bestehend aus redoxaktive aromatische Imidfunktion **(A)**, redoxaktive organische Funktion umfassend mindestens ein stabiles Sauerstoffradikal **(B)**, redoxaktive Anthrachinon-/ Carbazolfunktion **(C),** redoxaktive Dialkoxybenzolfunktion **(D),** redoxaktive Benzochinonfunktion **(E)**, redoxaktive Triphenylaminfunktion **(G)**, redoxaktive Viologenfunktion **(H)**, redoxaktive Ferrocenfunktion **(J)** ausgewählt ist, sind, und $R^{1'}$, $R^{2'}$, $R^{3'}$ jeweils ein Wasserstoffrest ist,

und wobei in einem weiteren Aspekt $R^1$, $R^2$, $R^4$, $R^5$ unabhängig voneinander jeweils eine organische redoxaktive Gruppe, die aus der Gruppe bestehend aus redoxaktive organische Funktion umfassend mindestens ein stabiles Sauerstoffradikal **(B)**, redoxaktive Anthrachinon-/ Carbazolfunktion **(C)** ausgewählt ist, sind, und $R^{1'}$, $R^{2'}$, $R^{3'}$ jeweils ein Wasserstoffrest ist.

Die Wiederholungseinheiten der chemischen Struktur **(I)** sind innerhalb des Polymers **P** gemäß Punkt I.1.$\alpha$) gleich oder zumindest teilweise voneinander verschieden. Die Wiederholungseinheiten der chemischen Struktur **(II)** sind innerhalb des Polymers **P** gemäß Punkt I.1.$\alpha$) gleich oder zumindest teilweise voneinander verschieden. Die Wiederholungseinheiten der chemischen Struktur **(III)** sind innerhalb des Polymers **P** gemäß Punkt I.1.$\alpha$) gleich oder zumindest teilweise voneinander verschieden.

"Zumindest teilweise voneinander verschieden" bedeutet, dass sich mindestens zwei Wiederholungseinheiten voneinander unterscheiden.

Das heißt insbesondere im Falle der chemischen Struktur **(I)**, dass sich mindestens zwei der $n^1$ miteinander verknüpften, vom Polymer **P** umfassten Wiederholungseinheiten in mindestens einem der Reste $R^1$, $R^{1'}$, $L^1$, $L^{1'}$, $X^1$, $Y^1$ und/oder in dem Wert von $m^1$ unterscheiden.

Das heißt insbesondere im Falle der chemischen Struktur **(II)**, dass sich mindestens zwei der $n^2$ miteinander verknüpften, vom Polymer **P** umfassten Wiederholungseinheiten in mindestens einem der Reste $R^2$, $R^{2'}$, $R^{3'}$, $L^2$, $L^{2'}$, $L^3$, $L^{3'}$, $X^2$, $X^3$, $Y^2$, $Y^3$ und/oder in dem Wert von $m^2$ oder $m^3$ unterscheiden.

Das heißt insbesondere im Falle der chemischen Struktur **(III)**, dass sich mindestens zwei der $n^3$ miteinander verknüpften, vom Polymer **P** umfassten Wiederholungseinheiten in mindestens einem der Reste $R^4$, $R^5$, $L^4$, $L^5$, $L^6$, $L^7$, $X^4$, $X^5$, $Y^4$, $Y^5$ und/oder in dem Wert von $m^4$ oder $m^5$ unterscheiden.

Die Endgruppe der ersten Wiederholungseinheit des erfindungsgemäßen Redox-Polymers **P**, welche sich für diese in der chemischen Struktur **(I)** an der durch "*" gekennzeichneten Bindung befindet, sowie die Endgruppe der $n^1$-ten Wiederholungseinheit des erfindungsgemäßen Redox-Polymers **P**, welche sich für diese in der chemischen Struktur **(I)** an der durch "**" gekennzeichneten Bindung befindet, ergeben sich aus der bei der Herstellungsmethode des erfindungsgemäßen Redox-Polymers **P** verwendeten Polymerisationsmethode. So kann es sich dabei um Abbruchfragmente eines Initiators oder einer Wiederholungseinheit handeln. In einem Aspekt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher in einem Aspekt Phenylrest, Benzylrest oder $\alpha$-Hydroxybenzyl ist.

Die Endgruppen der ersten Wiederholungseinheit des erfindungsgemäßen Redox-Polymers **P**, welche sich für diese in der chemischen Struktur **(II)** an den durch "#" und "&" gekennzeichneten Bindungen befinden, sowie die End-

gruppen der $n^2$-ten Wiederholungseinheit des erfindungsgemäßen Redox-Polymers **P**, welche sich für diese in der chemischen Struktur **(II)** an den durch "##" und "&&" gekennzeichneten Bindungen befinden, ergeben sich aus der bei der Herstellungsmethode des erfindungsgemäßen Redox-Polymers **P** verwendeten Polymerisationsmethode. So kann es sich dabei um Abbruchfragmente eines Initiators oder einer Wiederholungseinheit handeln. In einem Aspekt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher in einem Aspekt Phenylrest, Benzylrest oder $\alpha$-Hydroxybenzyl ist.

Die Endgruppen der ersten Wiederholungseinheit des erfindungsgemäßen Redox-Polymers **P**, welche sich für diese in der chemischen Struktur **(III)** an den durch "§" und "$" gekennzeichneten Bindungen befinden, sowie die Endgruppen der $n^3$-ten Wiederholungseinheit des erfindungsgemäßen Redox-Polymers **P**, welche sich für diese in der chemischen Struktur **(III)** an den durch "§§" und $$" gekennzeichneten Bindungen befinden, ergeben sich aus der bei der Herstellungsmethode des erfindungsgemäßen Redox-Polymers **P** verwendeten Polymerisationsmethode. So kann es sich dabei um Abbruchfragmente eines Initiators oder einer Wiederholungseinheit handeln. In einem Aspekt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher in einem Aspekt Phenylrest, Benzylrest oder $\alpha$-Hydroxybenzyl ist.

I.1.$\beta$) In einem Aspekt des ersten Aspekts der Erfindung, wie er unter Punkt I.1.$\alpha$) definiert ist, umfasst das vom Elektrodenmaterial gemäß dem ersten Aspekt der Erfindung umfasste, in der Hauptkette nichtkonjugierte, organische Redox-Polymer **P** n' miteinander verknüpfte Wiederholungseinheiten der chemischen Struktur **(I)** mit

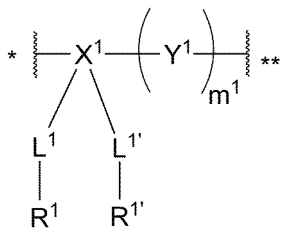 ;

**(I)**

wobei $n^1$ eine ganze Zahl $\geq 4$, in einem Aspekt eine ganze Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei $m^1$ eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, in einem noch weiteren Aspekt jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist, in einem Aspekt

wobei $R^1$, $R^{1'}$ in der Struktur **(I)** unabhängig voneinander jeweils eine organische redoxaktive Gruppe, die aus der Gruppe bestehend aus redoxaktive aromatische Imidfunktion **(A)**, redoxaktive organische Funktion umfassend mindestens ein stabiles Sauerstoffradikal **(B)**, redoxaktive Anthrachinon-/ Carbazolfunktion **(C),** redoxaktive Dialkoxybenzolfunktion **(D),** redoxaktive Benzochinonfunktion **(E))**, redoxaktive Triphenylaminfunktion **(G)**, redoxaktive Viologenfunktion **(H)**, redoxaktive Ferrocenfunktion **(J)** ausgewählt ist, sind, und $R^{1'}$ auch ein Wasserstoffrest sein kann,

und wobei in einem Aspekt $R^1$ eine organische redoxaktive Gruppe, die in einem Aspekt aus der Gruppe bestehend aus redoxaktive aromatische Imidfunktion **(A)**, redoxaktive organische Funktion umfassend mindestens ein stabiles Sauerstoffradikal **(B)**, redoxaktive Anthrachinon-/ Carbazolfunktion **(C),** redoxaktive Dialkoxybenzolfunktion **(D),** redoxaktive Benzochinonfunktion **(E)**, redoxaktive Triphenylaminfunktion **(G)**, redoxaktive Viologenfunktion **(H)**, redoxaktive Ferrocenfunktion **(J)** ausgewählt ist, ist und $R^{1'}$ ein Wasserstoffrest ist,

und wobei in einem weiteren Aspekt $R^1$ eine organische redoxaktive Gruppe, die aus der Gruppe bestehend aus redoxaktive organische Funktion umfassend mindestens ein stabiles Sauerstoffradikal **(B)**, redoxaktive Anthrachinon-/ Carbazolfunktion **(C),** ausgewählt ist, ist, und $R^{1'}$ ein Wasserstoffrest ist.

Die Wiederholungseinheiten der chemischen Struktur **(I)** sind innerhalb des Polymers **P** gemäß Punkt I.1.β) gleich oder zumindest teilweise voneinander verschieden.

"Zumindest teilweise voneinander verschieden" bedeutet, dass sich mindestens zwei Wiederholungseinheiten voneinander unterscheiden.

Das heißt insbesondere im Falle der chemischen Struktur **(I)**, dass sich mindestens zwei der $n^1$ miteinander verknüpften, vom Polymer **P** umfassten Wiederholungseinheiten in mindestens einem der Reste $R^1$, $R^{1'}$, $L^1$, $L^{1'}$, $X^1$, $Y^1$ und/oder in dem Wert von $m^1$ unterscheiden.

Die Endgruppe der ersten Wiederholungseinheit des erfindungsgemäßen Redox-Polymers **P**, welche sich für diese in der chemischen Struktur **(I)** an der durch "*" gekennzeichneten Bindung befindet, sowie die Endgruppe der $n^1$-ten Wiederholungseinheit des erfindungsgemäßen Redox-Polymers **P**, welche sich für diese in der chemischen Struktur **(I)** an der durch "**" gekennzeichneten Bindung befindet, ergeben sich aus der bei der Herstellungsmethode des erfindungsgemäßen Redox-Polymers **P** verwendeten Polymerisationsmethode. So kann es sich dabei um Abbruchfragmente eines Initiators oder einer Wiederholungseinheit handeln. In einem Aspekt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher in einem Aspekt Phenylrest, Benzylrest oder α-Hydroxybenzyl ist.

1.1.1 Redoxaktive Gruppen

Die für $R^1$, $R^2$, $R^4$, $R^5$, $R^{1'}$, $R^{2'}$, $R^{3'}$ in den Strukturen **(I)**, **(II)** bzw. **(III)** gemäß dem ersten Aspekt der Erfindung, wie er erfindungsgemäß unter Punkt I.1.α) und in einem weiteren Aspekt unter Punkt I.1.β) definiert ist, auswählbaren organischen redoxaktiven Gruppen sind weiter beschränkt. Organische redoxaktive Gruppen, die in organischen Batterien eingesetzt werden können, bekannt, sind beispielsweise in Muench *et al.* zusammen mit der Synthese der jeweiligen Polymere beschrieben. Wie unter Punkt I.1.α) und Punkt I.1.β) beschrieben, sind die organischen redoxaktiven Gruppen in einem Aspekt aus der Gruppe bestehend aus redoxaktive aromatische Imidfunktion **(A)**, redoxaktive organische Funktion umfassend mindestens ein stabiles Sauerstoffradikal **(B)**, redoxaktive Anthrachinon-/ Carbazolfunktion **(C)**, redoxaktive Dialkoxybenzolfunktion **(D)**, redoxaktive Benzochinonfunktion **(E)**, redoxaktive Triphenylaminfunktion **(G)**, redoxaktive Viologenfunktion **(H)**, redoxaktive Ferrocenfunktion **(J)** ausgewählt, in einem weiteren Aspekt aus der Gruppe bestehend aus redoxaktive aromatische Imidfunktion **(A)**, redoxaktive organische Funktion umfassend mindestens ein stabiles Sauerstoffradikal **(B)**, redoxaktive Anthrachinon-/ Carbazolfunktion **(C)** ausgewählt, und in einem weiteren Aspekt aus der Gruppe bestehend aus redoxaktive organische Funktion umfassend mindestens ein stabiles Sauerstoffradikal **(B)**, redoxaktive Anthrachinon-/ Carbazolfunktion **(C)** ausgewählt, und am bevorzugtesten handelt es sich bei der organischen redoxaktiven Gruppe um eine redoxaktive organische Funktion umfassend mindestens ein stabiles Sauerstoffradikal **(B)**.

I.1.1.1 Redoxaktive aromatische Imidfunktion **(A)**

Im Sinne der Erfindung bedeutet "redoxaktive aromatische Imidfunktion", ein redoxaktiver organischer Rest, in dem eine Imidfunktion mit den Kohlenstoffatomen eines oder zweier aromatischer Ringe einen Ring bildet.

A.1 im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.α) und Punkt I.1.β) definiert ist, jeweils eine redoxaktive aromatische Imidfunktion **(A)** sind, bedeutet dies erfindungsgemäß, dass die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ unabhängig voneinander jeweils die folgende Struktur **(A1)** aufweisen und die Reste $R^2$, $R^4$, $R^5$ auch unabhängig voneinander jeweils die folgende Struktur **(A2)** mit

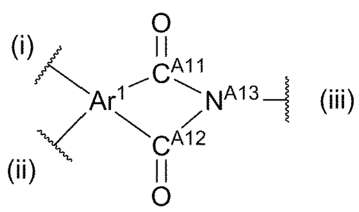 ; 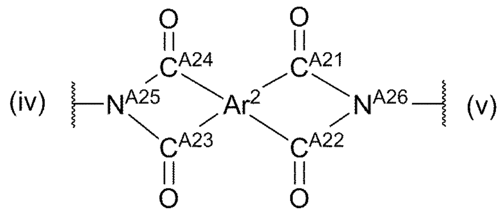 ;

**(A1)** **(A2)**

aufweisen können,

wobei der Rest $Ar^1$ in **(A1)** bzw. der Rest $Ar^2$ in **(A2)** unabhängig voneinander jeweils ein (hetero)aromatischer Rest umfassend einen oder mehrere, in einem Aspekt 1 bis 6, (hetero)aromatische Ringe sind,

wobei die (hetero)aromatischen Ringe von $Ar^1$ in **(A1)** bzw. die (hetero)aromatischen Ringe von $Ar^2$ in **(A2)** unabhängig voneinander jeweils mit mindestens einem Rest, der aus der Gruppe bestehend aus (Halo)Alkylgruppe, Alkenylgruppe, Alkinylgruppe, (Halo)Alkoxygruppe, Cycloalkylgruppe, Carbonylalkylgruppe, -C(=O)-H, Carbonsäurerest, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, in einem Aspekt aus der Gruppe bestehend aus Halogen, (Halo)Alkylgruppe, (Halo)Alkoxygruppe, Carbonsäurerest, Carbonsäureester ausgewählt ist, substituiert sein können,

wobei in **(A1)** zwei der Ringatome von $Ar^1$ jeweils mit den beiden Kohlenstoffatomen $C^{A11}$ und $C^{A12}$ sowie dem Stickstoffatom $N^{A13}$ einen Fünfring, Sechsring oder Siebenring, in einem Aspekt einen Fünfring oder Sechsring, bilden,

wobei in **(A2)** zwei der Ringatome von $Ar^2$ jeweils mit den beiden Kohlenstoffatomen $C^{A21}$ und $C^{A22}$ sowie dem Stickstoffatom $N^{A26}$ einen Fünfring, Sechsring oder Siebenring, in einem Aspekt einen Fünfring oder Sechsring, bilden, und zwei davon verschiedene Ringatome von $Ar^2$ jeweils mit den beiden Kohlenstoffatomen $C^{A23}$ und $C^{A24}$ sowie dem Stickstoffatom $N^{A25}$ einen Fünfring, Sechsring oder Siebenring, in einem Aspekt einen Fünfring oder Sechsring, bilden,

und wobei zwei aromatische Kohlenstoffatome desselben (hetero)aromatischen Ringes in $Ar^1$ bzw. zwei aromatische Kohlenstoffatome desselben (hetero)aromatischen Ringes in $Ar^2$ auch über einen zweiwertigen aliphatischen Rest, bei dem es sich in einem Aspekt um Alkylen, (Thio)ether oder einen zweiwertigen Rest der Formel $\sim(CH_2)_{pA11}-C(=O)-(NR^{AP1})-C(=O)-(CH_2)_{pA12}\sim$ handelt,

wobei $R^{AP1}$ = Wasserstoffrest, Halogenrest, (Halo)Alkylgruppe oder (Halo)Alkoxygruppe und $p^{A11}$ = 0 oder 1 und $p^{A12}$ = 0 oder 1, verbrückt sein können,

und wobei im Falle, dass der Rest $Ar^1$ mehrere (hetero)aromatische Ringe umfasst, diese in $Ar^1$ mindestens teilweise miteinander kondensiert sein können,

und wobei im Falle, dass der Rest $Ar^2$ mehrere (hetero)aromatische Ringe umfasst, diese in $Ar^2$ mindestens teilweise miteinander kondensiert sein können,

und wobei im Falle, dass der Rest $Ar^1$ mehrere (hetero)aromatische Ringe umfasst, zwei aromatische Kohlenstoffatome verschiedener (hetero)aromatischer Ringe in $Ar^1$ auch über eine direkte Bindung, oder einen Rest, der aus der Gruppe bestehend aus

Heteroatom, bei dem es sich in einem Aspekt um -O- oder -S- und in einem weiteren Aspekt um -O- handelt,

zweiwertiger aliphatischer Rest, bei dem es sich in einem Aspekt um Alkylen, (Thio)ether oder einen zweiwertigen Rest der Formel $\sim(CH_2)_{pA13}-C(=O)-(NR^{AP2})-C(=O)-(CH_2)_{pA14}\sim$,

wobei $R^{AP2}$ = Wasserstoffrest, Halogenrest, (Halo)Alkylgruppe oder (Halo)Alkoxygruppe, in einem Aspekt $R^{AP2}$ = Wasserstoffrest, Alkylgruppe, und $p^{A13}$ = 0 oder 1 und $p^{A14}$ = 0 oder 1, ausgewählt ist, verbrückt sein können,

und wobei im Falle dass der Rest $Ar^2$ mehrere (hetero)aromatische Ringe umfasst, zwei aromatische Kohlenstoffatome verschiedener (hetero)aromatischer Ringe in $Ar^2$ auch über eine direkte Bindung, oder einen Rest, der aus der Gruppe bestehend aus

Heteroatom, bei dem es sich in einem Aspekt um -O- oder -S- und in einem weiteren Aspekt um -O- handelt,

zweiwertiger aliphatischer Rest, bei dem es sich in einem Aspekt um Alkylen, (Thio)ether oder einen zweiwertigen Rest der Formel $\sim(CH_2)_{pA23}$-C(=O)-($NR^{AP4}$)-C(=O)-$(CH_2)_{pA24}\sim$, wobei $R^{AP4}$ = Wasserstoffrest, Halogenrest, (Halo)Alkylgruppe oder (Halo)Alkoxygruppe, in einem Aspekt $R^{AP4}$ = Wasserstoffrest, Alkylgruppe und $p^{A23}$ = 0 oder 1 und $p^{A24}$ = 0 oder 1, handelt, ausgewählt ist, verbrückt sein können,

wobei die durch (i) und (ii) gekennzeichneten Bindungen von aromatischen Kohlenstoffatomen von $Ar^1$ ausgehen,

und wobei im Falle dass $R^1$ = **(A1)**, eine der durch (i), (ii), (iii) gekennzeichneten Bindungen die Bindung zu $L^1$ darstellt,

im Falle dass $R^{1'}$ = **(A1)**, eine der durch (i), (ii), (iii) gekennzeichneten Bindungen die Bindung zu $L^{1'}$ darstellt,

im Falle dass $R^{2'}$ = **(A1)**, eine der durch (i), (ii), (iii) gekennzeichneten Bindungen die Bindung zu $L^{2'}$ darstellt,

im Falle dass $R^{3'}$ = **(A1)**, eine der durch (i), (ii), (iii) gekennzeichneten Bindungen die Bindung zu $L^{3'}$ darstellt,

im Falle dass $R^2$ = **(A1)**, eine der durch (i), (ii), (iii) gekennzeichneten Bindungen die Bindung zu $L^2$ darstellt und eine andere der durch (i), (ii), (iii) gekennzeichneten Bindungen die Bindung zu $L^3$ darstellt,

im Falle dass $R^4$ = **(A1)**, eine der durch (i), (ii), (iii) gekennzeichneten Bindungen die Bindung zu $L^4$ darstellt und eine andere der durch (i), (ii), (iii) gekennzeichneten Bindungen die Bindung zu $L^5$ darstellt,

im Falle dass $R^5$ = **(A1)**, eine der durch (i), (ii), (iii) gekennzeichneten Bindungen die Bindung zu $L^6$ darstellt und eine andere der durch (i), (ii), (iii) gekennzeichneten Bindungen die Bindung zu $L^7$ darstellt,

im Falle dass $R^2$ = **(A2)**, die durch (iv) gekennzeichnete Bindung die Bindung zu $L^2$ darstellt und die durch (v) gekennzeichnete Bindung die Bindung zu $L^3$ darstellt,

im Falle dass $R^4$ = **(A2)**, die durch (iv) gekennzeichnete Bindung die Bindung zu $L^4$ darstellt und die durch (v) gekennzeichnete Bindung die Bindung zu $L^5$ darstellt,

im Falle dass $R^5$ = **(A2)**, die durch (iv) gekennzeichnete Bindung die Bindung zu $L^6$ darstellt und die durch (v) gekennzeichnete Bindung die Bindung zu $L^7$ darstellt

und dann jeweils diejenigen der durch (i) und (ii) gekennzeichneten Bindungen, die keine Bindung zu $L^1$, $L^2$, $L^3$, $L^4$, $L^5$, $L^6$, $L^7$, $L^{1'}$, $L^{2'}$ oder $L^{3'}$ darstellen, unabhängig voneinander jeweils mit einem Rest, der aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, in einem Aspekt aus der Gruppe bestehend aus Wasserstoff, Halogen, (Halo)Alkylgruppe, (Halo)Alkoxygruppe, Carbonsäurerest, Carbonsäureester ausgewählt ist, verbunden sind,

und die durch (iii) gekennzeichnete Bindung, falls sie keine Bindung zu $L^1$, $L^2$, $L^3$, $L^4$, $L^5$, $L^6$, $L^7$, $L^{1'}$, $L^{2'}$ oder $L^{3'}$ darstellt, mit einem Rest, der aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen ausgewählt ist, in einem Aspekt aus der Gruppe bestehend aus Wasserstoff, Halogen, (Halo)Alkylgruppe, (Halo)Alkoxygruppe, Carbonsäurerest, Carbonsäureester ausgewählt ist, verbunden ist.

A.2 in einem weiteren Aspekt des vorgenannten Punktes A.1 weist $Ar^1$ eine Struktur, die aus der Gruppe bestehend aus **(A11)**, **(A12)**, **(A13)**, **(A14)**, **(A15)**, **(A16)**, **(A17)**, **(A18)**, **(A19)**, **(A20)**, **(A21)** mit

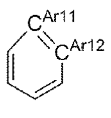 ; 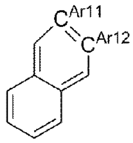 ; 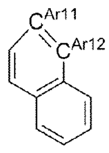 ; 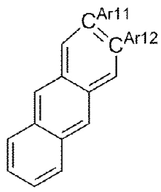 ; 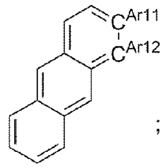 ; 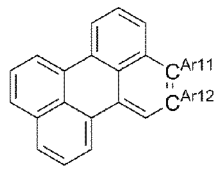 ;

(A11) (A12) (A13) (A14) (A15) (A16)

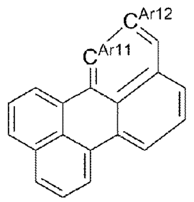 ; 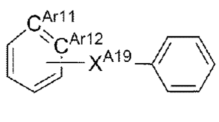 ; 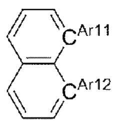 ; 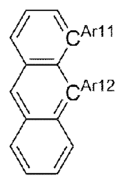 ; 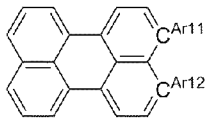 ;

(A17) (A18) (A19) (A20) (A21)

ausgewählt ist, auf,

wobei das in den Strukturen **(A11), (A12), (A13), (A14), (A15), (A16), (A17), (A18), (A19), (A20), (A21)** mit $C^{Ar11}$ bezeichnete aromatische Kohlenstoffatom eine direkte Bindung zu dem in der Struktur **(A1)** mit $C^{A11}$ bezeichneten Kohlenstoffatom aufweist, wobei das in den Strukturen **(A11)**, **(A12)**, **(A13)**, **(A14)**, **(A15)**, **(A16)**, **(A17)**, **(A18)**, **(A19)**, **(A20)**, **(A21)** mit $C^{Ar12}$ bezeichnete aromatische Kohlenstoffatom eine direkte Bindung zu dem in der Struktur **(A1)** mit $C^{A12}$ bezeichneten Kohlenstoffatom aufweist,

wobei $X^{A19}$ in **(A18)** ein Rest, der aus der Gruppe bestehend aus direkte Bindung, Heteroatom, bei dem es sich in einem Aspekt um -O- oder -S- und in einem weiteren Aspekt um -O- handelt,

zweiwertiger aliphatischer Rest, bei dem es sich in einem Aspekt um Alkylen, (Thio)ether oder einen zweiwertigen Rest der Formel $\sim(CH_2)_{pA13}-C(=O)-(NR^{AP2})-C(=O)-(CH_2)p_{A14}\sim$,

wobei $R^{AP2}$ = Wasserstoffrest, Halogenrest, (Halo)Alkylgruppe oder (Halo)Alkoxygruppe, in einem Aspekt $R^{AP2}$ = Wasserstoffrest, Alkylgruppe und $p^{A13}$ = 0 oder 1 und $p^{A14}$ = 0 oder 1, handelt, ausgewählt ist,

und $X^{A19}$ in einem weiteren Aspekt aus der Gruppe bestehend aus -O-, Alkylen, direkte Bindung ausgewählt ist und $X^{A19}$ am bevorzugtesten -O- ist,

wobei die in der Struktur **(A1)** durch (i) und (ii) gekennzeichneten Bindungen im Falle der Strukturen **(A11)**, **(A12)**, **(A13)**, **(A14)**, **(A15)**, **(A16)**, **(A17)**, **(A19)**, **(A20)** bzw. **(A21)** von zwei aromatischen Kohlenstoffatomen der Strukturen **(A11)**, **(A12)**, **(A13)**, **(A14)**, **(A15)**, **(A16)**, **(A17)**, **(A19), (A20)** bzw. **(A21)**, die von den Kohlenstoffatomen, die mit $C^{A11}$ und $C^{A12}$ bezeichnet sind, verschieden sind, ausgehen,

bzw. im Falle der Struktur **(A18)** jeweils von zwei aromatischen Kohlenstoffatomen der Struktur **(A18),** die sowohl von den Kohlenstoffatomen, die mit von $C^{A11}$ und $C^{A12}$ bezeichnet sind, als auch von den aromatischen Kohlenstoffatomen, die mit $X^{A19}$ verbunden sind, verschieden sind, ausgehen,

und die aromatischen Kohlenstoffatome in den Strukturen **(A11)**, **(A12)**, **(A13)**, **(A14)**, **(A15)**, **(A16)**, **(A17), (A18), (A19), (A20), (A21),** die keine Bindung zu $C^{A11}$, $C^{A12}$, $X^{A19}$, $L^1$, $L^{1'}$, $L^{2'}$, $L^{3'}$, $L^2$, $L^3$, $L^4$, $L^5$, $L^6$ oder $L^7$ aufweisen, mit einem Rest, der aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, in einem Aspekt mit einem Rest, der aus der Gruppe bestehend aus Wasserstoff, Halogen, (Halo)Alkylgruppe, (Halo)Alkoxygruppe, Carbonsäurerest, Carbonsäureester ausgewählt ist, verbunden sind,

und wobei zwei aromatische Kohlenstoffatome desselben oder verschiedener aromatischer Ringe innerhalb der Strukturen **(A11)**, **(A12)**, **(A13)**, **(A14)**, **(A15)**, **(A16)**, **(A17)**, **(A18)**, **(A19)**, **(A20)**, **(A21)** auch über einen zweiwertigen

Rest der Formel ~$(CH_2)_{pA15}$-C(=O)-$(NR^{AP3})$-C(=O)-$(CH_2)_{pA16}$~, wobei $R^{AP3}$ = Wasserstoffrest, Halogenrest, (Halo)Alkylgruppe oder (Halo)Alkoxygruppe, in einem Aspekt $R^{AP3}$ = Wasserstoffrest, Alkylgruppe, und $p^{A15}$ = 0 oder 1 und $p^{A16}$ = 0 oder 1, verbrückt sein können,

und $Ar^2$ weist eine Struktur, die aus der Gruppe bestehend aus **(A22)**, **(A23)**, **(A24)**, **(A25)**, **(A26)**, **(A27)**, **(A28)**, **(A29)**, **(A30)**, **(A31)**, **(A32)** mit

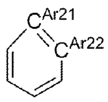 ; 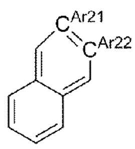 ; 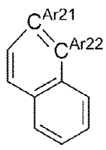 ; 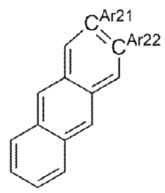 ; 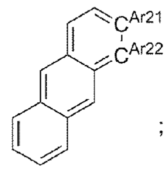 ; 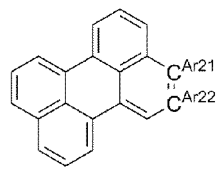 ;

**(A22)** **(A23)** **(A24)** **(A25)** **(A26)** **(A27)**

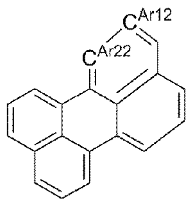 ; 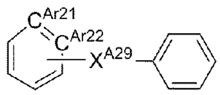 ; 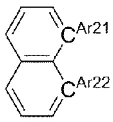 ; 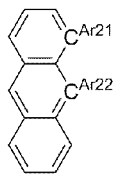 ; 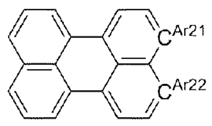 ;

**(A28)** **(A29)** **(A30)** **(A31)** **(A32)**

ausgewählt ist, auf,

wobei das in den Strukturen **(A22)**, **(A23)**, **(A24)**, **(A25)**, **(A26)**, **(A27)**, **(A28)**, **(A29)**, **(A30)**, **(A31)** bzw. **(A32)** mit $C^{Ar21}$ bezeichnete aromatische Kohlenstoffatom eine direkte Bindung zu dem in der Struktur **(A2)** mit $C^{A21}$ bezeichneten Kohlenstoffatom aufweist,

wobei das in den Strukturen **(A22)**, **(A23)**, **(A24)**, **(A25)**, **(A26)**, **(A27)**, **(A28)**, **(A29)**, **(A30)**, **(A31)** bzw. **(A32)** mit $C^{Ar22}$ bezeichnete aromatische Kohlenstoffatom eine direkte Bindung zu dem in der Struktur **(A2)** mit $C^{A22}$ bezeichneten Kohlenstoffatom aufweist,

und dann zwei weitere von $C^{Ar21}$ und $C^{Ar22}$ verschiedene aromatische Kohlenstoffatome in den Strukturen **(A22)**, **(A23)**, **(A24)**, **(A25)**, **(A26)**, **(A27)**, **(A28)**, **(A29)**, **(A30)**, **(A31)**, **(A32)**, die *ortho-* oder *meta-* zueinander stehen und die im Falle der Struktur **(A29)** auch von den aromatischen Kohlenstoffatomen, die mit $X^{A29}$ verbunden sind, verschieden sind, jeweils mit den in der Struktur (A2) mit $C^{A23}$ bzw. $C^{A24}$ bezeichneten Kohlenstoffatomen direkt verbunden sind,

wobei $X^{A29}$ in **(A29)** aus der Gruppe bestehend aus direkte Bindung, Heteroatom, bei dem es sich in einem Aspekt um -O- oder -S- und in einem weiteren Aspekt um -O- handelt,

zweiwertiger aliphatischer Rest, bei dem es sich in einem Aspekt um Alkylen, (Thio)ether oder einen zweiwertigen Rest der Formel ~$(CH_2)_{pA17}$-C(=O)-$(NR^{AP4})$-C(=O)-$(CH_2)_{pA18}$~,

wobei $R^{AP4}$ = Wasserstoffrest, Halogenrest, (Halo)Alkylgruppe, (Halo)Alkoxygruppe, in einem Aspekt $R^{AP4}$ = Wasserstoffrest, Alkylgruppe, und $p^{A17}$ = 0 oder 1 und $p^{A18}$ = 0 oder 1, handelt, ausgewählt ist,

und $X^{A29}$ in einem weiteren Aspekt aus der Gruppe bestehend aus -O-, Alkylen, direkte Bindung ausgewählt ist und $X^{A29}$ am bevorzugtesten -O- ist,

und die aromatischen Kohlenstoffatome in den Strukturen **(A22)**, **(A23)**, **(A24)**, **(A25)**, **(A26)**, **(A27)**, **(A28)**, **(A29)**, **(A30)**, **(A31)**, **(A32)**, die keine Bindung zu $C^{A21}$, $C^{A22}$, $C^{A23}$, $C^{A24}$, $X^{A29}$ aufweisen, mit einem Rest, der aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Sulfonsäureester,

Phosphorsäureester, Amin, Mono(halo)alkylamino, Di(halo)alkylamino, Cyano, Hydroxyl, Halogen ausgewählt ist, in einem Aspekt mit einem Rest, der aus der Gruppe bestehend aus Wasserstoff, Halogen, (Halo)Alkylgruppe, (Halo)Alkoxygruppe, Carbonsäurerest, Carbonsäureester ausgewählt ist, verbunden sind.

A.3 In einem weiteren Aspekt des vorgenannten Punktes A.1 oder A.2 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.α) und Punkt I.1.β) definiert ist, jeweils eine redoxaktive aromatische Imidfunktion **(A)** ist, dass $R^1$, $R^{1'}$, $R^{2'}$, $R^{3'}$ dann unabhängig voneinander jeweils aus der Gruppe bestehend aus den folgenden Strukturen **(A101)**, **(A102)**, **(A103)**, **(A104)** mit

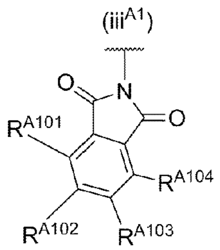 ; 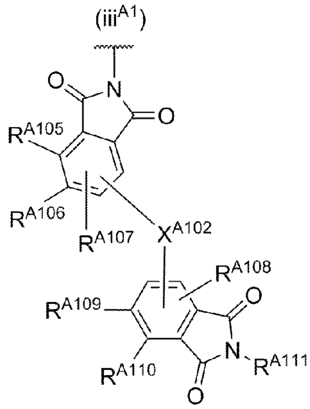 ; 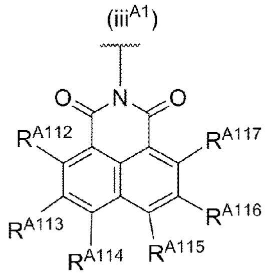 ; 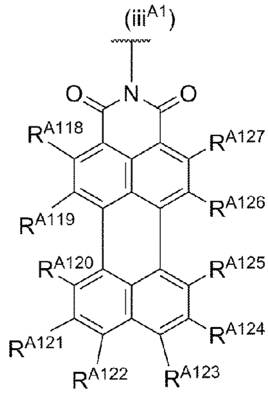

**(A101)** **(A102)** **(A103)** **(A104)**

ausgewählt sind,

wobei die durch ($iii^{A1}$) gekennzeichnete Bindung für $R^1$ die Bindung zu $L^1$, für $R^{1'}$ die Bindung zu $L^{1'}$, für $R^{2'}$ die Bindung zu $L^{2'}$, für $R^{3'}$ die Bindung zu $L^{3'}$ darstellt,

wobei $X^{A102}$ aus der Gruppe bestehend aus direkte Bindung, Heteroatom, bei dem es sich in einem Aspekt um -O- oder -S-, in einem weiteren Aspekt um -O- handelt,

zweiwertiger aliphatischer Rest, bei dem es sich in einem Aspekt um Alkylen, (Thio)ether oder einem zweiwertigen Rest der Formel $\sim(CH_2)_{pA11}$-C(=O)-($NR^{AP1}$)-C(=O)-$(CH_2)_{pA12}\sim$, wobei $R^{AP1}$ = Wasserstoffrest, Halogenrest, (Halo)Alkylgruppe oder (Halo)Alkoxygruppe, in einem Aspekt $R^{AP1}$ = Wasserstoffrest, Alkylgruppe und $p^{A11}$ = 0 oder 1 und $p^{A12}$ = 0 oder 1, handelt, ausgewählt ist,

und $X^{A102}$ in einem weiteren Aspekt aus der Gruppe bestehend aus -O-, Alkylen, direkte Bindung ausgewählt ist und $X^{A102}$ am bevorzugtesten -O- ist,

und wobei $R^{A101}$, $R^{A102}$, $R^{A103}$, $R^{A104}$, $R^{A105}$, $R^{A106}$, $R^{A107}$, $R^{A108}$, $R^{A109}$, $R^{A110}$, $R^{A112}$, $R^{A113}$, $R^{A114}$, $R^{A115}$, $R^{A116}$, $R^{A117}$, $R^{A118}$, $R^{A119}$, $R^{A120}$, $R^{A121}$, $R^{A122}$, $R^{A123}$, $R^{A124}$, $R^{A125}$, $R^{A126}$, $R^{A127}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen, in einem Aspekt aus der Gruppe bestehend aus Wasserstoff, Halogen, (Halo)Alkylgruppe, (Halo)Alkoxygruppe, Carbonsäurerest, Carbonsäureester, bevorzugter aus der Gruppe bestehend aus Wasserstoff, Halogen, (Halo)Alkylgruppe, (Halo)Alkoxygruppe, Carbonsäureester ausgewählt ist, in einem weiteren Aspekt aus der Gruppe bestehend aus Wasserstoff, Halogen, (Halo)Alkylgruppe, (Halo)Alkoxygruppe, in einem weiteren Aspekt aus der Gruppe bestehend aus Wasserstoff, Alkylgruppe ausgewählt sind, am bevorzugtesten alle jeweils Wasserstoff sind,

und wobei $R^{A111}$ aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen ausgewählt ist, in einem Aspekt aus der Gruppe ausgewählt aus Wasserstoff, Halogen, (Halo)Alkylgruppe, (Halo)Alkoxygruppe, Carbonsäurerest, Carbonsäureester, in einem Aspekt aus der Gruppe bestehend aus Wasserstoff, Halogen, (Halo)Alkylgruppe, (Halo)Alkoxygruppe, Carbonsäurerest, Carbonsäureester, bevorzugter aus der Gruppe bestehend aus Wasserstoff, Halogen, (Halo)Alkylgruppe, (Halo)Alkoxygruppe, Carbonsäureester ausgewählt ist, in einem weiteren Aspekt aus der Gruppe bestehend aus Wasserstoff, Halogen, (Halo)Alkylgruppe, (Halo)Alkoxygruppe, in einem weiteren Aspekt aus der Gruppe bestehend aus Wasserstoff, Alkylgruppe ausgewählt ist, am bevorzugtesten Wasserstoff ist,

und $R^2$, $R^4$, $R^5$ dann jeweils unabhängig voneinander jeweils aus der Gruppe bestehend aus den folgenden Strukturen **(A201)**, **(A202)**, **(A203)**, **(A204)** mit

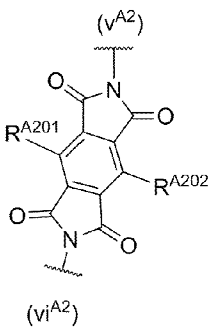
;
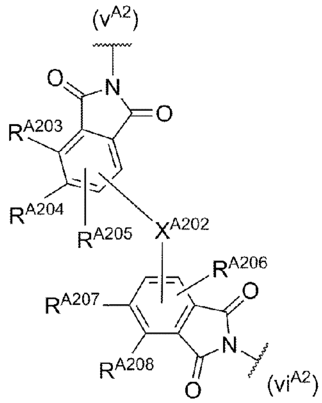
;
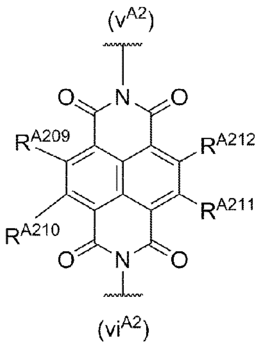
;
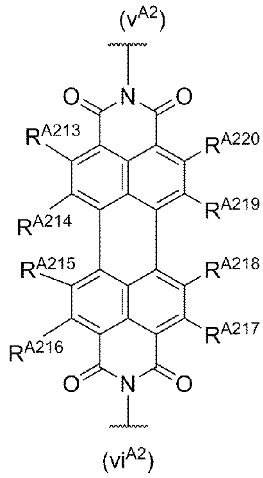
;

**(A201)** **(A202)** **(A203)** **(A204)**

ausgewählt sind,

wobei die durch ($v^{A2}$) gekennzeichnete Bindung für $R^2$ die Bindung zu $L^2$, für $R^4$ die Bindung zu $L^4$, für $R^5$ die Bindung zu $L^6$ bezeichnet,

wobei die durch ($vi^{A2}$) gekennzeichnete Bindung für $R^2$ die Bindung zu $L^3$, für $R^4$ die Bindung zu $L^5$, für $R^5$ die Bindung zu $L^7$ bezeichnet,

wobei $X^{A202}$ in **(A202)** ein Rest, der aus der Gruppe bestehend aus direkte Bindung, Heteroatom, bei dem es sich in einem Aspekt um -O- oder -S- und in einem weiteren Aspekt um -O- handelt, zweiwertiger aliphatischer Rest, bei dem es sich in einem Aspekt um Alkylen, (Thio)ether oder einen zweiwertigen Rest der Formel $\sim(CH_2)_{pA17}-C(=O)-(NR^{AP4})-C(=O)-(CH_2)_{pA18}\sim$ handelt,

wobei $R^{AP4}$ = Wasserstoffrest, Halogenrest, (Halo)Alkylgruppe oder (Halo)Alkoxygruppe, in einem Aspekt $R^{AP4}$ = Wasserstoffrest, Alkylgruppe und $p^{A17}$ = 0 oder 1 und $p^{A18}$ = 0 oder 1,

ausgewählt ist,

und $X^{A2112}$ in einem weiteren Aspekt aus der Gruppe bestehend aus -O-, Alkylen, direkte Bindung ausgewählt ist und $X^{A2112}$ am bevorzugtesten -O- ist,

und wobei $R^{A201}$, $R^{A202}$, $R^{A203}$, $R^{A204}$, $R^{A205}$, $R^{A206}$, $R^{A207}$, $R^{A208}$, $R^{A209}$, $R^{A210}$, $R^{A211}$, $R^{A212}$, $R^{A213}$, $R^{A214}$, $R^{A215}$, $R^{A216}$, $R^{A217}$, $R^{A218}$, $R^{A219}$, $R^{A220}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen, in einem Aspekt aus der Gruppe bestehend aus Wasserstoff, Halogen, (Halo)Alkylgruppe, (Halo)Alkoxygruppe, Carbonsäurerest, Carbonsäureester, in einem weiteren Aspekt aus der Gruppe bestehend aus Wasserstoff, Halogen, Alkylgruppe, in einem weiteren Aspekt aus der Gruppe bestehend aus Wasserstoff, Alkylgruppe ausgewählt sind, in einem weiteren Aspekt alle jeweils Wasserstoff sind.

A.4 in einem weiteren Aspekt des vorgenannten Punktes A.3 bedeutet in den Fällen, in denen die Reste $R^1$,

$R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.$\alpha$) und Punkt I.1.$\beta$) definiert ist, jeweils eine redoxaktive aromatische Imidfunktion (A) ist, dass die Reste $R^1$, $R^{1'}$, $R^{2'}$, $R^{3'}$ bzw. die Reste $R^1$, $R^{1'}$ bzw. der Rest $R^1$ dann unabhängig voneinander jeweils aus der Gruppe bestehend aus den unter A.3 definierten Strukturen **(A101)**, **(A103)** ausgewählt sind, und in einem Aspekt jeweils eine Struktur **(A101)** aufweisen, wobei die Bedeutungen von ($iii^{A1}$), $R^{A101}$, $R^{A102}$, $R^{A103}$, $R^{A104}$, $R^{A112}$, $R^{A113}$, $R^{A114}$, $R^{A115}$, $R^{A116}$, $R^{A117}$ wie unter Punkt A.3 definiert sind,
und die Reste $R^2$, $R^4$, $R^5$ dann unabhängig voneinander jeweils aus der Gruppe bestehend aus den unter A.3 definierten Strukturen **(A201)**, **(A202)** ausgewählt sind, und in einem Aspekt jeweils eine Struktur **(201)** aufweisen, wobei die Bedeutungen von ($v^{A2}$), ($vi^{A2}$), $X^{A202}$, $R^{A201}$, $R^{A202}$, $R^{A203}$, $R^{A204}$, $R^{A205}$, $R^{A206}$, $R^{A207}$, $R^{A208}$ wie unter Punkt A.3 definiert sind.

A.5 In einem weiteren Aspekt des ersten Aspekts der Erfindung, wie er unter I.1.$\beta$) oder dem Punkt A.4 definiert ist, umfasst das vom Elektrodenmaterial gemäß dem ersten Aspekt der Erfindung umfasste, in der Hauptkette nichtkonjugierte, organisches Redox-Polymer **P** insbesondere $n^1$ miteinander verknüpfte Wiederholungseinheiten der chemischen Struktur **(I)** mit

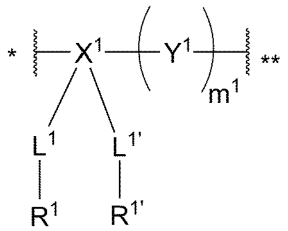

;

**(I)**

wobei $n^1$ eine ganze Zahl $\geq 4$, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei $m^1$ eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, in einem weiteren Aspekt jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $R^1$, $R^{1'}$ unabhängig voneinander jeweils eine redoxaktive aromatische Imidfunktion **(A)**, sind, sind und $R^{1'}$ auch ein Wasserstoffrest sein kann, und in einem Aspekt $R^1$ eine redoxaktive aromatische Imidfunktion **(A)** und $R^{1'}$ ein Wasserstoffrest ist,

wobei die redoxaktive aromatische Imidfunktion **(A)** in einem Aspekt die Struktur **(A101)** mit

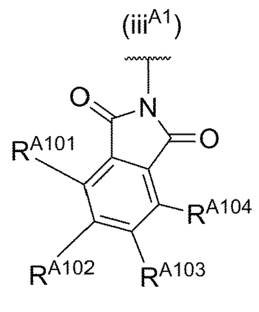

;

**(A101)**

aufweist,

wobei die durch ($iii^{A1}$) gekennzeichnete Bindung für $R^1$ die Bindung zu $L^1$ darstellt und für $R^{1'}$ die Bindung zu $L^{1'}$ darstellt,

und wobei $R^{A101}$, $R^{A102}$, $R^{A103}$, $R^{A104}$unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen, in einem Aspekt aus der Gruppe bestehend aus Wasserstoff, Halogen, (Halo)Alkylgruppe, (Halo)Alkoxygruppe, Carbonsäurerest, Carbonsäureester, in einem weiteren Aspekt aus der Gruppe bestehend aus Wasserstoff, Halogen, (Halo)Alkylgruppe, (Halo)Alkoxygruppe, Carbonsäurerest, Carbonsäureester, in einem weiteren Aspekt aus der Gruppe bestehend aus Wasserstoff, Halogen, (Halo)Alkylgruppe, noch mehr bevorzugter aus der Gruppe bestehend aus Wasserstoff, Alkylgruppe ausgewählt sind, und wobei in einem weiteren Aspekt $R^{A101}$, $R^{A102}$, $R^{A103}$, $R^{A104}$ jeweils Wasserstoff ist.

1.1.1.2 Redoxaktive organische Funktion umfassend mindestens ein stabiles Sauerstoffradikal **(B)**

Im Sinne der Erfindung bedeutet "redoxaktive organische Funktion umfassend mindestens ein stabiles Sauerstoffradikal", ein redoxaktiver organischer Rest, der ein stabiles Sauerstoffradikal (O•) umfasst.

B.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.$\alpha$) und Punkt I.1.$\beta$) definiert ist, jeweils eine redoxaktive organische Funktion umfassend mindestens ein stabiles Sauerstoffradikal **(B)** sind, bedeutet dies, erfindungsgemäß, dass die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ unabhängig voneinander jeweils aus einer der folgenden Strukturen **(B1)**, **(B2)** mit

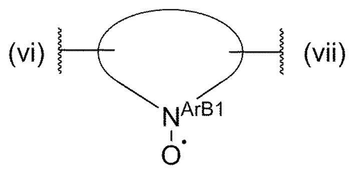
;

**(B1)**

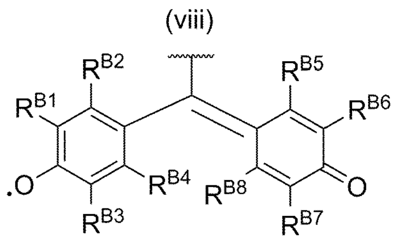
;

**(B2)**

ausgewählt sind,

wobei in der Struktur **(B1)** das Stickstoffatom $N^{ArB1}$ Teil eines aliphatischen Ringes $Ar^{B1}$ ist, der neben dem Stickstoffatom $N^{ArB1}$ weitere Heteroatome, in einem Aspekt N, und Heteroatome enthaltende Gruppen, in einem Aspekt ausgewählt aus der Gruppe bestehend aus -N(Alkyl)-, -NH-, -N(O•)-, umfassen kann und der mit einem oder mehreren weiteren aliphatischen oder aromatischen Ringen kondensiert und mit einem oder mehreren weiteren aliphatischen Ringen, die ihrerseits gegebenenfalls weitere Heteroatome, in einem Aspekt N, und Heteroatome enthaltende Gruppen, in einem Aspekt ausgewählt aus der Gruppe bestehend aus -N(Alkyl)-, -NH-, -N(O•)-, aufweisen, über eine *spiro*-Bindung verknüpft sein kann,

wobei mindestens ein Ringkohlenstoffatom von $Ar^{B1}$ mit einer Gruppe ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus (Halo)alkylgruppe, Cycloalkylgruppe, substituiert sein kann,

wobei die durch (vi) und (vii) gekennzeichneten Bindungen von Ringkohlenstoffatomen von $Ar^{B1}$ und/oder von Ringkohlenstoffatomen der mit $Ar^{B1}$ kondensierten oder über eine spiro-Bindung verknüpften Ringe ausgehen,

wobei, im Falle dass $R^1$ = **(B1),** die durch (vi) gekennzeichnete Bindung die Bindung zu $L^1$ darstellt und die durch (vii) gekennzeichnete Bindung eine Bindung zu Wasserstoff darstellt,

wobei, im Falle dass $R^{1'}$ = **(B1),** die durch (vi) gekennzeichnete Bindung die Bindung zu $L^{1'}$ darstellt und die durch (vii) gekennzeichnete Bindung eine Bindung zu Wasserstoff darstellt,

wobei, im Falle dass $R^{2'}$= **(B1),** die durch (vi) gekennzeichnete Bindung die Bindung zu $L^{2'}$ darstellt und die durch (vii) gekennzeichnete Bindung eine Bindung zu Wasserstoff darstellt,

wobei, im Falle dass $R^{3'}$ = **(B1),** die durch (vi) gekennzeichnete Bindung die Bindung zu $L^{3'}$ darstellt und die durch (vii) gekennzeichnete Bindung eine Bindung zu Wasserstoff darstellt,

und wobei im Falle dass $R^2$ = **(B1),** die durch (vi) gekennzeichnete Bindung die Bindung zu $L^2$ darstellt und die durch (vii) gekennzeichnete Bindung die Bindung zu $L^3$ darstellt,

und wobei im Falle dass $R^4$ = **(B1),** die durch (vi) gekennzeichnete Bindung die Bindung zu $L^4$ darstellt und die durch (vii) gekennzeichnete Bindung die Bindung zu $L^5$ darstellt,

und wobei im Falle dass $R^5$ = **(B1),** die durch (vi) gekennzeichnete Bindung die Bindung zu $L^6$ darstellt und die durch (vii) gekennzeichnete Bindung die Bindung zu $L^7$ darstellt,

wobei, im Falle dass $R^1$, $R^{1'}$, $R^{2'}$ oder $R^{3'}$ = **(B2)**, die durch (viii) gekennzeichnete Bindung die Bindung zu $L^1$, $L^{1'}$, $L^{2'}$ bzw. $L^{3'}$ darstellt und $R^{B1}$, $R^{B2}$, $R^{B3}$, $R^{B4}$, $R^{B5}$, $R^{B6}$, $R^{B7}$, $R^{B8}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)alkyl, Cycloalkyl ausgewählt sind,

und wobei, im Falle dass $R^2$, $R^4$ oder $R^5$ = **(B2)**, die durch (viii) gekennzeichnete Bindung die Bindung zu $L^2$, $L^4$ bzw. $L^6$ darstellt und einer der Reste $R^{B7}$, $R^{B8}$ eine direkte Bindung zu $L^3$, $L^5$ bzw. $L^7$ darstellt, wobei dann die Reste $R^{B1}$, $R^{B2}$, $R^{B3}$, $R^{B4}$, $R^{B5}$, $R^{B6}$ und derjenige der beiden Reste $R^{B7}$, $R^{B8}$, der keine direkte Bindung zu $L^3$, $L^5$ oder $L^7$ darstellt, unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, in einem Aspekt aus der Gruppe bestehend aus Wasserstoff, (Halo)alkyl, Cycloalkyl ausgewählt sind.

B.2 In einem Aspekt des Punktes B.1 weist die Struktur **(B1)** eine Struktur auf, die aus der Gruppe bestehend aus den folgenden Strukturen **(B11)**, **(B12)**, **(B13)**, in einem Aspekt aus der folgenden Struktur **(B11)** mit

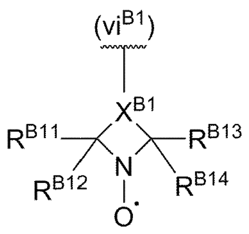
;
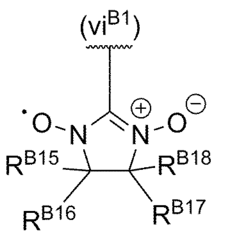
;
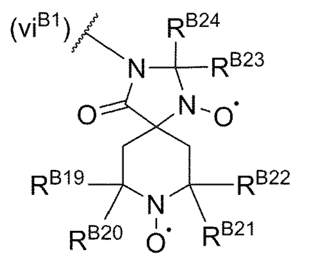
;

**(B11)** **(B12)** **(B13)**

ausgewählt ist,

wobei

$X^{B1}$ ein zweiwertiger Rest ist, der aus der Gruppe bestehend aus Phenylen, in einem Aspekt 1,2-Phenylen, $(\alpha^{B11})$-$CR^{XB11}R^{XB12}$-**C**'H-$CR^{XB13}R^{XB14}$-$(\beta^{B11})$, $(\alpha^{B11})$-**C**'H-$CR^{XB15}R^{XB16}$-$(\beta^{B11})$, $(\alpha^{B11})$-**C**'=$CR^{XB17}$-$(\beta^{B11})$,

ausgewählt ist,

wobei $R^{XB11}$, $R^{XB12}$, $R^{XB13}$, $R^{XB14}$, $R^{XB15}$, $R^{XB16}$, $R^{XB17}$ unabhängig voneinander jeweils aus der Gruppe bestehend aus Wasserstoff, (Halo)alkyl ausgewählt sind, in einem Aspekt alle Wasserstoff sind,

wobei "($\alpha^{B11}$)" jeweils die Bindung zu dem mit $R^{B11}$ und $R^{B12}$ verknüpften Kohlenstoffatom kennzeichnet,
wobei "($\beta^{B11}$)" jeweils die Bindung zu dem mit $R^{B13}$ und $R^{B14}$ verknüpften Kohlenstoffatom kennzeichnet,
wobei "**C**'" das Kohlenstoffatom kennzeichnet, von dem die Bindung ($vi^{B1}$) ausgeht,
und wobei in den Fällen, in denen $X^{B1}$ = Phenylen, die durch ($vi^{B1}$) gekennzeichnete Bindung von einem der aromatischen Ringkohlenstoffatome des Phenylenrestes ausgeht,

und wobei, im Falle dass $R^1$, $R^{1'}$, $R^{2'}$, $R^{3'}$ aus der Gruppe bestehend aus **(B11)**, **(B12)**, **(B13)** ausgewählt sind, die durch ($vi^{B1}$) gekennzeichnete Bindung die Bindung zu $L^1$, $L^{2'}$, $L^{3'}$ bzw. $L^{4'}$ darstellt,

und die Reste $R^{B11}$, $R^{B12}$, $R^{B13}$, $R^{B14}$, $R^{B15}$, $R^{B16}$, $R^{B17}$, $R^{B18}$, $R^{B19}$, $R^{B20}$, $R^{B21}$, $R^{B22}$, $R^{B23}$, $R^{B24}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)alkyl, Cycloalkyl, Alkyl, in einem weiteren Aspekt aus der Gruppe bestehend aus Wasserstoff, Methyl, Ethyl, n-Propyl, iso-Propyl, in einem weiteren Aspekt aus der Gruppe bestehend aus Wasserstoff, Methyl ausgewählt sind und in einem weiteren Aspekt alle Methyl sind,

und wobei, im Falle dass $R^2$, $R^4$, $R^5$ aus der Gruppe bestehend aus **(B11)**, **(B12)**, **(B13)** ausgewählt sind, die durch (vi) gekennzeichnete Bindung die Bindung zu $L^2$, $L^4$, bzw. $L^6$ darstellt,

und im Falle dass $R^2$ eine Struktur der Formel **(B11)**, **(B12)** oder **(B13)** ist, $R^{B11}$, $R^{B15}$ bzw. $R^{B19}$ jeweils die Bindung zu $L^3$ darstellt,

und im Falle dass $R^4$ eine Struktur der Formel **(B11)**, **(B12)** oder **(B13)** ist, $R^{B11}$, $R^{B15}$ bzw. $R^{B19}$ jeweils die Bindung zu $L^5$ darstellt,

und im Falle dass $R^5$ eine Struktur der Formel **(B11)**, **(B12)** oder **(B13)** ist, $R^{B11}$, $R^{B15}$ bzw. $R^{B19}$ jeweils die Bindung zu $L^7$ darstellt,

und dann diejenigen der Reste $R^{B11}$, $R^{B15}$ und $R^{B19}$, die nicht mit $L^3$, $L^5$ oder $L^7$ verbunden sind sowie die Reste $R^{B12}$, $R^{B13}$, $R^{B14}$, $R^{B16}$, $R^{B17}$, $R^{B18}$, $R^{B20}$, $R^{B21}$, $R^{B22}$, $R^{B23}$, $R^{B24}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)alkyl, Cycloalkyl, Alkyl, in einem weiteren Aspekt aus der Gruppe bestehend aus Wasserstoff, Methyl, Ethyl, n-Propyl, iso-Propyl, in einem weiteren Aspekt aus der Gruppe bestehend aus Wasserstoff, Methyl ausgewählt sind, und in einem weiteren Aspekt alle Methyl sind.

B.3 In einem weiteren Aspekt, wie er unter I.1.β) definiert ist, umfasst das vom Elektrodenmaterial gemäß dem ersten Aspekt der Erfindung umfasste, in der Hauptkette nichtkonjugierte, organisches Redox-Polymer P insbesondere $n^1$ miteinander verknüpfte Wiederholungseinheiten der chemischen Struktur **(I)** mit

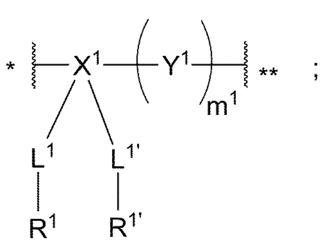

**(I)**

wobei $n^1$ eine ganze Zahl ≥ 4, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei $m^1$ eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, in einem weiteren Aspekt jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $R^1$, $R^{1'}$ unabhängig voneinander jeweils eine redoxaktive organische Funktion umfassend mindestens ein stabiles Sauerstoffradikal **(B)** sind, und $R^{1'}$ auch ein Wasserstoffrest sein kann, und in einem Aspekt $R^1$ eine redoxaktive organische Funktion umfassend mindestens ein stabiles Sauerstoffradikal **(B)** und $R^{1'}$ ein Wasserstoffrest ist,

wobei die redoxaktive organische Funktion umfassend mindestens ein stabiles Sauerstoffradikal **(B)** in einem weiteren Aspekt aus der Gruppe bestehend aus den folgenden Strukturen **(B111)**, **(B112)**, **(B113)**, **(B114)**, **(B115)**, **(B116)**, **(B117)**, in einem weiteren Aspekt aus der Gruppe bestehend aus den folgenden Strukturen **(B111)**, **(B112)**, **(B113)**, **(B114)**, **(B115)** ausgewählt ist, in einem weiteren Aspekt eine Verbindung der Struktur **(B111)** ist, mit

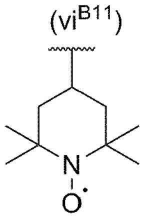 ; 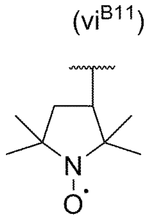 ; 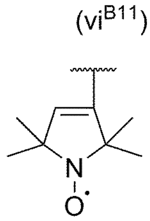 ; 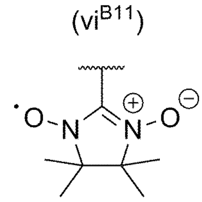 ;

**(B111)** **(B112)** **(B113)** **(B114)**

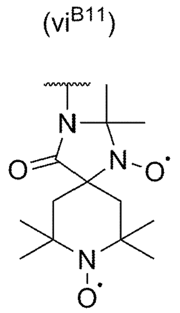 ; 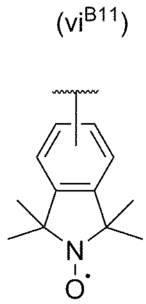 ; 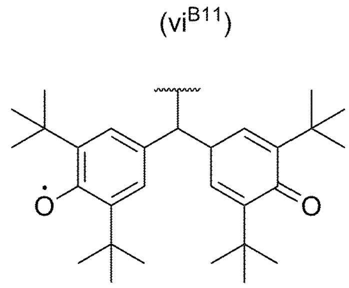 ;

**(B115)** **(B116)** **(B117)**

wobei jeweils die durch ($vi^{B11}$) gekennzeichnete Bindung für $R^1$ die Bindung zu $L^1$, und für $R^{1'}$ die Bindung zu $L^{1'}$ darstellt.

1.1.1.3 Redoxaktive Anthrachinon-/ Carbazolfunktion **(C)**

Im Sinne der Erfindung bedeutet "redoxaktive Anthrachinon-/ Carbazolfunktion", ein redoxaktiver organischer Rest, der ein von Anthrachinon oder Carbazol abgeleitetes Grundgerüst umfasst.

C.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.α) und Punkt I.1.β) definiert ist, jeweils eine redoxaktive Anthrachinon-/ Carbazolfunktion **(C)** sind, bedeutet dies erfindungsgemäß, dass die Reste $R^1$, $R^{1'}$, $R^{2'}$, $R^{3'}$ bzw. $R^1$, $R^{1'}$ bzw. $R^1$ unabhängig voneinander jeweils aus der Gruppe bestehend aus den folgenden Strukturen **(C1)**, **(C2)** ausgewählt sind und die Reste $R^2$, $R^4$, $R^5$ unabhängig voneinander jeweils aus der Gruppe bestehend aus den folgenden Strukturen **(C3)**, **(C4)** mit

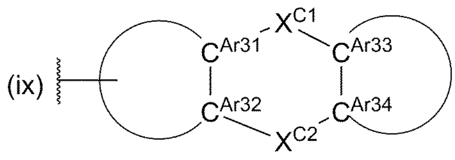

;

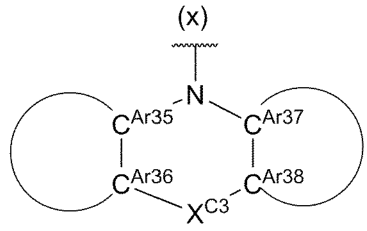

**(C1)** **(C2)**

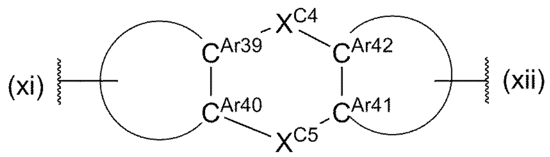

;

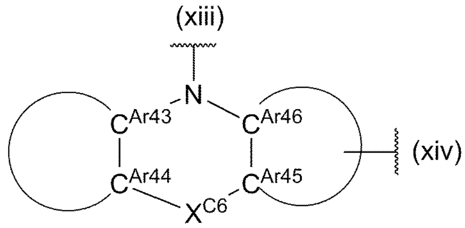

;

**(C3)** **(C4)**

ausgewählt sind,

wobei in der Struktur **(C1)** die durch $C^{Ar31}$ und $C^{Ar32}$ dargestellten Kohlenstoffatome Teil eines (hetero)aromatischen Fünfringes oder Sechsringes sind, wobei mindestens eines der von $C^{Ar31}$ und $C^{Ar32}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei in der Struktur **(C1)** die durch $C^{Ar33}$ und $C^{Ar34}$ dargestellten Kohlenstoffatome Teil eines (hetero)aromatischen Fünfringes oder Sechsringes sind, wobei mindestens eines der von $C^{Ar33}$ und $C^{Ar34}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei in der Struktur **(C2)** die durch $C^{Ar35}$ und $C^{Ar36}$ bzw. die durch $C^{Ar37}$ und $C^{Ar38}$ dargestellten Kohlenstoffatome jeweils Teil eines (hetero)aromatischen Fünfringes oder Sechsringes sind, wobei mindestens eines der von $C^{Ar35}$, $C^{Ar36}$, $C^{Ar37}$, $C^{Ar38}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei in der Struktur **(C3)** die durch $C^{Ar39}$ und $C^{Ar40}$ bzw. $C^{Ar41}$ und $C^{Ar42}$ dargestellten Kohlenstoffatome jeweils Teil eines (hetero)aromatischen Fünfringes oder Sechsringes sind, wobei mindestens eines der von $C^{Ar39}$, $C^{Ar40}$, $C^{Ar41}$ und $C^{Ar42}$ verschiedenen Kohlenstoffatome und, falls vorhanden, mindestens ein Stickstoffatom in den beiden Ringen mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei in der Struktur **(C4)** die durch $C^{Ar43}$ und $C^{Ar44}$ dargestellten Kohlenstoffatome Teil eines (hetero)aromatischen

Fünfringes oder Sechsringes sind, wobei mindestens eines der von $C^{Ar43}$ und $C^{Ar44}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei in der Struktur **(C4)** die durch $C^{Ar45}$ und $C^{Ar46}$ dargestellten Kohlenstoffatome Teil eines (hetero)aromatischen Fünfringes oder Sechsringes sind, wobei mindestens eines der von $C^{Ar45}$ und $C^{Ar46}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei $X^{C1}$, $X^{C2}$, $X^{C3}$, $X^{C4}$, $X^{C5}$, $X^{C6}$ unabhängig voneinander jeweils aus der Gruppe bestehend aus -C(=$YC^1$)-, -O-, -S-, -NH-, -N(Haloalkyl)-, -N(Alkyl)- ausgewählt sind,

und $X^{C2}$, $X^{C3}$, $X^{C5}$, $X^{C6}$ auch jeweils eine direkte Bindung sein können,

und wobei $X^{C1}$, $X^{C4}$ auch eine Gruppe der allgemeinen Formel ($\alpha^{C1}$)-C(=O)-C(=O)-($\beta^{C1}$) sein kann,

wobei ($\alpha^{C1}$) die Bindung zu $C^{Ar31}$ bzw. $C^{Ar39}$ kennzeichnet und ($\beta^{C1}$) die Bindung zu $C^{Ar33}$ bzw. $C^{Ar42}$ kennzeichnet,

wobei $Y^{C1}$ aus der Gruppe bestehend aus O, S, und einer der folgenden Strukturen ($Y^{C11}$), ($Y^{C12}$), ($Y^{C13}$) mit

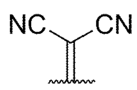 ; 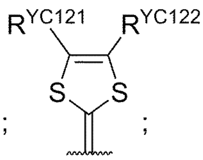 ; 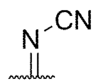 ;

**($Y^{C11}$)** **($Y^{C12}$)** **($Y^{C13}$)**

ausgewählt ist, wobei $R^{YC121}$, $R^{YC122}$ unabhängig voneinander aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, Halogen, (Halo)Alkylgruppe, (Halo)Alkoxygruppe, in einem weiteren Aspekt aus der Gruppe bestehend aus Wasserstoff, Alkylgruppe, Alkoxygruppe, in einem weiteren Aspekt aus der Gruppe bestehend aus Wasserstoff, Alkylgruppe ausgewählt sind, in einem weiteren Aspekt beide Wasserstoff sind,

wobei der $C^{Ar31}$ und $C^{Ar32}$ umfassende (hetero)aromatische Fünfring oder Sechsring mit dem $C^{Ar33}$ und $C^{Ar34}$ umfassende (hetero)aromatischen Fünfring oder Sechsring zusätzlich zu $X^{C1}$ und $X^{C2}$ über einen weiteren zweiwertigen organischen Rest, der in einem Aspekt eine Alkylenrest oder ein Rest der Formel -C(=O)-C(=O)- ist, verbrückt sein kann,

wobei der $C^{Ar39}$ und $C^{Ar40}$ umfassende (hetero)aromatische Fünfring oder Sechsring mit dem $C^{Ar41}$ und $C^{Ar42}$ umfassende (hetero)aromatischen Fünfring oder Sechsring zusätzlich zu $X^{C4}$ und $X^{C5}$ über einen weiteren zweiwertigen organischen Rest, der in einem Aspekt ein Alkylenrest oder ein Rest der Formel -C(=O)-C(=O)- ist, verbrückt sein kann,

wobei die durch (ix) gekennzeichnete Bindung von einem der Atome ausgeht, die den $C^{Ar31}$ und $C^{Ar32}$ beinhaltenden (hetero)aromatischen Fünf- oder Sechsring bilden,

wobei die durch (xi) gekennzeichnete Bindung von einem der Atome ausgeht, die den $C^{Ar39}$ und $C^{Ar40}$ beinhaltenden (hetero)aromatischen Fünf- oder Sechsring bilden,

wobei die durch (xii) gekennzeichnete Bindung von einem der Atome ausgeht, die den $C^{Ar41}$ und $C^{Ar42}$ beinhaltenden (hetero)aromatischen Fünf- oder Sechsring bilden,

wobei die durch (xiv) gekennzeichnete Bindung von einem der Atome ausgeht, die den $C^{Ar45}$ und $C^{Ar46}$ beinhaltenden (hetero)aromatischen Fünf- oder Sechsring bilden,

und wobei

im Falle dass $R^1$ = **(C1)** oder **(C2),** die durch (ix) bzw. (x) gekennzeichneten Bindungen jeweils die Bindung zu $L^1$ darstellen,

im Falle dass $R^{1'}$ = **(C1)** oder **(C2),** die durch (ix) bzw. (x) gekennzeichneten Bindungen jeweils die Bindung zu $L^{1'}$ darstellen,

im Falle dass $R^{2'}$ = **(C1)** oder **(C2),** die durch (ix) bzw. (x) gekennzeichneten Bindungen jeweils die Bindung zu $L^{2'}$ darstellen,

im Falle dass $R^{3'}$ = **(C1)** oder **(C2),** die durch (ix) bzw. (x) gekennzeichneten Bindungen jeweils die Bindung zu $L^{3'}$ darstellen,

im Falle dass $R^2$ = **(C3)** oder **(C4)**, die durch (xi) bzw. (xiii) gekennzeichneten Bindungen jeweils die Bindung zu $L^2$ darstellen und die durch (xii) bzw. (xiv) gekennzeichneten Bindungen jeweils die Bindung zu $L^3$ darstellen,

im Falle dass $R^4$ = **(C3)** oder **(C4)**, die durch (xi) bzw. (xiii) gekennzeichnete Bindungen jeweils die Bindung zu $L^4$ darstellen und die durch (xii) bzw. (xiv) gekennzeichneten Bindungen jeweils die Bindung zu $L^5$ darstellen,

im Falle dass $R^5$ = **(C3)** oder **(C4)**, die durch (xi) bzw. (xiii) gekennzeichnete Bindungen jeweils die Bindung zu $L^6$ darstellen und die durch (xii) bzw. (xiv) gekennzeichneten Bindungen jeweils die Bindung zu $L^7$ darstellen.

C.2 In einen weiteren Aspekt des vorgenannten Punktes C.1 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.$\alpha$) und Punkt I.1.$\beta$) definiert ist, jeweils eine redoxaktive Anthrachinon-/ Carbazolfunktion **(C)** sind, dass die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ unabhängig voneinander jeweils aus einer der folgenden Strukturen **(C11), (C12), (C13), (C14), (C15), (C16), (C17), (C18), (C19), (C20)** mit

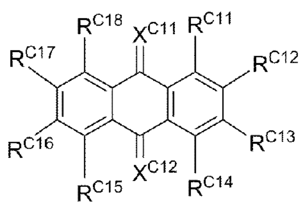
;
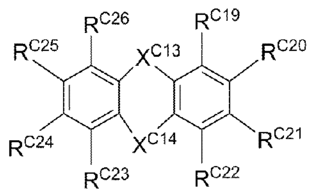
;
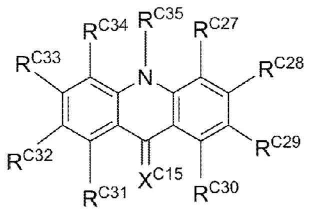
;

**(C11)** **(C12)** **(C13)**

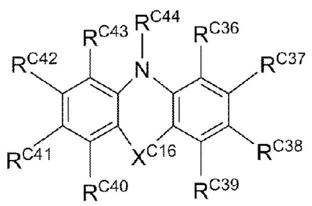
;
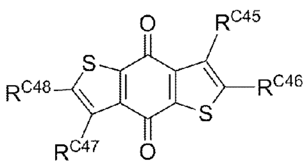
;
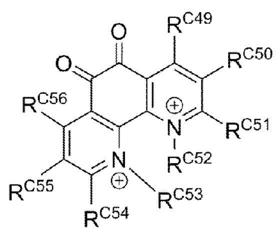
;

**(C14)** **(C15)** **(C16)**

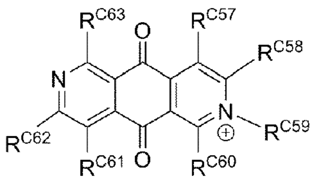 ; 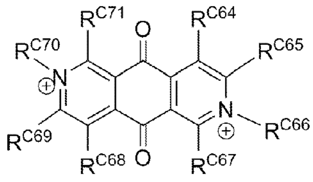 ; 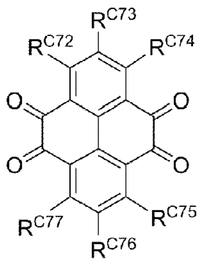 ; 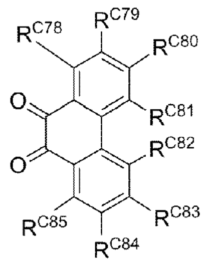 ;

**(C17)** **(C18)** **(C19)** **(C20)**

ausgewählt sind,

wobei $X^{C11}$, $X^{C12}$, $X^{C15}$ aus der Gruppe bestehend aus O, S, und einer der unter Punkt C.1 definierten Strukturen **($Y^{C11}$)**, **($Y^{C12}$)**, **($Y^{C13}$)** ausgewählt ist

wobei $X^{C13}$, $X^{C14}$, $X^{C16}$ aus der Gruppe bestehend aus -O-, -S-, -NH-, -N(Haloalkyl)-, -N(Alkyl)-, in einem Aspekt aus der Gruppe bestehend aus -O-, -S-, -NH-, -N(Alkyl)-, in einem weiteren Aspekt aus der Gruppe bestehend aus -O-, -S-, -NH- ausgewählt sind,

und $X^{C14}$, $X^{C16}$ auch jeweils eine direkte Bindung sein können,

wobei, wenn $R^1$, $R^{1'}$, $R^{2'}$ oder $R^{3'}$ die Struktur **(C11)** aufweisen, einer der Reste $R^{C11}$, $R^{C12}$ die Bindung zu $L^1$, $L^{1'}$, $L^{2'}$ bzw. $L^{3'}$ darstellt,

und wobei, wenn $R^2$, $R^4$, $R^5$ die Struktur **(C11)** aufweisen, einer der Reste $R^{C11}$, $R^{C12}$, $R^{C13}$, $R^{C14}$, $R^{C15}$, $R^{C16}$, $R^{C17}$ $R^{C18}$ die Bindung zu $L^2$, $L^4$ bzw. $L^6$ darstellt und ein anderer der Reste $R^{C11}$, $R^{C12}$, $R^{C13}$, $R^{C14}$, $R^{C15}$, $R^{C16}$, $R^{C17}$, $R^{C18}$ die Bindung zu $L^3$, $L^5$ bzw. $L^7$ darstellt,

wobei, wenn $R^1$, $R^{1'}$, $R^{2'}$ oder $R^{3'}$ die Struktur **(C12)** aufweisen, einer der Reste $R^{C19}$, $R^{C20}$ die Bindung zu $L^1$, $L^{1'}$, $L^{2'}$ bzw. $L^{3'}$ darstellt,

und wobei, wenn $R^2$, $R^4$, $R^5$ die Struktur **(C12)** aufweisen, einer der Reste $R^{C19}$, $R^{C20}$, $R^{C21}$, $R^{C22}$, $R^{C23}$, $R^{C24}$ $R^{C25}$, $R^{C26}$ die Bindung zu $L^2$, $L^4$ bzw. $L^6$ darstellt und ein anderer der Reste $R^{C19}$, $R^{C20}$, $R^{C21}$, $R^{C22}$, $R^{C23}$, $R^{C24}$, $R^{C25}$, $R^{C26}$ die Bindung zu $L^3$, $L^5$ bzw. $L^7$ darstellt,

wobei, wenn $R^1$, $R^{1'}$, $R^{2'}$ oder $R^{3'}$ die Struktur **(C13)** aufweisen, einer der Reste $R^{C27}$, $R^{C28}$, $R^{C29}$, $R^{C30}$, $R^{C35}$ die Bindung zu $L^1$, $L^{1'}$, $L^{2'}$ bzw. $L^{3'}$ darstellt,

und wobei, wenn $R^2$, $R^4$, $R^5$ die Struktur **(C13)** aufweisen, einer der Reste $R^{C27}$, $R^{C28}$, $R^{C29}$, $R^{C30}$, $R^{C31}$, $R^{C32}$, $R^{C33}$, $R^{C34}$, $R^{C35}$ die Bindung zu $L^2$, $L^4$ bzw. $L^6$ darstellt und ein anderer der Reste $R^{C27}$, $R^{C28}$, $R^{C29}$, $R^{C30}$, $R^{C31}$, $R^{C32}$, $R^{C33}$, $R^{C34}$, $R^{C35}$ die Bindung zu $L^3$, $L^5$ bzw. $L^7$ darstellt,

wobei, wenn $R^1$, $R^{1'}$, $R^{2'}$ oder $R^{3'}$ die Struktur **(C14)** aufweisen, einer der Reste $R^{C36}$, $R^{C37}$, $R^{C38}$, $R^{C39}$, $R^{C44}$ die Bindung zu $L^1$, $L^{1'}$, $L^{2'}$ bzw. $L^{3'}$ darstellt,

und wobei wenn $R^2$, $R^4$, $R^5$ die Struktur **(C14)** aufweisen, einer der Reste $R^{C36}$, $R^{C37}$, $R^{C38}$, $R^{C39}$, $R^{C40}$, $R^{C41}$, $R^{C42}$, $R^{C43}$, $R^{C44}$ die Bindung zu $L^2$, $L^4$ bzw. $L^6$ darstellt und ein anderer der Reste $R^{C36}$, $R^{C37}$, $R^{C38}$, $R^{C39}$, $R^{C40}$, $R^{C41}$, $R^{C42}$, $R^{C43}$, $R^{C44}$ die Bindung zu $L^3$, $L^5$ bzw. $L^7$ darstellt,

wobei, wenn $R^1$, $R^{1'}$, $R^{2'}$ oder $R^{3'}$ die Struktur **(C15)** aufweisen, einer der Reste $R^{C45}$, $R^{C46}$ die Bindung zu $L^1$, $L^{1'}$, $L^{2'}$ bzw. $L^{3'}$ darstellt,

und wobei, wenn $R^2$, $R^4$, $R^5$ die Struktur **(C15)** aufweisen, einer der Reste $R^{C45}$, $R^{C46}$, $R^{C47}$, $R^{C48}$ die Bindung zu $L^2$, $L^4$ bzw. $L^6$ darstellt und ein anderer der Reste $R^{C45}$, $R^{C46}$, $R^{C47}$, $R^{C48}$ die Bindung zu $L^3$, $L^5$ bzw. $L^7$ darstellt,

wobei, wenn $R^1$, $R^{1'}$, $R^{2'}$ oder $R^{3'}$ die Struktur **(C16)** aufweisen, einer der Reste $R^{C49}$, $R^{C50}$, $R^{C51}$, $R^{C52}$ die Bindung

zu $L^1$, $L^{1'}$, $L^{2'}$ bzw. $L^{3'}$ darstellt,

und wobei, wenn $R^2$, $R^4$, $R^5$ die Struktur **(C16)** aufweisen, einer der Reste $R^{C49}$, $R^{C50}$, $R^{C51}$, $R^{C52}$, $R^{C53}$, $R^{C54}$, $R^{C55}$, $R^{C56}$ die Bindung zu $L^2$, $L^4$ bzw. $L^6$ darstellt und ein anderer der Reste $R^{C49}$, $R^{C50}$, $R^{C51}$, $R^{C52}$, $R^{C53}$, $R^{C54}$, $R^{C55}$, $R^{C56}$ die Bindung zu $L^3$, $L^5$ bzw. $L^7$ darstellt,

wobei, wenn $R^1$, $R^{1'}$, $R^{2'}$ oder $R^{3'}$ die Struktur **(C17)** aufweisen, einer der Reste $R^{C57}$, $R^{C58}$, $R^{C59}$, $R^{C60}$, $R^{C61}$, $R^{C62}$ $R^{C63}$ die Bindung zu $L^1$, $L^{1'}$, $L^{2'}$ bzw. $L^{3'}$ darstellt,

und wobei, wenn $R^2$, $R^4$, $R^5$ die Struktur **(C17)** aufweisen, einer der Reste $R^{C57}$, $R^{C58}$, $R^{C59}$, $R^{C60}$, $R^{C61}$, $R^{C62}$, $R^{C63}$ die Bindung zu $L^2$, $L^4$ bzw. $L^6$ darstellt und ein anderer der Reste $R^{C57}$, $R^{C58}$, $R^{C59}$, $R^{C60}$, $R^{C61}$, $R^{C62}$ $R^{C63}$ die Bindung zu $L^3$, $L^5$ bzw. $L^7$ darstellt,

wobei, wenn $R^1$, $R^{1'}$, $R^{2'}$ oder $R^{3'}$ die Struktur **(C18)** aufweisen, einer der Reste $R^{C64}$, $R^{C65}$, $R^{C66}$, $R^{C67}$ die Bindung zu $L^1$, $L^{1'}$, $L^{2'}$ bzw. $L^{3'}$ darstellt,

und wobei, wenn $R^2$, $R^4$, $R^5$ die Struktur **(C18)** aufweisen, einer der Reste $R^{C64}$, $R^{C65}$, $R^{C66}$, $R^{C67}$, $R^{C68}$, $R^{C69}$, $R^{C70}$, $R^{C71}$ die Bindung zu $L^2$, $L^4$ bzw. $L^6$ darstellt und ein anderer der Reste $R^{C64}$, $R^{C65}$, $R^{C66}$, $R^{C67}$, $R^{C68}$, $R^{C69}$, $R^{C70}$, $R^{C71}$ die Bindung zu $L^3$, $L^5$ bzw. $L^7$ darstellt,

wobei, wenn $R^1$, $R^{1'}$, $R^{2'}$ oder $R^{3'}$ die Struktur **(C19)** aufweisen, einer der Reste $R^{C72}$, $R^{C73}$ die Bindung zu $L^1$, $L^{1'}$, $L^{2'}$ bzw. $L^{3'}$ darstellt,

und wobei, wenn $R^2$, $R^4$, $R^5$ die Struktur **(C19)** aufweisen, einer der Reste $R^{C72}$, $R^{C73}$, $R^{C74}$, $R^{C75}$, $R^{C76}$, $R^{C77}$ die Bindung zu $L^2$, $L^4$ bzw. $L^6$ darstellt und ein anderer der Reste $R^{C72}$, $R^{C73}$, $R^{C74}$, $R^{C75}$, $R^{C76}$, $R^{C77}$ die Bindung zu $L^3$, $L^5$ bzw. $L^7$ darstellt,

wobei, wenn $R^1$, $R^{1'}$, $R^{2'}$ oder $R^{3'}$ die Struktur **(C20)** aufweisen, einer der Reste $R^{C78}$, $R^{C79}$, $R^{C80}$, $R^{C81}$ die Bindung zu $L^1$, $L^{1'}$, $L^{2'}$ bzw. $L^{3'}$ darstellt,

und wobei, wenn $R^2$, $R^4$, $R^5$ die Struktur **(C20)** aufweisen, einer der Reste $R^{C78}$, $R^{C79}$, $R^{C80}$, $R^{C81}$, $R^{C82}$, $R^{C83}$, $R^{C84}$, $R^{C85}$ die Bindung zu $L^2$, $L^4$ bzw. $L^6$ darstellt und ein anderer der Reste $R^{C78}$, $R^{C79}$, $R^{C80}$, $R^{C81}$, $R^{C82}$, $R^{C83}$, $R^{C84}$, $R^{C85}$ die Bindung zu $L^3$, $L^5$ bzw. $L^7$ darstellt,

und wobei diejenigen der Reste $R^{C11}$, $R^{C12}$, $R^{C13}$, $R^{C14}$, $R^{C15}$, $R^{C16}$, $R^{C17}$, $R^{C18}$, $R^{C19}$, $R^{C20}$, $R^{C21}$, $R^{C22}$, $R^{C23}$, $R^{C24}$, $R^{C25}$, $R^{C26}$, $R^{C27}$, $R^{C28}$, $R^{C29}$, $R^{C30}$, $R^{C31}$, $R^{C32}$, $R^{C33}$, $R^{C34}$, $R^{C36}$, $R^{C37}$, $R^{C38}$, $R^{C39}$, $R^{C40}$, $R^{C41}$, $R^{C42}$, $R^{C43}$, $R^{C45}$, $R^{C46}$, $R^{C47}$, $R^{C48}$, $R^{C49}$, $R^{C50}$, $R^{C51}$, $R^{C54}$, $R^{C55}$, $R^{C56}$, $R^{C57}$, $R^{C58}$, $R^{C60}$, $R^{C61}$, $R^{C62}$, $R^{C63}$, $R^{C64}$, $R^{C65}$, $R^{C67}$, $R^{C68}$, $R^{C69}$, $R^{C71}$ $R^{C72}$, $R^{C73}$, $R^{C74}$, $R^{C75}$, $R^{C76}$, $R^{C77}$ $R^{C78}$, $R^{C79}$, $R^{C80}$, $R^{C81}$, $R^{C82}$, $R^{C83}$, $R^{C84}$, $R^{C85}$, die keine Bindung zu $L^1$, $L^{1'}$, $L^{2'}$, $L^{3'}$, $L^2$, $L^3$, $L^4$, $L^5$, $L^6$ oder $L^7$ darstellen, unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, Halogen, (Halo)Alkylgruppe, (Halo)Alkoxygruppe, ausgewählt sind,

und wobei diejenigen der Reste $R^{C35}$, $R^{C44}$, $R^{C52}$, $R^{C53}$, $R^{C59}$, $R^{C66}$, $R^{C70}$, die keine Bindung zu $L^1$, $L^{1'}$, $L^{2'}$, $L^{3'}$, $L^2$, $L^3$, $L^4$, $L^5$, $L^6$ oder $L^7$ darstellen, unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen ausgewählt sind, in einem Aspekt aus der Gruppe ausgewählt aus Wasserstoff, Halogen, (Halo)Alkylgruppe, (Halo)Alkoxygruppe, ausgewählt sind.

C.3 In einem weiteren Aspekt des vorgenannten Punktes C.2 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.$\alpha$) und Punkt I.1 .$\beta$) definiert ist, jeweils eine redoxaktive Anthrachinon-/ Carbazolfunktion **(C)** sind, dass die Reste $R^1$, $R^{1'}$, $R^{2'}$, $R^{3'}$ bzw. die Reste $R^1$, $R^{1'}$ bzw. der Rest $R^1$ aus der Gruppe bestehend aus den folgenden Strukturen **(C101), (C102), (C103), (C104), (C105), (C106), (C107), (C108), (C109), (C110), (C111), (C112), (C113), (C114),** in einem Aspekt aus der Gruppe bestehend aus den folgenden Strukturen **(C101), (C102), (C103), (C104), (C105), (C113)** mit

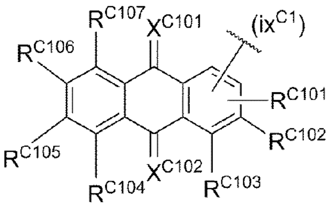

(C101)

;

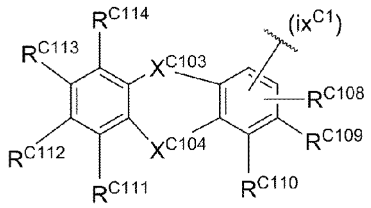

(C102)

;

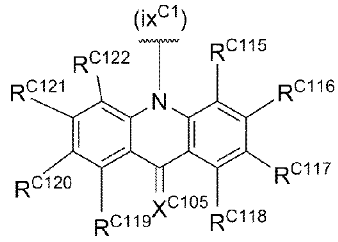

(C103)

;

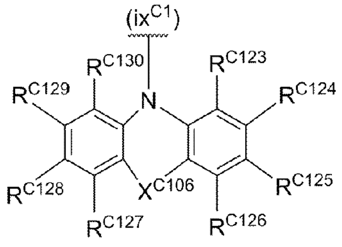

(C104)

;

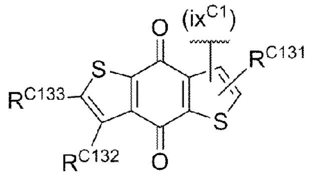

(C105)

;

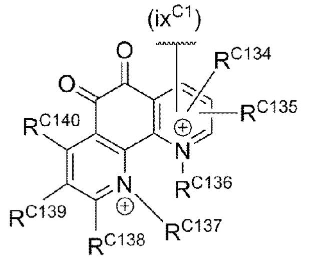

(C106)

;

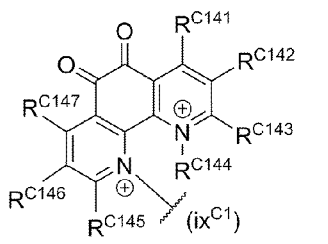

(C107)

;

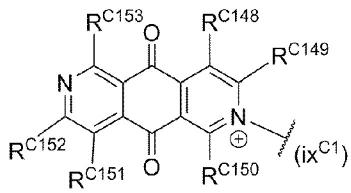

(C108)

;

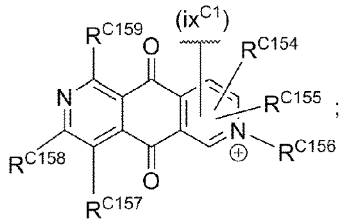

(C109)

;

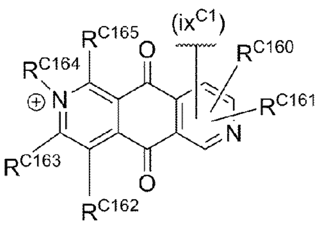

(C110)

;

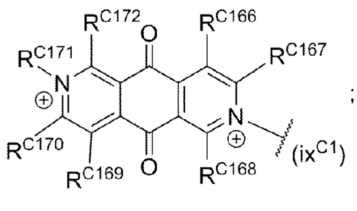

(C111)

;

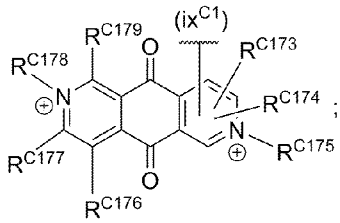

(C112)

;

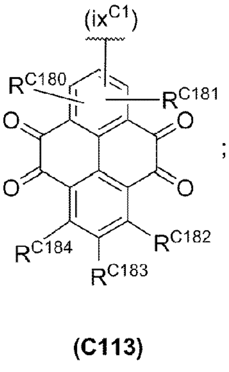

(C113)

;

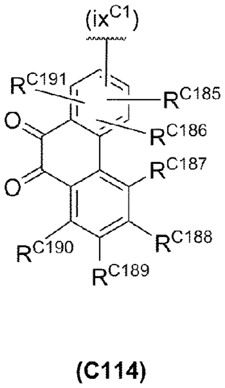

(C114)

;

ausgewählt sind,

wobei die durch ($ix^{C1}$) gekennzeichnete Bindung die Bindung zu $L^1$, $L^{1'}$, $L^{2'}$ bzw. $L^{3'}$ bezeichnet,

wobei $X^{C101}$, $X^{C102}$, $X^{C105}$ aus der Gruppe bestehend aus O, S, und einer der unter Punkt C.1 definierten Strukturen **($Y^{C11}$)**, **($Y^{C12}$)**, **($Y^{C13}$)** ausgewählt ist

wobei $X^{C103}$, $X^{C104}$, $X^{C106}$ aus der Gruppe bestehend aus -O-, -S-, -NH-, -N(Haloalkyl)-, -N(Alkyl)-, , in einem Aspekt aus der Gruppe bestehend aus -O-, -S-, -NH-, -N(Alkyl)-, in einem weiteren Aspekt aus der Gruppe bestehend aus -O-, -S-, -NH- ausgewählt sind,

und $X^{C104}$, $X^{C106}$ auch jeweils eine direkte Bindung sein können,

und wobei die Reste $R^{C101}$, $R^{C102}$, $R^{C103}$, $R^{C104}$, $R^{C105}$, $R^{C106}$, $R^{C107}$, $R^{C108}$, $R^{C109}$, $R^{C110}$, $R^{C111}$, $R^{C112}$, $R^{C113}$, $R^{C114}$, $R^{C115}$, $R^{C116}$, $R^{C117}$, $R^{C118}$, $R^{C119}$, $R^{C120}$, $R^{C121}$, $R^{C122}$, $R^{C123}$, $R^{C124}$, $R^{C125}$, $R^{C126}$, $R^{C127}$, $R^{C128}$, $R^{C129}$, $R^{C130}$, $R^{C131}$, $R^{C132}$, $R^{C133}$, $R^{C134}$, $R^{C135}$, $R^{C138}$, $R^{C139}$, $R^{C140}$, $R^{C141}$, $R^{C142}$, $R^{C143}$, $R^{C145}$, $R^{C146}$, $R^{C147}$, $R^{C148}$, $R^{C149}$, $R^{C150}$, $R^{C151}$, $R^{C152}$, $R^{C153}$, $R^{C154}$, $R^{C155}$, $R^{C157}$, $R^{C158}$, $R^{C159}$, $R^{C160}$, $R^{C161}$, $R^{C162}$, $R^{C163}$, $R^{C165}$, $R^{C166}$, $R^{C167}$, $R^{C168}$, $R^{C169}$, $R^{C170}$, $R^{C172}$, $R^{C173}$, $R^{C174}$, $R^{C176}$, $R^{C177}$, $R^{C179}$, $R^{C180}$, $R^{C181}$, $R^{C182}$, $R^{C183}$, $R^{C184}$, $R^{C185}$, $R^{C186}$, $R^{C187}$, $R^{C188}$, $R^{C189}$, $R^{C190}$, $R^{C191}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, Halogen, (Halo)Alkylgruppe, (Halo)Alkoxygruppe ausgewählt sind,

und wobei die Reste $R^{C136}$, $R^{C137}$, $R^{C144}$, $R^{C156}$, $R^{C164}$, $R^{C171}$, $R^{C175}$, $R^{C178}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen, in einem Aspekt aus der Gruppe ausgewählt aus Wasserstoff, Halogen, (Halo)Alkylgruppe, (Halo)Alkoxygruppe ausgewählt sind,

und $R^2$, $R^4$, $R^5$ aus der Gruppe bestehend aus den folgenden Strukturen **(C201), (C202), (C203), (C204), (C205), (C206), (C207), (C208), (C209), (C210), (C211), (C212), (C213),** in einem Aspekt aus der Gruppe bestehend aus den folgenden Strukturen **(C201), (C202), (C203), (C204), (C205) (C212)** mit

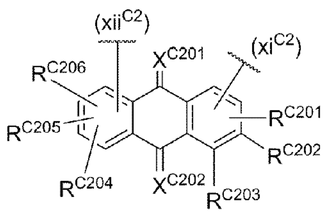
;
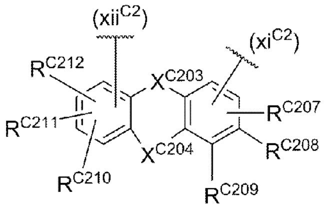
;
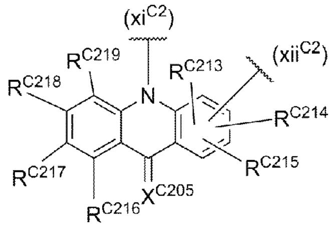
;

**(C201)** **(C202)** **(C203)**

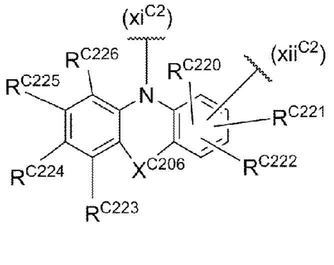
;
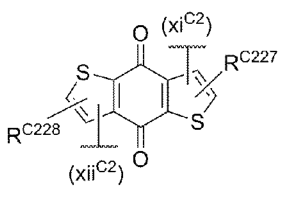
;
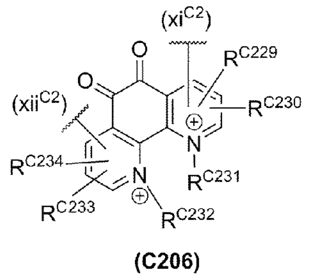
;

**(C204)** **(C205)** **(C206)**

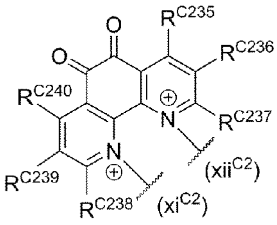 ; 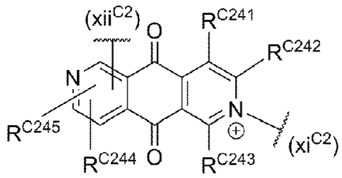 ; 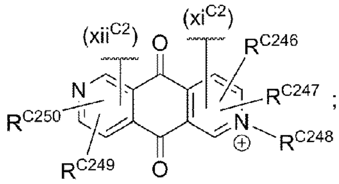 ;

**(C207)** **(C208)** **(C209)**

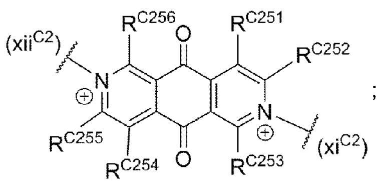 ; 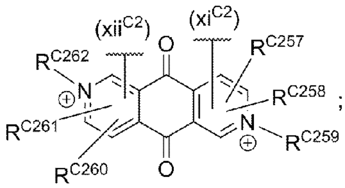 ; 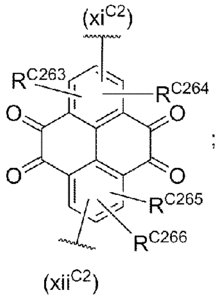 ; 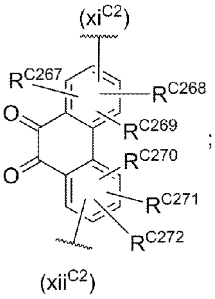 ;

**(C210)** **(C211)** **(C212)** **(C213)**

ausgewählt sind,

wobei die durch ($xi^{C2}$) gekennzeichnete Bindung die Bindung zu $L^2$, $L^4$ bzw. $L^6$ bezeichnet, und die durch ($xii^{C2}$) gekennzeichnete Bindung die Bindung zu $L^3$, $L^5$ bzw. $L^7$ bezeichnet,

wobei $X^{C201}$, $X^{C202}$, $X^{C205}$ aus der Gruppe bestehend aus O, S, und einer der unter Punkt C.1 dfinierten Strukturen **($Y^{C11}$)**, **($Y^{C12}$)**, **($Y^{C13}$)** ausgewählt ist,

wobei $X^{C203}$, $X^{C204}$, $X^{C206}$ aus der Gruppe bestehend aus -O-, -S-, -NH-, -N(Haloalkyl)-, -N(Alkyl)-, in einem Aspekt aus der Gruppe bestehend aus -O-, -S-, -NH-, -N(Alkyl)-, in einem weiteren Aspekt aus der Gruppe bestehend aus -O-, -S-, -NH- ausgewählt sind,

und $X^{C204}$, $X^{C206}$ auch jeweils eine direkte Bindung sein können,

und wobei die Reste $R^{C201}$, $R^{C202}$, $R^{C203}$, $R^{C204}$, $R^{C205}$, $R^{C206}$, $R^{C207}$, $R^{C208}$, $R^{C209}$, $R^{C210}$, $R^{C211}$, $R^{C212}$, $R^{C213}$, $R^{C214}$, $R^{C215}$, $R^{C216}$, $R^{C217}$, $R^{C218}$, $R^{C219}$, $R^{C220}$, $R^{C221}$, $R^{C222}$, $R^{C223}$, $R^{C224}$, $R^{C225}$, $R^{C226}$, $R^{C227}$, $R^{C228}$, $R^{C229}$, $R^{C230}$, $R^{C233}$, $R^{C234}$, $R^{C235}$, $R^{C236}$, $R^{C237}$, $R^{C238}$, $R^{C239}$, $R^{C240}$, $R^{C241}$, $R^{C242}$, $R^{C243}$, $R^{C244}$, $R^{C245}$, $R^{C246}$, $R^{C247}$, $R^{C249}$, $R^{C250}$, $R^{C251}$, $R^{C252}$, $R^{C253}$, $R^{C254}$, $R^{C255}$, $R^{C256}$, $R^{C257}$, $R^{C258}$, $R^{C260}$, $R^{C261}$, $R^{C263}$, $R^{C264}$, $R^{C265}$, $R^{C266}$, $R^{C267}$, $R^{C268}$, $R^{C269}$, $R^{C270}$, $R^{C271}$, $R^{C272}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, Halogen, (Halo)Alkylgruppe, (Halo)Alkoxygruppe ausgewählt sind,

und wobei die Reste $R^{C231}$, $R^{C232}$, $R^{C248}$, $R^{C259}$, $R^{C262}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen, in einem Aspekt aus der Gruppe ausgewählt aus Wasserstoff, Halogen, (Halo)Alkylgruppe, (Halo)Alkoxygruppe ausgewählt sind.

C.4 In einem weiteren Aspekt der vorgenannten Punkte C.3 bedeutet erfindungsgemäß in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.$\alpha$) und Punkt I.1.$\beta$) definiert ist, jeweils eine redoxaktive Anthrachinon-/ Carbazolfunktion **(C)** sind, dass die Reste $R^1$, $R^{1'}$, $R^{2'}$, $R^{3'}$ bzw. die Reste $R^1$, $R^{1'}$ bzw. der Rest $R^1$ aus der Gruppe bestehend aus nachfolgend definierten Strukturen **(C301), (C302), (C303),**

**(C304), (C305), (C306), (C307)** mit

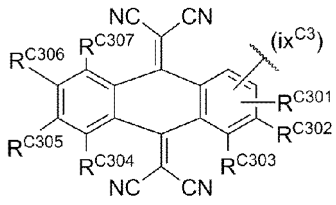 ; 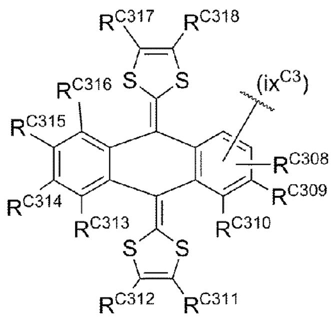 ; 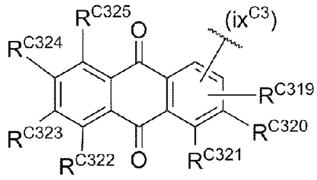 ;

**(C301)** **(C302)** **(C303)**

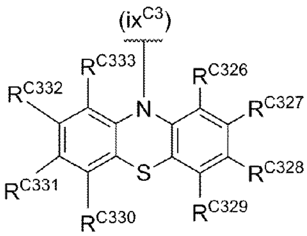 ; 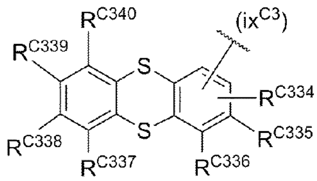 ; 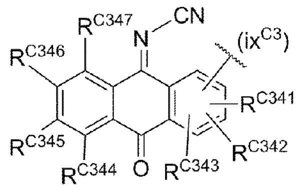 ;

**(C304)** **(C305)** **(C306)**

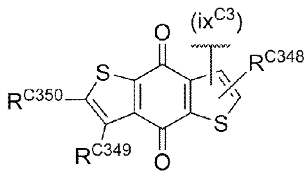 ;

**(C307)**

ausgewählt sind,

wobei $R^{C301}$, $R^{C302}$, $R^{C303}$, $R^{C304}$, $R^{C305}$, $R^{C306}$, $R^{C307}$, $R^{C308}$, $R^{C309}$, $R^{C310}$, $R^{C311}$, $R^{C312}$, $R^{C313}$, $R^{C314}$, $R^{C315}$, $R^{C316}$, $R^{C317}$, $R^{C318}$, $R^{C319}$, $R^{C320}$, $R^{C321}$, $R^{C322}$, $R^{C323}$, $R^{C324}$, $R^{C325}$, $R^{C326}$, $R^{C327}$, $R^{C328}$, $R^{C329}$, $R^{C330}$, $R^{C331}$, $R^{C332}$, $R^{C333}$, $R^{C334}$, $R^{C335}$, $R^{C336}$, $R^{C337}$, $R^{C338}$, $R^{C339}$, $R^{C340}$, $R^{C341}$, $R^{C342}$, $R^{C343}$, $R^{C344}$, $R^{C345}$, $R^{C346}$, $R^{C347}$, $R^{C348}$, $R^{C349}$, $R^{C350}$ unabhängig voneinander jeweils aus der Gruppe bestehend aus Wasserstoff, Halogen, (Halo)Alkylgruppe, (Halo)Alkoxygruppe, in einem Aspekt aus der Gruppe bestehend aus Wasserstoff, Alkylgruppe ausgewählt sind, und in einem weiteren Aspekt alle Wasserstoff, sind,

und wobei die durch ($ix^{C3}$) gekennzeichnete Bindung jeweils die Bindung zu $L^1$, $L^{1'}$, $L^{2'}$ bzw. $L^{3'}$ bezeichnet,

und die Reste $R^2$, $R^4$, $R^5$ aus der Gruppe bestehend aus den nachfolgend definierten Strukturen **(C401), (C402), (C403), (C404), (C405), (C406), (C407)** mit

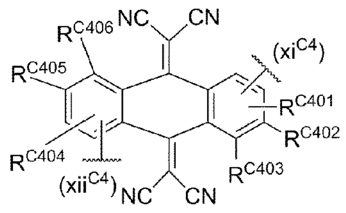 ; 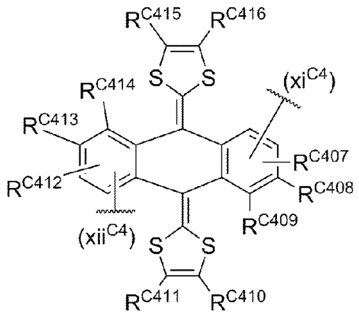 ; 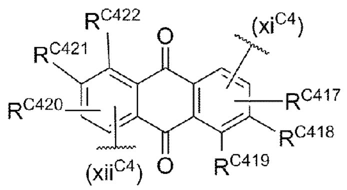 ;

**(C401)** **(C402)** **(C403)**

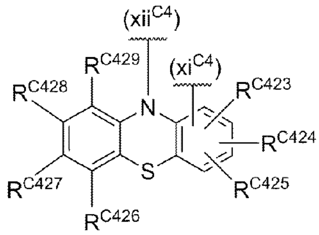 ; 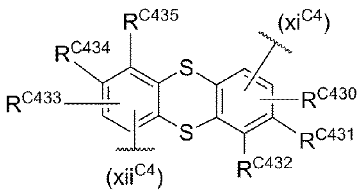 ; 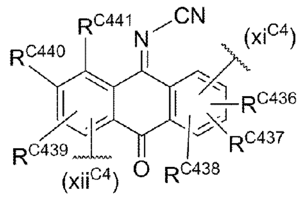 ;

**(C404)** **(C405)** **(C406)**

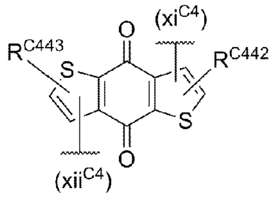 ;

**(C407)**

ausgewählt sind,

und wobei die durch ($xi^{C4}$) gekennzeichnete Bindung jeweils die Bindung zu $L^2$, $L^4$ bzw. $L^6$ bezeichnet,

und wobei die durch ($xii^{C4}$) gekennzeichnete Bindung die Bindung zu $L^3$, $L^5$ bzw. $L^7$ bezeichnet,

wobei $R^{C401}$, $R^{C402}$, $R^{C403}$, $R^{C404}$, $R^{C405}$, $R^{C406}$, $R^{C407}$, $R^{C408}$, $R^{C409}$, $R^{C410}$, $R^{C411}$, $R^{C412}$, $R^{C413}$, $R^{C414}$, $R^{C415}$, $R^{C416}$, $R^{C417}$, $R^{C418}$, $R^{C419}$, $R^{C420}$, $R^{C421}$, $R^{C422}$, $R^{C423}$, $R^{C424}$, $R^{C425}$, $R^{C426}$, $R^{C427}$, $R^{C428}$, $R^{C429}$, $R^{C430}$, $R^{C431}$, $R^{C432}$, $R^{C433}$, $R^{C434}$, $R^{C435}$, $R^{C436}$, $R^{C437}$, $R^{C438}$, $R^{C439}$, $R^{C440}$, $R^{C441}$, $R^{C442}$, $R^{C443}$ unabhängig voneinander jeweils aus der Gruppe bestehend aus Wasserstoff, Halogen, (Halo)Alkylgruppe, (Halo)Alkoxygruppe, und in einem weiteren Aspekt aus der Gruppe bestehend aus Wasserstoff, Alkylgruppe ausgewählt sind, und noch mehr bevorzugter alle Wasserstoff sind.

C.5 In einem weiteren Aspekt des vorgenannten Punktes C.4 bedeutet erfindungsgemäß in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.$\alpha$) und Punkt I.1.$\beta$) definiert ist, jeweils eine redoxaktive Anthrachinon-/ Carbazolfunktion **(C)** sind, dass $R^1$, $R^{1'}$, $R^{2'}$, $R^{3'}$ bzw. die Reste $R^1$, $R^{1'}$ bzw. der Rest $R^1$ aus der Gruppe bestehend aus den unter Punkt C.4 definierten Strukturen **(C301), (C302), (C303), (C304)** ausgewählt sind, und die Reste $R^2$, $R^4$, $R^5$ aus der Gruppe bestehend aus den unter Punkt C.4 definierten Strukturen **(C401), (C402), (C403), (C404)** ausgewählt sind, wobei ($ix^{C3}$), ($xi^{C4}$), ($xii^{C4}$) sowie die Reste $R^{C301}$, $R^{C302}$, $R^{C303}$, $R^{C304}$, $R^{C305}$, $R^{C306}$, $R^{C307}$, $R^{C308}$, $R^{C309}$, $R^{C310}$, $R^{C311}$, $R^{C312}$, $R^{C313}$, $R^{C314}$, $R^{C315}$, $R^{C316}$, $R^{C317}$, $R^{C318}$, $R^{C319}$, $R^{C320}$, $R^{C321}$, $R^{C322}$, $R^{C323}$, $R^{C324}$, $R^{C325}$, $R^{C326}$, $R^{C327}$, $R^{C328}$, $R^{C329}$, $R^{C330}$, $R^{C331}$, $R^{C332}$, $R^{C333}$, $R^{C401}$, $R^{C402}$, $R^{C403}$, $R^{C404}$, $R^{C405}$, $R^{C406}$, $R^{C407}$, $R^{C408}$, $R^{C409}$, $R^{C410}$, $R^{C411}$, $R^{C412}$, $R^{C413}$, $R^{C414}$, $R^{C415}$, $R^{C416}$, $R^{C417}$, $R^{C418}$, $R^{C419}$, $R^{C420}$,

$R^{C421}$, $R^{C422}$, $R^{C423}$, $R^{C424}$, $R^{C425}$, $R^{C426}$, $R^{C427}$, $R^{C428}$, $R^{C429}$ die unter Punkt C.4 definierte Bedeutung haben.

C.6 In einem weiteren Aspekt, wie er unter I.1.β) oder dem Punkt C.5 definiert ist, umfasst das vom Elektrodenmaterial gemäß dem ersten Aspekt der Erfindung umfasste, in der Hauptkette nichtkonjugierte, organisches Redox-Polymer P insbesondere $n^1$ miteinander verknüpfte Wiederholungseinheiten der chemischen Struktur **(I)** mit

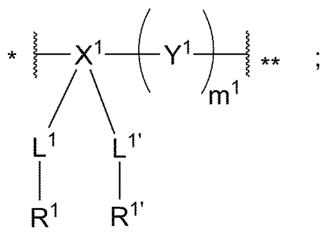

**(I)**

wobei $n^1$ eine ganze Zahl $\geq 4$, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, in einem weiteren Aspekt jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $R^1$, $R^{1'}$ unabhängig voneinander jeweils eine redoxaktive Anthrachinon/ Carbazolfunktion **(C)** sind, und $R^{1'}$ auch ein Wasserstoffrest sein kann, und in einem Aspekt $R^1$ eine redoxaktive Anthrachinon/ Carbazolfunktion **(C)** und $R^{1'}$ ein Wasserstoffrest ist,

und wobei die redoxaktive Anthrachinon/ Carbazolfunktion **(C)** in einem weiteren Aspekt jeweils eine der unter Punkt C.4 definierten Strukturen **(C301), (C302), (C303), (C304)** aufweist, in einem weiteren Aspekt jeweils eine der unter Punkt C.4 definierten Strukturen **(C301), (C302)** aufweist, in einem weiteren Aspekt eine Verbindung der unter Punkt C.4 definierte Struktur **(C301)** ist,

wobei in den Strukturen **(C301), (C302), (C303), (C304)** die Reste $R^{C301}$, $R^{C302}$, $R^{C303}$, $R^{C304}$, $R^{C305}$, $R^{C306}$, $R^{C307}$, $R^{C308}$, $R^{C309}$, $R^{C310}$, $R^{C311}$, $R^{C312}$, $R^{C313}$, $R^{C314}$, $R^{C315}$, $R^{C316}$, $R^{C317}$, $R^{C318}$, $R^{C319}$, $R^{C320}$, $R^{C321}$, $R^{C322}$, $R^{C323}$, $R^{C324}$, $R^{C325}$, $R^{C326}$, $R^{C327}$, $R^{C328}$, $R^{C329}$, $R^{C330}$, $R^{C331}$, $R^{C332}$, $R^{C333}$ unabhängig voneinander jeweils aus der Gruppe bestehend aus Wasserstoff, Halogen, (Halo)Alkylgruppe, (Halo)Alkoxygruppe und in einem weiteren Aspekt aus der Gruppe bestehend aus Wasserstoff, Alkylgruppe ausgewählt sind, und in einem weiteren Aspekt alle Wasserstoff, sind,

und wobei die durch ($ix^{C3}$) gekennzeichnete Bindung jeweils die Bindung zu $L^1$ bzw. $L^{1'}$ bezeichnet.

C.7 In einem weiteren Aspekt des vorgenannten Punktes C.6 ist $R^{1'}$ Wasserstoff und $R^1$ ist aus der Gruppe bestehend aus den Strukturen **(C501), (C502)** mit

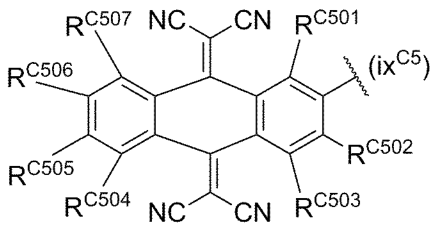

;

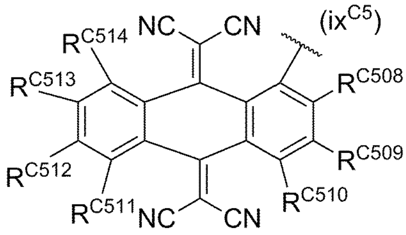

;

**(C501)** **(C502)**

ausgewählt, in einem weiteren Aspekt ist $R^1$ eine Verbindung der Struktur **(C501),** wobei $R^{C501}$, $R^{C502}$, $R^{C503}$, $R^{C504}$, $R^{C505}$, $R^{C506}$, $R^{C507}$, $R^{C508}$, $R^{C509}$, $R^{C510}$, $R^{C511}$, $R^{C512}$, $R^{C513}$, $R^{514}$ unabhängig voneinander jeweils aus der Gruppe bestehend aus Wasserstoff, Halogen, (Halo)Alkylgruppe, (Halo)Alkoxygruppe, in einem weiteren Aspekt aus der Gruppe bestehend aus Wasserstoff, Alkylgruppe ausgewählt sind, und in einem weiteren Aspekt alle Wasserstoff sind,
und wobei die durch ($ix^{C5}$) gekennzeichnete Bindung die Bindung zu $L^1$ bezeichnet.

I.1.1.4 Redoxaktive Dialkoxybenzolfunktion **(D)**

Im Sinne der Erfindung bedeutet "redoxaktive Dialkoxybenzolfunktion", ein redoxaktiver organischer Rest, der ein von einem Phenoxyrest abgeleitetes Grundgerüst umfasst.

D.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt 1.1.$\alpha$) und Punkt I.1.$\beta$) definiert ist, jeweils eine redoxaktive Dialkoxybenzolfunktion **(D)** sind, bedeutet dies erfindungsgemäß, dass die Reste $R^1$, $R^{1'}$, $R^{2'}$, $R^{3'}$ bzw. $R^1$, $R^{1'}$ bzw. $R^1$ unabhängig voneinander jeweils die folgende Struktur **(D1)** aufweisen und die Reste $R^2$, $R^4$, $R^5$ unabhängig voneinander jeweils die folgende Struktur **(D2)** aufweisen:

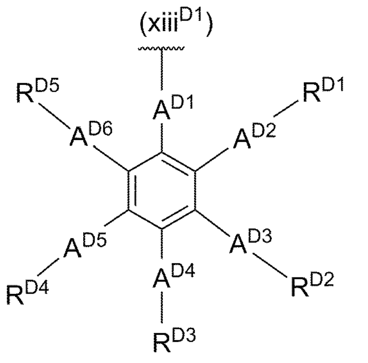

;

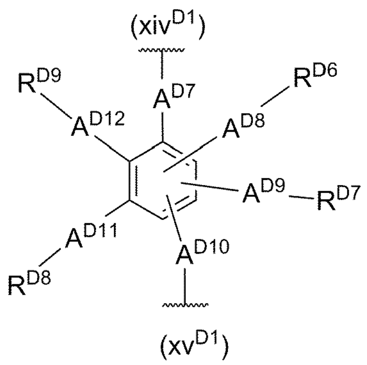

;

**(D1)** **(D2)**

wobei, im Falle dass $R^1$ = **(D1)**, die durch ($xiii^{D1}$) gekennzeichnete Bindung die Bindung zu $L^1$ darstellt,

wobei, im Falle dass $R^{1'}$ = **(D1)**, die durch ($xiii^{D1}$) gekennzeichnete Bindung die Bindung zu $L^{1'}$ darstellt,

im Falle dass $R^{2'}$ = **(D1)**, die durch ($xiii^{D1}$) gekennzeichnete Bindung die Bindung zu $L^{2'}$ darstellt, im Falle dass $R^{3'}$= **(D1)**, die durch ($xiii^{D1}$) gekennzeichnete Bindung die Bindung zu $L^{3'}$ darstellt, im Falle dass $R^2$ = **(D2)**, die durch ($xiv^{D1}$) gekennzeichnete Bindung die Bindung zu $L^2$ darstellt, und die durch ($xv^{D1}$) die Bindung zu $L^3$ darstellt,

im Falle dass $R^4$ = **(D2)**, die durch ($xiv^{D1}$) gekennzeichnete Bindung die Bindung zu $L^4$ darstellt, und die durch ($xv^{D1}$) die Bindung zu $L^5$ darstellt,

im Falle dass $R^5$ = **(D2)**, die durch ($xiv^{D1}$) gekennzeichnete Bindung die Bindung zu $L^6$ darstellt, und die durch ($xv^{D1}$) die Bindung zu $L^7$ darstellt,

und wobei mindestens zwei, in einem Aspekt genau zwei, der Reste $A^{D1}$, $A^{D2}$, $A^{D3}$, $A^{D4}$, $A^{D5}$, $A^{D6}$ unabhängig

voneinander jeweils aus der Gruppe bestehend aus -O-, -S- ausgewählt und die übrigen der Reste $A^{D1}$, $A^{D2}$, $A^{D3}$, $A^{D4}$, $A^{D5}$, $A^{D6}$ jeweils eine direkte Bindung sind,

und wobei mindestens zwei, in einem Aspekt genau zwei, der Reste $A^{D7}$, $A^{D8}$, $A^{D9}$, $A^{D10}$, $A^{D11}$, $A^{D12}$ unabhängig voneinander jeweils aus der Gruppe bestehend aus -O-, -S- ausgewählt und die übrigen der Reste $A^{D7}$, $A^{D8}$, $A^{D9}$, $A^{D10}$, $A^{D11}$, $A^{D12}$ jeweils eine direkte Bindung sind,

und wobei die Reste $R^{D1}$, $R^{D2}$, $R^{D3}$, $R^{D4}$, $R^{D5}$, $R^{D6}$, $R^{D7}$, $R^{D8}$, $R^{D9}$ unabhängig voneinander jeweils aus der Gruppe bestehend aus Wasserstoff, (hetero)aromatischer Rest, Alkylgruppe, Alkenylgruppe, Alkinylgruppe, Cycloalkylgruppe, in einem Aspekt aus der Gruppe bestehend aus Wasserstoff, (Halo)Alkylgruppe, Cycloalkylgruppe ausgewählt sind,

wobei der (hetero)aromatische Rest, die Alkylgruppe, die Alkenylgruppe, die Alkinylgruppe, die Cycloalkylgruppe jeweils mit mindestens einem Rest, der aus der Gruppe bestehend aus Nitrogruppe, $-NH_2$, -CN, -SH, -OH, Halogen ausgewählt ist und in einem Aspekt Halogen ist, substituiert sein können,

und wobei die Alkylgruppe, die Alkenylgruppe, die Alkinylgruppe, die Cycloalkylgruppe mindestens eine Gruppe, die aus der Gruppe bestehend aus Ether, Thioether, Aminoether, Carbonylgruppe, Carbonsäureester, Carbonsäureamidgruppe, Sulfonsäureester, Phosphorsäureester, in einem Aspekt aus der Gruppe bestehend aus Ether, Thioether ausgewählt ist, aufweisen können,

und wobei mindestens zwei, in einem Aspekt in *ortho*-Stellung zueinander stehende, Reste der Reste $R^{D1}$, $R^{D2}$, $R^{D3}$, $R^{D4}$, $R^{D5}$ bzw. der Reste $R^{D6}$, $R^{D7}$, $R^{D8}$, $R^{D9}$ jeweils auch durch einen zweiwertigen aliphatischen Rest verbrückt sein können, wobei der aliphatische Rest mit mindestens einer Gruppe, die aus der Gruppe bestehend aus Nitrogruppe, $-NH_2$, -CN, -SH, -OH, Halogen, Alkylgruppe ausgewählt ist, substituiert sein kann und mindestens eine Gruppe ausgewählt aus der Gruppe bestehend aus Ether, Thioether, Aminoether, Carbonylgruppe, Carbonsäureester, Carbonsäureamidgruppe, Sulfonsäureester, Phosphorsäureester, in einem Aspekt ausgewählt aus der Gruppe bestehend aus Ether, Thioether, aufweisen kann,

und wobei der Rest $R^{D1}$ im Falle dass $A^{D2}$ = direkte Bindung, der Rest $R^{D2}$ im Falle dass $A^{D3}$ = direkte Bindung, der Rest $R^{D3}$ im Falle dass $A^{D4}$ = direkte Bindung, der Rest $R^{D4}$ im Falle dass $A^{D5}$ = direkte Bindung, der Rest $R^{D5}$ im Falle dass $A^{D6}$ = direkte Bindung, der Rest $R^{D6}$ im Falle dass $A^{D8}$ = direkte Bindung, der Rest $R^{D7}$ im Falle dass $A^{D9}$ = direkte Bindung, der Rest $R^{D8}$ im Falle dass $A^{D11}$ = direkte Bindung, der Rest $R^{D9}$ im Falle dass $A^{D12}$ = direkte Bindung, unabhängig voneinander jeweils auch aus der Gruppe bestehend aus Nitrogruppe, -CN, -F, -Cl, -Br, -I, $-C(=O)NHR^{D13}$, $-NR^{D14}R^{D15}$, $-COOR^{D16}$, $-COR^{D17}$ ausgewählt sein können,

wobei $R^{D13}$, $R^{D14}$, $R^{D15}$, $R^{D16}$, $R^{D17}$ unabhängig voneinander jeweils aus der Gruppe bestehend aus Wasserstoff, (hetero)aromatischer Rest, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, ausgewählt sind.

D.2 In einem weiteren Aspekt des vorgenannten Punktes D.1 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt 1.1.$\alpha$) und Punkt I.1.$\beta$) definiert ist, jeweils eine redoxaktive Dialkoxybenzolfunktion **(D)** sind, dass die Reste $R^1$, $R^{1'}$, $R^{2'}$, $R^{3'}$ bzw. $R^1$, $R^{1'}$ bzw. $R^1$ unabhängig voneinander jeweils die unter Punkt D.1 definierte Struktur **(D1)** aufweisen und die Reste $R^2$, $R^4$, $R^5$ unabhängig voneinander jeweils die unter Punkt D.1 definierte Struktur **(D2)** aufweisen,

wobei ($xiii^{D1}$), ($xiv^{D1}$), ($xv^{D1}$) die unter Punkt D.1 definierte Bedeutung haben,

und wobei mindestens zwei, in einem Aspekt genau zwei, der Reste $A^{D1}$, $A^{D2}$, $A^{D3}$, $A^{D4}$, $A^{D5}$, $A^{D6}$ jeweils -O- sind und die übrigen von $A^{D1}$, $A^{D2}$, $A^{D3}$, $A^{D4}$, $A^{D5}$, $A^{D6}$ jeweils eine direkte Bindung sind,

und wobei mindestens zwei, in einem Aspekt genau zwei, der Reste $A^{D7}$, $A^{D8}$, $A^{D9}$, $A^{D10}$, $A^{D11}$, $A^{D12}$ jeweils -O- sind und die übrigen von $A^{D7}$, $A^{D8}$, $A^{D9}$, $A^{D10}$, $A^{D11}$, $A^{D12}$ jeweils eine direkte Bindung sind,

und wobei die Reste $R^{D1}$, $R^{D2}$, $R^{D3}$, $R^{D4}$, $R^{D5}$, $R^{D6}$, $R^{D7}$, $R^{D8}$, $R^{D9}$ unabhängig voneinander jeweils aus der Gruppe

bestehend aus Wasserstoff, Phenylrest, Benzylrest, Alkylgruppe, Cycloalkylgruppe ausgewählt sind,

wobei der Phenylrest, Benzylrest, Alkylgruppe, Cycloalkylgruppe jeweils mit Halogen substituiert sein kann,

und wobei die Alkylgruppe und die Cycloalkylgruppe mindestens eine Gruppe ausgewählt aus Ether, Thioether, aufweisen können,

und wobei mindestens zwei, in einem Aspekt in *ortho*-Stellung zueinander stehende, Reste der Reste $R^{D1}$, $R^{D2}$, $R^{D3}$, $R^{D4}$, $R^{D5}$ und der Reste $R^{D6}$, $R^{D7}$, $R^{D8}$, $R^{D9}$jeweils auch durch einen zweiwertigen Alkylenrest verbrückt sein können, der mindestens eine Gruppe ausgewählt aus Ether, Thioether, aufweisen kann,

und wobei der Rest $R^{D1}$ im Falle dass $A^{D2}$ = direkte Bindung, der Rest $R^{D2}$ im Falle dass $A^{D3}$ = direkte Bindung, der Rest $R^{D3}$ im Falle dass $A^{D4}$ = direkte Bindung, der Rest $R^{D4}$ im Falle dass $A^{D5}$ = direkte Bindung, der Rest $R^{D5}$ im Falle dass $A^{D6}$ = direkte Bindung, Rest $R^{D6}$ im Falle dass $A^{D8}$ = direkte Bindung, der Rest $R^{D7}$ im Falle dass $A^{D9}$ = direkte Bindung, der Rest $R^{D8}$ im Falle dass $A^{D11}$ = direkte Bindung, der Rest $R^{D9}$ im Falle dass $A^{D12}$ = direkte Bindung, unabhängig voneinander jeweils auch aus der Gruppe bestehend aus Nitrogruppe, -CN, -F, -Cl, -Br, -I, $-C(=O)NHR^{D18}$, $-NR^{D19}R^{D20}$, $-COOR^{D21}$, $-COR^{D22}$ ausgewählt sein können,

wobei $R^{D18}$, $R^{D19}$, $R^{D20}$, $R^{D21}$, $R^{D22}$ unabhängig voneinander jeweils aus der Gruppe bestehend aus Wasserstoff, (hetero)aromatischer Rest, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether aufweisender Alkylrest, ausgewählt sind.

D.3 In einem weiteren Aspekt des vorgenannten Punktes D.2 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt 1.1.$\alpha$) und Punkt I.1.$\beta$) definiert ist, jeweils eine redoxaktive Dialkoxybenzolfunktion (D) sind, dass die Reste $R^1$, $R^{1'}$, $R^{2'}$, $R^{3'}$ bzw. $R^1$, $R^{1'}$ bzw. $R^1$ unabhängig voneinander jeweils die nachfolgend definierte Struktur **(D3)** aufweisen und die Reste $R^2$, $R^4$, $R^5$ unabhängig voneinander jeweils die nachfolgend definierte Struktur **(D4)** aufweisen,

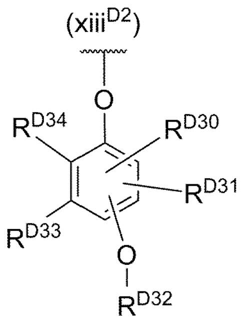
;
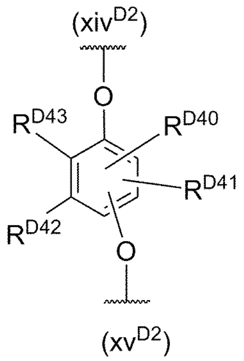
;

**(D3)** **(D4)**

wobei, im Falle dass $R^1$ = **(D3)**, die durch ($xiii^{D2}$) gekennzeichnete Bindung die Bindung zu $L^1$ darstellt,
im Falle dass $R^{1'}$ = **(D3)**, die durch ($xiii^{D2}$) gekennzeichnete Bindung die Bindung zu $L^{1'}$ darstellt, im Falle dass $R^{2'}$ = **(D3)**, die durch ($xiii^{D2}$) gekennzeichnete Bindung die Bindung zu $L^{2'}$ darstellt, im Falle dass $R^{3'}$= **(D3),** die durch ($xiii^{D2}$) gekennzeichnete Bindung die Bindung zu $L^{3'}$ darstellt, im Falle dass $R^2$ = **(D4)**, die durch ($xiv^{D2}$) gekennzeichnete Bindung die Bindung zu $L^2$ darstellt, und die durch ($xv^{D2}$) gekennzeichnete Bindung die Bindung zu $L^3$ darstellt,
im Falle dass $R^4$ = **(D4)**, die durch ($xiv^{D2}$) gekennzeichnete Bindung die Bindung zu $L^4$ darstellt, und die durch ($xv^{D2}$) gekennzeichnete Bindung die Bindung zu $L^5$ darstellt,
im Falle dass $R^5$ = **(D4)**, die durch ($xiv^{D2}$) gekennzeichnete Bindung die Bindung zu $L^6$ darstellt, und die durch ($xv^{D2}$) gekennzeichnete Bindung die Bindung zu $L^7$ darstellt,
und wobei $R^{D30}$, $R^{D31}$, $R^{D32}$, $R^{D33}$, $R^{D34}$, $R^{D40}$, $R^{D41}$, $R^{D42}$, $R^{D43}$ unabhängig voneinander jeweils aus der Gruppe bestehend aus Wasserstoff, Phenylrest, Benzylrest, (Halo)Alkylgruppe,
Cycloalkylgruppe, in einem Aspekt aus der Gruppe bestehend aus Wasserstoff, Alkylgruppe, Cycloalkylgruppe

ausgewählt sind,
und wobei die Reste $R^{D30}$, $R^{D31}$, $R^{D33}$, $R^{D34}$, $R^{D40}$, $R^{D41}$, $R^{D42}$, $R^{D43}$ jeweils auch Hydroxy sein können,
und wobei mindestens zwei, in einem Aspekt in *ortho*-Stellung zueinander stehende, Reste der Reste $R^{D30}$, $R^{D31}$, $R^{D32}$, $R^{D33}$, $R^{D34}$ und der Reste $R^{D40}$, $R^{D41}$, $R^{D42}$, $R^{D43}$ jeweils auch durch einen zweiwertigen Alkylenrest verbrückt sein können, der mindestens einen Ether aufweisen kann.

D.4 In einem weiteren Aspekt des vorgenannten Punktes D.3 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.$\alpha$) und Punkt I.1.$\beta$) definiert ist, jeweils eine redoxaktive Dialkoxybenzolfunktion **(D)** sind, dass die Reste $R^1$, $R^{1'}$, $R^{2'}$, $R^{3'}$ bzw. $R^1$, $R^{1'}$ bzw. $R^1$ unabhängig voneinander die unter Punkt D.3 definierte Struktur **(D3)** aufweisen und die Reste $R^2$, $R^4$, $R^5$, unabhängig voneinander jeweils die unter Punkt D.3 definierte Struktur **(D4)** aufweisen,

wobei (xiii$^{D2}$), (xiv$^{D2}$) und (xv$^{D2}$) die unter Punkt D.3 genannte Bedeutung haben,

und wobei $R^{D30}$, $R^{D31}$, $R^{D33}$, $R^{D34}$, $R^{D40}$, $R^{D41}$, $R^{D42}$, $R^{D43}$ unabhängig voneinander jeweils aus der Gruppe bestehend aus Wasserstoff, Alkylgruppe, Cycloalkylgruppe, Hydroxy ausgewählt sind,

und $R^{D32}$ aus der Gruppe bestehend aus Wasserstoff, Alkylgruppe, Cycloalkylgruppe ausgewählt sind,

und in einem Aspekt $R^{D30}$, $R^{D31}$, $R^{D32}$, $R^{D33}$, $R^{D34}$, $R^{D40}$, $R^{D41}$, $R^{D42}$, $R^{D43}$ unabhängig voneinander jeweils aus der Gruppe bestehend aus Wasserstoff, Alkylgruppe, Cycloalkylgruppe ausgewählt sind.

D.5 In einem weiteren Aspekt des vorgenannten Punktes D.4 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.$\alpha$) und Punkt I.1.$\beta$) definiert ist, jeweils eine redoxaktive Dialkoxybenzolfunktion **(D)** sind, dass die Reste $R^1$, $R^{1'}$, $R^{2'}$, $R^{3'}$ bzw. $R^1$, $R^{1'}$ bzw. $R^1$ unabhängig voneinander die nachfolgend genannte Struktur **(D5)** aufweisen und $R^2$, $R^4$, $R^5$, unabhängig voneinander jeweils die nachfolgend genannte Struktur **(D6)** aufweisen,

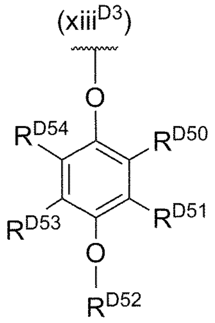
;
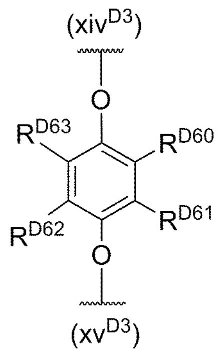
;

**(D5)** **(D6)**

wobei, im Falle dass $R^1$ = **(D5)**, die durch (xiii$^{D3}$) gekennzeichnete Bindung die Bindung zu $L^1$ darstellt,
im Falle dass $R^{1'}$ = **(D5),** die durch (xiii$^{D3}$) gekennzeichnete Bindung die Bindung zu $L^{1'}$ darstellt, im Falle dass $R^{2'}$ = **(D5),** die durch (xiii$^{D3}$) gekennzeichnete Bindung die Bindung zu $L^{2'}$ darstellt, im Falle dass $R^{3'}$= **(D5),** die durch (xiii$^{D3}$) gekennzeichnete Bindung die Bindung zu $L^{3'}$ darstellt, im Falle dass $R^2$ = **(D6),** die durch (xiv$^{D3}$) gekennzeichnete Bindung die Bindung zu $L^2$ darstellt, und die durch (xv$^{D3}$) gekennzeichnete Bindung die Bindung zu $L^3$ darstellt,
im Falle dass $R^4$ = **(D6)**, die durch (xiv$^{D3}$) gekennzeichnete Bindung die Bindung zu $L^4$ darstellt, und die durch (xv$^{D3}$) gekennzeichnete Bindung die Bindung zu $L^5$ darstellt,
im Falle dass $R^5$ = **(D6)**, die durch (xiv$^{D3}$) gekennzeichnete Bindung die Bindung zu $L^6$ darstellt, und die durch (xv$^{D3}$) gekennzeichnete Bindung die Bindung zu $L^7$ darstellt,
und wobei $R^{D50}$, $R^{D51}$, $R^{D52}$, $R^{D53}$, $R^{D54}$, $R^{D60}$, $R^{D61}$, $R^{D62}$ $R^{D63}$ unabhängig voneinander jeweils aus der Gruppe bestehend aus Wasserstoff, Alkylgruppe mit 1 bis 6 Kohlenstoffatome, Cycloalkylgruppe mit 3 bis 10 Kohlenstoffatomen ausgewählt sind.

D.6 In einem weiteren Aspekt des vorgenannten Punktes D.5 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.α) und Punkt I.1.β) definiert ist, jeweils eine redoxaktive Dialkoxybenzolfunktion **(D)** sind, dass die Reste $R^1$, $R^{1'}$, $R^{2'}$, $R^{3'}$ bzw. $R^1$, $R^{1'}$ bzw. $R^1$ unabhängig voneinander die unter Punkt D.5 genannte Struktur **(D5)** aufweisen und $R^2$, $R^4$, $R^5$, unabhängig voneinander jeweils die unter Punkt D.5 genannte Struktur **(D6)** aufweisen,

wobei ($xiii^{D3}$), ($xiv^{D3}$) und ($xv^{D3}$) die unter Punkt D.5 definierte Bedeutung haben,

und wobei $R^{D50}$, $R^{D53}$, $R^{D60}$, $R^{D62}$ unabhängig voneinander jeweils aus der Gruppe bestehend aus Wasserstoff, Alkylgruppe mit 1 bis 6 Kohlenstoffatome, Cycloalkylgruppe mit 3 bis 10 Kohlenstoffatomen, ausgewählt sind, in einem Aspekt $R^{D50}$, $R^{D53}$, $R^{D60}$, $R^{D62}$ alle Wasserstoff sind,

und wobei $R^{D51}$, $R^{D54}$, $R^{D61}$, $R^{D63}$ unabhängig voneinander jeweils aus der Gruppe bestehend aus Wasserstoff, Alkylgruppe mit 1 bis 6 Kohlenstoffatome, Cycloalkylgruppe mit 3 bis 10 Kohlenstoffatomen, in einem Aspekt aus der Gruppe bestehend aus Alkylgruppe mit 1 bis 6 Kohlenstoffatome, Cycloalkylgruppe mit 3 bis 10 Kohlenstoffatomen, in einem weiteren Aspekt aus der Gruppe bestehend aus Alkylgruppe mit 1 bis 10 Kohlenstoffatomen, Cycloalkylgruppe mit 3 bis 10 Kohlenstoffatomen ausgewählt sind, und in einem weiteren Aspekt $R^{D51}$, $R^{D54}$, $R^{D61}$, $R^{D63}$ unabhängig voneinander jeweils eine Alkylgruppe mit 3 bis 10 Kohlenstoffatomen sind, in einem weiteren Aspekt alle *tert*-Butyl sind,

und wobei $R^{D52}$ ausgewählt ist aus der Gruppe bestehend aus Wasserstoff, Alkylgruppe mit 1 bis 10 Kohlenstoffatomen ist, in einem Aspekt Methyl ist.

D.7 In einem weiteren Aspekt, wie er unter I.1.β) oder dem Punkt D.6 definiert ist, umfasst das vom Elektrodenmaterial gemäß dem ersten Aspekt der Erfindung umfasste, in der Hauptkette nichtkonjugierte, organisches Redox-Polymer **P** insbesondere $n^1$ miteinander verknüpfte Wiederholungseinheiten der chemischen Struktur **(I)** mit

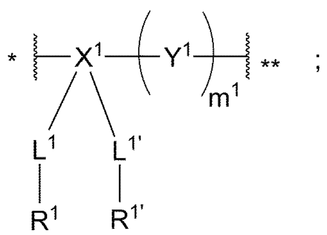

**(I)**

wobei $n^1$ eine ganze Zahl ≥ 4, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl ≥ 0, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, in einem weiteren Aspekt jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $R^1$, $R^{1'}$ unabhängig voneinander jeweils eine redoxaktive Dialkoxybenzolfunktion **(D)** sind, und $R^{1'}$ auch ein Wasserstoffrest sein kann, und in einem Aspekt $R^1$ eine redoxaktive Dialkoxybenzolfunktion **(D)** ist und $R^{1'}$ ein Wasserstoffrest ist,

und wobei die redoxaktive Dialkoxybenzolfunktion **(D)** in einem weiteren Aspekt die unter Punkt D.5 definierte

Struktur **(D5)** aufweist,

in welcher $R^{D50}$ , $R^{D53}$ unabhängig voneinander jeweils aus der Gruppe bestehend aus Wasserstoff, Alkylgruppe mit 1 bis 6 Kohlenstoffatome, Cycloalkylgruppe mit 3 bis 10 Kohlenstoffatomen, ausgewählt sind, in einem Aspekt $R^{D50}$, $R^{D53}$ beide Wasserstoff sind,

und in welcher $R^{D51}$, $R^{D54}$ unabhängig voneinander jeweils aus der Gruppe bestehend aus Wasserstoff, Alkylgruppe mit 1 bis 6 Kohlenstoffatome, Cycloalkylgruppe mit 3 bis 10 Kohlenstoffatomen, in einem Aspekt aus der Gruppe bestehend aus Alkylgruppe mit 1 bis 6 Kohlenstoffatome, Cycloalkylgruppe mit 3 bis 10 Kohlenstoffatomen, in einem weiteren Aspekt aus der Gruppe bestehend aus Alkylgruppe mit 1 bis 10 Kohlenstoffatomen, Cycloalkylgruppe mit 3 bis 10 Kohlenstoffatomen ausgewählt sind, in einem weiteren Aspekt $R^{D51}$, $R^{D54}$ unabhängig voneinander jeweils eine Alkylgruppe mit 3 bis 10 Kohlenstoffatomen sind, in einem weiteren Aspekt $R^{D51}$, $R^{D54}$ beide *tert*-Butyl sind,

und wobei $R^{D52}$ aus der Gruppe bestehend aus Wasserstoff, Alkylgruppe mit 1 bis 10 Kohlenstoffatomen ausgewählt ist, in einem Aspekt Methyl ist,

und wobei die durch ($xiii^{D3}$) gekennzeichnete Bindung für $R^1$ die Bindung zu $L^1$, für $R^{1'}$ die Bindung zu $L^{1'}$ bezeichnet.

I.1.1.5 Redoxaktive Benzochinonfunktion **(E)**

Im Sinne der Erfindung bedeutet "redoxaktive Benzochinonfunktion" ein redoxaktiver organischer Rest, der ein von Benzochinon abgeleitetes Grundgerüst umfasst.

E.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.α) und Punkt I.1.β) definiert ist, jeweils eine redoxaktive Benzochinonfunktion **(E)** sind, bedeutet dies erfindungsgemäß, dass die Reste $R^1$, $R^{1'}$, $R^{2'}$, $R^{3'}$ bzw. $R^1$, $R^{1'}$ bzw. $R^1$ unabhängig voneinander jeweils aus der Gruppe bestehend aus den folgenden Strukturen **(E1)**, **(E2)**, **(E3)** mit

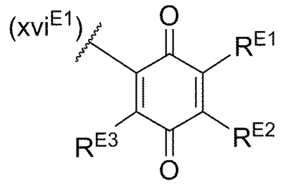
;
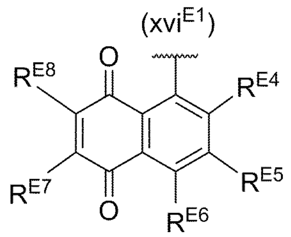
;
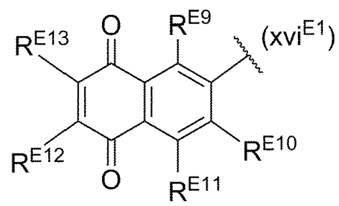
;

**(E1)** **(E2)** **(E3)**

ausgewählt sind,
und die Reste $R^2$, $R^4$, $R^5$ unabhängig voneinander jeweils aus der Gruppe bestehend aus den folgenden Strukturen **(E4)**, **(E5)**, **(E6)**, **(E7)**, **(E8)**, **(E9)** mit

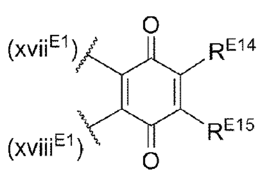
;
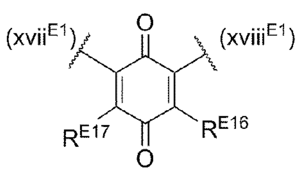
;
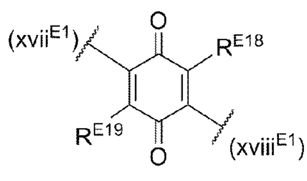
;

**(E4)** **(E5)** **(E6)**

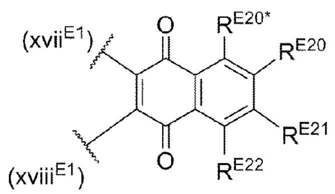 ; 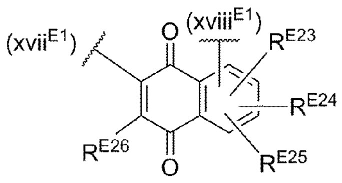 ; 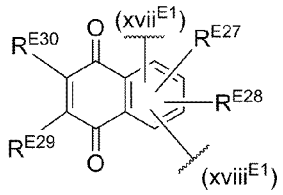 ;

**(E7)** **(E8)** **(E9)**

ausgewählt sind,

wobei,

im Falle dass $R^1$ = **(E1)**, **(E2)** oder **(E3)**, die durch (xvi$^{E1}$) gekennzeichnete Bindung die Bindung zu $L^1$ darstellt,
im Falle dass $R^{1'}$ = **(E1)**, **(E2)** oder **(E3)**, die durch (xvi$^{E1}$) gekennzeichnete Bindung die Bindung zu $L^{1'}$ darstellt,
im Falle dass $R^{2'}$ = **(E1)**, **(E2)** oder **(E3)**, die durch (xvi$^{E1}$) gekennzeichnete Bindung die Bindung zu $L^{2'}$ darstellt,
im Falle dass $R^{3'}$= **(E1)**, **(E2)** oder **(E3)**, die durch (xvi$^{E1}$) gekennzeichnete Bindung die Bindung zu $L^{3'}$ darstellt,
im Falle dass $R^2$ = **(E4)**, **(E5)**, **(E6)**, **(E7)**, **(E8)** oder **(E9)**, die durch (xvii$^{E1}$) gekennzeichnete Bindung die Bindung zu $L^2$ darstellt und die durch (xviii$^{E1}$) gekennzeichnete Bindung die Bindung zu $L^3$ darstellt,
im Falle dass $R^4$ = **(E4)**, **(E5)**, **(E6)**, **(E7)**, **(E8)** oder **(E9)**, die durch (xvii$^{E1}$) gekennzeichnete Bindung die Bindung zu $L^4$ darstellt und die durch (xviii$^{E1}$) gekennzeichnete Bindung die Bindung zu $L^5$ darstellt,
im Falle dass $R^5$ = **(E4)**, **(E5)**, **(E6)**, **(E7)**, **(E8)** oder **(E9)**, die durch (xvii$^{E1}$) gekennzeichnete Bindung die Bindung zu $L^6$ darstellt und die durch (xviii$^{E1}$) gekennzeichnete Bindung die Bindung zu $L^7$ darstellt,
und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10}$, $R^{E11}$, $R^{E12}$, $R^{E13}$, $R^{E14}$, $R^{E15}$, $R^{E16}$, $R^{E17}$ , $R^{E18}$, $R^{E19}$, $R^{E20}$, $R^{E20*}$ , $R^{E21}$, $R^{E22}$, $R^{E23}$, $R^{E24}$, $R^{E25}$, $R^{E26}$, $R^{E27}$, $R^{E28}$, $R^{E29}$, $R^{E30}$ unabhängig voneinander jeweils aus der Gruppe bestehend aus Wasserstoff, -OH, -SH, Nitrogruppe, -CN, -F, -Cl, -Br, -I, -C(=O)NHR$^{E31}$, -NR$^{E32}$R$^{E33}$, -COOR$^{E34}$, -COR$^{E35}$, Sulfonsäureester, Phosphorsäureester, (hetero)aromatischer Rest, Alkylgruppe, Alkenylgruppe, Alkinylgruppe, in einem Aspekt aus der Gruppe bestehend aus Wasserstoff, Alkylgruppe, -OH, -NR$^{E32}$R$^{E33}$, -COOR$^{E34}$, -COR$^{E35}$, Sulfonsäureester, in einem weiteren Aspekt aus der Gruppe bestehend aus Wasserstoff, -OH, -COOR$^{E34}$, -COR$^{E35}$, Sulfonsäureester ausgewählt sind,

wobei der (hetero)aromatische Rest, die Alkylgruppe, die Alkenylgruppe, die Alkinylgruppe jeweils mit mindestens einer Gruppe ausgewählt aus Nitrogruppe, $-NH_2$, -CN, -SH, -OH, Halogen substituiert sein können und wobei die Alkylgruppe, die Alkenylgruppe, die Alkinylgruppe mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisen können,

und wobei $R^{E31}$, $R^{E32}$, $R^{E33}$, $R^{E34}$, $R^{E35}$ unabhängig voneinander jeweils aus der Gruppe bestehend aus Wasserstoff, (hetero)aromatischer Rest, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, in einem Aspekt aus der Gruppe bestehend aus Wasserstoff, Alkylgruppe ausgewählt sind,

und wobei zwei in *ortho*-Stellung zueinander stehende Reste der Reste $R^{E1}$, $R^{E2}$, $R^{E4}$, $R^{E5}$, $R^{E6}$, $R^{E7}$, $R^{E8}$, $R^{E10}$, $R^{E11}$, $R^{E12}$, $R^{E13}$, $R^{E14}$, $R^{E15}$, $R^{E20}$, $R^{E20*}$, $R^{E21}$, $R^{E22}$, $R^{E23}$, $R^{E24}$, $R^{E25}$, $R^{E27}$, $R^{E28}$, $R^{E29}$, $R^{E30}$ mit einem gegebenenfalls mit mindestens einer Gruppe ausgewählt aus Nitrogruppe, $-NH_2$, -CN, -SH, -OH, Halogen, Alkylgruppe substituierten und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisenden zweiwertigen aliphatischen Rest, in einem Aspekt Alkylenrest, verbrückt sein können.

E.2 In einem weiteren Aspekt des vorgenannten Punktes E.1 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.α) und Punkt I.1.β) definiert ist, jeweils eine redoxaktive Benzochinonfunktion **(E)** sind, dass die Reste $R^1$, $R^{1'}$, $R^{2'}$, $R^{3'}$ bzw. $R^1$, $R^{1'}$ bzw. $R^1$ unabhängig voneinander jeweils aus den unter Punkt E.1 definierten Strukturen **(E1)**, **(E2)**, **(E3)** ausgewählt sind und die Reste $R^2$, $R^4$, $R^5$ unabhängig voneinander jeweils aus den unter Punkt E.1 definierten Strukturen **(E4)**, **(E5)**, **(E6)**, **(E7)**, **(E8)**, **(E9)** ausgewählt sind,

wobei ($xvi^{E1}$), ($xvii^{E1}$), ($xviii^{E1}$) die unter Punkt E.1 definierte Bedeutung haben,

und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10,}$ $R^{E11}$, $R^{E12}$, $R^{E13}$, $R^{E14}$, $R^{E15}$, $R^{E16,}$ $R^{E17}$ , $R^{E18}$ $R^{E19}$, $R^{E20}$ $R^{E20*}$ , $R^{E21}$, $R^{E22}$ $R^{E23}$ $R^{E24}$ $R^{E25}$ $R^{E26}$ $R^{E27}$ $R^{E28}$, $R^{E29}$ $R^{E30}$ aus der Gruppe bestehend aus Wasserstoff, Alkylgruppe, -OH, -SH, -$NR^{E36}R^{E37}$, -$COOR^{E38}$, -$COR^{E39}$, Sulfonsäureester, in einem weiteren Aspekt aus der Gruppe bestehend aus Wasserstoff, -OH, - $COOR^{E38}$, -$COR^{E39}$, Sulfonsäureester ausgewählt sind und in einem weiteren Aspekt alle Wasserstoff sind,

wobei die Alkylgruppe mit mindestens einer Gruppe ausgewählt aus Nitrogruppe, -$NH_2$, -CN, -SH, - OH, Halogen substituiert sein kann und mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisen kann,

und wobei die Reste $R^{E36}$, $R^{E37}$, $R^{E38}$, $R^{E39}$ unabhängig voneinander jeweils aus der Gruppe bestehend aus Wasserstoff, gegebenenfalls mit mindestens einer Gruppe ausgewählt aus Nitrogruppe, -$NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, in einem Aspekt aus der Gruppe bestehend aus Wasserstoff, Alkylgruppe, bei der es sich in einem Aspekt um eine Alkylgruppe mit 1 bis 6 Kohlenstoffatomen, in einem weiteren Aspekt um eine Alkylgruppe ausgewählt aus der Gruppe bestehend aus Methyl, Ethyl, *n*-Propyl, *iso*-Propyl handelt, ausgewählt sind.

E.3 In einem weiteren Aspekt des vorgenannten Punktes E.2 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.$\alpha$) und Punkt I.1.$\beta$) definiert ist, jeweils eine redoxaktive Benzochinonfunktion **(E)** sind, dass die Reste $R^1$, $R^{1'}$, $R^{2'}$, $R^{3'}$ bzw. $R^1$, $R^{1'}$ bzw. $R^1$ unabhängig voneinander jeweils aus den unter Punkt E.1 definierten Strukturen **(E1)**, **(E2)**, **(E3)** ausgewählt sind und die Reste $R^2$, $R^4$, $R^5$ unabhängig voneinander jeweils aus den unter Punkt E.1 definierten Strukturen **(E4)**, **(E5)**, **(E6)**, **(E7)**, **(E8)**, **(E9)** ausgewählt sind,

wobei ($xvi^{E1}$), ($xvii^{E1}$), ($xviii^{E1}$) die unter Punkt E.1 definierte Bedeutung haben,

und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10,}$ $R^{E11}$, $R^{E12}$, $R^{E13}$, $R^{E14}$, $R^{E15}$, $R^{E16}$, $R^{E17}$ , $R^{E18}$ $R^{E19}$, $R^{E20}$ $R^{E20*}$ , $R^{E21}$, $R^{E22}$, $R^{E23}$, $R^{E24}$, $R^{E25}$, $R^{E26}$, $R^{E27}$, $R^{E28}$, $R^{E29}$, $R^{E30}$ aus der Gruppe bestehend aus Wasserstoff, -OH, -$COOR^{E40}$, -$COR^{E41}$, Sulfonsäureester ausgewählt sind und in einem weiteren Aspekt alle Wasserstoff sind,

und wobei die Reste $R^{E40}$, $R^{E41}$ unabhängig voneinander jeweils aus der Gruppe bestehend aus Wasserstoff, Alkylgruppe, bei der es sich in einem Aspekt um eine Alkylgruppe mit 1 bis 6 Kohlenstoffatomen, in einem weiteren Aspekt um eine Alkylgruppe ausgewählt aus der Gruppe bestehend aus Methyl, Ethyl, *n*-Propyl, *iso*-Propyl handelt, ausgewählt sind.

E.4 In einem weiteren Aspekt des vorgenannten Punktes E.3 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.$\alpha$) und Punkt I.1.$\beta$) definiert ist, jeweils eine redoxaktive Benzochinonfunktion **(E)** sind, dass die Reste $R^1$, $R^{1'}$, $R^{2'}$, $R^{3'}$ bzw. $R^1$, $R^{1'}$ bzw. $R^1$ unabhängig voneinander jeweils aus den unter Punkt E.1 definierten Strukturen **(E1)**, **(E2)**, **(E3)** ausgewählt sind und die Reste $R^2$, $R^4$, $R^5$ unabhängig voneinander jeweils aus den unter Punkt E.1 definierten Strukturen **(E4)**, **(E5)**, **(E6)**, **(E8)**, **(E9)** ausgewählt sind,

wobei ($xvi^{E1}$), ($xvii^{E1}$), ($xviii^{E1}$) die unter Punkt E.1 definierte Bedeutung haben,

und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10,}$ $R^{E11}$, $R^{E12}$, $R^{E13}$, $R^{E14}$, $R^{E15}$, $R^{E16}$, $R^{E17}$, $R^{E18}$, $R^{E19}$, $R^{E23}$, $R^{E24}$, $R^{E25}$, $R^{E26}$, $R^{E27}$, $R^{E28}$, $R^{E29}$, $R^{E30}$ aus der Gruppe bestehend aus Wasserstoff, -OH, -$COOR^{E50}$, -$COR^{E51}$, Sulfonsäureester ausgewählt sind und in einem weiteren Aspekt alle Wasserstoff sind,

und wobei die Reste $R^{E50}$, $R^{E51}$ unabhängig voneinander jeweils aus der Gruppe bestehend aus Wasserstoff, Alkylgruppe, bei der es sich in einem Aspekt um eine Alkylgruppe mit 1 bis 6 Kohlenstoffatomen, in einem weiteren Aspekt um eine Alkylgruppe ausgewählt aus der Gruppe bestehend aus Methyl, Ethyl, *n*-Propyl, *iso*-Propyl handelt, ausgewählt sind.

E.5 In einem weiteren Aspekt des vorgenannten Punktes E.4 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.α) und Punkt I.1.β) definiert ist, jeweils eine redoxaktive Benzochinonfunktion **(E)** sind, dass die Reste $R^1$, $R^{1'}$, $R^{2'}$, $R^{3'}$ bzw. $R^1$, $R^{1'}$ bzw. $R^1$ unabhängig voneinander jeweils aus den unter Punkt E.1 definierten Strukturen **(E1)**, **(E2)**, **(E3)** ausgewählt sind und die Reste $R^2$, $R^4$, $R^5$ unabhängig voneinander jeweils aus den unter Punkt E.1 definierten Strukturen **(E6)**, **(E9)** ausgewählt sind,

wobei ($xvi^{E1}$), ($xvii^{E1}$), ($xviii^{E1}$) die unter Punkt E.1 definierte Bedeutung haben,

und wobei in **(E9)** die beiden durch ($xvii^{E1}$) und ($xviii^{E1}$) gekennzeichnete Bindung in einem Aspekt in *para*-Stellung zueinander stehen,

und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10,}$ $R^{E11}$, $R^{E12}$, $R^{E13}$, $R^{E18}$, $R^{E19}$, $R^{E27}$, $R^{E28}$, $R^{E29}$, $R^{E30}$ aus der Gruppe bestehend aus Wasserstoff, -OH, -$COOR^{E60}$, -$COR^{E61}$, Sulfonsäureester ausgewählt sind und in einem weiteren Aspekt alle Wasserstoff sind,

und wobei die Reste $R^{E60}$, $R^{E61}$ unabhängig voneinander jeweils aus der Gruppe bestehend aus Wasserstoff, Alkylgruppe, bei der es sich in einem Aspekt um eine Alkylgruppe mit 1 bis 6 Kohlenstoffatomen, in einem weiteren Aspekt um eine Alkylgruppe ausgewählt aus der Gruppe bestehend aus Methyl, Ethyl, *n*-Propyl, *iso*-Propyl handelt, ausgewählt sind.

E.6 In einem weiteren Aspekt des ersten Aspekts der Erfindung, wie er unter I.1.β) definiert ist, umfasst das vom Elektrodenmaterial gemäß dem ersten Aspekt der Erfindung umfasste, in der Hauptkette nichtkonjugierte, organisches Redox-Polymer **P** insbesondere $n^1$ miteinander verknüpfte Wiederholungseinheiten der chemischen Struktur **(I)** mit

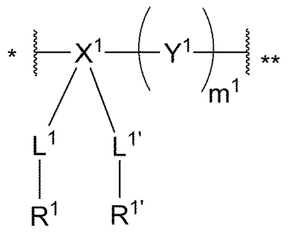 ;

**(I)**

wobei $n^1$ eine ganze Zahl ≥ 4, bevorzugter eine ganz Zahl im Bereich 4 bis $10^6$, bevorzugter eine ganze Zahl im Bereich 10 bis $10^5$, in einem weiteren Aspekt eine ganze Zahl im Bereich 100 bis $10^4$ ist,

wobei m' eine ganze Zahl ≥ 0, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit in einem Aspekt verknüpft ist,

wobei $R^1$, $R^{1'}$ unabhängig voneinander jeweils eine redoxaktive Benzochinonfunktion **(E)**, sind, und $R^{1'}$ auch ein Wasserstoffrest sein kann, und in einem Aspekt $R^1$ eine redoxaktive Benzochinonfunktion **(E)** ist und $R^{1'}$ ein Wasserstoffrest ist,

und wobei die redoxaktive Benzochinonfunktion **(E)** in einem weiteren Aspekt eine der unter Punkt E.1 gezeigten Strukturen **(E1)**, **(E2)**, **(E3)** aufweist,

wobei im Falle dass $R^1$ = **(E1)**, **(E2)** oder **(E3)**, die durch ($xvi^{E1}$) gekennzeichnete Bindung die Bindung zu $L^1$ darstellt,

und im Falle dass $R^{1'}$ = **(E1)**, **(E2)** oder **(E3)**, die durch ($xvi^{E1}$) gekennzeichnete Bindung die Bindung zu $L^{1'}$ darstellt,

und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10}$, $R^{E11}$, $R^{E12}$, $R^{E13}$ unabhängig voneinander jeweils aus der Gruppe bestehend aus Wasserstoff, -OH, -COOR$^{E70}$, -COR$^{E71}$, Sulfonsäureester ausgewählt sind und in einem weiteren Aspekt alle Wasserstoff sind,

und wobei die Reste $R^{E70}$, $R^{E71}$ unabhängig voneinander jeweils aus der Gruppe bestehend aus Wasserstoff, Alkylgruppe, bei der es sich in einem Aspekt um eine Alkylgruppe mit 1 bis 6 Kohlenstoffatomen, in einem weiteren Aspekt um eine Alkylgruppe ausgewählt aus der Gruppe bestehend aus Methyl, Ethyl, *n*-Propyl, *iso*-Propyl handelt, ausgewählt sind.

I.1.1.6 Redoxaktive Triphenylaminfunktion **(G)**

Im Sinne der Erfindung bedeutet "redoxaktive Triphenylaminfunktion", ein redoxaktiver organischer Rest, der ein von Triphenylamin abgeleitetes Grundgerüst umfasst.

G.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.α) und Punkt I.1.β) definiert ist, jeweils eine redoxaktive Triphenylaminfunktion **(G)** sind, bedeutet dies, erfindungsgemäß dass die Reste $R^1$, $R^{1'}$, $R^{2'}$, $R^{3'}$ bzw. $R^1$, $R^{1'}$ bzw. $R^1$ unabhängig voneinander jeweils die folgende Struktur **(G1)** aufweisen und die Reste $R^2$, $R^4$, $R^5$, unabhängig voneinander jeweils aus der Gruppe bestehend aus den folgenden Strukturen **(G2)**, **(G3)** mit

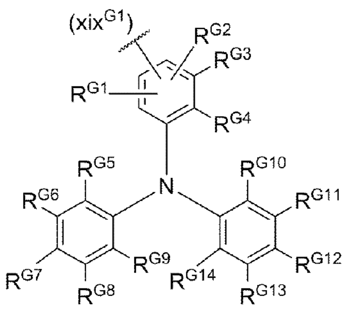
;
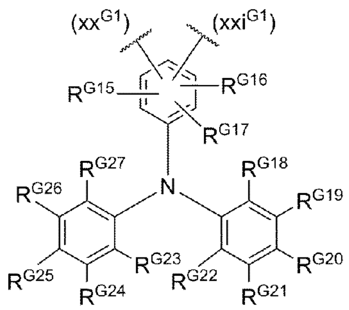
;
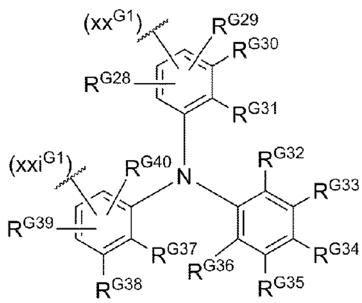
;

**(G1)** **(G2)** **(G3)**

ausgewählt sind,
wobei,
im Falle dass $R^1$ = **(G1),** die durch ($xix^{G1}$) gekennzeichnete Bindung die Bindung zu $L^1$ darstellt,
im Falle dass $R^{1'}$ = **(G1),** die durch ($xix^{G1}$) gekennzeichnete Bindung die Bindung zu $L^{1'}$ darstellt,
im Falle dass $R^{2'}$ = **(G1),** die durch ($xix^{G1}$) gekennzeichnete Bindung die Bindung zu $L^{2'}$ darstellt,
im Falle dass $R^{3'}$ = **(G1),** die durch ($xix^{G1}$) gekennzeichnete Bindung die Bindung zu $L^{3'}$ darstellt,
im Falle dass $R^2$ = **(G2)** oder **(G3)**, die durch ($xx^{G1}$) gekennzeichnete Bindung die Bindung zu $L^2$ darstellt und die durch ($xxi^{G1}$) gekennzeichnete Bindung die Bindung zu $L^3$ darstellt,
im Falle dass $R^4$ = **(G2)** oder **(G3)**, die durch ($xx^{G1}$) gekennzeichnete Bindung die Bindung zu $L^4$ darstellt und die durch ($xxi^{G1}$) gekennzeichnete Bindung die Bindung zu $L^5$ darstellt,
im Falle dass $R^5$ = **(G2)** oder **(G3)**, die durch ($xx^{G1}$) gekennzeichnete Bindung die Bindung zu $L^6$ darstellt und die durch ($xxi^{G1}$) gekennzeichnete Bindung die Bindung zu $L^7$ darstellt,
wobei die Reste $R^{G1}$, $R^{G2}$, $R^{G3}$, $R^{G4}$, $R^{G5}$, $R^{G6}$ $R^{G7}$, $R^{G8}$, $R^{G9}$, $R^{G10}$, $R^{G11}$ $R^{G12}$, $R^{G13}$, $R^{G14}$, $R^{G15}$, $R^{G16}$, $R^{G17}$, $R^{G18}$, $R^{G19}$, $R^{G26}$, $R^{G21}$, $R^{G22}$, $R^{G23}$, $R^{G24}$, $R^{G25}$, $R^{G26}$, $R^{G27}$, $R^{G28}$, $R^{G29}$, $R^{G30}$, $R^{G31}$, $R^{G32}$, $R^{G33}$, $R^{G34}$, $R^{G35}$, $R^{G36}$, $R^{G37}$, $R^{G38}$, $R^{G39}$, $R^{G40}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, (hetero)aromatischer Rest, wobei der (hetero)aromatische Rest mit mindestens einer Gruppe ausgewählt aus Halogen (Halo)Alkyl, (Halo)alkoxy, Cyano, Carbonsäureester, substituiert sein kann,
in einem Aspekt aus der Gruppe bestehend aus Wasserstoff, (Halo)Alkylgruppe, (Halo)Alkoxygruppe, (Halo)cycloalkylgruppe, Cyano, Carbonsäureester, Thiophen ausgewählt sind, in einem Aspekt aus der Gruppe bestehend aus Wasserstoff, Cyano, Alkylgruppe,

in einem weiteren Aspekt aus der Gruppe bestehend aus Wasserstoff, Alkoxygruppe, Cyano ausgewählt sind, wobei in einem weiteren Aspekt die Reste $R^1$, $R^{1'}$, $R^{2'}$, $R^{3'}$ bzw. $R^1$, $R^{1'}$ bzw. $R^1$ unabhängig voneinander jeweils die Struktur **(G1)** aufweisen und die Reste $R^2$, $R^4$, $R^5$, unabhängig voneinander jeweils die Struktur **(G2)** aufweisen, wobei die Reste $R^{G7}$, $R^{G12}$, $R^{G20}$, $R^{G25}$ unabhängig voneinander jeweils aus der Gruppe bestehend aus Wasserstoff, Alkoxy, Cyano, Alkylgruppe ausgewählt sind und die Reste $R^{G1}$, $R^{G2}$, $R^{G3}$, $R^{G4}$, $R^{G5}$, $R^{G6}$ $R^{G8}$, $R^{G9}$, $R^{G10}$, $R^{G11}$, $R^{G13}$, $R^{G14}$, $R^{G15}$, $R^{G16}$, $R^{G17}$, $R^{G18}$, $R^{G19}$, $R^{G21}$, $R^{G22}$, $R^{G23}$, $R^{G24}$, $R^{G26}$, $R^{G27}$ jeweils Wasserstoff sind.

G.2 In einem weiteren Aspekt des ersten Aspekts der Erfindung, wie er unter I.1.β) definiert ist, umfasst das vom Elektrodenmaterial gemäß dem ersten Aspekt der Erfindung umfasste, in der Hauptkette nichtkonjugierte, organisches Redox-Polymer **P** insbesondere $n^1$ miteinander verknüpfte Wiederholungseinheiten der chemischen Struktur **(I)** mit

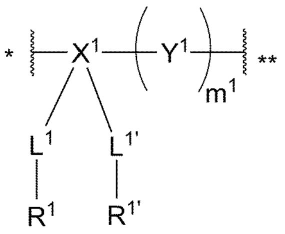

;

**(I)**

wobei $n^1$ eine ganze Zahl ≥ 4, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl ≥ 0, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, in einem weiteren Aspekt jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $R^1$, $R^{1'}$ unabhängig voneinander jeweils eine redoxaktive Triphenylaminfunktion (G) sind, und $R^{1'}$ auch ein Wasserstoffrest sein kann, und in einem Aspekt $R^1$ eine redoxaktive Triphenylaminfunktion **(G)** ist und $R^{1'}$ ein Wasserstoffrest ist,

und wobei die redoxaktive Triphenylaminfunktion **(G)** in einem weiteren Aspekt die unter Punkt G.1 definierte Struktur **(G1)** aufweist,

in welcher die Reste $R^{G1}$, $R^{G2}$, $R^{G3}$, $R^{G4}$, $R^{G5}$, $R^{G6}$, $R^{G7}$, $R^{G8}$, $R^{G9}$, $R^{G10}$, $R^{G11}$, $R^{G12}$, $R^{G13}$, $R^{G14}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, (hetero)aromatischer Rest, wobei der (hetero)aromatische Rest mit mindestens einer Gruppe ausgewählt aus Halogen (Halo)Alkyl, (Halo)alkoxy, Cyano, Carbonsäureester, substituiert sein kann,

in einem Aspekt aus der Gruppe bestehend aus Wasserstoff, (Halo)Alkylgruppe, (Halo)Alkoxygruppe, (Halo)cycloalkylgruppe, Cyano, Carbonsäureester, Thiophen,

in einem weiteren Aspekt aus der Gruppe bestehend aus Wasserstoff, Alkylgruppe, Cyano, Alkoxygruppe ausgewählt sind,

und besonders in einem Aspekt die Reste $R^{G7}$, $R^{G12}$ unabhängig voneinander jeweils aus der Gruppe bestehend aus Alkoxy, Cyano, Wasserstoff, Alkylgruppe ausgewählt sind und die Reste $R^{G1}$, $R^{G2}$, $R^{G3}$, $R^{G4}$, $R^{G5}$, $R^{G6}$, $R^{G8}$,

$R^{G9}$, $R^{G10}$, $R^{G11}$, $R^{G13}$, $R^{G14}$ jeweils Wasserstoff sind,

und wobei im Falle dass $R^1$ = **(G1),** die durch ($xix^{G1}$) gekennzeichnete Bindung die Bindung zu $L^1$ darstellt,

im Falle dass $R^{1'}$ = **(G1),** die durch ($xix^{G1}$) gekennzeichnete Bindung die Bindung zu $L^{1'}$ darstellt.

G.3 In einem weiteren Aspekt des vorgenannten Punktes G. ist die redoxaktive Triphenylaminfunktion **(G)** aus den Strukturen **(G4), (G5), (G6)** mit

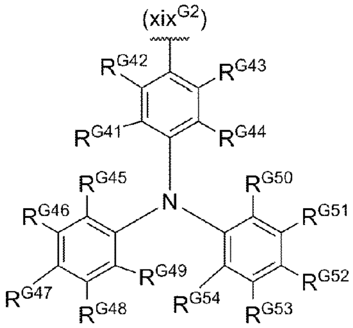
;
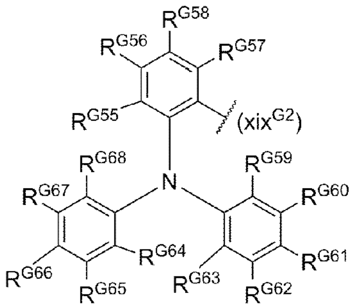
;
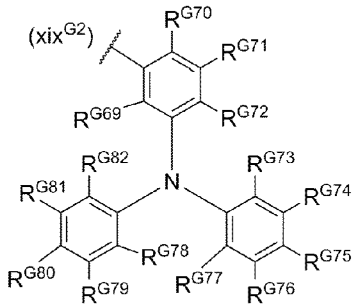
;

**(G4)** **(G5)** **(G6)**

ausgewählt,

wobei $R^{G41}$, $R^{G42}$, $R^{G43}$, $R^{G44}$, $R^{G45}$, $R^{G46}$, $R^{G47}$, $R^{G48}$, $R^{G49}$, $R^{G50}$, $R^{G51}$, $R^{G52}$, $R^{G53}$, $R^{G54}$, $R^{G55}$, $R^{G56}$, $R^{G57}$, $R^{G58}$, $R^{G59}$, $R^{G60}$, $R^{G61}$, $R^{G62}$, $R^{G63}$, $R^{G64}$, $R^{G65}$, $R^{G66}$, $R^{G67}$ $R^{G68}$, $R^{G69}$, $R^{G70}$, $R^{G71}$, $R^{G72}$, $R^{G73}$, $R^{G74}$, $R^{G75}$, $R^{G76}$, $R^{G77}$, $R^{G78}$, $R^{G79}$, $R^{G80}$, $R^{G81}$, $R^{G82}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, (hetero)aromatischer Rest, wobei der (hetero)aromatische Rest mit mindestens einer Gruppe ausgewählt aus Halogen (Halo)Alkyl, (Halo)alkoxy, Cyano, Carbonsäureester, substituiert sein kann,

in einem Aspekt aus der Gruppe bestehend aus Wasserstoff, (Halo)Alkylgruppe, (Halo)Alkoxygruppe, (Halo)cycloalkylgruppe, Cyano, Carbonsäureester, Thiophen,

in einem weiteren Aspekt aus der Gruppe bestehend aus Wasserstoff, Cyano, Alkylgruppe, Alkoxygruppe ausgewählt sind, in einem weiteren Aspekt alle Wasserstoff sind,

in einem weiteren Aspekt die Reste $R^{G47}$, $R^{G52}$, $R^{G61}$, $R^{G66}$, $R^{G75}$, $R^{G80}$ unabhängig voneinander jeweils aus der Gruppe bestehend aus Alkoxy, Cyano, Wasserstoff, Alkylgruppe ausgewählt sind und $R^{G41}$, $R^{G42}$, $R^{G43}$, $R^{G44}$, $R^{G45}$, $R^{G46}$, $R^{G48}$, $R^{G49}$, $R^{G50}$, $R^{G51}$, $R^{G53}$, $R^{G54}$, $R^{G55}$, $R^{G56}$, $R^{G57}$, $R^{G58}$, $R^{G59}$, $R^{G60}$, $R^{G62}$, $R^{G63}$, $R^{G64}$, $R^{G65}$, $R^{G67}$, $R^{G68}$, $R^{G69}$, $R^{G70}$, $R^{G71}$, $R^{G72}$, $R^{G73}$, $R^{G74}$, $R^{G76}$, $R^{G77}$, $R^{G78}$, $R^{G79}$, $R^{G81}$, $R^{G82}$ jeweils Wasserstoff sind,

und wobei die durch ($xix^{G2}$) gekennzeichnete Bindung jeweils die Bindung zu $L^1$ darstellt.

G.4 In einem weiteren Aspekt des vorgenannten Punktes G.3 ist die redoxaktive Triphenylaminfunktion **(G)** die unter Punkt G.3 definierte Struktur **(G4)**, wobei die Reste $R^{G41}$, $R^{G42}$, $R^{G43}$, $R^{G44}$, $R^{G45}$, $R^{G46}$, $R^{G47}$, $R^{G48}$, $R^{G49}$, $R^{G50}$, $R^{G51}$, $R^{G52}$, $R^{G53}$, $R^{G54}$, unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, (hetero)aromatischer Rest, wobei der (hetero)aromatische Rest mit mindestens einer Gruppe ausgewählt aus Halogen (Halo)Alkyl, (Halo)alkoxy, Cyano, Carbonsäureester, substituiert sein kann,

in einem Aspekt aus der Gruppe bestehend aus Wasserstoff, (Halo)Alkylgruppe, (Halo)Alkoxygruppe, (Halo)cycloalkylgruppe, Cyano, Carbonsäureester, Thiophen,

in einem weiteren Aspekt aus der Gruppe bestehend aus Wasserstoff, Cyano, Alkylgruppe, Alkoxygruppe ausgewählt sind, in einem weiteren Aspekt alle Wasserstoff sind,

in einem weiteren Aspekt die Reste $R^{G47}$, $R^{G52}$ unabhängig voneinander jeweils aus der Gruppe bestehend aus Alkoxy, Cyano, Wasserstoff, Alkylgruppe ausgewählt sind und die Reste $R^{G41}$, $R^{G42}$, $R^{G43}$, $R^{G44}$, $R^{G45}$, $R^{G46}$, $R^{G48}$, $R^{G49}$, $R^{G50}$, $R^{G51}$, $R^{G53}$, $R^{G54}$, jeweils Wasserstoff sind,

und wobei die durch ($xix^{G2}$) gekennzeichnete Bindung jeweils die Bindung zu $L^1$ darstellt.

1.1.1.7 Redoxaktive Viologenfunktion **(H)**

Im Sinne der Erfindung bedeutet "redoxaktive Viologenfunktion", ein redoxaktiver organischer Rest, der ein von Viologen abgeleitetes Grundgerüst umfasst.

H.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.α) und Punkt I.1.β) definiert ist, jeweils eine redoxaktive Viologenfunktion **(H)** sind, bedeutet dies erfindungsgemäß, dass die Reste $R^1$, $R^{1'}$, $R^{2'}$, $R^{3'}$ bzw. $R^1$, $R^{1'}$ bzw. $R^1$ unabhängig voneinander jeweils aus der Gruppe bestehend aus den Strukturen **(H1), (H2)** ausgewählt sind,
und die Reste $R^2$, $R^4$, $R^5$ unabhängig voneinander jeweils aus der Gruppe bestehend aus den Strukturen **(H3), (H4), (H5), (H6), (H7)** ausgewählt sind, wobei

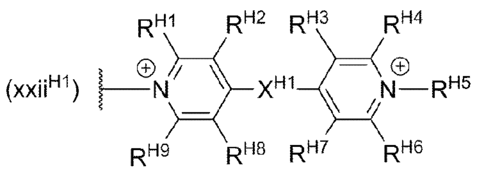
;
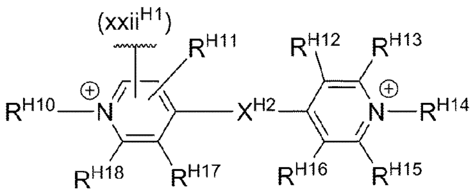
;

**(H1)** **(H2)**

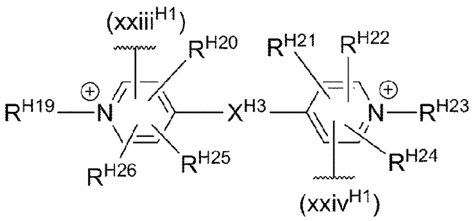
;
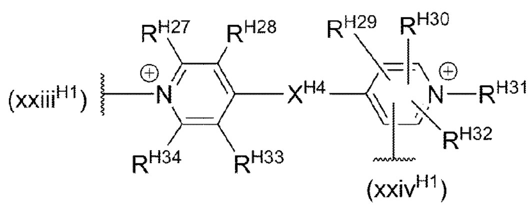
;

**(H3)** **(H4)**

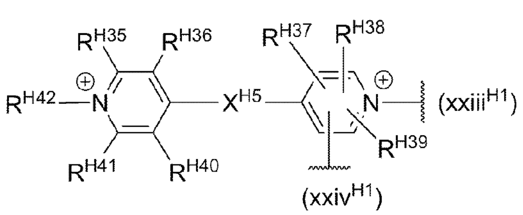
;
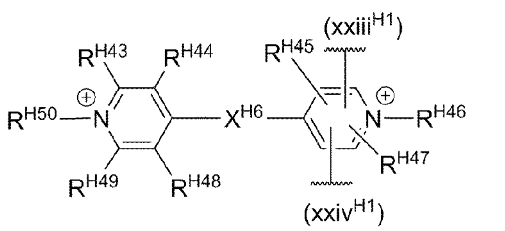
;

**(H5)** **(H6)**

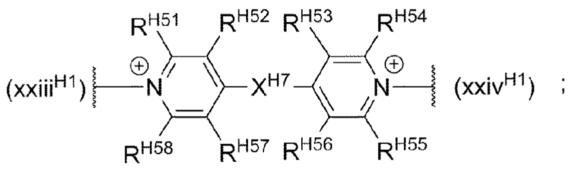

**(H7)**

im Falle dass $R^1$ = **(H1)** oder **(H2),** die durch (xxii$^{H1}$) gekennzeichnete Bindung die Bindung zu $L^1$ darstellt, im Falle dass $R^{1'}$ = **(H1)** oder **(H2),** die durch (xxii$^{H1}$) gekennzeichnete Bindung die Bindung zu $L^{1'}$ darstellt, im Falle dass $R^{2'}$ = **(H1)** oder **(H2),** die durch (xxii$^{H1}$) gekennzeichnete Bindung die Bindung zu $L^{2'}$ darstellt, im Falle dass $R^{3'}$ = **(H1)** oder **(H2),** die durch (xxii$^{H1}$) gekennzeichnete Bindung die Bindung zu $L^{3'}$ darstellt, im Falle dass $R^2$ = **(H3), (H4), (H5), (H6)** oder **(H7),** die durch (xxiii$^{H1}$) gekennzeichnete Bindung die Bindung zu $L^2$ darstellt und die durch (xxiv$^{H1}$) gekennzeichnete Bindung die Bindung zu $L^3$ darstellt, im Falle dass $R^4$ = **(H3), (H4), (H5), (H6)** oder **(H7),** die durch (xxiii$^{H1}$) gekennzeichnete Bindung die Bindung zu $L^4$ darstellt und die durch (xxiv$^{H1}$) gekennzeichnete Bindung die Bindung zu $L^5$ darstellt, im Falle dass $R^5$ = **(H3), (H4), (H5), (H6)** oder **(H7),** die durch (xxiii$^{H1}$) gekennzeichnete Bindung die Bindung zu $L^6$ darstellt und die durch (xxiv$^{H1}$) gekennzeichnete Bindung die Bindung zu $L^7$ darstellt,

und wobei die Reste $R^{H1}$, $R^{H2}$, $R^{H3}$, $R^{H4}$, $R^{H6}$, $R^{H7}$, $R^{H8}$, $R^{H9}$, $R^{H11}$, $R^{H12}$, $R^{H13}$, $R^{H15}$, $R^{H16}$ $R^{H17}$, $R^{H18}$, $R^{H20}$, $R^{H21}$, $R^{H22}$, $R^{H24}$, $R^{H25}$, $R^{H26}$, $R^{H27}$, $R^{H28}$, $R^{H29}$, $R^{H30}$, $R^{H32}$, $R^{H33}$, $R^{H34}$, $R^{H35}$, $R^{H36}$, $R^{H37}$, $R^{H38}$, $R^{H39}$, $R^{H40}$, $R^{H41}$, $R^{H43}$, $R^{H44}$, $R^{H45}$, $R^{H47}$, $R^{H48}$, $R^{H49}$, $R^{H51}$, $R^{H52}$, $R^{H53}$, $R^{H54}$, $R^{H55}$, $R^{H56}$, $R^{H57}$, $R^{H58}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)alkyl, Halogen ausgewählt sind und besonders in einem Aspekt alle Wasserstoff sind,

und wobei die Reste $R^{H5}$, $R^{H10}$, $R^{H14}$, $R^{H19}$, $R^{H23}$, $R^{H31}$, $R^{H42}$, $R^{H46}$, $R^{H50}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, in einem Aspekt aus der Gruppe bestehend aus Wasserstoff, (Halo)alkyl, Halogen ausgewählt sind und besonders in einem Aspekt alle Wasserstoff sind,

und wobei die Reste $X^{H1}$, $X^{H2}$, $X^{H3}$, $X^{H4}$, $X^{H5}$, $X^{H6}$, $X^{H7}$ unabhängig voneinander jeweils aus der Gruppe bestehend aus direkte Bindung, zweiwertiger konjugierter aliphatischer Rest, zweiwertiger konjugierter (hetero)aromatischer Rest ausgewählt ist, in einem Aspekt aus direkte Bindung, zweiwertiger (hetero)aromatischer Rest, bevorzugter aus der Gruppe bestehend aus direkte Bindung, Phenylen ausgewählt sind und besonders in einem Aspekt jeweils eine direkte Bindung sind.

H.2 In t einem Aspekt des vorgenannten Punktes H.1 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.$\alpha$) und Punkt I.1.$\beta$) definiert ist, jeweils eine redoxaktive Viologenfunktion **(H)** sind, dass die Reste $R^1$, $R^{1'}$, $R^{2'}$, $R^{3'}$ bzw. $R^1$, $R^{1'}$ bzw. $R^1$ unabhängig voneinander jeweils die unter Punkt H.1 definierte Struktur **(H1)** mit den unter Punkt H.1 definierten Bedeutungen von $X^{H1}$, $R^{H1}$, $R^{H2}$, $R^{H3}$, $R^{H4}$, $R^{H5}$, $R^{H6}$, $R^{H7}$, $R^{H8}$, $R^{H9}$ aufweisen und $R^2$, $R^4$, $R^5$ unabhängig voneinander jeweils die unter Punkt H.1 definierte Struktur **(H7)** mit den unter Punkt H.1 genannten Bedeutungen von $X^{H7}$, $R^{H51}$, $R^{H52}$, $R^{H53}$, $R^{H54}$, $R^{H55}$, $R^{H56}$, $R^{H57}$, $R^{H58}$ aufweisen.

H.3 In einem weiteren Aspekt der Erfindung, wie er unter I.1.$\beta$) definiert ist, umfasst das vom Elektrodenmaterial gemäß dem ersten Aspekt der Erfindung umfasste, in der Hauptkette nichtkonjugierte, organisches Redox-Polymer **P** insbesondere $n^1$ miteinander verknüpfte Wiederholungseinheiten der chemischen Struktur **(I)** mit

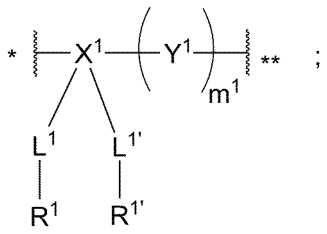

**(I)**

wobei $n^1$ eine ganze Zahl $\geq 4$, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, in einem weiteren Aspekt jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

in einem Aspekt

wobei $R^1$, $R^{1'}$ unabhängig voneinander jeweils eine redoxaktive Viologenfunktion **(H),** sind, und $R^{1'}$ auch ein Wasserstoffrest sein kann, und in einem Aspekt $R^1$ eine redoxaktive Viologenfunktion **(H)** ist und $R^{1'}$ ein Wasserstoffrest ist,

und wobei die redoxaktive Viologenfunktion **(H)** in einem weiteren Aspekt die unter Punkt H.1 gezeigte Struktur **(H1)** aufweist,

wobei $R^{H1}$, $R^{H2}$, $R^{H3}$, $R^{H4}$, $R^{H5}$, $R^{H6}$, $R^{H7}$, $R^{H8}$, $R^{H9}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)alkyl, Halogen ausgewählt sind, und besonders in einem Aspekt alle Wasserstoff sind,

und wobei der Rest $X^{H1}$ aus der Gruppe bestehend aus direkte Bindung, zweiwertiger konjugierter aliphatischer Rest, zweiwertiger konjugierter (hetero)aromatischer Rest ausgewählt ist, in einem Aspekt aus der Gruppe bestehend aus direkte Bindung, zweiwertiger (hetero)aromatischer Rest, in einem weiteren Aspekt aus der Gruppe bestehend aus direkte Bindung, Phenylen ausgewählt ist und besonders in einem Aspekt eine direkte Bindung ist,

und wobei,

im Falle dass $R^1$ = **(H1)** die durch ($xxii^{H1}$) gekennzeichnete Bindung die Bindung zu $L^1$ darstellt,

im Falle dass $R^{1'}$ = **(H1)** die durch ($xxii^{H1}$) gekennzeichnete Bindung die Bindung zu $L^{1'}$ darstellt.

1.1.1.8 Redoxaktive Ferrocenfunktion **(J)**

Im Sinne der Erfindung bedeutet "redoxaktive Ferrocenfunktion", ein redoxaktiver organischer Rest, der ein von Ferrocen abgeleitetes Grundgerüst umfasst.

J.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er

unter Punkt I.1.α) und Punkt I.1.β) definiert ist, jeweils eine redoxaktive Ferrocenfunktion **(J)** sind, bedeutet dies erfindungsgemäß, dass die Reste $R^1$, $R^{1'}$, $R^{2'}$, $R^{3'}$ bzw. $R^1$, $R^{1'}$ bzw. $R^1$ unabhängig voneinander jeweils die folgende Struktur **(J1)** aufweisen und die Reste $R^2$, $R^4$, $R^5$, unabhängig voneinander jeweils aus der Gruppe bestehend aus den folgenden Strukturen **(J2), (J3), (J4)** mit

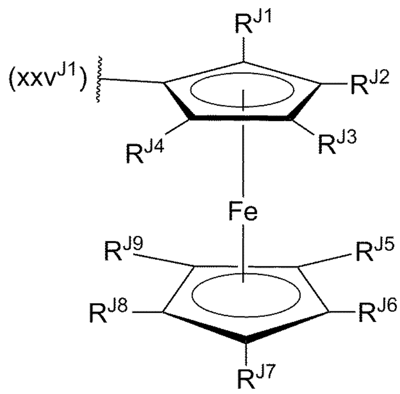

;

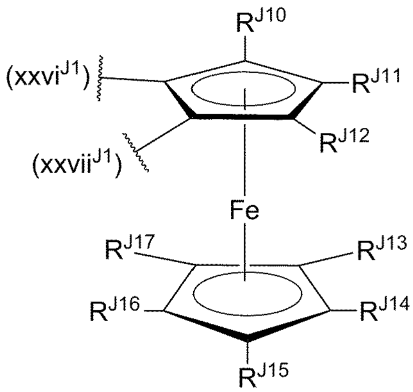

;

**(J1)** **(J2)**

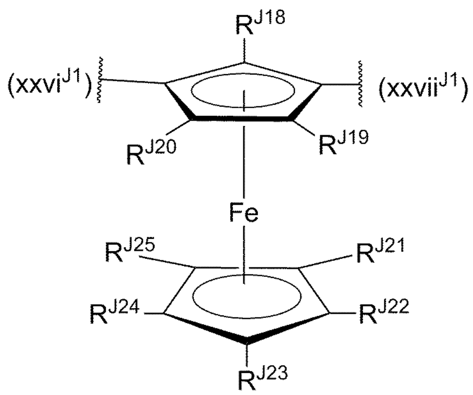

;

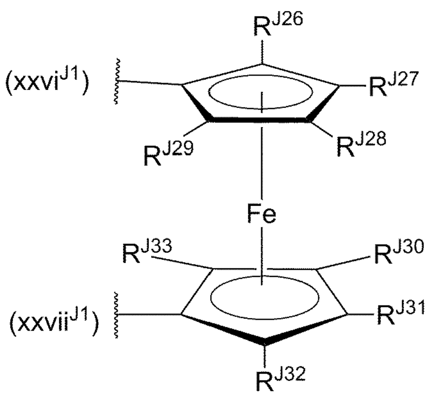

;

**(J3)** **(J4)**

ausgewählt sind,
wobei,
im Falle dass $R^1$ = **(J1),** die durch ($xxv^{J1}$) gekennzeichnete Bindung die Bindung zu $L^1$ darstellt,
im Falle dass $R^{1'}$ = **(J1),** die durch ($xxv^{J1}$) gekennzeichnete Bindung die Bindung zu $L^{1'}$ darstellt,
im Falle dass $R^{2'}$ = **(J1),** die durch ($xxv^{J1}$) gekennzeichnete Bindung die Bindung zu $L^{2'}$ darstellt,
im Falle dass $R^{3'}$ = **(J1),** die durch ($xxv^{J1}$) gekennzeichnete Bindung die Bindung zu $L^{3'}$ darstellt,
im Falle dass $R^2$ = **(J2), (J3)** oder **(J4),** die durch ($xxvi^{J1}$) gekennzeichnete Bindung die Bindung zu $L^2$ darstellt und die durch ($xxvii^{J1}$) gekennzeichnete Bindung die Bindung zu $L^3$ darstellt,
im Falle dass $R^4$ = **(J2), (J3)** oder **(J4),** die durch ($xxvi^{J1}$) gekennzeichnete Bindung die Bindung zu $L^4$ darstellt und die durch ($xxvii^{J1}$) gekennzeichnete Bindung die Bindung zu $L^5$ darstellt,
im Falle dass $R^5$ = **(J2), (J3)** oder **(J4),** die durch ($xxvi^{J1}$) gekennzeichnete Bindung die Bindung zu $L^6$ darstellt und die durch ($xxvii^{J1}$) gekennzeichnete Bindung die Bindung zu $L^7$ darstellt,
und wobei die Reste $R^{J1}$, $R^{J2}$, $R^{J3}$, $R^{J4}$, $R^{J5}$, $R^{J6}$, $R^{J7}$, $R^{J8}$, $R^{J9}$, $R^{J10}$, $R^{J11}$, $R^{J12}$, $R^{J13}$, $R^{J14}$, $R^{J15}$, $R^{J16}$, $R^{J17}$ , $R^{J18}$ $R^{J19}$, $R^{J20}$, $R^{J21}$, $R^{J22}$, $R^{J23}$, $R^{J24}$, $R^{J25}$, $R^{J26}$, $R^{J27}$, $R^{J28}$, $R^{J29}$, $R^{J30}$, $R^{J31}$, $R^{J32}$, $R^{J33}$ jeweils unabhängig voneinander aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)Alkylgruppe, bevorzugter aus der Gruppe bestehend aus Wasserstoff, Alkylgruppe, bei der es sich in einem Aspekt um Methyl handelt, ausgewählt sind, besonders in einem

Aspekt alle Wasserstoff sind.

J.2 In einem weiteren Aspekt des ersten Aspekts der Erfindung, wie er unter I.1.β) definiert ist, umfasst das vom Elektrodenmaterial gemäß dem ersten Aspekt der Erfindung umfasste, in der Hauptkette nichtkonjugierte, organisches Redox-Polymer **P** insbesondere $n^1$ miteinander verknüpfte Wiederholungseinheiten der chemischen Struktur **(I)** mit

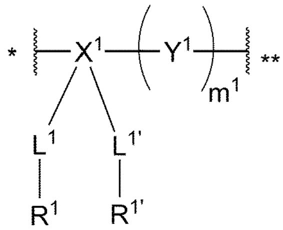 ;

**(I)**

wobei $n^1$ eine ganze Zahl ≥ 4, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl ≥ 0, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, in einem weiteren Aspekt jeweils 0 ist,

wobei die Wiederholungseinheiten der chemischen Struktur **(I)** innerhalb des Polymers P gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $R^1$, $R^{1'}$ unabhängig voneinander jeweils eine redoxaktive Ferrocenfunktion **(J),** sind, und $R^{1'}$ auch ein Wasserstoffrest sein kann, und in einem Aspekt $R^1$ eine redoxaktive Ferrocenfunktion **(J)** ist und $R^{1'}$ ein Wasserstoffrest ist,

und wobei die redoxaktive Ferrocenfunktion **(J)** in einem weiteren Aspekt die unter Punkt J.1 definierte Struktur **(J1)** aufweist,

wobei die Reste $R^{J1}$, $R^{J2}$, $R^{J3}$, $R^{J4}$, $R^{J5}$, $R^{J6}$, $R^{J7}$, $R^{J8}$, $R^{J9}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)Alkylgruppe, in einem weiteren Aspekt aus der Gruppe bestehend aus Wasserstoff, Alkylgruppe, bei der es sich in einem Aspekt um Methyl handelt, ausgewählt sind, besonders in einem Aspekt alle Wasserstoff sind,

und wobei,

im Falle dass $R^1$ = **(J1),** die durch ($xxv^{J1}$) gekennzeichnete Bindung die Bindung zu $L^1$ darstellt, und im Falle dass $R^{1'}$ = **(J1),** die durch ($xxv^{J1}$) gekennzeichnete Bindung die Bindung zu $L^{1'}$ darstellt.

1.1.2 Linkereinheiten

$L^1$, $L^2$, $L^3$, $L^4$, $L^5$, $L^6$, $L^7$, $L^{1'}$, $L^{2'}$, $L^{3'}$ bzw. $L^1$, $L^{1'}$ sind gemäß dem ersten Aspekt der Erfindung, wie er unter Punkt I.1.α) bzw. Punkt I.1.β) definiert ist, in den Strukturen **(I), (II)** bzw. **(III)** unabhängig voneinander jeweils ausgewählt aus der Gruppe bestehend aus direkte Bindung, organische Linkereinheit.

In den Fällen, in denen $L^1$, $L^2$, $L^3$, $L^4$, $L^5$, $L^6$, $L^7$, $L^{1'}$, $L^{2'}$, $L^{3'}$ bzw. $L^1$, $L^{1'}$ gemäß dem ersten Aspekt der Erfindung, wie er unter Punkt I.1.α) bzw. Punkt I.1.β) definiert ist, in den Strukturen **(I), (II)** bzw. **(III)** jeweils eine organische

Linkereinheit sind, bedeutet dies erfindungsgemäß, dass $L^1$, $L^2$, $L^3$, $L^4$, $L^5$, $L^6$, $L^7$, $L^{1'}$, $L^{2'}$, $L^{3'}$ bzw. $L^1$, $L^{1'}$ dann unabhängig voneinander jeweils aus der Gruppe bestehend aus **(L11)**, **(L12)** mit

**(L11)**: ♣-$(X^{L1})_{p1}$-$[C=X^{L2}]_{p2}$-$(X^{L3})_{p3}$-$B^{L1}$-$(Y^{L1})_{q1}$-$[C=Y^{L2}]_{q2}$-$(Y^{L3})_{q3}$-♠,

**(L12)**: ♣-$(Y^{L4})_{q4}$-$[C=Y^{L5}]_{q5}$-$(Y^{L6})_{q6}$-♠

ausgewählt sind,

wobei p1, p2, p3 jeweils 0 oder 1 sind, wobei der Fall "p2 = 0, p1 = p3 = 1" ausgeschlossen ist,

wobei q1, q2, q3 jeweils 0 oder 1 sind, wobei der Fall "q2 = 0, q1 = q3 = 1" ausgeschlossen ist, wobei q4, q5, q6 jeweils 0 oder 1 sind, wobei mindestens einer von q4, q5, q6 = 1 ist und der Fall "q5 = 0, q4 = q6 = 1" ausgeschlossen ist,

wobei $X^{L2}$, $Y^{L2}$, $Y^{L5}$ unabhängig voneinander jeweils aus der Gruppe bestehend aus O, S ausgewählt sind,

wobei $X^{L1}$, $X^{L3}$, $Y^{L1}$, $Y^{L3}$, $Y^{L4}$, $Y^{L6}$ unabhängig voneinander jeweils aus der Gruppe bestehend aus O, S, NH, N[(Halo)Alkyl] ausgewählt sind,

wobei $B^{L1}$ aus der Gruppe bestehend aus zweiwertiger (hetero)aromatischer Rest, zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest ausgewählt ist,

und wobei in den Fällen, in denen $L^1$, $L^2$, $L^3$, $L^4$, $L^5$, $L^6$, $L^7$, $L^{1'}$, $L^{2'}$ bzw. $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$ bzw. $R^{3'}$ bindet, für die Struktur **(L11)** die zusätzliche Bedingung "q3 = 0, q2 = 1, q1 = 1 oder q3 = q2 = q1 = 0 oder q3 = 0, q2 = 1, q1 = 0", bevorzugt die Bedingung "q3 = q2 = q1 = 0", gilt, und für die Struktur **(L12)** die zusätzliche Bedingung "q6 = 0, q5 = 1, q4 = 1 oder q6 = 0, q5 = 1, q4 = 0" gilt,

und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,

und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von q4, q5, q6 = 1" bezieht sich dabei nur auf die Definition der jeweiligen Variablen in der Struktur **(L12)** und soll nicht ausschließen, dass $L^1$, $L^2$, $L^3$, $L^4$, $L^5$, $L^6$, $L^7$, $L^{1'}$, $L^{2'}$, $L^{3'}$jeweils auch direkte Bindungen sein können.

1.1.2.1 Aspekte der Linkereinheiten bei redoxaktiven aromatischen Imidfunktionen **(A)**

LA.1 In einem Aspekt gemäß dem ersten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.$\alpha$) und Punkt I.1.$\beta$) definiert ist, jeweils eine redoxaktive aromatische Imidfunktion **(A)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt A.1, in einem weiteren Aspekt A.2, in einem weiteren Aspekt A.3, in einem weiteren Aspekt A.4 definierten Strukturen aufweisen

und auch in dem Fall, in dem das in der Hauptkette nichtkonjugierte, organische Redox-Polymer P gemäß dem ersten Aspekt der Erfindung eine Struktur wie unter Punkt A.5 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LA11), (LA12)** mit

**(LA11)**: ♣-$(X^{LA1})_{pA1}$-$[C{=}X^{LA2}]_{pA2}$-$(X^{LA3})_{pA3}$-$B^{LA1}$-$(Y^{LA1})_{qA1}$-$[C{=}Y^{LA2}]_{qA2}$-$(Y^{LA3})_{qA3}$-♠,

**(LA12)**: ♣-$(Y^{LA4})_{qA4}$-$[C{=}Y^{LA5}]_{qA5}$-$(Y^{LA6})_{qA6}$-♠

ausgewählt,
wobei pA1, pA2, pA3 jeweils 0 oder 1 sind, wobei der Fall "pA2 = 0, pA1 = pA3 = 1" ausgeschlossen ist,
wobei qA1, qA2, qA3 jeweils 0 oder 1 sind, wobei der Fall "qA2 = 0, qA1 = qA3 = 1" ausgeschlossen ist,
wobei qA4, qA5, qA6 jeweils 0 oder 1 sind, wobei mindestens einer von qA4, qA5, qA6 = 1 ist und wobei der Fall "qA5 = 0, qA4 = qA6 = 1" ausgeschlossen ist,
wobei $X^{LA2}$, $Y^{LA2}$, $Y^{LA5}$ unabhängig voneinander jeweils aus der Gruppe bestehend aus O, S ausgewählt sind,
wobei $X^{LA1}$, $X^{LA3}$, $Y^{LA1}$, $Y^{LA3}$, $Y^{LA4}$, $Y^{LA6}$ unabhängig voneinander jeweils aus der Gruppe bestehend aus O, S, NH, N[(Halo)Alkyl] ausgewählt sind,
wobei $B^{LA1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest ausgewählt ist,
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LA11)** die zusätzliche Bedingung "qA3 = 0, qA2 = 1, qA1 = 1 oder qA3 = qA2 = qA1 = 0 oder qA3 = 0, qA2 = 1, qA1 = 0", in einem Aspekt die Bedingung "qA3 = qA2 = qA1 = 0", gilt, und für die Struktur **(LA12)** die zusätzliche Bedingung "qA6 = 0, qA5 = 1, qA4 = 1 oder qA6 = 0, qA5 = 1, qA4 = 0 gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qA4, qA5, qA6 = 1" bezieht sich dabei nur auf die Definition der jeweiligen Variablen in der Struktur **(LA12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

LA.2 In einem Aspekt des vorgenannten Punktes LA.1 sind $X^{LA2}$, $Y^{LA2}$, $Y^{LA5}$ unabhängig voneinander jeweils aus der Gruppe bestehend aus O, S, in einem Aspekt O, ausgewählt, und $X^{LA1}$, $X^{LA3}$, $Y^{LA1}$, $Y^{LA3}$, $Y^{LA4}$, $Y^{LA6}$ sind unabhängig voneinander jeweils aus der Gruppe bestehend aus O, S, NH, N(Alkyl), in einem Aspekt aus der Gruppe bestehend aus O, S, ausgewählt, und $B^{LA1}$ ist aus der Gruppe bestehend aus Benzylen, Phenylen, zweiwertiger Anthrachinonrest, zweiwertiger, gegebenenfalls mindestens eine Gruppe ausgewählt aus Ether, Thioether, aufweisender Alkylenrest ausgewählt.

LA.3 In einem Aspekt des vorgenannten Punktes LA.2 sind $L^1$, $L^2$, $L^3$, $L^4$, $L^5$, $L^6$, $L^7$, $L^{1'}$, $L^{2'}$, $L^{3'}$ unabhängig voneinander jeweils aus der Gruppe bestehend aus direkte Bindung, Benzylen, Phenylen, zweiwertiger Anthrachinonrest, Alkylenrest, bei dem es sich in einem Aspekt um einen Methylenrest handelt, ♣-C(=O)-♠, ♣-$(NR^{LA3})$-$B^{LA2}$-♠ ausgewählt,

wobei in den Fällen, in denen $L^1$, $L^2$, $L^3$, $L^4$, $L^5$, $L^6$, $L^7$, $L^{1'}$, $L^{2'}$, $L^{3'}$ an ein Kohlenstoffatom der jeweiligen redoxaktiven

Gruppe $R^1$, $R^2$, $R^4$, $R^5$, $R^{1'}$, $R^{2'}$, $R^{3'}$ bindet, die Linkereinheiten $L^1$, $L^2$, $L^3$, $L^4$, $L^5$, $L^6$, $L^7$, $L^{1'}$, $L^{2'}$, $L^{3'}$ auch aus der Gruppe bestehend aus ♣

-O-♠, ♣-($NR^{LA3}$)-$B^{LA2}$-($NR^{LA4}$)-♠, ♣-$B^{LA2}$-($NR^{LA4}$)-♠ ausgewählt sein können

wobei $R^{LA3}$, $R^{LA4}$ unabhängig voneinander jeweils aus Wasserstoff, Alkyl ausgewählt sind, und in einem Aspekt beide Wasserstoff sind, und $B^{LA2}$ ein gegebenenfalls Ethergruppen aufweisender Alkylenrest ist, ausgewählt,

und wobei besonders in einem Aspekt $L^1$, $L^2$, $L^3$, $L^4$, $L^5$, $L^6$, $L^7$, $L^{1'}$, $L^{2'}$, $L^{3'}$ unabhängig voneinander jeweils aus der Gruppe bestehend aus direkte Bindung, ♣-C(=O)-♠, Methylenrest ausgewählt sind,

und wobei "♠" und "♣" die unter Punkt LA.1 genannte Bedeutung haben.

1.1.2.2 Aspekte der Linkereinheiten bei redoxaktiven organische Funktionen umfassend mindestens ein stabiles Sauerstoffradikal **(B)**

LB.1 In einem Aspekt des ersten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.α) und Punkt I.1.β) definiert ist, jeweils eine redoxaktive organische Funktion umfassend mindestens ein stabiles Sauerstoffradikal **(B)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt B.1, in einem weiteren Aspekt B.2, definierten Strukturen aufweisen und auch in dem Fall, in dem das in der Hauptkette nichtkonjugierte, organische Redox-Polymer **P** gemäß dem ersten Aspekt der Erfindung eine Struktur wie unter Punkt B.3 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LB11), (LB12)** mit

**(LB11)**: ♣-$(X^{LB1})_{pB1}$-$[C{=}X^{LB2}]_{pB2}$-$(X^{LB3})_{pB3}$-$B^{LB1}$-$(Y^{LB1})_{qB1}$-$[C{=}Y^{LB2}]_{qB2}$-$(Y^{LB3})_{qB3}$-♠,

**(LB12)**: ♣-$(Y^{LB4})_{qB4}$-$[C{=}Y^{LB5}]_{qB5}$-$(Y^{LB6})_{qB6}$-♠

ausgewählt,
wobei pB1, pB2, pB3 jeweils 0 oder 1 sind, wobei der Fall "pB2 = 0, pB1 = pB3 = 1" ausgeschlossen ist,
wobei qB1, qB2, qB3 jeweils 0 oder 1 sind, wobei der Fall "qB2 = 0, qB1 = qB3 = 1" ausgeschlossen ist,
wobei qB4, qB5, qB6 jeweils 0 oder 1 sind, wobei mindestens einer von qB4, qB5, qB6 = 1 ist und wobei der Fall "qB5 = 0, qB4 = qB6 = 1" ausgeschlossen ist,
wobei $X^{LB2}$, $Y^{LB2}$, $Y^{LB5}$ unabhängig voneinander jeweils aus der Gruppe bestehend aus O, S ausgewählt sind,
wobei $X^{LB1}$, $X^{LB3}$, $Y^{LB1}$, $Y^{LB3}$, $Y^{LB4}$, $Y^{LB6}$ unabhängig voneinander jeweils aus der Gruppe bestehend aus O, S, NH, N[(Halo)Alkyl] ausgewählt sind,
wobei $B^{LB1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, ausgewählt ist
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LB11)** die zusätzliche Bedingung "qB3 = 0, qB2 = 1, qB1 = 1 oder qB3 = qB2 = qB1 = 0 oder qB3 = 0, qB2 = 1, qB1 = 0", in einem Aspekt die Bedingung "qB3 = qB2 = qB1 = 0", gilt, und für die Struktur **(LB12)** die zusätzliche Bedingung "qB6 = 0, qB5 = 1, qB4 = 1 oder qB6 = 0, qB5 = 1, qB4 = 0" gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$

weisende Bindung bezeichnet,

und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qB4, qB5, qB6 = 1" bezieht sich dabei nur auf die Definition der jeweiligen Variablen in der Struktur **(LB12)** und soll nicht ausschließen, dass L', $L^2$, $L^3$, $L^4$, $L^5$, $L^6$, $L^7$, $L^{1'}$, $L^{2'}$, $L^{3'}$jeweils auch direkte Bindungen sein können.

LB.2 In einem Aspekt des vorgenannten Punktes LB.1 sind $X^{LB2}$, $Y^{LB2}$, $Y^{LB5}$ jeweils O, und $X^{LB1}$, $X^{LB3}$, $Y^{LB1}$, $Y^{LB3}$, $Y^{LB4}$, $Y^{LB6}$ sind unabhängig voneinander jeweils aus der Gruppe bestehend aus O, NH, N(Alkyl), in einem Aspekt O, ausgewählt, und $B^{LA2}$ ist ein zweiwertiger, gegebenenfalls mindestens eine Ethergruppe aufweisender Alkylenrest.

LB.3 In einem Aspekt des vorgenannten Punktes LB.2 sind $L^1$, $L^2$, $L^3$, $L^4$, $L^5$, $L^6$, $L^7$, $L^{1'}$, $L^{2'}$, $L^{3'}$ aus der Gruppe bestehend aus

direkte Bindung, Alkylenrest, der in einem Aspekt Methylen ist,

Phenylen, ♣-C(=O)-♠, ♣-O-C(=O)-♠, ♣-(NH)-C(=O)-♠, ♣-(NAlkyl)-C(=O)-♠,

ein Ethergruppen aufweisender Alkylenrest, bei dem es sich in einem Aspekt um einen Rest der Formel ♠-$(CH_2CH_2O)_{mLB1}$-♣ mit $m^{LB1}$ = 1 - 1000, in einem Aspekt $m^{LB1}$ = 1 - 10, oder einen Rest der Formel

♠-$(CH_2O)_{mLB2}$-♣ mit $m^{LB2}$ = 1 - 1000, in einem Aspekt $m^{LB2}$ = 1 - 10, handelt, ausgewählt,

und in den Fällen, in denen $L^1$, $L^2$, $L^3$, $L^4$, $L^5$, $L^6$, $L^7$, $L^{1'}$, $L^{2'}$, $L^{3'}$ an ein Kohlenstoff der jeweiligen redoxaktiven Gruppe $R^1$, $R^2$, $R^4$, $R^5$, $R^{1'}$, $R^{2'}$, $R^{3'}$ bindet, können $L^1$, $L^2$, $L^3$, $L^4$, $L^5$, $L^6$, $L^7$, $L^{1'}$, $L^{2'}$, $L^{3'}$ auch aus der Gruppe bestehend aus ♣-C(=O)-O-♠, ♣-C(=O)-(NH)-♠, ♣-C(=O)-(NAlkyl)-♠, ♣-O-♠, ♣-$(CH_2CH_2O)_{mLB3}$-♠ mit $m^{LB3}$ = 1 - 1000, in einem Aspekt $m^{LB3}$ = 1 - 10, ♣ -$(CH_2O)_{mLB4}$-♠ mit $m^{LB4}$ = 1 - 1000, in einem Aspekt $m^{LB4}$ = 1 - 10, ausgewählt sein,

wobei ♣-C(=O)-O-♠ ganz besonders in einem Aspekt ist, insbesondere dann, wenn $R^1$, $R^{1'}$ eine Verbindung der Struktur **(B111)** aufweisen,

und wobei "♠" und "♣" die unter Punkt LB.1 genannte Bedeutung haben.

1.1.2.3 Aspekte der Linkereinheiten bei redoxaktiver Anthrachinon-/ Carbazolfunktion **(C)**

LC.1 In einem weiteren Aspekt des ersten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem ersten Aspekt der Erfindung, wie er unter Punkt I.1.$\alpha$) und Punkt I.1.$\beta$) definiert ist, jeweils eine redoxaktive Anthrachinon-/ Carbazolfunktion **(C)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt C.1, in einem Aspekt C.2, in einem weiteren Aspekt C.3, in einem weiteren Aspekt C.4, in einem weiteren Aspekt C.5, definierten Strukturen aufweisen und auch in dem Fall, in dem das in der Hauptkette nichtkonjugierte, organische Redox-Polymer **P** gemäß dem ersten Aspekt der Erfindung eine Struktur wie unter Punkt C.6, in einem Aspekt C.7 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LC11)**, **(LC12)** mit

**(LC11):** ♣-$(X^{LC1})_{pC1}$-$[C=X^{LC2}]_{pC2}$-$(X^{LC3})_{pC3}$-$B^{LC1}$-$(Y^{LC1})_{qC1}$-$[C=Y^{LC2}]_{qC2}$-$(Y^{LC3})_{qC3}$-♠,

**(LC12):** ♣-$(Y^{LC4})_{qC4}$-$[C=Y^{LC5}]_{qC5}$-$(Y^{LC6})_{qC6}$-♠

ausgewählt,

wobei pC1, pC2, pC3 jeweils 0 oder 1 sind, wobei der Fall "pC2 = 0, pC1 = pC3 = 1" ausgeschlossen ist,

wobei qC1, qC2, qC3 jeweils 0 oder 1 sind, wobei der Fall "qC2 = 0, qC1 = qC3 = 1" ausgeschlossen ist,

wobei qC4, qC5, qC6 jeweils 0 oder 1 sind, wobei mindestens einer von qC4, qC5, qC6 = 1 ist und wobei der Fall "qC5 = 0, qC4 = qC6 = 1" ausgeschlossen ist,

wobei $X^{LC2}$, $Y^{LC2}$, $Y^{LC5}$ unabhängig voneinander jeweils aus der Gruppe bestehend aus O, S ausgewählt sind,

wobei $X^{LC1}$, $X^{LC3}$, $Y^{LC1}$, $Y^{LC3}$, $Y^{LC4}$, $Y^{LC6}$ unabhängig voneinander jeweils aus der Gruppe bestehend aus O, S, NH, N[(Halo)Alkyl] ausgewählt sind,

wobei $B^{LC1}$ aus der Gruppe bestehend aus

zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, ausgewählt ist
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LC11)** die zusätzliche Bedingung "qC3 = 0, qC2 = 1, qC1 = 1 oder qC3 = qC2 = qC1 = 0 oder qC3 = 0, qC2 = 1, qC1 = 0", in einem Aspekt die Bedingung "qC3 = qC2 = qC1 = 0", gilt, und für die Struktur **(LC12)** die zusätzliche Bedingung "qC6 = 0, qC5 = 1, qC4 = 1 oder qC6 = 0, qC5 = 1, qC4 = 0" gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qC4, qC5, qC6 = 1" bezieht sich dabei nur auf die Definition der jeweiligen Variablen in der Struktur **(LC12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

LC.2 In einem Aspekt des vorgenannten Punktes LC.1 sind $X^{LC2}$, $Y^{LC2}$, $Y^{LC5}$ jeweils O, und $X^{LC1}$, $X^{LC3}$, $Y^{LC1}$, $Y^{LC3}$, $Y^{LC4}$, $Y^{LC6}$ sind unabhängig voneinander jeweils aus der Gruppe bestehend aus O, NH, N(Alkyl), in einem Aspekt O, ausgewählt, und $B^{LC1}$ ist ein zweiwertiger, gegebenenfalls mindestens eine Ethergruppe aufweisender Alkylenrest.

LC.3 In einem Aspekt des vorgenannten Punktes LC.2 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, ♣-C(=O)-♠, ♣-O-C(=O)-♠, ♣-(NH)-C(=O)-♠, ♣-(NAlkyl)-C(=O)-♠,

ein Ethergruppen aufweisender Alkylenrest, bei dem es sich in einem Aspekt um einen Rest der Formel ♠-$(CH_2CH_2O)_{mLC1}$-♣ mit $m^{LC1}$ = ganze Zahl von 2 bis 1000, in einem Aspekt 3 bis 500, einem weiteren Aspekt 10 bis 100, handelt,

und wobei in den Fällen, in denen $L^1$, $L^2$, $L^3$, $L^4$, $L^5$, $L^6$, $L^7$, $L^{1'}$, $L^{2'}$, $L^{3'}$ an ein Kohlenstoffatom der jeweiligen redoxaktiven Gruppe $R^1$, $R^2$, $R^4$, $R^5$, $R^{1'}$, $R^{2'}$, $R^{3'}$ bindet, die Linkereinheiten $L^1$, $L^2$, $L^3$, $L^4$, $L^5$, $L^6$, $L^7$, $L^{1'}$, $L^{2'}$, $L^{3'}$ auch ausgewählt sein können aus ♣-$(CH_2CH_2O)_{mLC2}$-♠ mit $m^{LC2}$ = ganze Zahl von 2 bis 1000, in einem Aspekt 3 bis 500, in einem weiteren Aspekt 10 bis 100, ♣-C(=O)-O-♠,♣- C(=O)-(NH)-♠, ♣-C(=O)-(NAlkyl)-♠, ♣-O-♠,

wobei die direkte Bindung ganz besonders in einem Aspekt ist, insbesondere dann, wenn $R^1$, $R^{1'}$ eine Verbindung der Struktur **(C501)** oder **(C502)** aufweisen.

und wobei "♠" und "♣" die unter Punkt LC.1 genannte Bedeutung haben.

1.1.2.4 Aspekte der Linkereinheiten bei redoxaktiver Dialkoxybenzolfunktion **(D)**

LD.1 In einem weiteren Aspekt des ersten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.$\alpha$) und Punkt I.1.$\beta$) definiert ist, jeweils eine redoxaktive Phenoxyverbindung **(D)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt D.1, in einem Aspekt D.2, in einem weiteren Aspekt D.3, in einem weiteren Aspekt D.4, in einem weiteren

Aspekt D.5, in einem weiteren Aspekt D.6 definierten Strukturen aufweisen und auch in dem Fall, in dem das Polymer **P** gemäß dem ersten Aspekt der Erfindung eine Struktur wie unter Punkt D.7 definiert umfasst,
$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LD11), (LD12)** mit

**(LD11)**: ♣-$(X^{LD1})_{pD1}$-$[C{=}X^{LD2}]_{pD2}$-$(X^{LD3})_{pD3}$-$B^{LD1}$-$(Y^{LD1})_{qD1}$-$[C{=}Y^{LD2}]_{qD2}$-$(Y^{LD3})_{qD3}$-♠,

**(LD12)**: ♣-$(Y^{LD4})_{qD4}$-$[C{=}Y^{LD5}]_{qD5}$-$(Y^{LD6})_{qD6}$-♠

ausgewählt,
wobei pD1, pD2, pD3 jeweils 0 oder 1 sind, wobei der Fall "pD2 = 0, pD1 = pD3 = 1" ausgeschlossen ist,
wobei qD1, qD2, qD3 jeweils 0 oder 1 sind, wobei der Fall "qD2 = 0, qD1 = qD3 = 1" ausgeschlossen ist,
wobei qD4, qD5, qD6 jeweils 0 oder 1 sind, wobei mindestens einer von qD4, qD5, qD6 = 1 ist und wobei der Fall II "qD5 = 0, qD4 = qD6 = 1" ausgeschlossen ist,
wobei $X^{LD2}$, $Y^{LD2}$, $Y^{LD5}$ unabhängig voneinander jeweils aus der Gruppe bestehend aus O, S ausgewählt sind,
wobei $X^{LD1}$, $X^{LD3}$, $Y^{LD1}$, $Y^{LD3}$, $Y^{LD4}$, $Y^{LD6}$ unabhängig voneinander jeweils aus der Gruppe bestehend aus O, S, NH, N[(Halo)Alkyl] ausgewählt sind,
wobei $B^{LD1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, ausgewählt ist,
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LD11)** die zusätzliche Bedingung "qD3 = 0, qD2 = 1, qD1 = 1 oder qD3 = qD2 = qD1 = 0 oder qD3 = 0, qD2 = 1, qD1 = 0", in einem Aspekt die Bedingung "qD3 = qD2 = qD1 = 0", gilt, und für die Struktur **(LD12)** die zusätzliche Bedingung "qD6 = 0, qD5 = 1, qD4 = 1 oder qD6 = 0, qD5 = 1, qD4 = 0 gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qD4, qD5, qD6 = 1" bezieht sich dabei nur auf die Definition der jeweiligen Variablen in der Struktur **(LD12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

LD.2 In einem weiteren Aspekt des vorgenannten Punktes LD.1 sind $X^{LD2}$, $Y^{LD2}$, $Y^{LD5}$ jeweils O, und $X^{LD1}$, $X^{LD3}$, $Y^{LD1}$, $Y^{LD3}$ $Y^{LD4}$, $Y^{LD6}$ sind unabhängig voneinander jeweils aus der Gruppe bestehend aus O, NH, N(Alkyl), in einem Aspekt O, ausgewählt, und $B^{LD1}$ ist aus der Gruppe bestehend aus zweiwertiger (hetero)aromatischer Rest, zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest ausgewählt.

LD.3 In einem Aspekt des vorgenannten Punktes LD.2 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, Benzylen, ♣-C(=O)-♠, ♣-O-C(=O)-♠, ♣-(NH)-C(=O)-♠, ♣-(NAlkyl)-C(=O)-♠, mindestens eine Gruppe ausgewählt aus Ether, Carbonylgruppe, Carbonsäureester, Carbonsäureamidgruppe aufweisender Alkylenrest,

♣-$[X^{LD4}]_{pD4}$-[C(=O)]$_{pD5}$-$[X^{LD5}]_{pD6}$-$B^{LD4}$-$[X^{LD6}]_{qD6}$-[C(=O)]$_{qD7}$-♠, wobei $X^{LD4}$, $X^{LD5}$, $X^{LD6}$ unabhängig voneinander aus der Gruppe bestehend aus O, S, NH, NAlkyl, N(Haloalkyl), in einem Aspekt O, ausgewählt sind,
und wobei $p_{D4}$, pos, $p_{D6}$ jeweils 0 oder 1 sind, wobei der Fall "$p_{D5}$ = 0, $p_{D4}$ = $p_{D6}$ = 1" ausgeschlossen ist,
und wobei $q_{D6}$, $q_{D7}$ jeweils 0 oder 1 sind, wobei der Fall "$q_{D7}$ = 0, $q_{D6}$ = 1" ausgeschlossen ist,
und wobei $B^{LD4}$ eine Alkylengruppe, die Ethergruppen und/oder Carbonylgruppen aufweisen kann, in einem Aspekt eine Alkylengruppe ist, in einem weiteren Aspekt aus der Gruppe bestehend aus Methylengruppe, Ethylengruppe, *n*-Propylengruppe, *n*-Butylengruppe, *n*-Pentylengruppe, *n*-Hexylengruppe ausgewählt ist,
und wobei "♠" und "♣" die unter Punkt LD.1 genannte Bedeutung haben.

LD.4 In einem weiteren Aspekt des vorgenannten Punktes LD.3 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, Benzylen, ♣-C(=O)-♠, ♣-O-C(=O)-♠, ♣-(NH)-C(=O)-♠, ♣-(NAlkyl)-C(=O)-♠, mindestens eine Gruppe ausgewählt aus Ether, Carbonylgruppe, Carbonsäureester, Carbonsäureamidgruppe aufweisender Alkylenrest, ♣-O-C(=O)-$B^{LD5}$-♠ ausgewählt, und in einem weiteren Aspekt aus der Gruppe bestehend aus direkte Bindung, Methylen, ♣-O-C(=O)-$B^{LD5}$-♠, Phenylen ausgewählt,

wobei $B^{LD5}$ eine Alkylengruppe, in einem Aspekt eine Methylengruppe, Ethylengruppe, Propylengruppe, Butylengruppe, Pentylengrupe, Hexylengruppe ist, am bevorzugtesten aus der Gruppe bestehend aus Methylen, Ethylen, Propylen ausgewählt ist,

und wobei "♠" und "♣" die unter Punkt LD.1 genannte Bedeutung haben.

1.1.2.5 Aspekte der Linkereinheiten bei redoxaktiver Benzochinonfunktion **(E)**

LE.1 In einem weiteren Aspekt des ersten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.α) und Punkt I.1.β) definiert ist, jeweils eine redoxaktiver Benzochinonfunktion **(E)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt E.1, in einem Aspekt E.2, in einem weiteren Aspekt E.3, in einem weiteren Aspekt E.4, in einem weiteren Aspekt E.5 definierten Strukturen aufweisen und auch in dem Fall, in dem das in der Hauptkette nichtkonjugierte, organische Redox-Polymer **P** gemäß dem ersten Aspekt der Erfindung eine Struktur wie unter Punkt E.6 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LE11), (LE12)** mit

**(LE11)**: ♣-$(X^{LE1})_{pE1}$-$[C{=}X^{LE2}]_{pE2}$-$(X^{LE3})_{pE3}$-$B^{LE1}$-$(Y^{LE1})_{qE1}$-$[C{=}Y^{LE2}]_{qE2}$-$(Y^{LE3})_{qE3}$-♠,

**(LE12)**: ♣-$(Y^{LE4})_{qE4}$-$[C{=}Y^{LE5}]_{qE5}$ -$(Y^{LE6})_{qE6}$-♠

ausgewählt,
wobei pE1, pE2, pE3 jeweils 0 oder 1 sind, wobei der Fall "pE2 = 0, pE1 = pE3 = 1" ausgeschlossen ist,
wobei qE1, qE2, qE3 jeweils 0 oder 1 sind, wobei der Fall "qE2 = 0, qE1 = qE3 = 1" ausgeschlossen ist,
wobei qE4, qE5, qE6 jeweils 0 oder 1 sind, wobei mindestens einer von qE4, qE5, qE6 = 1 ist und wobei der Fall "qE5 = 0, qE4 = qE6 = 1" ausgeschlossen ist,
wobei $X^{LE2}$, $Y^{LE2}$, $Y^{LE5}$ unabhängig voneinander jeweils aus der Gruppe bestehend aus O, S ausgewählt sind,
wobei $X^{LE1}$, $X^{LE3}$, $Y^{LE1}$, $Y^{LE3}$, $Y^{LE4}$, $Y^{LE6}$ unabhängig voneinander jeweils aus der Gruppe bestehend aus O, S, NH, N[(Halo)Alkyl] ausgewählt sind,
wobei $B^{LE1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether,

Carbonylgruppe, Carbonsäureester, Carbonsäureamidgruppe, Sulfonsäureester, Phosphorsäureester aufweisender aliphatischer Rest,

ausgewählt ist

und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LE11)** die zusätzliche Bedingung "qE3 = 0, qE2 = 1, qE1 = 1 oder qE3 = qE2 = qE1 = 0 oder qE3 = 0, qE2 = 1, qE1 = 0", in einem Aspekt die Bedingung "qE3 = qE2 = qE1 = 0", gilt, und für die Struktur **(LE12)** die zusätzliche Bedingung "qE6 = 0, qE5 = 1, qE4 = 1 oder qE6 = 0, qE5 = 1, qE4 = 0 gilt,

und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,

und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qE4, qE5, qE6 = 1" bezieht sich dabei nur auf die Definition der jeweiligen Variablen in der Struktur **(LE12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

LE.2 In einem Aspekt des vorgenannten Punktes LE.1 sind $X^{LE2}$, $Y^{LE2}$, $Y^{LE5}$ jeweils O und $X^{LE1}$, $X^{LE3}$, $Y^{LE1}$, $Y^{LE3}$, $Y^{LE4}$, $Y^{LE6}$ sind unabhängig voneinander jeweils aus der Gruppe bestehend aus O, NH, N(Alkyl), in einem Aspekt O, ausgewählt, und $B^{LE1}$ ist ein zweiwertiger, gegebenenfalls mindestens eine Ethergruppe aufweisender Alkylenrest.

LE.3 In einem Aspekt des vorgenannten Punktes LE.2 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, ♣-C(=O)-♠, ♣-O-C(=O)-♠, ♣-(NH)-C(=O)-♠, ♣-(NAlkyl)-C(=O)-♠,

ein Ethergruppen aufweisender Alkylenrest, bei dem es sich in einem Aspekt um einen Rest der Formel ♠-$(CH_2CH_2O)_{mLE1}$-♣ mit $m^{LE1}$ = ganze Zahl von 2 bis 1000, in einem Aspekt 3 bis 500, in einem weiteren Aspekt 10 bis 100, handelt,

und wobei in den Fällen, in denen $L^1$, $L^2$, $L^3$, $L^4$, $L^5$, $L^6$, $L^7$, $L^{1'}$, $L^{2'}$, $L^{3'}$ an ein Kohlenstoff der jeweiligen redoxaktiven Gruppe $R^1$, $R^2$, $R^4$, $R^5$, $R^{1'}$, $R^{2'}$, $R^{3'}$ bindet, $L^1$, $L^2$, $L^3$, $L^4$, $L^5$, $L^6$, $L^7$, $L^{1'}$, $L^{2'}$, $L^{3'}$ auch ausgewählt sein können aus ♣-$(CH_2CH_2O)_{mLE2}$-♠ mit $m^{LE2}$ = ganze Zahl von 2 bis 1000, in einem Aspekt 3 bis 500, in einem weiteren Aspekt 10 bis 100, ♣-C(=O)-O-♠, ♣-C(=O)-(NH)-♠, ♣- C(=O)-(NAlkyl)-♠, ♣-O-♠, ♣-S-♠,

und wobei "♠" und "♣" die unter Punkt LE.1 genannte Bedeutung haben.

1.1.2.6 Aspekte der Linkereinheiten bei redoxaktiver Triphenylaminfunktion **(G)**

LG.1 In einem weiteren Aspekt des ersten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.$\alpha$) und Punkt I.1.$\beta$) definiert ist, jeweils eine redoxaktive Triphenylaminfunktion **(G)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt G.1 definierten Strukturen aufweisen und auch in dem Fall, in dem das in der Hauptkette nichtkonjugierte, organische Redox-Polymer **P** gemäß dem ersten Aspekt der Erfindung eine Struktur wie unter Punkt G.2, in einem Aspekt G.3, in einem weiteren Aspekt G.4 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LG11), (LG12)** mit

**(LG11)**: ♣-$(X^{LG1})_{pG1}$-$[C=X^{LG2}]_{pG2}$-$(X^{LG3})_{pG3}$-$B^{LG1}$-$(Y^{LG1})_{qG1}$-$[C=Y^{LG2}]_{qG2}$-$(Y^{LG3})_{qG3}$-♠,

**(LG12)**: ♣-$(Y^{LG4})_{qG4}$-$[C=Y^{LG5}]_{qG5}$ -$(Y^{LG6})_{qG6}$-♠

ausgewählt,
wobei pG1, pG2, pG3 jeweils 0 oder 1 sind, wobei der Fall "pG2 = 0, pG1 = pG3 = 1" ausgeschlossen ist,
wobei qG1, qG2, qG3 jeweils 0 oder 1 sind, wobei der Fall "qG2 = 0, qG1 = qG3 = 1" ausgeschlossen ist,
wobei qG4, qG5, qG6 jeweils 0 oder 1 sind, wobei mindestens einer von qG4, qG5, qG6 = 1 ist und wobei der Fall "qG5 = 0, qG4 = qG6 = 1" ausgeschlossen ist,
wobei $X^{LG2}$, $Y^{LG2}$, $Y^{LG5}$ unabhängig voneinander jeweils aus der Gruppe bestehend aus O, S ausgewählt sind,
wobei $X^{LG1}$, $X^{LG3}$, $Y^{LG1}$, $Y^{LG3}$, $Y^{LG4}$, $Y^{LG6}$ unabhängig voneinander jeweils aus der Gruppe bestehend aus O, S, NH, N[(Halo)Alkyl] ausgewählt sind,
wobei $B^{LG1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest,
ausgewählt ist
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LG11)** die zusätzliche Bedingung "qG3 = 0, qG2 = 1, qG1 = 1 oder qG3 = qG2 = qG1 = 0 oder qG3 = 0, qG2 = 1, qG1 = 0", in einem Aspekt die Bedingung "qG3 = qG2 = qG1 = 0", gilt, und für die Struktur **(LG12)** die zusätzliche Bedingung "qG6 = 0, qG5 = 1, qG4 = 1 oder qG6 = 0, qG5 = 1, qG4 = 0 gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qG4, qG5, qG6 = 1" bezieht sich dabei nur auf die Definition der jeweiligen Variablen in der Struktur **(LG12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

LG.2 In einem Aspekt des vorgenannten Punktes LG.1 sind $X^{LG2}$, $Y^{LG2}$, $Y^{LG5}$ jeweils O und $X^{LG1}$, $X^{LG3}$, $Y^{LG1}$, $Y^{LG3}$, $Y^{LG4}$, $Y^{LG6}$ sind unabhängig voneinander jeweils aus der Gruppe bestehend aus O, NH, N(Alkyl), in einem Aspekt O, ausgewählt und $B^{LG1}$ ist aus der Gruppe bestehend aus ein zweiwertiger, gegebenenfalls mindestens eine Ethergruppe aufweisender Alkylenrest, zweiwertiger (hetero)aromatischer Rest ausgewählt.

LG.3 In einem Aspekt des vorgenannten Punktes LG.2 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, ♣-C(=O)-♠, ♣-O-C(=O)-♠, ♣-(NH)-C(=O)-♠, ♣-(NAlkyl)-C(=O)-♠,

mindestens eine Gruppe ausgewählt aus Ether, Carbonylgruppe, Carbonsäureester, Carbonsäureamidgruppe aufweisender Alkylenrest,
♣-$[X^{LG4}]_{pG4}$-$[C(=O)]_{pG5}$-$[X^{L15}]_{pG6}$-$B^{LG4}$-$[X^{LG6}]_{qG6}$-$[C(=O)]_{qG7}$-♠,
wobei $X^{LG4}$, $X^{LG5}$, $X^{LG6}$ unabhängig voneinander jeweils aus der Gruppe bestehend aus O, S, NH, NAlkyl, N(Haloalkyl), in einem Aspekt O, ausgewählt sind,
und wobei $p_{G4}$, $p_{G5}$, $p_{G6}$ jeweils 0 oder 1 sind, wobei der Fall "$p_{G5}$ = 0, $p_{G4}$ = $p_{G6}$ = 1" ausgeschlossen ist,
und wobei $q_{G6}$, $q_{G7}$ jeweils 0 oder 1 sind, wobei der Fall "$q_{G7}$ = 0, $q_{G6}$ = 1" ausgeschlossen ist,
und wobei $B^{LG4}$ aus der Gruppe bestehend aus zweiwertige (hetero)aromatische Gruppe, bei der es sich in einem

Aspekt um Benzylen oder Phenylen handelt,
Alkylengruppe, die Ethergruppen und/oder Carbonylgruppen aufweisen kann,
ausgewählt ist,
und $B^{LG4}$ in einem Aspekt eine Phenylengruppe oder eine Alkylengruppe, in einem weiteren Aspekt eine Methylengruppe, Ethylengruppe, Propylengruppe, Butylengruppe, Pentylengruppe oder Hexylengruppe ist,
und noch weiter sind in dem Aspekt des vorgenannten Punktes LG.2 $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, ♣-C(=O)-♠, ♣-O-C(=O)-♠, ♣-(NH)-C(=O)-♠, ♣-(NAlkyl)-C(=O)-♠, am bevorzugtesten aus direkte Bindung, Methylen ausgewählt,
und wobei "♠" und "♣" die unter Punkt LG.1 genannte Bedeutung haben.

1.1.2.7 Aspekte der Linkereinheiten bei redoxaktiver Viologenfunktion **(H)**

LH.1 In einem weiteren Aspekt des ersten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.$\alpha$) und Punkt I.1.$\beta$) definiert ist, jeweils eine redoxaktive Viologenfunktion **(H)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt H.1, in einem Aspekt die unter dem obigen Punkt H.2 definierten Strukturen aufweisen und auch in dem Fall, in dem das in der Hauptkette nichtkonjugierte, organische Redox-Polymer **P** gemäß dem ersten Aspekt der Erfindung eine Struktur wie unter Punkt H.3 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LH11), (LH12)** mit

**(LH11)**: ♣-$(X^{LH1})_{pH1}$-$[C{=}X^{LH2}]_{pH2}$-$(X^{LH3})_{pH3}$-$B^{LH1}$-$(Y^{LH1})_{qH1}$-$[C{=}Y^{LH2}]_{qH2}$-$(Y^{LH3})_{qH3}$-♠,

**(LH12)**: ♣-$(Y^{LH4})_{qH4}$-$[C{=}Y^{LH5}]_{qH5}$ -$(Y^{LH6})_{qH6}$-♠

ausgewählt,
wobei pH1, pH2, pH3 jeweils 0 oder 1 sind, wobei der Fall "pH2 = 0, pH1 = pH3 = 1" ausgeschlossen ist,
wobei qH1, qH2, qH3 jeweils 0 oder 1 sind, wobei der Fall "qH2 = 0, qH1 = qH3 = 1" ausgeschlossen ist,
wobei qH4, qH5, qH6 jeweils 0 oder 1 sind, , wobei mindestens einer von qH4, qH5, qH6 = 1 ist wobei der Fall "qH5 = 0, qH4 = qH6 = 1" ausgeschlossen ist,
wobei $X^{LH2}$, $Y^{LH2}$, $Y^{LH5}$ unabhängig voneinander jeweils aus der Gruppe bestehend aus O, S ausgewählt sind,
wobei $X^{LH1}$, $X^{LH3}$, $Y^{LH1}$, $Y^{LH3}$, $Y^{LH4}$, $Y^{LH6}$ unabhängig voneinander jeweils aus der Gruppe bestehend aus O, S, NH, N[(Halo)Alkyl] ausgewählt sind,
wobei $B^{LH1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest,
ausgewählt ist
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LH11)** die zusätzliche Bedingung "qH3 = 0, qH2 = 1, qH1 = 1 oder qH3 = qH2 = qH1 = 0 oder qH3 = 0, qH2 = 1, qH1 = 0", in einem Aspekt die Bedingung "qH3 = qH2 = qH1 = 0", gilt, und für die Struktur **(LH12)** die zusätzliche Bedingung "qH6 = 0, qH5 = 1, qH4 = 1 oder qH6 = 0, qH5 = 1, qH4 = 0" gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für $L^1$ die zu $X^1$ weisende Bindung bezeichnet, für $L^{1'}$ die zu $X^1$ weisende Bindung bezeichnet, für

$L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qH4, qH5, qH6 = 1" bezieht sich dabei nur auf die Definition der jeweiligen Variablen in der Struktur **(LH12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

LH.2 In einem Aspekt des vorgenannten Punktes LH.1 sind $X^{LH2}$, $Y^{LH2}$, $Y^{LH5}$ jeweils O und $X^{LH1}$, $X^{LH3}$, $Y^{LH1}$, $Y^{LH3}$, $Y^{LH4}$, $Y^{LH6}$ sind unabhängig voneinander jeweils aus der Gruppe bestehend aus O, NH, N(Alkyl), in einem Aspekt O, ausgewählt, und $B^{LH1}$ ist aus der Gruppe bestehend aus zweiwertiger, gegebenenfalls mindestens eine Ethergruppe aufweisender Alkylenrest, zweiwertiger (hetero)aromatischer Rest ausgewählt.

LH.3 In einem Aspekt des vorgenannten Punktes LH.2, insbesondere dann, wenn $R^1$, $R^{1'}$ die unter Punkt H.1 gezeigte Struktur **(H1)** aufweisen, sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen, Ethylen, Propylen, Butylen, Pentylen, Hexylen, in einem weiteren Aspekt Propylen ist, zweiwertige (hetero)aromatische Gruppe, bei der es sich in einem Aspekt um Benzylen oder Phenylen handelt, am allerbevorzugtesten um Phenylen handelt, ausgewählt.

1.1.2.8 Aspekte der Linkereinheiten bei redoxaktiver Ferrocenfunktion **(J)**

LJ.1 In einem weiteren Aspekt des ersten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem ersten Aspekt der Erfindung, wie er unter Punkt I.1.$\alpha$) und Punkt I.1.$\beta$) definiert ist, jeweils eine redoxaktive Ferrocenfunktion **(J)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt J.1 definierten Strukturen aufweisen und auch in dem Fall, in dem das in der Hauptkette nichtkonjugierte, organische Redox-Polymer **P** gemäß dem ersten Aspekt der Erfindung eine Struktur wie unter Punkt J.2 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LJ11), (LJ12)** mit

**(LJ11)**: $♣\text{-}(X^{LJ1})_{pJ1}\text{-}[C{=}X^{LJ2}]_{pJ2}\text{-}(X^{LJ3})_{pJ3}\text{-}B^{LJ1}\text{-}(Y^{LJ1})_{qJ1}\text{-}[C{=}Y^{LJ2}]_{qJ2}\text{-}(Y^{LJ3})_{qJ3}\text{-}♠$,

**(LJ12)**: $♣\text{-}(Y^{LJ4})_{qJ4}\text{-}[C{=}Y^{LJ5}]_{qJ5}\text{ -}(Y^{LJ6})_{qJ6}\text{-}♠$

ausgewählt,
wobei pJ1, pJ2, pJ3 jeweils 0 oder 1 sind, wobei der Fall "pJ2 = 0, pJ1 = pJ3 = 1" ausgeschlossen ist,
wobei qJ1, qJ2, qJ3 jeweils 0 oder 1 sind, wobei der Fall "qJ2 = 0, qJ1 = qJ3 = 1" ausgeschlossen ist,
wobei qJ4, qJ5, qJ6 jeweils 0 oder 1 sind, wobei mindestens einer von qJ4, qJ5, qJ6 = 1 ist und wobei der Fall "qJ5 = 0, qJ4 = qJ6 = 1" ausgeschlossen ist,
wobei $X^{LJ2}$, $Y^{LJ2}$, $Y^{LJ5}$ unabhängig voneinander jeweils aus der Gruppe bestehend aus O, S ausgewählt sind,
wobei $X^{LJ1}$, $X^{LJ3}$, $Y^{LJ1}$, $Y^{LJ3}$, $Y^{LJ4}$, $Y^{LJ6}$ unabhängig voneinander jeweils aus der Gruppe bestehend aus O, S, NH, N[(Halo)Alkyl] ausgewählt sind,
wobei $B^{LJ1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest,
ausgewählt ist
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LJ11)** die zusätzliche Bedingung "qJ3 = 0, qJ2 = 1, qJ1 = 1 oder qJ3 = qJ2 = qJ1 = 0 oder qJ3 = 0, qJ2 = 1, qJ1 = 0", in einem Aspekt die Bedingung "qJ3 = qJ2 = qJ1 = 0", gilt, und für die Struktur **(LJ12)** die zusätzliche Bedingung "qJ6 = 0, qJ5 = 1, qJ4 = 1 oder qJ6 = 0, qj5 = 1, qH4 = 0" gilt,

und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,

und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qJ4, qJ5, qJ6 = 1" bezieht sich dabei nur auf die Definition der jeweiligen Variablen in der Struktur **(LJ12)** und soll nicht ausschließen, dass $L^1$, $L^2$, $L^3$, $L^4$, $L^5$, $L^6$, $L^7$, $L^{1'}$, $L^{2'}$, $L^{3'}$jeweils auch direkte Bindungen sein können.

LJ.2 In einem Aspekt des vorgenannten Punktes LJ.1 sind $X^{LJ2}$, $Y^{LJ2}$, $Y^{LJ5}$ jeweils O und $X^{LJ1}$, $X^{LJ3}$, $Y^{LJ1}$, $Y^{LJ3}$ $Y^{LJ4}$ $Y^{LJ6}$ unabhängig voneinander jeweils aus der Gruppe bestehend aus O, NH, N(Alkyl), in einem Aspekt O, ausgewählt, und $B^{LJ1}$ ist ein zweiwertiger, gegebenenfalls mindestens eine Ethergruppe aufweisender Alkylenrest.

LJ.3 In einem Aspekt des vorgenannten Punktes LJ.2 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, ♣-C(=O)-♠, ♣-O-C(=O)-♠, ♣-(NH)-C(=O)-♠, ♣-(NAlkyl)-C(=O)-♠, ♣-C(=O)-O-♠, ♣-C(=O)- (NH)-♠, ♣-C(=O)-(NAlkyl)-♠, ♣-O-♠, ♣-S-♠,

in einem weiteren Aspekt unabhängig voneinander jeweils aus der Gruppe bestehend aus direkte Bindung, ♣-O-C(=O)-♠,♣-C(=O)-O-♠ ausgewählt.

1.1.2.9 Aspekte der Linkereinheiten, falls $R^{1'}$, $R^{2'}$, $R^{3'}$ jeweils Wasserstoff

LK.1 In einem weiteren Aspekt des ersten Aspekts der vorliegenden Erfindung ist in den Fällen, in denen die Reste $R^{1'}$, $R^{2'}$, $R^{3'}$ bzw. der Rest $R^{1'}$ in den Strukturen **(I), (II)** bzw. **(III)** gemäß dem ersten Aspekt der Erfindung, wie er unter Punkt I.1.α) und Punkt I.1.β) definiert ist, und insbesondere in den vorbeschriebenen Fällen A.5, B.3, C.6, C.7, D.7, E.6, G.2, G.3, G.4, H.3, J.2 jeweils ein Wasserstoffrest sind, $L^{1'}$, $L^{2'}$, $L^{3'}$ dann in einem Aspekt ausgewählt aus der Gruppe bestehend aus direkte Bindung, **(LK11), (LK12)** mit

**(LK11)**: $♣\text{-}(X^{LK1})_{pK1}\text{-}[C{=}X^{LK2}]_{pK2}\text{-}(X^{LK3})_{pK3}\text{-}B^{LK1}\text{-}(Y^{LK1})_{qK1}\text{-}[C{=}Y^{LK2}]_{qK2}\text{-}(Y^{LK3})_{qK3}\text{-}♠$,

**(LK12)**: $♣\text{-}(Y^{LK4})_{qK4}\text{-}[C{=}Y^{LK5}]_{qK5}\text{-}(Y^{LK6})_{qK6}\text{-}♠$

ausgewählt,

wobei pK1, pK2, pK3 jeweils 0 oder 1 sind, wobei der Fall "pK2 = 0, pK1 = pK3 = 1" ausgeschlossen ist,

wobei qK1, qK2, qK3 jeweils 0 oder 1 sind, wobei der Fall "qK2 = 0, qK1 = qK3 = 1" ausgeschlossen ist,

wobei qK4, qK5, qK6 jeweils 0 oder 1 sind, wobei mindestens einer von qK4, qK5, qK6 = 1 ist und wobei der Fall "qK5 = 0, qK4 = qK6 = 1" ausgeschlossen ist,

wobei $X^{LK2}$, $Y^{LK2}$, $Y^{LK5}$ unabhängig voneinander jeweils aus der Gruppe bestehend aus O, S ausgewählt sind,

wobei $X^{LK1}$, $X^{LK3}$, $Y^{LK1}$, $Y^{LK3}$, $Y^{LK4}$, $Y^{LK6}$ unabhängig voneinander jeweils aus der Gruppe bestehend aus O, S, NH, N[(Halo)Alkyl] ausgewählt sind,

wobei $B^{LK1}$ aus der Gruppe bestehend aus

zweiwertiger (hetero)aromatischer Rest,

zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest,

ausgewählt ist

und wobei "♠" für $L^{1'}$ die zu $R^{1'}$ weisende Bindung bezeichnet, für $L^{2'}$ die zu $R^{2'}$ weisende Bindung bezeichnet, für $L^{3'}$ die zu $R^{3'}$ weisende Bindung bezeichnet,

und wobei "♣" für $L^{1'}$ die zu $X^1$ weisende Bindung bezeichnet, für $L^{2'}$ die zu $X^2$ weisende Bindung bezeichnet, für $L^{3'}$ die zu $X^3$ weisende Bindung bezeichnet.

Die Bedingung "wobei mindestens einer von qK4, qK5, qK6 = 1" bezieht sich dabei nur auf die Definition der jeweiligen Variablen in der Struktur **(LK12)** und soll nicht ausschließen, dass $L^{1'}$, $L^{2'}$, $L^{3'}$ jeweils auch direkte Bindungen sein können.

LK.2 In einem Aspekt des vorgenannten Punktes LK.1 sind $X^{LK2}$, $Y^{LK2}$, $Y^{LK5}$ jeweils O, und $X^{LK1}$, $X^{LK3}$, $Y^{LK1}$, $Y^{LK3}$, $Y^{LK4}$, $Y^{LK6}$ sind jeweils O, und $B^{LK1}$ ist aus der Gruppe bestehend aus Phenylenrest, Benzylenrest, zweiwertiger, gegebenenfalls mindestens eine Gruppe ausgewählt aus Ether, aufweisender Alkylenrest, ausgewählt.

LK.3 In einem Aspekt der vorgenannten Punkte LK.1 und LK.2 sind $L^{1'}$, $L^{2'}$, $L^{3'}$ jeweils eine direkte Bindung.

<u>1.1.3 Polymerisierte Gruppen $X^1$, $X^2$, $X^3$ $X^4$, $X^5$</u>

Die für $X^1$, $X^2$, $X^3$, $X^4$, $X^5$ in den Strukturen **(I), (II)** bzw. **(III)** gemäß dem ersten Aspekt der Erfindung, wie er unter Punkt I.1.α) und Punkt I.1.β) definiert ist, und insbesondere in den vorbeschriebenen Fällen A.5, B.3, C.6, C.7, D.7, E.6, G.2, G.3, G.4, H.3, J.2 auswählbaren, nichtkonjugierte organische Gruppe sind weiter beschränkt bis darauf, dass in dem durch diese Gruppen gebildeten Rückgrat keine Konjugation auftreten darf. Sie werden durch Polymerisationsreaktion aus einer Gruppe gebildet, die aus einer organischen Doppelbindung, einer organischen Dreifachbindung, einem Oxiran oder einem Aziridin besteht, oder sind jeweils eine nichtkonjugierte organische Gruppe, welche durch eine polymeranaloge Reaktion gebildet wird. Solche Gruppen sind beispielsweise in der WO 2015/003725 A1 beschrieben.

Wesentlich im Sinne der Erfindung ist, dass in der Hauptkette, also dem Polymerrückgrat von P, keine Konjugation, also keine π-Elektronen-Delokatisierung stattfindet. Dies kann dadurch gewährleistet werden, dass in der Hauptkette nur $sp^3$-Bindungen auftreten oder sp- und $sp^2$-Bindungen strukturell so isoliert vorliegen, dass keine Konjugation auftritt.

Der Fachmann weiß konjugierte Systeme von nichtkonjugierten zu unterscheiden. So sind zum Beispiel Poly(thiophen), Poly(pyridin), Poly(pyrrolidin), Poly(imid) innerhalb ihres Polymerrückgrats konjugiert und bilden in der Hauptkette eine Konjugation aus, können also kein nichtkonjugierten organischen Redox-Poymere bilden. Überraschenderweise wurde festgestellt, dass auch Polyacetylenderivate im Sinne der Erfindung im Polymerrückgrat einsetzbar sind, da innerhalb dieses Rückgrats zwar benachbarte Doppelbindungen vorliegen, aber aufgrund der Peierls-Verzerrung keine Konjugation stattfindet.

Diese Voraussetzung hinsichtlich der Nichtkonjugation betrifft im Sinne der Erfindung nur das Rückgrat des Polymers **P,** welches in den Strukturen **(I), (II),** und **(III)** durch die Reste $X^1$, $X^2$, $X^3$, $X^4$ bzw. $X^5$ und, falls vorhanden, die Spacereinheiten $Y^1$, $Y^2$, $Y^3$, $Y^4$ bzw. $Y^5$ (definiert unten im Abschnitt 1.1.4) gebildet wird. Innerhalb der vom Polymer umfassten redoxaktiven Funktionen, also innerhalb der in den Strukturen **(I), (II),** und **(III)** durch die Reste $R^1$, $R^2$, $R^4$ bzw. $R^5$ dargestellten Reste, und für den Fall, dass es sich bei $R^{1'}$, $R^{2'}$ bzw. $R^{3'}$ um einen redoxaktiven Rest handelt, auch innerhalb dieser, kann natürlich eine Konjugation, also eine Delokalisierung der π-Elektronen auftreten.

<u>I.1.3.1</u>

Im Sinne der Erfindung sind die Reste $X^1$, $X^2$, $X^3$, $X^4$, $X^5$ in den Strukturen **(I), (II),** und **(III)** gemäß dem ersten Aspekt der Erfindung, wie er unter Punkt I.1.α) und Punkt I.1.β) definiert ist, und insbesondere in den vorbeschriebenen Fällen A.5, B.3, C.6, C.7, D.7, E.6, G.2, G.3, G.4, H.3, J.2 unabhängig voneinander jeweils nichtkonjugierte organische Gruppen, die aus den nachfolgenden Strukturen **(X1), (X2), (X3), (X4), (X5),** in einem Aspekt aus den Strukturen **(X1), (X2), (X3), (X5),** in einem weiteren Aspekt aus den Strukturen **(X1), (X2), (X5)** mit

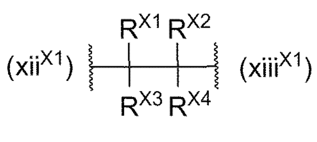 ; 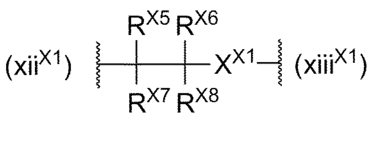 ; 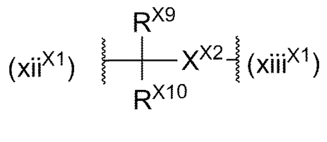 ;

**(X1)** **(X2)** **(X3)**

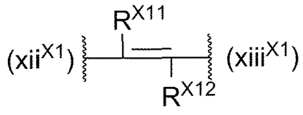

;

**(X4)**

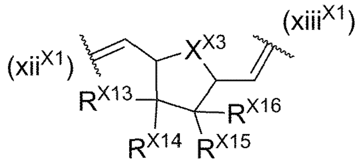

;

**(X5)**

ausgewählt sind,

wobei, im Falle dass **(X1)** = $X^1$, einer von $R^{X1}$, $R^{X2}$, $R^{X3}$, $R^{X4}$ die Bindung zu $L^1$ und ein anderer von $R^{X1}$, $R^{X2}$, $R^{X3}$, $R^{X4}$ die Bindung zu $L^{1'}$ bezeichnet,

wobei, im Falle dass **(X1)** = $X^2$, einer von $R^{X1}$, $R^{X2}$, $R^{X3}$, $R^{X4}$ die Bindung zu $L^2$ und ein anderer von $R^{X1}$, $R^{X2}$, $R^{X3}$, $R^{X4}$ die Bindung zu $L^{2'}$ bezeichnet,

wobei, im Falle dass **(X1)** = $X^3$, einer von $R^{X1}$, $R^{X2}$, $R^{X3}$, $R^{X4}$ die Bindung zu $L^3$ und ein anderer von $R^{X1}$, $R^{X2}$, $R^{X3}$, $R^{X4}$ die Bindung zu $L^{3'}$ bezeichnet,

wobei, im Falle dass **(X1)** = $X^4$, einer von $R^{X1}$, $R^{X2}$, $R^{X3}$, $R^{X4}$ die Bindung zu $L^4$ und ein anderer von $R^{X1}$, $R^{X2}$, $R^{X3}$, $R^{X4}$ die Bindung zu $L^6$ bezeichnet,

wobei, im Falle dass **(X1)** = $X^5$, einer von $R^{X1}$, $R^{X2}$, $R^{X3}$, $R^{X4}$ die Bindung zu $L^5$ und ein anderer von $R^{X1}$, $R^{X2}$, $R^{X3}$, $R^{X4}$ die Bindung zu $L^7$ bezeichnet,

wobei, im Falle dass **(X2)** = $X^1$, einer von $R^{X5}$, $R^{X6}$, $R^{X7}$, $R^{X8}$ die Bindung zu $L^1$ und ein anderer von $R^{X5}$, $R^{X6}$, $R^{X7}$, $R^{X8}$ die Bindung zu $L^{1'}$ bezeichnet,

wobei, im Falle dass **(X2)** = $X^2$, einer von $R^{X5}$, $R^{X6}$, $R^{X7}$, $R^{X8}$ die Bindung zu $L^2$ und ein anderer von $R^{X5}$, $R^{X6}$, $R^{X7}$, $R^{X8}$ die Bindung zu $L^{2'}$ bezeichnet,

wobei, im Falle dass **(X2)** = $X^3$, einer von $R^{X5}$, $R^{X6}$, $R^{X7}$, $R^{X8}$ die Bindung zu $L^3$ und ein anderer von $R^{X5}$, $R^{X6}$, $R^{X7}$, $R^{X8}$ die Bindung zu $L^{3'}$ bezeichnet,

wobei, im Falle dass **(X2)** = $X^4$, einer von $R^{X5}$, $R^{X6}$, $R^{X7}$, $R^{X8}$ die Bindung zu $L^4$ und ein anderer von $R^{X5}$, $R^{X6}$, $R^{X7}$, $R^{X8}$ die Bindung zu $L^6$ bezeichnet,

wobei, im Falle dass **(X2)** = $X^5$, einer von $R^{X5}$, $R^{X6}$, $R^{X7}$, $R^{X8}$ die Bindung zu $L^5$ und ein anderer von $R^{X5}$, $R^{X6}$, $R^{X7}$, $R^{X8}$ die Bindung zu $L^7$ bezeichnet,

wobei, im Falle dass **(X3)** = $X^1$, $R^{X9}$ die Bindung zu $L^1$ und $R^{X10}$ die Bindung zu $L^{1'}$ bezeichnet,

wobei, im Falle dass **(X3)** = $X^2$, $R^{X9}$ die Bindung zu $L^2$ und $R^{X10}$ die Bindung zu $L^{2'}$ bezeichnet,

wobei, im Falle dass **(X3)** = $X^3$, $R^{X9}$ die Bindung zu $L^3$ und $R^{X10}$ die Bindung zu $L^{3'}$ bezeichnet,

wobei, im Falle dass **(X3)** = $X^4$, $R^{X9}$ die Bindung zu $L^4$ und $R^{X10}$ die Bindung zu $L^6$ bezeichnet,

wobei, im Falle dass **(X3)** = $X^5$, $R^{X9}$ die Bindung zu $L^5$ und $R^{X10}$ die Bindung zu $L^7$ bezeichnet,

wobei, im Falle dass **(X4)** = $X^1$, einer von $R^{X11}$, $R^{X12}$ die Bindung zu $L^1$ und der andere von $R^{X11}$, $R^{X12}$ die Bindung zu $L^{1'}$ bezeichnet,

wobei, im Falle dass **(X4)** = $X^2$, einer von $R^{X11}$, $R^{X12}$ die Bindung zu $L^2$ und der andere von $R^{X11}$, $R^{X12}$ die Bindung zu $L^{2'}$ bezeichnet,

wobei, im Falle dass **(X4)** = $X^3$, einer von $R^{X11}$, $R^{X12}$ die Bindung zu $L^3$ und der andere von $R^{X11}$, $R^{X12}$ die Bindung zu $L^{3'}$ bezeichnet,

wobei, im Falle dass **(X4)** = $X^4$, einer von $R^{X11}$, $R^{X12}$ die Bindung zu $L^4$ und der andere von $R^{X11}$, $R^{X12}$ die Bindung zu $L^6$ bezeichnet,

wobei, im Falle dass **(X4)** = $X^5$, einer von $R^{X11}$, $R^{X12}$ die Bindung zu $L^5$ und der andere von $R^{X11}$, $R^{X12}$ die Bindung zu $L^7$ bezeichnet,

wobei, im Falle dass **(X5)** = $X^1$, einer von $R^{X13}$, $R^{X14}$, $R^{X15}$, $R^{X16}$ die Bindung zu $L^1$ bezeichnet und ein anderer von $R^{X13}$, $R^{X14}$, $R^{X15}$, $R^{X16}$ die Bindung zu $L^{1'}$ bezeichnet,

wobei, im Falle dass **(X5)** = $X^2$, einer von $R^{X13}$, $R^{X14}$, $R^{X15}$, $R^{X16}$ die Bindung zu $L^2$ bezeichnet und ein anderer von $R^{X13}$, $R^{X14}$, $R^{X15}$, $R^{X16}$ die Bindung zu $L^{2'}$ bezeichnet,

wobei, im Falle dass **(X5)** = $X^3$, einer von $R^{X13}$, $R^{X14}$, $R^{X15}$, $R^{X16}$ die Bindung zu $L^3$ bezeichnet und ein anderer von $R^{X13}$, $R^{X14}$, $R^{X15}$, $R^{X16}$ die Bindung zu $L^{3'}$ bezeichnet,

wobei, im Falle dass **(X5)** = $X^4$, einer von $R^{X13}$, $R^{X14}$, $R^{X15}$, $R^{X16}$ die Bindung zu $L^4$ bezeichnet und ein anderer von $R^{X13}$, $R^{X14}$, $R^{X15}$, $R^{X16}$ die Bindung zu $L^6$ bezeichnet,

wobei, im Falle dass **(X5)** = $X^5$, einer von $R^{X13}$, $R^{X14}$, $R^{X15}$, $R^{X16}$ die Bindung zu $L^5$ bezeichnet und ein anderer von $R^{X13}$, $R^{X14}$, $R^{X15}$, $R^{X16}$ die Bindung zu $L^7$ bezeichnet,

und wobei diejenigen von $R^{X1}$, $R^{X2}$, $R^{X3}$, $R^{X4}$, $R^{X5}$, $R^{X6}$, $R^{X7}$, $R^{X8}$, $R^{X13}$, $R^{X14}$, $R^{X15}$, $R^{X16}$, die keine Bindung zu $L^1$, $L^{1'}$, $L^2$, $L^{2'}$, $L^3$, $L^{3'}$, $L^4$, $L^5$, $L^6$ oder $L^7$ bezeichnen, Reste sind, die unabhängig voneinander jeweils aus der Gruppe bestehend aus

Wasserstoff,
(hetero)aromatischer Rest,
gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester,
Carbonsäureamidgruppe, Sulfonsäureester, Phosphorsäureester aufweisender aliphatischer Rest,
in einem Aspekt aus der Gruppe bestehend aus Wasserstoff, Alkylgruppe, Halogen, Cyano, Phenyl, Benzyl ausgewählt sind und in einem weiteren Aspekt alls Wasserstoff sind,
und wobei $X^{X1}$, $X^{X2}$ unabhängig voneinander jeweils aus der Gruppe bestehend aus O, S ausgewählt und in einem Aspekt jeweils O sind,
und wobei $X^{X3}$ aus der Gruppe bestehend aus O, S, $-CH_2-$, in einem weiteren Aspekt aus der Gruppe bestehend aus O, $-CH_2-$, ausgewählt und in einem weiteren Aspekt $-CH_2-$ ist,
und wobei die jeweils durch ($xii^{X1}$) gekennzeichnete Bindung derjenigen entspricht, die in den Strukturen **(I), (II)** und **(III)** jeweils durch "*", "#", "&", "§" bzw. "$" gekennzeichnet ist,
und wobei die jeweils durch ($xiii^{X1}$) gekennzeichnete Bindung derjenigen entspricht, die in den Strukturen **(I), (II)** und **(III)** in den Fällen, in denen $m^1 = 0$, $m^2 = 0$, $m^3 = 0$, $m^4 = 0$ bzw. $m^5 = 0$ jeweils an "**", "##", "&&", "§§" bzw. "$$" bindet und in den Fällen, in denen $m^1 > 0$, $m^2 > 0$, $m^3 > 0$, $m^4 > 0$ bzw. $m^5 > 0$ jeweils an $Y^1$, $Y^2$, $Y^3$, $Y^4$ bzw. $Y^5$ bindet.
1.1.3.2

In einem Aspekt des vorgenannten Punktes 1.1.3.1 sind die Reste $X^1$, $X^2$, $X^3$, $X^4$, $X^5$ unabhängig voneinander jeweils nichtkonjugierte organische Gruppen, die aus den nachfolgenden Strukturen **(X11), (X12), (X13), (X14), (X15),** in einem Aspekt aus den Strukturen **(X11), (X12), (X13), (X14), (X15),** in einem weiteren Aspekt aus den Strukturen **(X11), (X12), (X15)** mit

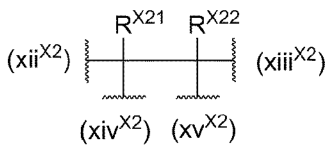 ; 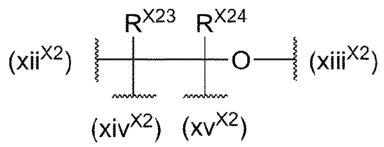 ; 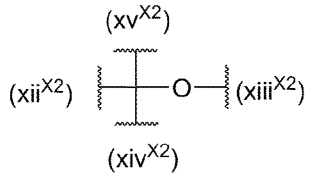 ;

**(X11)** **(X12)** **(X13)**

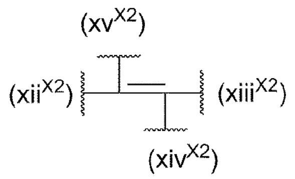 ; 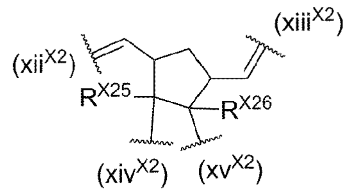 ;

**(X14)** **(X15)**

ausgewählt,

wobei, im Falle dass $X^1$ ausgewählt ist aus **(X11), (X12), (X13), (X14), (X15),** die Bindung ($xiv^{X2}$) jeweils die Bindung zu $L^1$ und die Bindung ($xv^{X2}$) jeweils die Bindung zu $L^{1'}$ bezeichnet,

wobei, im Falle dass $X^2$ ausgewählt ist aus **(X11), (X12), (X13), (X14), (X15),** die Bindung ($xiv^{X2}$) jeweils die Bindung zu $L^2$ und die Bindung ($xv^{X2}$) jeweils die Bindung zu $L^{2'}$ bezeichnet,

wobei, im Falle dass $X^3$ ausgewählt ist aus **(X11), (X12), (X13), (X14), (X15),** die Bindung ($xiv^{X2}$) jeweils die Bindung zu $L^3$ und die Bindung ($xv^{X2}$) jeweils die Bindung zu $L^{3'}$ bezeichnet,

wobei, im Falle dass $X^4$ ausgewählt ist aus **(X11), (X12), (X13), (X14), (X15),** die Bindung ($xiv^{X2}$) jeweils die Bindung zu $L^4$ und die Bindung ($xv^{X2}$) jeweils die Bindung zu $L^6$ bezeichnet,

wobei, im Falle dass $X^5$ ausgewählt ist aus **(X11), (X12), (X13), (X14), (X15),** die Bindung ($xiv^{X2}$) jeweils die Bindung

zu $L^5$ und die Bindung ($xv^{X2}$) jeweils die Bindung zu $L^7$ bezeichnet,

und wobei die Reste $R^{X21}$, $R^{X22}$, $R^{X23}$, $R^{X24}$, $R^{X25}$, $R^{X26}$ unabhängig voneinander jeweils aus der Gruppe bestehend aus

Wasserstoff,

(hetero)aromatischer Rest,

gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester,

Carbonsäureamidgruppe, Sulfonsäureester, Phosphorsäureester aufweisender

aliphatischer Rest,

in einem Aspekt aus der Gruppe bestehend aus Wasserstoff, Alkylgruppe, Halogen, Cyano, Phenyl, Benzyl, ausgewählt sind, in einem Aspekt alle Wasserstoff sind,

und wobei die jeweils durch ($xii^{X2}$) gekennzeichnete Bindung derjenigen entspricht, die in den Strukturen **(I), (II)** und **(III)** jeweils durch "*", "#", "&", "§" bzw. "$" gekennzeichnet ist,

und wobei die jeweils durch ($xiii^{X2}$) gekennzeichnete Bindung derjenigen entspricht, die in den Strukturen **(I), (II)** und **(III)** in den Fällen, in denen $m^1 = 0$, $m^2 = 0$, $m^3 = 0$, $m^4 = 0$ bzw. $m^5 = 0$ jeweils an "**", "##", "&&", "§§" bzw. "$$" bindet und in den Fällen, in denen $m^1 > 0$, $m^2 > 0$, $m^3 > 0$, $m^4 > 0$ bzw. $m^5 > 0$ jeweils an $Y^1$, $Y^2$, $Y^3$, $Y^4$ bzw. $Y^5$ bindet.
1.1.3.3

In einem Aspekt der vorliegenden Erfindung weisen die Reste $X^1$, $X^2$, $X^3$, $X^4$, $X^5$ unabhängig voneinander jeweils die unter Punkt 1.1.3.2 definierte Struktur **(X11)** auf,

wobei, im Falle dass $X^1$ die Struktur **(X11)** aufweist, die Bindung ($xiv^{X2}$) jeweils die Bindung zu $L^1$ und die Bindung ($xv^{X2}$) jeweils die Bindung zu $L^{1'}$ bezeichnet,

wobei, im Falle dass $X^2$ die Struktur **(X11)** aufweist, die Bindung ($xiv^{X2}$) jeweils die Bindung zu $L^2$ und die Bindung ($xv^{X2}$) jeweils die Bindung zu $L^{2'}$ bezeichnet,

wobei, im Falle dass $X^3$ die Struktur **(X11)** aufweist, die Bindung ($xiv^{X2}$) jeweils die Bindung zu $L^3$ und die Bindung ($xv^{X2}$) jeweils die Bindung zu $L^{3'}$ bezeichnet,

wobei, im Falle dass $X^4$ die Struktur **(X11)** aufweist, die Bindung ($xiv^{X2}$) jeweils die Bindung zu $L^4$ und die Bindung ($xv^{X2}$) jeweils die Bindung zu $L^6$ bezeichnet,

wobei, im Falle dass $X^5$ die Struktur **(X11)** aufweist, die Bindung ($xiv^{X2}$) jeweils die Bindung zu $L^5$ und die Bindung ($xv^{X2}$) jeweils die Bindung zu $L^7$ bezeichnet,

und wobei die Reste $R^{X21}$, $R^{X22}$ unabhängig voneinander jeweils aus der Gruppe bestehend aus Wasserstoff, Alkylgruppe, Halogen, Cyano, Phenyl, Benzyl ausgewählt sind,

in einem Aspekt $R^{X21}$ = Wasserstoff oder Alkyl, wobei das bevorzugteste Alkyl eine Methylgruppe ist, und $R^{X22}$ = Wasserstoff, am bevorzugtesten $R^{X21} = R^{X22}$ = Wasserstoff sind,

und wobei die durch ($xii^{X2}$) gekennzeichnete Bindung derjenigen entspricht, die in den Strukturen **(I), (II)** und **(III)** jeweils durch "*", "#", "&", "§" bzw. "$" gekennzeichnet ist,

und wobei die durch ($xiii^{X2}$) gekennzeichnete Bindung derjenigen entspricht, die in den Strukturen **(I), (II)** und **(III)** in den Fällen, in denen $m^1 = 0$, $m^2 = 0$, $m^3 = 0$, $m^4 = 0$ bzw. $m^5 = 0$ jeweils an "**", "##", "&&", "§§" bzw. "$$" bindet und in den Fällen, in denen $m^1 > 0$, $m^2 > 0$, $m^3 > 0$, $m^4 > 0$ bzw. $m^5 > 0$ jeweils an $Y^1$, $Y^2$, $Y^3$, $Y^4$ bzw. $Y^5$ bindet.

1.1.4 Nichtkonjugierte organische Spacereinheiten $Y^1$, $Y^2$, $Y^3$ $Y^4$, $Y^5$

Die für $Y^1$, $Y^2$, $Y^3$, $Y^4$, $Y^5$ in den Strukturen **(I), (II)** bzw. **(III)** gemäß dem ersten Aspekt der Erfindung auswählbaren nichtkonjugierten organischen Spacereinheiten sind weiter beschränkt darauf, dass in dem durch diese Gruppen gebildeten Rückgrat keine Konjugation auftreten darf.

I.1.4.1

Im Sinne der Erfindung sind die Reste $Y^1$, $Y^2$, $Y^3$, $Y^4$, $Y^5$ in den Strukturen **(I), (II),** und **(III)** gemäß dem ersten Aspekt der Erfindung, wie er unter Punkt I.1.$\alpha$) und Punkt I.1 .$\beta$) definiert ist, und insbesondere in den vorbeschriebenen Fällen A.5, B.3, C.6, C.7, D.7, E.6, G.2, G.3, G.4, H.3, J.2 unabhängig voneinander jeweils nichtkonjugierte organische Spacereinheiten, die aus den nachfolgenden Strukturen **(Y1), (Y2), (Y3), (Y4), (Y5)** mit

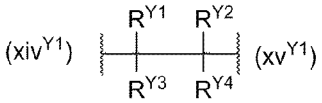
;
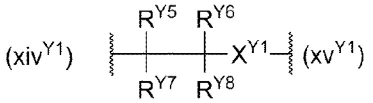
;
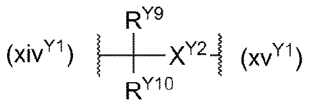
;

**(Y1)** **(Y2)** **(Y3)**

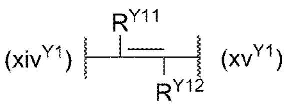
;
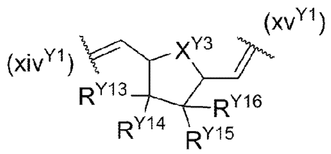
;

**(Y4)** **(Y5)**

ausgewählt sind,

wobei $R^{Y1}$, $R^{Y2}$, $R^{Y3}$, $R^{Y4}$, $R^{Y5}$, $R^{Y6}$, $R^{Y7}$, $R^{Y8}$, $R^{Y9}$, $R^{Y10}$, $R^{Y11}$, $R^{Y12}$, $R^{Y13}$, $R^{Y14}$, $R^{Y15}$, $R^{Y16}$ unabhängig voneinander jeweils aus der Gruppe bestehend aus

Wasserstoff,

(hetero)aromatischer Rest,

gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest,

in einem Aspekt aus der Gruppe bestehend aus Wasserstoff, Phenyl, Benzyl, (Halo)alkylgruppe, (Halo)cycloalkylgruppe, Hydroxy, Carbonsäureester, Carboxygruppe, Carbonsäureamid, wobei die (Halo)alkylgruppe auch Ethergruppen aufweisen kann,

ausgewählt sind,

und wobei $X^{Y1}$, $X^{Y2}$ unabhängig voneinander jeweils aus der Gruppe bestehend aus O, S ausgewählt und in einem Aspekt beide O sind, und wobei $X^{Y3}$ aus der Gruppe bestehend aus O, S, $-CH_2-$, in einem Aspekt O, $-CH_2-$, ausgewählt und in einem weiteren Aspekt $-CH_2-$ ist,

und wobei die durch ($xv^{Y1}$) gekennzeichneten Bindungen derjenigen entspricht, die in den Strukturen **(I), (II)** und **(III)** durch "**", "##", "&&", "§§" bzw. "$$" gekennzeichnet sind,

und wobei die durch ($xiv^{Y1}$) gekennzeichneten Bindungen derjenigen entspricht, die in den Strukturen **(I), (II)** und **(III)** an $X^1$, $X^2$, $X^3$, $X^4$ bzw. $X^5$ bindet.

1.1.4.2

In einem Aspekt einem Aspekt des vorgenannten Punktes 1.1.4.1 sind die Reste $Y^1$, $Y^2$, $Y^3$, $Y^4$, $Y^5$ in den

Strukturen **(I), (II),** und **(III)** unabhängig voneinander jeweils nichtkonjugierte organische Spacereinheiten, die aus den unter Punkt 1.1.4.1 genannten Strukturen **(Y1), (Y2), (Y3), (Y5),** in einem weiteren Aspekt aus den Strukturen **(Y1), (Y2), (Y5),** in einem weiteren Aspekt aus den Strukturen **(Y1), (Y2)** ausgewählt sind und am bevorzugtesten eine Struktur **(Y1),** aufweisen,

wobei $R^{Y1}$, $R^{Y2}$, $R^{Y3}$, $R^{Y4}$, $R^{Y5}$, $R^{Y6}$, $R^{Y7}$, $R^{Y8}$, $R^{Y9}$, $R^{Y10}$, $R^{Y13}$, $R^{Y14}$, $R^{Y15}$, $R^{Y16}$ unabhängig voneinander jeweils aus der Gruppe bestehend aus Wasserstoff, Phenyl, Benzyl, (Halo)alkylgruppe, (Halo)cycloalkylgruppe, Hydroxy, Carbonsäureester, Carbonsäureamid, wobei die (Halo)alkylgruppe auch Ethergruppen aufweisen kann und in einem Aspekt aus der Gruppe bestehend aus Wasserstoff, Phenyl, Benzyl, Alkylgruppe, Carbonsäureester, Carbonsäureamid, Carboxygruppe ausgewählt ist, und in einem weiteren Aspekt aus der Gruppe bestehend aus Wasserstoff, Phenyl, Methyl, Carbonsäureester, $-C(=O)-NH_2$, Carboxygruppe ausgewählt sind, und in einem weiteren Aspekt alle Wasserstoff sind,

und wobei $X^{Y1}$, $X^{Y2}$ jeweils O sind, und wobei $X^{Y3}$ aus der Gruppe bestehend aus O, $-CH_2-$, ausgewählt und in einem weiteren Aspekt $-CH_2-$ ist.

1.1.4.3

Der Fachmann kann dabei gemäß seines Fachwissens in den Fällen, in denen ein in der Hauptkette nichtkonjugiertes, organisches Redox-Polymer **P** umfassend mindestens eine der Strukturen **(I), (II)** und **(III)** eine nichtkonjugierte organische Spacereinheit $Y^1$, $Y^2$, $Y^3$, $Y^4$, $Y^5$ umfasst, mit Hilfe seines Fachwissens diese nichtkonjugierte organische Spacereinheit $Y^1$, $Y^2$, $Y^3$, $Y^4$, $Y^5$ vorteilhaft entsprechend der vom jeweiligen in der Hauptkette nichtkonjugierten, organischen Redox-Polymer **P** umfassten Gruppe $X^1$, $X^2$, $X^3$, $X^4$ oder $X^5$ auswählen.

In einem Aspekt der vorliegenden Erfindung sind die Reste $X^1$, $X^2$, $X^3$, $X^4$, $X^5$ in den Strukturen **(I), (II),** und **(III)** unabhängig voneinander jeweils ausgewählt aus den Strukturen **(X1), (X2), (X3), (X4)** gemäß des vorgenannten Punktes 1.1.3.1, in einem Aspekt unabhängig voneinander jeweils ausgewählt aus den Strukturen **(X11), (X12), (X13), (X14)** gemäß des vorgenannten Punktes 1.1.3.2, in einem weiteren Aspekt unabhängig voneinander jeweils eine Struktur **(X11)** gemäß des vorgenannten Punktes 1.1.3.3,

und die Reste $Y^1$, $Y^2$, $Y^3$, $Y^4$, $Y^5$ sind unabhängig voneinander jeweils ausgewählt aus den Strukturen **(Y1), (Y2), (Y3), (Y4)** gemäß des vorgenannten Punktes 1.1.4.1, in einem weiteren Aspekt gemäß des vorgenannten Punktes 1.1.4.2,

oder die Reste $X^1$, $X^2$, $X^3$, $X^4$, $X^5$ in den Strukturen **(I), (II),** und **(III)** sind unabhängig voneinander jeweils eine Struktur **(X5)** gemäß des vorgenannten Punktes 1.1.3.1, in einem Aspekt eine Struktur **(X15),** gemäß des vorgenannten Punktes 1.1.3.2, und die Reste $Y^1$, $Y^2$, $Y^3$, $Y^4$, $Y^5$ sind unabhängig voneinander jeweils eine Struktur **(Y5)** gemäß des vorgenannten Punktes 1.1.4.1, bevorzugter gemäß des vorgenannten Punktes I.1.4.2.

I.1.4.4

In einem weiteren Aspekt des ersten Aspektes der vorliegenden Erfindung sind die Reste $X^1$, $X^2$, $X^3$, $X^4$, $X^5$ in den Strukturen **(I), (II),** und **(III)** unabhängig voneinander jeweils eine Struktur **(X1)** gemäß des vorgenannten Punktes 1.1.3.1, in einem Aspekt unabhängig voneinander jeweils eine Struktur **(X11)** gemäß des vorgenannten Punktes 1.1.3.2, in einem weiteren Aspekt gemäß des vorgenannten Punktes 1.1.3.3, und die Reste $Y^1$, $Y^2$, $Y^3$, $Y^4$, $Y^5$ sind unabhängig voneinander jeweils eine Struktur **(Y1)** gemäß des vorgenannten Punktes 1.1.4.1, in einem weiteren Aspekt gemäß des vorgenannten Punktes I.1.4.2;

oder die Reste $X^1$, $X^2$, $X^3$, $X^4$, $X^5$ in den Strukturen **(I), (II),** und **(III)** sind unabhängig voneinander jeweils eine Struktur **(X2)** gemäß des vorgenannten Punktes 1.1.3.1, in einem Aspekt unabhängig voneinander jeweils eine Struktur **(X12)** gemäß des vorgenannten Punktes 1.1.3.2, und die Reste $Y^1$, $Y^2$, $Y^3$, $Y^4$, $Y^5$ sind unabhängig voneinander jeweils eine Struktur **(Y2)** gemäß des vorgenannten Punktes 1.1.4.1, in einem weiteren Aspekt gemäß des vorgenannten Punktes I.1.4.2;

oder die Reste $X^1$, $X^2$, $X^3$, $X^4$, $X^5$ in den Strukturen **(I), (II),** und **(III)** sind unabhängig voneinander jeweils eine Struktur **(X3)** gemäß des vorgenannten Punktes 1.1.3.1, in einem Aspekt unabhängig voneinander jeweils eine Struktur **(X13)** gemäß des vorgenannten Punktes 1.1.3.2, und die Reste $Y^1$, $Y^2$, $Y^3$, $Y^4$, $Y^5$ sind unabhängig voneinander jeweils eine Struktur **(Y3)** gemäß des vorgenannten Punktes 1.1.4.1, in einem weiteren Aspekt gemäß des vorgenannten Punktes 1.1.4.2;

oder die Reste $X^1$, $X^2$, $X^3$, $X^4$, $X^5$ in den Strukturen **(I), (II),** und **(III)** sind unabhängig voneinander jeweils eine Struktur

**(X4)** gemäß des vorgenannten Punktes 1.1.3.1, in einem Aspekt unabhängig voneinander jeweils eine Struktur **(X14)** gemäß des vorgenannten Punktes 1.1.3.2, und die Reste $Y^1$, $Y^2$, $Y^3$, $Y^4$, $Y^5$ sind unabhängig voneinander jeweils eine Struktur **(Y4)** gemäß des vorgenannten Punktes 1.1.4.1, in einem weiteren Aspekt gemäß des vorgenannten Punktes 1.1.4.2;

oder die Reste $X^1$, $X^2$, $X^3$, $X^4$, $X^5$ in den Strukturen **(I), (II),** und **(III)** sind unabhängig voneinander jeweils eine Struktur **(X5)** gemäß des vorgenannten Punktes 1.1.3.1, in einem Aspekt unabhängig voneinander jeweils eine Struktur **(X15)** gemäß des vorgenannten Punktes 1.1.3.2, und die Reste $Y^1$, $Y^2$, $Y^3$, $Y^4$, $Y^5$ sind unabhängig voneinander jeweils eine Struktur **(Y5)** gemäß des vorgenannten Punktes 1.1.4.1, in einem weiteren Aspekt gemäß des vorgenannten Punktes 1.1.4.2.

### 1.1.5 Verfahren zur Herstellung der erfindungsgemäßen Polymere P

Die vom erfindungsgemäßen Elektrodenmaterial gemäß des ersten Aspekts der Erfindung umfassten Polymere **P** können gemäß dem Fachmann bekannter Verfahren erhalten werden. Die entsprechenden Verfahren sind in Muench *et al.* zusammengefasst.

Daneben wird die Synthese der Polymere **P** umfassend eine redoxaktive aromatische Imidfunktion **(A)** auch in WO 2015/003725 A1 und US 4,898,915 A beschrieben.

Daneben sind dem Fachmann Polymere umfassend eine redoxaktive aromatische Funktion umfassend mindestens ein stabiles Sauerstoffradikal **(B)** bzw. die Synthese der entsprechenden Polymere **P** auch aus WO 2017/207325 A1, EP 1 752 474 A1, WO 2015/032951 A1, CN 104530424 A, CN 104530426 A, T. Suga, H. Ohshiro, S. Sugita, K. Oyaizu, H. Nishide, Adv. Mater. 2009, 21, 1627 - 1630 und T. Suga, S. Sugita, H. Ohshiro, K. Oyaizu, H. Nishide, Adv. Mater. 2011, 3, 751 - 754 bekannt.

Daneben ist die Synthese der Polymere **P** umfassend eine redoxaktive Anthrachinon-/ Carbazolfunktion **(C)** und die Synthese der Polymere **P** umfassend eine redoxaktive Benzochinonfunktion **(E)** auch beschrieben in bzw. für den Fachmann aufgrund seines Fachwissens routinemäßig möglich aus WO 2015/132374 A1, WO 2015/144798 A1, EP 3 279 223 A1, WO 2018/024901A1, US 2017/0077518 A1, US 2017/0077517 A1, US 2017/0104214 A1, D. Schmidt, B. Häupler, C. Stolze, M.D. Hager, U.S. Schubert, J. Polym. Sci., Part A: Polym. Chem. 2015, 53, 2517 - 2523, M.E. Speer, M. Kolek, J.J. Jassoy, J. Heine, M. Winter, P.M. Bieker, B. Esser, Chem. Commun. 2015, 51, 15261 - 15264 und M. Baibarac, M. Lira-Cantü, J. Oró Sol, I. Baltog, N. Casañ-Pastor, P. Gomez-Romero, Compos. Sci. Technol. 2007, 67, 2556 - 2563.

Daneben ist die Synthese der Polymere **P** umfassend eine redoxaktive Dialkoxybenzolfunktion **(D)** auch beschrieben in WO 2017/032583 A1, EP 3 136 410 A1, EP 3 135 704 A1, WO 2017/032582 A1, P. Nesvadba, L. B. Folger, P. Maire, P. Novak, Synth. Met. 2011, 161, 259 - 262; W. Weng, Z.C. Zhang, A. Abouimrane, P.C. Redfern, L.A. Curtiss, K. Amine, Adv. Funct. Mater. 2012, 22, 4485 -4492.

Daneben ist die Synthese der Polymere **P** umfassend eine redoxaktive Triphenylaminfunktion **(G)** auch beschrieben in JP 2011-74316 A, JP 2011-74317 A.

Daneben ist die Synthese der Polymere **P** umfassend eine redoxaktive Viologenfunktion **(H)** auch beschrieben in CN 107118332 A.

Daneben ist die Synthese der Polymere **P** umfassend eine redoxaktive Ferrocenfunktion **(J)** auch beschrieben in K. Tamura, N. Akutagawa, M. Satoh, J. Wada, T. Masuda, Macromol. Rapid Commun. 2008, 29, 1944 - 1949.

### 1.1.6 Vernetzungen

Die vom erfindungsgemäßen Elektrodenmaterial gemäß des ersten Aspekts der Erfindung umfassten Polymere **P** können sowohl Homopolymere als auch Copolymere sein. Homopolymere sind Polymere, die nur aus einem Monomer synthetisiert wurden. Copolymere sind Polymere, die aus zwei oder mehreren Monomeren synthetisiert wurden. Als weitere Monomere ("Co-Monomere") können solche eingesetzt werden, die über eine polymerisierbare Gruppen verfügen, oder auch über zwei oder mehr polymerisierbaren Gruppen verfügen, wie zum Beispiel Divinylbenzole, Diethinylbenzole, Diethinylthianthrene, Oligo- oder Polyethylenglykoldi(meth)acrylate. Dies führt dann zu zusätzlichen Vernetzungen im Polymer. Dies ist dem Fachmann bekannt (zum Beispiel in der WO 2018/060680 A1, Absatz [0028] beschrieben). Der Vernetzungsgrad der dann erhaltenen Polymere kann nach dem Fachmann bekannten Verfahren durch die Menge des zugegebenen Co-Monomers oder auch zeitlich (zum Beispiel in dem das Co-Monomer erst zugegeben wird, nachdem die Polymerisation fortgeschritten ist) gesteuert werden. Werden zwei oder mehrere Monomere bei der Synthese verwendet, so können die Monomere der Wiederholeinheiten im Polymer **P** gemäß dieser Erfindung in statistischer Verteilung, als Blöcke oder alternierend im Vorliegen.

Somit kann das vom erfindungsgemäßen Elektrodenmaterial umfasste Polymer **P** auch Wiederholungseinheiten aufweisen, die auf den Einsatz von Vernetzern während der Synthese des Polymers **P** zurückzuführen sind. Es

versteht sich somit von selbst, dass zwischen den Wiederholungseinheiten der Struktur **(I), (II),** und **(III)** auch noch auf den Vernetzer zurückzuführende Wiederholungseinheiten im erhaltenen Polymer **P** vorliegen können.

Als Vernetzer eignen sich Verbindungen welche mehr als eine polymerisierbare Gruppe aufweisen, in einem Aspekt ist der Vernetzer ausgewählt aus der Gruppe bestehend aus polyfunktionelle Verbindungen basierend auf (Meth)acrylsäure, polyfunktionelle Verbindungen basierend auf Allylether, polyfunktionelle Verbindungen basierend auf vinylischen Verbindungen. Polyfunktionelle Verbindungen basierend auf (Meth)acrylsäure sind dabei besonders bevorzugt.

Polyfunktionelle Verbindungen basierend auf (Meth)acrylsäure sind insbesondere ausgewählt aus Ethylenglykoldi(meth)acrylat, Diethylenglykoldi(meth)acrylat, Triethylenglykoldi(meth)acrylat, Polyethylenglykoldi(meth)acrylat, 1,3-Propandioldi(meth)acrylat, 2,3-Butandioldi(meth)acrylat, 1,4-Butandioldi(meth)acrylat,1,5-Pentandioldi(meth)acrylat, 1,6-Hexandioldi(meth)acrylat, 1,7-Heptandioldi(meth)acrylat, 1,8-Oktandioldi(meth)acrylat, 1,9-Nonandioldi(meth)acrylat, 1,10-Dekandioldi(meth)acrylat, Trimethylolpropantri(meth)acrylat, Glyceroldi(meth)acrylat, 2-Hydroxy-3-(meth)acryloxypropyl(meth)acrylat.

Polyfunktionelle Verbindungen basierend auf Allylether sind insbesondere ausgewählt aus der Gruppe bestehend aus Diethylenglykoldiallylether, Dibutylenglykoldiallylether.

Eine polyfunktionelle Verbindung basierend auf vinylischen Verbindungen ist insbesondere Divinylbenzol.

1.2 Ionische Flüssigkeiten

Die vorliegende Erfindung beruht auf der überraschenden Erkenntnis, dass bei einem Elektrodenmaterial umfassend das redoxaktive Polymer **P** eine deutliche Kapazitätserhöhung erreicht werden kann, wenn dieses Elektrodenmaterial auch eine ionische Flüssigkeit umfasst. Die verbesserte Kapazitätserhöhung beruht auf der Wechselwirkung der eingelagerten ionischen Flüssigkeit mit dem Polymer **P.** Es wird vermutet, dass der Grund für diese außergewöhnlich starke Verbesserung in der speziellen Struktur des Polymers **P** liegt, welche eine besonders gute Wechselwirkung mit der ionischen Flüssigkeit gewährleistet. Es handelt sich dabei nämlich um ein organisches Polymer, was eine besonders gute Quellfähigkeit aufweist, wenn es mit ionischen Flüssigkeiten versetzt wird. Diese Quellfähigkeit beruht auf der organischen Natur des Polymers **P** und ermöglicht es ihm, einen hohen Anteil an ionischer Flüssigkeit zu binden. Bei metallbasierten Batterien, für die die Einlagerung ionischer Flüssigkeiten beschrieben ist (zum Beispiel Zink-Braunstein-Batterien, wie sie in der US 9,397,341 B1 beschrieben sind), scheidet dieser Mechanismus schon allein aufgrund der metallischen Eigenschaften des Elektrodenmaterials aus. Dessen Bindungskapazität für ionische Flüssigkeiten ist deshalb viel geringer, und die Tendenz zum "Ausbluten" der ionischen Flüssigkeit aus dem Elektrodenmaterial viel ausgeprägter.

Ionische Flüssigkeiten als Bestandteile des Elektrodenmaterials organischer Batterien, die auf einem Polymer **P** beruhen, sind noch nicht beschrieben worden. Der Stand der Technik (zum Beispiel EP 3 279 223 A1) nennt lediglich die Möglichkeit, diese in einer Batteriezelle als Elektrolyt einzusetzen.

Organische Batterien umfassend ionische Flüssigkeiten innerhalb des Elektrodenmaterials sind daneben nur für solche Polymere beschrieben, in denen die Hauptkette konjugiert vorliegt (WO 2017/220965 A1; WO 2018/060680 A1). Da die Ladungen im Polymer **P** gemäß der vorliegenden Erfindung auf die einzelnen redoxaktiven Einheiten lokalisiert sind und nicht wie bei Polymeren des Standes der Technik über die Hauptkette "verschmiert", ermöglicht dies jedoch eine viel bessere Wechselwirkung der ionischen Flüssigkeit mit den redoxaktiven Einheiten im Polymer **P** gegenüber der Wechselwirkung, die für die Wechselwirkung der ionischen Flüssigkeit mit konjugierten Polymeren des Standes der Technik zu erwarten wäre.

Dass das Polymer **P** gemäß der vorliegenden Erfindung mit der ionischen Flüssigkeit eine solch vorteilhafte Wechselwirkung ermöglichen würde, war demnach völlig überraschend.

Demnach sind die im ersten Aspekt der vorliegenden Erfindung einsetzbaren ionischen Flüssigkeiten weiter beschränkt, und es können beispielsweise die in WO 2004/016631 A1, WO 2006/134015 A1, US 2011/0247494 A1 oder US 2008/0251759 A1 beschriebenen eingesetzt werden.

Im Sinne der Erfindung weist die ionische Flüssigkeit, die im Elektrodenmaterial gemäß dem ersten Aspekt der Erfindung eingesetzt wird, die Struktur $Q^+A^-$ auf.

1.2.1 Kationen der ionischen Flüssigkeiten

Dabei ist $Q^+$ ein Kation, welches aus der Gruppe bestehend aus den nachfolgenden Strukturen **(Q1), (Q2), (Q3), (Q4), (Q5),** mit

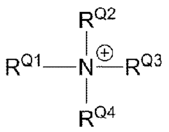 ; 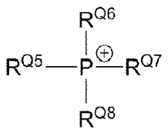 ; 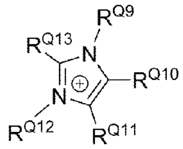 ; 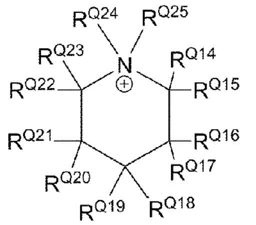 ; 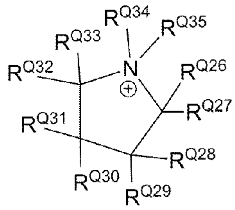 ;

**(Q1)** **(Q2)** **(Q3)** **(Q4)** **(Q5)**

ausgewählt ist,
wobei $R^{Q1}$, $R^{Q2}$, $R^{Q3}$, $R^{Q4}$, $R^{Q5}$, $R^{Q6}$, $R^{Q7}$, $R^{Q8}$ unabhängig voneinander jeweils aus der Gruppe bestehend aus (Halo)Alkylgruppe, Cycloalkylgruppe ausgewählt sind,
und wobei $R^{Q9}$, $R^{Q10}$, $R^{Q11}$, $R^{Q12}$, $R^{Q13}$, $R^{Q14}$, $R^{Q15}$, $R^{Q16}$, $R^{Q17}$, $R^{Q18}$, $R^{Q19}$, $R^{Q20}$, $R^{Q21}$, $R^{Q22}$, $R^{Q23}$, $R^{Q24}$, $R^{Q25}$, $R^{Q26}$, $R^{Q27}$, $R^{Q28}$, $R^{Q29}$, $R^{Q30}$, $R^{Q31}$, $R^{Q32}$, $R^{Q33}$, $R^{Q34}$, $R^{Q35}$ unabhängig voneinander jeweils aus der Gruppe bestehend aus Wasserstoff, (Halo)Alkylgruppe, die mindestens eine Ethergruppe aufweisen kann, Cycloalkylgruppe ausgewählt sind.

In einem Aspekt $Q^+$ ist ein Kation, welches aus der Gruppe bestehend aus den Strukturen **(Q1), (Q2), (Q3), (Q4), (Q5)** ausgewählt ist, wobei $R^{Q1}$, $R^{Q2}$, $R^{Q3}$, $R^{Q4}$, $R^{Q5}$, $R^{Q6}$, $R^{Q7}$, $R^{Q8}$ unabhängig voneinander jeweils aus der Gruppe bestehend aus Alkylgruppe mit 6 bis 40, in einem weiteren Aspekt 10 bis 30 Kohlenstoffatomen, Cycloalkylgruppe mit 6 bis 40, in einem weiteren Aspekt 10 bis 30 Kohlenstoffatomen ausgewählt sind,
und wobei $R^{Q9}$, $R^{Q10}$, $R^{Q11}$, $R^{Q12}$, $R^{Q13}$, $R^{Q14}$, $R^{Q15}$, $R^{Q16}$, $R^{Q17}$, $R^{Q18}$, $R^{Q19}$, $R^{Q20}$, $R^{Q21}$, $R^{Q22}$, $R^{Q23}$, $R^{Q24}$, $R^{Q25}$, $R^{Q26}$, $R^{Q27}$, $R^{Q28}$, $R^{Q29}$, $R^{Q30}$, $R^{Q31}$, $R^{Q32}$, $R^{Q33}$, $R^{Q34}$, $R^{Q35}$ unabhängig voneinander jeweils aus der Gruppe bestehend aus Wasserstoff, Alkylgruppe mit 1 bis 25, in einem Aspekt 1 bis 10 Kohlenstoffatomen, die mindestens eine Ethergruppe aufweisen kann, ausgewählt sind.

In einem weiteren Aspekt ist $Q^+$ ein Kation, welches aus der Gruppe bestehend aus den Strukturen **(Q1), (Q3)** ausgewählt ist, wobei $R^{Q1}$, $R^{Q2}$, $R^{Q3}$, $R^{Q4}$ unabhängig voneinander jeweils aus der Gruppe bestehend aus Alkylgruppe mit 6 bis 30, in einem Aspekt 10 bis 25 Kohlenstoffatomen ausgewählt sind,
wobei $R^{Q9}$, $R^{Q10}$, $R^{Q11}$, $R^{Q12}$, $R^{Q13}$ unabhängig voneinander jeweils aus der Gruppe bestehend aus Wasserstoff, Alkylgruppe mit 1 bis 25, in einem Aspekt 1 bis 10, Kohlenstoffatomen ausgewählt sind und in einem weiteren Aspekt $R^{Q10}$, $R^{Q11}$, $R^{Q13}$ jeweils Wasserstoff sind und $R^{Q9}$, $R^{Q12}$ unabhängig voneinander jeweils ein Alkylrest mit 1 bis 6 Kohlenstoffatomen sind.

In einem weiteren Aspekt ist $Q^+$ ein Kation der Struktur **(Q3)**, wobei $R^{Q10}$, $R^{Q11}$, $R^{Q13}$ jeweils Wasserstoff sind und $R^{Q9}$ aus der Gruppe bestehend aus Methyl, Ethyl, *n*-Propyl, *iso*-Propyl, *n*-Butyl, *sec*-Butyl, *tert*-Butyl ausgewählt ist, und $R^{Q12}$ aus der Gruppe bestehend aus Methyl, Ethyl, *n*-Propyl, *iso*-Propyl, *n*-Butyl, *sec*-Butyl, *tert*-Butyl ausgewählt ist.

In einem weiteren Aspekt ist $Q^+$ ein Kation der Struktur **(Q3)**, wobei $R^{Q10}$, $R^{Q11}$, $R^{Q13}$ jeweils Wasserstoff sind und $R^{Q9}$ aus der Gruppe bestehend aus Methyl, Ethyl, *n*-Butyl, in einem Aspekt aus der Gruppe bestehend aus Ethyl, n-Butyl ausgewählt ist, wobei $R^{Q9}$ am bevorzugtesten Ethyl ist, und $R^{Q12}$ aus der Gruppe bestehend aus Methyl, Ethyl ausgewählt ist, wobei $R^{Q12}$ am bevorzugtesten Methyl ist.

Besonders in einem Aspekt ist als $Q^+$ das 1-Ethyl-3-methylimidazoliumkation.

1.2.2 Anionen der ionischen Flüssigkeiten

In der vorgenannten Formel $Q^+A^-$ ist $A^-$ ein Anion, welches aus der Gruppe bestehend aus Phosphat, Phosphonat, Alkylphosphonat, Monoalkylphosphat, Dialkylphosphat, Bis[trifluormethansulfonyl]imid, (Halo)alkylsulfonat, (Halo)alkylsulfat, Bis[fluorsulfonyl]imid, Halogenid, Dicyanamid, Hexafluorophosphat, Sulfat, Tetrafluoroborat, Trifluormethansulfonat, Perchlorat, Hydrogensulfat, (Halo)alkylcarboxylat, Formiat, Bisoxalatoborat, Tetrachloroaluminat, Dihydrogenphosphat, Monoalkylhydrogenphosphat, Nitrat ausgewählt ist.

In der vorgenannten Formel $Q^+A^-$ ist $A^-$ in einem Aspekt aus der Gruppe bestehend aus Phosphat, Phosphonat, Alkylphosphonat, Monoalkylphosphat, Dialkylphosphat, Bis[trifluormethansulfonyl]imid, Alkylsulfonat, Alkylsulfat, Bis[fluorsulfonyl]imid, Halogenid, Dicyanamid, Hexafluorophosphat, Sulfat, Tetrafluoroborat, Trifluormethansulfonat, Perchlorat, Hydrogensulfat, Alkylcarboxylat, Formiat, Bisoxalatoborat, Tetrachloroaluminat, Dihydrogenphosphat, Monoalkylhydrogenphosphat, Nitrat ausgewählt, wobei die Alkylgruppen in Alkylphosphonat, Monoalkylphosphat, Dialkylphosphat, Alkylsulfonat, Alkylsulfat, Alkylcarboxylat, Monoalkylhydrogenphosphat jeweils 1 bis 10, in einem Aspekt 1 bis 6, in einem weiteren Aspekt 1 bis 4 Kohlenstoffatome aufweisen.

In der vorgenannten Formel $Q^+A^-$ ist $A^-$ in einem weiteren Aspekt aus der Gruppe bestehend aus Dialkylphosphat, Bis[trifluormethansulfonyl]imid, Alkylsulfonat, Bis[fluorsulfonyl]imid, Chlorid Dicyanamid, Hexafluorophosphat, Tetrafluoroborat, Trifluormethansulfonat, Perchlorat, Acetat, Proprionat, Formiat, Tetrachloroaluminat, Monoalkylhydrogenphosphat, Nitrat ausgewählt, wobei die Alkylgruppen in Dialkylphosphat, Alkylsulfonat, Monoalkylhydrogenphosphat jeweils 1 bis 10, in einem Aspekt 1 bis 6, in einem weiteren Aspekt 1 bis 4 Kohlenstoffatome aufweisen.

In der vorgenannten Formel $Q^+A^-$ ist $A^-$ in einem weiteren Aspekt aus der Gruppe bestehend aus Diethylphosphat, Bis[trifluormethansulfonyl]imid, Methansulfonat, Bis[fluorsulfonyl]imid, Chlorid Dicyanamid, Hexafluorophosphat, Tetrafluoroborat, Trifluormethansulfonat, Perchlorat, Acetat, Proprionat, Formiat, Tetrachloroaluminat, Monoethylhydrogenphosphat, Nitrat ausgewählt.

In der vorgenannten Formel $Q^+A^-$ ist $A^-$ in einem weiteren Aspekt aus der Gruppe bestehend aus Trifluormethansulfonat, Bis[trifluormethansulfonyl]imid, Diethlyphosphat, Dicyanamid, am bevorzugtesten aus der Gruppe bestehend aus Trifluormethansulfonat, Bis[trifluormethansulfonyl]imid ausgewählt, am allerbevorzugtesten Trifluormethansulfonat.

1.2.3 Menge der eingesetzten ionischen Flüssigkeit

Die Menge der eingesetzten ionischen Flüssigkeit ist nicht weiter beschränkt. Es ist jedoch bevorzugt, dass das Gesamtgewicht der vom Elektrodenmaterial gemäß dem ersten Aspekt der Erfindung umfassten ionischen Flüssigkeit bezogen auf das Gesamtgewicht des vom Elektrodenmaterial umfassten, in der Hauptkette nichtkonjugierten, organischen Redox-Polymers P im Bereich 0.1 bis 1000 Gew.-%, in einem weiteren Aspekt im Bereich 1 bis 500 Gew.-%, in einem weiteren Aspekt im Bereich 5 bis 200 Gew.-% liegt, in einem weiteren Aspekt im Bereich 40 bis 160 Gew.-% liegt, noch viel mehr in einem weiteren Aspekt im Bereich 80 bis 120 Gew.-% liegt, am bevorzugtesten 100 Gew.-% beträgt.

1.3 Leitfähigkeitsadditiv

Das Elektrodenmaterial gemäß dem ersten Aspekt der vorliegenden Erfindung umfasst auch ein Leitfähigkeitsadditiv.

1.3.1 Bevorzugte Leitfähigkeitsadditive

Das Leitfähigkeitsadditiv ist mindestens ein elektrisch leitendes Material, insbesondere ausgewählt aus der Gruppe bestehend aus Kohlenstoffmaterialien, elektrisch leitenden Polymeren, Metallen, Halbmetallen, (Halb)metallverbindungen, in einem Aspekt ausgewählt aus Kohlenstoffmaterialien, elektrisch leitenden Polymeren.

"(Halb)metalle" sind erfindungsgemäß aus der Gruppe bestehend aus Metallen, Halbmetallen ausgewählt, und sind in einem Aspekt Metalle.

Das Leitfähigkeitsadditiv ist in einem weiteren Aspekt ein Kohlenstoffmaterial. Kohlenstoffmaterialien sind insbesondere aus der Gruppe bestehend aus Kohlenstofffasern, Kohlenstoffnanoröhren, Graphit, Graphen, Ruß, Fulleren ausgewählt.

Elektrisch leitende Polymere sind insbesondere aus der Gruppe bestehend aus Polypyrrolen, Polyanilinen, Polyphenylenen, Polypyrenen, Polyazulenen, Polynaphthylenen, Polycarbazolen, Polyindolen, Polyazepinen, Polyphenylensulfiden, Polythiophenen, Polyacetylenen, Poly(3,4-ethylendioxythiophen)polystyrensulfonat (= PEDOT:PSS), Polyarcene, Poly-(*p*-phenylenvinylen) ausgewählt.

Metalle sind insbesondere ausgewählt aus der Gruppe bestehend aus Zink, Eisen, Kupfer, Silber, Gold, Chrom, Nickel, Zinn, Indium.

Halbmetalle sind insbesondere ausgewählt aus Silicium, Germanium, Gallium, Arsen, Antimon, Selen, Tellur, Polonium

1.3.2 Bevorzugte Menge der Leitfähigkeitsadditive

Die Menge des eingesetzten Leitfähigkeitsadditivs ist nicht weiter beschränkt. Es ist jedoch bevorzugt, dass das Gesamtgewicht des vom Elektrodenmaterial gemäß dem ersten Aspekt der Erfindung umfassten Leitfähigkeitsadditivs bezogen auf das Gesamtgewicht des vom Elektrodenmaterial umfassten Redox-Polymers P im Bereich 0.1 bis 1000 Gew.-%, in einem Aspekt im Bereich 10 bis 500 Gew.-%, in einem weiteren Aspekt im Bereich 30 bis 100 Gew.-%, in einem weiteren Aspekt im Bereich 40 bis 80 Gew.-% liegt, in einem weiteren Aspekt 50 Gew.-% bis 60 Gew.-%, am bevorzugtesten 58.3 Gew.-% beträgt.

1.4 Bindeadditiv

Das Elektrodenmaterial gemäß dem ersten Aspekt der vorliegenden Erfindung kann auch ein Bindeadditiv umfassen.

Bindeadditive sind dem Fachmann geläufig als Materialien mit Bindeeigenschaften. Es sind bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylat, Polymethacrylat, Polysulfon, Cellulosederivate, Polyurethan, und bevorzugter handelt es sich dabei um Polyvinylidenfluorid.

Die Menge des eingesetzten Bindeadditivs ist in den Fällen, in denen das Elektrodenmaterial gemäß dem ersten Aspekt der Erfindung ein solches umfasst, nicht weiter beschränkt. Es ist in diesen Fällen jedoch bevorzugt, dass das Gesamtgewicht des vom Elektrodenmaterial umfassten Bindeadditivs, bezogen auf das Gesamtgewicht des vom Elektrodenmaterial umfassten Redox-Polymers **P** im Bereich 0.001 bis 100 Gew.-%, in einem weiteren Aspekt im Bereich 0.083 bis 90 Gew.-%, in einem weiteren Aspekt im Bereich 3 bis 70 Gew.-%, in einem weiteren Aspekt im Bereich 5 bis 50 Gew.-%, noch viel mehr in einem weiteren Aspekt im Bereich 8.3 bis 20 Gew.-%, am bevorzugtesten bei 16.6 Gew.-% liegt.

1.5 Elektrode und Ladungsspeicher

1.5.1 Elektrode

Die vorliegende Erfindung betrifft auch eine Elektrode (anderes Wort "Elektrodenelement") umfassend das erfindungsgemäße Elektrodenmaterial des ersten Aspekts der vorliegenden Erfindung, und ein Substrat.

Das Substrat des Elektrodenelements ist insbesondere ausgewählt aus leitfähigen Materialien, bevorzugt Metallen, Kohlenstoffmaterialien, Oxidsubstanzen.

In einem Aspekt als Substrat des Elektrodenelementes geeignete Metalle sind ausgewählt aus Platin, Gold, Eisen, Kupfer, Aluminium, Zink oder eine Kombination aus diesen Metallen. In einem weiteren Aspekt als Substrat des Elektrodenelementes geeignete Kohlenstoffmaterialien, sind ausgewählt aus Glaskohlenstoff, Graphitfolie, Graphen, Kohlenstofffelle. In einem weiteren Aspekt als Substrat des Elektrodenelementes geeignete Oxidsubstanzen sind beispielsweise ausgewählt aus der Gruppe bestehend aus Indiumzinnoxid (ITO), Indiumzinkoxid (IZO), Antimonzinkoxid (AZO), Fluorzinnoxid (FTO) oder Antimonzinnoxid (ATO), Zinkoxid (ZO).

Die Oberflächenschicht des Elektrodenelements umfasst zumindest das erfindungsgemäße Elektrodenmaterial gemäß dem ersten Aspekt der Erfindung als redoxaktives Material zur Ladungsspeicherung.

Das erfindungsgemäße Elektrodenmaterial gemäß dem ersten Aspekt der Erfindung wird dabei insbesondere als Elektrodenslurry auf das Substrat des Elektrodenelementes aufgebracht.

Der Elektrodenslurry ist in diesem Fall insbesondere eine Lösung oder Suspension und umfasst das erfindungsgemäße Polymer **P**, die vorstehend beschriebene ionische Flüssigkeit sowie insbesondere das vorstehend beschriebene Leitfähigkeitsadditiv und gegebenenfalls das vorstehend beschriebene Bindeadditiv.

Der Elektrodenslurry umfasst in einem Aspekt ein Lösungsmittel.

Als Lösungsmittel für den Elektrodenslurry werden unabhängig voneinander ein oder mehrere Lösungsmittel, in einem Aspekt Lösungsmittel mit hohem Siedepunkt, bevorzugter ausgewählt aus der Gruppe bestehend aus *N*-Methyl-2-pyrrolidon, Wasser, Dimethylsulfoxid, Ethylencarbonat, Propylencarbonat, Dimethylcarbonat, Methylethylcarbonat, γ-Butyrolacton, Tetrahydrofuran, Dioxolan, Sulfolan, *N*,*N*'-Dimethylformamid, *N*,*N*'-Dimethylacetamid, in einem Aspekt *N*-Methyl-2-pyrrolidon, Wasser, in einem weiteren Aspekt *N*-Methyl-2-pyrrolidon verwendet. Die Konzentration des redoxaktiven Materials, insbesondere des erfindungsgemäßen Redox-Polymers **P**, zur Speicherung elektrischer Energie im oben genannten Elektrodenslurry beträgt in einem Aspekt zwischen 1 und 100 mg/ml, besonders in einem Aspekt zwischen 5 und 50 mg/ml.

In dem Aspekt, in der das erfindungsgemäße Elektrodenmaterial dabei als mindestens teilweise Oberflächenbeschichtung von Elektrodenelementen für elektrische Ladungsspeicher, insbesondere Sekundärbatterien, ausgebildet ist, weist ein Elektrodenelement mindestens teilweise eine Schicht auf einer Substratoberfläche auf. Diese Schicht umfasst insbesondere das Elektrodenmaterial gemäß dem ersten Aspekt der Erfindung, umfassend mindestens ein Leitfähigkeitsadditiv, mindestens eine ionische Flüssigkeit und mindestens ein in der Hauptkette nichtkonjugiertes, organisches Redox-Polymer **P** redoxaktives Material zur Ladungsspeicherung sowie gegebenenfalls auch zumindest ein Bindeadditiv.

Die Aufbringung des erfindungsgemäßen Elektrodenmaterials gemäß dem ersten Aspekt der Erfindung (anderer Ausdruck für Zusammensetzung: "Komposit") auf dem Substrat ist mittels dem Fachmann bekannten Verfahren möglich. Insbesondere wird das erfindungsgemäße Elektrodenmaterial gemäß dem ersten Aspekt der Erfindung als Elektrodenslurry auf dem Substrat mittels Rakeln, Schlitzdüsenbeschichtung, Siebdruck oder Schablonendruck aufgebracht.

1.5.2 Ladungsspeicher

Die vorliegende Erfindung betrifft auch einen elektrischen Ladungsspeicher, insbesondere eine Sekundärbatterie, umfassend die erfindungsgemäße Elektrode.

Allgemein sind redoxaktive Elektrodenmaterialien zur Speicherung elektrischer Energie Materialien, welches elektrische Ladung beispielsweise durch Aufnahme bzw. Abgabe von Elektronen speichern und wieder abgeben kann. Das erfindungsgemäße Elektrodenmaterial gemäß dem ersten Aspekt der Erfindung kann demnach beispielsweise als aktives Elektrodenmaterial in einem elektrischen Ladungsspeicher eingesetzt werden. Solche elektrischen Ladungsspeicher zur Speicherung elektrischer Energie sind insbesondere aus der Gruppe bestehend aus Sekundärbatterien (auch "Akkumulatoren" genannt), Redox-Flowbatterien, Superkondensatoren ausgewählt und in einem Aspekt Sekundärbatterien.

In einem Aspekt handelt es sich bei dem elektrischen Ladungsspeicher um eine Sekundärbatterie. Eine Sekundärbatterie umfasst eine negative und eine positive Elektrode, die durch einen Separator voneinander getrennt werden, sowie einem Elektrolyt, welcher die Elektroden und den Separator umschließt.

Der Separator ist eine poröse Schicht, die ionendurchlässig ist und den Ladungsausgleich ermöglicht. Die Aufgabe des Separators besteht darin, die positive Elektrode von der negativen Elektrode zu trennen und den Ladungsausgleich durch Permeation von Ionen zu ermöglichen. Als Separator der sekundären Batterie wird insbesondere ein poröses Material, in einem Aspekt eine Membran bestehend aus einer polymeren Verbindung, wie beispielsweise Polyolefin, Polyamid, oder Polyester, verwendet. Weiterhin können Separatoren aus porösen keramischen Materialien, Glasmikrofaser, verwendet werden.

Die Hauptaufgabe des Elektrolyten ist, die lonenleitfähigkeit zu gewährleisten, die zum Ladungsausgleich nötig ist. Der Elektrolyt der sekundären Batterie kann sowohl eine Flüssigkeit als auch eine oligomere oder polymere Verbindung mit hoher lonenleitfähigkeit ("*gel electrolyte*" oder "*solid state electrolyte*") sein. In einem Aspekt ist er aber eine oligomere oder polymere Verbindung.

Ist der Elektrolyt flüssig, so setzt er sich insbesondere aus einem oder mehreren Lösungsmitteln und einem oder mehreren Leitsalzen zusammen.

Das Lösungsmittel der Elektrolyten umfasst in einem Aspekt ein einem Aspekt unabhängig voneinander eines oder mehrere Lösungsmittel mit hohem Siedepunkt und hoher lonenleitfähigkeit, aber niedriger Viskosität, wie beispielsweise Acetonitril, Dimethylsulfoxid, Ethylencarbonat, Propylencarbonat, Dimethylcarbonat, Diethylcarbonat, Methylethylcarbonat, $\gamma$-Butyrolacton, Tetrahydrofuran, Dioxolan, 1,2-Dimethoxyethan, 1,2-Diethoxyethan, Diglyme, Triglyme, Tetraglyme, Ethylacetat, 1,3-Dioxolan oder Wasser.

Das Leitsalz des Elektrolyten besteht aus einem Kation der Formel $M^{e+}$ und einem Anion oder Formel $An^{f-}$ der Formel $(M^{e+})_a(An^{f-})_b$, wobei e und f ganze Zahlen in Abhängigkeit der Ladung von M und An sind und a und b ganze Zahlen sind, welche die molekulare Zusammensetzung des Leitsalzes repräsentieren.

Als Kation des oben genannten Leitsalzes werden positiv geladene Ionen, in einem Aspekt Metalle der ersten und zweiten Hauptgruppe, wie beispielsweise Lithium, Natrium, Kalium oder Magnesium, aber auch andere Metalle der Nebengruppen, wie Zink, sowie organische Kationen, wie beispielsweise quartäre Ammoniumverbindungen wie Tetraalkylammoniumverbindungen, verwendet.

Als Anionen des besagten Leitsalzes werden in einem Aspekt anorganische Anionen, wie Hexafluorophosphat, Tetrafluoroborat, Triflat, Hexafluoroarsenat, Hexafluoroantimonat, Tetrafluoroaluminat, Tetrafluoroindat, Perchlorat, Bis(oxolato)borat, Tetrachloroaluminiat, Tetrachlorogallat, aber auch organische Anionen, wie beispielsweise $N(CF_3SO_2)_2^-$, $CF_3SO_3^-$, Alkoholate, wie beispielsweise, tert-Butanolat oder iso-Propylalkoholat, aber auch Halogenide, wie Fluorid, Chlorid, Bromid sowie lodid, verwendet.

Werden ionische Flüssigkeiten verwendet, können diese sowohl als Lösungsmittel des Elektrolyten, als Leitsalz aber auch als kompletter Elektrolyt verwendet werden.

Wird das erfindungsgemäß verwendete Polymer **P** als redoxaktives Material für elektrische Ladungsspeicher als positives Elektrodenelement verwendet, so kann als redoxaktives Material zur elektrischen Ladungsspeicherung in der negativen Elektrode ein Material verwendet werden, welches eine Redoxreaktion bei einem niedrigeren elektrochemischen Potential als das Polymer dieser Erfindung zeigt. In einem Aspekt sind solche Materialien ausgewählt aus der Gruppe bestehend aus Kohlenstoffmaterialien, die insbesondere aus der Gruppe bestehend aus Graphit, Graphen, Ruß, Kohlenstofffasern, Kohlenstoffnanoröhren ausgewählt sind, Metalle oder Legierungen, die insbesondere aus der Gruppe bestehend aus Lithium, Natrium, Magnesium, Lithium-Aluminium, Li-Si, Li-Sn, Li-Ti, Si, SiO, $SiO_2$, Si-$SiO_2$-Komplex, Zn, Sn, SnO, $SnO_2$, PbO, $PbO_2$, GeO, $GeO_2$, $WO_2$, $MoO_2$, $Fe_2O_3$, $Nb_2O_5$, $TiO_2$, $Li_4Ti_5O_{12}$, und $Li_2Ti_3O_7$ ausgewählt sind, sowie organische redoxaktive Materialien. Beispiele organischer redoxaktiver Materialien sind Verbindungen mit einem stabilen organischen Radikal, Verbindungen mit einer Organoschwefeleinheit, mit einer Chinonstruktur, Verbindungen mit einem Dionsystem, konjugierte Carbonsäuren und deren Salze, Verbindungen mit einer Phtalimid- bzw. Naphtalimidstruktur, Verbindungen mit einer Disulfidverbindung sowie Verbindungen mit einer Phenanthrenstruktur und deren Derivate. Wird in der negativen Elektrode eine oben genannte redoxaktive oligomere oder polymere Verbindung

eingesetzt, so kann diese Verbindung auch ein Komposit, also eine Zusammensetzung, sein, bestehend aus dieser oligomeren oder polymeren Verbindung, einem Leitfähigkeitsadditiv und einem Bindeadditiv in einem beliebigen Verhältnis. Das Leitfähigkeitsadditiv ist auch in diesem Fall insbesondere mindestens ein elektrisch leitendes Material, in einem Aspekt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstofffasern, Kohlenstoffnanoröhren, Graphit, Ruß, Graphen ausgewählt, und sind besonders in einem Aspekt Kohlenstofffasern. Elektrisch leitende Polymere sind insbesondere aus der Gruppe bestehend aus Polyanilinen, Polythiophenen, Polyacetylenen, Poly(3,4-ethylendioxythiophen) polystyrensulfonat (= "PEDOT:PSS"), Polyarcene ausgewählt. Bindeadditive sind auch in diesem Fall insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylat, Polymethacrylat, Polysulfon, Cellulosederivate, Polyurethan.

Dieses Komposit kann wie oben beschrieben mit Hilfe eines Elektrodenslurrys durch ein bekanntes Verfahren zur Filmbildung als Schicht auf einem Substrat aufgetragen werden.

II. Zweiter Aspekt der Erfindung: Verfahren zur Herstellung einer Elektrode

Die vorliegende Erfindung betrifft in einem zweiten Aspekt auch ein Verfahren zur Herstellung einer Elektrode umfassend die folgenden Schritte:

(a) mindestens ein in der Hauptkette nichtkonjugiertes, organisches Redox-Polymer **P**, mindestens eine ionische Flüssigkeit, mindestens ein Leitfähigkeitsadditiv, gegebenenfalls mindestens ein Lösungsmittel und gegebenenfalls mindestens ein Bindeadditiv, werden vermischt, wodurch eine Mischung **M** erhalten wird,
(b) die Mischung **M** wird auf ein Substrat aufgetragen,
(c) gegebenenfalls wird das Lösungsmittel mindestens teilweise entfernt.

wobei in Schritt (a) ein wie in dem ersten Aspekt definiertes nichtkonjugiertes, organisches Redox-Polymer **P** eingesetzt wird,

und wobei in Schritt (a) eine wie in dem ersten Aspekt definierte ionische Flüssigkeit der Struktur $Q^+A^-$ eingesetzt wird.

**Schritt (a) des erfindungsgemäßen Verfahrens**

Im Schritt (a) des erfindungsgemäßen Verfahrens werden

- mindestens ein in der Hauptkette nichtkonjugiertes, organisches Redox-Polymer **P**;
- mindestens eine ionische Flüssigkeit;
- mindestens ein Leitfähigkeitsadditiv;
- gegebenenfalls mindestens ein Lösungsmittel;
- und gegebenenfalls mindestens ein Bindeadditiv;

vermischt, wodurch eine Mischung **M** erhalten wird.

Bei der nach Schritt (a) des erfindungsgemäßen Verfahrens erhaltenen Mischung M handelt es sich insbesondere um einen Elektrodenslurry.

11.1 Im erfindungsgemäßen Verfahren eingesetztes Redox-Polymer **P**

Das im erfindungsgemäßen Verfahren zur Herstellung einer Elektrode gemäß dem zweiten Aspekt der vorliegenden Erfindung eingesetzte, in der Hauptkette nichtkonjugierte, organische Redox-Polymer **P** setzt sich im Sinne der Erfindung aus zwei Strukturmerkmalen zusammen:

(1) einem Polymerrückgrat (der "Hauptkette"), in welchem keine Konjugation vorliegt,
(2) redoxaktive organischen Reste, die mit dem Polymerrückgrat regelmäßig oder unregelmäßig verbunden sind, innerhalb welcher eine Konjugation vorliegt oder nicht vorliegt.

II.1.$\alpha$) Im Sinne der Erfindung umfasst das im erfindungsgemäßen Verfahren zur Herstellung einer Elektrode gemäß dem zweiten Aspekt der vorliegenden Erfindung eingesetzte, in der Hauptkette nichtkonjugierte, organische Redox-Polymer **P** $n^1$ miteinander verknüpfte Wiederholungseinheiten der chemischen Struktur **(I)** und/oder $n^2$ miteinander verknüpfte Wiederholungseinheiten der chemischen Struktur **(II)** und/oder $n^3$ miteinander verknüpfte Wiederho-

lungseinheiten der chemischen Struktur **(III)**, in einem Aspekt $n^1$ miteinander verknüpfte Wiederholungseinheiten der chemischen Struktur **(I)** und/oder $n^3$ miteinander verknüpfte Wiederholungseinheiten der chemischen Struktur **(III)**, in einem weiteren Aspekt $n^1$ miteinander verknüpfte Wiederholungseinheiten der chemischen Struktur **(I)** mit

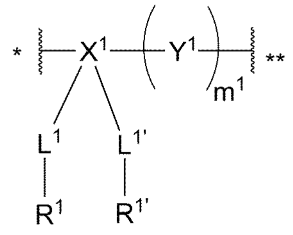

;

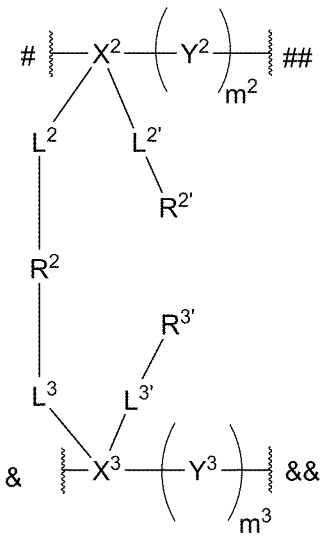

;

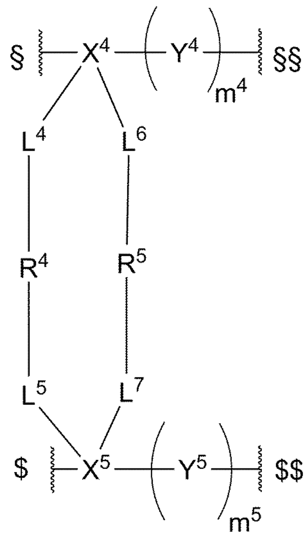

;

**(I)** **(II)** **(III)** ,

wobei $n^1$, $n^2$ und $n^3$ unabhängig voneinander jeweils eine ganze Zahl ≥ 4, in einem Aspekt eine ganze Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ sind,

wobei $m^1$, $m^2$, $m^3$, $m^4$ und $m^5$ unabhängig voneinander jeweils eine ganze Zahl ≥ 0, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 sind,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(II)** innerhalb des Polymers **P** gleich oder zumindest teilweise voneinander verschieden sind,

wobei die Wiederholungseinheiten der chemischen Struktur **(III)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei die Wiederholungseinheiten der chemischen Struktur **(II)** innerhalb des Polymers so miteinander verknüpft sind, dass die durch "##" gekennzeichnete Bindung einer bestimmten Wiederholungseinheit mit der durch "#" gekennzeichneten Bindung der benachbarten Wiederholungseinheit verknüpft ist und die durch "&&" gekennzeichnete Bindung einer bestimmten Wiederholungseinheit mit der durch "&" gekennzeichneten Bindung der benachbarten Wiederholungseinheit verknüpft ist,

wobei die Wiederholungseinheiten der chemischen Struktur **(III)** innerhalb des Polymers so miteinander verknüpft sind, dass die durch "§§" gekennzeichnete Bindung einer bestimmten Wiederholungseinheit mit der durch "§" gekennzeichneten Bindung der benachbarten Wiederholungseinheit verknüpft ist und die durch "$$" gekennzeichnete Bindung einer bestimmten Wiederholungseinheit mit der durch "$" gekennzeichneten Bindung der benachbarten Wiederholungseinheit verknüpft ist,

in einem Aspekt

und wobei $R^1$, $R^2$, $R^4$, $R^5$, $R^{1'}$, $R^{2'}$, $R^{3'}$ in den Strukturen (I), (II) bzw (III) unabhängig voneinander jeweils eine organische redoxaktive Gruppe, die in einem Aspekt aus der Gruppe bestehend aus redoxaktive aromatische Imidfunktion **(A)**, redoxaktive organische Funktion umfassend mindestens ein stabiles Sauerstoffradikal **(B),** redoxaktive Anthrachinon-/ Carbazolfunktion **(C),** redoxaktive Dialkoxybenzolfunktion **(D),** redoxaktive Benzochinonfunktion **(E),** redoxaktive Triphenylaminfunktion **(G),** redoxaktive Viologenfunktion **(H),** redoxaktive Ferrocenfunktion **(J)** ausgewählt ist, sind, und $R^{1'}$, $R^{2'}$, $R^{3'}$ auch jeweils ein Wasserstoffrest sein können,

und wobei in einem weiteren Aspekt $R^1$, $R^2$, $R^4$, $R^5$ unabhängig voneinander jeweils eine organische redoxaktive Gruppe, die in einem Aspekt aus der Gruppe bestehend aus redoxaktive aromatische Imidfunktion **(A)**, redoxaktive organische Funktion umfassend mindestens ein stabiles Sauerstoffradikal **(B),** redoxaktive Anthrachinon-/ Carbazolfunktion **(C),** redoxaktive Dialkoxybenzolfunktion **(D),** redoxaktive Benzochinonfunktion **(E),** redoxaktive Triphenylaminfunktion **(G),** redoxaktive Viologenfunktion **(H),** redoxaktive Ferrocenfunktion **(J)** ausgewählt ist, sind, und $R^{1'}$, $R^{2'}$, $R^{3'}$ jeweils ein Wasserstoffrest ist,

und wobei in einem weiteren Aspekt $R^1$, $R^2$, $R^4$, $R^5$ unabhängig voneinander jeweils eine organische redoxaktive Gruppe, die aus der Gruppe bestehend aus redoxaktive organische Funktion umfassend mindestens ein stabiles Sauerstoffradikal **(B)**, redoxaktive Anthrachinon-/ Carbazolfunktion **(C)** ausgewählt ist, sind, und $R^{1'}$, $R^{2'}$, $R^{3'}$ jeweils ein Wasserstoffrest ist.

Die Wiederholungseinheiten der chemischen Struktur **(I)** sind innerhalb des Polymers **P** gemäß Punkt II.1.$\alpha$) gleich oder zumindest teilweise voneinander verschieden. Die Wiederholungseinheiten der chemischen Struktur **(II)** sind innerhalb des Polymers **P** gemäß Punkt II.1.$\alpha$) gleich oder zumindest teilweise voneinander verschieden. Die Wiederholungseinheiten der chemischen Struktur **(III)** sind innerhalb des Polymers **P** gemäß Punkt II.1.$\alpha$) gleich oder zumindest teilweise voneinander verschieden.

"Zumindest teilweise voneinander verschieden" bedeutet, dass sich mindestens zwei Wiederholungseinheiten voneinander unterscheiden.

Das heißt insbesondere im Falle der chemischen Struktur **(I)**, dass sich mindestens zwei der $n^1$ miteinander verknüpften, vom Polymer **P** umfassten Wiederholungseinheiten in mindestens einem der Reste $R^1$, $R^{1'}$, $L^1$, $L^{1'}$, $X^1$, $Y^1$ und/oder in dem Wert von $m^1$ unterscheiden.

Das heißt insbesondere im Falle der chemischen Struktur **(II)**, dass sich mindestens zwei der $n^2$ miteinander verknüpften, vom Polymer **P** umfassten Wiederholungseinheiten in mindestens einem der Reste $R^2$, $R^{2'}$, $R^{3'}$, $L^2$, $L^{2'}$, $L^3$, $L^{3'}$, $X^2$, $X^3$, $Y^2$, $Y^3$ und/oder in dem Wert von $m^2$ oder $m^3$ unterscheiden.

Das heißt insbesondere im Falle der chemischen Struktur **(III)**, dass sich mindestens zwei der $n^3$ miteinander verknüpften, vom Polymer **P** umfassten Wiederholungseinheiten in mindestens einem der Reste $R^4$, $R^5$, $L^4$, $L^5$, $L^6$, $L^7$, $X^4$, $X^5$, $Y^4$, $Y^5$ und/oder in dem Wert von $m^4$ oder $m^5$ unterscheiden.

Die Endgruppe der ersten Wiederholungseinheit des erfindungsgemäßen Redox-Polymers **P**, welche sich für diese in der chemischen Struktur **(I)** an der durch "*" gekennzeichneten Bindung befindet, sowie die Endgruppe der $n^1$-ten Wiederholungseinheit des erfindungsgemäßen Redox-Polymers **P**, welche sich für diese in der chemischen Struktur **(I)** an der durch "**" gekennzeichneten Bindung befindet, ergeben sich aus der bei der Herstellungsmethode des erfindungsgemäßen Redox-Polymers **P** verwendeten Polymerisationsmethode. So kann es sich dabei um Abbruchfragmente eines Initiators oder einer Wiederholungseinheit handeln. In einem Aspekt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher in einem Aspekt Phenylrest, Benzylrest oder $\alpha$-Hydroxybenzyl ist.

Die Endgruppen der ersten Wiederholungseinheit des erfindungsgemäßen Redox-Polymers **P**, welche sich für diese in der chemischen Struktur **(II)** an den durch "#" und "&" gekennzeichneten Bindungen befinden, sowie die Endgruppen der $n^2$-ten Wiederholungseinheit des erfindungsgemäßen Redox-Polymers **P**, welche sich für diese in der chemischen Struktur **(II)** an den durch "##" und "&&" gekennzeichneten Bindungen befinden, ergeben sich aus der bei der Herstellungsmethode des erfindungsgemäßen Redox-Polymers **P** verwendeten Polymerisationsmethode. So kann es sich dabei um Abbruchfragmente eines Initiators oder einer Wiederholungseinheit handeln. In einem Aspekt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher in einem Aspekt Phenylrest, Benzylrest oder $\alpha$-Hydroxybenzyl ist.

Die Endgruppen der ersten Wiederholungseinheit des erfindungsgemäßen Redox-Polymers **P**, welche sich für diese in der chemischen Struktur **(III)** an den durch "§" und "$" gekennzeichneten Bindungen befinden, sowie die Endgruppen der $n^3$-ten Wiederholungseinheit des erfindungsgemäßen Redox-Polymers **P**, welche sich für diese in der

chemischen Struktur **(III)** an den durch "§§" und $$" gekennzeichneten Bindungen befinden, ergeben sich aus der bei der Herstellungsmethode des erfindungsgemäßen Redox-Polymers **P** verwendeten Polymerisationsmethode. So kann es sich dabei um Abbruchfragmente eines Initiators oder einer Wiederholungseinheit handeln. In einem Aspekt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher in einem Aspekt Phenylrest, Benzylrest oder α-Hydroxybenzyl ist.

II.1.β) In einem Aspekt einem Aspekt der Erfindung, wie er unter Punkt II.1.α) definiert ist, umfasst das im erfindungsgemäßen Verfahren zur Herstellung einer Elektrode gemäß dem zweiten Aspekt der vorliegenden Erfindung eingesetzte, in der Hauptkette nichtkonjugierte, organische Redox-Polymer **P** $n^1$ miteinander verknüpfte Wiederholungseinheiten der chemischen Struktur **(I)** mit

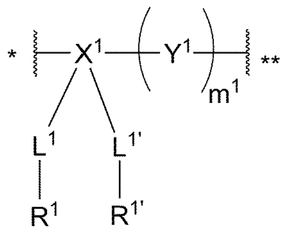 ;

**(I)**

wobei $n^1$ eine ganze Zahl ≥ 4, in einem Aspekt eine ganze Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl ≥ 0, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

in einem Aspekt

wobei $R^1$, $R^{1'}$ in der Struktur (I) unabhängig voneinander jeweils eine organische redoxaktive Gruppe, die in einem Aspekt aus der Gruppe bestehend aus redoxaktive aromatische Imidfunktion **(A),** redoxaktive organische Funktion umfassend mindestens ein stabiles Sauerstoffradikal **(B),** redoxaktive Anthrachinon-/ Carbazolfunktion **(C),** redoxaktive Dialkoxybenzolfunktion **(D),** redoxaktive Benzochinonfunktion **(E),** redoxaktive Triphenylaminfunktion **(G),** redoxaktive Viologenfunktion **(H),** redoxaktive Ferrocenfunktion **(J)** ausgewählt ist, sind, und $R^{1'}$ auch ein Wasserstoffrest sein kann,

und wobei in einem weiteren Aspekt $R^1$ eine organische redoxaktive Gruppe, die in einem Aspekt aus der Gruppe bestehend aus redoxaktive aromatische Imidfunktion **(A)**, redoxaktive organische Funktion umfassend mindestens ein stabiles Sauerstoffradikal **(B)**, redoxaktive Anthrachinon-/ Carbazolfunktion **(C),** redoxaktive Dialkoxybenzolfunktion **(D),** redoxaktive Benzochinonfunktion **(E)**, redoxaktive Triphenylaminfunktion **(G)**, redoxaktive Viologenfunktion **(H)**, redoxaktive Ferrocenfunktion **(J)** ausgewählt ist, ist und $R^{1'}$ ein Wasserstoffrest ist,

und wobei in einem weiteren Aspekt $R^1$ eine organische redoxaktive Gruppe, die aus der Gruppe bestehend aus redoxaktive organische Funktion umfassend mindestens ein stabiles Sauerstoffradikal **(B),** redoxaktive Anthrachinon-/ Carbazolfunktion **(C),** ausgewählt ist, ist, und $R^{1'}$ ein Wasserstoffrest ist.

Die Wiederholungseinheiten der chemischen Struktur **(I)** sind innerhalb des Polymers **P** gemäß Punkt II.1.β) gleich oder zumindest teilweise voneinander verschieden.

"Zumindest teilweise voneinander verschieden" bedeutet, dass sich mindestens zwei Wiederholungseinheiten

voneinander unterscheiden.

Das heißt insbesondere im Falle der chemischen Struktur (I), dass sich mindestens zwei der $n^1$ miteinander verknüpften, vom Polymer **P** umfassten Wiederholungseinheiten in mindestens einem der Reste $R^1$, $R^{1'}$, $L^1$, $L^{1'}$, $X^1$, $Y^1$ und/oder in dem Wert von $m^1$ unterscheiden.

Die Endgruppe der ersten Wiederholungseinheit des erfindungsgemäßen Redox-Polymers **P**, welche sich für diese in der chemischen Struktur **(I)** an der durch "*" gekennzeichneten Bindung befindet, sowie die Endgruppe der $n^1$-ten Wiederholungseinheit des erfindungsgemäßen Redox-Polymers **P**, welche sich für diese in der chemischen Struktur **(I)** an der durch "**" gekennzeichneten Bindung befindet, ergeben sich aus der bei der Herstellungsmethode des erfindungsgemäßen Redox-Polymers **P** verwendeten Polymerisationsmethode. So kann es sich dabei um Abbruchfragmente eines Initiators oder einer Wiederholungseinheit handeln. In einem Aspekt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher in einem Aspekt Phenylrest, Benzylrest oder $\alpha$-Hydroxybenzyl ist.

II.1.1 Redoxaktive Gruppen

Die für $R^1$, $R^2$, $R^4$, $R^5$, $R^{1'}$, $R^{2'}$, $R^{3'}$ in den Strukturen **(I)**, **(II)** bzw. **(III)** gemäß dem zweiten Aspekt der Erfindung, in einem Aspekt wie er unter Punkt II.1.$\alpha$) erfindungsgemäß und in einem weiteren Aspekt unter Punkt II.1.$\beta$) definiert ist, auswählbaren organischen redoxaktiven Gruppen sind weiter beschränkt. Dem Fachmann sind organische redoxaktive Gruppen, die in organischen Batterien eingesetzt werden können, bekannt, und beispielsweise in Muench *et al.* zusammen mit der Synthese der jeweiligen Polymere beschrieben. Wie unter Punkt II.1.$\alpha$) und Punkt II.1.$\beta$) beschrieben, sind die organischen redoxaktiven Gruppen in einem Aspekt aus der Gruppe bestehend aus redoxaktive aromatische Imidfunktion **(A)**, redoxaktive organische Funktion umfassend mindestens ein stabiles Sauerstoffradikal **(B)**, redoxaktive Anthrachinon-/ Carbazolfunktion **(C)**, redoxaktive Dialkoxybenzolfunktion **(D)**, redoxaktive Benzochinonfunktion **(E)**, redoxaktive Triphenylaminfunktion **(G)**, redoxaktive Viologenfunktion **(H)**, redoxaktive Ferrocenfunktion **(J)** ausgewählt, und in einem weiteren Aspekt aus der Gruppe bestehend aus redoxaktive aromatische Imidfunktion **(A)**, redoxaktive organische Funktion umfassend mindestens ein stabiles Sauerstoffradikal **(B)**, redoxaktive Anthrachinon-/ Carbazolfunktion **(C)** ausgewählt, und in einem weiteren Aspekt aus der Gruppe bestehend aus redoxaktive organische Funktion umfassend mindestens ein stabiles Sauerstoffradikal **(B)**, redoxaktive Anthrachinon-/ Carbazolfunktion **(C)** ausgewählt, und am bevorzugtesten handelt es sich bei der organischen redoxaktiven Gruppe um eine redoxaktive organische Funktion umfassend mindestens ein stabiles Sauerstoffradikal **(B).**

11.1.1.1 Redoxaktive aromatische Imidfunktion **(A)**

Im Sinne der Erfindung bedeutet "redoxaktive aromatische Imidfunktion", ein redoxaktiver organischer Rest, in dem eine Imidfunktion mit den Kohlenstoffatomen eines oder zweier aromatischer Ringe einen Ring bildet.

AA.1 In dem Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive aromatische Imidfunktion **(A)** sind, bedeutet dies erfindungsgemäß dass die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ unabhängig voneinander jeweils die folgende Struktur **(A1)** aufweisen und die Reste $R^2$, $R^4$, $R^5$ auch unabhängig voneinander jeweils die folgende Struktur **(A2)** mit

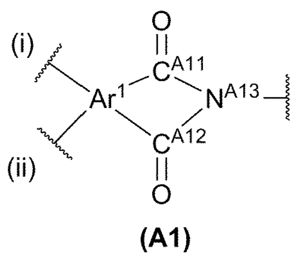
(iii) ; (iv)
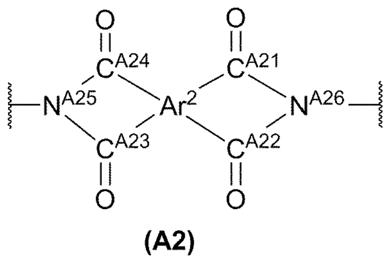
(v) ;

**(A1)** **(A2)**

aufweisen können,

wobei der Rest $Ar^1$ in **(A1)** bzw. der Rest $Ar^2$ in **(A2)** unabhängig voneinander jeweils ein (hetero)aromatischer Rest umfassend einen oder mehrere, in einem Aspekt 1 bis 6, (hetero)aromatische Ringe sind,

wobei die (hetero)aromatischen Ringe von $Ar^1$ in **(A1)** bzw. die (hetero)aromatischen Ringe von $Ar^2$ in **(A2)** unabhängig voneinander jeweils mit mindestens einem Rest, der aus der Gruppe bestehend aus (Halo)Alkylgruppe, Alkenylgruppe, Alkinylgruppe, (Halo)Alkoxygruppe, Cycloalkylgruppe, Carbonylalkylgruppe, -C(=O)-H, Carbonsäurerest, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, in einem Aspekt aus der Gruppe bestehend aus Halogen, (Halo)Alkylgruppe, (Halo)Alkoxygruppe, Carbonsäurerest, Carbonsäureester ausgewählt ist, substituiert sein können,

wobei in **(A1)** zwei der Ringatome von $Ar^1$ jeweils mit den beiden Kohlenstoffatomen $C^{A11}$ und $C^{A12}$ sowie dem Stickstoffatom $N^{A13}$ einen Fünfring, Sechsring oder Siebenring, in einem Aspekt einen Fünfring oder Sechsring, bilden,

wobei in **(A2)** zwei der Ringatome von $Ar^2$ jeweils mit den beiden Kohlenstoffatomen $C^{A21}$ und $C^{A22}$ sowie dem Stickstoffatom $N^{A26}$ einen Fünfring, Sechsring oder Siebenring, in einem Aspekt einen Fünfring oder Sechsring, bilden, und zwei davon verschiedene Ringatome von $Ar^2$ jeweils mit den beiden Kohlenstoffatomen $C^{A23}$ und $C^{A24}$ sowie dem Stickstoffatom $N^{A25}$ einen Fünfring, Sechsring oder Siebenring, in einem Aspekt einen Fünfring oder Sechsring, bilden,

und wobei zwei aromatische Kohlenstoffatome desselben (hetero)aromatischen Ringes in $Ar^1$ bzw. zwei aromatische Kohlenstoffatome desselben (hetero)aromatischen Ringes in $Ar^2$ auch über einen zweiwertigen aliphatischen Rest, bei dem es sich in einem Aspekt um Alkylen, (Thio)ether oder einen zweiwertigen Rest der Formel $\sim(CH_2)_{pA11}-C(=O)-(NR^{AP1})-C(=O)-(CH_2)_{pA12}\sim$ handelt, wobei $R^{AP1}$ = Wasserstoffrest, Halogenrest, (Halo)Alkylgruppe oder (Halo)Alkoxygruppe, in einem Aspekt $R^{AP1}$ = Wasserstoffrest, Alkylgruppe und $p^{A11}$ = 0 oder 1 und $p^{A12}$ = 0 oder 1, verbrückt sein können,

und wobei im Falle, dass der Rest $Ar^1$ mehrere (hetero)aromatische Ringe umfasst, diese in $Ar^1$ mindestens teilweise miteinander kondensiert sein können,

und wobei im Falle dass der Rest $Ar^2$ mehrere (hetero)aromatische Ringe umfasst, diese in $Ar^2$ mindestens teilweise miteinander kondensiert sein können,

und wobei im Falle, dass der Rest $Ar^1$ mehrere (hetero)aromatische Ringe umfasst, zwei aromatische Kohlenstoffatome verschiedener (hetero)aromatischer Ringe in $Ar^1$ auch über eine direkte Bindung, oder einen Rest, der aus der Gruppe bestehend aus

Heteroatom, bei dem es sich in einem Aspekt um -O- oder -S- und in einem weiteren Aspekt um -O- handelt,

zweiwertiger aliphatischer Rest, bei dem es sich in einem Aspekt um Alkylen, (Thio)ether oder einen zweiwertigen Rest der Formel $\sim(CH_2)_{pA13}-C(=O)-(NR^{AP2})-C(=O)-(CH_2)_{pA14}\sim$, wobei $R^{AP2}$ = Wasserstoffrest, Halogenrest, (Halo)Alkylgruppe oder (Halo)Alkoxygruppe, in einem Aspekt $R^{AP2}$ = Wasserstoffrest, Alkylgruppe, und $p^{A13}$ = 0 oder 1 und $p^{A14}$ = 0 oder 1,
ausgewählt ist, verbrückt sein können,
und wobei im Falle dass der Rest $Ar^2$ mehrere (hetero)aromatische Ringe umfasst, zwei aromatische Kohlenstoffatome verschiedener (hetero)aromatischer Ringe in $Ar^2$ auch über eine direkte Bindung, oder einen Rest, der aus der Gruppe bestehend aus
Heteroatom, bei dem es sich in einem Aspekt um -O- oder -S- und in einem weiteren Aspekt um -O- handelt,
zweiwertiger aliphatischer Rest, bei dem es sich in einem Aspekt um Alkylen, (Thio)ether oder einen zweiwertigen Rest der Formel $\sim(CH_2)_{pA23}-C(=O)-(NR^{AP4})-C(=O)-(CH_2)_{pA24}\sim$, wobei $R^{AP4}$ = Wasserstoffrest, Halogenrest, (Halo)Alkylgruppe oder (Halo)Alkoxygruppe, in einem Aspekt $R^{AP4}$ = Wasserstoffrest, Alkylgruppe und $p^{A23}$ = 0 oder 1 und $p^{A24}$ = 0 oder 1, handelt, ausgewählt ist, verbrückt sein können,
wobei die durch (i) und (ii) gekennzeichneten Bindungen von aromatischen Kohlenstoffatomen von $Ar^1$ ausgehen,
und wobei im Falle dass $R^1$ = **(A1)**, eine der durch (i), (ii), (iii) gekennzeichneten Bindungen die Bindung zu $L^1$ darstellt,
im Falle dass $R^{1'}$ = **(A1)**, eine der durch (i), (ii), (iii) gekennzeichneten Bindungen die Bindung zu $L^{1'}$ darstellt,
im Falle dass $R^{2'}$ = **(A1)**, eine der durch (i), (ii), (iii) gekennzeichneten Bindungen die Bindung zu $L^{2'}$ darstellt,
im Falle dass $R^{3'}$ = **(A1)**, eine der durch (i), (ii), (iii) gekennzeichneten Bindungen die Bindung zu $L^{3'}$ darstellt,
im Falle dass $R^2$ = **(A1)**, eine der durch (i), (ii), (iii) gekennzeichneten Bindungen die Bindung zu $L^2$ darstellt und eine andere der durch (i), (ii), (iii) gekennzeichneten Bindungen die Bindung zu $L^3$ darstellt,
im Falle dass $R^4$ = **(A1)**, eine der durch (i), (ii), (iii) gekennzeichneten Bindungen die Bindung zu $L^4$ darstellt und

eine andere der durch (i), (ii), (iii) gekennzeichneten Bindungen die Bindung zu $L^5$ darstellt,
im Falle dass $R^5$ = **(A1)**, eine der durch (i), (ii), (iii) gekennzeichneten Bindungen die Bindung zu $L^6$ darstellt und eine andere der durch (i), (ii), (iii) gekennzeichneten Bindungen die Bindung zu $L^7$ darstellt,
im Falle dass $R^2$ = **(A2)**, die durch (iv) gekennzeichnete Bindung die Bindung zu $L^2$ darstellt und die durch (v) gekennzeichnete Bindung die Bindung zu $L^3$ darstellt,
im Falle dass $R^4$ = **(A2)**, die durch (iv) gekennzeichnete Bindung die Bindung zu $L^4$ darstellt und die durch (v) gekennzeichnete Bindung die Bindung zu $L^5$ darstellt,
im Falle dass $R^5$ = **(A2)**, die durch (iv) gekennzeichnete Bindung die Bindung zu $L^6$ darstellt und die durch (v) gekennzeichnete Bindung die Bindung zu $L^7$ darstellt
und dann jeweils diejenigen der durch (i) und (ii) gekennzeichneten Bindungen, die keine Bindung zu $L^1$, $L^2$, $L^3$, $L^4$, $L^5$, $L^6$, $L^7$, $L^{1'}$, $L^{2'}$ oder $L^{3'}$ darstellen, unabhängig voneinander jeweils mit einem Rest, der aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, in einem Aspekt aus der Gruppe bestehend aus Wasserstoff, Halogen, (Halo)Alkylgruppe, (Halo)Alkoxygruppe, Carbonsäurerest, Carbonsäureester ausgewählt ist, verbunden sind,
und die durch (iii) gekennzeichnete Bindung, falls sie keine Bindung zu $L^1$, $L^2$, $L^3$, $L^4$, $L^5$, $L^6$, $L^7$, $L^{1'}$, $L^{2'}$ oder $L^{3'}$ darstellt, mit einem Rest, der aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen ausgewählt ist, in einem Aspekt aus der Gruppe bestehend aus Wasserstoff, Halogen, (Halo)Alkylgruppe, (Halo)Alkoxygruppe, Carbonsäurerest, Carbonsäureester ausgewählt ist, verbunden ist.
AA.2 In einem weiteren Aspekt des vorgenannten Punktes AA.1 weist $Ar^1$ eine Struktur, die aus der Gruppe bestehend aus **(A11)**, **(A12)**, **(A13)**, **(A14)**, **(A15)**, **(A16)**, **(A17)**, **(A18)**, **(A19)**, **(A20)**, **(A21)** mit

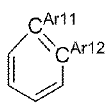 ; 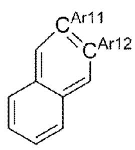 ; 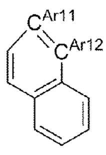 ; 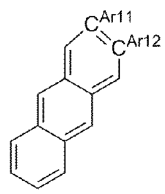 ; 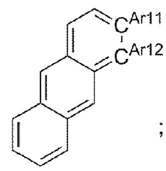 ; 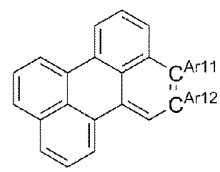 ;

**(A11)** **(A12)** **(A13)** **(A14)** **(A15)** **(A16)**

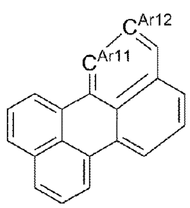 ; 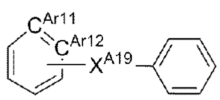 ; 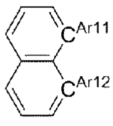 ; 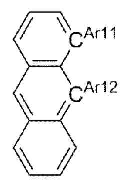 ; 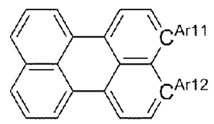 ;

**(A17)** **(A18)** **(A19)** **(A20)** **(A21)**

ausgewählt ist, auf,
wobei das in den Strukturen **(A11), (A12), (A13), (A14), (A15), (A16), (A17), (A18), (A19), (A20), (A21)** mit $C^{Ar11}$ bezeichnete aromatische Kohlenstoffatom eine direkte Bindung zu dem in der Struktur **(A1)** mit $C^{A11}$ bezeichneten Kohlenstoffatom aufweist,
wobei das in den Strukturen **(A11), (A12), (A13), (A14), (A15), (A16), (A17), (A18), (A19), (A20), (A21)** mit $C^{Ar12}$ bezeichnete aromatische Kohlenstoffatom eine direkte Bindung zu dem in der Struktur **(A1)** mit $C^{A12}$ bezeichneten Kohlenstoffatom aufweist,
wobei $X^{A19}$ in **(A18)** ein Rest, der aus der Gruppe bestehend aus direkte Bindung, Heteroatom, bei dem es sich in einem Aspekt um -O- oder -S- und in einem weiteren Aspekt um -O- handelt,
zweiwertiger aliphatischer Rest, bei dem es sich in einem Aspekt um Alkylen, (Thio)ether oder einen zweiwertigen Rest der Formel $\sim(CH_2)_{pA13}$-C(=O)-($NR^{AP2}$)-C(=O)-$(CH_2)_{pA14}\sim$,
wobei $R^{AP2}$ = Wasserstoffrest, Halogenrest, (Halo)Alkylgruppe oder (Halo)Alkoxygruppe, in einem Aspekt $R^{AP2}$ = Wasserstoffrest, Alkylgruppe und $p^{A13}$ = 0 oder 1 und $p^{A14}$ = 0 oder 1, handelt ausgewählt ist,
und $X^{A19}$ in einem weiteren Aspekt aus der Gruppe bestehend aus -O-, Alkylen, direkte Bindung ausgewählt ist und

$X^{A19}$ am bevorzugtesten -O- ist,

wobei die in der Struktur **(A1)** durch (i) und (ii) gekennzeichneten Bindungen im Falle der Strukturen **(A11), (A12), (A13), (A14), (A15), (A16), (A17), (A19), (A20)** bzw. **(A21)** von zwei aromatischen Kohlenstoffatomen der Strukturen **(A11), (A12), (A13), (A14), (A15), (A16), (A17), (A19), (A20)** bzw. **(A21),** die von den Kohlenstoffatomen, die mit $C^{A11}$ und $C^{A12}$ bezeichnet sind, verschieden sind, ausgehen,

bzw. im Falle der Struktur **(A18)** jeweils von zwei aromatischen Kohlenstoffatomen der Struktur **(A18),** die sowohl von den Kohlenstoffatomen, die mit von $C^{A11}$ und $C^{A12}$ bezeichnet sind, als auch von den aromatischen Kohlenstoffatomen, die mit $X^{A19}$ verbunden sind, verschieden sind, ausgehen,

und die aromatischen Kohlenstoffatome in den Strukturen **(A11), (A12), (A13), (A14), (A15), (A16), (A17), (A18), (A19), (A20), (A21),** die keine Bindung zu $C^{A11}$, $C^{A12}$, $X^{A19}$, $L^1$, $L^{1'}$, $L^{2'}$, $L^{3'}$, $L^2$, $L^3$, $L^4$, $L^5$, $L^6$ oder $L^7$ aufweisen, mit einem Rest, der aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, in einem Aspekt mit einem Rest, der aus der Gruppe bestehend aus Wasserstoff, Halogen, (Halo)Alkylgruppe, (Halo)Alkoxygruppe, Carbonsäurerest, Carbonsäureester ausgewählt ist, verbunden sind,

und wobei zwei aromatische Kohlenstoffatome desselben oder verschiedener aromatischer Ringe innerhalb der Strukturen **(A11), (A12), (A13), (A14), (A15), (A16), (A17), (A18), (A19), (A20), (A21)** auch über einen zweiwertigen Rest der Formel $\sim(CH_2)_{pA15}$-C(=O)-($NR^{AP3}$)-C(=O)-$(CH_2)_{pA16}\sim$, wobei $R^{AP3}$ = Wasserstoffrest, Halogenrest, (Halo)Alkylgruppe oder (Halo)Alkoxygruppe, in einem Aspekt $R^{AP3}$ = Wasserstoffrest, Alkylgruppe und $p^{A15}$ = 0 oder 1 und $p^{A16}$ = 0 oder 1, verbrückt sein können,

und $Ar^2$ weist eine Struktur, die aus der Gruppe bestehend aus **(A22), (A23), (A24), (A25), (A26), (A27), (A28), (A29), (A30), (A31), (A32)** mit

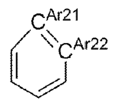 ; 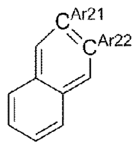 ; 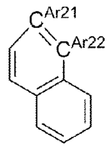 ; 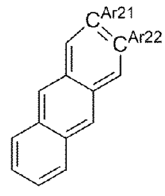 ; 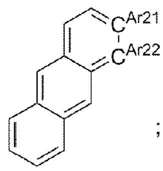 ; 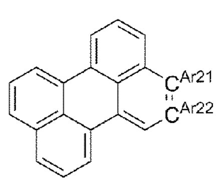 ;

**(A22)** **(A23)** **(A24)** **(A25)** **(A26)** **(A27)**

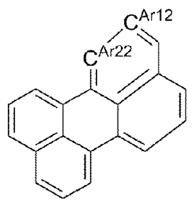 ; 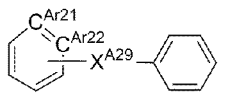 ; 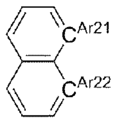 ; 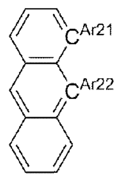 ; 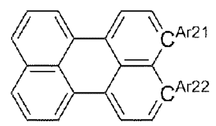 ;

**(A28)** **(A29)** **(A30)** **(A31)** **(A32)**

ausgewählt ist, auf,

wobei das in den Strukturen **(A22), (A23), (A24), (A25), (A26), (A27), (A28), (A29), (A30), (A31)** bzw. **(A32)** mit $C^{Ar21}$ bezeichnete aromatische Kohlenstoffatom eine direkte Bindung zu dem in der Struktur **(A2)** mit $C^{A21}$ bezeichneten Kohlenstoffatom aufweist,

wobei das in den Strukturen **(A22), (A23), (A24), (A25), (A26), (A27), (A28), (A29), (A30), (A31)** bzw. **(A32)** mit $C^{Ar22}$ bezeichnete aromatische Kohlenstoffatom eine direkte Bindung zu dem in der Struktur **(A2)** mit $C^{A22}$ bezeichneten Kohlenstoffatom aufweist,

und dann zwei weitere von $C^{Ar21}$ und $C^{Ar22}$ verschiedene aromatische Kohlenstoffatome in den Strukturen **(A22), (A23), (A24), (A25), (A26), (A27), (A28), (A29), (A30), (A31), (A32),** die *ortho*- oder *meta*- zueinander stehen und die im Falle der Struktur **(A29)** auch von den aromatischen Kohlenstoffatomen, die mit $X^{A29}$ verbunden sind, verschieden sind, jeweils mit den in der Struktur **(A2)** mit $C^{A23}$ bzw. $C^{A24}$ bezeichneten Kohlenstoffatomen direkt verbunden sind,

wobei $X^{A29}$ in **(A29)** aus der Gruppe bestehend aus direkte Bindung, Heteroatom, bei dem es sich in einem Aspekt um -O- oder -S- und in einem weiteren um -O- handelt,

zweiwertiger aliphatischer Rest, bei dem es sich in einem Aspekt um Alkylen, (Thio)ether oder einen zweiwertigen Rest der Formel $\sim(CH_2)_{pA17}$-C(=O)-($NR^{AP4}$)-C(=O)-$(CH_2)_{pA18}\sim$,

wobei $R^{AP4}$ = Wasserstoffrest, Halogenrest, (Halo)Alkylgruppe, (Halo)Alkoxygruppe, in einem Aspekt $R^{AP4}$ = Wasserstoffrest, Alkylgruppe, und $p^{A17}$ = 0 oder 1 und $p^{A18}$ = 0 oder 1,
handelt, ausgewählt ist,
und $X^{A29}$ in einem weiteren Aspekt aus der Gruppe bestehend aus -O-, Alkylen, direkte Bindung ausgewählt ist und $X^{A29}$ am bevorzugtesten -O- ist,
und die aromatischen Kohlenstoffatome in den Strukturen **(A22), (A23), (A24), (A25), (A26), (A27), (A28), (A29), (A30), (A31), (A32),** die keine Bindung zu $C^{A21}$, $C^{A22}$, $C^{A23}$, $C^{A24}$, $X^{A29}$ aufweisen, mit einem Rest, der aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, in einem Aspekt mit einem Rest, der aus der Gruppe bestehend aus Wasserstoff, Halogen, (Halo)Alkylgruppe, (Halo)Alkoxygruppe, Carbonsäurerest, Carbonsäureester ausgewählt ist, verbunden sind.
AA.3 In einem Aspekt des vorgenannten Punktes AA.1 oder AA.2 bedeutet erfindungsgemäß in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive aromatische Imidfunktion **(A)** ist, dass $R^1$, $R^{1'}$, $R^{2'}$, $R^{3'}$ dann unabhängig voneinander jeweils aus der Gruppe bestehend aus den folgenden Strukturen **(A101), (A102), (A103), (A104)** mit

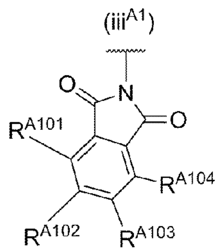 ; 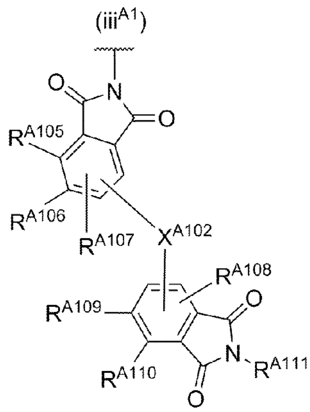 ; 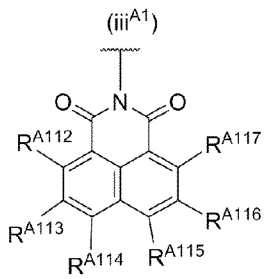 ; 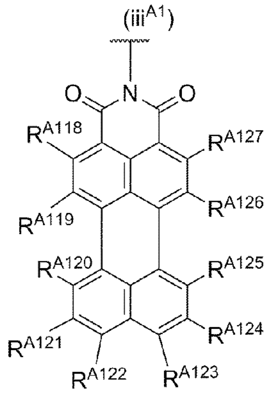

**(A101)** **(A102)** **(A103)** **(A104)**

ausgewählt sind,
wobei die durch ($iii^{A1}$) gekennzeichnete Bindung für $R^1$ die Bindung zu $L^1$, für $R^{1'}$ die Bindung zu $L^{1'}$, für $R^{2'}$ die Bindung zu $L^{2'}$, für $R^{3'}$ die Bindung zu $L^{3'}$ darstellt,
wobei $X^{A102}$ aus der Gruppe bestehend aus direkte Bindung, Heteroatom, bei dem es sich in einem Aspekt um -O- oder -S-, in einem weiteren Aspekt um -O- handelt,
zweiwertiger aliphatischer Rest, bei dem es sich in einem Aspekt um Alkylen, (Thio)ether oder einem zweiwertigen Rest der Formel $\sim(CH_2)_{pA11}$-C(=O)-($NR^{AP1}$)-C(=O)-$(CH_2)_{pA12}\sim$, wobei $R^{AP1}$ = Wasserstoffrest, Halogenrest, (Halo)Alkylgruppe oder (Halo)Alkoxygruppe, in einem Aspekt $R^{AP1}$ = Wasserstoffrest, Alkylgruppe und $p^{A11}$ = 0 oder 1 und $p^{A12}$ = 0 oder 1, handelt,
ausgewählt ist,
und $X^{A102}$ in einem weiteren Aspekt aus der Gruppe bestehend aus -O-, Alkylen, direkte Bindung ausgewählt ist und $X^{A102}$ am bevorzugtesten -O- ist,
und wobei $R^{A101}$, $R^{A102}$, $R^{A103}$, $R^{A104}$, $R^{A105}$, $R^{A106}$, $R^{A107}$, $R^{A108}$, $R^{A109}$, $R^{A110}$, $R^{A112}$, $R^{A113}$, $R^{A114}$, $R^{A115}$, $R^{A116}$, $R^{A117}$, $R^{A118}$, $R^{A119}$, $R^{A120}$, $R^{A121}$, $R^{A122}$, $R^{A123}$, $R^{A124}$, $R^{A125}$, $R^{A126}$, $R^{A127}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen, in einem Aspekt aus der Gruppe bestehend aus Wasserstoff, Halogen, (Halo)Alkylgruppe, (Halo)Alkoxygruppe, Carbonsäurerest, Carbonsäureester, bevorzugter aus der Gruppe bestehend aus Wasserstoff, Halogen, (Halo)Alkylgruppe, (Halo)Alkoxygruppe, Carbonsäureester ausgewählt ist, in einem weiteren Aspekt aus der Gruppe bestehend aus Wasserstoff, Halogen, (Halo)Alkylgruppe, (Halo)Alkoxygruppe, in einem weiteren Aspekt aus der Gruppe bestehend aus Wasserstoff, Alkylgruppe ausgewählt sind, am bevorzugtesten alle jeweils Wasserstoff sind,
und wobei $R^{A111}$ aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen ausgewählt ist, in einem Aspekt aus der Gruppe ausgewählt aus Wasserstoff, Halogen, (Halo)Alkylgruppe, (Halo)Alkoxygruppe, Carbonsäurerest, Carbonsäureester, in einem Aspekt aus der Gruppe bestehend aus Wasserstoff, Halogen, (Halo)Alkylgruppe, (Halo)Alkoxygruppe, Carbonsäurerest, Carbonsäureester, bevorzugter aus der Gruppe bestehend aus Wasserstoff, Halogen, (Halo)Alkylgruppe, (Halo)Alkoxygruppe, Carbonsäureester ausgewählt ist, in einem weiteren Aspekt aus der Gruppe bestehend aus Wasserstoff, Halogen, (Halo)Alkylgruppe, (Halo)Alkoxygruppe, in einem weiteren Aspekt aus der Gruppe bestehend aus Wasserstoff, Alkylgruppe ausgewählt ist, am bevorzugtesten Wasserstoff ist,

und $R^2$, $R^4$, $R^5$ dann jeweils unabhängig voneinander jeweils aus der Gruppe bestehend aus den folgenden Strukturen **(A201)**, **(A202)**, **(A203)**, **(A204)** mit

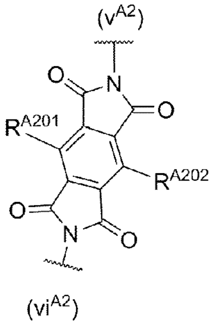 ; 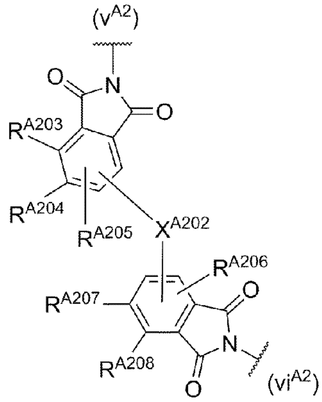 ; 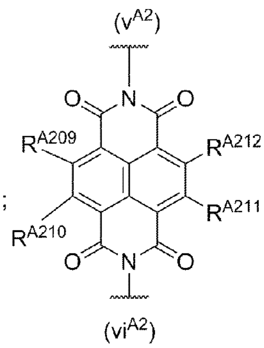 ; 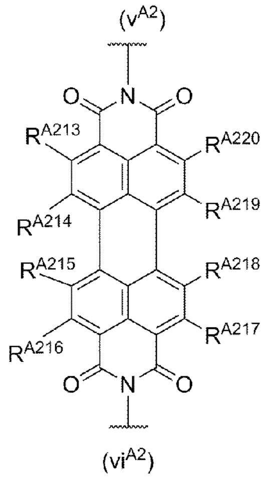 ;

**(A201)** **(A202)** **(A203)** **(A204)**

ausgewählt sind,

wobei die durch ($v^{A2}$) gekennzeichnete Bindung für $R^2$ die Bindung zu $L^2$, für $R^4$ die Bindung zu $L^4$, für $R^5$ die Bindung zu $L^6$ bezeichnet,

wobei die durch ($vi^{A2}$) gekennzeichnete Bindung für $R^2$ die Bindung zu $L^3$, für $R^4$ die Bindung zu $L^5$, für $R^5$ die Bindung zu $L^7$ bezeichnet,

wobei $X^{A202}$ in **(A202)** ein Rest, der aus der Gruppe bestehend aus direkte Bindung, Heteroatom, bei dem es sich in einem Aspekt um -O- oder -S- und in einem weiteren Aspekt um -O- handelt, zweiwertiger aliphatischer Rest, bei dem es sich in einem Aspekt um Alkylen, (Thio)ether oder einen zweiwertigen Rest der Formel $\sim(CH_2)_{pA17}-C(=O)-(NR^{AP4})-C(=O)-(CH_2)_{pA18}\sim$ handelt,

wobei $R^{AP4}$ = Wasserstoffrest, Halogenrest, (Halo)Alkylgruppe oder (Halo)Alkoxygruppe, in einem Aspekt $R^{AP4}$ = Wasserstoffrest, Alkylgruppe und $p^{A17}$ = 0 oder 1 und $p^{A18}$ = 0 oder 1,

ausgewählt ist,

und $X^{A202}$ in einem weiteren Aspekt aus der Gruppe bestehend aus -O-, Alkylen, direkte Bindung ausgewählt ist und $X^{A202}$ am bevorzugtesten -O- ist,

und wobei $R^{A201}$, $R^{A202}$, $R^{A203}$, $R^{A204}$, $R^{A205}$, $R^{A206}$, $R^{A207}$, $R^{A208}$, $R^{A209}$, $R^{A210}$, $R^{A211}$, $R^{A212}$, $R^{A213}$, $R^{A214}$, $R^{A215}$, $R^{A216}$, $R^{A217}$, $R^{A218}$, $R^{A219}$, $R^{A220}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen, in einem Aspekt aus der Gruppe bestehend aus Wasserstoff, Halogen, (Halo)Alkylgruppe, (Halo)Alkoxygruppe, Carbonsäurerest, Carbonsäureester, in einem weiteren Aspekt aus der Gruppe bestehend aus Wasserstoff, Halogen, Alkylgruppe, in einem weiteren Aspekt aus der Gruppe bestehend aus Wasserstoff, Alkylgruppe ausgewählt sind, am bevorzugtesten alle jeweils Wasserstoff sind.

AA.4 In einem Aspekt des vorgenannten Punktes AA.3 bedeutet erfindungsgemäß in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive aromatische Imidfunktion **(A)** ist, dass die Reste $R^1$, $R^{1'}$, $R^{2'}$, $R^{3'}$ bzw. die Reste $R^1$, $R^{1'}$ bzw. der Rest $R^1$ dann unabhängig voneinander jeweils aus der Gruppe bestehend aus den unter Punkt AA.3 definierten Strukturen **(A101)**, **(A103)** ausgewählt sind, und in einem Aspekt jeweils eine Struktur **(A101)** aufweisen, wobei die Bedeutungen

von ($iii^{A1}$), $R^{A101}$, $R^{A102}$, $R^{A103}$, $R^{A104}$, $R^{A112}$, $R^{A113}$, $R^{A114}$, $R^{A115}$, $R^{A116}$, $R^{A117}$ wie unter Punkt AA.3 definiert sind,

und die Reste $R^2$, $R^4$, $R^5$ dann unabhängig voneinander jeweils aus der Gruppe bestehend aus den unter AA.3 definierten Strukturen **(A201)**, **(A202)** ausgewählt sind, und in einem Aspekt jeweils eine Struktur **(201)** aufweisen, wobei die Bedeutungen von ($v^{A2}$), ($vi^{A2}$), $X^{A202}$, $R^{A201}$, $R^{A202}$, $R^{A203}$, $R^{A204}$, $R^{A205}$, $R^{A206}$, $R^{A207}$, $R^{A208}$ wie unter Punkt AA.3 definiert sind.

AA.5 In einem weiteren Aspekt der Erfindung, wie er unter II.1.β) oder dem Punkt AA.4 definiert ist, umfasst das im erfindungsgemäßen Verfahren zur Herstellung einer Elektrode gemäß dem zweiten Aspekt der vorliegenden Erfindung eingesetzte, in der Hauptkette nichtkonjugierte, organisches Redox-Polymer **P** insbesondere $n^1$ miteinander verknüpfte Wiederholungseinheiten der chemischen Struktur **(I)** mit

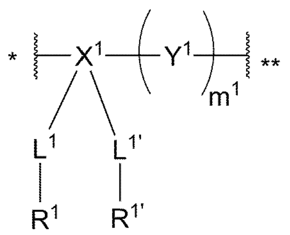 ;

**(I)**

wobei $n^1$ eine ganze Zahl $\geq 4$, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $X^1$ eine nichtkonjugierte organische Gruppe, welche durch Polymerisationsreaktion aus einer Gruppe gebildet wird, die aus einer organischen Doppelbindung, einer organischen Dreifachbindung, einem Oxiran oder einem Aziridin besteht, ist, oder eine nichtkonjugierte organische Gruppe ist, welche durch eine polymeranaloge Reaktion gebildet wird,

wobei $Y^1$ eine nichtkonjugierte organische Spacereinheit ist,

wobei $L^1$, $L^{1'}$ unabhängig voneinander jeweils aus der Gruppe bestehend aus direkte Bindung, organische Linkereinheit ausgewählt sind,

und in einem Aspekt $L^1$ aus der Gruppe bestehend aus direkte Bindung, organische Linkereinheit ausgewählt ist und $L^{1'}$ eine direkte Bindung ist,

wobei $R^1$, $R^{1'}$ unabhängig voneinander jeweils eine redoxaktive aromatische Imidfunktion **(A)**, sind, sind und $R^{1'}$ auch ein Wasserstoffrest sein kann, und in einem Aspekt $R^1$ eine redoxaktive aromatische Imidfunktion **(A)** und $R^{1'}$ ein Wasserstoffrest ist,

wobei die redoxaktive aromatische Imidfunktion **(A)** in einem Aspekt die Struktur **(A101)** mit

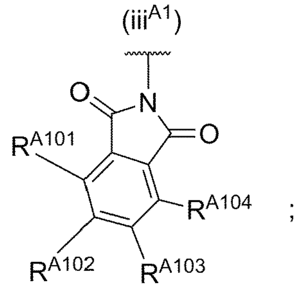

**(A101)**

aufweist,

wobei die durch (iii$^{A1}$) gekennzeichnete Bindung für $R^1$ die Bindung zu $L^1$ darstellt und für $R^{1'}$ die Bindung zu $L^{1'}$ darstellt,

und wobei $R^{A101}$, $R^{A102}$, $R^{A103}$, $R^{A104}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen, in einem Aspekt aus der Gruppe bestehend aus Wasserstoff, Halogen, (Halo)Alkylgruppe, (Halo)Alkoxygruppe, Carbonsäurerest, Carbonsäureester, in einem weiteren Aspekt aus der Gruppe bestehend aus Wasserstoff, Halogen, (Halo)Alkylgruppe, (Halo)Alkoxygruppe, Carbonsäurerest, Carbonsäureester, in einem weiteren Aspekt aus der Gruppe bestehend aus Wasserstoff, Halogen, (Halo)Alkylgruppe, in einem weiteren Aspekt aus der Gruppe bestehend aus Wasserstoff, Alkylgruppe ausgewählt sind, und wobei am bevorzugtesten $R^{A101}$, $R^{A102}$, $R^{A103}$, $R^{A104}$ jeweils Wasserstoff ist.

11.1.1.2 Redoxaktive organische Funktion umfassend mindestens ein stabiles Sauerstoffradikal **(B)**

Im Sinne der Erfindung bedeutet "redoxaktive organische Funktion umfassend mindestens ein stabiles Sauerstoffradikal", ein redoxaktiver organischer Rest, der ein stabiles Sauerstoffradikal (O•) umfasst.

BB.1 Im Sinne der Erfindung , in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive organische Funktion umfassend mindestens ein stabiles Sauerstoffradikal **(B)** sind, bedeutet dies erfindungsgemäß, dass die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ unabhängig voneinander jeweils aus einer der folgenden Strukturen **(B1), (B2)** mit

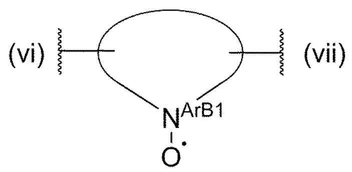

;

**(B1)**

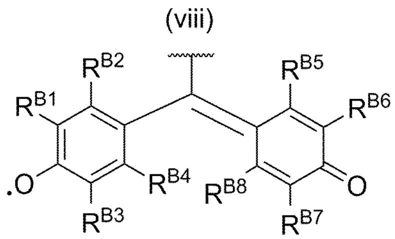

;

**(B2)**

ausgewählt sind,

wobei in der Struktur **(B1)** das Stickstoffatom $N^{ArB1}$ Teil eines aliphatischen Ringes $Ar^{B1}$ ist, der neben dem Stickstoffatom $N^{ArB1}$ weitere Heteroatome, in einem Aspekt N, und Heteroatome enthaltende Gruppen, in einem Aspekt ausgewählt aus der Gruppe bestehend aus -N(Alkyl)-, -NH-, -N(O•)-, umfassen kann und der mit einem oder mehreren weiteren aliphatischen oder aromatischen Ringen kondensiert und mit einem oder mehreren weiteren aliphatischen Ringen, die ihrerseits gegebenenfalls weitere Heteroatome, in einem Aspekt N, und Heteroatome enthaltende Gruppen, in einem Aspekt ausgewählt aus der Gruppe bestehend aus -N(Alkyl)-, -NH-, -N(O•)-, aufweisen, über eine spiro-Bindung verknüpft sein kann,

wobei mindestens ein Ringkohlenstoffatom von $Ar^{B1}$ mit einer Gruppe ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus (Halo)alkylgruppe, Cycloalkylgruppe, substituiert sein kann,

wobei die durch (vi) und (vii) gekennzeichneten Bindungen von Ringkohlenstoffatomen von $Ar^{B1}$ und/oder von Ringkohlenstoffatomen der mit $Ar^{B1}$ kondensierten oder über eine spiro-Bindung verknüpften Ringe ausgehen,

wobei, im Falle dass $R^1$ = **(B1),** die durch (vi) gekennzeichnete Bindung die Bindung zu $L^1$ darstellt und die durch (vii) gekennzeichnete Bindung eine Bindung zu Wasserstoff darstellt,

wobei, im Falle dass $R^{1'}$ = **(B1),** die durch (vi) gekennzeichnete Bindung die Bindung zu $L^{1'}$ darstellt und die durch (vii) gekennzeichnete Bindung eine Bindung zu Wasserstoff darstellt,

wobei, im Falle dass $R^{2'}$= **(B1),** die durch (vi) gekennzeichnete Bindung die Bindung zu $L^{2'}$ darstellt und die durch (vii) gekennzeichnete Bindung eine Bindung zu Wasserstoff darstellt,

wobei, im Falle dass $R^{3'}$ = **(B1),** die durch (vi) gekennzeichnete Bindung die Bindung zu $L^{3'}$ darstellt und die durch (vii) gekennzeichnete Bindung eine Bindung zu Wasserstoff darstellt,

und wobei im Falle dass $R^2$ = **(B1),** die durch (vi) gekennzeichnete Bindung die Bindung zu $L^2$ darstellt und die durch (vii) gekennzeichnete Bindung die Bindung zu $L^3$ darstellt,

und wobei im Falle dass $R^4$ = **(B1),** die durch (vi) gekennzeichnete Bindung die Bindung zu $L^4$ darstellt und die durch (vii) gekennzeichnete Bindung die Bindung zu $L^5$ darstellt,

und wobei im Falle dass $R^5$ = **(B1),** die durch (vi) gekennzeichnete Bindung die Bindung zu $L^6$ darstellt und die durch (vii) gekennzeichnete Bindung die Bindung zu $L^7$ darstellt,

wobei, im Falle dass $R^1$, $R^{1'}$, $R^{2'}$ oder $R^{3'}$ = **(B2),** die durch (viii) gekennzeichnete Bindung die Bindung zu $L^1$, $L^{1'}$, $L^{2'}$ bzw. $L^{3'}$ darstellt und $R^{B1}$, $R^{B2}$, $R^{B3}$, $R^{B4}$, $R^{B5}$, $R^{B6}$, $R^{B7}$, $R^{B8}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)alkyl, Cycloalkyl ausgewählt sind,

und wobei, im Falle dass $R^2$, $R^4$ oder $R^5$ = **(B2)**, die durch (viii) gekennzeichnete Bindung die Bindung zu $L^2$, $L^4$ bzw. $L^6$ darstellt und einer der Reste $R^{B7}$, $R^{B8}$ eine direkte Bindung zu $L^3$, $L^5$ bzw. $L^7$ darstellt, wobei dann die Reste $R^{B1}$, $R^{B2}$, $R^{B3}$, $R^{B4}$, $R^{B5}$, $R^{B6}$ und derjenige der beiden Reste $R^{B7}$, $R^{B8}$, der keine direkte Bindung zu $L^3$, $L^5$ oder $L^7$ darstellt, unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, in einem Aspekt aus der Gruppe bestehend aus Wasserstoff, (Halo)alkyl, Cycloalkyl ausgewählt sind.

BB.2 In einem Aspekt t des vorgenannten Punktes BB.1 weist die Struktur **(B1)** eine Struktur auf, die aus der Gruppe bestehend aus den folgenden Strukturen **(B11)**, **(B12)**, **(B13)**, in einem Aspekt aus der folgenden Struktur **(B11)** mit

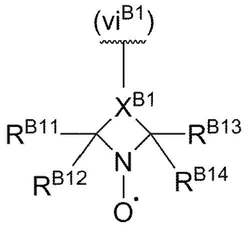 ; 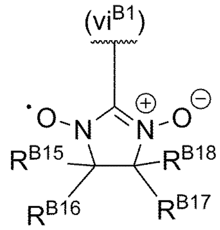 ; 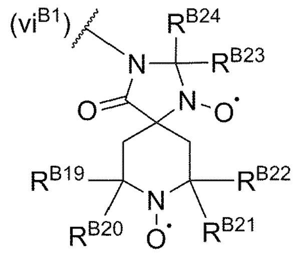 ;

**(B11)** **(B12)** **(B13)**

ausgewählt ist,

wobei

$X^{B1}$ ein zweiwertiger Rest ist, der aus der Gruppe bestehend aus Phenylen, in einem Aspekt 1,2-Phenylen, $(\alpha^{B11})$-$CR^{XB11}R^{XB12}$-**C**'H-$CR^{XB13}R^{XB14}$-$(\beta^{B11})$, $(\alpha^{B11})$-**C**'H-$CR^{XB15}R^{XB16}$-$(\beta^{B11})$, $(\alpha^{B11})$-**C**'=$CR^{XB17}$-$(\beta^{B11})$,

ausgewählt ist,

wobei $R^{XB11}$, $R^{XB12}$, $R^{XB13}$, $R^{XB14}$, $R^{XB15}$, $R^{XB16}$, $R^{xB17}$ unabhängig voneinander jeweils aus der Gruppe bestehend aus Wasserstoff, (Halo)alkyl ausgewählt sind, in einem Aspekt alle Wasserstoff sind,

wobei "$(\alpha^{B11})$" jeweils die Bindung zu dem mit $R^{B11}$ und $R^{B12}$ verknüpften Kohlenstoffatom kennzeichnet,

wobei "$(\beta^{B11})$" jeweils die Bindung zu dem mit $R^{B13}$ und $R^{B14}$ verknüpften Kohlenstoffatom kennzeichnet,

wobei "**C**'" das Kohlenstoffatom kennzeichnet, von dem die durch $(vi^{B1})$ gekennzeichnete Bindung ausgeht,

und wobei in den Fällen, in denen $X^{B1}$ = Phenylen, die durch $(vi^{B1})$ gekennzeichnete Bindung von einem der aromatischen Ringkohlenstoffatome des Phenylenrestes ausgeht,

und wobei, im Falle dass $R^1$, $R^{1'}$, $R^{2'}$, $R^{3'}$aus der Gruppe bestehend aus **(B11)**, **(B12)**, **(B13)** ausgewählt sind, die durch $(vi^{B1})$ gekennzeichnete Bindung die Bindung zu $L^1$, $L^{2'}$, $L^{3'}$ bzw. $L^{4'}$ darstellt,

und die Reste $R^{B11}$, $R^{B12}$, $R^{B13}$, $R^{B14}$, $R^{B15}$, $R^{B16}$, $R^{B17}$, $R^{B18}$, $R^{B19}$, $R^{B20}$, $R^{B21}$, $R^{B22}$, $R^{B23}$, $R^{B24}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)alkyl, Cycloalkyl, Alkyl, in einem weiteren Aspekt aus der Gruppe bestehend aus Wasserstoff, Methyl, Ethyl, n-Propyl, iso-Propyl, in einem weiteren Aspekt aus der Gruppe bestehend aus Wasserstoff, Methyl ausgewählt sind und am bevorzugtesten alle Methyl sind,

und wobei, im Falle dass $R^2$, $R^4$, $R^5$ aus der Gruppe bestehend aus (B11), (B12), (B13) ausgewählt sind, die durch (vi) gekennzeichnete Bindung die Bindung zu $L^2$, $L^4$, bzw. $L^6$ darstellt,

und im Falle dass $R^2$ eine Struktur der Formel **(B11)**, **(B12)** oder **(B13)** ist, $R^{B11}$, $R^{B15}$ bzw. $R^{B19}$ jeweils die Bindung zu $L^3$ darstellt,

und im Falle dass $R^4$ eine Struktur der Formel **(B11)**, **(B12)** oder **(B13)** ist, $R^{B11}$, $R^{B15}$ bzw. $R^{B19}$ jeweils die Bindung zu $L^5$ darstellt,

und im Falle dass $R^5$ eine Struktur der Formel **(B11)**, **(B12)** oder **(B13)** ist, $R^{B11}$, $R^{B15}$ bzw. $R^{B19}$ jeweils die Bindung zu $L^7$ darstellt,

und dann diejenigen der Reste $R^{B11}$, $R^{B15}$ und $R^{B19}$, die nicht mit $L^3$, $L^5$ oder $L^7$ verbunden sind sowie die Reste $R^{B12}$, $R^{B13}$, $R^{B14}$, $R^{B16}$, $R^{B17}$, $R^{B18}$, $R^{B20}$, $R^{B21}$, $R^{B22}$, $R^{B23}$, $R^{B24}$ unabhängig voneinander jeweils aus der Gruppe

bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)alkyl, Cycloalkyl, Alkyl, in einem weiteren Aspekt aus der Gruppe bestehend aus Wasserstoff, Methyl, Ethyl, n-Propyl, iso-Propyl, in einem weiteren Aspekt aus der Gruppe bestehend aus Wasserstoff, Methyl ausgewählt sind, und am bevorzugtesten alle Methyl sind.

BB.3 In einem weiteren Aspekt der Erfindung, wie er unter II.1.β) definiert ist, umfasst das im erfindungsgemäßen Verfahren zur Herstellung einer Elektrode gemäß dem zweiten Aspekt der vorliegenden Erfindung eingesetzte, in der Hauptkette nichtkonjugierte, organisches Redox-Polymer P $n^1$ miteinander verknüpfte Wiederholungseinheiten der chemischen Struktur **(I)** mit

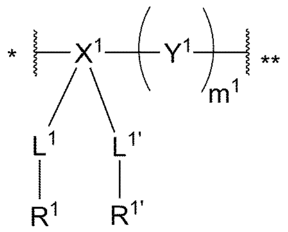

;

**(I)**

wobei $n^1$ eine ganze Zahl $\geq 4$, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei $m^1$ eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $X^1$ eine nichtkonjugierte organische Gruppe, welche durch Polymerisationsreaktion aus einer Gruppe gebildet wird, die aus einer organischen Doppelbindung, einer organischen Dreifachbindung, einem Oxiran oder einem Aziridin besteht, ist, oder eine nichtkonjugierte organische Gruppe ist, welche durch eine polymeranaloge Reaktion gebildet wird,

wobei $Y^1$ eine nichtkonjugierte organische Spacereinheit ist,

wobei $L^1$, $L^{1'}$ unabhängig voneinander jeweils aus der Gruppe bestehend aus direkte Bindung, organische Linkereinheit ausgewählt sind, und in einem Aspekt $L^1$ aus der Gruppe bestehend aus direkte Bindung, organische Linkereinheit ausgewählt ist und $L^{1'}$ eine direkte Bindung ist,

wobei $R^1$, $R^{1'}$ unabhängig voneinander jeweils eine redoxaktive organische Funktion umfassend mindestens ein stabiles Sauerstoffradikal **(B)** sind, und $R^{1'}$ auch ein Wasserstoffrest sein kann, und in einem Aspekt $R^1$ eine redoxaktive organische Funktion umfassend mindestens ein stabiles Sauerstoffradikal **(B)** und $R^{1'}$ ein Wasserstoffrest ist,

wobei die redoxaktive organische Funktion umfassend mindestens ein stabiles Sauerstoffradikal **(B)** in einem weiteren Aspekt aus der Gruppe bestehend aus den folgenden Strukturen **(B111), (B112), (B113), (B114), (B115), (B116), (B117),** in einem weiteren Aspekt aus der Gruppe bestehend aus den folgenden Strukturen **(B111)**, **(B112)**, **(B113)**, **(B114)**, **(B115)** ausgewählt ist, am allerbevorzugtesten eine Verbindung der Struktur **(B111)** ist, mit

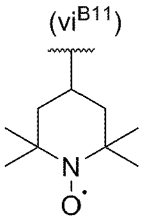 ; 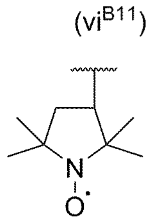 ; 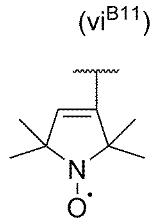 ; 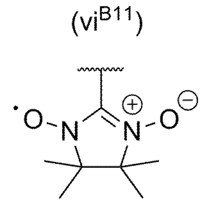 ;

**(B111)** **(B112)** **(B113)** **(B114)**

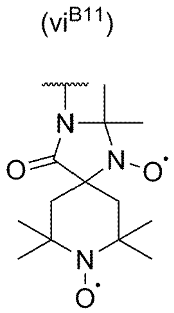 ; 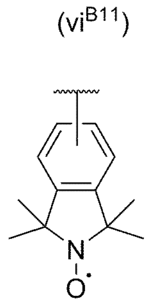 ; 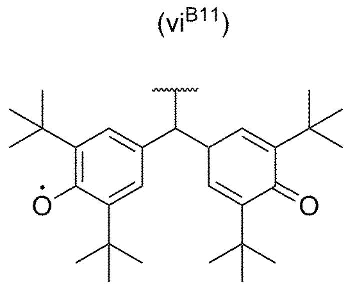 ;

**(B115)** **(B116)** **(B117)**

wobei jeweils die durch (vi$^{B11}$) gekennzeichnete Bindung für $R^1$ die Bindung zu $L^1$, und für $R^{1'}$ die Bindung zu $L^{1'}$ darstellt.

11.1.1.3 Redoxaktive Anthrachinon-/ Carbazolfunktion **(C)**

Im Sinne der Erfindung bedeutet "redoxaktive Anthrachinon-/ Carbazolfunktion", ein redoxaktiver organischer Rest, der ein von Anthrachinon oder Carbazol abgeleitetes Grundgerüst umfasst.

CC.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive Anthrachinon-/ Carbazolfunktion **(C)** sind, bedeutet dies erfindungsgemäß , dass die Reste $R^1$, $R^{1'}$, $R^{2'}$, $R^{3'}$ bzw. $R^1$, $R^{1'}$ bzw. $R^1$ unabhängig voneinander jeweils aus der Gruppe bestehend aus den folgenden Strukturen **(C1)**, **(C2)** ausgewählt sind und die Reste $R^2$, $R^4$, $R^5$ unabhängig voneinander jeweils aus der Gruppe bestehend aus den folgenden Strukturen **(C3)**, **(C4)** mit

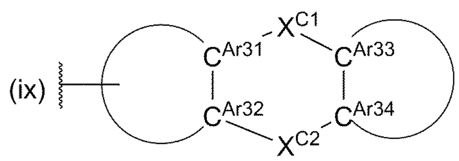 ; 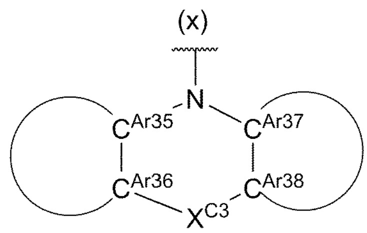

**(C1)** **(C2)**

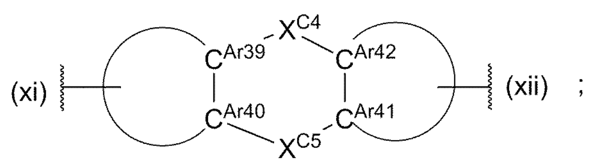

**(C3)**

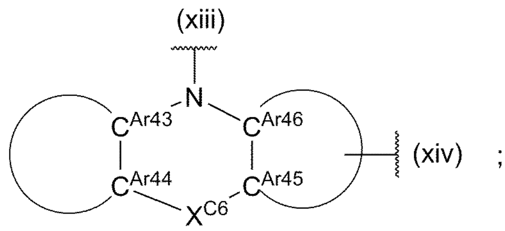

**(C4)**

ausgewählt sind,

wobei in der Struktur **(C1)** die durch $C^{Ar31}$ und $C^{Ar32}$ dargestellten Kohlenstoffatome Teil eines (hetero)aromatischen Fünfringes oder Sechsringes sind, wobei mindestens eines der von $C^{Ar31}$ und $C^{Ar32}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei in der Struktur **(C1)** die durch $C^{Ar33}$ und $C^{Ar34}$ dargestellten Kohlenstoffatome Teil eines (hetero)aromatischen Fünfringes oder Sechsringes sind, wobei mindestens eines der von $C^{Ar33}$ und $C^{Ar34}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei in der Struktur **(C2)** die durch $C^{Ar35}$ und $C^{Ar36}$ bzw. die durch $C^{Ar37}$ und $C^{Ar38}$ dargestellten Kohlenstoffatome jeweils Teil eines (hetero)aromatischen Fünfringes oder Sechsringes sind, wobei mindestens eines der von $C^{Ar35}$, $C^{Ar36}$, $C^{Ar37}$, $C^{Ar38}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei in der Struktur **(C3)** die durch $C^{Ar39}$ und $C^{Ar40}$ bzw. $C^{Ar41}$ und $C^{Ar42}$ dargestellten Kohlenstoffatome jeweils Teil eines (hetero)aromatischen Fünfringes oder Sechsringes sind, wobei mindestens eines der von $C^{Ar39}$, $C^{Ar40}$, $C^{Ar41}$ und $C^{Ar42}$ verschiedenen Kohlenstoffatome und, falls vorhanden, mindestens ein Stickstoffatom in den beiden Ringen mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei in der Struktur **(C4)** die durch $C^{Ar43}$ und $C^{Ar44}$ dargestellten Kohlenstoffatome Teil eines (hetero)aromatischen Fünfringes oder Sechsringes sind, wobei mindestens eines der von $C^{Ar43}$ und $C^{Ar44}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei in der Struktur **(C4)** die durch $C^{Ar45}$ und $C^{Ar46}$ dargestellten Kohlenstoffatome Teil eines (hetero)aromatischen Fünfringes oder Sechsringes sind, wobei mindestens eines der von $C^{Ar45}$ und $C^{Ar46}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt mit einer Gruppe ausgewählt aus Halogen, (Halo)Alkylgruppe, (Halo)Alkoxygruppe, substituiert sein kann,

wobei $X^{C1}$, $X^{C2}$, $X^{C3}$, $X^{C4}$, $X^{C5}$, $X^{C6}$ unabhängig voneinander jeweils aus der Gruppe bestehend aus -C(=$Y^{C1}$)-, -O-, -S-, -NH-, -N(Haloalkyl)-, -N(Alkyl)- ausgewählt sind,

und $X^{C2}$, $X^{C3}$, $X^{C5}$, $X^{C6}$ auch jeweils eine direkte Bindung sein können,

und wobei $X^{C1}$, $X^{C4}$ auch eine Gruppe der allgemeinen Formel ($\alpha^{C1}$)-C(=O)-C(=O)-($\beta^{C1}$) sein kann,

wobei ($\alpha^{C1}$) die Bindung zu $C^{Ar31}$ bzw. $C^{Ar39}$ kennzeichnet und ($\beta^{C1}$) die Bindung zu $C^{Ar33}$ bzw. $C^{Ar42}$ kennzeichnet,

wobei $Y^{C1}$ aus der Gruppe bestehend aus O, S, und einer der folgenden Strukturen ($Y^{C11}$), ($Y^{C12}$), **($Y^{C13}$)** mit

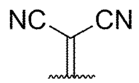 ; 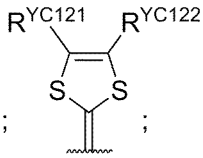 ; 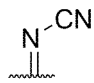 ;

**($Y^{C11}$)** **($Y^{C12}$)** **($Y^{C13}$)**

ausgewählt ist, wobei $R^{YC121}$, $R^{YC122}$ unabhängig voneinander aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, Halogen, (Halo)Alkylgruppe, (Halo)Alkoxygruppe, in einem weiteren Aspekt aus der Gruppe bestehend aus Wasserstoff, Alkylgruppe, Alkoxygruppe, in einem weiteren Aspekt aus der Gruppe bestehend aus Wasserstoff, Alkylgruppe ausgewählt sind, am bevorzugtesten beide Wasserstoff sind,

wobei der $C^{Ar31}$ und $C^{Ar32}$ umfassende (hetero)aromatische Fünfring oder Sechsring mit dem $C^{Ar33}$ und $C^{Ar34}$ umfassende (hetero)aromatischen Fünfring oder Sechsring zusätzlich zu $X^{C1}$ und $X^{C2}$ über einen weiteren zweiwertigen organischen Rest, der in einem Aspekt ein Alkylenrest oder ein Rest der Formel -C(=O)-C(=O)- ist, verbrückt sein kann,

wobei der $C^{Ar39}$ und $C^{Ar40}$ umfassende (hetero)aromatische Fünfring oder Sechsring mit dem $C^{Ar41}$ und $C^{Ar42}$ umfassende (hetero)aromatischen Fünfring oder Sechsring zusätzlich zu $X^{C4}$ und $X^{C5}$ über einen weiteren zweiwertigen organischen Rest, der in einem Aspekt ein Alkylenrest oder ein Rest der Formel -C(=O)-C(=O)- ist, verbrückt sein kann,

wobei die durch (ix) gekennzeichnete Bindung von einem der Atome ausgeht, die den $C^{Ar31}$ und $C^{Ar32}$ beinhaltenden (hetero)aromatischen Fünf- oder Sechsring bilden,

wobei die durch (xi) gekennzeichnete Bindung von einem der Atome ausgeht, die den $C^{Ar39}$ und $C^{Ar40}$ beinhaltenden (hetero)aromatischen Fünf- oder Sechsring bilden,

wobei die durch (xii) gekennzeichnete Bindung von einem der Atome ausgeht, die den $C^{Ar41}$ und $C^{Ar42}$ beinhaltenden (hetero)aromatischen Fünf- oder Sechsring bilden,

wobei die durch (xiv) gekennzeichnete Bindung von einem der Atome ausgeht, die den $C^{Ar45}$ und $C^{Ar46}$ beinhaltenden (hetero)aromatischen Fünf- oder Sechsring bilden,

und wobei

im Falle dass $R^1$ = **(C1)** oder **(C2)**, die durch (ix) bzw. (x) gekennzeichneten Bindungen jeweils die Bindung zu $L^1$ darstellen,

im Falle dass $R^{1'}$ = **(C1)** oder **(C2),** die durch (ix) bzw. (x) gekennzeichneten Bindungen jeweils die Bindung zu $L^{1'}$ darstellen,

im Falle dass $R^{2'}$ = **(C1)** oder **(C2),** die durch (ix) bzw. (x) gekennzeichneten Bindungen jeweils die Bindung zu $L^{2'}$ darstellen,

im Falle dass $R^{3'}$ = **(C1)** oder **(C2),** die durch (ix) bzw. (x) gekennzeichneten Bindungen jeweils die Bindung zu $L^{3'}$ darstellen,

im Falle dass $R^2$ = **(C3)** oder **(C4)**, die durch (xi) bzw. (xiii) gekennzeichneten Bindungen jeweils die Bindung zu $L^2$ darstellen und die durch (xii) bzw. (xiv) gekennzeichneten Bindungen jeweils die Bindung zu $L^3$ darstellen,

im Falle dass $R^4$ = **(C3)** oder **(C4)**, die durch (xi) bzw. (xiii) gekennzeichnete Bindungen jeweils die Bindung zu $L^4$ darstellen und die durch (xii) bzw. (xiv) gekennzeichneten Bindungen jeweils die Bindung zu $L^5$ darstellen,

im Falle dass $R^5$ = **(C3)** oder **(C4)**, die durch (xi) bzw. (xiii) gekennzeichnete Bindungen jeweils die Bindung zu $L^6$ darstellen und die durch (xii) bzw. (xiv) gekennzeichneten Bindungen jeweils die Bindung zu $L^7$ darstellen.

CC.2 In einem Aspekt des vorgenannten Punktes CC.1 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive Anthrachinon-/ Carbazolfunktion **(C)** sind, dass die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ unabhängig voneinander jeweils aus einer derfolgenden Strukturen **(C11), (C12), (C13), (C14), (C15), (C16), (C17), (C18), (C19), (C20)** mit

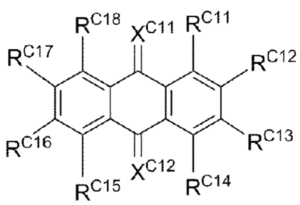 ; 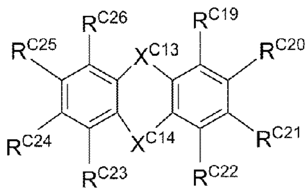 ; 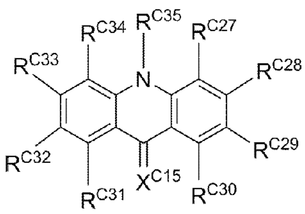 ;

**(C11)** **(C12)** **(C13)**

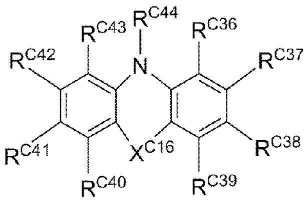 ; 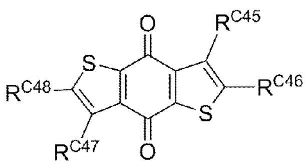 ; 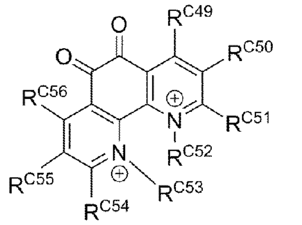 ;

**(C14)** **(C15)** **(C16)**

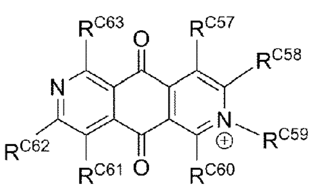 ; 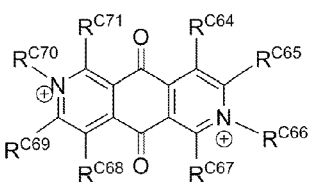 ; 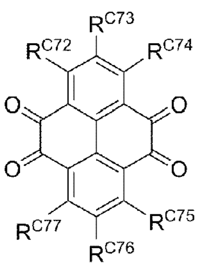 ; 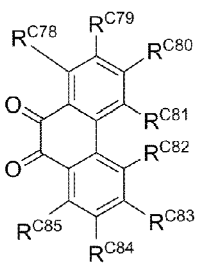 ;

**(C17)** **(C18)** **(C19)** **(C20)**

ausgewählt sind,

wobei $X^{C11}$, $X^{C12}$, $X^{C15}$ aus der Gruppe bestehend aus O, S, und einer der unter Punkt CC.1 definierten Strukturen **($Y^{C11}$)**, **($Y^{C12}$)**, **($Y^{C13}$)** ausgewählt ist

wobei $X^{C13}$, $X^{C14}$, $X^{C16}$ aus der Gruppe bestehend aus -O-, -S-, -NH-, -N(Haloalkyl)-, -N(Alkyl)-, in einem Aspekt aus der Gruppe bestehend aus -O-, -S-, -NH-, -N(Alkyl)-, in einem weiteren Aspekt aus der Gruppe bestehend aus -O-, -S-, -NH- ausgewählt sind,

und $X^{C14}$, $X^{C16}$ auch jeweils eine direkte Bindung sein können,

wobei, wenn $R^1$, $R^{1'}$, $R^{2'}$ oder $R^{3'}$ die Struktur **(C11)** aufweisen, einer der Reste $R^{C11}$, $R^{C12}$ die Bindung zu $L^1$, $L^{1'}$, $L^{2'}$ bzw. $L^{3'}$ darstellt,

und wobei, wenn $R^2$, $R^4$, $R^5$ die Struktur **(C11)** aufweisen, einer der Reste $R^{C11}$, $R^{C12}$, $R^{C13}$, $R^{C14}$, $R^{C15}$, $R^{C16}$, $R^{C17}$ $R^{C18}$ die Bindung zu $L^2$, $L^4$ bzw. $L^6$ darstellt und ein anderer der Reste $R^{C11}$, $R^{C12}$, $R^{C13}$, $R^{C14}$, $R^{C15}$, $R^{C16}$, $R^{C17}$, $R^{C18}$ die Bindung zu $L^3$, $L^5$ bzw. $L^7$ darstellt,

wobei, wenn $R^1$, $R^{1'}$, $R^{2'}$ oder $R^{3'}$ die Struktur **(C12)** aufweisen, einer der Reste $R^{C19}$, $R^{C20}$ die Bindung zu $L^1$, $L^{1'}$, $L^{2'}$ bzw. $L^{3'}$ darstellt,

und wobei, wenn $R^2$, $R^4$, $R^5$ die Struktur **(C12)** aufweisen, einer der Reste $R^{C19}$, $R^{C20}$, $R^{C21}$, $R^{C22}$, $R^{C23}$, $R^{C24}$ $R^{C25}$, $R^{C26}$ die Bindung zu $L^2$, $L^4$ bzw. $L^6$ darstellt und ein anderer der Reste $R^{C19}$, $R^{C20}$, $R^{C21}$, $R^{C22}$, $R^{C23}$, $R^{C24}$, $R^{C25}$, $R^{C26}$ die Bindung zu $L^3$, $L^5$ bzw. $L^7$ darstellt,

wobei, wenn $R^1$, $R^{1'}$, $R^{2'}$ oder $R^{3'}$ die Struktur **(C13)** aufweisen, einer der Reste $R^{C27}$, $R^{C28}$, $R^{C29}$, $R^{C30}$, $R^{C35}$ die Bindung zu $L^1$, $L^{''}$, $L^{2'}$ bzw. $L^{3'}$ darstellt,

und wobei, wenn $R^2$, $R^4$, $R^5$ die Struktur **(C13)** aufweisen, einer der Reste $R^{C27}$, $R^{C28}$, $R^{C29}$, $R^{C30}$, $R^{C31}$, $R^{C32}$, $R^{C33}$ $R^{C34}$, $R^{C35}$ die Bindung zu $L^2$, $L^4$ bzw. $L^6$ darstellt und ein anderer der Reste $R^{C27}$, $R^{C28}$, $R^{C29}$, $R^{C30}$, $R^{C31}$, $R^{C32}$, $R^{C33}$, $R^{C34}$, $R^{C35}$ die Bindung zu $L^3$, $L^5$ bzw. $L^7$ darstellt,

wobei, wenn $R^1$, $R^{1'}$, $R^{2'}$ oder $R^{3'}$ die Struktur **(C14)** aufweisen, einer der Reste $R^{C36}$, $R^{C37}$, $R^{C38}$, $R^{C39}$, $R^{C44}$ die Bindung zu $L^1$, $L^{1'}$, $L^{2'}$ bzw. $L^{3'}$ darstellt,

und wobei wenn $R^2$, $R^4$, $R^5$ die Struktur **(C14)** aufweisen, einer der Reste $R^{C36}$, $R^{C37}$, $R^{C38}$, $R^{C39}$, $R^{C40}$, $R^{C41}$, $R^{C42}$, $R^{C43}$, $R^{C44}$ die Bindung zu $L^2$, $L^4$ bzw. $L^6$ darstellt und ein anderer der Reste $R^{C36}$, $R^{C37}$, $R^{C38}$, $R^{C39}$, $R^{C40}$, $R^{C41}$, $R^{C42}$, $R^{C43}$, $R^{C44}$ die Bindung zu $L^3$, $L^5$ bzw. $L^7$ darstellt,

wobei, wenn $R^1$, $R^{1'}$, $R^{2'}$ oder $R^{3'}$ die Struktur **(C15)** aufweisen, einer der Reste $R^{C45}$, $R^{C46}$ die Bindung zu $L^1$, $L^{1'}$, $L^{2'}$ bzw. $L^{3'}$ darstellt,

und wobei, wenn $R^2$, $R^4$, $R^5$ die Struktur **(C15)** aufweisen, einer der Reste $R^{C45}$, $R^{C46}$, $R^{C47}$, $R^{C48}$ die Bindung zu $L^2$, $L^4$ bzw. $L^6$ darstellt und ein anderer der Reste $R^{C45}$, $R^{C46}$, $R^{C47}$, $R^{C48}$ die Bindung zu $L^3$, $L^5$ bzw. $L^7$ darstellt,

wobei, wenn $R^1$, $R^{1'}$, $R^{2'}$ oder $R^{3'}$ die Struktur **(C16)** aufweisen, einer der Reste $R^{C49}$, $R^{C50}$, $R^{C51}$, $R^{C52}$ die Bindung zu $L^1$, $L^{1'}$, $L^{2'}$ bzw. $L^{3'}$ darstellt,

und wobei, wenn $R^2$, $R^4$, $R^5$ die Struktur **(C16)** aufweisen, einer der Reste $R^{C49}$, $R^{C50}$, $R^{C51}$, $R^{C52}$, $R^{C53}$, $R^{C54}$, $R^{C55}$, $R^{C56}$ die Bindung zu $L^2$, $L^4$ bzw. $L^6$ darstellt und ein anderer der Reste $R^{C49}$, $R^{C50}$, $R^{C51}$, $R^{C52}$, $R^{C53}$, $R^{C54}$, $R^{C55}$, $R^{C56}$ die Bindung zu $L^3$, $L^5$ bzw. $L^7$ darstellt,

wobei, wenn $R^1$, $R^{1'}$, $R^{2'}$ oder $R^{3'}$ die Struktur **(C17)** aufweisen, einer der Reste $R^{C57}$, $R^{C58}$, $R^{C59}$, $R^{C60}$, $R^{C61}$, $R^{C62}$ $R^{C63}$ die Bindung zu $L^1$, $L^{1'}$, $L^{2'}$ bzw. $L^{3'}$ darstellt,

und wobei, wenn $R^2$, $R^4$, $R^5$ die Struktur **(C17)** aufweisen, einer der Reste $R^{C57}$, $R^{C58}$, $R^{C59}$, $R^{C60}$, $R^{C61}$, $R^{C62}$, $R^{C63}$ die Bindung zu $L^2$, $L^4$ bzw. $L^6$ darstellt und ein anderer der Reste $R^{C57}$, $R^{C58}$, $R^{C59}$, $R^{C60}$, $R^{C61}$, $R^{C62}$ $R^{C63}$ die Bindung zu $L^3$, $L^5$ bzw. $L^7$ darstellt,

wobei, wenn $R^1$, $R^{1'}$, $R^{2'}$ oder $R^{3'}$ die Struktur **(C18)** aufweisen, einer der Reste $R^{C64}$, $R^{C65}$, $R^{C66}$, $R^{C67}$ die Bindung zu $L^1$, $L^{1'}$, $L^{2'}$ bzw. $L^{3'}$ darstellt,

und wobei, wenn $R^2$, $R^4$, $R^5$ die Struktur **(C18)** aufweisen, einer der Reste $R^{C64}$, $R^{C65}$, $R^{C66}$, $R^{C67}$, $R^{C68}$, $R^{C69}$, $R^{C70}$, $R^{C71}$ die Bindung zu $L^2$, $L^4$ bzw. $L^6$ darstellt und ein anderer der Reste $R^{C64}$, $R^{C65}$, $R^{C66}$, $R^{C67}$, $R^{C68}$, $R^{C69}$, $R^{C70}$, $R^{C71}$ die Bindung zu $L^3$, $L^5$ bzw. $L^7$ darstellt,

wobei, wenn $R^1$, $R^{1'}$, $R^{2'}$ oder $R^{3'}$ die Struktur **(C19)** aufweisen, einer der Reste $R^{C72}$, $R^{C73}$ die Bindung zu $L^1$, $L^{1'}$, $L^{2'}$ bzw. $L^{3'}$ darstellt,

und wobei, wenn $R^2$, $R^4$, $R^5$ die Struktur **(C19)** aufweisen, einer der Reste $R^{C72}$, $R^{C73}$, $R^{C74}$, $R^{C75}$, $R^{C76}$, $R^{C77}$ die Bindung zu $L^2$, $L^4$ bzw. $L^6$ darstellt und ein anderer der Reste $R^{C72}$, $R^{C73}$, $R^{C74}$, $R^{C75}$, $R^{C76}$, $R^{C77}$ die Bindung zu $L^3$, $L^5$ bzw. $L^7$ darstellt,

wobei, wenn $R^1$, $R^{1'}$, $R^{2'}$ oder $R^{3'}$ die Struktur **(C20)** aufweisen, einer der Reste $R^{C78}$, $R^{C79}$, $R^{C80}$, $R^{C81}$ die Bindung zu $L^1$, $L^{1'}$, $L^{2'}$ bzw. $L^{3'}$ darstellt,

und wobei, wenn $R^2$, $R^4$, $R^5$ die Struktur **(C20)** aufweisen, einer der Reste $R^{C78}$, $R^{C79}$, $R^{C80}$, $R^{C81}$, $R^{C82}$, $R^{C83}$, $R^{C84}$, $R^{C85}$ die Bindung zu $L^2$, $L^4$ bzw. $L^6$ darstellt und ein anderer der Reste $R^{C78}$, $R^{C79}$, $R^{C80}$, $R^{C81}$, $R^{C82}$, $R^{C83}$, $R^{C84}$, $R^{C85}$ die Bindung zu $L^3$, $L^5$ bzw. $L^7$ darstellt,

und wobei diejenigen der Reste $R^{C11}$, $R^{C12}$, $R^{C13}$, $R^{C14}$, $R^{C15}$, $R^{C16}$, $R^{C17}$, $R^{C18}$, $R^{C19}$, $R^{C20}$, $R^{C21}$, $R^{C22}$, $R^{C23}$, $R^{C24}$ $R^{C25}$, $R^{C26}$, $R^{C27}$, $R^{C28}$, $R^{C29}$ $R^{C30}$, $R^{C31}$, $R^{C32}$, $R^{C33}$, $R^{C34}$, $R^{C36}$, $R^{C37}$, $R^{C38}$, $R^{C39}$, $R^{C40}$, $R^{C41}$, $R^{C42}$, $R^{C43}$, $R^{C45}$, $R^{C46}$, $R^{C47}$, $R^{C48}$, $R^{C49}$, $R^{C50}$, $R^{C51}$, $R^{C54}$, $R^{C55}$, $R^{C56}$, $R^{C57}$, $R^{C58}$, $R^{C60}$, $R^{C61}$, $R^{C62}$, $R^{C63}$, $R^{C64}$, $R^{C65}$, $R^{C67}$, $R^{C68}$, $R^{C69}$, $R^{C71}$ $R^{C72}$, $R^{C73}$, $R^{C74}$, $R^{C75}$, $R^{C76}$, $R^{C77}$ $R^{C78}$, $R^{C79}$, $R^{C80}$, $R^{C81}$, $R^{C82}$, $R^{C83}$, $R^{C84}$, $R^{C85}$, die keine Bindung zu $L^1$, $L^{1'}$, $L^{2'}$, $L^{3'}$, $L^2$, $L^3$, $L^4$, $L^5$, $L^6$ oder $L^7$ darstellen, unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, Halogen, (Halo)Alkylgruppe, (Halo)Alkoxygruppe, ausgewählt sind,

und wobei diejenigen der Reste $R^{C35}$, $R^{C44}$, $R^{C52}$, $R^{C53}$, $R^{C59}$, $R^{C66}$, $R^{C70}$, die keine Bindung zu $L^1$, $L^{1'}$, $L^{2'}$, $L^{3'}$, $L^2$, $L^3$, $L^4$, $L^5$, $L^6$ oder $L^7$ darstellen, unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen ausgewählt sind, in einem Aspekt aus der Gruppe ausgewählt aus Wasserstoff, Halogen, (Halo)Alkylgruppe, (Halo)Alkoxygruppe, ausgewählt sind.

CC.3 In einem Aspekt des vorgenannten Punktes CC.2 bedeutet erfindungsgemäß in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive Anthrachinon-/ Carbazolfunktion **(C)** sind, dass die Reste $R^1$, $R^{1'}$, $R^{2'}$, $R^{3'}$ bzw. die Reste $R^1$, $R^{1'}$ bzw. der Rest $R^1$ aus der Gruppe bestehend aus den folgenden Strukturen **(C101)**, **(C102)**, **(C103)**, **(C104)**, **(C105)**, **(C106)**, **(C107)**, **(C108)**, **(C109)**, **(C110)**, **(C111)**, **(C112)**, **(C113)**, **(C114)**, in einem Aspekt aus der Gruppe bestehend aus den folgenden Strukturen **(C101)**, **(C102)**, **(C103)**, **(C104)**, **(C105)**, **(C113)** mit

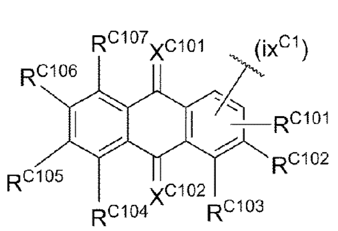

**(C101)**

;

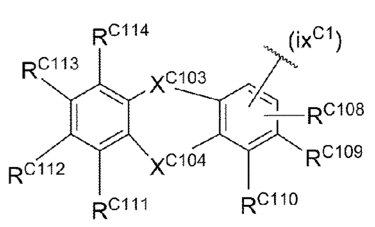

**(C102)**

;

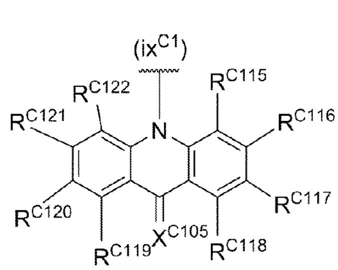

**(C103)**

;

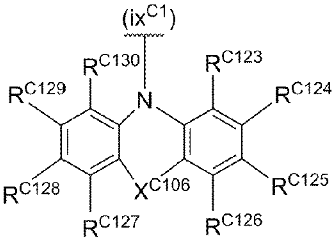 ; 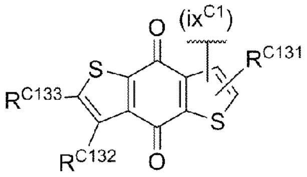 ; 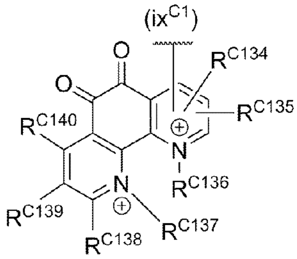 ;

(C104) (C105) (C106)

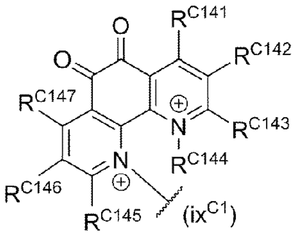 ; 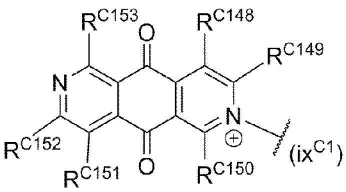 ; 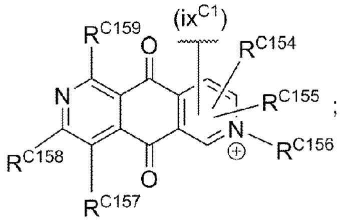 ;

(C107) (C108) (C109)

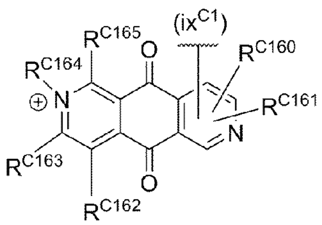 ; 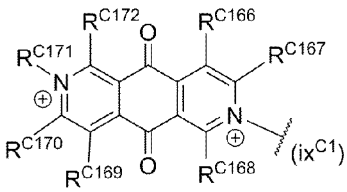 ; 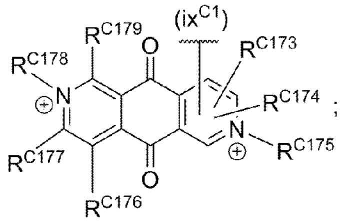 ;

(C110) (C111) (C112)

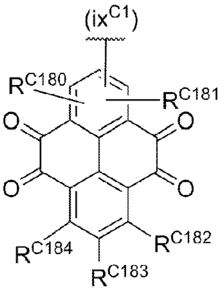 ; 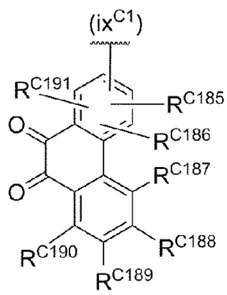 ;

(C113) (C114)

ausgewählt sind,

wobei die durch ($ix^{C1}$) gekennzeichnete Bindung die Bindung zu $L^1$, $L^{1'}$, $L^{2'}$ bzw. $L^{3'}$ bezeichnet,

wobei $X^{C101}$, $X^{C102}$, $X^{C105}$ aus der Gruppe bestehend aus O, S, und einer der unter Punkt CC.1 definierten Strukturen **($Y^{C11}$)**, **($Y^{C12}$)**, **($Y^{C13}$)** ausgewählt ist,

wobei $X^{C103}$, $X^{C104}$, $X^{C106}$ aus der Gruppe bestehend aus -O-, -S-, -NH-, -N(Haloalkyl)-, -N(Alkyl)-, in einem Aspekt aus der Gruppe bestehend aus -O-, -S-, -NH-, -N(Alkyl)-, in einem weiteren Aspekt aus der Gruppe bestehend aus -O-, -S-, -NH- ausgewählt sind,

und $X^{C104}$, $X^{C106}$ auch jeweils eine direkte Bindung sein können,

und wobei die Reste $R^{C101}$, $R^{C102}$, $R^{C103}$, $R^{C104}$, $R^{C105}$, $R^{C106}$, $R^{C107}$, $R^{C108}$, $R^{C109}$, $R^{C110}$, $R^{C111}$, $R^{C112}$, $R^{C113}$, $R^{C114}$, $R^{C115}$, $R^{C116}$, $R^{C117}$, $R^{C118}$, $R^{C119}$, $R^{C120}$, $R^{C121}$, $R^{C122}$, $R^{C123}$, $R^{C124}$, $R^{C125}$, $R^{C126}$, $R^{C127}$, $R^{C128}$, $R^{C129}$, $R^{C130}$, $R^{C131}$, $R^{C132}$, $R^{C133}$, $R^{C134}$, $R^{C135}$, $R^{C138}$, $R^{C139}$, $R^{C140}$, $R^{C141}$, $R^{C142}$, $R^{C143}$, $R^{C145}$, $R^{C146}$, $R^{C147}$, $R^{C148}$, $R^{C149}$, $R^{C150}$, $R^{C151}$, $R^{C152}$, $R^{C153}$, $R^{C154}$, $R^{C155}$, $R^{C157}$, $R^{C158}$, $R^{C159}$, $R^{C160}$, $R^{C161}$, $R^{C162}$, $R^{C163}$, $R^{C165}$, $R^{C166}$, $R^{C167}$, $R^{C168}$, $R^{C169}$, $R^{C170}$, $R^{C172}$, $R^{C173}$, $R^{C174}$, $R^{C176}$, $R^{C177}$, $R^{C179}$, $R^{C180}$, $R^{C181}$, $R^{C182}$, $R^{C183}$, $R^{C184}$, $R^{C185}$, $R^{C186}$, $R^{C187}$, $R^{C188}$, $R^{C189}$, $R^{C190}$, $R^{C191}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, Halogen, (Halo)Alkylgruppe, (Halo)Alkoxygruppe ausgewählt sind,

und wobei die Reste $R^{C136}$, $R^{C137}$, $R^{C144}$, $R^{C156}$, $R^{C164}$, $R^{C171}$, $R^{C175}$, $R^{C178}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen, in einem Aspekt aus der Gruppe ausgewählt aus Wasserstoff, Halogen, (Halo)Alkylgruppe, (Halo)Alkoxygruppe ausgewählt sind,

und $R^2$, $R^4$, $R^5$ aus der Gruppe bestehend aus den folgenden Strukturen **(C201)**, **(C202)**, **(C203)**, **(C204)**, **(C205)**, **(C206)**, **(C207)**, **(C208)**, **(C209)**, **(C210)**, **(C211)**, **(C212)**, **(C213)**, in einem Aspekt aus der Gruppe bestehend aus den folgenden Strukturen **(C201)**, **(C202)**, **(C203)**, **(C204)**, **(C205) (C212)** mit

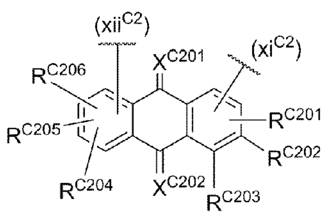

**(C201)**

;

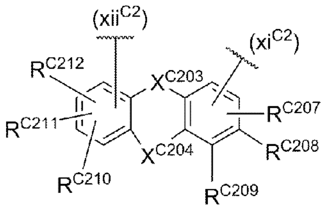

**(C202)**

;

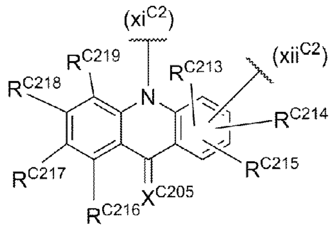

**(C203)**

;

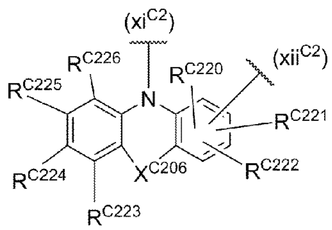

**(C204)**

;

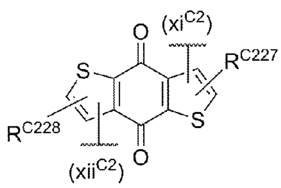

**(C205)**

;

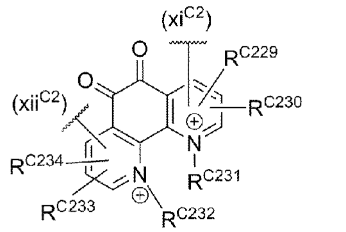

**(C206)**

;

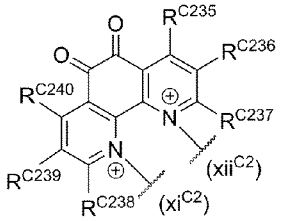

**(C207)**

;

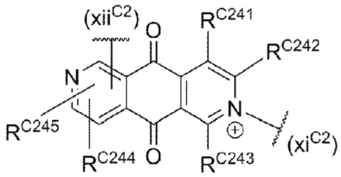

**(C208)**

;

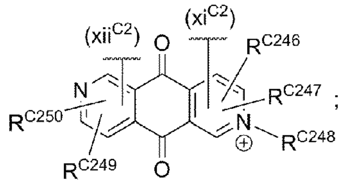

**(C209)**

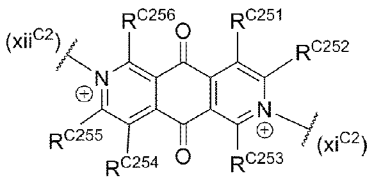 ; 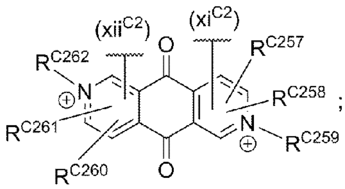 ; 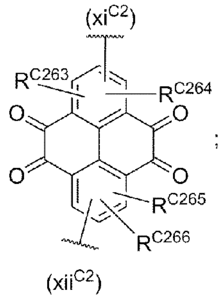 ; 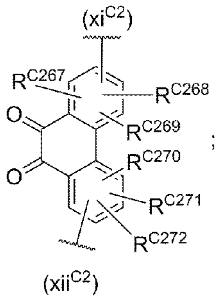 ;

**(C210)** **(C211)** **(C212)** **(C213)**

ausgewählt sind,

wobei die durch ($xi^{C2}$) gekennzeichnete Bindung die Bindung zu $L^2$, $L^4$ bzw. $L^6$ bezeichnet, und die durch ($xii^{C2}$) gekennzeichnete Bindung die Bindung zu $L^3$, $L^5$ bzw. $L^7$ bezeichnet,

wobei $X^{C201}$, $X^{C202}$, $X^{C205}$ aus der Gruppe bestehend aus O, S, und einer der unter Punkt CC.1 definierterten Strukturen **($Y^{C11}$)**, **($Y^{C12}$)**, **($Y^{C13}$)** ausgewählt ist,

wobei $X^{C203}$, $X^{C204}$, $X^{C206}$ aus der Gruppe bestehend aus -O-, -S-, -NH-, -N(Haloalkyl)-, -N(Alkyl)-, in einem Aspekt aus der Gruppe bestehend aus -O-, -S-, -NH-, -N(Alkyl)-, in einem weiteren Aspekt aus der Gruppe bestehend aus -O-, -S-, -NH- ausgewählt sind,

und $X^{C204}$, $X^{C206}$ auch jeweils eine direkte Bindung sein können,

und wobei die Reste $R^{C201}$, $R^{C202}$, $R^{C203}$, $R^{C204}$, $R^{C205}$, $R^{C206}$, $R^{C207}$, $R^{C208}$, $R^{C209}$, $R^{C210}$, $R^{C211}$, $R^{C212}$, $R^{C213}$, $R^{C214}$, $R^{C215}$, $R^{C216}$, $R^{C217}$, $R^{C218}$, $R^{C219}$, $R^{C220}$, $R^{C221}$, $R^{C222}$, $R^{C223}$, $R^{C224}$, $R^{C225}$, $R^{C226}$, $R^{C227}$, $R^{C228}$, $R^{C229}$, $R^{C230}$, $R^{C233}$, $R^{C234}$, $R^{C235}$, $R^{C236}$, $R^{C237}$, $R^{C238}$, $R^{C239}$, $R^{C240}$, $R^{C241}$, $R^{C242}$, $R^{C243}$, $R^{C244}$, $R^{C245}$, $R^{C246}$, $R^{C247}$, $R^{C249}$, $R^{C250}$, $R^{C251}$, $R^{C252}$, $R^{C253}$, $R^{C254}$, $R^{C255}$, $R^{C256}$, $R^{C257}$, $R^{C258}$, $R^{C260}$, $R^{C261}$, $R^{C263}$, $R^{C264}$, $R^{C265}$, $R^{C266}$, $R^{C267}$, $R^{C268}$, $R^{C269}$, $R^{C270}$, $R^{C271}$, $R^{C272}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, Halogen, (Halo)Alkylgruppe, (Halo)Alkoxygruppe ausgewählt sind,

und wobei die Reste $R^{C231}$, $R^{C232}$, $R^{C248}$, $R^{C259}$, $R^{C262}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen, in einem Aspekt aus der Gruppe ausgewählt aus Wasserstoff, Halogen, (Halo)Alkylgruppe, (Halo)Alkoxygruppe ausgewählt sind.

CC.4 In einem Aspekt der vorgenannten Punkte CC.3 bedeutet erfindungsgemäß in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.α) und Punkt II.1.β) definiert ist, jeweils eine redoxaktive Anthrachinon-/ Carbazolfunktion **(C)** sind, dass die Reste $R^1$, $R^{1'}$, $R^{2'}$, $R^{3'}$ bzw. die Reste $R^1$, $R^{1'}$ bzw. der Rest $R^1$ aus der Gruppe bestehend aus nachfolgend definierten Strukturen **(C301)**, **(C302)**, **(C303)**, **(C304)**, **(C305)**, **(C306)**, **(C307)** mit

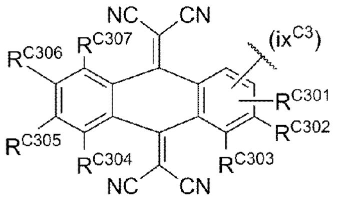 ; 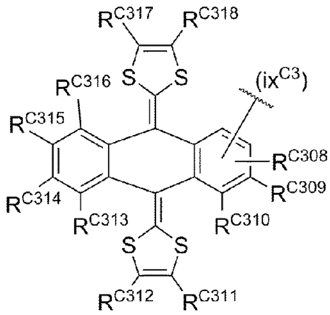 ; 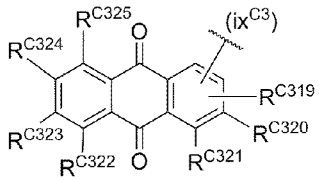 ;

(C301) (C302) (C303)

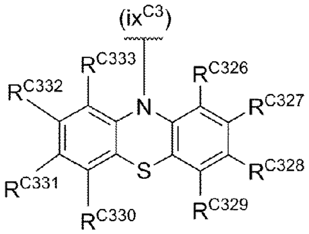 ; 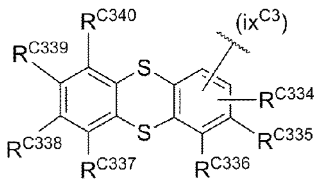 ; 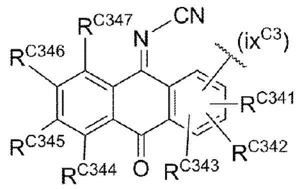 ;

(C304) (C305) (C306)

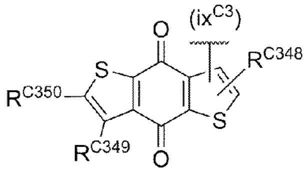 ;

(C307)

ausgewählt sind,

wobei $R^{C301}$, $R^{C302}$, $R^{C303}$, $R^{C304}$, $R^{C305}$, $R^{C306}$, $R^{C307}$, $R^{C308}$, $R^{C309}$, $R^{C310}$, $R^{C311}$, $R^{C312}$, $R^{C313}$, $R^{C314}$ $R^{C315}$, $R^{C316}$, $R^{C317}$, $R^{C318}$, $R^{C319}$, $R^{C320}$, $R^{C321}$, $R^{C322}$, $R^{C323}$, $R^{C324}$, $R^{C325}$, $R^{C326}$, $R^{C327}$, $R^{C328}$, $R^{C329}$, $R^{C330}$, $R^{C331}$, $R^{C332}$, $R^{C333}$, $R^{C334}$, $R^{C335}$, $R^{C336}$, $R^{C337}$, $R^{C338}$, $R^{C339}$, $R^{C340}$, $R^{C341}$, $R^{C342}$, $R^{C343}$, $R^{C344}$, $R^{C345}$, $R^{C346}$, $R^{C347}$, $R^{C348}$, $R^{C349}$, $R^{C350}$ unabhängig voneinander jeweils aus der Gruppe bestehend aus Wasserstoff, Halogen, (Halo)Alkylgruppe, (Halo)Alkoxygruppe, in einem Aspekt aus der Gruppe bestehend aus Wasserstoff, Alkylgruppe ausgewählt sind, und in einem weiteren Aspekt alle Wasserstoff, sind,

und wobei die durch ($ix^{C3}$) gekennzeichnete Bindung jeweils die Bindung zu $L^1$, $L^{1'}$, $L^{2'}$ bzw. $L^{3'}$ bezeichnet,

und die Reste $R^2$, $R^4$, $R^5$ aus der Gruppe bestehend aus den nachfolgend definierten Strukturen **(C401)**, **(C402)**, **(C403)**, **(C404)**, **(C405)**, **(C406)**, **(C407)** mit

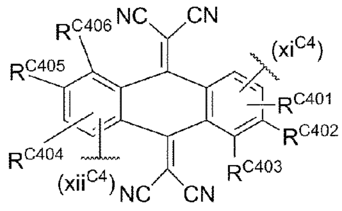 ; 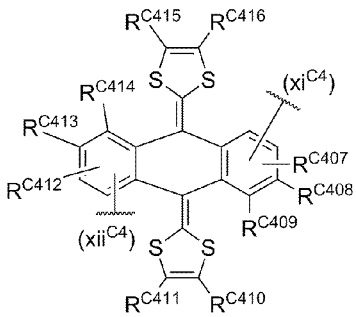 ; 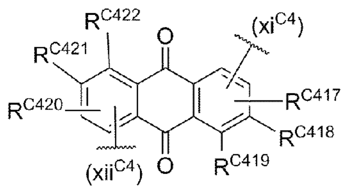 ;

(C401) (C402) (C403)

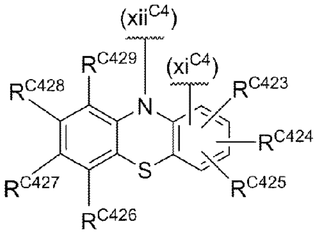 ; 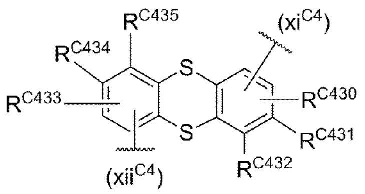 ; 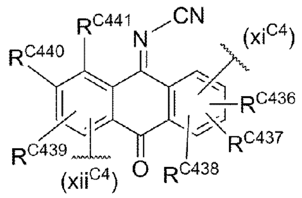 ;

(C404) (C405) (C406)

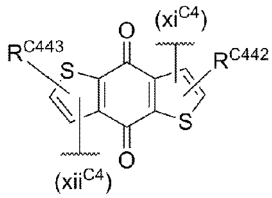 ;

(C407)

ausgewählt sind,

und wobei die durch ($xi^{C4}$) gekennzeichnete Bindung jeweils die Bindung zu $L^2$, $L^4$ bzw. $L^6$ bezeichnet, und wobei die durch ($xii^{C4}$) gekennzeichnete Bindung die Bindung zu $L^3$, $L^5$ bzw. $L^7$ bezeichnet,

wobei $R^{C401}$, $R^{C402}$, $R^{C403}$, $R^{C404}$, $R^{C405}$, $R^{C406}$, $R^{C407}$, $R^{C408}$, $R^{C409}$, $R^{C410}$, $R^{C411}$, $R^{C412}$, $R^{C413}$, $R^{C414}$, $R^{C415}$, $R^{C416}$, $R^{C417}$, $R^{C418}$, $R^{C419}$, $R^{C420}$, $R^{C421}$, $R^{C422}$, $R^{C423}$, $R^{C424}$, $R^{C425}$, $R^{C426}$, $R^{C427}$, $R^{C428}$, $R^{C429}$, $R^{C430}$, $R^{C431}$, $R^{C432}$, $R^{C433}$, $R^{C434}$, $R^{C435}$, $R^{C436}$, $R^{C437}$, $R^{C438}$, $R^{C439}$, $R^{C440}$, $R^{C441}$, $R^{C442}$, $R^{C443}$ unabhängig voneinander jeweils aus der Gruppe bestehend aus Wasserstoff, Halogen, (Halo)Alkylgruppe, (Halo)Alkoxygruppe, in einem weiteren Aspekt aus der Gruppe bestehend aus Wasserstoff, Alkylgruppe ausgewählt sind, und in einem weiteren Aspekt alle Wasserstoff sind.

CC.5 In einem Aspekt des vorgenannten Punktes CC.4 bedeutet erfindungsgemäß in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive Anthrachinon-/ Carbazolfunktion (C) sind, dass $R^1$, $R^{1'}$, $R^{2'}$, $R^{3'}$ bzw. die Reste $R^1$, $R^{1'}$ bzw. der Rest $R^1$ aus der Gruppe bestehend aus den unter Punkt CC.4 definierten Strukturen **(C301)**, **(C302)**, **(C303)**, **(C304)** ausgewählt sind, und die Reste $R^2$, $R^4$, $R^5$ aus der Gruppe bestehend aus den unter Punkt CC.4 definierten Strukturen **(C401)**, **(C402)**, **(C403)**, **(C404)** ausgewählt sind, wobei ($ix^{C3}$), ($xi^{C4}$), ($xii^{C4}$) sowie die Reste $R^{C301}$, $R^{C302}$, $R^{C303}$, $R^{C304}$, $R^{C305}$, $R^{C306}$, $R^{C307}$, $R^{C308}$, $R^{C309}$, $R^{C310}$, $R^{C311}$, $R^{C312}$ $R^{C313}$, $R^{C314}$, $R^{C315}$, $R^{C316}$, $R^{C317}$, $R^{C318}$, $R^{C319}$, $R^{C320}$, $R^{C321}$, $R^{C322}$, $R^{C323}$, $R^{C324}$, $R^{C325}$, $R^{C326}$, $R^{C327}$, $R^{C328}$, $R^{C329}$, $R^{C330}$, $R^{C331}$, $R^{C332}$, $R^{C333}$, $R^{C401}$, $R^{C402}$, $R^{C403}$, $R^{C404}$, $R^{C405}$, $R^{C406}$, $R^{C407}$, $R^{C408}$, $R^{C409}$, $R^{C410}$, $R^{C411}$, $R^{C412}$, $R^{C413}$, $R^{C414}$, $R^{C415}$, $R^{C416}$, $R^{C417}$, $R^{C418}$, $R^{C419}$, $R^{C420}$, $R^{C421}$, $R^{C422}$, $R^{C423}$, $R^{C424}$, $R^{C425}$, $R^{C426}$, $R^{C427}$, $R^{C428}$, $R^{C429}$ die unter Punkt CC.4 definierte Bedeutung haben.

CC.6 In einem Aspekt der Erfindung, wie er unter II.1.β) oder dem Punkt CC.5 definiert ist, umfasst das im erfindungsgemäßen Verfahren zur Herstellung einer Elektrode gemäß dem zweiten Aspekt der vorliegenden Erfindung eingesetzte, in der Hauptkette nichtkonjugierte, organisches Redox-Polymer P insbesondere $n^1$ miteinander verknüpfte Wiederholungseinheiten der chemischen Struktur **(I)** mit

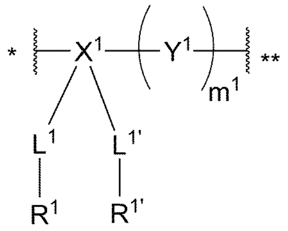

;

**(I)**

wobei $n^1$ eine ganze Zahl ≥ 4, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl ≥ 0, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $X^1$ eine nichtkonjugierte organische Gruppe, welche durch Polymerisationsreaktion aus einer Gruppe gebildet wird, die aus einer organischen Doppelbindung, einer organischen Dreifachbindung, einem Oxiran oder einem Aziridin besteht, ist, oder eine nichtkonjugierte organische Gruppe ist, welche durch eine polymeranaloge Reaktion gebildet wird,

wobei $Y^1$ eine nichtkonjugierte organische Spacereinheit ist,

wobei $L^1$, $L^{1'}$ unabhängig voneinander jeweils aus der Gruppe bestehend aus direkte Bindung, organische Linkereinheit ausgewählt sind, und in einem Aspekt $L^1$ aus der Gruppe bestehend aus direkte Bindung, organische Linkereinheit ausgewählt ist und $L^{1'}$ eine direkte Bindung ist,

wobei $R^1$, $R^{1'}$ unabhängig voneinander jeweils eine redoxaktive Anthrachinon/ Carbazolfunktion **(C)** sind, und $R^{1'}$ auch ein Wasserstoffrest sein kann, und in einem Aspekt $R^1$ eine redoxaktive Anthrachinon/ Carbazolfunktion **(C)** und $R^{1'}$ ein Wasserstoffrest ist,

und wobei die redoxaktive Anthrachinon/ Carbazolfunktion **(C)** in einem weiteren Aspekt jeweils eine der unter Punkt CC.4 definierten Strukturen **(C301), (C302), (C303), (C304)** aufweist, in einem weiteren Aspekt jeweils eine der unter Punkt CC.4 definierten Strukturen **(C301), (C302)** aufweist, in einem weiteren Aspekt eine Verbindung der unter Punkt CC.54 definierte Struktur **(C301)** ist,

wobei in den Strukturen **(C301), (C302), (C303), (C304)** die Reste $R^{C301}$, $R^{C302}$, $R^{C303}$, $R^{C304}$, $R^{C305}$, $R^{C306}$, $R^{C307}$, $R^{C308}$, $R^{C309}$, $R^{C310}$, $R^{C311}$, $R^{C312}$, $R^{C313}$, $R^{C314}$, $R^{C315}$, $R^{C316}$, $R^{C317}$, $R^{C318}$, $R^{C319}$, $R^{C320}$, $R^{C321}$ , $R^{C322}$, $R^{C323}$, $R^{C324}$, $R^{C325}$, $R^{C326}$, $R^{C327}$, $R^{C328}$, $R^{C329}$, $R^{C330}$, $R^{C331}$, $R^{C332}$, $R^{C333}$ unabhängig voneinander jeweils aus der Gruppe bestehend aus Wasserstoff, Halogen, (Halo)Alkylgruppe, (Halo)Alkoxygruppe und in einem weiteren Aspekt aus der Gruppe bestehend aus Wasserstoff, Alkylgruppe ausgewählt sind, und in einem weiteren Aspekt alle Wasserstoff, sind,

und wobei die durch ($ix^{C3}$) gekennzeichnete Bindung jeweils die Bindung zu $L^1$ bzw. $L^{1'}$ bezeichnet.

CC.7 In einem weiteren Aspekt des vorgenannten Punktes CC.6 ist $R^{1'}$ Wasserstoff und $R^1$ ist aus der Gruppe bestehend aus den Strukturen **(C501), (C502)** mit

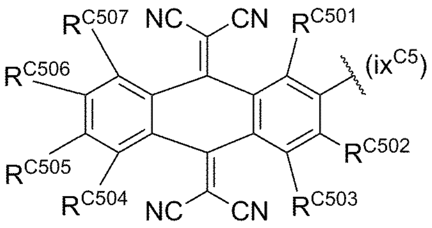
;
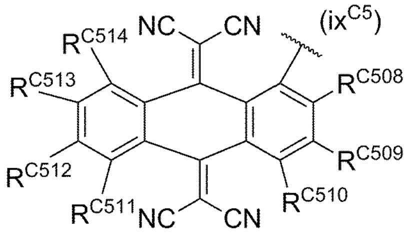
;

**(C501)** **(C502)**

ausgewählt, in einem weiteren Aspekt ist $R^1$ eine Verbindung der Struktur **(C501),**
wobei $R^{C501}$, $R^{C502}$, $R^{C503}$, $R^{C504}$, $R^{C505}$, $R^{C506}$, $R^{C507}$, $R^{C508}$, $R^{C509}$, $R^{C510}$, $R^{C511}$, $R^{C512}$, $R^{C513}$, $R^{514}$ unabhängig voneinander jeweils aus der Gruppe bestehend aus Wasserstoff, Halogen, (Halo)Alkylgruppe, (Halo)Alkoxygruppe, in einem weiteren Aspekt aus der Gruppe bestehend aus Wasserstoff, Alkylgruppe ausgewählt sind, und in einem weiteren Aspekt alle Wasserstoff sind,
und wobei die durch ($ix^{C5}$) gekennzeichnete Bindung die Bindung zu $L^1$ bezeichnet.

11.1.1.4 Redoxaktive Dialkoxybenzolfunktion **(D)**

Im Sinne der Erfindung bedeutet "redoxaktive Dialkoxybenzolfunktion", ein redoxaktiver organischer Rest, der ein von einem Phenoxyrest abgeleitetes Grundgerüst umfasst.

DD.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Dialkoxybenzolfunktion **(D)** sind, bedeutet dies erfindungsgemäß , dass die Reste $R^1$, $R^{1'}$, $R^{2'}$, $R^{3'}$ bzw. $R^1$, $R^{1'}$ bzw. $R^1$ unabhängig voneinander jeweils die folgende Struktur **(D1)** aufweisen und die Reste $R^2$, $R^4$, $R^5$ unabhängig voneinander jeweils die folgende Struktur **(D2)** aufweisen:

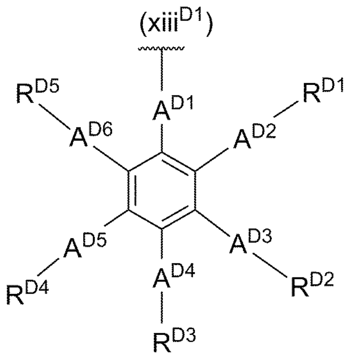
;
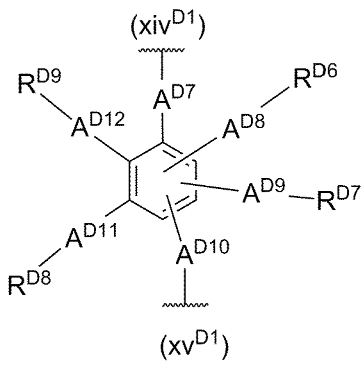
;

**(D1)** **(D2)**

wobei, im Falle dass $R^1$ = **(D1),** die durch ($xiii^{D1}$) gekennzeichnete Bindung die Bindung zu $L^1$ darstellt,

wobei, im Falle dass $R^{1'}$ = **(D1),** die durch ($xiii^{D1}$) gekennzeichnete Bindung die Bindung zu $L^{1'}$ darstellt,

im Falle dass $R^{2'}$ = **(D1),** die durch ($xiii^{D1}$) gekennzeichnete Bindung die Bindung zu $L^{2'}$ darstellt,

im Falle dass $R^{3'}$ = **(D1),** die durch ($xiii^{D1}$) gekennzeichnete Bindung die Bindung zu $L^{3'}$ darstellt,

im Falle dass $R^2$ = **(D2),** die durch ($xiv^{D1}$) gekennzeichnete Bindung die Bindung zu $L^2$ darstellt, und die durch ($xv^{D1}$) die Bindung zu $L^3$ darstellt,

im Falle dass $R^4$ = **(D2),** die durch ($xiv^{D1}$) gekennzeichnete Bindung die Bindung zu $L^4$ darstellt, und die durch ($xv^{D1}$)

die Bindung zu $L^5$ darstellt,

im Falle dass $R^5$ = **(D2),** die durch ($xiv^{D1}$) gekennzeichnete Bindung die Bindung zu $L^6$ darstellt, und die durch ($xv^{D1}$) die Bindung zu $L^7$ darstellt,

und wobei mindestens zwei, in einem Aspekt genau zwei, der Reste $A^{D1}$, $A^{D2}$, $A^{D3}$, $A^{D4}$, $A^{D5}$, $A^{D6}$ unabhängig voneinander jeweils aus der Gruppe bestehend aus -O-, -S- ausgewählt und die übrigen der Reste $A^{D1}$, $A^{D2}$, $A^{D3}$, $A^{D4}$, $A^{D5}$, $A^{D6}$ jeweils eine direkte Bindung sind,

und wobei mindestens zwei, in einem Aspekt genau zwei, der Reste $A^{D7}$, $A^{D8}$, $A^{D9}$, $A^{D10}$, $A^{D11}$, $A^{D12}$ unabhängig voneinander jeweils aus der Gruppe bestehend aus -O-, -S- ausgewählt und die übrigen der Reste $A^{D7}$, $A^{D8}$, $A^{D9}$, $A^{D10}$, $A^{D11}$, $A^{D12}$ jeweils eine direkte Bindung sind,

und wobei die Reste $R^{D1}$, $R^{D2}$, $R^{D3}$, $R^{D4}$, $R^{D5}$, $R^{D6}$, $R^{D7}$, $R^{D8}$, $R^{D9}$ unabhängig voneinander jeweils aus der Gruppe bestehend aus Wasserstoff, (hetero)aromatischer Rest, Alkylgruppe, Alkenylgruppe, Alkinylgruppe, Cycloalkylgruppe, in einem Aspekt aus der Gruppe bestehend aus Wasserstoff, (Halo)Alkylgruppe, Cycloalkylgruppe ausgewählt sind,

wobei der (hetero)aromatische Rest, die Alkylgruppe, die Alkenylgruppe, die Alkinylgruppe, die Cycloalkylgruppe jeweils mit mindestens einem Rest, der aus der Gruppe bestehend aus Nitrogruppe, $-NH_2$, -CN, -SH, -OH, Halogen ausgewählt ist und in einem Aspekt Halogen ist, substituiert sein können,

und wobei die Alkylgruppe, die Alkenylgruppe, die Alkinylgruppe, die Cycloalkylgruppe mindestens eine Gruppe, die aus der Gruppe bestehend aus Ether, Thioether, Aminoether, Carbonylgruppe, Carbonsäureester, Carbonsäureamidgruppe, Sulfonsäureester, Phosphorsäureester, in einem Aspekt aus der Gruppe bestehend aus Ether, Thioether ausgewählt ist, aufweisen können,

und wobei mindestens zwei, in einem Aspekt in *ortho*-Stellung zueinander stehende, Reste der Reste $R^{D1}$, $R^{D2}$, $R^{D3}$, $R^{D4}$, $R^{D5}$ bzw. der Reste $R^{D6}$, $R^{D7}$, $R^{D8}$, $R^{D9}$ jeweils auch durch einen zweiwertigen aliphatischen Rest verbrückt sein können, wobei der aliphatische Rest mit mindestens einer Gruppe, die aus der Gruppe bestehend aus Nitrogruppe, $-NH_2$, -CN, -SH, -OH, Halogen, Alkylgruppe ausgewählt ist, substituiert sein kann und mindestens eine Gruppe ausgewählt aus der Gruppe bestehend aus Ether, Thioether, Aminoether, Carbonylgruppe, Carbonsäureester, Carbonsäureamidgruppe, Sulfonsäureester, Phosphorsäureester, in einem Aspekt ausgewählt aus der Gruppe bestehend aus Ether, Thioether, aufweisen kann,

und wobei der Rest $R^{D1}$ im Falle dass $A^{D2}$ = direkte Bindung, der Rest $R^{D2}$ im Falle dass $A^{D3}$ = direkte Bindung, der Rest $R^{D3}$ im Falle dass $A^{D4}$ = direkte Bindung, der Rest $R^{D4}$ im Falle dass $A^{D5}$ = direkte Bindung, der Rest $R^{D5}$ im Falle dass $A^{D6}$ = direkte Bindung, der Rest $R^{D6}$ im Falle dass $A^{D8}$ = direkte Bindung, der Rest $R^{D7}$ im Falle dass $A^{D9}$ = direkte Bindung, der Rest $R^{D8}$ im Falle dass $A^{D11}$ = direkte Bindung, der Rest $R^{D9}$ im Falle dass $A^{D12}$ = direkte Bindung, unabhängig voneinander jeweils auch aus der Gruppe bestehend aus Nitrogruppe, -CN, -F, -Cl, -Br, -I, $-C(=O)NHR^{D13}$, $-NR^{D14}R^{D15}$, $-COOR^{D16}$, $-COR^{D17}$ ausgewählt sein können,
wobei $R^{D13}$, $R^{D14}$, $R^{D15}$, $R^{D16}$, $R^{D17}$ unabhängig voneinander jeweils aus der Gruppe bestehend aus Wasserstoff, (hetero)aromatischer Rest, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, ausgewählt sind.

DD.2 In einem Aspekt des vorgenannten Punktes DD.1 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Dialkoxybenzolfunktion **(D)** sind, dass die Reste $R^1$, $R^{1'}$, $R^{2'}$, $R^{3'}$ bzw. $R^1$, $R^{1'}$ bzw. $R^1$ unabhängig voneinander jeweils die unter Punkt DD.1 definierte Struktur **(D1)** aufweisen und die Reste $R^2$, $R^4$, $R^5$ unabhängig voneinander jeweils die unter Punkt DD.1 definierte Struktur **(D2)** aufweisen,

wobei ($xiii^{D1}$), ($xiv^{D1}$), ($xv^{D1}$) die unter Punkt DD.1 definierte Bedeutung haben,

und wobei mindestens zwei, in einem Aspekt genau zwei, der Reste $A^{D1}$, $A^{D2}$, $A^{D3}$, $A^{D4}$, $A^{D5}$, $A^{D6}$ jeweils -O- sind

und die übrigen von $A^{D1}$, $A^{D2}$, $A^{D3}$, $A^{D4}$, $A^{D5}$, $A^{D6}$ jeweils eine direkte Bindung sind,

und wobei mindestens zwei, in einem Aspekt genau zwei, der Reste $A^{D7}$, $A^{D8}$, $A^{D9}$, $A^{D10}$, $A^{D11}$, $A^{D12}$ jeweils -O- sind und die übrigen von $A^{D7}$, $A^{D8}$, $A^{D9}$, $A^{D10}$, $A^{D11}$, $A^{D12}$ jeweils eine direkte Bindung sind,

und wobei die Reste $R^{D1}$, $R^{D2}$, $R^{D3}$, $R^{D4}$, $R^{D5}$, $R^{D6}$, $R^{D7}$, $R^{D8}$, $R^{D9}$ unabhängig voneinander jeweils aus der Gruppe bestehend aus Wasserstoff, Phenylrest, Benzylrest, Alkylgruppe, Cycloalkylgruppe ausgewählt sind,

wobei der Phenylrest, Benzylrest, Alkylgruppe, Cycloalkylgruppe jeweils mit Halogen substituiert sein kann,

und wobei die Alkylgruppe und die Cycloalkylgruppe mindestens eine Gruppe ausgewählt aus Ether, Thioether, aufweisen können,

und wobei mindestens zwei, in einem Aspekt in ortho-Stellung zueinander stehende, Reste der Reste $R^{D1}$, $R^{D2}$, $R^{D3}$, $R^{D4}$, $R^{D5}$ und der Reste $R^{D6}$, $R^{D7}$, $R^{D8}$, $R^{D9}$ jeweils auch durch einen zweiwertigen Alkylenrest verbrückt sein können, der mindestens eine Gruppe ausgewählt aus Ether, Thioether, aufweisen kann,

und wobei der Rest $R^{D1}$ im Falle dass $A^{D2}$ = direkte Bindung, der Rest $R^{D2}$ im Falle dass $A^{D3}$ = direkte Bindung, der Rest $R^{D3}$ im Falle dass $A^{D4}$ = direkte Bindung, der Rest $R^{D4}$ im Falle dass $A^{D5}$ = direkte Bindung, der Rest $R^{D5}$ im Falle dass $A^{D6}$ = direkte Bindung, Rest $R^{D6}$ im Falle dass $A^{D8}$ = direkte Bindung, der Rest $R^{D7}$ im Falle dass $A^{D9}$ = direkte Bindung, der Rest $R^{D8}$ im Falle dass $A^{D11}$ = direkte Bindung, der Rest $R^{D9}$ im Falle dass $A^{D12}$ = direkte Bindung, unabhängig voneinander jeweils auch aus der Gruppe bestehend aus Nitrogruppe, -CN, -F, -Cl, -Br, -I, -C(=O)NHR$^{D18}$, -NR$^{D19}$R$^{D20,}$ -COOR$^{D21}$, -COR$^{D22}$ ausgewählt sein können,
wobei $R^{D18}$, $R^{D19}$, $R^{D20}$, $R^{D21}$, $R^{D22}$ unabhängig voneinander jeweils aus der Gruppe bestehend aus Wasserstoff, (hetero)aromatischer Rest, gegebenenfalls mit mindestens einer Gruppe ausgewählt aus Nitrogruppe, -$NH_2$, -CN, -SH, -OH, Halogen substituierter und gegebenenfalls mindestens eine Gruppe ausgewählt aus Ether, Thioether aufweisender Alkylrest, ausgewählt sind.

DD.3 In einem Aspekt des vorgenannten Punktes DD.2 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Dialkoxybenzolfunktion **(D)** sind, dass die Reste $R^1$, $R^{1'}$, $R^{2'}$, $R^{3'}$ bzw. $R^1$, $R^{1'}$ bzw. $R^1$ unabhängig voneinander jeweils die nachfolgend definierte Struktur **(D3)** aufweisen und die Reste $R^2$, $R^4$, $R^5$ unabhängig voneinander jeweils die nachfolgend definierte Struktur **(D4)** aufweisen,

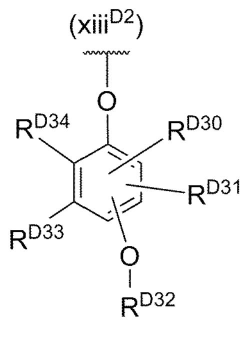
;
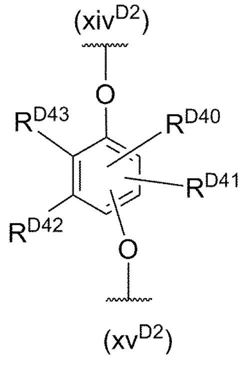
;

**(D3)** **(D4)**

wobei, im Falle dass $R^1$ = **(D3),** die durch (xiii$^{D2}$) gekennzeichnete Bindung die Bindung zu $L^1$ darstellt,
im Falle dass $R^{1'}$ = **(D3),** die durch (xiii$^{D2}$) gekennzeichnete Bindung die Bindung zu $L^{1'}$ darstellt,
im Falle dass $R^{2'}$ = **(D3),** die durch (xiii$^{D2}$) gekennzeichnete Bindung die Bindung zu $L^{2'}$ darstellt,
im Falle dass $R^{3'}$ = **(D3),** die durch (xiii$^{D2}$) gekennzeichnete Bindung die Bindung zu $L^{3'}$ darstellt,
im Falle dass $R^2$ = **(D4),** die durch (xiv$^{D2}$) gekennzeichnete Bindung die Bindung zu $L^2$ darstellt, und die durch (xv$^{D2}$) gekennzeichnete Bindung die Bindung zu $L^3$ darstellt,
im Falle dass $R^4$ = **(D4),** die durch (xiv$^{D2}$) gekennzeichnete Bindung die Bindung zu $L^4$ darstellt, und die durch (xv$^{D2}$) gekennzeichnete Bindung die Bindung zu $L^5$ darstellt,

im Falle dass $R^5$ = **(D4),** die durch ($xiv^{D2}$) gekennzeichnete Bindung die Bindung zu $L^6$ darstellt, und die durch ($xv^{D2}$) gekennzeichnete Bindung die Bindung zu $L^7$ darstellt,

und wobei $R^{D30}$, $R^{D31}$, $R^{D32}$, $R^{D33}$, $R^{D34}$, $R^{D40}$, $R^{D41}$, $R^{D42}$, $R^{D43}$ unabhängig voneinander jeweils aus der Gruppe bestehend aus Wasserstoff, Phenylrest, Benzylrest, (Halo)Alkylgruppe, Cycloalkylgruppe, in einem Aspekt aus der Gruppe bestehend aus Wasserstoff, Alkylgruppe, Cycloalkylgruppe ausgewählt sind,

und wobei die Reste $R^{D30}$, $R^{D31}$, $R^{D33}$, $R^{D34}$, $R^{D40}$, $R^{D41}$, $R^{D42}$, $R^{D43}$ jeweils auch Hydroxy sein können,

und wobei mindestens zwei, in einem Aspekt in ortho-Stellung zueinander stehende, Reste der Reste $R^{D30}$, $R^{D31}$, $R^{D32}$, $R^{D33}$, $R^{D34}$ und der Reste $R^{D40}$, $R^{D41}$, $R^{D42}$, $R^{D43}$ jeweils auch durch einen zweiwertigen Alkylenrest verbrückt sein können, der mindestens einen Ether aufweisen kann.

DD.4 In einem Aspekt des vorgenannten Punktes DD.3 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Dialkoxybenzolfunktion **(D)** sind, dass die Reste $R^1$, $R^{1'}$, $R^{2'}$, $R^{3'}$ bzw. $R^1$, $R^{1'}$ bzw. $R^1$ unabhängig voneinander die unter Punkt DD.3 definierte Struktur **(D3)** aufweisen und $R^2$, $R^4$, $R^5$, unabhängig voneinander jeweils die unter Punkt DD.3 definierte Struktur **(D4)** aufweisen,

wobei, ($xiii^{D2}$), ($xiv^{D2}$) und ($xv^{D2}$) die unter Punkt DD.3 genannte Bedeutung haben,

und wobei $R^{D30}$, $R^{D31}$, $R^{D33}$, $R^{D34}$, $R^{D40}$, $R^{D41}$, $R^{D42}$, $R^{D43}$ unabhängig voneinander jeweils aus der Gruppe bestehend aus Wasserstoff, Alkylgruppe, Cycloalkylgruppe, Hydroxy ausgewählt sind,

und $R^{D32}$ aus der Gruppe bestehend aus Wasserstoff, Alkylgruppe, Cycloalkylgruppe ausgewählt sind,

und in einem Aspekt $R^{D30}$, $R^{D31}$, $R^{D32}$, $R^{D33}$, $R^{D34}$, $R^{D40}$, $R^{D41}$, $R^{D42}$, $R^{D43}$ unabhängig voneinander jeweils aus der Gruppe bestehend aus Wasserstoff, Alkylgruppe, Cycloalkylgruppe ausgewählt sind.

DD.5 In einem Aspekt des vorgenannten Punktes DD.4 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Dialkoxybenzolfunktion **(D)** sind, dass die Reste $R^1$, $R^{1'}$, $R^{2'}$, $R^{3'}$ bzw. $R^1$, $R^{1'}$ bzw. $R^1$ unabhängig voneinander die nachfolgend genannte Struktur **(D5)** aufweisen und die Reste $R^2$, $R^4$, $R^5$, unabhängig voneinander jeweils die nachfolgend genannte Struktur **(D6)** aufweisen,

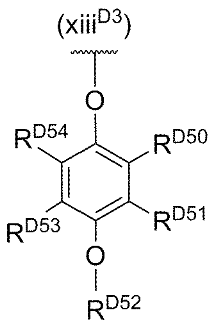

**(D5)**

;

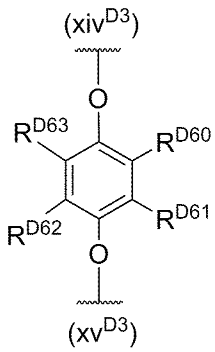

**(D6)**

;

wobei, im Falle dass $R^1$ = **(D5),** die durch ($xiii^{D3}$) gekennzeichnete Bindung die Bindung zu $L^1$ darstellt,

im Falle dass $R^{1'}$ = **(D5),** die durch ($xiii^{D3}$) gekennzeichnete Bindung die Bindung zu $L^{1'}$ darstellt,

im Falle dass $R^{2'}$ = **(D5),** die durch ($xiii^{D3}$) gekennzeichnete Bindung die Bindung zu $L^{2'}$ darstellt,

im Falle dass $R^{3'}$ = **(D5),** die durch ($xiii^{D3}$) gekennzeichnete Bindung die Bindung zu $L^{3'}$ darstellt,

im Falle dass $R^2$ = **(D6),** die durch ($xiv^{D3}$) gekennzeichnete Bindung die Bindung zu $L^2$ darstellt, und die durch ($xv^{D3}$) gekennzeichnete Bindung die Bindung zu $L^3$ darstellt,

im Falle dass $R^4$ = **(D6),** die durch ($xiv^{D3}$) gekennzeichnete Bindung die Bindung zu $L^4$ darstellt, und die durch ($xv^{D3}$) gekennzeichnete Bindung die Bindung zu $L^5$ darstellt,

im Falle dass $R^5$ = **(D6),** die durch ($xiv^{D3}$) gekennzeichnete Bindung die Bindung zu $L^6$ darstellt, und die durch ($xv^{D3}$)

gekennzeichnete Bindung die Bindung zu $L^7$ darstellt,
und wobei $R^{D50}$, $R^{D51}$, $R^{D52}$, $R^{D53}$, $R^{D54}$, $R^{D60}$, $R^{D61}$, $R^{D62}$ $R^{D63}$ unabhängig voneinander jeweils aus der Gruppe bestehend aus Wasserstoff, Alkylgruppe mit 1 bis 6 Kohlenstoffatome, Cycloalkylgruppe mit 3 bis 10 Kohlenstoffatomen ausgewählt sind.

DD.6 In einem Aspekt des vorgenannten Punktes DD.5 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Dialkoxybenzolfunktion **(D)** sind, dass die Reste $R^1$, $R^{1'}$, $R^{2'}$, $R^{3'}$ bzw. $R^1$, $R^{1'}$ bzw. $R^1$ unabhängig voneinander die unter Punkt DD.5 genannte Struktur **(D5)** aufweisen und $R^2$, $R^4$, $R^5$, unabhängig voneinander jeweils die unter Punkt DD.5 genannte Struktur **(D6)** aufweisen,

wobei (xiii$^{D3}$), (xiv$^{D3}$) und (xv$^{D3}$) die unter Punkt D.5 definierte Bedeutung haben,

und wobei $R^{D50}$, $R^{D53}$, $R^{D60}$, $R^{D62}$ unabhängig voneinander jeweils aus der Gruppe bestehend aus Wasserstoff, Alkylgruppe mit 1 bis 6 Kohlenstoffatome, Cycloalkylgruppe mit 3 bis 10 Kohlenstoffatomen, ausgewählt sind, in einem Aspekt $R^{D50}$, $R^{D53}$, $R^{D60}$, $R^{D62}$ alle Wasserstoff sind,

und wobei $R^{D51}$, $R^{D54}$, $R^{D61}$, $R^{D63}$ unabhängig voneinander jeweils aus der Gruppe bestehend aus Wasserstoff, Alkylgruppe mit 1 bis 6 Kohlenstoffatome, Cycloalkylgruppe mit 3 bis 10 Kohlenstoffatomen, in einem Aspekt aus der Gruppe bestehend aus Alkylgruppe mit 1 bis 6 Kohlenstoffatome, Cycloalkylgruppe mit 3 bis 10 Kohlenstoffatomen, in einem weiteren Aspekt aus der Gruppe bestehend aus Alkylgruppe mit 1 bis 10 Kohlenstoffatomen, Cycloalkylgruppe mit 3 bis 10 Kohlenstoffatomen ausgewählt sind, und in einem weiteren Aspekt $R^{D51}$, $R^{D54}$, $R^{D61}$, $R^{D63}$ unabhängig voneinander jeweils eine Alkylgruppe mit 3 bis 10 Kohlenstoffatomen sind, in einem weiteren Aspekt alle *tert*-Butyl sind,

und wobei $R^{D52}$ ausgewählt ist aus der Gruppe bestehend aus Wasserstoff, Alkylgruppe mit 1 bis 10 Kohlenstoffatomen ist, in einem Aspekt Methyl ist.

DD.7 In einem weiteren Aspekt der Erfindung, wie er unter II.1.$\beta$) oder dem Punkt DD.6 definiert ist, umfasst das im erfindungsgemäßen Verfahren zur Herstellung einer Elektrode gemäß dem zweiten Aspekt der vorliegenden Erfindung eingesetzte, in der Hauptkette nichtkonjugierte, organisches Redox-Polymer **P** insbesondere $n^1$ miteinander verknüpfte Wiederholungseinheiten der chemischen Struktur **(I)** mit

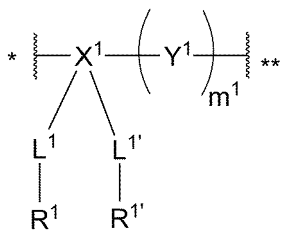 ;

**(I)**

wobei $n^1$ eine ganze Zahl $\geq 4$, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 ist,

wobei die Wiederholungseinheiten der chemischen Struktur **(I)** innerhalb des Polymers P gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei X' eine nichtkonjugierte organische Gruppe, welche durch Polymerisationsreaktion aus einer Gruppe gebildet wird, die aus einer organischen Doppelbindung, einer organischen Dreifachbindung, einem Oxiran oder einem Aziridin besteht, ist, oder eine nichtkonjugierte organische Gruppe ist, welche durch eine polymeranaloge Reaktion gebildet wird,

wobei $Y^1$ eine nichtkonjugierte organische Spacereinheit ist,

wobei $L^1$, $L^{1'}$ unabhängig voneinander jeweils aus der Gruppe bestehend aus direkte Bindung, organische Linkereinheit ausgewählt sind, und in einem Aspekt $L^1$ aus der Gruppe bestehend aus direkte Bindung, organische Linkereinheit ausgewählt ist und $L^{1'}$ eine direkte Bindung ist,

wobei $R^1$, $R^{1'}$ unabhängig voneinander jeweils eine redoxaktive Dialkoxybenzolfunktion **(D)** sind, und $R^{1'}$ auch ein Wasserstoffrest sein kann, und in einem Aspekt $R^1$ eine redoxaktive Dialkoxybenzolfunktion **(D)** ist und $R^{1'}$ ein Wasserstoffrest ist,

und wobei die redoxaktive Dialkoxybenzolfunktion **(D)** in einem weiteren Aspekt die unter Punkt DD.5 definierte Struktur **(D5)** aufweist,

in welcher $R^{D50}$ , $R^{D63}$ unabhängig voneinander jeweils aus der Gruppe bestehend aus Wasserstoff, Alkylgruppe mit 1 bis 6 Kohlenstoffatome, Cycloalkylgruppe mit 3 bis 10 Kohlenstoffatomen, ausgewählt sind, in einem Aspekt $R^{D50}$, $R^{D63}$ beide Wasserstoff sind,

und in welcher $R^{D51}$, $R^{D54}$ unabhängig voneinander jeweils aus der Gruppe bestehend aus Wasserstoff, Alkylgruppe mit 1 bis 6 Kohlenstoffatome, Cycloalkylgruppe mit 3 bis 10 Kohlenstoffatomen, in einem Aspekt aus der Gruppe bestehend aus Alkylgruppe mit 1 bis 6 Kohlenstoffatome, Cycloalkylgruppe mit 3 bis 10 Kohlenstoffatomen, in einem weiteren Aspekt aus der Gruppe bestehend aus Alkylgruppe mit 1 bis 10 Kohlenstoffatomen, Cycloalkylgruppe mit 3 bis 10 Kohlenstoffatomen ausgewählt sind, in einem weiteren Aspekt $R^{D51}$, $R^{D54}$ unabhängig voneinander jeweils eine Alkylgruppe mit 3 bis 10 Kohlenstoffatomen sind, in einem weiteren Aspekt $R^{D51}$, $R^{D54}$ beide tert-Butyl sind,

und wobei $R^{D52}$ aus der Gruppe bestehend aus Wasserstoff, Alkylgruppe mit 1 bis 10 Kohlenstoffatomen ausgewählt ist, in einem Aspekt Methyl ist,

und wobei die durch ($xiii^{D3}$) gekennzeichnete Bindung für $R^1$ die Bindung zu $L^1$, für $R^{1'}$ die Bindung zu $L^{1'}$ bezeichnet.

### 11.1.1.5 Redoxaktive Benzochinonfunktion **(E)**

Im Sinne der Erfindung bedeutet "redoxaktive Benzochinonfunktion" ein redoxaktiver organischer Rest, der ein von Benzochinon abgeleitetes Grundgerüst umfasst.

EE.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Benzochinonfunktion **(E)** sind, bedeutet dies erfindungsgemäß , dass die Reste $R^1$, $R^{1'}$, $R^{2'}$, $R^{3'}$ bzw. $R^1$, $R^{1'}$ bzw. $R^1$ unabhängig voneinander jeweils aus der Gruppe bestehend aus den folgenden Strukturen **(E1), (E2), (E3)** mit

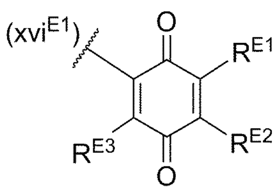 ; 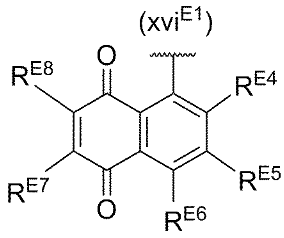 ; 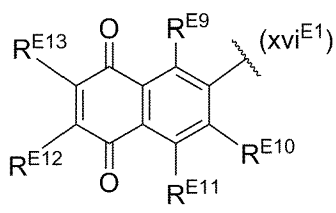 ;

**(E1)** **(E2)** **(E3)**

ausgewählt sind,
und die Reste $R^2$, $R^4$, $R^5$ unabhängig voneinander jeweils aus der Gruppe bestehend aus den folgenden Strukturen **(E4), (E5), (E6), (E7), (E8), (E9)** mit

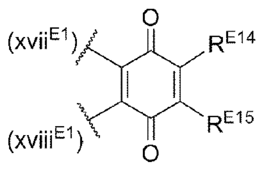 ; 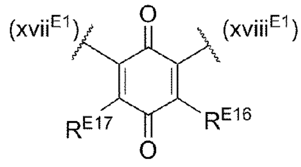 ; 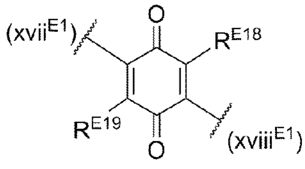 ;

(E4) (E5) (E6)

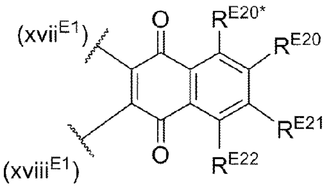 ; 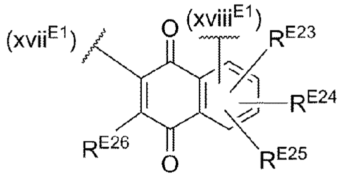 ; 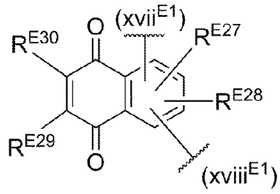 ;

(E7) (E8) (E9)

ausgewählt sind,
wobei,
im Falle dass $R^1$ = **(E1), (E2)** oder **(E3),** die durch (xvi$^{E1}$) gekennzeichnete Bindung die Bindung zu $L^1$ darstellt,
im Falle dass $R^{1'}$ = **(E1), (E2)** oder **(E3),** die durch (xvi$^{E1}$) gekennzeichnete Bindung die Bindung zu $L^{1'}$ darstellt,
im Falle dass $R^{2'}$ = **(E1), (E2)** oder **(E3),** die durch (xvi$^{E1}$) gekennzeichnete Bindung die Bindung zu $L^{2'}$ darstellt,
im Falle dass $R^{3'}$ = **(E1), (E2)** oder **(E3),** die durch (xvi$^{E1}$) gekennzeichnete Bindung die Bindung zu $L^{3'}$ darstellt,
im Falle dass $R^2$ = **(E4), (E5), (E6), (E7), (E8)** oder **(E9),** die durch (xvii$^{E1}$) gekennzeichnete Bindung die Bindung zu $L^2$ darstellt und die durch (xviii$^{E1}$) gekennzeichnete Bindung die Bindung zu $L^3$ darstellt,
im Falle dass $R^4$ = **(E4), (E5), (E6), (E7), (E8)** oder **(E9),** die durch (xvii$^{E1}$) gekennzeichnete Bindung die Bindung zu $L^4$ darstellt und die durch (xviii$^{E1}$) gekennzeichnete Bindung die Bindung zu $L^5$ darstellt,
im Falle dass $R^5$ = **(E4), (E5), (E6), (E7), (E8)** oder **(E9),** die durch (xvii$^{E1}$) gekennzeichnete Bindung die Bindung zu $L^6$ darstellt und die durch (xviii$^{E1}$) gekennzeichnete Bindung die Bindung zu $L^7$ darstellt,
und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10}$, $R^{E11}$, $R^{E12}$, $R^{E13}$, $R^{E14}$, $R^{E15}$, $R^{E16}$, $R^{E17}$, $R^{E18}$, $R^{E19}$, $R^{E20}$, $R^{E20*}$, $R^{E21}$, $R^{E22}$, $R^{E23}$, $R^{E24}$, $R^{E25}$, $R^{E26}$, $R^{E27}$, $R^{E28}$, $R^{E29}$, $R^{E30}$ unabhängig voneinander jeweils aus der Gruppe bestehend aus Wasserstoff, -OH, -SH, Nitrogruppe, -CN, -F, -Cl, -Br, -I, -C(=O)NHR$^{E31}$, -NR$^{E32}$R$^{E33}$, -COOR$^{E34}$, -COR$^{E35}$, Sulfonsäureester, Phosphorsäureester, (hetero)aromatischer Rest, Alkylgruppe, Alkenylgruppe, Alkinylgruppe, in einem Aspekt aus der Gruppe bestehend aus Wasserstoff, Alkylgruppe, -OH, -NR$^{E32}$R$^{E33}$, -COOR$^{E34}$, -COR$^{E35}$, Sulfonsäureester, in einem weiteren Aspekt aus der Gruppe bestehend aus Wasserstoff, -OH, -COOR$^{E34}$, -COR$^{E35}$, Sulfonsäureester ausgewählt sind,
wobei der (hetero)aromatische Rest, die Alkylgruppe, die Alkenylgruppe, die Alkinylgruppe jeweils mit mindestens einer Gruppe ausgewählt aus Nitrogruppe, $-NH_2$, -CN, -SH, -OH, Halogen substituiert sein können und wobei die Alkylgruppe, die Alkenylgruppe, die Alkinylgruppe mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisen können,
und wobei $R^{E31}$, $R^{E32}$, $R^{E33}$, $R^{E34}$, $R^{E35}$ unabhängig voneinander jeweils aus der Gruppe bestehend aus Wasserstoff, (hetero)aromatischer Rest, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, in einem Aspekt aus der Gruppe bestehend aus Wasserstoff, Alkylgruppe ausgewählt sind,
und wobei zwei in ortho-Stellung zueinander stehende Reste der Reste $R^{E1}$, $R^{E2}$, $R^{E4}$, $R^{E5}$, $R^{E6}$, $R^{E7}$, $R^{E8}$, $R^{E10}$, $R^{E11}$, $R^{E12}$, $R^{E13}$, $R^{E14}$, $R^{E15}$, $R^{E20}$, $R^{E20*}$, $R^{E21}$, $R^{E22}$, $R^{E23}$, $R^{E24}$, $R^{E25}$, $R^{E27}$, $R^{E28}$, $R^{E29}$, $R^{E30}$ mit einem gegebenenfalls mit mindestens einer Gruppe ausgewählt aus Nitrogruppe, $-NH_2$, -CN, -SH, -OH, Halogen, Alkylgruppe substituierten und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisenden zweiwertigen aliphatischen Rest, in einem Aspekt Alkylenrest, verbrückt sein können.

EE.2 In einem Aspekt des vorgenannten Punktes EE.1 bedeutet in den Fällen, in denen die Reste $R^1$, $R^2$, $R^4$,

$R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Benzochinonfunktion **(E)** sind, dass die Reste $R^1$, $R^{1'}$, $R^{2'}$, $R^{3'}$ bzw. $R^1$, $R^{1'}$ bzw. $R^1$ unabhängig voneinander jeweils aus den unter Punkt EE.1 definierten Strukturen **(E1), (E2), (E3)** ausgewählt sind und die Reste $R^2$, $R^4$, $R^5$ unabhängig voneinander jeweils aus den unter Punkt EE.1 definierten Strukturen **(E4), (E5), (E6), (E7), (E8), (E9)** ausgewählt sind,

wobei (xvi$^{E1}$), (xvii$^{E1}$), (xviii$^{E1}$) die unter Punkt EE.1 definierte Bedeutung haben,

und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10,}$ $R^{E11}$, $R^{E12}$, $R^{E13}$, $R^{E14}$, $R^{E15}$, $R^{E16}$, $R^{E17}$, $R^{E18}$ $R^{E19}$ $R^{E20}$ $R^{E20*}$, $R^{E21}$, $R^{E22}$ $R^{E23}$ $R^{E24}$ $R^{E25}$ $R^{E26}$ $R^{E27}$ $R^{E28}$, $R^{E29}$ $R^{E30}$ aus der Gruppe bestehend aus Wasserstoff, Alkylgruppe, -OH, -SH, -$NR^{E36}R^{E37}$, -$COOR^{E38}$, -$COR^{E39}$, Sulfonsäureester, in einem weiteren Aspekt aus der Gruppe bestehend aus Wasserstoff, -OH, - $COOR^{E38}$, -$COR^{E39}$, Sulfonsäureester ausgewählt sind und in einem weiteren Aspekt alle Wasserstoff sind,

wobei die Alkylgruppe mit mindestens einer Gruppe ausgewählt aus Nitrogruppe, -$NH_2$, -CN, -SH, - OH, Halogen substituiert sein kann und mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisen kann,

und wobei die Reste $R^{E36}$, $R^{E37}$, $R^{E38}$, $R^{E39}$ unabhängig voneinander jeweils aus der Gruppe bestehend aus Wasserstoff, gegebenenfalls mit mindestens einer Gruppe ausgewählt aus Nitrogruppe, -$NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, in einem Aspekt aus der Gruppe bestehend aus Wasserstoff, Alkylgruppe, bei der es sich in einem Aspekt um eine Alkylgruppe mit 1 bis 6 Kohlenstoffatomen, in einem weiteren Aspekt um eine Alkylgruppe ausgewählt aus der Gruppe bestehend aus Methyl, Ethyl, *n*-Propyl, *iso*-Propyl handelt, ausgewählt sind.

EE.3 In einem Aspekt des vorgenannten Punktes EE.2 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Benzochinonfunktion **(E)** sind, dass die Reste $R^1$, $R^{1'}$, $R^{2'}$, $R^{3'}$ bzw. $R^1$, $R^{1'}$ bzw. $R^1$ unabhängig voneinander jeweils aus den unter Punkt EE.1 definierten Strukturen **(E1), (E2), (E3)** ausgewählt sind und die Reste $R^2$, $R^4$, $R^5$ unabhängig voneinander jeweils aus den unter Punkt EE.1 definierten Strukturen **(E4), (E5), (E6), (E7), (E8), (E9)** ausgewählt sind,

wobei (xvi$^{E1}$), (xvii$^{E1}$), (xviii$^{E1}$) die unter Punkt EE.1 definierte Bedeutung haben,

und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10,}$ $R^{E11}$, $R^{E12}$, $R^{E13}$, $R^{E14}$, $R^{E15}$, $R^{E16}$, $R^{E17}$ , $R^{E18}$ $R^{E19}$, $R^{E20}$ $R^{E20*}$, $R^{E21}$, $R^{E22}$, $R^{E23}$, $R^{E24}$, $R^{E25}$, $R^{E26}$, $R^{E27}$, $R^{E28}$, $R^{E29}$ $R^{E30}$ aus der Gruppe bestehend aus Wasserstoff, -OH, -$COOR^{E40}$, -$COR^{E41}$, Sulfonsäureester ausgewählt sind und in einem weiteren Aspekt alle Wasserstoff sind,

und wobei die Reste $R^{E40}$, $R^{E41}$ unabhängig voneinander jeweils aus der Gruppe bestehend aus Wasserstoff, Alkylgruppe, bei der es sich in einem Aspekt um eine Alkylgruppe mit 1 bis 6 Kohlenstoffatomen, in einem weiteren Aspekt um eine Alkylgruppe ausgewählt aus der Gruppe bestehend aus Methyl, Ethyl, *n*-Propyl, *iso*-Propyl handelt, ausgewählt sind.

EE.4 In einem Aspekt des vorgenannten Punktes EE.3 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Benzochinonfunktion **(E)** sind, dass die Reste $R^1$, $R^{1'}$, $R^{2'}$, $R^{3'}$ bzw. $R^1$, $R^{1'}$ bzw. $R^1$ unabhängig voneinander jeweils aus den unter Punkt EE.1 definierten Strukturen **(E1), (E2), (E3)** ausgewählt sind und die Reste $R^2$, $R^4$, $R^5$ unabhängig voneinander jeweils aus den unter Punkt EE.1 definierten Strukturen **(E4), (E5), (E6), (E8), (E9)** ausgewählt sind,

wobei (xvi$^{E1}$), (xvii$^{E1}$), (xviii$^{E1}$) die unter Punkt EE.1 definierte Bedeutung haben,

und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10,}$ $R^{E11}$, $R^{E12}$, $R^{E13}$, $R^{E14}$, $R^{E15}$, $R^{E16}$, $R^{E17}$,

$R^{E18}$, $R^{E19}$, $R^{E23}$, $R^{E24}$, $R^{E25}$, $R^{E26}$, $R^{E27}$, $R^{E28}$, $R^{E29}$, $R^{E30}$ aus der Gruppe bestehend aus Wasserstoff, -OH, -COOR$^{E50}$, -COR$^{E51}$, Sulfonsäureester ausgewählt sind und in einem weiteren Aspekt alle Wasserstoff sind,

und wobei die Reste $R^{E50}$, $R^{E51}$ unabhängig voneinander jeweils aus der Gruppe bestehend aus Wasserstoff, Alkylgruppe, bei der es sich in einem Aspekt um eine Alkylgruppe mit 1 bis 6 Kohlenstoffatomen, in einem weiteren Aspekt um eine Alkylgruppe ausgewählt aus der Gruppe bestehend aus Methyl, Ethyl, n-Propyl, iso-Propyl handelt, ausgewählt sind.

EE.5 In einem Aspekt des vorgenannten Punktes EE.4 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Benzochinonfunktion **(E)** sind, dass die Reste $R^1$, $R^{1'}$, $R^{2'}$, $R^{3'}$ bzw. $R^1$, $R^{1'}$ bzw. $R^1$ unabhängig voneinander jeweils aus den unter Punkt EE.1 definierten Strukturen **(E1), (E2), (E3)** ausgewählt sind und die Reste $R^2$, $R^4$, $R^5$ unabhängig voneinander jeweils aus den unter Punkt EE.1 definierten Strukturen **(E6), (E9)** ausgewählt sind,

wobei (xvi$^{E1}$), (xvii$^{E1}$), (xviii$^{E1}$) die unter Punkt EE.1 definierte Bedeutung haben,

und wobei in **(E9)** die beiden durch (xvii$^{E1}$) und (xviii$^{E1}$) gekennzeichneten Bindungen in einem Aspekt in *para*-Stellung zueinander stehen,

und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10}$, $R^{E11}$, $R^{E12}$, $R^{E13}$, $R^{E18}$, $R^{E19}$, $R^{E27}$, $R^{E28}$, $R^{E29}$, $R^{E30}$ aus der Gruppe bestehend aus Wasserstoff, -OH, -COOR$^{E60}$, -COR$^{E61}$, Sulfonsäureester ausgewählt sind und in einem weiteren Aspekt alle Wasserstoff sind,

und wobei die Reste $R^{E60}$, $R^{E61}$ unabhängig voneinander jeweils aus der Gruppe bestehend aus Wasserstoff, Alkylgruppe, bei der es sich in einem Aspekt um eine Alkylgruppe mit 1 bis 6 Kohlenstoffatomen, in einem weiteren Aspekt um eine Alkylgruppe ausgewählt aus der Gruppe bestehend aus Methyl, Ethyl, *n*-Propyl, *iso*-Propyl handelt, ausgewählt sind.

EE.6 In einer besonders bevorzugten Ausführungsform des zweiten Aspekts der Erfindung, wie er unter II.1.$\beta$) definiert ist, umfasst das im erfindungsgemäßen Verfahren zur Herstellung einer Elektrode gemäß dem zweiten Aspekt der vorliegenden Erfindung eingesetzte, in der Hauptkette nichtkonjugierte, organisches Redox-Polymer **P** insbesondere $n^1$ miteinander verknüpfte Wiederholungseinheiten der chemischen Struktur **(I)** mit

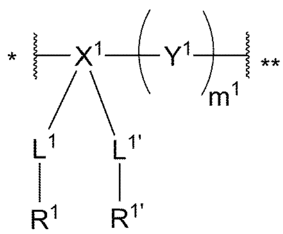 ;

**(I)**

wobei $n^1$ eine ganze Zahl $\geq 4$, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $X^1$ eine nichtkonjugierte organische Gruppe, welche durch Polymerisationsreaktion aus einer Gruppe gebildet wird, die aus einer organischen Doppelbindung, einer organischen Dreifachbindung, einem Oxiran oder einem Aziridin besteht, ist, oder eine nichtkonjugierte organische Gruppe ist, welche durch eine polymeranaloge Reaktion gebildet wird,

wobei $Y^1$ eine nichtkonjugierte organische Spacereinheit ist,

wobei $L^1$, $L^{1'}$ unabhängig voneinander jeweils aus der Gruppe bestehend aus direkte Bindung, organische Linkereinheit ausgewählt sind, und in einem Aspekt $L^1$ aus der Gruppe bestehend aus direkte Bindung, organische Linkereinheit ausgewählt ist und $L^{1'}$ eine direkte Bindung ist,

wobei $R^1$, $R^{1'}$ unabhängig voneinander jeweils eine redoxaktive Benzochinonfunktion (E), sind, und $R^{1'}$ auch ein Wasserstoffrest sein kann, und in einem Aspekt $R^1$ eine redoxaktive Benzochinonfunktion **(E)** ist und $R^{1'}$ ein Wasserstoffrest ist,

und wobei die redoxaktive Benzochinonfunktion **(E)** in einem weiteren Aspekt eine der unter Punkt EE.1 gezeigten Strukturen **(E1), (E2), (E3)** aufweist,

wobei im Falle dass $R^1$ = **(E1), (E2)** oder **(E3),** die durch ($xvi^{E1}$) gekennzeichnete Bindung die Bindung zu $L^1$ darstellt,

und im Falle dass $R^{1'}$ = **(E1), (E2)** oder **(E3),** die durch ($xvi^{E1}$) gekennzeichnete Bindung die Bindung zu $L^{1'}$ darstellt,

und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10}$, $R^{E11}$, $R^{E12}$, $R^{E13}$ unabhängig voneinander jeweils aus der Gruppe bestehend aus Wasserstoff, -OH, $-COOR^{E70}$, $-COR^{E71}$, Sulfonsäureester ausgewählt sind und in einem weiteren Aspekt alle Wasserstoff sind,

und wobei die Reste $R^{E70}$, $R^{E71}$ unabhängig voneinander jeweils aus der Gruppe bestehend aus Wasserstoff, Alkylgruppe, bei der es sich in einem Aspekt um eine Alkylgruppe mit 1 bis 6 Kohlenstoffatomen, in einem weiteren Aspekt um eine Alkylgruppe ausgewählt aus der Gruppe bestehend aus Methyl, Ethyl, *n*-Propyl, *iso*-Propyl handelt, ausgewählt sind.

11.1.1.6 Redoxaktive Triphenylaminfunktion **(G)**

Im Sinne der Erfindung bedeutet "redoxaktive Triphenylaminfunktion", ein redoxaktiver organischer Rest, der ein von Triphenylamin abgeleitetes Grundgerüst umfasst.

GG.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive Triphenylaminfunktion **(G)** sind, bedeutet dies erfindungsgemäß , dass die Reste $R^1$, $R^{1'}$, $R^{2'}$, $R^{3'}$ bzw. $R^1$, $R^{1'}$ bzw. $R^1$ unabhängig voneinander jeweils die folgende Struktur **(G1)** aufweisen und die Reste $R^2$, $R^4$, $R^5$, unabhängig voneinander jeweils aus der Gruppe bestehend aus den folgenden Strukturen **(G2), (G3)** mit

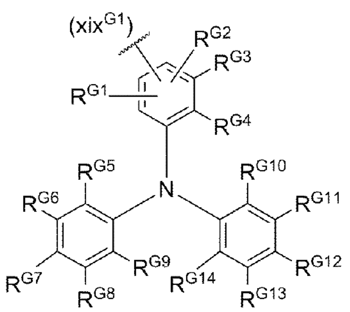
;
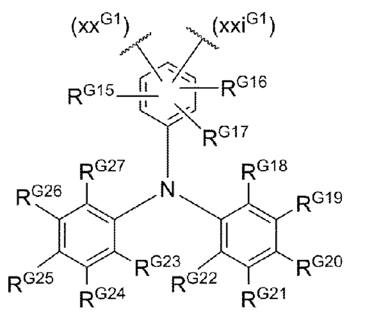
;
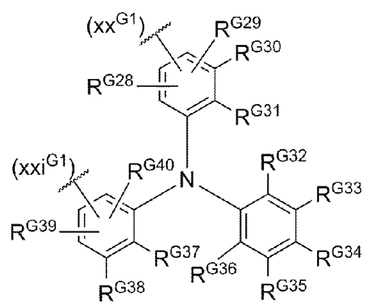
;

**(G1)** **(G2)** **(G3)**

ausgewählt sind,
wobei,
im Falle dass $R^1$ = **(G1),** die durch ($xix^{G1}$) gekennzeichnete Bindung die Bindung zu $L^1$ darstellt,

im Falle dass $R^{1'}$ = **(G1),** die durch ($xix^{G1}$) gekennzeichnete Bindung die Bindung zu $L^{1'}$ darstellt,
im Falle dass $R^{2'}$ = **(G1),** die durch ($xix^{G1}$) gekennzeichnete Bindung die Bindung zu $L^{2'}$ darstellt,
im Falle dass $R^{3'}$ = **(G1),** die durch ($xix^{G1}$) gekennzeichnete Bindung die Bindung zu $L^{3'}$ darstellt,
im Falle dass $R^2$ = **(G2)** oder **(G3),** die durch ($xx^{G1}$) gekennzeichnete Bindung die Bindung zu $L^2$ darstellt und die durch ($xxi^{G1}$) gekennzeichnete Bindung die Bindung zu $L^3$ darstellt,
im Falle dass $R^4$ = **(G2)** oder **(G3),** die durch ($xx^{G1}$) gekennzeichnete Bindung die Bindung zu $L^4$ darstellt und die durch ($xxi^{G1}$) gekennzeichnete Bindung die Bindung zu $L^5$ darstellt,
im Falle dass $R^5$ = **(G2)** oder **(G3),** die durch ($xx^{G1}$) gekennzeichnete Bindung die Bindung zu $L^6$ darstellt und die durch ($xxi^{G1}$) gekennzeichnete Bindung die Bindung zu $L^7$ darstellt,
wobei die Reste $R^{G1}$, $R^{G2}$, $R^{G3}$, $R^{G4}$, $R^{G5}$, $R^{G6}$, $R^{G7}$ $R^{G8}$, $R^{G9}$, $R^{G10}$ $R^{G11}$ $R^{G12}$, $R^{G13}$ $R^{G14}$ $R^{G15}$ $R^{G16}$, $R^{G17}$, $R^{G18}$, $R^{G19}$, $R^{G20}$, $R^{G21}$, $R^{G22}$, $R^{G23}$, $R^{G24}$, $R^{G25}$, $R^{G26}$, $R^{G27}$, $R^{G28}$, $R^{G29}$, $R^{G30}$, $R^{G31}$, $R^{G32}$, $R^{G33}$, $R^{G34}$, $R^{G35}$, $R^{G36}$, $R^{G37}$, $R^{G38}$, $R^{G39}$, $R^{G40}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, (hetero)aromatischer Rest, wobei der (hetero)aromatische Rest mit mindestens einer Gruppe ausgewählt aus Halogen (Halo)Alkyl, (Halo)alkoxy, Cyano, Carbonsäureester, substituiert sein kann,
in einem Aspekt aus der Gruppe bestehend aus Wasserstoff, (Halo)Alkylgruppe, (Halo)Alkoxygruppe, (Halo)cycloalkylgruppe, Cyano, Carbonsäureester, Thiophen ausgewählt sind, in einem Aspekt aus der Gruppe bestehend aus Wasserstoff, Cyano, Alkylgruppe, Alkoxygruppe,
in einem weiteren Aspekt aus der Gruppe bestehend aus Wasserstoff, Alkoxygruppe, Cyano ausgewählt sind,
wobei in einem weiteren Aspekt die Reste $R^1$, $R^{1'}$, $R^{2'}$, $R^{3'}$ bzw. $R^1$, $R^{1'}$ bzw. $R^1$ unabhängig voneinander jeweils die Struktur **(G1)** aufweisen und die Reste $R^2$, $R^4$, $R^5$, unabhängig voneinander jeweils die Struktur **(G2)** aufweisen, wobei die Reste $R^{G7}$, $R^{G12}$, $R^{G20}$, $R^{G25}$ unabhängig voneinander jeweils aus der Gruppe bestehend aus Wasserstoff, Alkoxy, Cyano, Alkylgruppe ausgewählt sind und die Reste $R^{G1}$, $R^{G2}$, $R^{G3}$, $R^{G4}$, $R^{G5}$ $R^{G6}$, $R^{G8}$, $R^{G9}$, $R^{G10}$ $R^{G11}$, $R^{G13}$ $R^{G14}$ $R^{G15}$, $R^{G16}$, $R^{G17}$ $R^{G18}$, $R^{G19,}$ $R^{G21}$, $R^{G22}$, $R^{G23}$, $R^{G24}$, $R^{G26}$, $R^{G27}$ jeweils Wasserstoff sind.

GG.2 In einem weiteren Aspekt des zweiten Aspekts der Erfindung, wie er unter II.1.β) definiert ist, umfasst das im erfindungsgemäßen Verfahren zur Herstellung einer Elektrode gemäß dem zweiten Aspekt der vorliegenden Erfindung eingesetzte, in der Hauptkette nichtkonjugierte, organisches Redox-Polymer **P** insbesondere $n^1$ miteinander verknüpfte Wiederholungseinheiten der chemischen Struktur **(I)** mit

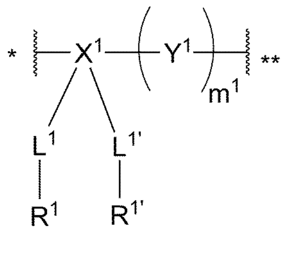

;

**(I)**

wobei $n^1$ eine ganze Zahl $\geq 4$, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $R^1$, $R^{1'}$ unabhängig voneinander jeweils eine redoxaktive Triphenylaminfunktion **(G)** sind, und $R^{1'}$ auch ein

Wasserstoffrest sein kann, und in einem Aspekt $R^1$ eine redoxaktive Triphenylaminfunktion **(G)** ist und $R^{1'}$ ein Wasserstoffrest ist,

und wobei die redoxaktive Triphenylaminfunktion **(G)** in einem weiteren Aspekt die unter Punkt GG.1 definiert Struktur **(G1)** aufweist,

in welcher die Reste $R^{G1}$, $R^{G2}$, $R^{G3}$, $R^{G4}$, $R^{G5}$, $R^{G6}$, $R^{G7}$ $R^{G8}$, $R^{G9}$, $R^{G10}$ $R^{G11}$ $R^{G12}$, $R^{G13}$, $R^{G14}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, (hetero)aromatischer Rest, wobei der (hetero)aromatische Rest mit mindestens einer Gruppe ausgewählt aus Halogen (Halo)Alkyl, (Halo)alkoxy, Cyano, Carbonsäureester, substituiert sein kann,

in einem Aspekt aus der Gruppe bestehend aus Wasserstoff, (Halo)Alkylgruppe, (Halo)Alkoxygruppe, (Halo)cycloalkylgruppe, Cyano, Carbonsäureester, Thiophen,

in einem weiteren Aspekt aus der Gruppe bestehend aus Wasserstoff, Alkylgruppe, Cyano, Alkoxygruppe ausgewählt sind,

und besonders in einem Aspekt die Reste $R^{G7}$, $R^{G12}$ unabhängig voneinander jeweils aus der Gruppe bestehend aus Alkoxy, Cyano, Wasserstoff, Alkylgruppe ausgewählt sind und die Reste $R^{G1}$, $R^{G2}$, $R^{G3}$, $R^{G4}$, $R^{G5}$ $R^{G6}$, $R^{G8}$, $R^{G9}$, $R^{G10}$ $R^{G11}$, $R^{G13}$, $R^{G14}$ jeweils Wasserstoff sind,

und wobei im Falle dass $R^1$ = **(G1),** die durch ($xix^{G1}$) gekennzeichnete Bindung die Bindung zu $L^1$ darstellt,

im Falle dass $R^{1'}$ = **(G1),** die durch ($xix^{G1}$) gekennzeichnete Bindung die Bindung zu $L^{1'}$ darstellt. GG.3 In einem Aspekt des vorgenannten Punktes GG.2 ist die redoxaktive Triphenylaminfunktion **(G)** aus den Strukturen **(G4), (G5), (G6)** mit

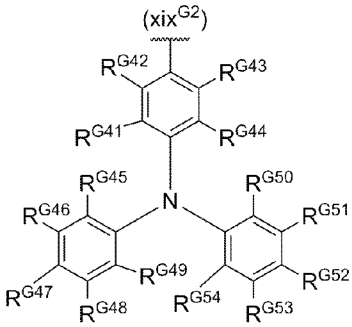
;
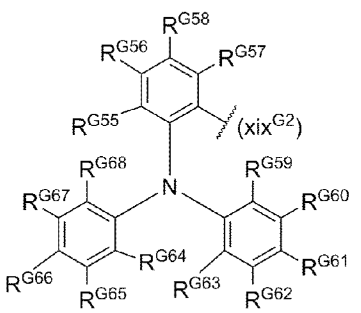
;
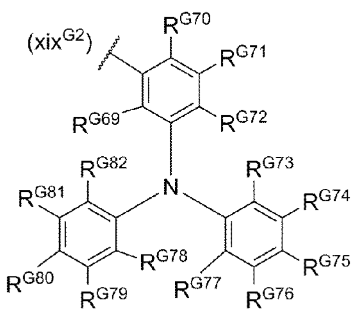
;

**(G4)** **(G5)** **(G6)**

ausgewählt,

**wobei** $R^{G41}$, $R^{G42}$, $R^{G43}$, $R^{G44}$, $R^{G45}$, $R^{G46}$, $R^{G47}$, $R^{G48}$, $R^{G49}$, $R^{G50}$, $R^{G51}$, $R^{G52}$, $R^{G53}$, $R^{G54}$, $R^{G55}$, $R^{G56}$, $R^{G57}$, $R^{G58}$, $R^{G59}$, $R^{G60}$, $R^{G61}$, $R^{G62}$, $R^{G63}$, $R^{G64}$, $R^{G65}$, $R^{G66}$, $R^{G67}$, $R^{G68}$, $R^{G69}$, $R^{G70}$, $R^{G71}$, $R^{G72}$, $R^{G73}$, $R^{G74}$, $R^{G75}$, $R^{G76}$, $R^{G77}$, $R^{G78}$, $R^{G79}$, $R^{G80}$, $R^{G81}$, $R^{G82}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, (hetero)aromatischer Rest, wobei der (hetero)aromatische Rest mit mindestens einer Gruppe ausgewählt aus Halogen (Halo)Alkyl, (Halo)alkoxy, Cyano, Carbonsäureester, substituiert sein kann,

in einem Aspekt aus der Gruppe bestehend aus Wasserstoff, (Halo)Alkylgruppe, (Halo)Alkoxygruppe, (Halo)cycloalkylgruppe, Cyano, Carbonsäureester, Thiophen,

in einem weiteren Aspekt aus der Gruppe bestehend aus Wasserstoff, Cyano, Alkylgruppe, Alkoxygruppe ausgewählt sind, in einem weiteren Aspekt alle Wasserstoff sind,

in einem weiteren Aspekt die Reste $R^{G47}$, $R^{G52}$, $R^{G61}$, $R^{G66}$, $R^{G75}$, $R^{G80}$ unabhängig voneinander jeweils aus der Gruppe bestehend aus Alkoxy, Cyano, Wasserstoff, Alkylgruppe ausgewählt sind und $R^{G41}$, $R^{G42}$, $R^{G43}$, $R^{G44}$, $R^{G45}$, $R^{G46}$, $R^{G48}$, $R^{G49}$, $R^{G50}$, $R^{G51}$, $R^{G53}$, $R^{G54}$, $R^{G55}$, $R^{G56}$, $R^{G57}$, $R^{G58}$, $R^{G59}$, $R^{G60}$, $R^{G62}$, $R^{G63}$, $R^{G64}$, $R^{G65}$, $R^{G67}$, $R^{G68}$, $R^{G69}$, $R^{G70}$, $R^{G71}$, $R^{G72}$, $R^{G73}$, $R^{G74}$, $R^{G76}$, $R^{G77}$, $R^{G78}$, $R^{G79}$, $R^{G81}$, $R^{G82}$ jeweils Wasserstoff sind,

und wobei die durch ($xix^{G2}$) gekennzeichnete Bindung jeweils die Bindung zu $L^1$ darstellt.

GG.4 In einem Aspekt des vorgenannten Punktes GG.3 ist die redoxaktive Triphenylaminfunktion **(G)** die unter Punkt GG.3 definierte Struktur **(G4),** wobei die Reste $R^{G41}$, $R^{G42}$, $R^{G43}$, $R^{G44}$, $R^{G45}$, $R^{G46}$, $R^{G47}$ $R^{G48}$, $R^{G49}$, $R^{G50}$, $R^{G51}$, $R^{G52}$, $R^{G53}$, $R^{G54}$, unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, (hetero)aromatischer Rest, wobei der (hetero)aromatische Rest mit mindestens einer Gruppe ausgewählt aus Halogen (Halo)Alkyl, (Halo)alkoxy, Cyano, Carbonsäureester, substituiert sein kann,

in einem Aspekt aus der Gruppe bestehend aus Wasserstoff, (Halo)Alkylgruppe, (Halo)Alkoxygruppe, (Halo)cycloalkylgruppe, Cyano, Carbonsäureester, Thiophen,

in einem weiteren Aspekt aus der Gruppe bestehend aus Wasserstoff, Cyano, Alkylgruppe, Alkoxygruppe ausgewählt sind, in einem weiteren Aspekt alle Wasserstoff sind,

in einem weiteren Aspekt die Reste $R^{G47}$, $R^{G52}$ unabhängig voneinander jeweils aus der Gruppe bestehend aus Alkoxy, Cyano, Wasserstoff, Alkylgruppe ausgewählt sind und die Reste $R^{G41}$, $R^{G42}$, $R^{G43}$, $R^{G44}$, $R^{G45}$, $R^{G46}$, $R^{G48}$, $R^{G49}$, $R^{G50}$, $R^{G51}$, $R^{G53}$, $R^{G54}$, jeweils Wasserstoff sind,

und wobei die durch ($xix^{G2}$) gekennzeichnete Bindung jeweils die Bindung zu $L^1$ darstellt.

## 11.1.1.7 Redoxaktive Viologenfunktion **(H)**

Im Sinne der Erfindung bedeutet "redoxaktive Viologenfunktion", ein redoxaktiver organischer Rest, der ein von Viologen abgeleitetes Grundgerüst umfasst.

HH.1 Im Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive Viologenfunktion **(H)** sind, bedeutet dies erfindungsgemäß , dass die Reste $R^1$, $R^{1'}$, $R^{2'}$, $R^{3'}$ bzw. $R^1$, $R^{1'}$ bzw. $R^1$ unabhängig voneinander jeweils aus der Gruppe bestehend aus den Strukturen **(H1), (H2)** ausgewählt sind,

und die Reste $R^2$, $R^4$, $R^5$ unabhängig voneinander jeweils aus der Gruppe bestehend aus den Strukturen **(H3), (H4), (H5), (H6), (H7)** mit

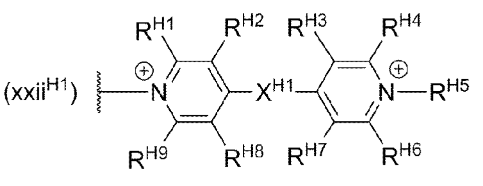

**(H1)**

;

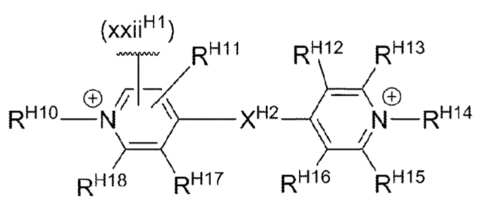

**(H2)**

;

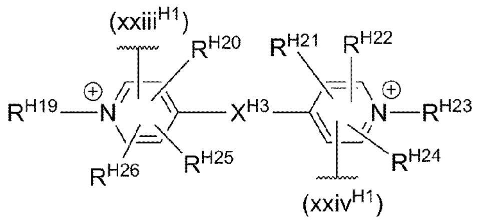 ; 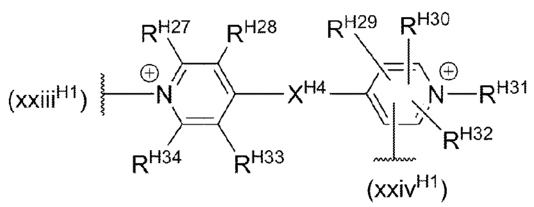 ;

(H3) (H4)

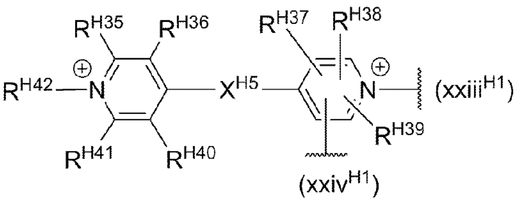 ; 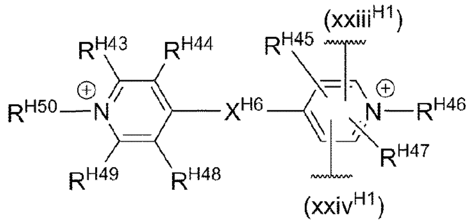 ;

(H5) (H6)

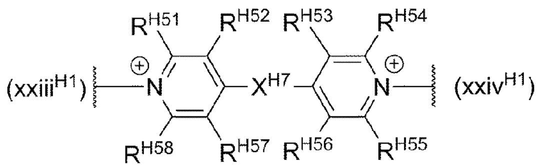 ;

(H7)

ausgewählt sind,
wobei,
im Falle dass $R^1$ = **(H1)** oder **(H2),** die durch ($xxii^{H1}$) gekennzeichnete Bindung die Bindung zu $L^1$ darstellt,
im Falle dass $R^{1'}$ = **(H1)** oder **(H2),** die durch ($xxii^{H1}$) gekennzeichnete Bindung die Bindung zu $L^{1'}$ darstellt,
im Falle dass $R^{2'}$ = **(H1)** oder **(H2),** die durch ($xxii^{H1}$) gekennzeichnete Bindung die Bindung zu $L^{2'}$ darstellt,
im Falle dass $R^{3'}$ = **(H1)** oder **(H2),** die durch ($xxii^{H1}$) gekennzeichnete Bindung die Bindung zu $L^{3'}$ darstellt,
im Falle dass $R^2$ = **(H3), (H4), (H5), (H6)** oder **(H7),** die durch ($xxiii^{H1}$) gekennzeichnete Bindung die Bindung zu $L^2$ darstellt und die durch ($xxiv^{H1}$) gekennzeichnete Bindung die Bindung zu $L^3$ darstellt, im Falle dass $R^4$ = **(H3), (H4), (H5), (H6)** oder **(H7),** die durch ($xxiii^{H1}$) gekennzeichnete Bindung die Bindung zu $L^4$ darstellt und die durch ($xxiv^{H1}$) gekennzeichnete Bindung die Bindung zu $L^5$ darstellt, im Falle dass $R^5$ = **(H3), (H4), (H5), (H6)** oder **(H7),** die durch ($xxiii^{H1}$) gekennzeichnete Bindung die Bindung zu $L^6$ darstellt und die durch ($xxiv^{H1}$) gekennzeichnete Bindung die Bindung zu $L^7$ darstellt,
und wobei die Reste $R^{H1}$, $R^{H2}$, $R^{H3}$, $R^{H4}$, $R^{H6}$, $R^{H7}$, $R^{H8}$, $R^{H9}$, $R^{H11}$, $R^{H12}$, $R^{H13}$, $R^{H15}$, $R^{H16}$, $R^{H17}$ $R^{H18}$, $R^{H20}$, $R^{H21}$, $R^{H22}$, $R^{H24}$, $R^{H25}$, $R^{H26}$, $R^{H27}$, $R^{H28}$, $R^{H29}$, $R^{H30}$, $R^{H32}$, $R^{H33}$, $R^{H34}$, $R^{H35}$, $R^{H36}$, $R^{H37}$, $R^{H38}$, $R^{H39}$, $R^{H40}$, $R^{H41}$, $R^{H43}$, $R^{H44}$, $R^{H45}$, $R^{H47}$, $R^{H48}$, $R^{H49}$, $R^{H51}$, $R^{H52}$, $R^{H53}$, $R^{H54}$, $R^{H55}$, $R^{H56}$, $R^{H57}$, $R^{H58}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)alkyl, Halogen ausgewählt sind und besonders in einem Aspekt alle Wasserstoff sind,
und wobei die Reste $R^{H5}$, $R^{H10}$, $R^{H14}$, $R^{H19}$, $R^{H23}$, $R^{H31}$, $R^{H42}$, $R^{H46}$, $R^{H50}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, in einem Aspekt aus der Gruppe bestehend aus Wasserstoff, (Halo)alkyl, Halogen ausgewählt sind und besonders in einem Aspekt alle Wasserstoff sind,
und wobei die Reste $X^{H1}$, $X^{H2}$, $X^{H3}$, $X^{H4}$, $X^{H5}$, $X^{H6}$, $X^{H7}$ unabhängig voneinander jeweils aus der Gruppe bestehend aus direkte Bindung, zweiwertiger konjugierter aliphatischer Rest, zweiwertiger konjugierter (hetero)aromatischer Rest ausgewählt ist, in einem Aspekt aus direkte Bindung, zweiwertiger (hetero)aromatischer Rest, in einem weiteren Aspekt aus der Gruppe bestehend aus direkte Bindung, Phenylen ausgewählt sind und besonders in einem Aspekt

jeweils eine direkte Bindung sind.

HH.2 In einem Aspekt des vorgenannten Punktes HH.1 bedeutet in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.α) und Punkt II.1.β) definiert ist, jeweils eine redoxaktive Viologenfunktion (H) sind, dass die Reste $R^1$, $R^{1'}$, $R^{2'}$, $R^{3'}$ bzw. $R^1$, $R^{1'}$ bzw. $R^1$ unabhängig voneinander jeweils die unter Punkt HH.1 definierte Struktur **(H1)** mit den unter Punkt HH.1 definierten Bedeutungen von $X^{H1}$, $R^{H1}$, $R^{H2}$, $R^{H3}$, $R^{H4}$, $R^{H5}$, $R^{H6}$, $R^{H7}$, $R^{H8}$, $R^{H9}$ aufweisen und $R^2$, $R^4$, $R^5$ unabhängig voneinander jeweils die unter Punkt HH.1 definierte Struktur **(H7)** mit den unter Punkt HH.1 genannten Bedeutungen von $X^{H7}$, $R^{H51}$, $R^{H52}$, $R^{H53}$, $R^{H54}$, $R^{H55}$, $R^{H56}$, $R^{H57}$, $R^{H58}$ aufweisen.

HH.3 In einem weiteren Aspekt des zweiten Aspekts der Erfindung, wie er unter II.1.β) definiert ist, umfasst das im erfindungsgemäßen Verfahren zur Herstellung einer Elektrode gemäß dem zweiten Aspekt der vorliegenden Erfindung eingesetzte, in der Hauptkette nichtkonjugierte, organisches Redox-Polymer **P** insbesondere $n^1$ miteinander verknüpfte Wiederholungseinheiten der chemischen Struktur **(I)** mit

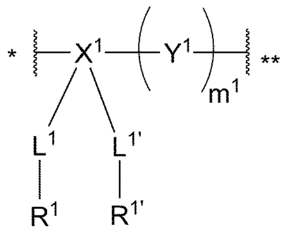
;

**(I)**

wobei $n^1$ eine ganze Zahl ≥ 4, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl ≥ 0, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $R^1$, $R^{1'}$ unabhängig voneinander jeweils eine redoxaktive Viologenfunktion **(H),** sind, und $R^{1'}$ auch ein Wasserstoffrest sein kann, und in einem Aspekt $R^1$ eine redoxaktive Viologenfunktion **(H)** ist und $R^{1'}$ ein Wasserstoffrest ist,

und wobei die redoxaktive Viologenfunktion **(H)** in einem weiteren Aspekt die unter Punkt HH.1 gezeigte Struktur **(H1)** aufweist,

wobei $R^{H1}$, $R^{H2}$, $R^{H3}$, $R^{H4}$, $R^{H5}$, $R^{H6}$, $R^{H7}$, $R^{H8}$, $R^{H9}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)alkyl, Halogen ausgewählt sind, und besonders in einem Aspekt alle Wasserstoff sind,

und wobei der Rest $X^{H1}$ aus der Gruppe bestehend aus direkte Bindung, zweiwertiger konjugierter aliphatischer Rest, zweiwertiger konjugierter (hetero)aromatischer Rest ausgewählt ist, in einem Aspekt aus der Gruppe bestehend aus direkte Bindung, zweiwertiger (hetero)aromatischer Rest, in einem weiteren Aspekt aus der Gruppe bestehend aus direkte Bindung, Phenylen ausgewählt ist und besonders in einem Aspekt eine direkte Bindung ist,

und wobei,

im Falle dass $R^1$ = **(H1)** die durch ($xxii^{H1}$) gekennzeichnete Bindung die Bindung zu $L^1$ darstellt,

im Falle dass $R^{1'}$ = **(H1)** die durch ($xxii^{H1}$) gekennzeichnete Bindung die Bindung zu $L^{1'}$ darstellt.

11.1.1.8 Redoxaktive Ferrocenfunktion **(J)**

Im Sinne der Erfindung bedeutet "redoxaktive Ferrocenfunktion", ein redoxaktiver organischer Rest, der ein von Ferrocen abgeleitetes Grundgerüst umfasst.

JJ.1 In dem Sinne der Erfindung, in der die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive Ferrocenfunktion (J) sind, bedeutet dies erfindungsgemäß , dass die Reste $R^1$, $R^{1'}$, $R^{2'}$, $R^{3'}$ bzw. $R^1$, $R^{1'}$ bzw. $R^1$ unabhängig voneinander jeweils die folgende Struktur **(J1)** aufweisen und die Reste $R^2$, $R^4$, $R^5$, unabhängig voneinander jeweils aus der Gruppe bestehend aus den folgenden Strukturen **(J2), (J3), (J4)** mit

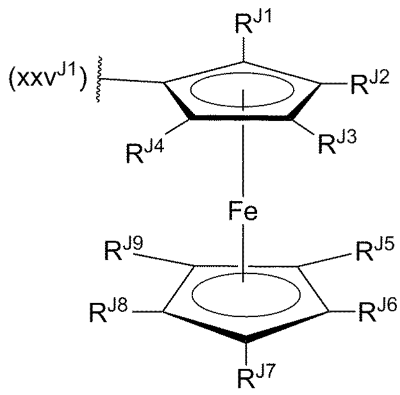

**(J1)**

;

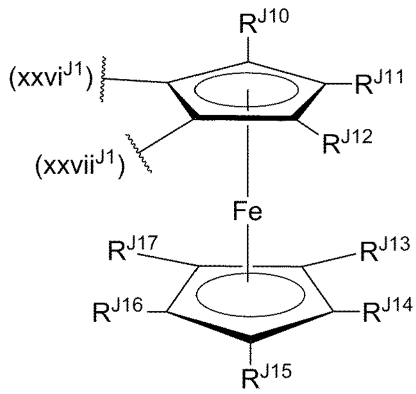

**(J2)**

;

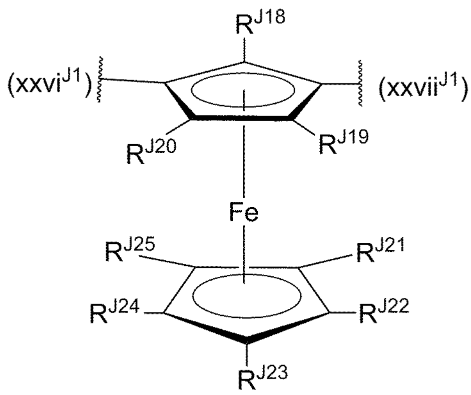

**(J3)**

;

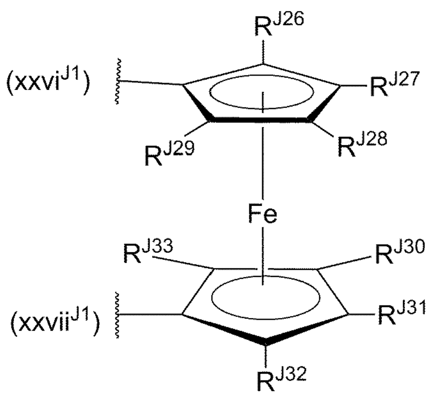

**(J4)**

;

ausgewählt sind,
wobei,
im Falle dass $R^1$ = **(J1),** die durch ($xxv^{J1}$) gekennzeichnete Bindung die Bindung zu L' darstellt,
im Falle dass $R^{1'}$ = **(J1),** die durch ($xxv^{J1}$) gekennzeichnete Bindung die Bindung zu $L^{1'}$ darstellt,
im Falle dass $R^{2'}$ = **(J1),** die durch ($xxv^{J1}$) gekennzeichnete Bindung die Bindung zu $L^{2'}$ darstellt,
im Falle dass $R^{3'}$ = **(J1),** die durch ($xxv^{J1}$) gekennzeichnete Bindung die Bindung zu $L^{3'}$ darstellt,
im Falle dass $R^2$ = **(J2), (J3)** oder **(J4),** die durch ($xxvi^{J1}$) gekennzeichnete Bindung die Bindung zu $L^2$ darstellt und

die durch ($xxvii^{J1}$) gekennzeichnete Bindung die Bindung zu $L^3$ darstellt,
im Falle dass $R^4$ = **(J2), (J3)** oder **(J4),** die durch ($xxvi^{J1}$) gekennzeichnete Bindung die Bindung zu $L^4$ darstellt und die durch ($xxvii^{J1}$) gekennzeichnete Bindung die Bindung zu $L^5$ darstellt,
im Falle dass $R^5$ = **(J2), (J3)** oder **(J4),** die durch ($xxvi^{J1}$) gekennzeichnete Bindung die Bindung zu $L^6$ darstellt und die durch ($xxvii^{J1}$) gekennzeichnete Bindung die Bindung zu $L^7$ darstellt,
und wobei die Reste $R^{J1}$, $R^{J2}$, $R^{J3}$, $R^{J4}$, $R^{J5}$, $R^{J6}$, $R^{J7}$, $R^{J8}$, $R^{J9}$, $R^{J10}$, $R^{J11}$, $R^{J12}$, $R^{J13}$, $R^{J14}$, $R^{J15}$, $R^{J16}$, $R^{J17}$, $R^{J18}$, $R^{J19}$, $R^{J20}$, $R^{J21}$, $R^{J22}$, $R^{J23}$, $R^{J24}$, $R^{J25}$, $R^{J26}$, $R^{J27}$, $R^{J28}$, $R^{J29}$, $R^{J30}$, $R^{J31}$, $R^{J32}$, $R^{J33}$ jeweils unabhängig voneinander aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)Alkylgruppe, in einem weiteren Aspekt aus der Gruppe bestehend aus Wasserstoff, Alkylgruppe, bei der es sich in einem Aspekt um Methyl handelt, ausgewählt sind, besonders in einem Aspekt alle Wasserstoff sind.

JJ.2 In einem weiteren Aspekt des zweiten Aspekts der Erfindung, wie er unter II.1.β) definiert ist, umfasst das im erfindungsgemäßen Verfahren zur Herstellung einer Elektrode gemäß dem zweiten Aspekt der vorliegenden Erfindung eingesetzte, in der Hauptkette nichtkonjugierte, organisches Redox-Polymer **P** insbesondere $n^1$ miteinander verknüpfte Wiederholungseinheiten der chemischen Struktur **(I)** mit

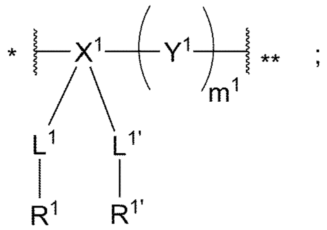

**(I)**

wobei $n^1$ eine ganze Zahl $\geq 4$, in einem weiteren Aspekt eine ganz Zahl im Bereich 4 bis $10^6$, in einem weiteren Aspekt eine ganze Zahl im Bereich 10 bis $10^5$, in einem weiteren Aspekt eine ganze Zahl im Bereich 100 bis $10^4$ ist,

wobei m' eine ganze Zahl $\geq 0$, in einem Aspekt eine ganze Zahl im Bereich 0 bis $10^6$, in einem weiteren Aspekt eine ganze Zahl im Bereich 0 bis $10^5$, in einem weiteren Aspekt eine ganze Zahl im Bereich 0 bis $10^4$, in einem weiteren Aspekt eine ganze Zahl im Bereich 0 bis 10, am bevorzugtesten jeweils 0 ist,

wobei die Wiederholungseinheiten der chemischen Struktur **(I)** innerhalb des Polymers **P** gleich oder zumindest teilweise voneinander verschieden sind,

wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,

wobei $R^1$, $R^{1'}$ unabhängig voneinander jeweils eine redoxaktive Ferrocenfunktion **(J),** sind, und $R^{1'}$ auch ein Wasserstoffrest sein kann, und in einem Aspekt $R^1$ eine redoxaktive Ferrocenfunktion **(J)** ist und $R^{1'}$ ein Wasserstoffrest ist,

und wobei die redoxaktive Ferrocenfunktion **(J)** in einem weiteren Aspekt die unter Punkt JJ.1 definiert Struktur **(J1)** aufweist,

wobei die Reste $R^{J1}$, $R^{J2}$, $R^{J3}$, $R^{J4}$, $R^{J5}$, $R^{J6}$, $R^{J7}$, $R^{J8}$, $R^{J9}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, in einem Aspekt aus der Gruppe bestehend aus Wasserstoff, (Halo)Alkylgruppe, in einem weiteren Aspekt aus der Gruppe bestehend aus Wasserstoff, Alkylgruppe, bei der es sich in einem Aspekt um Methyl handelt, ausgewählt sind, besonders in einem Aspekt alle Wasserstoff sind,

und wobei,

im Falle dass $R^1$ = **(J1),** die durch (xxv$^{J1}$) gekennzeichnete Bindung die Bindung zu $L^1$ darstellt, und im Falle dass $R^{1'}$ = **(J1),** die durch (xxv$^{J1}$) gekennzeichnete Bindung die Bindung zu $L^{1'}$ darstellt.

11.1.2 Linkereinheiten

$L^1$, $L^2$, $L^3$, $L^4$, $L^5$, $L^6$, $L^7$, $L^{1'}$, $L^{2'}$, $L^{3'}$ bzw. $L^1$, $L^{1'}$ sind gemäß dem zweiten Aspekt der Erfindung, wie er unter Punkt II.1.$\alpha$) bzw. Punkt II.1.$\beta$) definiert ist, in den Strukturen **(I)**, **(II)** bzw. **(III)** bzw. der Struktur **(I)** unabhängig voneinander jeweils ausgewählt aus der Gruppe bestehend aus direkte Bindung, organische Linkereinheit.

In dem Sinne der Erfindung, in der $L^1$, $L^2$, $L^3$, $L^4$, $L^5$, $L^6$, $L^7$, $L^{1'}$, $L^{2'}$, $L^{3'}$ bzw. $L^1$, $L^{1'}$ gemäß dem zweiten Aspekt der Erfindung, wie er unter Punkt II.1.$\alpha$) bzw. Punkt II.1.$\beta$) definiert ist, in den Strukturen **(I)**, **(II)** bzw. **(III)** jeweils eine organische Linkereinheit sind, bedeutet dies erfindungsgemäß , dass $L^1$, $L^2$, $L^3$, $L^4$, $L^5$, $L^6$, $L^7$, $L^{1'}$, $L^{2'}$, $L^{3'}$ dann unabhängig voneinander jeweils aus der Gruppe bestehend aus **(L11)**, **(L12)** mit

**(L11)**: $♣\text{-}(X^{L1})_{p1}\text{-}[C{=}X^{L2}]_{p2}\text{-}(X^{L3})_{p3}\text{-}B^{L1}\text{-}(Y^{L1})_{q1}\text{-}[C{=}Y^{L2}]_{q2}\text{-}(Y^{L3})_{q3}\text{-}♠$,

**(L12)**: $♣\text{-}(Y^{L4})_{q4}\text{-}[C{=}Y^{L5}]_{q5}\text{-}(Y^{L6})_{q6}\text{-}♠$

ausgewählt sind,

wobei p1, p2, p3 jeweils 0 oder 1 sind, wobei der Fall "p2 = 0, p1 = p3 = 1" ausgeschlossen ist, wobei q1, q2, q3 jeweils 0 oder 1 sind, wobei der Fall "q2 = 0, q1 = q3 = 1" ausgeschlossen ist, wobei q4, q5, q6 jeweils 0 oder 1 sind, wobei mindestens einer von q4, q5, q6 = 1 ist und der Fall "q5 = 0, q4 = q6 = 1" ausgeschlossen ist,

wobei $X^{L2}$, $Y^{L2}$, $Y^{L5}$ unabhängig voneinander jeweils aus der Gruppe bestehend aus O, S ausgewählt sind,

wobei $X^{L1}$, $X^{L3}$, $Y^{L1}$, $Y^{L3}$, $Y^{L4}$, $Y^{L6}$ unabhängig voneinander jeweils aus der Gruppe bestehend aus O, S, NH, N[(Halo)Alkyl] ausgewählt sind,

wobei $B^{L1}$ aus der Gruppe bestehend aus zweiwertiger (hetero)aromatischer Rest, zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest ausgewählt ist,

und wobei in den Fällen, in denen $L^1$, $L^2$, $L^3$, $L^4$, $L^5$, $L^6$, $L^7$, $L^{1'}$, $L^{2'}$ bzw. $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$ bzw. $R^{3'}$ bindet, für die Struktur **(L11)** die zusätzliche Bedingung "q3 = 0, q2 = 1, q1 = 1 oder q3 = q2 = q1 = 0 oder q3 = 0, q2 = 1, q1 = 0", in einem Aspekt die Bedingung "q3 = q2 = q1 = 0", gilt, und für die Struktur **(L12)** die zusätzliche Bedingung "q6 = 0, q5 = 1, q4 = 1 oder q6 = 0, q5 = 1, q4 = 0" gilt,

und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,

und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von q4, q5, q6 = 1" bezieht sich dabei nur auf die Definition der

jeweiligen Variablen in der Struktur **(L12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

11.1.2.1 Aspekte der Linkereinheiten bei redoxaktiven aromatischen Imidfunktionen **(A)**

LAA.1 In einem Aspekt gemäß dem zweiten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive aromatische Imidfunktion **(A)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt AA.1, in einem weiteren Aspekt AA.2, in einem weiteren Aspekt AA.3, in einem weiteren Aspekt AA.4 definierten Strukturen aufweisen und auch in dem Fall, in dem das in der Hauptkette nichtkonjugierte, organische Redox-Polymer **P** gemäß dem zweiten Aspekt der Erfindung eine Struktur wie unter Punkt AA.5 definiert umfasst,

$L^1$, $L^2$, $L^3$, $L^4$, $L^5$, $L^6$, $L^7$, $L^{1'}$, $L^{2'}$ bzw. $L^{3'}$ dann in einem Aspekt ausgewählt aus der Gruppe bestehend aus direkte Bindung, **(LA11), (LA12)** mit

$$\textbf{(LA11)}: ♣\text{-}(X^{LA1})_{pA1}\text{-}[C{=}X^{LA2}]_{pA2}\text{-}(X^{LA3})_{pA3}\text{-}B^{LA1}\text{-}(Y^{LA1})_{qA1}\text{-}[C{=}Y^{LA2}]_{qA2}\text{-}(Y^{LA3})_{qA3}\text{-}♠,$$

$$\textbf{(LA12)}: ♣\text{-}(Y^{LA4})_{qA4}\text{-}[C{=}Y^{LA5}]_{qA5}\text{-}(Y^{LA6})_{qA6}\text{-}♠$$

ausgewählt,
wobei pA1, pA2, pA3 jeweils 0 oder 1 sind, wobei der Fall "pA2 = 0, pA1 = pA3 = 1" ausgeschlossen ist,
wobei qA1, qA2, qA3 jeweils 0 oder 1 sind, wobei der Fall "qA2 = 0, qA1 = qA3 = 1" ausgeschlossen ist,
wobei qA4, qA5, qA6 jeweils 0 oder 1 sind, wobei mindestens einer von qA4, qA5, qA6 = 1 ist und wobei der Fall "qA5 = 0, qA4 = qA6 = 1" ausgeschlossen ist,
wobei $X^{LA2}$, $Y^{LA2}$, $Y^{LA5}$ unabhängig voneinander jeweils aus der Gruppe bestehend aus O, S ausgewählt sind,
wobei $X^{LA1}$, $X^{LA3}$, $Y^{LA1}$, $Y^{LA3}$, $Y^{LA4}$, $Y^{LA6}$ unabhängig voneinander jeweils aus der Gruppe bestehend aus O, S, NH, N[(Halo)Alkyl] ausgewählt sind,
wobei $B^{LA1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest,
ausgewählt ist,
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LA11)** die zusätzliche Bedingung "qA3 = 0, qA2 = 1, qA1 = 1 oderqA3 = qA2 = qA1 = 0 oder qA3 = 0, qA2 = 1, qA1 = 0", in einem Aspekt die Bedingung "qA3 = qA2 = qA1 = 0", gilt, und für die Struktur **(LA12)** die zusätzliche Bedingung "qA6 = 0, qA5 = 1, qA4 = 1 oder qA6 = 0, qA5 = 1, qA4 = 0 gilt,
und wobei "**♠**" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "**♣**" für L' die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qA4, qA5, qA6 = 1" bezieht sich dabei nur auf die Definition der jeweiligen Variablen in der Struktur **(LA12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

LAA.2 In einem Aspekt des vorgenannten Punktes LAA.1 sind $X^{LA2}$, $Y^{LA2}$, $Y^{LA5}$ unabhängig voneinander jeweils aus der Gruppe bestehend aus O, S, in einem Aspekt O, ausgewählt, und $X^{LA1}$, $X^{LA3}$, $Y^{LA1}$, $Y^{LA3}$, $Y^{LA4}$, $Y^{LA6}$ sind unabhängig voneinander jeweils aus der Gruppe bestehend aus O, S, NH, N(Alkyl), in einem Aspekt aus der Gruppe bestehend aus O, S, ausgewählt, und $B^{LA1}$ ist aus der Gruppe bestehend aus Benzylen, Phenylen, zweiwertiger Anthrachinonrest, zweiwertiger, gegebenenfalls mindestens eine Gruppe ausgewählt aus Ether, Thioether, aufweisender Alkylenrest ausgewählt.

LAA.3 In einem Aspekt des vorgenannten Punktes LAA.2 sind $L^1$, $L^2$, $L^3$, $L^4$, $L^5$, $L^6$, $L^7$, $L^{1'}$, $L^{2'}$, $L^{3'}$ unabhängig voneinander jeweils aus der Gruppe bestehend aus direkte Bindung, Benzylen, Phenylen, zweiwertiger Anthrachinonrest, Alkylenrest, bei dem es sich in einem Aspekt um einen Methylenrest handelt, ♣-C(=O)-♠, ♣-($NR^{LA3}$)-$B^{LA2}$-♠ ausgewählt,

wobei in den Fällen, in denen $L^1$, $L^2$, $L^3$, $L^4$, $L^5$, $L^6$, $L^7$, $L^{1'}$, $L^{2'}$, $L^{3'}$ an ein Kohlenstoffatom der jeweiligen redoxaktiven Gruppe $R^1$, $R^2$, $R^4$, $R^5$, $R^{1'}$, $R^{2'}$, $R^{3'}$ bindet, die Linkereinheiten $L^1$, $L^2$, $L^3$, $L^4$, $L^5$, $L^6$, $L^7$, $L^{1'}$, $L^{2'}$, $L^{3'}$ auch aus der Gruppe bestehend aus

♣-O-♠, ♣-($NR^{LA3}$)-$B^{LA2}$-($NR^{LA4}$)-♠, ♣-$B^{LA2}$-($NR^{LA4}$)-♠ ausgewählt sein können

wobei $R^{LA3}$, $R^{LA4}$ unabhängig voneinander jeweils aus Wasserstoff, Alkyl ausgewählt sind, und in einem Aspekt beide Wasserstoff sind, und $B^{LA2}$ ein gegebenenfalls Ethergruppen aufweisender Alkylenrest ist,

ausgewählt,

und wobei besonders in einem Aspekt $L^1$, $L^2$, $L^3$, $L^4$, $L^5$, $L^6$, $L^7$, $L^{1'}$, $L^{2'}$, $L^{3'}$ unabhängig voneinander jeweils aus der Gruppe bestehend aus direkte Bindung, ♣-C(=O)-♠, Methylenrest ausgewählt sind,

und wobei "♠" und "♣" die unter Punkt LAA.1 genannte Bedeutung haben.

11.1.2.2 Aspekte der Linkereinheiten bei redoxaktiven organische Funktionen umfassend mindestens ein stabiles Sauerstoffradikal **(B)**

LBB.1 In einem Aspekt des zweiten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I)**, **(II)** bzw. **(III)** gemäß dem zweiten Aspekt der Erfindung, wie er unter Punkt II.1.$\alpha$) und Punkt II.1.$\beta$) definiert ist, jeweils eine redoxaktive organische Funktion umfassend mindestens ein stabiles Sauerstoffradikal **(B)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt BB.1, in einem weiteren Aspekt BB.2, definierten Strukturen aufweisen und auch in dem Fall, in dem das Polymer **P** gemäß dem zweiten Aspekt der Erfindung eine Struktur wie unter Punkt BB.3 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LB11), (LB12)** mit

**(LB11)**: ♣-$(X^{LB1})_{pB1}$-$[C{=}X^{LB2}]_{pB2}$-$(X^{LB3})_{pB3}$-$B^{LB1}$-$(Y^{LB1})_{qB1}$-$[C{=}Y^{LB2}]_{qB2}$-$(Y^{LB3})_{qB3}$-♠,

**(LB12)**: ♣-$(Y^{LB4})_{qB4}$-$[C{=}Y^{LB5}]_{qB5}$-$(Y^{LB6})_{qB6}$-♠

ausgewählt,
wobei pB1, pB2, pB3 jeweils 0 oder 1 sind, wobei der Fall "pB2 = 0, pB1 = pB3 = 1" ausgeschlossen ist,
wobei qB1, qB2, qB3 jeweils 0 oder 1 sind, wobei der Fall "qB2 = 0, qB1 = qB3 = 1" ausgeschlossen ist,
wobei qB4, qB5, qB6 jeweils 0 oder 1 sind, wobei mindestens einer von qB4, qB5, qB6 = 1 ist und wobei der Fall "qB5 = 0, qB4 = qB6 = 1" ausgeschlossen ist,
wobei $X^{LB2}$, $Y^{LB2}$, $Y^{LB5}$ unabhängig voneinander jeweils aus der Gruppe bestehend aus O, S ausgewählt sind,
wobei $X^{LB1}$, $X^{LB3}$, $Y^{LB1}$, $Y^{LB3}$, $Y^{LB4}$, $Y^{LB6}$ unabhängig voneinander jeweils aus der Gruppe bestehend aus O, S, NH, N[(Halo)Alkyl] ausgewählt sind,
wobei $B^{LB1}$ aus der Gruppe bestehend aus
zweiwertiger (hetero)aromatischer Rest,

zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, ausgewählt ist

und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LB11)** die zusätzliche Bedingung "qB3 = 0, qB2 = 1, qB1 = 1 oder qB3 = qB2 = qB1 = 0 oder qB3 = 0, qB2 = 1, qB1 = 0", in einem Aspekt die Bedingung "qB3 = qB2 = qB1 = 0", gilt, und für die Struktur **(LB12)** die zusätzliche Bedingung "qB6 = 0, qB5 = 1, qB4 = 1 oder qB6 = 0, qB5 = 1, qB4 = 0" gilt,

und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,

und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qB4, qB5, qB6 = 1" bezieht sich dabei nur auf die Definition der jeweiligen Variablen in der Struktur **(LB12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

LBB.2 In einem Aspekt des vorgenannten Punktes LBB.1 sind $X^{LB2}$, $Y^{LB2}$, $Y^{LB5}$ jeweils O, und $X^{LB1}$, $X^{LB3}$, $Y^{LB1}$, $Y^{LB3}$, $Y^{LB4}$, $Y^{LB6}$ sind unabhängig voneinander jeweils aus der Gruppe bestehend aus O, NH, N(Alkyl), in einem Aspekt O, ausgewählt, und $B^{LA2}$ ist ein zweiwertiger, gegebenenfalls mindestens eine Ethergruppe aufweisender Alkylenrest.

LBB.3 In einem Aspekt des vorgenannten Punktes LBB.2 sind $L^1$, $L^2$, $L^3$, $L^4$, $L^5$, $L^6$, $L^7$, $L^{1'}$, $L^{2'}$, $L^{3'}$ aus der Gruppe bestehend aus

direkte Bindung, Alkylenrest, der in einem Aspekt Methylen ist,

Phenylen, ♣-C(=O)-♠, ♣-O-C(=O)-♠, ♣-(NH)-C(=O)-♠, ♣-(NAlkyl)-C(=O)-♠,

ein Ethergruppen aufweisender Alkylenrest, bei dem es sich in einem Aspekt um einen Rest der Formel ♠-$(CH_2CH_2O)_{,mLB1}$-♣ mit $m^{LB1}$ = 1 - 1000, in einem Aspekt $m^{LB1}$ = 1 - 10, oder einen Rest der Formel ♠-$(CH_2O)_{mLB2}$-♣ mit $m^{LB2}$ = 1 - 1000, in einem Aspekt $m^{LB2}$ = 1 - 10, handelt, ausgewählt,

und in den Fällen, in denen $L^1$, $L^2$, $L^3$, $L^4$, $L^5$, $L^6$, $L^7$, $L^{1'}$, $L^{2'}$, $L^{3'}$ an ein Kohlenstoff der jeweiligen redoxaktiven Gruppe $R^1$, $R^2$, $R^4$, $R^5$, $R^{1'}$, $R^{2'}$, $R^{3'}$ bindet, können $L^1$, $L^2$, $L^3$, $L^4$, $L^5$, $L^6$, $L^7$, $L^{1'}$, $L^{2'}$, $L^{3'}$ auch aus der Gruppe bestehend aus ♣-C(=O)-O-♠, ♣-C(=O)-(NH)-♠, ♣-C(=O)-(NAlkyl)-♠, ♣-O-♠, ♣-$(CH_2CH_2O)_{mLB3}$-♠ mit $m^{LB3}$ = 1 - 1000, in einem Aspekt $m^{LB3}$ = 1 - 10,

♣-$(CH_2O)_{mLB4}$-♠ mit $m^{LB4}$ = 1 - 1000, in einem Aspekt $m^{LB4}$ = 1 - 10,

ausgewählt sein,

wobei ♣-C(=O)-O-♠ ganz besonders in einem Aspekt ist, insbesondere dann, wenn $R^1$, $R^{1'}$ eine Verbindung der Struktur **(B111)** aufweisen,

und wobei "♠" und "♣" die unter Punkt LBB.1 genannte Bedeutung haben.

11.1.2.3 Aspekte der Linkereinheiten bei redoxaktiver Anthrachinon-/ Carbazolfunktion **(C)**

LCC.1 In einer in einem weiteren Aspekten Ausführungsform des zweiten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Anthrachinon-/ Carbazolfunktion **(C)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt CC.1, in einem Aspekt CC.2, in einem weiteren Aspekt CC.3, in einem weiteren Aspekt CC.4, in einem weiteren Aspekt CC.5, definierten Strukturen aufweisen und auch in dem Fall, in dem das in der Hauptkette nichtkonjugierte, organische Redox-Polymer **P** gemäß dem zweiten Aspekt der Erfindung eine Struktur wie

unter Punkt CC.6, in einem Aspekt CC.7 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LC11), (LC12)** mit

**(LC11)**: ♣-$(X^{LC1})_{pC1}$-$[C=X^{LC2}]_{pC2}$-$(X^{LC3})_{pC3}$-$B^{LC1}$-$(Y^{LC1})_{qC1}$-$[C=Y^{LC2}]_{qC2}$-$(Y^{LC3})_{qC3}$-♠,

**(LC12)**: ♣-$(Y^{LC4})_{qC4}$-$[C=Y^{LC5}]_{qC5}$-$(Y^{LC6})_{qC6}$-♠

ausgewählt,
wobei pC1, pC2, pC3 jeweils 0 oder 1 sind, wobei der Fall "pC2 = 0, pC1 = pC3 = 1" ausgeschlossen ist,
wobei qC1, qC2, qC3 jeweils 0 oder 1 sind, wobei der Fall "qC2 = 0, qC1 = qC3 = 1" ausgeschlossen ist,
wobei qC4, qC5, qC6 jeweils 0 oder 1 sind, wobei mindestens einer von qC4, qC5, qC6 = 1 ist und wobei der Fall "qC5 = 0, qC4 = qC6 = 1" ausgeschlossen ist,
wobei $X^{LC2}$, $Y^{LC2}$, $Y^{LC5}$ unabhängig voneinander jeweils aus der Gruppe bestehend aus O, S ausgewählt sind,
wobei $X^{LC1}$, $X^{LC3}$, $Y^{LC1}$, $Y^{LC3}$, $Y^{LC4}$, $Y^{LC6}$ unabhängig voneinander jeweils aus der Gruppe bestehend aus O, S, NH, N[(Halo)Alkyl] ausgewählt sind,
wobei $B^{LC1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, ausgewählt ist
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LC11)** die zusätzliche Bedingung "qC3 = 0, qC2 = 1, qC1 = 1 oder qC3 = qC2 = qC1 = 0 oder qC3 = 0, qC2 = 1, qC1 = 0", in einem Aspekt die Bedingung "qC3 = qC2 = qC1 = 0", gilt, und für die Struktur **(LC12)** die zusätzliche Bedingung "qC6 = 0, qC5 = 1, qC4 = 1 oder qC6 = 0, qC5 = 1, qC4 = 0" gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für L' die zu X' weisende Bindung bezeichnet, für $L^{1'}$ die zu X' weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qC4, qC5, qC6 = 1" bezieht sich dabei nur auf die Definition der jeweiligen Variablen in der Struktur **(LC12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.
LCC.2 In einem Aspekt des vorgenannten Punktes LCC.1 sind $X^{LC2}$, $Y^{LC2}$, $Y^{LC5}$ jeweils O, und $X^{LC1}$, $X^{LC3}$, $Y^{LC1}$, $Y^{LC3}$, $Y^{LC4}$, $Y^{LC6}$ sind unabhängig voneinander jeweils aus der Gruppe bestehend aus O, NH, N(Alkyl), in einem Aspekt O, ausgewählt, und $B^{LC1}$ ist ein zweiwertiger, gegebenenfalls mindestens eine Ethergruppe aufweisender Alkylenrest.
LCC.3 In einem Aspekt des vorgenannten Punktes LCC.2 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, ♣-C(=O)-♠, ♣-O-C(=O)-♠, ♣-(NH)-C(=O)-♠, ♣-(NAlkyl)-C(=O)-♠, ein Ethergruppen aufweisender Alkylenrest, bei dem es sich in einem Aspekt um einen Rest der Formel ♠-$(CH_2CH_{20})_{mLC1}$-♣ mit $m^{LC1}$ = ganze Zahl von 2 bis 1000, in einem Aspekt 3 bis 500, in einem weiteren Aspekt 10 bis 100, handelt,

und wobei in den Fällen, in denen $L^1$, $L^2$, $L^3$, $L^4$, $L^5$, $L^6$, $L^7$, $L^{1'}$, $L^{2'}$, $L^{3'}$ an ein Kohlenstoffatom der jeweiligen redoxaktiven Gruppe $R^1$, $R^2$, $R^4$, $R^5$, $R^{1'}$, $R^{2'}$, $R^{3'}$ bindet, die Linkereinheiten $L^1$, $L^2$, $L^3$, $L^4$, $L^5$, $L^6$, $L^7$, $L^{1'}$, $L^{2'}$, $L^{3'}$

auch ausgewählt sein können aus ♣-$(CH_2CH_2O)_{mLC2}$-♠ mit $m^{LC2}$ = ganze Zahl von 2 bis 1000, in einem Aspekt 3 bis 500, in einem weiteren Aspekt 10 bis 100, ♣-C(=O)-O-♠,♣- C(=O)-(NH)-♠, ♣-C(=O)-(NAlkyl)-♠, ♣-O-♠,

wobei die direkte Bindung ganz besonders in einem Aspekt ist, insbesondere dann, wenn $R^1$, $R^{1'}$ eine Verbindung der Struktur **(C501)** oder **(C502)** aufweisen.

und wobei "♠" und "♣" die unter Punkt LCC.1 genannte Bedeutung haben.

11.1.2.4 Aspekte der Linkereinheiten bei redoxaktiver Dialkoxybenzolfunktion **(D)**

LDD.1 In einer in einem weiteren Aspekten Ausführungsform des zweiten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Phenoxyverbindung **(D)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt DD.1, in einem Aspekt DD.2, in einem weiteren Aspekt DD.3, in einem weiteren Aspekt DD.4, in einem weiteren Aspekt DD.5, noch viel mehr in einem weiteren Aspekt DD.6 definierten Strukturen aufweisen und auch in dem Fall, in dem das in der Hauptkette nichtkonjugierte, organische Redox-Polymer **P** gemäß dem zweiten Aspekt der Erfindung eine Struktur wie unter Punkt DD.7 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LD11), (LD12)** mit

**(LD11)**: ♣-$(X^{LD1})_{pD1}$-$[C=X^{LD2}]_{pD2}$-$(X^{LD3})_{pD3}$-$B^{LD1}$-$(Y^{LD1})_{qD1}$-$[C=Y^{LD2}]_{qD2}$-$(Y^{LD3})_{qD3}$-♠,

**(LD12)**: ♣-$(Y^{LD4})_{qD4}$-$[C=Y^{LD5}]_{qD5}$-$(Y^{LD6})_{qD6}$-♠

ausgewählt,
wobei pD1, pD2, pD3 jeweils 0 oder 1 sind, wobei der Fall "pD2 = 0, pD1 = pD3 = 1" ausgeschlossen ist,
wobei qD1, qD2, qD3 jeweils 0 oder 1 sind, wobei der Fall "qD2 = 0, qD1 = qD3 = 1" ausgeschlossen ist,
wobei qD4, qD5, qD6 jeweils 0 oder 1 sind, wobei mindestens einer von qD4, qD5, qD6 = 1 ist und wobei der Fall "qD5 = 0, qD4 = qD6 = 1" ausgeschlossen ist,
wobei $X^{LD2}$, $Y^{LD2}$, $Y^{LD5}$ unabhängig voneinander jeweils aus der Gruppe bestehend aus O, S ausgewählt sind,
wobei $X^{LD1}$, $X^{LD3}$, $Y^{LD1}$, $Y^{LD3}$, $Y^{LD4}$, $Y^{LD6}$ unabhängig voneinander jeweils aus der Gruppe bestehend aus O, S, NH, N[(Halo)Alkyl] ausgewählt sind,
wobei $B^{LD1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, ausgewählt ist,
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LD11)** die zusätzliche Bedingung "qD3 = 0, qD2 = 1, qD1 = 1 oder qD3 = qD2 = qD1 = 0 oder qD3 = 0, qD2 = 1, qD1 = 0", in einem Aspekt die Bedingung "qD3 = qD2 = qD1 = 0", gilt, und für die Struktur **(LD12)** die zusätzliche Bedingung "qD6 = 0, qD5 = 1, qD4 = 1 oder qD6 = 0, qD5 = 1, qD4 = 0 gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für $L^1$ die zu X' weisende Bindung bezeichnet, für $L^{1'}$ die zu X' weisende Bindung bezeichnet, für $L^2$

die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qD4, qD5, qD6 = 1" bezieht sich dabei nur auf die Definition der jeweiligen Variablen in der Struktur **(LD12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

LDD.2 In einem Aspekt des vorgenannten Punktes LDD.1 sind $X^{LD2}$, $Y^{LD2}$, $Y^{LD5}$ jeweils O, und $X^{LD1}$, $X^{LD3}$, $Y^{LD1}$, $Y^{LD3}$, $Y^{LD4}$, $Y^{LD6}$ sind unabhängig voneinander jeweils aus der Gruppe bestehend aus O, NH, N(Alkyl), in einem Aspekt O, ausgewählt, und $B^{LD1}$ ist aus der Gruppe bestehend aus zweiwertiger (hetero)aromatischer Rest, zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest ausgewählt.

LDD.3 In einer bevorzugteren Ausführungsform des vorgenannten Punktes LDD.2 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, Benzylen, ♣-C(=O)-♠, ♣-O-C(=O)-♠, ♣-(NH)-C(=O)-♠, ♣-(NAlkyl)- C(=O)-♠,

mindestens eine Gruppe ausgewählt aus Ether, Carbonylgruppe, Carbonsäureester, Carbonsäureamidgruppe aufweisender Alkylenrest,

♣-$[X^{LD4}]_{pD4}$-$[C(=O)]_{pD5}$-$[X^{LD5}]_{pD6}$-$B^{LD4}$-$[X^{LD6}]_{qD6}$-$[C(=O)]_{qD7}$-♠, wobei $X^{LD4}$, $X^{LD5}$, $X^{LD6}$ unabhängig voneinander aus der Gruppe bestehend aus O, S, NH, NAlkyl, N(Haloalkyl), in einem Aspekt O, ausgewählt sind,

und wobei $p_{D4}$, $p_{D5}$, $p_{D6}$ jeweils 0 oder 1 sind, wobei der Fall "$p_{D5}$ = 0, $p_{D4}$ = $p_{D6}$ = 1" ausgeschlossen ist,
und wobei $q_{D6}$, $q_{D7}$ jeweils 0 oder 1 sind, wobei der Fall "$q_{D7}$ = 0, $q_{D6}$ = 1" ausgeschlossen ist,
und wobei $B^{LD4}$ eine Alkylengruppe, die Ethergruppen und/oder Carbonylgruppen aufweisen kann, in einem Aspekt eine Alkylengruppe ist, in einem weiteren Aspekt aus der Gruppe bestehend aus Methylengruppe, Ethylengruppe, n-Propylengruppe, n-Butylengruppe, n-Pentylengruppe, n-Hexylengruppe ausgewählt ist,
und wobei "♠" und "♣" die unter Punkt LDD.1 genannte Bedeutung haben.

LDD.4 In einer in einem weiteren Aspekten Ausführungsform des vorgenannten Punktes LDD.3 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, Benzylen, ♣-C(=O)-♠, ♣-O-C(=O)-♠, ♣- (NH)-C(=O)-♠, ♣-(NAlkyl)-C(=O)-♠, mindestens eine Gruppe ausgewählt aus Ether, Carbonylgruppe, Carbonsäureester, Carbonsäureamidgruppe aufweisender Alkylenrest, ♣-O-C(=O)-$B^{LD5}$-♠ ausgewählt, und am bevorzugtesten aus der Gruppe bestehend aus direkte Bindung, Methylen, ♣-O-C(=O)-$B^{LD5}$-♠, Phenylen ausgewählt,

wobei $B^{LD5}$ eine Alkylengruppe, in einem Aspekt eine Methylengruppe, Ethylengruppe, Propylengruppe, Butylengruppe, Pentylengrupe, Hexylengruppe ist, am bevorzugtesten aus der Gruppe bestehend aus Methylen, Ethylen, Propylen ausgewählt ist,

und wobei "♠" und "♣" die unter Punkt LDD.1 genannte Bedeutung haben.

11.1.2.5 Aspekte der Linkereinheiten bei redoxaktiver Benzochinonfunktion **(E)**

LEE.1 In einer in einem weiteren Aspekten Ausführungsform des zweiten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktiver Benzochinonfunktion **(E)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt EE.1, in einem Aspekt EE.2, in einem weiteren Aspekt EE.3, in einem weiteren Aspekt EE.4, in einem weiteren Aspekt EE.5 definierten Strukturen aufweisen und auch in dem Fall, in dem das das in der Hauptkette nichtkonjugierte, organische Redox-Polymer P gemäß dem zweiten Aspekt der Erfindung eine Struktur wie unter Punkt EE.6 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LE11)**, **(LE12)** mit

**(LE11)**: ♣-$(X^{LE1})_{pE1}$-$[C{=}X^{LE2}]_{pE2}$-$(X^{LE3})_{pE3}$-$B^{LE1}$-$(Y^{LE1})_{qE1}$-$[C{=}Y^{LE2}]_{qE2}$-$(Y^{LE3})_{qE3}$-♠,

**(LE12)**: ♣-$(Y^{LE4})_{qE4}$-$[C{=}Y^{LE5}]_{qE5}$ -$(Y^{LE6})_{qE6}$-♠

ausgewählt,
wobei pE1, pE2, pE3 jeweils 0 oder 1 sind, wobei der Fall "pE2 = 0, pE1 = pE3 = 1" ausgeschlossen ist,
wobei qE1, qE2, qE3 jeweils 0 oder 1 sind, wobei der Fall "qE2 = 0, qE1 = qE3 = 1" ausgeschlossen ist,
wobei qE4, qE5, qE6 jeweils 0 oder 1 sind, wobei mindestens einer von qE4, qE5, qE6 = 1 ist und wobei der Fall "qE5 = 0, qE4 = qE6 = 1" ausgeschlossen ist,
wobei $X^{LE2}$, $Y^{LE2}$, $Y^{LE5}$ unabhängig voneinander jeweils aus der Gruppe bestehend aus O, S ausgewählt sind,
wobei $X^{LE1}$, $X^{LE3}$, $Y^{LE1}$, $Y^{LE3}$, $Y^{LE4}$, $Y^{LE3}$ unabhängig voneinander jeweils aus der Gruppe bestehend aus O, S, NH, N[(Halo)Alkyl] ausgewählt sind,
wobei $B^{LE1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest,
ausgewählt ist,
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LE11)** die zusätzliche Bedingung "qE3 = 0, qE2 = 1, qE1 = 1 oder qE3 = qE2 = qE1 = 0 oder qE3 = 0, qE2 = 1, qE1 = 0", in einem Aspekt die Bedingung "qE3 = qE2 = qE1 = 0", gilt, und für die Struktur **(LE12)** die zusätzliche Bedingung "qE6 = 0, qE5 = 1, qE4 = 1 oder qE6 = 0, qE5 = 1, qE4 = 0 gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^2$, weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für $L^1$ die zu X' weisende Bindung bezeichnet, für $L^{1'}$ die zu X' weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qE4, qE5, qE6 = 1" bezieht sich dabei nur auf die Definition der jeweiligen Variablen in der Struktur **(LE12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

LEE.2 In einem Aspekt des vorgenannten Punktes LEE.1 sind $X^{LE2}$, $Y^{LE2}$, $Y^{LE5}$ jeweils O und $X^{LE1}$, $X^{LE3}$, $Y^{LE1}$, $Y^{LE3}$, $Y^{LE4}$, $Y^{LE6}$ sind unabhängig voneinander jeweils aus der Gruppe bestehend aus O, NH, N(Alkyl), in einem Aspekt O, ausgewählt, und $B^{LE1}$ ist ein zweiwertiger, gegebenenfalls mindestens eine Ethergruppe aufweisender Alkylenrest.

LEE.3 In einer bevorzugteren Ausführungsform des vorgenannten Punktes LEE.2 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, ♣-C(=O)-♠, ♣-O-C(=O)-♠, ♣-(NH)-C(=O)-♠, ♣-(NAlkyl)-C(=O)-♠, ein Ethergruppen aufweisender Alkylenrest, bei dem es sich in einem Aspekt um einen Rest der Formel ♠-$(CH_2CH_{20})_{mLE1}$-♣ mit $m^{LE1}$ = ganze Zahl von 2 bis 1000, in einem Aspekt 3 bis 500, in einem weiteren Aspekt 10 bis 100, handelt,

und wobei in den Fällen, in denen $L^1$, $L^2$, $L^3$, $L^4$, $L^5$, $L^6$, $L^7$, $L^{1'}$, $L^{2'}$, $L^{3'}$ an ein Kohlenstoff der jeweiligen redoxaktiven Gruppe $R^1$, $R^2$, $R^4$, $R^5$, $R^{1'}$, $R^{2'}$, $R^{3'}$ bindet, $L^1$, $L^2$, $L^3$, $L^4$, $L^5$, $L^6$, $L^7$, $L^{1'}$, $L^{2'}$, $L^{3'}$ auch ausgewählt sein können aus ♣-$(CH_2CH_{20})_{mLE2}$-♠ mit $m^{LE2}$ = ganze Zahl von 2 bis 1000, in einem Aspekt 3 bis 500, in einem weiteren Aspekt 10 bis 100, ♣-C(=O)-O-♠, ♣-C(=O) -(NH)-♠, ♣- C(=O)-(NAlkyl)-♠, ♣-O-♠, ♣-S-♠,

und wobei "♠" und "♣" die unter Punkt LEE.1 genannte Bedeutung haben.

11.1.2.6 Aspekte der Linkereinheiten bei redoxaktiver Triphenylaminfunktion (G)

LGG.1 In einer in einem weiteren Aspekten Ausführungsform des zweiten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Triphenylaminfunktion **(G)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt GG.1 definierten Strukturen aufweisen und auch in dem Fall, in dem das in der Hauptkette nichtkonjugierte, organische Redox-Polymer **P** gemäß dem zweiten Aspekt der Erfindung eine Struktur wie unter Punkt GG.2, in einem Aspekt GG.3, in einem weiteren Aspekt GG.4 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LG11)**, **(LG12)** mit

**(LG11)**: $♣\text{-}(X^{LG1})_{pG1}\text{-}[C{=}X^{LG2}]_{pG2}\text{-}(X^{LG3})_{pG3}\text{-}B^{LG1}\text{-}(Y^{LG1})_{qG1}\text{-}[C{=}Y^{LG2}]_{qG2}\text{-}(Y^{LG3})_{qG3}\text{-}♠$,

**(LG12)**: $♣\text{-}(Y^{LG4})_{qG4}\text{-}[C{=}Y^{LG5}]_{qG5}\text{ -}(Y^{LG6})_{qG6}\text{-}♠$

ausgewählt,
wobei pG1, pG2, pG3 jeweils 0 oder 1 sind, wobei der Fall "pG2 = 0, pG1 = pG3 = 1" ausgeschlossen ist,
wobei qG1, qG2, qG3 jeweils 0 oder 1 sind, wobei der Fall "qG2 = 0, qG1 = qG3 = 1" ausgeschlossen ist,
wobei qG4, qG5, qG6 jeweils 0 oder 1 sind, wobei mindestens einer von qG4, qG5, qG6 = 1 ist und wobei der Fall "qG5 = 0, qG4 = qG6 = 1" ausgeschlossen ist,
wobei $X^{LG2}$, $Y^{LG2}$, $Y^{LG5}$ unabhängig voneinander jeweils aus der Gruppe bestehend aus O, S ausgewählt sind,
wobei $X^{LG1}$, $X^{LG3}$, $Y^{LG1}$, $Y^{LG3}$, $Y^{LG4}$, $Y^{LG6}$ unabhängig voneinander jeweils aus der Gruppe bestehend aus O, S, NH, N[(Halo)Alkyl] ausgewählt sind,
wobei $B^{LG1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest,
ausgewählt ist,
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LG11)** die zusätzliche Bedingung "qG3 = 0, qG2 = 1, qG1 = 1 oder qG3 = qG2 = qG1 = 0 oder qG3 = 0, qG2 = 1, qG1 = 0", in einem Aspekt die Bedingung "qG3 = qG2 = qG1 = 0", gilt, und für die Struktur **(LG12)** die zusätzliche Bedingung "qG6 = 0, qG5 = 1, qG4 = 1 oder qG6 = 0, qG5 = 1, qG4 = 0 gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qG4, qG5, qG6 = 1" bezieht sich dabei nur auf die Definition der jeweiligen Variablen in der Struktur **(LG12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils

auch direkte Bindungen sein können.

LGG.2 In einem Aspekt des vorgenannten Punktes LGG.1 sind $X^{LG2}$, $Y^{LG2}$, $Y^{LG5}$ jeweils O und $X^{LG1}$, $X^{LG3}$, $Y^{LG1}$, $Y^{LG3}$, $Y^{LG4}$, $Y^{LG6}$ sind unabhängig voneinander jeweils aus der Gruppe bestehend aus O, NH, N(Alkyl), in einem Aspekt O, ausgewählt und $B^{LG1}$ ist aus der Gruppe bestehend aus ein zweiwertiger, gegebenenfalls mindestens eine Ethergruppe aufweisender Alkylenrest, zweiwertiger (hetero)aromatischer Rest ausgewählt.

LGG.3 In einer bevorzugteren Ausführungsform des vorgenannten Punktes LGG.2 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, ♣-C(=O)-♠, ♣-O-C(=O)-♠, ♣-(NH)-C(=O)-♠, ♣-(NAlkyl)-C(=O)-♠, mindestens eine Gruppe ausgewählt aus Ether, Carbonylgruppe, Carbonsäureester, Carbonsäureamidgruppe aufweisender Alkylenrest,

$$♣\text{-}[X^{LG4}]_{pG4}\text{-}[C(=O)]_{pG5}\text{-}[X^{LG5}]_{pG6}\text{-}B^{LG4}\text{-}[X^{LG6}]_{qG6}\text{-}[C(=O)]_{qG7}\text{-}♠,$$

wobei $X^{LG4}$, $X^{LG5}$, $X^{LG6}$ unabhängig voneinander jeweils aus der Gruppe bestehend aus O, S, NH, NAlkyl, N(Haloalkyl), in einem Aspekt O, ausgewählt sind,

und wobei $p_{G4}$, $p_{G5}$, $p_{G6}$ jeweils 0 oder 1 sind, wobei der Fall "$p_{G5} = 0$, $p_{G4} = p_{G6} = 1$" ausgeschlossen ist,

und wobei $q_{G6}$, $q_{G7}$ jeweils 0 oder 1 sind, wobei der Fall "$q_{G7} = 0$, $q_{G6} = 1$" ausgeschlossen ist, und wobei $B^{LG4}$ aus der Gruppe bestehend aus zweiwertige (hetero)aromatische Gruppe, bei der es sich in einem Aspekt um Benzylen oder Phenylen handelt,

Alkylengruppe, die Ethergruppen und/oder Carbonylgruppen aufweisen kann, ausgewählt ist, und $B^{LG4}$ in einem Aspekt eine Phenylengruppe oder eine Alkylengruppe, in einem weiteren Aspekt eine Methylengruppe, Ethylengruppe, Propylengruppe, Butylengruppe, Pentylengruppe oder Hexylengruppe ist,

und in einem weiteren Aspekt sind in der bevorzugteren Ausführungsform des vorgenannten Punktes LGG.2 $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, ♣-C(=O)-♠, ♣-O-C(=O)-♠, ♣-(NH)-C(=O)-♠, ♣-(NAlkyl)-C(=O)-♠, am bevorzugtesten aus direkte Bindung, Methylen ausgewählt,

und wobei "♠" und "♣" die unter Punkt LGG.1 genannte Bedeutung haben.

### 11.1.2.7 Aspekte der Linkereinheiten bei redoxaktiver Viologenfunktion **(H)**

LHH.1 In einem weiteren Aspekt des zweiten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Viologenfunktion **(H)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt HH.1, in einem Aspekt die unter dem obigen Punkt HH.2 definierten Strukturen aufweisen und auch in dem Fall, in dem das in der Hauptkette nichtkonjugierte, organische Redox-Polymer **P** gemäß dem zweiten Aspekt der Erfindung eine Struktur wie unter Punkt HH.3 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LH11)**, **(LH12)** mit

**(LH11)**: $$♣\text{-}(X^{LH1})_{pH1}\text{-}[C{=}X^{LH2}]_{pH2}\text{-}(X^{LH3})_{pH3}\text{-}B^{LH1}\text{-}(Y^{LH1})_{qH1}\text{-}[C{=}Y^{LH2}]_{qH2}\text{-}(Y^{LH3})_{qH3}\text{-}♠,$$

**(LH12)**: $$♣\text{-}(Y^{LH4})_{qH4}\text{-}[C{=}Y^{LH5}]_{qH5}\text{-}(Y^{LH6})_{qH6}\text{-}♠$$

ausgewählt,

wobei pH1, pH2, pH3 jeweils 0 oder 1 sind, wobei der Fall "pH2 = 0, pH1 = pH3 = 1" ausgeschlossen ist,

wobei qH1, qH2, qH3 jeweils 0 oder 1 sind, wobei der Fall "qH2 = 0, qH1 = qH3 = 1" ausgeschlossen ist,

wobei qH4, qH5, qH6 jeweils 0 oder 1 sind, wobei mindestens einer von qH4, qH5, qH6 = 1 ist wobei der Fall "qH5 = 0, qH4 = qH6 = 1" ausgeschlossen ist,

wobei $X^{LH2}$, $Y^{LH2}$, $Y^{LH5}$ unabhängig voneinander jeweils aus der Gruppe bestehend aus O, S ausgewählt sind,

wobei $X^{LH1}$, $X^{LH3}$, $Y^{LH1}$, $Y^{LH3}$, $Y^{LH4}$, $Y^{LH6}$ unabhängig voneinander jeweils aus der Gruppe bestehend aus O, S,

NH, N[(Halo)Alkyl] ausgewählt sind,
wobei $B^{LH1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest,
ausgewählt ist,
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LH11)** die zusätzliche Bedingung "qH3 = 0, qH2 = 1, qH1 = 1 oder qH3 = qH2 = qH1 = 0 oder qH3 = 0, qH2 = 1, qH1 = 0", in einem Aspekt die Bedingung "qH3 = qH2 = qH1 = 0", gilt, und für die Struktur **(LH12)** die zusätzliche Bedingung "qH6 = 0, qH5 = 1, qH4 = 1 oder qH6 = 0, qH5 = 1, qH4 = 0" gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für $L^1$ die zu X' weisende Bindung bezeichnet, für $L^{1'}$ die zu X' weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qH4, qH5, qH6 = 1" bezieht sich dabei nur auf die Definition der jeweiligen Variablen in der Struktur **(LH12)** und soll nicht ausschließen, dass $L^1$, $L^2$, $L^3$, $L^4$, $L^5$, $L^6$, $L^7$, $L^{1'}$, $L^{2'}$, $L^{3'}$ jeweils auch direkte Bindungen sein können.

LHH.2 In einem Aspekt des vorgenannten Punktes LHH.1 sind $X^{LH2}$, $Y^{LH2}$, $Y^{LH5}$ jeweils O und $X^{LH1}$, $X^{LH3}$, $Y^{LH1}$, $Y^{LH3}$, $Y^{LL4}$, $Y^{LH6}$ sind unabhängig voneinander jeweils aus der Gruppe bestehend aus O, NH, N(Alkyl), in einem Aspekt O, ausgewählt, und $B^{LH1}$ ist aus der Gruppe bestehend aus zweiwertiger, gegebenenfalls mindestens eine Ethergruppe aufweisender Alkylenrest, zweiwertiger (hetero)aromatischer Rest ausgewählt.

LHH.3 In einer bevorzugteren Ausführungsform des vorgenannten Punktes LHH.2, insbesondere dann, wenn $R^1$, $R^{1'}$ die unter Punkt HH.1 gezeigte Struktur **(H1)** aufweisen, sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen, Ethylen, Propylen, Butylen, Pentylen, Hexylen, in einem weiteren Aspekt Propylen ist, zweiwertige (hetero)aromatische Gruppe, bei der es sich in einem Aspekt um Benzylen oder Phenylen handelt, am allerbevorzugtesten um Phenylen handelt, ausgewählt.

11.1.2.8 Aspekte der Linkereinheiten bei redoxaktiver Ferrocenfunktion **(J)**

LJJ.1 In einer in einem weiteren Aspekt des zweiten Aspekts der vorliegenden Erfindung ist in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ in den Strukturen **(I), (II)** bzw. **(III)** gemäß dem zweiten Aspekt der Erfindung, wie er unter Punkt II.1.$\alpha$) und Punkt II.1.$\beta$) definiert ist, jeweils eine redoxaktive Ferrocenfunktion **(J)** sind, und insbesondere in den Fällen, in denen die Reste $R^1$, $R^2$, $R^4$, $R^5$, $R^{1'}$, $R^{2'}$, $R^{3'}$ bzw. die Reste $R^1$, $R^2$, $R^4$, $R^5$ bzw. die Reste $R^1$, $R^{1'}$ bzw. der Rest $R^1$ die unter dem obigen Punkt JJ.1 definierten Strukturen aufweisen und auch in dem Fall, in dem das in der Hauptkette nichtkonjugierte, organische Redox-Polymer **P** gemäß dem zweiten Aspekt der Erfindung eine Struktur wie unter Punkt JJ.2 definiert umfasst,

$L^1$, $L^2$, $L^3$, $L^4$, $L^5$, $L^6$, $L^7$, $L^{1'}$, $L^{2'}$, $L^{3'}$ dann in einem Aspekt ausgewählt aus der Gruppe bestehend aus direkte Bindung, **(LJ11), (LJ12)** mit

**(LJ11)**: $♣\text{-}(X^{LJ1})_{pJ1}\text{-}[C{=}X^{LJ2}]_{pJ2}\text{-}(X^{LJ3})_{pJ3}\text{-}B^{LJ1}\text{-}(Y^{LJ1})_{qJ1}\text{-}[C{=}Y^{LJ2}]_{qJ2}\text{-}(Y^{LJ3})_{qJ3}\text{-}♠$,

**(LJ12)**: $♣\text{-}(Y^{LJ4})_{qJ4}\text{-}[C{=}Y^{LJ5}]_{qJ5}\text{-}(Y^{LJ6})_{qJ6}\text{-}♠$

ausgewählt,

wobei pJ1, pJ2, pJ3 jeweils 0 oder 1 sind, wobei der Fall "pJ2 = 0, pJ1 = pJ3 = 1" ausgeschlossen ist,
wobei qJ1, qJ2, qJ3 jeweils 0 oder 1 sind, wobei der Fall "qJ2 = 0, qJ1 = qJ3 = 1" ausgeschlossen ist,
wobei qJ4, qJ5, qJ6 jeweils 0 oder 1 sind, wobei mindestens einer von qJ4, qJ5, qJ6 = 1 ist und wobei der Fall "qJ5 = 0, qJ4 = qJ6 = 1" ausgeschlossen ist,
wobei $X^{LJ2}$, $Y^{LJ2}$, $Y^{LJ5}$ unabhängig voneinander jeweils aus der Gruppe bestehend aus O, S ausgewählt sind,
wobei $X^{LJ1}$, $X^{LJ3}$, $Y^{LJ1}$, $Y^{LJ3}$, $Y^{LJ4}$, $Y^{LJ6}$ unabhängig voneinander jeweils aus der Gruppe bestehend aus O, S, NH, N[(Halo)Alkyl] ausgewählt sind,
wobei $B^{LJ1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest,
ausgewählt ist,
und wobei in den Fällen, in denen $L^1$, $L^2$, $L^3$, $L^4$, $L^5$, $L^6$, $L^7$, $L^{1'}$, $L^{2'}$, $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$, $R^{3'}$ bindet, für die Struktur **(LJ11)** die zusätzliche Bedingung "qJ3 = 0, qJ2 = 1, qJ1 = 1 oder qJ3 = qJ2 = qJ1 = 0 oder qJ3 = 0, qJ2 = 1, qJ1 = 0", in einem Aspekt die Bedingung "qJ3 = qJ2 = qJ1 = 0", gilt, und für die Struktur **(LJ12)** die zusätzliche Bedingung "qJ6 = 0, qJ5 = 1, qJ4 = 1 oder qJ6 = 0, qj5 = 1, qH4 = 0" gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet.

Die Bedingung "wobei mindestens einer von qJ4, qJ5, qJ6 = 1" bezieht sich dabei nur auf die Definition der jeweiligen Variablen in der Struktur **(LJ12)** und soll nicht ausschließen, dass $L^1$, $L^2$, $L^3$, $L^4$, $L^5$, $L^6$, $L^7$, $L^{1'}$, $L^{2'}$, $L^{3'}$jeweils auch direkte Bindungen sein können.

LJJ.2 In einem Aspekt des vorgenannten Punktes LJJ.1 sind $X^{LJ2}$, $Y^{LJ2}$, $Y^{LJ5}$ jeweils O und $X^{LJ1}$, $X^{LJ3}$, $Y^{LJ1}$, $Y^{LJ3}$, $Y^{LJ4}$, $Y^{LJ6}$ unabhängig voneinander jeweils aus der Gruppe bestehend aus O, NH, N(Alkyl), in einem Aspekt O, ausgewählt, und $B^{LJ1}$ ist ein zweiwertiger, gegebenenfalls mindestens eine Ethergruppe aufweisender Alkylenrest.

LJJ.3 In einer bevorzugteren Ausführungsform des vorgenannten Punktes LJJ.2 sind $L^1$, $L^2$, $L^3$, $L^4$, $L^5$, $L^6$, $L^7$, $L^{1'}$, $L^{2'}$, $L^{3'}$ aus der Gruppe bestehend aus direkte Bindung, Alkylenrest, der in einem Aspekt Methylen ist, Phenylen, ♣-C(=O)-♠, ♣O-C(=O)-♠, ♣-(NH)-C(=O)-♠, ♣-(NAlkyl)-C(=O)-♠, ♣-C(=O)-O-♠, ♣-C(=O)-(NH)-♠, ♣-C(=O)-(NAlkyl)-♠, ♣-O-♠, ♣-S-♠,
in einem weiteren Aspekt unabhängig voneinander jeweils aus der Gruppe bestehend aus direkte Bindung, ♣-O-C(=O)-♠,♣-C(=O)-O-♠ ausgewählt.

11.1.2.9 Aspekte der Linkereinheiten, falls $R^{1'}$, $R^{2'}$, $R^{3'}$ jeweils Wasserstoff

LKK.1 In einem weiteren Aspekt des zweiten Aspekts der vorliegenden Erfindung ist in den Fällen, in denen die Reste $R^{1'}$, $R^{2'}$, $R^{3'}$ bzw. der Rest $R^{1'}$ in den Strukturen **(I), (II)** bzw. **(III)** gemäß dem zweiten Aspekt der Erfindung, wie er unter Punkt II.1.α) und Punkt II.1.β) definiert ist, und insbesondere in den vorbeschriebenen Fällen AA.5, BB.3, CC.6, CC.7, DD.7, EE.6, GG.2, GG.3, GG.4, HH.3, JJ.2 jeweils ein Wasserstoffrest sind, $L^{1'}$, $L^{2'}$, $L^{3'}$ dann in einem Aspekt ausgewählt aus der Gruppe bestehend aus direkte Bindung, **(LK11), (LK12)** mit

**(LK11)**: ♣-$(X^{LK1})_{pK1}$-$[C=X^{LK2}]_{pK2}$-$(X^{LK3})_{pK3}$-$B^{LK1}$-$(Y^{LK1})_{qK1}$-$[C=Y^{LK2}]_{qK2}$-$(Y^{LK3})_{qK3}$-♠,

**(LK12)**: ♣-$(Y^{LK4})_{qK4}$-$[C=Y^{LK5}]_{qK5}$-$(Y^{LK6})_{qK6}$-♠

ausgewählt,
wobei pK1, pK2, pK3 jeweils 0 oder 1 sind, wobei der Fall "pK2 = 0, pK1 = pK3 = 1" ausgeschlossen ist,
wobei qK1, qK2, qK3 jeweils 0 oder 1 sind, wobei der Fall "qK2 = 0, qK1 = qK3 = 1" ausgeschlossen ist,
wobei qK4, qK5, qK6 jeweils 0 oder 1 sind, wobei mindestens einer von qK4, qK5, qK6 = 1 ist und wobei der Fall "qK5 = 0, qK4 = qK6 = 1" ausgeschlossen ist,
wobei $X^{LK2}$, $Y^{LK2}$, $Y^{LK5}$ unabhängig voneinander jeweils aus der Gruppe bestehend aus O, S ausgewählt sind,
wobei $X^{LK1}$, $X^{LK3}$, $Y^{LK1}$, $Y^{LK3}$, $Y^{LK4}$, $Y^{LK6}$ unabhängig voneinander jeweils aus der Gruppe bestehend aus O, S, NH, N[(Halo)Alkyl] ausgewählt sind,
wobei $B^{LK1}$ aus der Gruppe bestehend aus
zweiwertiger (hetero)aromatischer Rest,
zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest,
ausgewählt ist,
und wobei "♠" für $L^{1'}$ die zu $R^{1'}$ weisende Bindung bezeichnet, für $L^{2'}$ die zu $R^{2'}$ weisende Bindung bezeichnet, für $L^{3'}$ die zu $R^{3'}$ weisende Bindung bezeichnet,
und wobei "♣" für $L^{1'}$ die zu X' weisende Bindung bezeichnet, für $L^{2'}$ die zu $X^2$ weisende Bindung bezeichnet, für $L^{3'}$ die zu $X^3$ weisende Bindung bezeichnet.

Die Bedingung "wobei mindestens einer von qK4, qK5, qK6 = 1" bezieht sich dabei nur auf die Definition der jeweiligen Variablen in der Struktur **(LK12)** und soll nicht ausschließen, dass $L^{1'}$, $L^{2'}$, $L^{3'}$ jeweils auch direkte Bindungen sein können.
LKK.2 In einem Aspekt des vorgenannten Punktes LKK.1 sind $X^{LK2}$, $Y^{LK2}$, $Y^{LK5}$ jeweils O, und $X^{LK1}$, $X^{LK3}$, $Y^{LK1}$, $Y^{LK3}$, $Y^{LK4}$, $Y^{LK6}$ sind jeweils O, und $B^{LK1}$ ist aus der Gruppe bestehend aus Phenylenrest, Benzylenrest, zweiwertiger, gegebenenfalls mindestens eine Gruppe ausgewählt aus Ether, aufweisender Alkylenrest, ausgewählt.
LK.3 In einem Aspekt der vorgenannten Punkte LKK.1 und LKK.2 sind $L^{1'}$, $L^{2'}$, $L^{3'}$ jeweils eine direkte Bindung.

11.1.3 Polymerisierte Gruppen $X^1$, $X^2$, $X^3$ $X^4$, $X^5$

Die für $X^1$, $X^2$, $X^3$, $X^4$, $X^5$ in den Strukturen **(I)**, **(II)** bzw. **(III)** gemäß dem zweiten Aspekt der Erfindung, wie er unter Punkt II.1.α) und Punkt II.1.β) definiert ist, und insbesondere in den vorbeschriebenen Fällen AA.5, BB.3, CC.6, CC.7, DD.7, EE.6, GG.2, GG.3, GG.4, HH.3, JJ.2 auswählbaren, nichtkonjugierte organische Gruppe sind weiter beschränkt darauf, dass in dem durch diese Gruppen gebildeten Rückgrat keine Konjugation auftreten darf. Dem Fachmann sind solche Gruppen bekannt. Sie werden durch Polymerisationsreaktion aus einer Gruppe gebildet, die aus einer organischen Doppelbindung, einer organischen Dreifachbindung, einem Oxiran oder einem Aziridin besteht, oder sind jeweils eine nichtkonjugierte organische Gruppe, welche durch eine polymeranaloge Reaktion gebildet wird. Solche Gruppen sind beispielsweise in der WO 2015/003725 A1 beschrieben.
Wesentlich im Sinne der Erfindung ist, dass in der Hauptkette, also dem Polymerrückgrat von **P,** keine Konjugation, also keine π-Elektronen-Detokatisierung stattfindet. Dies kann dadurch gewährleistet werden, dass in der Hauptkette nur $sp^3$-Bindungen auftreten oder sp- und $sp^2$-Bindungen strukturell so isoliert vorliegen, dass keine Konjugation auftritt.
Der Fachmann weiß konjugierte Systeme von nichtkonjugierten zu unterscheiden. So sind zum Beispiel Poly(thiophen), Poly(pyridin), Poly(pyrrolidin), Poly(imid) innerhalb ihres Polymerrückgrats konjugiert und bilden in der Hauptkette eine Konjugation aus, können also keine nichtkonjugierten organischen Redox-Polymere bilden. Überraschenderweise wurde festgestellt, dass auch Polyacetylenderivate im Sinne der Erfindung im Polymerrückgrat einsetzbar sind, da innerhalb dieses Rückgrats zwar benachbarte Doppelbindungen vorliegen, aber aufgrund der Peierls-Verzerrung keine Konjugation stattfindet.
Diese Voraussetzung hinsichtlich der Nichtkonjugation betrifft im Sinne der Erfindung nur das Rückgrat des Polymers **P,** welches in den Strukturen **(I)**, **(II)**, und **(III)** durch die Reste $X^1$, $X^2$, $X^3$, $X^4$ bzw. $X^5$ und, falls vorhanden, die Spacereinheiten $Y^1$, $Y^2$, $Y^3$, $Y^4$ bzw. $Y^5$ (definiert unten im Abschnitt II.1.4) gebildet wird. Innerhalb der vom Polymer umfassten redoxaktiven Funktionen, also innerhalb der in den Strukturen **(I)**, **(II)**, und **(III)** durch die Reste $R^1$, $R^2$, $R^4$ bzw. $R^5$ dargestellten Reste, und für den Fall, dass es sich bei $R^{1'}$, $R^{2'}$ bzw. $R^{3'}$ um einen redoxaktiven Rest handelt, auch innerhalb dieser, kann natürlich eine Konjugation, also eine Delokalisierung der π-Elektronen auftreten.
II.1.3.1
Im Sinne der Erfindung sind die Reste $X^1$, $X^2$, $X^3$, $X^4$, $X^5$ in den Strukturen **(I)**, **(II)**, und **(III)** gemäß dem zweiten Aspekt der Erfindung, wie er unter Punkt II.1.α) und Punkt II.1.β) definiert ist, und insbesondere in den vorbeschriebenen

Fällen AA.5, BB.3, CC.6, CC.7, DD.7, EE.6, GG.2, GG.3, GG.4, HH.3, JJ.2 unabhängig voneinander jeweils nichtkonjugierte organische Gruppen, die aus den nachfolgenden Strukturen **(X1), (X2), (X3), (X4), (X5),** in einem Aspekt aus den Strukturen **(X1), (X2), (X3), (X5),** in einem weiteren Aspekt aus den Strukturen **(X1), (X2), (X5)** mit

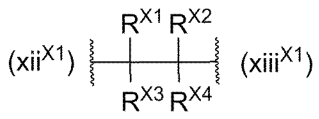 ; 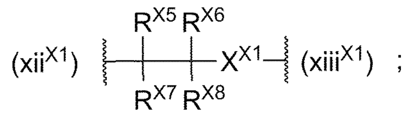 ; 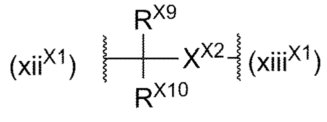 ;

**(X1)** **(X2)** **(X3)**

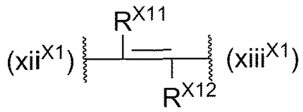 ; 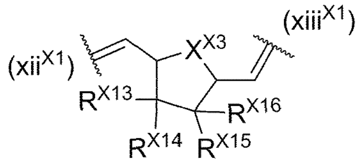 ;

**(X4)** **(X5)**

ausgewählt sind,

wobei, im Falle dass **(X1)** = $X^1$, einer von $R^{X1}$, $R^{X2}$ $R^{X3}$, $R^{X4}$ die Bindung zu L' und ein anderer von $R^{X1}$, $R^{X2}$ $R^{X3}$, $R^{X4}$ die Bindung zu $L^{1'}$ bezeichnet,

wobei, im Falle dass **(X1)** = $X^2$, einer von $R^{X1}$, $R^{X2}$ $R^{X3}$, $R^{X4}$ die Bindung zu $L^2$ und ein anderer von $R^{X1}$, $R^{X2}$ $R^{X3}$, $R^{X4}$ die Bindung zu $L^{2'}$ bezeichnet,

wobei, im Falle dass **(X1)** = $X^3$, einer von $R^{X1}$, $R^{X2}$ $R^{X3}$, $R^{X4}$ die Bindung zu $L^3$ und ein anderer von $R^{X1}$, $R^{X2}$ $R^{X3}$, $R^{X4}$ die Bindung zu $L^{3'}$ bezeichnet,

wobei, im Falle dass **(X1)** = $X^4$, einer von $R^{X1}$, $R^{X2}$ $R^{X3}$, $R^{X4}$ die Bindung zu $L^4$ und ein anderer von $R^{X1}$, $R^{X2}$ $R^{X3}$, $R^{X4}$ die Bindung zu $L^6$ bezeichnet,

wobei, im Falle dass **(X1)** = $X^5$, einer von $R^{X1}$, $R^{X2}$ $R^{X3}$, $R^{X4}$ die Bindung zu $L^5$ und ein anderer von $R^{X1}$, $R^{X2}$ $R^{X3}$, $R^{X4}$ die Bindung zu $L^7$ bezeichnet,

wobei, im Falle dass **(X2)** = $X^1$, einer von $R^{X5}$, $R^{X6}$, $R^{X7}$, $R^{X8}$ die Bindung zu $L^1$ und ein anderer von $R^{X5}$, $R^{X6}$, $R^{X7}$, $R^{X8}$ die Bindung zu $L^{1'}$ bezeichnet,

wobei, im Falle dass **(X2)** = $X^2$, einer von $R^{X5}$, $R^{X6}$, $R^{X7}$, $R^{X8}$ die Bindung zu $L^2$ und ein anderer von $R^{X5}$, $R^{X6}$, $R^{X7}$, $R^{X8}$ die Bindung zu $L^{2'}$ bezeichnet,

wobei, im Falle dass **(X2)** = $X^3$, einer von $R^{X5}$, $R^{X6}$, $R^{X7}$, $R^{X8}$ die Bindung zu $L^3$ und ein anderer von $R^{X5}$, $R^{X6}$, $R^{X7}$, $R^{X8}$ die Bindung zu $L^{3'}$ bezeichnet,

wobei, im Falle dass **(X2)** = $X^4$, einer von $R^{X5}$, $R^{X6}$, $R^{X7}$, $R^{X8}$ die Bindung zu $L^4$ und ein anderer von $R^{X5}$, $R^{X6}$, $R^{X7}$, $R^{X8}$ die Bindung zu $L^6$ bezeichnet,

wobei, im Falle dass **(X2)** = $X^5$, einer von $R^{X5}$, $R^{X6}$, $R^{X7}$, $R^{X8}$ die Bindung zu $L^5$ und ein anderer von $R^{X5}$, $R^{X6}$, $R^{X7}$, $R^{X8}$ die Bindung zu $L^7$ bezeichnet,

wobei, im Falle dass **(X3)** = $X^1$, $R^{X9}$ die Bindung zu $L^1$ und $R^{X10}$ die Bindung zu $L^{1'}$ bezeichnet,

wobei, im Falle dass **(X3)** = $X^2$, $R^{X9}$ die Bindung zu $L^2$ und $R^{X10}$ die Bindung zu $L^{2'}$ bezeichnet,

wobei, im Falle dass **(X3)** = $X^3$, $R^{X9}$ die Bindung zu $L^3$ und $R^{X10}$ die Bindung zu $L^{3'}$ bezeichnet,

wobei, im Falle dass **(X3)** = $X^4$, $R^{X9}$ die Bindung zu $L^4$ und $R^{X10}$ die Bindung zu $L^6$ bezeichnet,

wobei, im Falle dass **(X3)** = $X^5$, $R^{X9}$ die Bindung zu $L^5$ und $R^{X10}$ die Bindung zu $L^7$ bezeichnet,

wobei, im Falle dass **(X4)** = $X^1$, einer von $R^{X11}$, $R^{X12}$ die Bindung zu $L^1$ und der andere von $R^{X11}$, $R^{X12}$ die Bindung zu $L^{1'}$ bezeichnet,

wobei, im Falle dass **(X4)** = $X^2$, einer von $R^{X11}$, $R^{X12}$ die Bindung zu $L^2$ und der andere von $R^{X11}$, $R^{X12}$ die Bindung zu $L^{2'}$ bezeichnet,

wobei, im Falle dass **(X4)** = $X^3$, einer von $R^{X11}$, $R^{X12}$ die Bindung zu $L^3$ und der andere von $R^{X11}$, $R^{X12}$ die Bindung zu $L^{3'}$ bezeichnet,

wobei, im Falle dass **(X4)** = $X^4$, einer von $R^{X11}$, $R^{X12}$ die Bindung zu $L^4$ und der andere von $R^{X11}$, $R^{X12}$ die Bindung zu $L^6$ bezeichnet,

wobei, im Falle dass **(X4)** = $X^5$, einer von $R^{X11}$, $R^{X12}$ die Bindung zu $L^5$ und der andere von $R^{X11}$, $R^{X12}$ die Bindung zu $L^7$ bezeichnet,

wobei, im Falle dass **(X5)** = $X^1$, einer von $R^{X13}$, $R^{X14}$, $R^{X15}$, $R^{X16}$ die Bindung zu $L^1$ bezeichnet und ein anderer von $R^{X13}$, $R^{X14}$, $R^{X15}$, $R^{X16}$ die Bindung zu $L^{1'}$ bezeichnet,

wobei, im Falle dass **(X5)** = $X^2$, einer von $R^{X13}$, $R^{X14}$, $R^{X15}$, $R^{X16}$ die Bindung zu $L^2$ bezeichnet und ein anderer von $R^{X13}$, $R^{X14}$, $R^{X15}$, $R^{X16}$ die Bindung zu $L^{2'}$ bezeichnet,
wobei, im Falle dass **(X5)** = $X^3$, einer von $R^{X13}$, $R^{X14}$, $R^{X15}$, $R^{X16}$ die Bindung zu $L^3$ bezeichnet und ein anderer von $R^{X13}$, $R^{X14}$, $R^{X15}$, $R^{X16}$ die Bindung zu $L^{3'}$ bezeichnet,
wobei, im Falle dass **(X5)** = $X^4$, einer von $R^{X13}$, $R^{X14}$, $R^{X15}$, $R^{X16}$ die Bindung zu $L^4$ bezeichnet und ein anderer von $R^{X13}$, $R^{X14}$, $R^{X15}$, $R^{X16}$ die Bindung zu $L^6$ bezeichnet,
wobei, im Falle dass **(X5)** = $X^5$, einer von $R^{X13}$, $R^{X14}$, $R^{X15}$, $R^{X16}$ die Bindung zu $L^5$ bezeichnet und ein anderer von $R^{X13}$, $R^{X14}$, $R^{X15}$, $R^{X16}$ die Bindung zu $L^7$ bezeichnet,
und wobei diejenigen von $R^{X1}$, $R^{X2}$ $R^{x3}$, $R^{X4}$, $R^{X5}$, $R^{X6}$, $R^{X7}$, $R^{X8}$, $R^{X13}$, $R^{X14}$, $R^{X15}$, $R^{X16}$, die keine Bindung zu $L^1$, $L^{1'}$, $L^2$, $L^{2'}$, $L^3$, $L^{3'}$, $L^4$, $L^5$, $L^6$ oder $L^7$ bezeichnen, Reste sind, die unabhängig voneinander jeweils aus der Gruppe bestehend aus
Wasserstoff,
(hetero)aromatischer Rest,
gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester,
Carbonsäureamidgruppe, Sulfonsäureester, Phosphorsäureester aufweisender aliphatischer Rest,
in einem Aspekt aus der Gruppe bestehend aus Wasserstoff, Alkylgruppe, Halogen, Cyano, Phenyl, Benzyl ausgewählt sind und in einem weiteren Aspekt alle Wasserstoff sind,
und wobei $X^{X1}$, $X^{X2}$ unabhängig voneinander jeweils aus der Gruppe bestehend aus O, S ausgewählt und in einem Aspekt jeweils O sind,
und wobei $X^{X3}$ aus der Gruppe bestehend aus O, S, $-CH_2-$, in einem weiteren Aspekt aus der Gruppe bestehend aus O, $-CH_2-$, ausgewählt und in einem weiteren Aspekt $-CH_2-$ ist,
und wobei $X^{X4}$, $X^{X5}$ unabhängig voneinander jeweils aus der Gruppe bestehend aus O, S, -NH-, --N(Halo)Alkyl- ausgewählt sind,
und wobei die jeweils durch ($xii^{X1}$) gekennzeichnete Bindung derjenigen entspricht, die in den Strukturen **(I), (II)** und **(III)** jeweils durch "*", "#", "&", "§" bzw. "$" gekennzeichnet ist,
und wobei die jeweils durch ($xiii^{X1}$) gekennzeichneten Bindung derjenigen entspricht, die in den Strukturen **(I), (II)** und **(III)** in den Fällen, in denen $m^1 = 0$, $m^2 = 0$, $m^3 = 0$, $m^4 = 0$ bzw. $m^5 = 0$ jeweils an "**", "##", "&&", "§§" bzw. "$$" bindet und in den Fällen, in denen $m^1 > 0$, $m^2 > 0$, $m^3 > 0$, $m^4 > 0$ bzw. $m^5 > 0$ jeweils an $Y^1$, $Y^2$, $Y^3$, $Y^4$ bzw. $Y^5$ bindet.
11.1.3.2

In einem Aspekt des vorgenannten Punktes II.1.3.1 sind die Reste $X^1$, $X^2$, $X^3$, $X^4$, $X^5$ unabhängig voneinander jeweils nichtkonjugierte organische Gruppen, die aus den nachfolgenden Strukturen **(X11), (X12), (X13), (X14), (X15),** in einem Aspekt aus den Strukturen **(X11), (X12), (X13), (X14), (X15),** in einem weiteren Aspekt aus den Strukturen **(X11), (X12), (X15)** mit

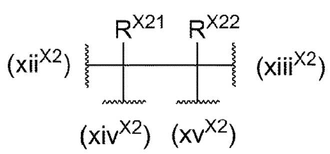 ; 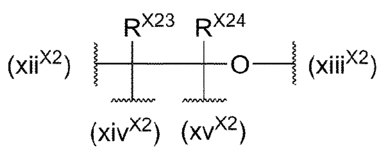 ; 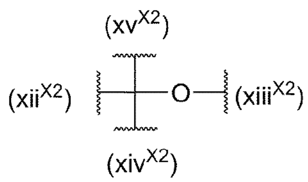 ;

**(X11)** **(X12)** **(X13)**

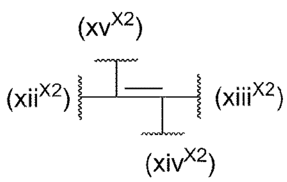 ; 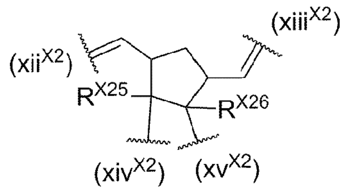 ;

**(X14)** **(X15)**

ausgewählt,

wobei, im Falle dass $X^1$ ausgewählt ist aus **(X11), (X12), (X13), (X14), (X15),** die Bindung ($xiv^{X2}$) jeweils die Bindung zu $L^1$ und die Bindung ($xv^{X2}$) jeweils die Bindung zu $L^{1'}$ bezeichnet,

wobei, im Falle dass $X^2$ ausgewählt ist aus **(X11), (X12), (X13), (X14), (X15),** die Bindung ($xiv^{X2}$) jeweils die Bindung zu $L^2$ und die Bindung ($xv^{X2}$) jeweils die Bindung zu $L^{2'}$ bezeichnet,

wobei, im Falle dass $X^3$ ausgewählt ist aus **(X11), (X12), (X13), (X14), (X15),** die Bindung ($xiv^{X2}$) jeweils die Bindung zu $L^3$ und die Bindung ($xv^{X2}$) jeweils die Bindung zu $L^{3'}$ bezeichnet,

wobei, im Falle dass $X^4$ ausgewählt ist aus **(X11), (X12), (X13), (X14), (X15),** die Bindung ($xiv^{X2}$) jeweils die Bindung zu $L^4$ und die Bindung ($xv^{X2}$) jeweils die Bindung zu $L^6$ bezeichnet,

wobei, im Falle dass $X^5$ ausgewählt ist aus **(X11), (X12), (X13), (X14), (X15),** die Bindung ($xiv^{X2}$) jeweils die Bindung zu $L^5$ und die Bindung ($xv^{X2}$) jeweils die Bindung zu $L^7$ bezeichnet,

und wobei die Reste $R^{X21}$, $R^{X22}$, $R^{X23}$, $R^{X24}$, $R^{X25}$, $R^{X26}$ unabhängig voneinander jeweils aus der Gruppe bestehend aus

Wasserstoff,

(hetero)aromatischer Rest,

gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester,

Carbonsäureamidgruppe, Sulfonsäureester, Phosphorsäureester aufweisender

aliphatischer Rest,

in einem Aspekt aus der Gruppe bestehend aus Wasserstoff, Alkylgruppe, Halogen, Cyano, Phenyl, Benzyl, ausgewählt sind, in einem Aspekt alle Wasserstoff sind,

und wobei die jeweils durch ($xii^{X2}$) gekennzeichnete Bindung derjenigen entspricht, die in den Strukturen **(I), (II)** und **(III)** jeweils durch "*", "#", "&", "§" bzw. "$" gekennzeichnet ist,

und wobei die jeweils durch ($xiii^{X2}$) gekennzeichnete Bindung derjenigen entspricht, die in den Strukturen **(I), (II)** und **(III)** in den Fällen, in denen $m' = 0$, $m^2 = 0$, $m^3 = 0$, $m^4 = 0$ bzw. $m^5 = 0$ jeweils an "**", "##", "&&", "§§" bzw. "$$" bindet und in den Fällen, in denen $m' > 0$, $m^2 > 0$, $m^3 > 0$, $m^4 > 0$ bzw. $m^5 > 0$ jeweils an $Y^1$, $Y^2$, $Y^3$, $Y^4$ bzw. $Y^5$ bindet.
II.1.3.3

In einem Aspekt des zweiten Aspektes der vorliegenden Erfindung weisen die Reste $X^1$, $X^2$, $X^3$, $X^4$, $X^5$ unabhängig voneinander jeweils die unter Punkt II.1.3.2 definierte Struktur **(X11)** auf,

wobei, im Falle dass X' die Struktur **(X11)** aufweist, die Bindung ($xiv^{X2}$) jeweils die Bindung zu $L^1$ und die Bindung ($xv^{X2}$) jeweils die Bindung zu $L^{1'}$ bezeichnet,

wobei, im Falle dass $X^2$ die Struktur **(X11)** aufweist, die Bindung ($xiv^{X2}$) jeweils die Bindung zu $L^2$ und die Bindung ($xv^{X2}$) jeweils die Bindung zu $L^{2'}$ bezeichnet,

wobei, im Falle dass $X^3$ die Struktur **(X11)** aufweist, die Bindung ($xiv^{X2}$) jeweils die Bindung zu $L^3$ und die Bindung ($xv^{X2}$) jeweils die Bindung zu $L^{3'}$ bezeichnet,

wobei, im Falle dass $X^4$ die Struktur **(X11)** aufweist, die Bindung ($xiv^{X2}$) jeweils die Bindung zu $L^4$ und die Bindung ($xv^{X2}$) jeweils die Bindung zu $L^6$ bezeichnet,

wobei, im Falle dass $X^5$ die Struktur **(X11)** aufweist, die Bindung ($xiv^{X2}$) jeweils die Bindung zu $L^5$ und die Bindung ($xv^{X2}$) jeweils die Bindung zu $L^7$ bezeichnet,

und wobei die Reste $R^{X21}$, $R^{X22}$ unabhängig voneinander jeweils aus der Gruppe bestehend aus Wasserstoff, Alkylgruppe, Halogen, Cyano, Phenyl, Benzyl ausgewählt sind,

in einem Aspekt $R^{X21}$ = Wasserstoff oder Alkyl, wobei das bevorzugteste Alkyl eine Methylgruppe ist, und $R^{X22}$ = Wasserstoff, am bevorzugtesten $R^{X21} = R^{X22}$ = Wasserstoff sind,

und wobei die durch ($xii^{X2}$) gekennzeichnete Bindung derjenigen entspricht, die in den Strukturen **(I), (II)** und **(III)** jeweils durch "*", "#", "&", "§" bzw. "$" gekennzeichnet ist,

und wobei die durch ($xiii^{X2}$) gekennzeichnete Bindung derjenigen entspricht, die in den Strukturen **(I), (II)** und **(III)** in den Fällen, in denen $m^1 = 0$, $m^2 = 0$, $m^3 = 0$, $m^4 = 0$ bzw. $m^5 = 0$ jeweils an "**", "##", "&&", "§§" bzw. "$$" bindet und in den Fällen, in denen m' > 0, $m^2 > 0$, $m^3 > 0$, $m^4 > 0$ bzw. $m^5 > 0$ jeweils an $Y^1$, $Y^2$, $Y^3$, $Y^4$ bzw. $Y^5$ bindet.

11.1.4 Nichtkonjugierte organische Spacereinheiten $Y^1$, $Y^2$, $Y^3$ $Y^4$, $Y^5$

Die für $Y^1$, $Y^2$, $Y^3$, $Y^4$, $Y^5$ in den Strukturen **(I), (II)** bzw. **(III)** gemäß dem zweiten Aspekt der Erfindung auswählbaren nichtkonjugierten organischen Spacereinheiten sind demnach weiter beschränkt darauf, dass in dem durch diese Gruppen gebildeten Rückgrat keine Konjugation auftreten darf.

II.1.4.1

Im Sinne der Erfindung sind die Reste $Y^1$, $Y^2$, $Y^3$, $Y^4$, $Y^5$ in den Strukturen **(I), (II)**, und **(III)** gemäß dem zweiten Aspekt der Erfindung, wie er unter Punkt II.1.$\alpha$) und Punkt II.1.$\beta$) definiert ist, und insbesondere in den vorbeschriebenen Fällen AA.5, BB.3, CC.6, CC.7, DD.7, EE.6, GG.2, GG.3, GG.4, HH.3, JJ.2 unabhängig voneinander jeweils nichtkonjugierte organische Spacereinheiten, die aus den nachfolgenden Strukturen **(Y1), (Y2), (Y3), (Y4), (Y5)** mit

ausgewählt sind,
wobei $R^{Y1}$, $R^{Y2}$, $R^{Y3}$, $R^{Y4}$, $R^{Y5}$, $R^{Y6}$, $R^{Y7}$, $R^{Y8}$, $R^{Y9}$, $R^{Y1°}$, $R^{Y11}$, $R^{Y12}$, $R^{Y13}$, $R^{Y14}$, $R^{Y15}$, $R^{Y16}$ unabhängig voneinander jeweils aus der Gruppe bestehend aus
Wasserstoff,
(hetero)aromatischer Rest,
gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester,
Carbonsäureamidgruppe, Sulfonsäureester, Phosphorsäureester aufweisender aliphatischer Rest,
in einem Aspekt aus der Gruppe bestehend aus Wasserstoff, Phenyl, Benzyl, (Halo)alkylgruppe, (Halo)cycloalkylgruppe, Hydroxy, Carbonsäureester, Carboxygruppe, Carbonsäureamid, wobei die (Halo)alkylgruppe auch Ethergruppen aufweisen kann,
ausgewählt sind,
und wobei $X^{Y1}$, $X^{Y2}$ unabhängig voneinander jeweils aus der Gruppe bestehend aus O, S ausgewählt und in einem Aspekt beide O sind, und wobei $X^{Y3}$ aus der Gruppe bestehend aus O, S, $-CH_2-$, in einem Aspekt O, $-CH_2-$, ausgewählt und in einem weiteren Aspekt $-CH_2-$ ist,
und wobei die durch ($xv^{Y1}$) gekennzeichneten Bindungen derjenigen entspricht, die in den Strukturen **(I), (II)** und **(III)** durch "**", "##", "&&", "§§" bzw. "$$" gekennzeichnet sind,
und wobei die durch ($xiv^{Y1}$) gekennzeichneten Bindungen derjenigen entspricht, die in den Strukturen **(I), (II)** und **(III)** an $X^1$, $X^2$, $X^3$, $X^4$ bzw. $X^5$ bindet.
11.1.4.2

In einem Aspekt des vorgenannten Punktes II.1.4.1 sind die Reste $Y^1$, $Y^2$, $Y^3$, $Y^4$, $Y^5$ in den Strukturen **(I), (II)**, und **(III)** unabhängig voneinander jeweils nichtkonjugierte organische Spacereinheiten, die aus den unter Punkt II.1.4.1 genannten Strukturen **(Y1), (Y2), (Y3), (Y5),** in einem weiteren Aspekt aus den Strukturen **(Y1), (Y2), (Y5),** in einem weiteren Aspekt aus den Strukturen **(Y1), (Y2)** ausgewählt sind und am bevorzugtesten eine Struktur **(Y1),** aufweisen,

wobei $R^{Y1}$, $R^{Y2}$, $R^{Y3}$, $R^{Y4}$, $R^{Y5}$, $R^{Y6}$, $R^{Y7}$, $R^{Y8}$, $R^{Y9}$, $R^{Y10}$, $R^{Y13}$, $R^{Y14}$, $R^{Y15}$, $R^{Y16}$ unabhängig voneinander jeweils aus der Gruppe bestehend aus Wasserstoff, Phenyl, Benzyl, (Halo)alkylgruppe, (Halo)cycloalkylgruppe, Hydroxy, Carbonsäureester, Carbonsäureamid, wobei die (Halo)alkylgruppe auch Ethergruppen aufweisen kann und in einem Aspekt aus der Gruppe bestehend aus Wasserstoff, Phenyl, Benzyl, Alkylgruppe, Carbonsäureester, Carbonsäureamid, Carboxygruppe ausgewählt ist, und in einem weiteren Aspekt aus der Gruppe bestehend aus Wasserstoff, Phenyl, Methyl, Carbonsäureester, $-C(=O)-NH_2$, Carboxygruppe ausgewählt sind, und in einem weiteren Aspekt alle Wasserstoff sind,

und wobei $X^{Y1}$, $X^{Y2}$ jeweils O sind, und wobei $X^{Y3}$ aus der Gruppe bestehend aus O, $-CH_2-$, ausgewählt und in einem weiteren Aspekt $-CH_2-$ ist.

11.1.4.3

Der Fachmann kann dabei gemäß seines Fachwissens in den Fällen, in denen ein in der Hauptkette nichtkonjugiertes, organisches Redox-Polymer P umfassend mindestens eine der Strukturen **(I), (II)** und **(III)** eine nichtkonjugierte organische Spacereinheit $Y^1$, $Y^2$, $Y^3$, $Y^4$, $Y^5$ umfasst, mit Hilfe seines Fachwissens diese nichtkonjugierte organische Spacereinheit $Y^1$, $Y^2$, $Y^3$, $Y^4$, $Y^5$ vorteilhaft entsprechend der vom jeweiligen Polymer **P** umfassten Gruppe $X^1$, $X^2$, $X^3$, $X^4$ oder $X^5$ auswählen.

In einem Aspekt des zweiten Aspektes der vorliegenden Erfindung sind die Reste $X^1$, $X^2$, $X^3$, $X^4$, $X^5$ in den Strukturen **(I), (II)**, und **(III)** unabhängig voneinander jeweils ausgewählt aus den Strukturen **(X1), (X2), (X3), (X4)** gemäß des vorgenannten Punktes II.1.3.1, in einem Aspekt unabhängig voneinander jeweils ausgewählt aus den Strukturen **(X11), (X12), (X13), (X14)** gemäß des vorgenannten Punktes II.1.3.2, in einem weiteren Aspekt unabhängig voneinander jeweils eine Struktur **(X11)** gemäß des vorgenannten Punktes 11.1.3.3,

und die Reste $Y^1$, $Y^2$, $Y^3$, $Y^4$, $Y^5$ sind unabhängig voneinander jeweils ausgewählt aus den Strukturen **(Y1), (Y2), (Y3), (Y4)** gemäß des vorgenannten Punktes II.1.4.1, in einem weiteren Aspekt gemäß des vorgenannten Punktes II.1.4.2,

oder die Reste $X^1$, $X^2$, $X^3$, $X^4$, $X^5$ in den Strukturen **(I), (II)**, und **(III)** sind unabhängig voneinander jeweils eine Struktur **(X5)** gemäß des vorgenannten Punktes II.1.3.1, in einem Aspekt eine Struktur **(X15),** gemäß des vorgenannten Punktes II.1.3.2, und die Reste $Y^1$, $Y^2$, $Y^3$, $Y^4$, $Y^5$ sind unabhängig voneinander jeweils eine Struktur **(Y5)** gemäß des vorgenannten Punktes II.1.4.1, in einem weiteren Aspekt gemäß des vorgenannten Punktes II.1.4.2.

11.1.4.4

In einer in einem weiteren Aspekt des zweiten Aspektes der vorliegenden Erfindung sind die Reste $X^1$, $X^2$, $X^3$, $X^4$, $X^5$ in den Strukturen **(I), (II)**, und **(III)** unabhängig voneinander jeweils eine Struktur **(X1)** gemäß des vorgenannten Punktes II.1.3.1, in einem Aspekt unabhängig voneinander jeweils eine Struktur **(X11)** gemäß des vorgenannten Punktes 11.1.3.2, in einem weiteren Aspekt gemäß des vorgenannten Punktes II.1.3.3, und die Reste $Y^1$, $Y^2$, $Y^3$, $Y^4$, $Y^5$ sind unabhängig voneinander jeweils eine Struktur **(Y1)** gemäß des vorgenannten Punktes II.1.4.1, in einem weiteren Aspekt gemäß des vorgenannten Punktes II.1.4.2;

oder die Reste $X^1$, $X^2$, $X^3$, $X^4$, $X^5$ in den Strukturen **(I), (II)**, und **(III)** sind unabhängig voneinander jeweils eine Struktur **(X2)** gemäß des vorgenannten Punktes II.1.3.1, in einem Aspekt unabhängig voneinander jeweils eine Struktur **(X12)** gemäß des vorgenannten Punktes II.1.3.2, und die Reste $Y^1$, $Y^2$, $Y^3$, $Y^4$, $Y^5$ sind unabhängig voneinander jeweils eine Struktur **(Y2)** gemäß des vorgenannten Punktes II.1.4.1, in einem weiteren Aspekt gemäß des vorgenannten Punktes II.1.4.2;

oder die Reste $X^1$, $X^2$, $X^3$, $X^4$, $X^5$ in den Strukturen **(I), (II)**, und **(III)** sind unabhängig voneinander jeweils eine Struktur (**X3**) gemäß des vorgenannten Punktes II.1.3.1, in einem Aspekt unabhängig voneinander jeweils eine Struktur **(X13)** gemäß des vorgenannten Punktes II.1.3.2, und die Reste $Y^1$, $Y^2$, $Y^3$, $Y^4$, $Y^5$ sind unabhängig voneinander jeweils eine Struktur **(Y3)** gemäß des vorgenannten Punktes II.1.4.1, in einem weiteren Aspekt gemäß des vorgenannten Punktes II.1.4.2;

oder die Reste $X^1$, $X^2$, $X^3$, $X^4$, $X^5$ in den Strukturen **(I), (II)**, und **(III)** sind unabhängig voneinander jeweils eine Struktur **(X4)** gemäß des vorgenannten Punktes 11.1.3.1, in einem Aspekt unabhängig voneinander jeweils eine Struktur **(X14)** gemäß des vorgenannten Punktes II.1.3.2, und die Reste $Y^1$, $Y^2$, $Y^3$, $Y^4$, $Y^5$ sind unabhängig voneinander jeweils eine Struktur **(Y4)** gemäß des vorgenannten Punktes II.1.4.1, in einem weiteren Aspekt gemäß des vorgenannten Punktes II.1.4.2;

oder die Reste $X^1$, $X^2$, $X^3$, $X^4$, $X^5$ in den Strukturen **(I), (II)**, und **(III)** sind unabhängig voneinander jeweils eine Struktur **(X5)** gemäß des vorgenannten Punktes II.1.3.1, in einem Aspekt unabhängig voneinander jeweils eine Struktur **(X15)** gemäß des vorgenannten Punktes II.1.3.2, und die Reste $Y^1$, $Y^2$, $Y^3$, $Y^4$, $Y^5$ sind unabhängig voneinander jeweils eine Struktur **(Y5)** gemäß des vorgenannten Punktes II.1.4.1, in einem weiteren Aspekt gemäß des vorgenannten Punktes II.1.4.2.

11.1.5 Verfahren zur Herstellung der erfindungsgemäßen Polymere **P**

Die im erfindungsgemäßen Verfahren zur Herstellung der Elektroden einsetzbaren Polymere **P** können gemäß dem Fachmann bekannter Verfahren erhalten werden. Die entsprechenden Verfahren werden in Muench *et al.* zusammengefasst und sind des Weiteren auch unter dem obigen Punkt I.1.5 beschrieben.

11.1.6 Vernetzungen

Die im erfindungsgemäßen Verfahren zur Herstellung der Elektroden einsetzbaren Polymere **P** können sowohl Homopolymere als auch Copolymere sein. Homopolymere sind Polymere, die nur aus einem Monomer synthetisiert wurden. Copolymere sind Polymere, die aus zwei oder mehreren Monomeren synthetisiert wurden. Als weitere Monomere ("Co-Monomere") können solche eingesetzt werden, die über eine polymerisierbare Gruppen verfügen, oder auch über zwei oder mehr polymerisierbaren Gruppen verfügen, wie zum Beispiel Divinylbenzole, Diethinylbenzole, Diethinylthianthrene, Oligo- oder Polyethylenglykoldi(meth)acrylate. Dies führt dann zu zusätzlichen Vernetzungen im Polymer. Dies ist dem Fachmann bekannt (zum Beispiel in der WO 2018/060680 A1, Absatz [0028] beschrieben). Der Vernetzungsgrad der dann erhaltenen Polymere kann nach dem Fachmann bekannten Verfahren durch die Menge des zugegebenen CoMonomers oder auch zeitlich (zum Beispiel in dem das Co-Monomer erst zugegeben wird, nachdem die Polymerisation fortgeschritten ist) gesteuert werden. Werden zwei oder mehrere Monomere bei der Synthese verwendet, so können die Monomere der Wiederholeinheiten im Polymer **P** gemäß dieser Erfindung in statistischer Verteilung, als Blöcke oder alternierend vorliegen.

Somit können die im erfindungsgemäßen Verfahren zur Herstellung von Elektroden einsetzbaren Polymere **P** auch Wiederholungseinheiten aufweisen, die auf den Einsatz von Vernetzern während der Synthese des Polymers **P** zurückzuführen sind. Es versteht sich somit von selbst, dass zwischen den Wiederholungseinheiten der Struktur **(I), (II)**, und **(III)** auch noch auf den Vernetzer zurückzuführende Wiederholungseinheiten im erhaltenen Polymer **P** vorliegen können.

Als Vernetzer eignen sich Verbindungen welche mehr als eine polymerisierbare Gruppe aufweisen, in einem Aspekt ist der Vernetzer ausgewählt aus der Gruppe bestehend aus polyfunktionelle Verbindungen basierend auf (Meth)acrylsäure, polyfunktionelle Verbindungen basierend auf Allylether, polyfunktionelle Verbindungen basierend auf vinylischen Verbindungen. Polyfunktionelle Verbindungen basierend auf (Meth)acrylsäure sind dabei besonders bevorzugt.

Polyfunktionelle Verbindungen basierend auf (Meth)acrylsäure sind insbesondere ausgewählt aus Ethylenglykoldi(meth)acrylat, Diethylenglykoldi(meth)acrylat, Triethylenglykoldi(meth)acrylat, Polyethylenglykoldi(meth)acrylat, 1,3-Propandioldi(meth)acrylat, 2,3-Butandioldi(meth)acrylat, 1,4-Butandioldi(meth)acrylat,1,5-Pentandioldi(meth)acrylat, 1,6-Hexandioldi(meth)acrylat, 1,7-Heptandioldi(meth)acrylat, 1,8-Oktandioldi(meth)acrylat, 1,9-Nonandioldi(meth)acrylat, 1,10-Dekandioldi(meth)acrylat, Trimethylolpropantri(meth)acrylat, Glyceroldi(meth)acrylat, 2-Hydroxy-3-(meth)acryloxypropyl(meth)acrylat.

Polyfunktionelle Verbindungen basierend auf Allylether sind insbesondere ausgewählt aus der Gruppe bestehend aus Diethylenglykoldiallylether, Dibutylenglykoldiallylether.

Eine polyfunktionelle Verbindung basierend auf vinylischen Verbindungen ist insbesondere Divinylbenzol.

II.2 Ionische Flüssigkeiten

Die im Schritt (a) des erfindungsgemäßen Verfahrens zur Herstellung einer Elektrode gemäß des zweiten Aspekts der Erfindung einsetzbaren ionischen Flüssigkeiten sind beschränkt und beispielsweise in WO 2004/016631 A1, WO 2006/134015 A1. US 2011/0247494 A1 oder US 2008/0251759 A1 beschrieben.

Insbesondere weist die ionische Flüssigkeit, die in Schritt (a) des erfindungsgemäßen Verfahrens zur Herstellung einer Elektrode gemäß dem zweiten Aspekt der Erfindung eingesetzt wird, die Struktur Q+A- auf.

1.2.1 Kationen der ionischen Flüssigkeiten

Dabei ist Q+ ein Kation, welches aus der Gruppe bestehend aus den nachfolgenden Strukturen **(Q1), (Q2), (Q3), (Q4), (Q5),** mit

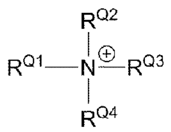 ; 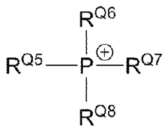 ; 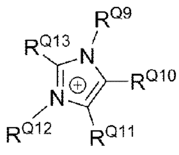 ; 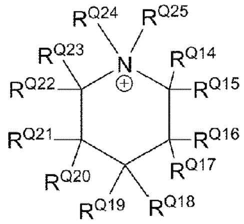 ; 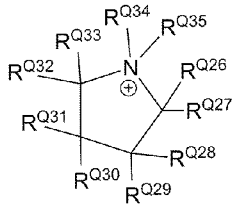 ;

(Q1) (Q2) (Q3) (Q4) (Q5)

ausgewählt ist,
wobei $R^{Q1}$, $R^{Q2}$, $R^{Q3}$, $R^{Q4}$, $R^{Q5}$, $R^{Q6}$, $R^{Q7}$, $R^{Q8}$ unabhängig voneinander jeweils aus der Gruppe bestehend aus (Halo)Alkylgruppe, Cycloalkylgruppe ausgewählt sind,
wobei $R^{Q9}$, $R^{Q10}$, $R^{Q11}$, $R^{Q12}$, $R^{Q13}$ $R^{Q14}$, $R^{Q15}$, $R^{Q16}$, $R^{Q17}$, $R^{Q18}$, $R^{Q19}$, $R^{Q20}$, $R^{Q21}$, $R^{Q22}$, $R^{Q23}$, $R^{Q24}$, $R^{Q25}$, $R^{Q26}$, $R^{Q27}$, $R^{Q28}$, $R^{Q29}$, $R^{Q30}$, $R^{Q31}$, $R^{Q32}$, $R^{Q33}$, $R^{Q34}$, $R^{Q35}$ unabhängig voneinander jeweils aus der Gruppe bestehend aus Wasserstoff, (Halo)Alkylgruppe, die mindestens eine Ethergruppe aufweisen kann, Cycloalkylgruppe ausgewählt sind.

In einem Aspekt ist Q+ ein Kation, welches aus der Gruppe bestehend aus den Strukturen **(Q1), (Q2), (Q3), (Q4), (Q5)** ausgewählt ist, wobei in einem Aspekt $R^{Q1}$, $R^{Q2}$, $R^{Q3}$, $R^{Q4}$, $R^{Q5}$, $R^{Q6}$, $R^{Q7}$, $R^{Q8}$ unabhängig voneinander jeweils aus der Gruppe bestehend aus Alkylgruppe mit 6 bis 40, in einem weiteren Aspekt 10 bis 30 Kohlenstoffatomen, Cycloalkylgruppe mit 6 bis 40, in einem weiteren Aspekt 10 bis 30 Kohlenstoffatomen ausgewählt sind,
wobei $R^{Q9}$, $R^{Q10}$, $R^{Q11}$, $R^{Q12}$., $R^{Q13}$ $R^{Q14}$, $R^{Q15}$, $R^{Q16}$, $R^{Q17}$, $R^{Q18}$ $R^{Q19}$, $R^{Q20}$, $R^{Q21}$, $R^{Q22}$ $R^{Q23}$, $R^{Q24}$, $R^{Q25}$, $R^{Q26}$, $R^{Q27}$, $R^{Q28}$, $R^{Q29}$, $R^{Q30}$, $R^{Q31}$, $R^{Q32}$, $R^{Q33}$, $R^{Q34}$, $R^{Q35}$ unabhängig voneinander jeweils aus der Gruppe bestehend aus Wasserstoff, Alkylgruppe mit 1 bis 25, in einem Aspekt 1 bis 10 Kohlenstoffatomen, die mindestens eine Ethergruppe aufweisen kann, ausgewählt sind.

In einem weiteren Aspekt ist $Q^+$ ein Kation, welches aus der Gruppe bestehend aus den Strukturen **(Q1), (Q3)** ausgewählt ist, wobei $R^{Q1}$, $R^{Q2}$, $R^{Q3}$, $R^{Q4}$ unabhängig voneinander jeweils aus der Gruppe bestehend aus Alkylgruppe mit 6 bis 30, in einem Aspekt 10 bis 25 Kohlenstoffatomen ausgewählt sind,
wobei $R^{Q6}$, $R^{Q10}$, $R^{Q11}$, $R^{Q12}$, $R^{Q13}$ unabhängig voneinander jeweils aus der Gruppe bestehend aus Wasserstoff, Alkylgruppe mit 1 bis 25, in einem Aspekt 1 bis 10 Kohlenstoffatomen ausgewählt sind und in einem weiteren Aspekt $R^{Q10}$, $R^{Q11}$, $R^{Q13}$ jeweils Wasserstoff sind und $R^{Q9}$, $R^{Q12}$ unabhängig voneinander jeweils ein Alkylrest mit 1 bis 6 Kohlenstoffatomen sind.

In einem weiteren Aspekt ist $Q^+$ ein Kation der Struktur **(Q3),** wobei $R^{Q10}$, $R^{Q11}$, $R^{Q13}$ jeweils Wasserstoff sind und $R^{Q9}$ aus der Gruppe bestehend aus Methyl, Ethyl, *n*-Propyl, *iso*-Propyl, *n*-Butyl, *sec*-Butyl, *tert*-Butyl ausgewählt ist, und $R^{Q12}$ aus der Gruppe bestehend aus Methyl, Ethyl, *n*-Propyl, *iso*-Propyl, *n*-Butyl, *sec*-Butyl, *tert*-Butyl ausgewählt ist.

In einem weiteren Aspekt ist $Q^+$ ein Kation der Struktur **(Q3),** wobei $R^{Q10}$, $R^{Q11}$, $R^{Q13}$ jeweils Wasserstoff sind und $R^{Q9}$ aus der Gruppe bestehend aus Methyl, Ethyl, *n*-Butyl, in einem Aspekt aus der Gruppe bestehend aus Ethyl, n-Butyl ausgewählt ist, wobei $R^{Q9}$ am bevorzugtesten Ethyl ist, und $R^{Q12}$ aus der Gruppe bestehend aus Methyl, Ethyl ausgewählt ist, wobei $R^{Q12}$ am bevorzugtesten Methyl ist.

Besonders in einem Aspekt ist als $Q^+$ das 1-Ethyl-3-methylimidazoliumkation.

II.2.2 Anionen der ionischen Flüssigkeiten

In der vorgenannten Formel $Q^+A^-$ ist $A^-$ ein Anion, welches aus der Gruppe bestehend aus Phosphat, Phosphonat, Alkylphosphonat, Monoalkylphosphat, Dialkylphosphat, Bis[trifluormethansulfonyl]imid, (Halo)alkylsulfonat, (Halo)alkylsulfat, Bis[fluorsulfonyl]imid, Halogenid, Dicyanamid, Hexafluorophosphat, Sulfat, Tetrafluoroborat, Trifluormethansulfonat, Perchlorat, Hydrogensulfat, (Halo)alkylcarboxylat, Formiat, Bisoxalatoborat, Tetrachloroaluminat, Dihydrogenphosphat, Monoalkylhydrogenphosphat, Nitrat ausgewählt ist.

In der vorgenannten Formel $Q^+A^-$ ist $A^-$ in einem Aspekt aus der Gruppe bestehend aus Phosphat, Phosphonat, Alkylphosphonat, Monoalkylphosphat, Dialkylphosphat, Bis[trifluormethansulfonyl]imid, Alkylsulfonat, Alkylsulfat, Bis[fluorsulfonyl]imid, Halogenid, Dicyanamid, Hexafluorophosphat, Sulfat, Tetrafluoroborat, Trifluormethansulfonat, Perchlorat, Hydrogensulfat, Alkylcarboxylat, Formiat, Bisoxalatoborat, Tetrachloroaluminat, Dihydrogenphosphat, Monoalkylhydrogenphosphat, Nitrat ausgewählt, wobei die Alkylgruppen in Alkylphosphonat, Monoalkylphosphat, Dialkylphosphat, Alkylsulfonat, Alkylsulfat, Alkylcarboxylat, Monoalkylhydrogenphosphat jeweils 1 bis 10, in einem Aspekt 1 bis 6, in einem weiteren Aspekt 1 bis 4 Kohlenstoffatome aufweisen.

In der vorgenannten Formel $Q^+A^-$ ist $A^-$ in einem weiteren Aspekt aus der Gruppe bestehend aus Dialkylphosphat, Bis[trifluormethansulfonyl]imid, Alkylsulfonat, Bis[fluorsulfonyl]imid, Chlorid Dicyanamid, Hexafluorophosphat, Tetrafluoroborat, Trifluormethansulfonat, Perchlorat, Acetat, Proprionat, Formiat, Tetrachloroaluminat, Monoalkylhydrogenphosphat, Nitrat ausgewählt, wobei die Alkylgruppen in Dialkylphosphat, Alkylsulfonat, Monoalkylhydrogenphosphat jeweils 1 bis 10, in einem Aspekt 1 bis 6, in einem weiteren Aspekt 1 bis 4 Kohlenstoffatome aufweisen.

In der vorgenannten Formel $Q^+A^-$ ist $A^-$ in einem weiteren Aspekt aus der Gruppe bestehend aus Diethylphosphat, Bis[trifluormethansulfonyl]imid, Methansulfonat, Bis[fluorsulfonyl]imid, Chlorid Dicyanamid, Hexafluorophosphat, Tetrafluoroborat, Trifluormethansulfonat, Perchlorat, Acetat, Proprionat, Formiat, Tetrachloroaluminat, Monoethylhydrogenphosphat, Nitrat ausgewählt.

In der vorgenannten Formel $Q^+A^-$ ist $A^-$ in einem weiteren Aspekt aus der Gruppe bestehend aus Trifluormethansulfonat, Bis[trifluormethansulfonyl]imid, Diethlyphosphat, Dicyanamid, am bevorzugtesten aus der Gruppe bestehend aus Trifluormethansulfonat, Bis[trifluormethansulfonyl]imid ausgewählt, am allerbevorzugtesten Trifluormethansulfonat.

11.2.3 Menge der eingesetzten ionischen Flüssigkeit

Die Menge der in Schritt (a) des erfindungsgemäßen Verfahrens zur Herstellung einer Elektrode gemäß dem zweiten Aspekt der Erfindung eingesetzten ionischen Flüssigkeit ist nicht weiter beschränkt. Es ist jedoch bevorzugt, dass das Gesamtgewicht der in Schritt (a) des erfindungsgemäßen Verfahrens zur Herstellung einer Elektrode eingesetzten ionischen Flüssigkeit bezogen auf das Gesamtgewicht des in Schritt (a) des erfindungsgemäßen Verfahrens zur Herstellung einer Elektrode eingesetzten, in der Hauptkette nichtkonjugierten, organischen Redox-Polymers **P** im Bereich 0.1 bis 1000 Gew.-%, in einem weiteren Aspekt im Bereich 1 bis 500 Gew.-%, in einem weiteren Aspekt im Bereich 5 bis 200 Gew.-% liegt, in einem weiteren Aspekt im Bereich 40 bis 160 Gew.-% liegt, noch viel mehr in einem weiteren Aspekt im Bereich 80 bis 120 Gew.-% liegt, am bevorzugtesten 100 Gew.-% beträgt.

II.3 Leitfähigkeitsadditiv

In Schritt (a) des Verfahrens zur Herstellung einer Elektrode gemäß dem zweiten Aspekt der vorliegenden Erfindung wird auch ein Leitfähigkeitsadditiv eingesetzt.

II.3.1 Bevorzugte Leitfähigkeitsadditive

Das in Schritt (a) des Verfahrens zur Herstellung einer Elektrode gemäß dem zweiten Aspekt der vorliegenden Erfindung eingesetzte Leitfähigkeitsadditiv ist mindestens ein elektrisch leitendes Material, insbesondere ausgewählt aus der Gruppe bestehend aus Kohlenstoffmaterialien, elektrisch leitenden Polymeren, Metallen, Halbmetallen, (Halb)metallverbindungen, in einem Aspekt ausgewählt aus Kohlenstoffmaterialien, elektrisch leitenden Polymeren. "(Halb)metalle" sind erfindungsgemäß aus der Gruppe bestehend aus Metallen, Halbmetallen ausgewählt, und sind in einem Aspekt Metalle.

Das Leitfähigkeitsadditiv ist in einem weiteren Aspekt ein Kohlenstoffmaterial. Kohlenstoffmaterialien sind insbesondere aus der Gruppe bestehend aus Kohlenstofffasern, Kohlenstoffnanoröhren, Graphit, Graphen, Ruß, Fulleren ausgewählt.

Elektrisch leitende Polymere sind insbesondere aus der Gruppe bestehend aus Polypyrrolen, Polyanilinen, Polyphenylenen, Polypyrenen, Polyazulenen, Polynaphthylenen, Polycarbazolen, Polyindolen, Polyazepinen, Polyphenylensulfiden, Polythiophenen, Polyacetylenen, Poly(3,4-ethylendioxythiophen)polystyrensulfonat (= PEDOT:PSS), Polyarcene, Poly-(p-phenylenvinylenen) ausgewählt.

Metalle sind insbesondere ausgewählt aus der Gruppe bestehend aus Zink, Eisen, Kupfer, Silber, Gold, Chrom, Nickel, Zinn, Indium.

Halbmetalle sind insbesondere ausgewählt aus Silicium, Germanium, Gallium, Arsen, Antimon, Selen, Tellur, Polonium

11.3.2 Bevorzugte Menge der Leitfähigkeitsadditive

Die Menge des eingesetzten Leitfähigkeitsadditivs ist nicht weiter beschränkt. Es ist jedoch bevorzugt, dass das Gesamtgewicht des in Schritt (a) des erfindungsgemäßen Verfahrens zur Herstellung einer Elektrode eingesetzten Leitfähigkeitsadditivs bezogen auf das Gesamtgewicht des in Schritt (a) des erfindungsgemäßen Verfahrens zur Herstellung einer Elektrode eingesetzten, in der Hauptkette nichtkonjugierten, organischen Redox-Polymers **P** im Bereich 0.1 bis 1000 Gew.-%, in einem Aspekt im Bereich 10 bis 500 Gew.-%, in einem weiteren Aspekt im Bereich 30 bis 100 Gew.-%, in einem weiteren Aspekt im Bereich 40 bis 80 Gew.-% liegt, in einem weiteren Aspekt 50 Gew.-% bis 60 Gew.-

%, am bevorzugtesten 58.3 Gew.-% beträgt.

II.4 Bindeadditiv

Im erfindungsgemäßen Verfahren zur Herstellung einer Elektrode gemäß dem zweiten Aspekt der vorliegenden Erfindung wird gegebenenfalls auch ein Bindeadditiv eingesetzt.

Es ist bevorzugt, im erfindungsgemäßen Verfahren zur Herstellung einer Elektrode gemäß dem zweiten Aspekt der vorliegenden Erfindung auch ein Bindeadditiv einzusetzen.

Diese sind dem Fachmann geläufig und insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylat, Polymethacrylat, Polysulfon, Cellulosederivate, Polyurethan, und bevorzugter handelt es sich dabei um Polyvinylidenfluorid.

Die Menge des eingesetzten Bindeadditivs ist in den Fällen, in denen im erfindungsgemäßen Verfahren zur Herstellung einer Elektrode gemäß dem zweiten Aspekt der vorliegenden Erfindung ein solches eingesetzt wird, nicht weiter beschränkt. Es ist in diesen Fällen jedoch bevorzugt, dass das Gesamtgewicht des in Schritt (a) des erfindungsgemäßen Verfahrens zur Herstellung einer Elektrode gemäß dem zweiten Aspekt der vorliegenden Erfindung eingesetzten Bindeadditivs, bezogen auf das Gesamtgewicht des in Schritt (a) des erfindungsgemäßen Verfahrens zur Herstellung einer Elektrode eingesetzten, in der Hauptkette nichtkonjugierten, organischen Redox-Polymers **P** im Bereich 0.001 bis 100 Gew.-%, in einem weiteren Aspekt im Bereich 0.083 bis 90 Gew.-%, in einem weiteren Aspekt im Bereich 3 bis 70 Gew.-%, in einem weiteren Aspekt im Bereich 5 bis 50 Gew.-%, noch viel mehr in einem weiteren Aspekt im Bereich 8.3 bis 20 Gew.-%, am bevorzugtesten bei 16.6 Gew.-% liegt.

II.5 Lösungsmittel

In Schritt (a) des erfindungsgemäßen Verfahrens zur Herstellung einer Elektrode wird gegebenenfalls ein Lösungsmittel eingesetzt, bei dem es sich in einem Aspekt um ein Lösungsmittel mit einem hohen Siedepunkt handelt. Bevorzugt wird das in Schritt (a) des erfindungsgemäßen Verfahrens zur Herstellung einer Elektrode gemäß des zweiten Aspekts der Erfindung eingesetzte Lösungsmittel aus der Gruppe bestehend aus *N*-Methyl-2-pyrrolidon, Wasser, Dimethylsulfoxid, Ethylencarbonat, Propylencarbonat, Dimethylcarbonat, Methylethylcarbonat, γ-Butyrolacton, Tetrahydrofuran, Dioxolan, Sulfolan, *N,N*'-Dimethylformamid, *N,N*'-Dimethylacetamid ausgewählt und ist in einem Aspekt *N*-Methyl-2-pyrrolidon.

Dabei wird in einem Aspekt soviel Lösungsmittel in Schritt (a) des erfindungsgemäßen Verfahrens zur Herstellung einer Elektrode eingesetzt, dass die Konzentration des Polymers **P** in Schritt (a) des Verfahrens in der erhaltenen Mischung **M** im Bereich zwischen 10 und 1000 mg/ml, besonders in einem Aspekt zwischen 50 und 500 mg/ml liegt

Diese Mischung kann in einem Becherglas oder anderen dem Fachmann geläufigen Gefäßen stattfinden. Schritt (a) des erfindungsgemäßen Verfahrens zur Herstellung einer Elektrode gemäß dem zweiten Aspekt der Erfindung findet in einem Aspekt bei einer Temperatur im Bereich von - 20 °C bis 100 °C, in einem Aspekt bei einer Temperatur im Bereich von 0 °C bis 80 °C, in einem weiteren Aspekt bei einer Temperatur im Bereich von 15 °C bis 50 °C, in einem weiteren Aspekt bei 20 °C bis 30 °C, am bevorzugtesten bei 25 °C statt.

Nach Abschluss des Schrittes (a) des erfindungsgemäßen Verfahrens wird eine Mischung **M** erhalten. Diese umfasst mindestens ein in der Hauptkette nichtkonjugiertes, organisches Redox-Polymer **P**, mindestens eine ionische Flüssigkeit, mindestens ein Leitfähigkeitsadditiv, gegebenenfalls mindestens ein Lösungsmittel und gegebenenfalls mindestens ein Bindeadditiv.

Bei der Mischung **M** handelt es sich um einen Elektrodenslurη, insbesondere dann, wenn in Schritt (a) des Verfahrens ein Lösungsmittel eingesetzt wird.

**Schritt (b) des erfindungsgemäßen Verfahrens**

In Schritt (b) des erfindungsgemäßen Verfahrens zur Herstellung einer Elektrode wird dann die in Schritt (a) erhaltene Mischung **M** auf ein Substrat aufgetragen. Die Mischung **M** kann als Elektrodenslurry durch ein bekanntes Verfahren zur Filmbildung, z.B. Rakeln, Schlitzdüsenbeschichtung, Siebdruck, Schablonendruck, als Schicht auf dem Substrat aufgetragen werden.

Als Substrat können die dem Fachmann als Elektrodenmaterialien geläufigen Materialien eingesetzt werden, insbesondere ist dieses ausgewählt aus der Gruppe bestehend aus leitfähigen Materialien, in einem Aspekt Metallen, Kohlenstoffmaterialien, Oxidsubstanzen, in einem Aspekt Metalle.

In einem Aspekt als Substrat in Schritt (b) des erfindungsgemäßen Verfahrens zur Herstellung einer Elektrode geeignete Metalle sind ausgewählt aus Platin, Gold, Eisen, Kupfer, Aluminium, Zink oder eine Kombination aus diesen Metallen, wobei Aluminium am bevorzugtesten ist. Bevorzugte als Substrat in Schritt (b) des erfindungsgemäßen Verfahrens zur Herstellung einer Elektrode geeignete Kohlenstoffmaterialien, sind ausgewählt aus Glaskohlenstoff, Graphitfolie, Graphen, Kohlenstofffelle. Bevorzugte als Substrat in Schritt (b) des erfindungsgemäßen Verfahrens zur Herstellung einer Elektrode geeignete Oxidsubstanzen sind beispielsweise ausgewählt aus der Gruppe bestehend aus Indiumzinnoxid (ITO), Indiumzinkoxid (IZO), Antimonzinkoxid (AZO), Fluorzinnoxid (FTO) oder Antimonzinnoxid (ATO), Zinkoxid (ZO).

**Schritt (c) des erfindungsgemäßen Verfahrens**

In einem optionalen, in einem Aspekt durchgeführten, Schritt (c) des erfindungsgemäßen Verfahrens zur Herstellung einer Elektrode kann schließlich das Lösungsmittel beispielsweise durch Trocknung in der Raumluft, z.B. im Trockenschrank entfernt werden. Dabei kann Schritt (c) sowohl zwischen Schritt (a) und Schritt (b) als auch nach Schritt (b) durchgeführt werden, wobei die Durchführung nach Schritt (b) in einem Aspekt ist.

III. Dritter Aspekt der Erfindung: Erhaltene Elektrode

Die vorliegende Erfindung betrifft in einem dritten Aspekt auch die mit dem erfindungsgemäßen Verfahren zur Herstellung einer Elektrode gemäß dem zweiten Aspekt der Erfindung erhaltene Elektrode. Diese zeichnet sich dadurch aus, dass es gleichmäßig mit der ionischen Flüssigkeit durchsetzt ist und sich somit die unter Punkt I.2 beschriebenen Vorteile besonders gut verwirklichen lassen.

Die vorliegende Erfindung betrifft auch einen elektrischen Ladungsspeicher, insbesondere eine Sekundärbatterie, umfassend die aus dem erfindungsgemäßen Verfahren gemäß dem zweiten Aspekt der Erfindung erhaltene Elektrode. Bezüglich der allgemeinen Beschreibung der Ladungsspeicher wird auf Punkt I.5.2 verwiesen.in einem Aspekt in einem Aspekt in einem weiteren Aspekt in einem Aspekt in einem Aspekt in einem Aspekt in einem Aspekt in einem Aspekt in einem Aspekt in einem Aspekt in einem Aspekt in einem Aspekt in in einem Aspekt in einem Aspekt in einem Aspekt in einem Aspekt in einem Aspekt in einem Aspekt in einem Aspekt in einem Aspekt in einem Aspekt in einem Aspekt in einem weiteren in einem Aspekt in einem Aspekt IV. Allgemeine Begriffe

Im Sinne der Erfindung bedeuten die verwendeten Begriffe, soweit nicht anders angegeben, Folgendes:

IV.1 Aliphatischer Rest

Ein aliphatischer Rest ist im Sinne der Erfindung eine acyclische oder cyclische, gesättigte oder ungesättigte, unverzweigte oder verzweigte Kohlenwasserstoffgruppe, die nicht aromatisch ist.

Ein aliphatischer Rest kann einwertig oder zweiwertig sein. Ist er einwertig, dann bedeutet das, dass er nur über eines seiner Kohlenstoffatome mit dem restlichen Molekül verbunden ist.

Ein einwertiger aliphatischer Rest ist insbesondere eine Kohlenwasserstoffgruppe ausgewählt aus Alkylgruppe, Alkenylgruppe, Alkinylgruppe, gesättigter oder ungesättigter Cycloalkylgruppe, in einem Aspekt eine Alkylgruppe, Alkenylgruppe, in einem weiteren Aspekt eine Alkylgruppe.

Eine ungesättigte Cycloalkylgruppe nennt man bei Vorliegen einer Doppelbindung "Cycloalkenylgruppe", bei Vorliegen einer Dreifachbindung "Cycloalkinylgruppe".

Ein zweiwertiger aliphatischer Rest ist über zwei von dem gleichen (dann handelt es sich um eine spiro-Bindung) oder zwei verschiedenen Kohlenstoffatomen ausgehenden Bindungen mit dem restlichen Molekül verbunden. Ein zweiwertiger aliphatischer Rest ist insbesondere eine Kohlenwasserstoffgruppe ausgewählt aus Alkylengruppe, Alkenylengruppe, Alkinylengruppe, gesättigter oder ungesättigter Cycloalkylengruppe, in einem Aspekt aus Alkylengruppe, Alkenylengruppe, am bevorzugtesten eine Alkylengruppe.

Eine ungesättigte Cycloalkylengruppe nennt man bei Vorliegen einer Doppelbindung "Cycloalkenylengruppe", bei Vorliegen einer Dreifachbindung "Cycloalkinylengruppe".

Wenn in dieser Erfindung nicht explizit als zweiwertig bezeichnet, sind unter der Bezeichnung "aliphatischer Rest" im Sinne der Erfindung einwertige aliphatische Reste zu verstehen.

IV.2 Alkylgruppe

Im Sinne der Erfindung ist eine "Alkylgruppe" unverzweigt oder verzweigt und ein einwertiger gesättigter Kohlenwasserstoffrest, der die allgemeine chemische Struktur **(a)** mit

(a):

$$-\xi-C_wH_{2w+1} \quad ;$$

aufweist.

Die Kette an Kohlenstoffatomen "-$C_wH_{2w+1}$" kann dabei linear sein, dann handelt es sich um eine unverzweigte Alkylgruppe. Sie kann aber auch Verzweigungen aufweisen, dann handelt es sich um eine verzweigte Alkylgruppe.

Dabei ist w in der chemischen Struktur **(a)** eine ganze Zahl, insbesondere aus dem Bereich 1 bis 30, in einem Aspekt aus dem Bereich 1 bis 18, bevorzugter aus dem Bereich 1 bis 12, in einem weiteren Aspekt aus dem Bereich 1 bis 10, noch mehr bevorzugter aus dem Bereich 1 bis 8, am bevorzugtesten aus dem Bereich 1 bis 6. w ist bei einer unverzweigten oder verzweigten Alkylgruppe mit 1 bis 30 Kohlenstoffatomen ausgewählt aus dem Bereich 1 bis 30. w ist bei einer unverzweigten oder verzweigten Alkylgruppe mit 1 bis 18 Kohlenstoffatomen ausgewählt aus dem Bereich 1 bis 18. w ist bei einer unverzweigten oder verzweigten Alkylgruppe mit 1 bis 12 Kohlenstoffatomen ausgewählt aus dem Bereich 1 bis 12. w ist bei einer unverzweigten oder verzweigten Alkylgruppe mit 1 bis 10 Kohlenstoffatomen ausgewählt aus dem Bereich 1 bis 10. w ist bei einer unverzweigten oder verzweigten Alkylgruppe mit 1 bis 8 Kohlenstoffatomen ausgewählt aus dem Bereich 1 bis 8. w ist bei einer unverzweigten oder verzweigten Alkylgruppe mit 1 bis 6 Kohlenstoffatomen ausgewählt aus dem Bereich 1 bis 6.

Im Sinne der Erfindung hat eine Alkylgruppe insbesondere 1 bis 30, in einem Aspekt 1 bis 18, bevorzugter 1 bis 12, in einem weiteren Aspekt 1 bis 10, noch mehr bevorzugter 1 bis 8, am bevorzugtesten 1 bis 6, am allerbevorzugtesten 1 bis 4 Kohlenstoffatome.

Im Sinne der Erfindung ist eine "Alkylgruppe mit 1 bis 30 Kohlenstoffatomen" insbesondere ausgewählt aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl, *n*-Tridecyl, *n*-Tetradecyl, *n*-Pentadecyl, *n*-Hexadecyl, *n*-Heptadecyl, *n*-Octadecyl, *n*-Nonadecyl, *n*-Eicosyl, *n*-Heneicosyl, *n*-Docosyl, *n*-Tricosyl, *n*-Tetracosyl, *n*-Pentacosyl, *n*-Hexacosyl, *n*-Heptacosyl, *n*-Octocosyl, *n*-Nonacosyl, *n*-Tricontyl.

Im Sinne der Erfindung ist eine "Alkylgruppe mit 1 bis 18 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl, *n*-Tridecyl, *n*-Tetradecyl, *n*-Pentadecyl, *n*-Hexadecyl, *n*-Heptadecyl, *n*-Octadecyl.

Im Sinne der Erfindung ist eine "Alkylgruppe mit 1 bis 12 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl.

Im Sinne der Erfindung ist eine "Alkylgruppe mit 1 bis 10 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl.

Im Sinne der Erfindung ist eine "Alkylgruppe mit 1 bis 8 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl.

Im Sinne der Erfindung ist eine "Alkylgruppe mit 1 bis 6 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl.

Eine Alkylgruppe mit 1 bis 30 Kohlenstoffatomen ist erfindungsgemäß insbesondere eine Alkylgruppe mit 1 bis 18, in einem Aspekt 1 bis 12, bevorzugter 1 bis 10, in einem weiteren Aspekt 1 bis 8, am bevorzugtesten 1 bis 6

Kohlenstoffatomen.

Eine Alkylgruppe mit 1 bis 6 Kohlenstoffatomen ist erfindungsgemäß insbesondere eine Alkylgruppe mit 1 bis 4 Kohlenstoffatomen und in einem weiteren Aspekt ausgewählt aus Methyl, Ethyl, *n*-Propyl, *iso*-Propyl, *n*-Butyl, *sec*-Butyl, *tert*-Butyl, in einem weiteren Aspekt aus Methyl, Ethyl, *n*-Propyl, *iso*-Propyl, noch mehr bevorzugter aus Methyl, Ethyl, am bevorzugtesten Methyl.

"Wobei die Alkylgruppe jeweils mit mindestens einer Gruppe ausgewählt aus Nitrogruppe, $-NH_2$, -CN, -SH, -OH, Halogen substituiert sein können" bedeutet erfindungsgemäß, dass die Alkylgruppe unsubstituiert ist oder mindestens eine Substitution aufweist, die sich formal durch Austausch eines Wasserstoffrests durch eine Gruppe ausgewählt aus Nitrogruppe, $-NH_2$, -CN, -SH, -OH, Halogen ergibt. Am bevorzugtesten ist die Alkylgruppe dann jedoch unsubstituiert.

IV.3 Alkenylgruppe, Alkinylgruppe

Im Sinne der Erfindung ist eine "Alkenylgruppe" unverzweigt oder verzweigt und ergibt sich aus einer Alkylgruppe durch Substitution mindestens einer CH-CH-Einfachbindung in der Alkylgruppe durch eine C=C-Doppelbindung. Eine Alkenylgruppe hat erfindungsgemäß insbesondere 2 bis 10 Kohlenstoffatome, in einem Aspekt 2 bis 6, bevorzugter 2 bis 4, in einem weiteren Aspekt 2 (dann ist sie Vinyl) oder 3 (dann ist sie in einem Aspekt Allyl), und ist am bevorzugtesten Vinyl.

Im Sinne der Erfindung ist eine "Alkinylgruppe" unverzweigt oder verzweigt und ergibt sich aus einer Alkylgruppe durch Substitution mindestens einer $CH_2$-$CH_2$-Einfachbindung in der Alkylgruppe durch eine C≡C-Dreifachbindung oder aus einer Alkenylgruppe durch Substitution mindestens einer CH=CH-Doppelbindung in der Alkenylgruppe durch eine C≡C-Dreifachbindung. Eine Alkinylgruppe hat erfindungsgemäß insbesondere 2 bis 10 Kohlenstoffatome, in einem Aspekt 2 bis 6, bevorzugter 2 bis 4, in einem weiteren Aspekt 2 (dann ist sie Ethinyl) oder 3, und ist am bevorzugtesten Ethinyl.

"Wobei die Alkenyl(en)gruppe jeweils mit mindestens einer Gruppe ausgewählt aus Nitrogruppe, $-NH_2$, -CN, -SH, -OH, Halogen substituiert sein können" bedeutet erfindungsgemäß, dass die Alkenylgruppe unsubstituiert ist oder mindestens eine Substitution aufweist, die sich formal durch Austausch eines an ein $sp^2$- oder, falls vorhanden, $sp^3$-hybridisierten, in einem Aspekt $sp^3$-hybridisierten Kohlenstoffatom gebundenen Wasserstoffatoms durch eine Gruppe ausgewählt aus Nitrogruppe, $-NH_2$, -CN, -SH, -OH, Halogen ergibt.

"Wobei die Alkinyl(en)gruppe jeweils mit mindestens einer Gruppe ausgewählt aus Nitrogruppe, $-NH_2$, -CN, -SH, -OH, Halogen substituiert sein können" bedeutet erfindungsgemäß, dass die Alkinylgruppe unsubstituiert ist oder mindestens eine Substitution aufweist, die sich formal durch Austausch eines an ein $sp^2$- oder, falls vorhanden, $sp^3$-hybridisierten, in einem Aspekt $sp^3$-hybridisierten Kohlenstoffatom gebundenen Wasserstoffatoms durch eine Gruppe ausgewählt aus Nitrogruppe, $-NH_2$, -CN, -SH, -OH, Halogen ergibt.

IV.4 Cycloalkylgruppe

Eine Cycloalkylgruppe kann gesättigt oder ungesättigt sein, ist bevorzugt, aber gesättigt.

Eine gesättigte Cycloalkylgruppe ist ein Alkylrest, in dem mindestens 3 Kohlenstoffatome innerhalb eines gesättigten Ringes vorliegen, und kann daneben auch noch weitere nicht im Ring vorliegende Kohlenstoffatome umfassen. Sie kann über eines dieser Ring-Kohlenstoffatome oder über Kohlenstoffatome, die nicht innerhalb des Ringes vorliegen, mit dem restlichen Molekül verknüpft sein. Im Sinne der Erfindung ist eine Cycloalkylgruppe insbesondere ausgewählt aus Cyclopropyl, Cyclobutyl, Cyclopropylmethyl, Cyclopentyl, Cyclobutylmethyl, Cyclohexyl, Cycloheptyl, Cyclooctyl, Cyclononyl, Cyclodecyl, Cycloundecyl, Cyclododecyl, Cyclotridecyl, Cyclotetradecyl, Cyclopentadecyl.

Eine ungesättigte Cycloalkylgruppe ergibt sich aus einer gesättigten Cycloalkylgruppe durch Substitution mindestens einer CH-CH-Einfachbindung in der gesättigten Cycloalkylgruppe durch mindestens eine C=C-Doppelbindung (zur Cycloalkenylgruppe) und/oder einer $CH_2$-$CH_2$-Einfachbindung durch eine C≡C-Dreifachbindung (zur Cycloalkinylgruppe).

IV.5 Zweiwertige Alkylengruppe, Alkenylengruppe, Alkinylengruppe, Cycloalkenylenqruppe

Eine Alkylengruppe hat im Sinne der Erfindung insbesondere 1 bis 30, in einem Aspekt 1 bis 18, bevorzugter 1 bis 12, in einem weiteren Aspekt 1 bis 10, noch mehr bevorzugter 1 bis 8, am bevorzugtesten 1 bis 6, am allerbevorzugtesten 1 bis 4 Kohlenstoffatome.

Sie kann im Sinne der Erfindung verzweigt oder unverzweigt sein. "Alkylengruppe" bezeichnet im Sinne der Erfindung einen zweiwertigen gesättigten Kohlenwasserstoffrest, welcher durch die allgemeine chemische Struktur **(b)** mit

(b):

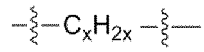 ;

definiert werden kann. Die Kette an Kohlenstoffatomen"-$C_xH_{2x}$" kann dabei linear sein, dann handelt es sich um eine unverzweigte Alkylengruppe. Sie kann aber auch Verzweigungen aufweisen, dann handelt es sich um eine verzweigte Alkylengruppe. Dabei ist x in der chemischen Struktur **(b)** eine ganze Zahl.

x ist bei einer unverzweigten oder verzweigten Alkylengruppe mit 1 bis 30 Kohlenstoffatomen ausgewählt aus dem Bereich 1 bis 30.

x ist bei einer unverzweigten oder verzweigten Alkylengruppe mit 1 bis 12 Kohlenstoffatomen ausgewählt aus dem Bereich 1 bis 12. x ist bei einer unverzweigten oder verzweigten Alkylengruppe mit 1 bis 6 Kohlenstoffatomen ausgewählt aus dem Bereich 1 bis 6. Eine Alkylengruppe weist erfindungsgemäß insbesondere 1 bis 6 Kohlenstoffatome auf, in einem Aspekt 1 bis 4 Kohlenstoffatome auf und ist in einem weiteren Aspekt ausgewählt aus Methylen, Ethylen, *n*-Propylen, *n*-Butylen.

Im Sinne der Erfindung ist eine "Alkenylengruppe" unverzweigt oder verzweigt und ergibt sich aus einer Alkylengruppe durch Substitution mindestens einer CH-CH-Einfachbindung in der Alkylengruppe durch eine C=C-Doppelbindung.

Im Sinne der Erfindung ist eine "Alkinylengruppe" unverzweigt oder verzweigt und ergibt sich aus einer Alkylgruppe durch Substitution mindestens einer $CH_2$-$CH_2$-Einfachbindung in der Alkylengruppe durch eine C≡C-Dreifachbindung oder aus einer Alkenylengruppe durch Substitution mindestens einer CH=CH-Doppelbindung in der Alkenylengruppe durch eine C≡C-Dreifachbindung.

Im Sinne der Erfindung ist eine gesättigter Cycloalkylengruppe eine zweiwertige gesättigte Kohlenwasserstoffgruppe mit mindestens 3, insbesondere 3 bis 30 Kohlenstoffatomen, welche mindestens einen gesättigten Ring aus 3 bis 30 Kohlenstoffatomen aufweist, in einem Aspekt eine chemische Struktur (c) mit
(c):

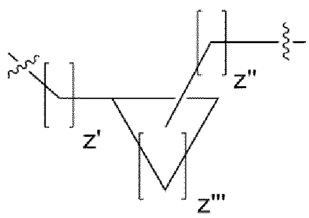 ;

wobei z‘ insbesondere eine ganze Zahl zwischen 0 und 27 ist; wobei z" insbesondere eine ganze Zahl zwischen 0 und 27 ist; wobei z‴ insbesondere eine ganze Zahl zwischen 1 und 28 ist; und wobei gleichzeitig gilt, dass z’ + z" + z‴ ≤ 28.

Im Sinne der Erfindung ergibt sich eine ungesättigte Cycloalkylengruppe aus einer gesättigten Cycloalkylengruppe durch Substitution mindestens einer CH-CH-Einfachbindung in der Cycloalkylengruppe durch eine C=C-Doppelbindung (zur Cycloalkenylengruppe) und/oder durch Substitution mindestens einer $CH_2$-$CH_2$-Einfachbindung in der Cycloalkylengruppe durch eine C≡C-Dreifachbindung (zur Cycloalkinylengruppe).

"Wobei die Alkenylengruppe jeweils mit mindestens einer Gruppe ausgewählt aus Nitrogruppe, -$NH_2$, -CN, -SH, -OH, Halogen substituiert sein können" bedeutet erfindungsgemäß, dass die Alkenylengruppe unsubstituiert ist oder mindestens eine Substitution aufweist, die sich formal durch Austausch eines an ein $sp^2$- oder, falls vorhanden, $sp^3$-hybridisierten, in einem Aspekt $sp^3$-hybridisierten Kohlenstoffatom gebundenen Wasserstoffatoms durch eine Gruppe ausgewählt aus Nitrogruppe, -$NH_2$, -CN, -SH, -OH, Halogen ergibt.

"Wobei die Alkinylengruppe jeweils mit mindestens einer Gruppe ausgewählt aus Nitrogruppe, -$NH_2$, -CN, -SH, -OH, Halogen substituiert sein können" bedeutet erfindungsgemäß, dass die Alkinylengruppe unsubstituiert ist oder mindestens eine Substitution aufweist, die sich formal durch Austausch eines an ein $sp^2$- oder, falls vorhanden, $sp^3$-hybridisierten, in einem Aspekt $sp^3$-hybridisierten Kohlenstoffatom gebundenen Wasserstoffatoms durch eine Gruppe ausgewählt aus Nitrogruppe, -$NH_2$, -CN, -SH, -OH, Halogen ergibt.

## IV.6 Alkoxygruppe

Eine Alkoxygruppe hat die allgemeine Struktur "-O-$C_wH_{2w+1}$", wobei es sich bei dem Rest "-$C_wHz_{w+1}$" um die unter Punkt X.2 beschriebene Alkylgruppe handelt inklusive der dort für die Alkylgruppe genannten bevorzugten Ausführungsformen.

Eine Alkoxygruppe ist erfindungsgemäß insbesondere eine Alkylgruppe mit 1 bis 4 Kohlenstoffatomen und in einem weiteren Aspekt ausgewählt aus Methoxy, Ethoxy, *n*-Propoxy, *iso*-Propoxy, *n*-Butoxy, *sec*-Butoxy, *tert*-Butoxy, in einem weiteren Aspekt aus Methoxy, Ethoxy, *n*-Propoxy, *iso*-Propoxy, noch mehr bevorzugter aus Methoxy, Ethoxy,

am bevorzugtesten Methoxy.

IV.7 (Hetero)aromatischer Rest

Ein (hetero)aromatischer Rest ist im Sinne der Erfindung ein heteroaromatischer oder ein aromatischer Rest, in einem Aspekt ein aromatischer Rest.

Ein (hetero)aromatischer Rest umfasst im Sinne der Erfindung einen oder mehrere (hetero)aromatische Ringe.

"(Hetero)aromatisch" bedeutet dabei im Sinne der Erfindung "heteroaromatisch oder aromatisch", in einem Aspekt "aromatisch".

Ein (hetero)aromatischer Rest kann einwertig sein, das heißt nur über eines seiner Kohlenstoffatome (im Falle eines aromatischen Rests) bzw. über eines seiner Kohlenstoff- oder Heteroatome (im Falle eines heteroaromatischen Restes) mit dem restlichen Molekül verbunden sein.

Ein (hetero)aromatischer Rest kann alternativ zweiwertig sein, das heißt über zwei seiner Kohlenstoffatome mit dem restlichen Molekül verbunden sein (im Falle eines aromatischen Rests) bzw. über zwei seiner Kohlenstoffatome, zwei seiner Heteroatome oder eines seiner Kohlenstoffatome und eines seiner Heteroatome (im Falle eines heteroaromatischen Restes) mit dem restlichen Molekül verbunden sein.

Wenn in dieser Erfindung nicht explizit als zweiwertig bezeichnet, sind unter der Bezeichnung "(hetero)aromatischer Rest" im Sinne der Erfindung einwertige (hetero)aromatische Reste zu verstehen.

Ein aromatischer Rest weist ausschließlich Kohlenstoffatome und mindestens einen aromatischen Ring auf. Ein aromatischer Rest ist insbesondere ausgewählt Arylrest, Aralkylrest, in einem Aspekt Arylrest. Arylreste weisen ausschließlich aromatische Ringe auf und sind über ein Kohlenstoffatom des aromatischen Ringes mit dem Molekül verknüpft. In einem Aspekt ist ein Arylrest Phenyl, 9-Anthryl, 9-Phenanthryl, am bevorzugtesten Phenyl.

Aralkylreste gehen formal durch Substitution eines Wasserstoffrestes einer Alkylgruppe mit einer Arylgruppe hervor. In einem Aspekt ist ein Aralkylrest Benzyl, Phenylethyl, $\alpha$-Methylbenzyl.

Ein heteroaromatischer Rest ist insbesondere ausgewählt Hetero-Arylrest, Hetero-Aralkylrest. Es ist ein aromatischer Rest, der zusätzlich mindestens ein Heteroatom, insbesondere ein Heteroatom ausgewählt aus der Gruppe bestehend aus Stickstoff, Sauerstoff, Schwefel innerhalb des aromatischen Ringes aufweist.

Bevorzugte (hetero)aromatische Reste sind ausgewählt aus der Gruppe bestehend aus Azol, Imidazol, Pyrrol, Pyrazol, Triazol, Tetrazol, Thiophen, Furan, Thiazol, Thiadiazol, Oxazol, Oxadiazole, Pyridin, Pyrimidin, Triazin, Tetrazin, Thiazine, Benzofuran, Purin, Indol.

Ein zweiwertiger (hetero)aromatischer Rest ist im Sinne der Erfindung ein zweiwertiger aromatischer Rest oder ein zweiwertiger heteroaromatischer Rest, in einem Aspekt ein zweiwertiger aromatischer Rest.

Ein zweiwertiger aromatischer Rest ist erfindungsgemäß eine zweiwertige Kohlenwasserstoffgruppe mit mindestens 6, in einem Aspekt 6 bis 30, Kohlenstoffatomen, von denen mindestens 6 Kohlenstoffatome in einem aromatischen System vorliegen und die übrigen Kohlenstoffatome, falls vorhanden, gesättigt sind. Der zweiwertige aromatische Rest kann über Kohlenstoffatome des aromatischen Systems oder, falls vorhanden, gesättigte Kohlenstoffatome mit dem restlichen Molekül verknüpft sein.

In einem Aspekt ist ein zweiwertiger aromatischer Rest eine chemische Struktur (d) mit
(a):

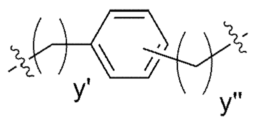 ;

wobei y‘ eine ganze Zahl $\geq 0$, in einem Aspekt von 0 und 24 ist; wobei y" eine ganze Zahl $\geq 0$, in einem Aspekt von 0 und 24 ist; und wobei in einem Aspekt gleichzeitig gilt, dass y’ + y" $\leq 24$.

Ein zweiwertiger aromatischer Rest ist im Sinne der Erfindung in einem Aspekt ausgewählt aus Benzylen, Phenylen, am bevorzugtesten Phenylen.

Ein zweiwertiger heteroaromatischer Rest ist ein zweiwertiger aromatischer Rest, der zusätzlich mindestens ein Heteroatom, insbesondere mindestens ein Heteroatom ausgewählt aus der Gruppe bestehend aus Stickstoff, Sauerstoff, Schwefel innerhalb oder außerhalb des aromatischen Ringes, in einem Aspekt innerhalb des aromatischen Ringes, aufweist, aber insbesondere über Kohlenstoffatome mit dem restlichen Molekül verknüpft ist.

"Substituierter oder unsubstituierter (hetero)aromatischer Rest" bedeutet insbesondere unsubstituierter (hetero)aromatischer Rest und in einem Aspekt unsubstituierter aromatischer Rest.

"Substituierter (hetero)aromatischer Rest" bedeutet im Sinne der Erfindung insbesondere, dass in dem betreffenden (hetero)aromatischer Rest ein an ein Kohlenstoffatom gebundenes Wasserstoffatom durch die angegebene Substituentengruppe substituiert ist.

"Wobei die (hetero)aromatischen Ringe unabhängig voneinander jeweils mit mindestens einem Rest, der aus der Gruppe bestehend aus (Halo)Alkylgruppe, Alkenylgruppe, Alkinylgruppe, (Halo)Alkoxygruppe, Cycloalkylgruppe, Carbonylalkylgruppe, -C(=O)-H, Carbonsäurerest, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, substituiert sein können" bedeutet demnach, dass der (hetero)aromatische Ring unsubstituiert vorliegt oder mit einer Substitution vorliegt, die formal durch Austausch eines Wasserstoffatoms am Ring durch einen der genannten Reste erhalten wird.

"Wobei der aliphatische Rest mindestens eine Gruppe ausgewählt aus Ether, Thioether, Aminoether, Carbonylgruppe, Carbonsäureamindgruppe, Carbonsäureester, Sulfonsäureester, Phosphorsäureester aufweisen kann" bedeutet:

Im Falle des Ethers, dass in dem aliphatischen Rest (oder Ring) mindestens zwischen zwei $sp^3$-hybridisierten Kohlenstoffatomen des aliphatischen Restes, in einem Aspekt zwischen zwei $-CH_2$-Gruppen des aliphatischen Restes, in einem weiteren Aspekt zwischen zwei $-CH_2CH_2$-Gruppen des aliphatischen Restes, eine -O- Gruppe vorliegt oder nicht vorliegt.

Im Falle des Thioethers, dass in dem aliphatischen Rest (oder Ring) mindestens zwischen zwei $sp^3$-hybridisierten Kohlenstoffatomen des aliphatischen Restes, in einem Aspekt zwischen zwei - $CH_2$-Gruppen des aliphatischen Restes, in einem weiteren Aspekt zwischen zwei $-CH_2CH_2$-Gruppen des aliphatischen Restes, eine -S- Gruppe vorliegt oder nicht vorliegt.

Im Falle des Aminoethers, dass in dem aliphatischen Rest (oder Ring) mindestens zwischen zwei $sp^3$-hybridisierten Kohlenstoffatomen des aliphatischen Restes, in einem Aspekt zwischen zwei - $CH_2$-Gruppen des aliphatischen Restes, in einem weiteren Aspekt zwischen zwei $-CH_2CH_2$-Gruppen des aliphatischen Restes, eine -NR'- Gruppe mit R' = H oder Alkyl mit 1 bis 10 Kohlenstoffatomen vorliegt oder nicht vorliegt.

Im Falle der Carbonylgruppe, dass in dem aliphatischen Rest (oder Ring) mindestens zwischen zwei $sp^3$-hybridisierten Kohlenstoffatomen des aliphatischen Restes, in einem Aspekt zwischen zwei $-CH_2$-Gruppen des aliphatischen Restes, in einem weiteren Aspekt zwischen zwei $-CH_2CH_2$-Gruppen des aliphatischen Restes, eine -C(=O)-Gruppe vorliegt oder nicht vorliegt.

Im Falle des Carbonsäureesters, dass in dem aliphatischen Rest (oder Ring) mindestens zwischen zwei $sp^3$-hybridisierten Kohlenstoffatomen des aliphatischen Restes, in einem Aspekt zwischen zwei $-CH_2$-Gruppen des aliphatischen Restes, in einem weiteren Aspekt zwischen zwei $-CH_2CH_2$-Gruppen des aliphatischen Restes, eine -C(=O)-O-Gruppe vorliegt oder nicht vorliegt.

Im Falle des Carbonsäureamids, dass in dem aliphatischen Rest (oder Ring) mindestens zwischen zwei $sp^3$-hybridisierten Kohlenstoffatomen des aliphatischen Restes, in einem Aspekt zwischen zwei $-CH_2$-Gruppen des aliphatischen Restes, in einem weiteren Aspekt zwischen zwei $-CH_2CH_2$-Gruppen des aliphatischen Restes, eine -C(=O)-NH-oder C(=O)-N(Alkyl)- Gruppe vorliegt oder nicht vorliegt.

Im Falle des Sulfonsäureesters, dass in dem aliphatischen Rest (oder Ring) mindestens zwischen zwei $sp^3$-hybridisierten Kohlenstoffatomen des aliphatischen Restes, in einem Aspekt zwischen zwei $-CH_2$-Gruppen des aliphatischen Restes, in einem weiteren Aspekt zwischen zwei $-CH_2CH_2$-Gruppen des aliphatischen Restes, eine $-S(O)_2O$-Gruppe vorliegt oder nicht vorliegt.

Im Falle des Phosphorsäureesters, dass in dem aliphatischen Rest (oder Ring) mindestens zwischen zwei $sp^3$-hybridisierten Kohlenstoffatomen des aliphatischen Restes, in einem Aspekt zwischen zwei $-CH_2$-Gruppen des aliphatischen Restes, in einem weiteren Aspekt zwischen zwei - $CH_2CH_2$-Gruppen des aliphatischen Restes, eine Gruppe ausgewählt aus $-OP(=O)(O^-(W^{d+})_{1/z})$-O-, - OP(=O)(OR")-O- vorliegt oder nicht vorliegt.

Dabei ist R" ein Alkylrest, in einem Aspekt mit 1 bis 6 Kohlenstoffatomen, und $W^{d+}$ ausgewählt aus der Gruppe bestehend aus Alkalimetallkation, wobei das Alkalimetallkation in einem Aspekt aus der Gruppe bestehend aus $Li^+$, $Na^+$, $K^+$ ausgewählt ist, Erdalkalimetallkation, wobei das Erdalkalimetallkation in einem Aspekt aus der Gruppe bestehend aus $Mg^{2+}$, $Ca^{2+}$ ausgewählt ist, Übergangsmetallkation, wobei das Übergangsmetallkation in einem Aspekt ausgewählt aus der Gruppe bestehend aus Eisenkation, Zinkkation, Quecksilberkation, Nickelkation, Cadmiumkation ist, Tetraalkylammoniumkation, Imidazoliumkation, Monoalkylimidazoliumkation, Dialkylimidazoliumkation, wobei die Alkylgruppen in dem Tetraalkylammoniumkation, Monoalkylimidazoliumkation, Dialkylimidazoliumkation unabhängig voneinander jeweils in einem Aspekt 1 bis 30 Kohlenstoffatome aufweisen ist. Außerdem gibt d die Zahl der positiven Ladungen von $W^{d+}$ an.

In einem Aspekt ist $W^{d+}$ ausgewählt aus der Gruppe bestehend aus $Li^+$, $Na^+$, $K^+$, $Mg^{2+}$, $Ca^{2+}$, $Zn^{2+}$, $Fe^{2+}$, $Fe^{3+}$, $Cd^{2+}$, $Hg^+$, $Hg^{2+}$, $Ni^{2+}$, $Ni^{3+}$, $Ni^{4+}$ ist,

wobei d im Falle von $Li^+$, $Na^+$, $K^+$, $Hg^+$ jeweils = 1 ist,
wobei d im Falle von $Mg^{2+}$, $Ca^{2+}$, $Zn^{2+}$, $Cd^{2+}$, $Hg^{2+}$, $Ni^{2+}$, $Fe^{2+}$ jeweils = 2 ist,
wobei d im Falle von $Fe^{3+}$, $Ni^{3+}$ = 3 ist,
wobei d im Falle von $Ni^{4+}$= 4 ist.

IV.8 Weitere Definitionen

"Halogen" bedeutet erfindungsgemäß insbesondere Chlor oder Brom, am bevorzugtesten Chlor.

"(Halo)alkylgruppe" bedeutet Haloalkylgruppe oder Alkylgruppe, in einem Aspekt Alkylgruppe.

Eine Haloalkylgruppe geht formal aus einer Alkylgruppe durch Austausch mindestens eines an Kohlenstoff gebundenen Wasserstoffatoms durch ein Halogenatom, in einem Aspekt Br oder Cl, in einem weiteren Aspekt Cl, hervor.

"(Halo)alkoxygruppe" bedeutet Haloalkoxygruppe oder Alkoxygruppe, in einem Aspekt Alkoxygruppe.

Eine Haloalkoxygruppe geht formal aus einer Alkoxygruppe durch Austausch mindestens eines an Kohlenstoff gebundenen Wasserstoffatoms durch ein Halogenatom, in einem Aspekt Br oder Cl, in einem weiteren Aspekt Cl, hervor.

"(Halb)metallverbindungen" bedeutet erfindungsgemäß Verbindungen der Metalle und Halbmetalle miteinander oder mit anderen Elementen. (Halb)metallverbindungen sind insbesondere ausgewählt aus Oxiden und Sulfiden des Zinks, Eisens, Kupfers Chroms, Nickels, Zinns, Indiums, Arseniden des Germanium, Galliums, oder Substanzen wie Indiumzinnoxid (ITO), Indiumzinkoxid (IZO), Antimonzinkoxid (AZO), Fluorzinnoxid (FTO) oder Antimonzinnoxid (ATO).

"Carboylalkyl" ist formal erhältlich durch Austausch einer "-$CH_2$-"-Gruppe in einer Alkylgruppe durch eine "C(=O)-"-Gruppe.

V. Beispiele

V.1 Chemikalien und Methoden

Alle Lösungsmittel und Materialien wurden von kommerziellen Herstellern bezogen und ohne weitere Aufreinigung verwendet. In den Versuchen wurden die folgenden beiden Polymere **(P1)** und **(P2)** eingesetzt:

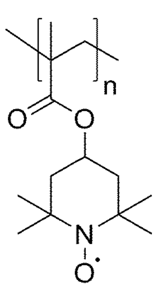

**(P1)**

;

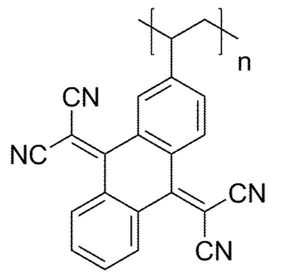

**(P2)**

;

**(P1)** wurde entsprechend WO 2018/046387 A1 synthetisiert, wobei bei der Synthese Triethylenglykoldimethacrylat zur Vernetzung zugegeben wurde.

**(P2)** wurde entsprechend WO 2015/132374 A1 synthetisiert.

Die Herstellung der Kohlenstoffpasten wurde mit Labordissolvern (VMA Getzmann) durchgeführt. Die Substratfolien wurden mittels automatischer Rakel (Elcometer) beschichtet und im Umlufttrockenschrank getrocknet. Filme, die Elektrolytsalze enthalten, wurden in der Glovebox gelagert. Die in Tabelle 1 angegebenen Entladekapazitäten wurden mittels galvanostatischer Entladung an einem Maccor Battery Cycler erhalten.

V.2 Vergleichsbeispiele **V1** und **V2**

V.2.1 Vergleichsbeispiel **V1:** Herstellung einer Elektrode mit Polymer **P1**

PVDF (Polyvinylidenfluorid, 140 mg) wurde in NMP (*N*-Methyl-2-pyrrolidon) gegeben und mittels Labordissolver eine Stunde lang gerührt. Anschließend wurde Polymer **P1** (1.68 g) und nach einer weiteren Stunde Super P (Ruß, erhalten von "Timcal"; 0.98 g) zugegeben. Nach der Zugabe von Super P wurde die Dispersion ebenfalls eine Stunde lang gerührt und anschließend auf Aluminiumfolie aufgebracht. Die entstandene Elektrode wurde im Umlufttrockenschrank getrocknet. Der Anteil des aktiven Materials auf den Elektroden wurde auf Basis der Massen von getrockneten Elektroden bestimmt.

V.2.2 Vergleichsbeispiel **V2:** Herstellung einer Elektrode mit Polymer **P2**

PVDF (Polyvinylidenfluorid, 140 mg) wurde in NMP (*N*-Methyl-2-pyrrolidon) gegeben und mittels Labordissolver eine Stunde lang gerührt. Anschließend wurde Polymer **P2** (1.68 g) und nach einer weiteren Stunde Super P (0.98 g)

zugegeben. Nach der Zugabe von Super P wurde die Dispersion ebenfalls eine Stunde lang gerührt und anschließend auf Aluminiumfolie aufgebracht. Die entstandene Elektrode wurde im Umlufttrockenschrank getrocknet. Der Anteil des aktiven Materials auf den Elektroden wurde auf Basis der Massen von getrockneten Elektroden bestimmt.

## V.3 Erfinderische Beispiele **E1** und **E2**

### V.3.1 Erfinderisches Beispiel **E1:** Herstellung einer Elektrode mit Polymer **P1** und IL

PVDF (Polyvinylidenfluorid, 140 mg) wurde in eine Lösung aus NMP (*N*-Methyl-2-pyrrolidon) und EMIM OTf (1-Ethyl-3-methylimidazoliumtrifluoromethansulfonat, 1.68 g) gegeben und mittels Labordissolver für 1 h gerührt. Anschließend wurde Polymer **P1** (1.68 g) und nach einer weiteren Stunde Super P (0.98 g) zugegeben. Nach der Zugabe von Super P wurde die Dispersion ebenfalls eine Stunde lang gerührt und anschließend auf Aluminiumfolie aufgebracht. Die entstandene Elektrode wurde im Umlufttrockenschrank getrocknet. Der Anteil des aktiven Materials auf den Elektroden wurde auf Basis der Massen von getrockneten Elektroden bestimmt.

### V.3.2 Erfinderisches Beispiel **E2:** Herstellung einer Elektrode mit Polymer **P2** und IL

PVDF (Polyvinylidenfluorid, 140 mg) wurde in eine Lösung aus NMP (*N*-Methyl-2-pyrrolidon) und EMIM OTf (1-Ethyl-3-methylimidazoliumtrifluoromethansulfonat, 1.68 g) gegeben und mittels Labordissolver für 1 h gerührt. Anschließend wurde Polymer **P2** (1.68 g) und nach einer weiteren Stunde Super P (0.98 g) zugegeben. Nach der Zugabe von Super P wurde die Dispersion ebenfalls eine Stunde lang gerührt und anschließend auf Aluminiumfolie aufgebracht. Die entstandene Elektrode wurde im Umlufttrockenschrank getrocknet. Der Anteil des aktiven Materials auf den Elektroden wurde auf Basis der Massen von getrockneten Elektroden bestimmt.

## V.4 Herstellung von Knopfzellen

Die Konstruktion der Knopfzellen (kreisförmig, Typ 2032) erfolgte unter Argonatmosphäre. Es wurden geeignete Elektroden ausgestanzt (15 mm Durchmesser). Die als Anode zum Einsatz kommende Elektrode wurde auf den Boden einer Knopfzelle platziert und mit Hilfe eines Separators (Glasmikrofaser, Whatman GF/A) von der Kathode getrennt. Auf die Kathode wurden anschließend ein rostfreies Stahlgewicht (Durchmesser: 15.5 mm, Dicke: 0.3 mm, MIT Corporation) und eine rostfreie Stahlfeder (Durchmesser: 14.5 mm, Dicke: 5 mm) platziert.

Die Knopfzelle wurde mit Elektrolyt (siehe Tabelle 1) gefüllt und mit dem Deckel abgedichtet, bevor sie mit einer elektrischen Pressmaschine geschlossen wurde.

Elektrolyt 1: eine 1 M Lösung von $LiPF_6$ in einer Mischung von Ethylencarbonat ("EC")/ Diethylencarbonat ("DEC") [3 : 7 (*v*/*v*)];
Elektrolyt 2: Mischung von Ethylencarbonat/ Diethylencarbonat [3 : 7 (*v*/*v*)];
Elektrolyt 3: Ionische Flüssigkeit (EMIM TFSI = 1-Ethyl-3-methylimidazoliumbis[trifluormethansulfonyl]imid).

Tabelle 1: Entladekapazitäten von Knopfzellen

| Elektrodenkombination (Kathode/ Anode) | | **V1/ V2** | **E1/ E2** |
|---|---|---|---|
| Relative Entladekapazität | Elektrolyt 1 | 100 % | 110 % |
| | Elektrolyt 2 | 0 % | 90 % |
| | Elektrolyt 3 | 15 % | 75 % |

Die in Tabelle 1 angegebenen Entladekapazitäten wurden mittels galvanostatischer Entladung an einem Maccor Battery Cycler erhalten. Dabei wurde die Kapazität der Elektrode mit der niedrigeren Kapazität als limitierende Kapazität für die Berechnung des Lade/Entladestroms verwendet. Die in Tabelle 1 angegebenen Werte entsprechen den relativen Entladekapazitäten des ersten Zyklus. Dabei wurde die Kapazität einer Zelle mit Elektroden aus Beispiel **V1/V2** und 1 M $LiPF_6$ in EC/ DEC (3/7) von ~ 0.1 mAh als Referenz (100 %) verwendet. Es wurden verschiedene Elektrolyte ausprobiert.

Anhand der Ergebnisse ist ersichtlich, dass mit dem Elektrodenmaterial gemäß der vorliegenden Erfindung eine deutlich höhere Entladekapazität erreicht wird. Dies wird für verschiedene Elektrolyte beobachtet.

## Patentansprüche

1. Elektrodenmaterial umfassend mindestens ein Leitfähigkeitsadditiv, mindestens eine ionische Flüssigkeit und mindestens ein in der Hauptkette nichtkonjugiertes, organisches Redox-Polymer **P,**

wobei das nichtkonjugierte, organische Redox-Polymer **P** n’ miteinander verknüpfte Wiederholungseinheiten der chemischen Struktur **(I)** und/oder $n^2$ miteinander verknüpfte Wiederholungseinheiten der chemischen Struktur **(II)** und/oder $n^3$ miteinander verknüpfte Wiederholungseinheiten der chemischen Struktur **(III)** mit

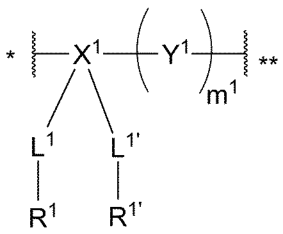 ; 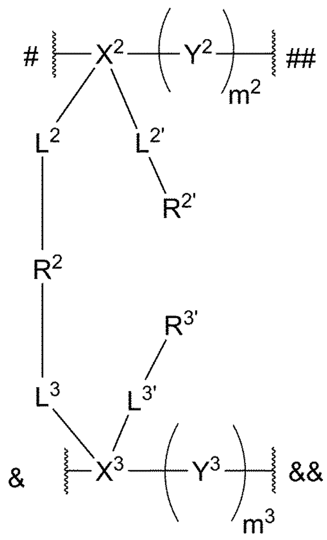 ; 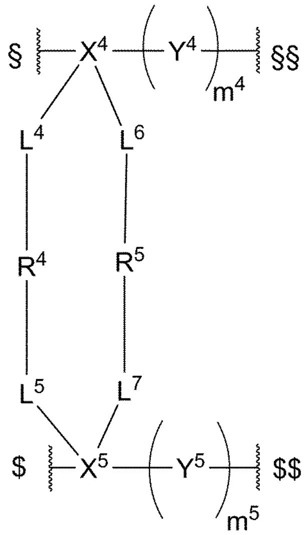 ;

**(I)** **(II)** **(III)**

umfasst,
wobei $n^1$, $n^2$ und $n^3$ unabhängig voneinander jeweils eine ganze Zahl $\geq 4$ sind,
wobei $m^1$, $m^2$, $m^3$, $m^4$ und $m^5$ unabhängig voneinander jeweils eine ganze Zahl $\geq 0$ sind,
wobei die Wiederholungseinheiten der chemischen Struktur **(I)** innerhalb des Polymers **P** gleich oder zumindest teilweise voneinander verschieden sind,
wobei die Wiederholungseinheiten der chemischen Struktur **(II)** innerhalb des Polymers **P** gleich oder zumindest teilweise voneinander verschieden sind,
wobei die Wiederholungseinheiten der chemischen Struktur **(III)** innerhalb des Polymers **P** gleich oder zumindest teilweise voneinander verschieden sind,
wobei die Wiederholungseinheiten der chemischen Struktur **(I)** innerhalb des Polymers so miteinander verknüpft sind, dass die durch "**" gekennzeichnete Bindung einer bestimmten Wiederholungseinheit mit der durch "*" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "##" gekennzeichnete Bindung einer bestimmten Wiederholungseinheit mit der durch "#" gekennzeichneten Bindung der benachbarten Wiederholungseinheit verknüpft ist und die durch "&&" gekennzeichnete Bindung einer bestimmten Wiederholungseinheit mit der durch "&" gekennzeichneten Bindung der benachbarten Wiederholungseinheit verknüpft ist,
wobei die Wiederholungseinheiten der chemischen Struktur **(III)** innerhalb des Polymers so miteinander verknüpft sind, dass die durch "§§" gekennzeichnete Bindung einer bestimmten Wiederholungseinheit mit der durch "§" gekennzeichneten Bindung der benachbarten Wiederholungseinheit verknüpft ist und die durch "$$" gekennzeichnete Bindung einer bestimmten Wiederholungseinheit mit der durch "$" gekennzeichneten Bindung der benachbarten Wiederholungseinheit verknüpft ist,
wobei $R^1$, $R^2$, $R^4$, $R^5$, $R^{1'}$, $R^{2'}$, $R^{3'}$ in den Strukturen **(I)**, **(II)** bzw. **(III)** unabhängig voneinander jeweils organische redoxaktive Gruppen ausgewählt aus der Gruppe bestehend aus redoxaktive aromatische Imidfunktion **(A),** redoxaktive organische Funktion umfassend mindestens ein stabiles Sauerstoffradikal **(B),** redoxaktive Anthrachinon-/ Carbazolfunktion **(C),** redoxaktive Dialkoxybenzolfunktion **(D),** redoxaktive Benzochinonfunktion **(E),** redoxaktive Triphenylaminfunktion **(G),** redoxaktive Viologenfunktion **(H),** redoxaktive Ferrocenfunktion **(J)** sind und $R^{1'}$, $R^{2'}$, $R^{3'}$ auch jeweils ein Wasserstoffrest sein können,

wobei in den Fällen, in denen die Reste $R^1$, $R^2$, $R^4$, $R^5$, $R^{1'}$, $R^{2'}$, $R^{3'}$ in den Strukturen **(I)**, **(II)** bzw. **(III)** jeweils eine redoxaktive aromatische Imidfunktion **(A)** sind, die Reste $R^1$, $R^2$, $R^4$, $R^5$, $R^{1'}$, $R^{2'}$, $R^{3'}$ unabhängig voneinander jeweils die folgende Struktur **(A1)** aufweisen und die Reste $R^2$, $R^4$, $R^5$ auch unabhängig voneinander jeweils die folgende Struktur **(A2)** mit

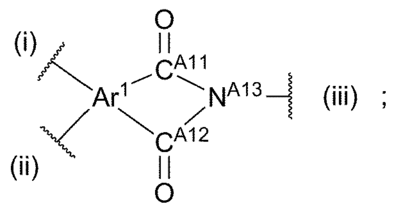

**(A1)**

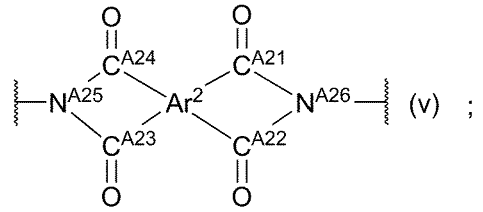

**(A2)**

aufweisen können,
wobei der Rest $Ar^1$ in **(A1)** bzw. der Rest $Ar^2$ in **(A2)** unabhängig voneinander jeweils ein (hetero)aromatischer Rest umfassend einen oder mehrere (hetero)aromatische Ringe sind,
wobei die (hetero)aromatischen Ringe von $Ar^1$ in **(A1)** bzw. die (hetero)aromatischen Ringe von $Ar^2$ in **(A2)** unabhängig voneinander jeweils mit mindestens einem Rest, der aus der Gruppe bestehend aus (Halo)Alkylgruppe, Alkenylgruppe, Alkinylgruppe, (Halo)Alkoxygruppe, Cycloalkylgruppe, Carbonylalkylgruppe, -C(=O)-H, Carbonsäurerest, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, substituiert sein können,
wobei in **(A1)** zwei der Ringatome von $Ar^1$ jeweils mit den beiden Kohlenstoffatomen $C^{A11}$ und $C^{A12}$ sowie dem Stickstoffatom $N^{A13}$ einen Fünfring, Sechsring oder Siebenring bilden,
wobei in **(A2)** zwei der Ringatome von $Ar^2$ jeweils mit den beiden Kohlenstoffatomen $C^{A21}$ und $C^{A22}$ sowie dem Stickstoffatom $N^{A26}$ einen Fünfring, Sechsring oder Siebenring bilden,
und zwei davon verschiedene Ringatome von $Ar^2$ jeweils mit den beiden Kohlenstoffatomen $C^{A23}$ und $C^{A24}$ sowie dem Stickstoffatom $N^{A25}$ einen Fünfring, Sechsring oder Siebenring bilden,
und wobei zwei aromatische Kohlenstoffatome desselben (hetero)aromatischen Ringes in $Ar^1$ bzw. zwei aromatische Kohlenstoffatome desselben (hetero)aromatischen Ringes in $Ar^2$ auch über einen zweiwertigen aliphatischen Rest verbrückt sein können,
und wobei im Falle, dass der Rest $Ar^1$ mehrere (hetero)aromatische Ringe umfasst, diese in $Ar^1$ mindestens teilweise miteinander kondensiert sein können,
und wobei im Falle dass der Rest $Ar^2$ mehrere (hetero)aromatische Ringe umfasst, diese in $Ar^2$ mindestens teilweise miteinander kondensiert sein können,
und wobei im Falle, dass der Rest $Ar^1$ mehrere (hetero)aromatische Ringe umfasst, zwei aromatische Kohlenstoffatome verschiedener (hetero)aromatischer Ringe in $Ar^1$ auch über eine direkte Bindung, oder einen Rest, der aus der Gruppe bestehend aus Heteroatom, zweiwertiger aliphatischer Rest ausgewählt ist, verbrückt sein können,
und wobei im Falle dass der Rest $Ar^2$ mehrere (hetero)aromatische Ringe umfasst, zwei aromatische Kohlenstoffatome verschiedener (hetero)aromatischer Ringe in $Ar^2$ auch über eine direkte Bindung, oder einen Rest, der aus der Gruppe bestehend aus Heteroatom, zweiwertiger aliphatischer Rest ausgewählt ist, verbrückt sein können,
wobei die Bindungen (i) und (ii) von aromatischen Kohlenstoffatomen von $Ar^1$ ausgehen,
und wobei
im Falle dass $R^1$ = **(A1),** eine der durch (i), (ii), (iii) gekennzeichneten Bindungen die Bindung zu $L^1$ darstellt,
im Falle dass $R^{1'}$ = **(A1),** eine der durch (i), (ii), (iii) gekennzeichneten Bindungen die Bindung zu $L^{1'}$ darstellt,
im Falle dass $R^{2'}$ = **(A1),** eine der durch (i), (ii), (iii) gekennzeichneten Bindungen die Bindung zu $L^{2'}$ darstellt,
im Falle dass $R^{3'}$ = **(A1),** eine der durch (i), (ii), (iii) gekennzeichneten Bindungen die Bindung zu $L^{3'}$ darstellt,
im Falle dass $R^2$ = **(A1),** eine der durch (i), (ii), (iii) gekennzeichneten Bindungen die Bindung zu $L^2$ darstellt und eine andere der durch (i), (ii), (iii) gekennzeichneten Bindungen die Bindung zu $L^3$ darstellt,
im Falle dass $R^4$ = **(A1),** eine der durch (i), (ii), (iii) gekennzeichneten Bindungen die Bindung zu $L^4$ darstellt und eine andere der durch (i), (ii), (iii) gekennzeichneten Bindungen die Bindung zu $L^5$ darstellt,
im Falle dass $R^5$ = **(A1),** eine der durch (i), (ii), (iii) gekennzeichneten Bindungen die Bindung zu $L^6$ darstellt und eine andere der durch (i), (ii), (iii) gekennzeichneten Bindungen die Bindung zu $L^7$ darstellt,
im Falle dass $R^2$ = **(A2),** die durch (iv) gekennzeichnete Bindung die Bindung zu $L^2$ darstellt und die durch (v) gekennzeichnete Bindung die Bindung zu $L^3$ darstellt,

im Falle dass $R^4$ = **(A2),** die durch (iv) gekennzeichnete Bindung die Bindung zu $L^4$ darstellt und die durch (v) gekennzeichnete Bindung die Bindung zu $L^5$ darstellt,

im Falle dass $R^5$ = **(A2),** die durch (iv) gekennzeichnete Bindung die Bindung zu $L^6$ darstellt und die durch (v) gekennzeichnete Bindung die Bindung zu $L^7$ darstellt,

und dann jeweils diejenigen der durch (i) und (ii) gekennzeichneten Bindungen, die keine Bindung zu $L^1$, $L^2$, $L^3$, $L^4$, $L^5$, $L^6$, $L^7$, $L^{1'}$, $L^{2'}$ oder $L^{3'}$ darstellen, unabhängig voneinander jeweils mit einem Rest, der aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt ist, verbunden sind,

und die durch (iii) gekennzeichnete Bindung, falls sie keine Bindung zu $L^1$, $L^2$, $L^3$, $L^4$, $L^5$, $L^6$, $L^7$, $L^{1'}$, $L^{2'}$ oder $L^{3'}$ darstellt, mit einem Rest, der aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäurerest, Carbonsäureamid, Carbonsäureester, Cyano, Hydroxyl, Halogen ausgewählt ist, verbunden ist;

und wobei in den Fällen, in denen die Reste $R^1$, $R^2$, $R^4$, $R^5$, $R^{1'}$, $R^{2'}$, $R^{3'}$ in den Strukturen **(I)**, **(II)** bzw. **(III)** jeweils eine redoxaktive organische Funktion umfassend mindestens ein stabiles Sauerstoffradikal **(B)** sind, die Reste $R^1$, $R^2$, $R^4$, $R^5$, $R^{1'}$, $R^{2'}$, $R^{3'}$ unabhängig voneinander jeweils aus einer der folgenden Strukturen **(B1),** **(B2)** mit

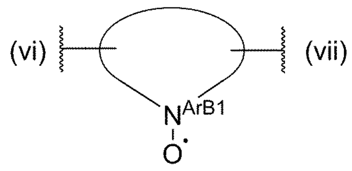

**(B1)**

;

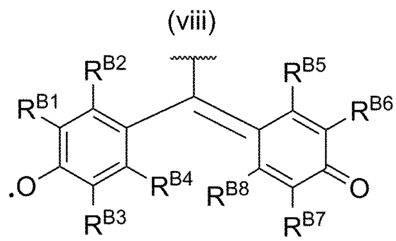

**(B2)**

;

ausgewählt sind,

wobei in der Struktur **(B1)** das Stickstoffatom $N^{ArB1}$ Teil eines aliphatischen Ringes $Ar^{B1}$ ist, der neben dem Stickstoffatom $N^{ArB1}$ weitere Heteroatome und Heteroatome enthaltende Gruppen umfassen kann und der mit einem oder mehreren weiteren aliphatischen oder aromatischen Ringen kondensiert und mit einem oder mehreren weiteren aliphatischen Ringen, die ihrerseits gegebenenfalls weitere Heteroatome und Heteroatome enthaltende Gruppen aufweisen, über eine spiro-Bindung verknüpft sein kann,

wobei mindestens ein Ringkohlenstoffatom von $Ar^{B1}$ mit einer Gruppe ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen substituiert sein kann,

wobei die durch (vi) und (vii) gekennzeichneten Bindungen von Ringkohlenstoffatomen von $Ar^{B1}$ und/oder von Ringkohlenstoffatomen der mit $Ar^{B1}$ kondensierten oder über eine spiro-Bindung verknüpften Ringe ausgehen, wobei, im Falle dass $R^1$ = **(B1),** die durch (vi) gekennzeichnete Bindung die Bindung zu $L^1$ darstellt und die durch (vii) gekennzeichnete Bindung eine Bindung zu Wasserstoff darstellt, wobei, im Falle dass $R^{1'}$ = **(B1),** die durch (vi) gekennzeichnete Bindung die Bindung zu $L^{1'}$ darstellt und die durch (vii) gekennzeichnete Bindung eine Bindung zu Wasserstoff darstellt, wobei, im Falle dass $R^{2'}$= **(B1),** die durch (vi) gekennzeichnete Bindung die Bindung zu $L^{2'}$ darstellt und die durch (vii) gekennzeichnete Bindung eine Bindung zu Wasserstoff darstellt, wobei, im Falle dass $R^{3'}$= **(B1),** die durch (vi) gekennzeichnete Bindung die Bindung zu $L^{3'}$ darstellt und die durch (vii) gekennzeichnete Bindung eine Bindung zu Wasserstoff darstellt,

und wobei im Falle dass $R^2$ = **(B1),** die durch (vi) gekennzeichnete Bindung die Bindung zu $L^2$ darstellt und die durch (vii) gekennzeichnete Bindung die Bindung zu $L^3$ darstellt,

und wobei im Falle dass $R^4$ = **(B1),** die durch (vi) gekennzeichnete Bindung die Bindung zu $L^4$ darstellt und die durch (vii) gekennzeichnete Bindung die Bindung zu $L^5$ darstellt,

und wobei im Falle dass $R^5$ = **(B1),** die durch (vi) gekennzeichnete Bindung die Bindung zu $L^6$ darstellt und die durch (vii) gekennzeichnete Bindung die Bindung zu $L^7$ darstellt,

wobei, im Falle dass $R^1$, $R^{1'}$, $R^{2'}$ oder $R^{3'}$= **(B2),** die durch (viii) gekennzeichnete Bindung die Bindung zu $L^1$, $L^{1'}$, $L^{2'}$ bzw. $L^{3'}$ darstellt und $R^{B1}$, $R^{B2}$, $R^{B3}$, $R^{B4}$, $R^{B5}$, $R^{B6}$, $R^{B7}$, $R^{B8}$ unabhängig voneinander jeweils aus der Gruppe bestehend aus Wasserstoff, (Halo)Alkylgruppe, Alkenylgruppe, Alkinylgruppe, (Halo)Alkoxygruppe,

Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt sind,

und wobei, im Falle dass $R^2$, $R^4$ oder $R^5$ = **(B2),** die durch (viii) gekennzeichnete Bindung die Bindung zu $L^2$, $L^4$ bzw. $L^6$ darstellt und einer der Reste $R^{B7}$, $R^{B8}$ eine direkte Bindung zu $L^3$, $L^5$ bzw. $L^7$ darstellt, wobei dann die Reste $R^{B1}$, $R^{B2}$, $R^{B3}$, $R^{B4}$, $R^{B5}$, $R^{B6}$ und derjenige der beiden Reste $R^{B7}$, $R^{B8}$, der keine direkte Bindung zu $L^3$, $L^5$ oder $L^7$ darstellt, unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt sind;

und wobei in den Fällen, in denen die Reste $R^1$, $R^2$, $R^4$, $R^5$, $R^{1'}$, $R^{2'}$, $R^{3'}$ in den Strukturen **(I)**, **(II)** bzw. **(III)** jeweils eine redoxaktive Anthrachinon-/ Carbazolfunktion **(C)** sind, die Reste $R^1$, $R^{1'}$, $R^{2'}$, $R^{3'}$ unabhängig voneinander jeweils aus der Gruppe bestehend aus den Strukturen **(C1), (C2)** ausgewählt sind und die Reste $R^2$, $R^4$, $R^5$ unabhängig voneinander jeweils aus der Gruppe bestehend aus den Strukturen **(C3), (C4)** mit

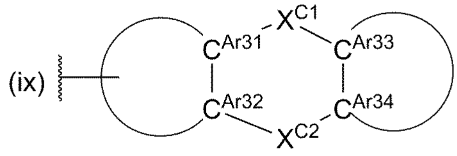

**(C1)**

;

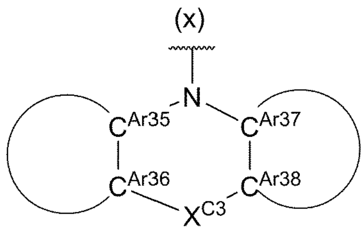

**(C2)**

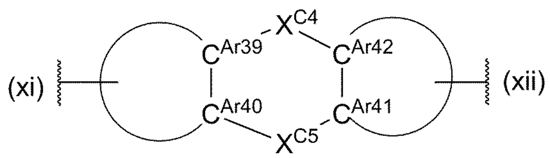

**(C3)**

;

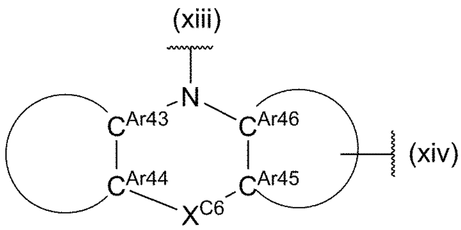

**(C4)**

;

ausgewählt sind,

wobei in der Struktur **(C1)** die durch $C^{Ar31}$ und $C^{Ar32}$ dargestellten Kohlenstoffatome Teil eines (hetero)aromatischen Fünfringes oder Sechsringes sind, wobei mindestens eines der von $C^{Ar31}$ und $C^{Ar32}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen substituiert sein kann,

wobei in der Struktur **(C1)** die durch $C^{Ar33}$ und $C^{Ar34}$ dargestellten Kohlenstoffatome Teil eines (hetero)aromatischen Fünfringes oder Sechsringes sind, wobei mindestens eines der von $C^{Ar33}$ und $C^{Ar34}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen substituiert sein kann,

wobei in der Struktur **(C2)** die durch $C^{Ar35}$ und $C^{Ar36}$ bzw. die durch $C^{Ar37}$ und $C^{Ar38}$ dargestellten Kohlenstoffatome jeweils Teil eines (hetero)aromatischen Fünfringes oder Sechsringes sind, wobei mindestens eines der von $C^{Ar35}$, $C^{Ar36}$, $C^{Ar37}$, $C^{Ar38}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen substituiert sein kann,

wobei in der Struktur **(C3)** die durch $C^{Ar39}$ und $C^{Ar40}$ bzw. $C^{Ar41}$ und $C^{Ar42}$ dargestellten Kohlenstoffatome

jeweils Teil eines (hetero)aromatischen Fünfringes oder Sechsringes sind, wobei mindestens eines der von $C^{Ar39}$, $C^{Ar40}$, $C^{Ar41}$ und $C^{Ar42}$ verschiedenen Kohlenstoffatome und, falls vorhanden, mindestens ein Stickstoffatom in den beiden Ringen mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen substituiert sein kann,

wobei in der Struktur **(C4)** die durch $C^{Ar43}$ und $C^{Ar44}$ dargestellten Kohlenstoffatome Teil eines (hetero)aromatischen Fünfringes oder Sechsringes sind, wobei mindestens eines der von $C^{Ar43}$ und $C^{Ar44}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen substituiert sein kann,

wobei in der Struktur **(C4)** die durch $C^{Ar45}$ und $C^{Ar46}$ dargestellten Kohlenstoffatome Teil eines (hetero)aromatischen Fünfringes oder Sechsringes sind, wobei mindestens eines der von $C^{Ar45}$ und $C^{Ar46}$ verschiedenen Kohlenstoffatome und, falls vorhanden, mindestens ein Stickstoffatom in diesem Ring mit einem Substituenten ausgewählt aus (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen substituiert sein kann,

wobei $X^{C1}$, $X^{C2}$, $X^{C3}$, $X^{C4}$, $X^{C5}$, $X^{C6}$ unabhängig voneinander jeweils aus der Gruppe bestehend aus -C(=$Y^{C1}$)-, -O-, -S-, -NH-, -N(Haloalkyl)-, -N(Alkyl)- ausgewählt sind,

und $X^{C2}$, $X^{C3}$, $X^{C5}$, $X^{C6}$ auch jeweils eine direkte Bindung sein können,

und wobei $X^{C1}$, $X^{C4}$ auch jeweils eine Gruppe der allgemeinen Formel ($\alpha^{C1}$)-C(=O)-C(=O)-($\beta^{C1}$) sein können, wobei ($\alpha^{C1}$) die Bindung zu $C^{Ar31}$ bzw. $C^{Ar39}$ darstellt und ($\beta^{C1}$) die Bindung zu $C^{Ar33}$ bzw. $C^{Ar42}$ kennzeichnet,

wobei $Y^{C1}$ aus der Gruppe bestehend aus O, S, und einer der Strukturen **($Y^{C11}$), ($Y^{C12}$), ($Y^{C13}$)** mit

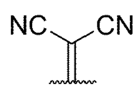 ; 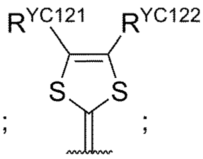 ; 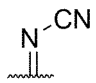 ;

**($Y^{C11}$)** **($Y^{C12}$)** **($Y^{C13}$)**

ausgewählt ist, wobei $R^{YC121}$, $R^{YC122}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt sind,

wobei der $C^{Ar31}$ und $C^{Ar32}$ umfassende (hetero)aromatische Fünfring oder Sechsring mit dem $C^{Ar33}$ und $C^{Ar34}$ umfassenden (hetero)aromatischen Fünfring oder Sechsring zusätzlich zu $X^{C1}$ und $X^{C2}$ über einen weiteren zweiwertigen organischen Rest verbrückt sein kann,

wobei der $C^{Ar39}$ und $C^{Ar40}$ umfassende (hetero)aromatische Fünfring oder Sechsring mit dem $C^{Ar41}$ und $C^{Ar42}$ umfassenden (hetero)aromatischen Fünfring oder Sechsring zusätzlich zu $X^{C4}$ und $X^{C5}$ über einen weiteren zweiwertigen organischen Rest verbrückt sein kann,

wobei die durch (ix) gekennzeichnete Bindung von einem der Atome ausgeht, die den $C^{Ar31}$ und $C^{Ar32}$ beinhaltenden (hetero)aromatischen Fünf- oder Sechsring bilden,

wobei die durch (xi) gekennzeichnete Bindung von einem der Atome ausgeht, die den $C^{Ar39}$ und $C^{Ar40}$ beinhaltenden (hetero)aromatischen Fünf- oder Sechsring bilden,

wobei die durch (xii) gekennzeichnete Bindung von einem der Atome ausgeht, die den $C^{Ar41}$ und $C^{Ar42}$ beinhaltenden (hetero)aromatischen Fünf- oder Sechsring bilden,

wobei die durch (xiv) gekennzeichnete Bindung von einem der Atome ausgeht, die den $C^{Ar45}$ und $C^{Ar46}$ beinhaltenden (hetero)aromatischen Fünf- oder Sechsring bilden,

und wobei

im Falle dass $R^1$ = **(C1)** oder **(C2),** die durch (ix) bzw. (x) gekennzeichneten Bindungen jeweils die Bindung zu $L^1$ darstellen,

im Falle dass $R^{1'}$ = **(C1)** oder **(C2),** die durch (ix) bzw. (x) gekennzeichneten Bindungen jeweils die Bindung zu $L^{1'}$ darstellen,

im Falle dass $R^{2'}$ = **(C1)** oder **(C2),** die durch (ix) bzw. (x) gekennzeichneten Bindungen jeweils die Bindung zu $L^{2'}$ darstellen,

im Falle dass $R^{3'}$= **(C1)** oder **(C2),** die durch (ix) bzw. (x) gekennzeichneten Bindungen jeweils die Bindung zu $L^{3'}$ darstellen,
im Falle dass $R^2$ = **(C3)** oder **(C4),** die durch (xi) bzw. (xiii) gekennzeichneten Bindungen jeweils die Bindung zu $L^2$ darstellen und die durch (xii) bzw. (xiv) gekennzeichneten Bindungen jeweils die Bindung zu $L^3$ darstellen,
im Falle dass $R^4$ = **(C3)** oder **(C4),** die durch (xi) bzw. (xiii) gekennzeichnete Bindungen jeweils die Bindung zu $L^4$ darstellen und die durch (xii) bzw. (xiv) gekennzeichneten Bindungen jeweils die Bindung zu $L^5$ darstellen,
im Falle dass $R^5$ = **(C3)** oder **(C4),** die durch (xi) bzw. (xiii) gekennzeichnete Bindungen jeweils die Bindung zu $L^6$ darstellen und die durch (xii) bzw. (xiv) gekennzeichneten Bindungen jeweils die Bindung zu $L^7$ darstellen;
und wobei in den Fällen, in denen die Reste $R^1$, $R^2$, $R^4$, $R^5$, $R^{1'}$, $R^{2'}$, $R^{3'}$ in den Strukturen **(I)**, **(II)** bzw. **(III)** jeweils eine redoxaktive Dialkoxybenzolfunktion **(D)** sind, dies bedeutet, dass die Reste $R^1$, $R^{1'}$, $R^{2'}$, $R^{3'}$ unabhängig voneinander jeweils die folgende Struktur **(D1)** aufweisen und $R^2$, $R^4$, $R^5$ unabhängig voneinander jeweils die folgende Struktur **(D2)** aufweisen

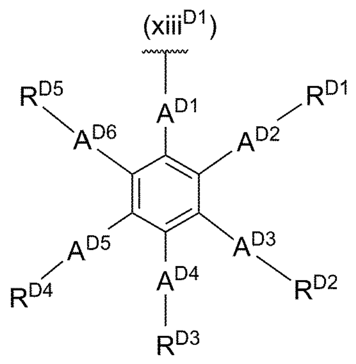

**(D1)**

;

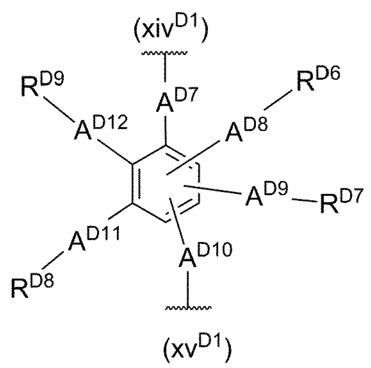

**(D2)**

;

wobei, im Falle dass $R^1$ = **(D1),** die durch ($xiii^{D1}$) gekennzeichnete Bindung die Bindung zu $L^1$ darstellt,
im Falle dass $R^{1'}$ = **(D1),** die durch ($xiii^{D1}$) gekennzeichnete Bindung die Bindung zu $L^{1'}$ darstellt, im Falle dass $R^{2'}$ = **(D1),** die durch ($xiii^{D1}$) gekennzeichnete Bindung die Bindung zu $L^{2'}$ darstellt, im Falle dass $R^{3'}$= **(D1),** die durch ($xiii^{D1}$) gekennzeichnete Bindung die Bindung zu $L^{3'}$ darstellt, im Falle dass $R^2$ = **(D2),** die durch ($xiv^{D1}$) gekennzeichnete Bindung die Bindung zu $L^2$ darstellt, und die durch ($xv^{D1}$) die Bindung zu $L^3$ darstellt,
im Falle dass $R^4$ = **(D2),** die durch ($xiv^{D1}$) gekennzeichnete Bindung die Bindung zu $L^4$ darstellt, und die durch ($xv^{D1}$) die Bindung zu $L^5$ darstellt,
im Falle dass $R^5$ = **(D2),** die durch ($xiv^{D1}$) gekennzeichnete Bindung die Bindung zu $L^6$ darstellt, und die durch ($xv^{D1}$) die Bindung zu $L^7$ darstellt,
und wobei mindestens zwei der Reste $A^{D1}$, $A^{D2}$, $A^{D3}$, $A^{D4}$, $A^{D5}$, $A^{D6}$ unabhängig voneinander jeweils aus der Gruppe bestehend aus -O-, -S- ausgewählt und die übrigen der Reste $A^{D1}$, $A^{D2}$, $A^{D3}$, $A^{D4}$, $A^{D5}$, $A^{D6}$ jeweils eine direkte Bindung sind,
und wobei mindestens zwei der Reste $A^{D7}$, $A^{D8}$, $A^{D9}$, $A^{D10}$, $A^{D11}$, $A^{D12}$ unabhängig voneinander jeweils aus der Gruppe bestehend aus -O-, -S- ausgewählt und die übrigen der Reste $A^{D7}$, $A^{D8}$ $A^{D9}$, $A^{D10,}$ $A^{D11}$, $A^{D12}$ jeweils eine direkte Bindung sind,
und wobei die Reste $R^{D1}$, $R^{D2}$, $R^{D3}$, $R^{D4}$, $R^{D5}$, $R^{D6}$, $R^{D7}$, $R^{D8}$, $R^{D9}$ unabhängig voneinander jeweils aus der Gruppe bestehend aus Wasserstoff, (hetero)aromatischer Rest, Alkylgruppe, Alkenylgruppe, Alkinylgruppe, Cycloalkylgruppe ausgewählt sind,
wobei der (hetero)aromatische Rest, die Alkylgruppe, die Alkenylgruppe, die Alkinylgruppe, die Cycloalkylgruppe jeweils mit mindestens einem Rest, der aus der Gruppe bestehend aus Nitrogruppe, $-NH_2$, -CN, -SH, -OH, Halogen ausgewählt ist, substituiert sein können,
und wobei die Alkylgruppe, die Alkenylgruppe, die Alkinylgruppe, die Cycloalkylgruppe mindestens eine Gruppe, die aus der Gruppe bestehend aus Ether, Thioether, Aminoether, Carbonylgruppe, Carbonsäureester, Carbonsäureamidgruppe, Sulfonsäureester, Phosphorsäureester ausgewählt ist, aufweisen können,
und wobei mindestens zwei Reste der Reste $R^{D1}$, $R^{D2}$, $R^{D3}$, $R^{D4}$, $R^{D5}$ bzw. der Reste $R^{D6}$, $R^{D7}$, $R^{D8}$, $R^{D9}$ jeweils auch durch einen zweiwertigen aliphatischen Rest verbrückt sein können, wobei der aliphatische Rest mit mindestens einer Gruppe, die aus der Gruppe bestehend aus Nitrogruppe, $-NH_2$, -CN, -SH, -OH, Halogen, Alkylgruppe ausgewählt ist, substituiert sein kann und mindestens eine Gruppe ausgewählt aus der Gruppe bestehend aus Ether, Thioether, Aminoether, Carbonylgruppe, Carbonsäureester, Carbonsäureamidgruppe, Sulfonsäureester, Phosphorsäureester aufweisen kann,

und wobei der Rest $R^{D1}$ im Falle dass $A^{D2}$ = direkte Bindung, der Rest $R^{D2}$ im Falle dass $A^{D3}$ = direkte Bindung, der Rest $R^{D3}$ im Falle dass $A^{D4}$ = direkte Bindung, der Rest $R^{D4}$ im Falle dass $A^{D5}$ = direkte Bindung, der Rest $R^{D5}$ im Falle dass $A^{D6}$ = direkte Bindung, der Rest $R^{D6}$ im Falle dass $A^{D8}$ = direkte Bindung, der Rest $R^{D7}$ im Falle dass $A^{D9}$ = direkte Bindung, der Rest $R^{D8}$ im Falle dass $A^{D11}$ = direkte Bindung, der Rest $R^{D9}$ im Falle dass $A^{D12}$ = direkte Bindung, unabhängig voneinander jeweils auch aus der Gruppe bestehend aus Nitrogruppe, -CN, -F, -Cl, -Br, -I, -C(=O)NHR$^{D13}$, -NR$^{D14}$R$^{D15}$, -COOR$^{D16}$, -COR$^{D17}$ ausgewählt sein können,
wobei $R^{D13}$, $R^{D14}$, $R^{D15}$, $R^{D16}$, $R^{D17}$ unabhängig voneinander jeweils aus der Gruppe bestehend aus Wasserstoff, (hetero)aromatischer Rest, gegebenenfalls mit mindestens einer Gruppe ausgewählt aus Nitrogruppe, -$NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest, ausgewählt sind;
und wobei in den Fällen, in denen die Reste $R^1$, $R^2$, $R^4$, $R^5$, $R^{1'}$, $R^{2'}$, $R^{3'}$ in den Strukturen **(I)**, **(II)** bzw. **(III)** jeweils eine redoxaktive Benzochinonfunktion **(E)** sind, dies bedeutet, dass die Reste $R^1$, $R^{1'}$, $R^{2'}$, $R^{3'}$ unabhängig voneinander jeweils aus der Gruppe bestehend aus den Strukturen **(E1), (E2), (E3)** mit

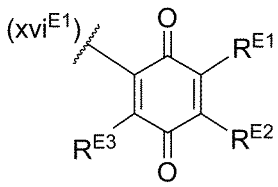 ; 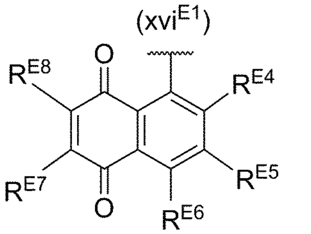 ; 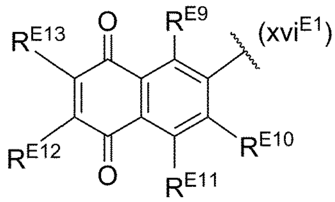 ;

**(E1)** **(E2)** **(E3)**

ausgewählt sind,
und die Reste $R^2$, $R^4$, $R^5$ unabhängig voneinander jeweils aus der Gruppe bestehend aus den Strukturen **(E4), (E5), (E6), (E7), (E8), (E9)** mit

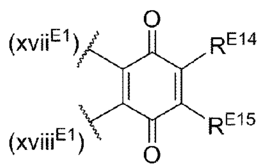 ; 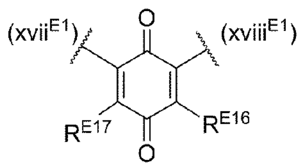 ; 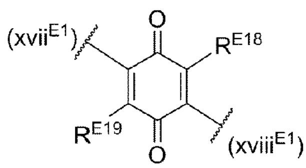 ;

**(E4)** **(E5)** **(E6)**

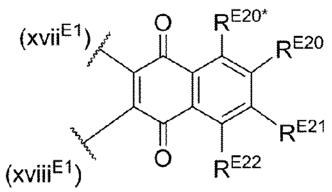 ; 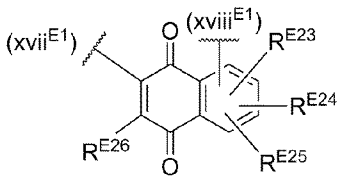 ; 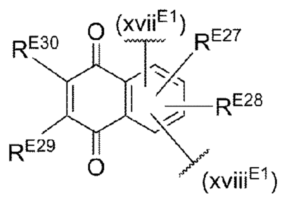 ;

**(E7)** **(E8)** **(E9)**

wobei,
im Falle dass $R^1$ = **(E1), (E2)** oder **(E3),** die durch (xvi$^{E1}$) gekennzeichnete Bindung die Bindung zu $L^1$ darstellt,
im Falle dass $R^{1'}$ = **(E1), (E2)** oder **(E3),** die durch (xvi$^{E1}$) gekennzeichnete Bindung die Bindung zu $L^{1'}$ darstellt,
im Falle dass $R^{2'}$ = **(E1), (E2)** oder **(E3),** die durch (xvi$^{E1}$) gekennzeichnete Bindung die Bindung zu $L^{2'}$ darstellt,
im Falle dass $R^{3'}$= **(E1), (E2)** oder **(E3),** die durch (xvi$^{E1}$) gekennzeichnete Bindung die Bindung zu $L^{3'}$ darstellt,
im Falle dass $R^2$ = **(E4), (E5), (E6), (E7), (E8)** oder **(E9),** die durch (xvii$^{E1}$) gekennzeichnete Bindung die Bindung zu $L^2$ darstellt und die durch (xviii$^{E1}$) gekennzeichnete Bindung die Bindung zu $L^3$ darstellt,
im Falle dass $R^4$ = **(E4), (E5), (E6), (E7), (E8)** oder **(E9),** die durch (xvii$^{E1}$) gekennzeichnete Bindung die Bindung

zu $L^4$ darstellt und die durch (xviii$^{E1}$) gekennzeichnete Bindung die Bindung zu $L^5$ darstellt,
im Falle dass $R^5$ = **(E4), (E5), (E6), (E7), (E8)** oder **(E9),** die durch (xvii$^{E1}$) gekennzeichnete Bindung die Bindung zu $L^6$ darstellt und die durch (xviii$^{E1}$) gekennzeichnete Bindung die Bindung zu $L^7$ darstellt,
und wobei die Reste $R^{E1}$, $R^{E2}$, $R^{E3}$, $R^{E4}$, $R^{E5}$, $R^{E6}$, $R^{E7}$, $R^{E8}$, $R^{E9}$, $R^{E10}$, $R^{E11}$, $R^{E12}$, $R^{E13}$, $R^{E14}$, $R^{E15}$, $R^{E16}$, $R^{E17}$, $R^{E18}$, $R^{E19}$, $R^{E20}$, $R^{E20*}$, $R^{E21}$, $R^{E22}$, $R^{E23}$, $R^{E24}$, $R^{E25}$, $R^{E26}$, $R^{E27}$, $R^{E28}$, $R^{E29}$, $R^{E30}$ aus der Gruppe bestehend aus Wasserstoff, -OH, -SH, Nitrogruppe, -CN, -F, -Cl, -Br, -I, -C(=O)NHR$^{E31}$, -NR$^{E32}$R$^{E33}$, -COOR$^{E34}$, -COR$^{E35}$, Sulfonsäureester, Phosphorsäureester, (hetero)aromatischer Rest, Alkylgruppe, Alkenylgruppe, Alkinylgruppe ausgewählt sind,

wobei der (hetero)aromatische Rest, die Alkylgruppe, die Alkenylgruppe, die Alkinylgruppe jeweils mit mindestens einer Gruppe ausgewählt aus Nitrogruppe, $-NH_2$, -CN, -SH, -OH, Halogen substituiert sein können und wobei die Alkylgruppe, die Alkenylgruppe, die Alkinylgruppe mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisen können,
und wobei $R^{E31}$, $R^{E32}$, $R^{E33}$, $R^{E34}$, $R^{E35}$ unabhängig voneinander jeweils aus der Gruppe bestehend aus Wasserstoff, (hetero)aromatischer Rest, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest ausgewählt sind,

und wobei zwei in *ortho*-Stellung zueinander stehende Reste der Reste $R^{E1}$, $R^{E2}$, $R^{E4}$, $R^{E5}$, $R^{E6}$, $R^{E7}$, $R^{E8}$, $R^{E10}$, $R^{E11}$ $R^{E12}$, $R^{E13}$, $R^{E14}$, $R^{E15}$, $R^{E20}$, $R^{E20*}$ $R^{E21}$, $R^{E22}$ $R^{E23}$, $R^{E24}$, $R^{E23}$, $R^{E27}$, $R^{E28}$, $R^{E23}$, $R^{E30}$ mit einem gegebenenfalls mit mindestens einer Gruppe ausgewählt aus Nitrogruppe, $-NH_2$, -CN, -SH, -OH, Halogen, Alkylgruppe substituierten und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisenden zweiwertigen aliphatischen Rest verbrückt sein können;
und wobei in den Fällen, in denen die Reste $R^1$, $R^2$, $R^4$, $R^5$, $R^{1'}$, $R^{2'}$, $R^{3'}$ in den Strukturen **(I)**, **(II)** bzw. **(III)** jeweils eine redoxaktive Triphenylaminfunktion **(G)** sind, dies bedeutet, dass die Reste $R^1$, $R^{1'}$, $R^{2'}$, $R^{3'}$ unabhängig voneinander jeweils die Struktur **(G1)** aufweisen und die Reste $R^2$, $R^4$, $R^5$, unabhängig voneinander jeweils aus der Gruppe bestehend aus den Strukturen **(G2), (G3)** mit

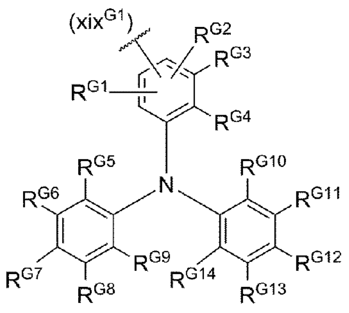 ; 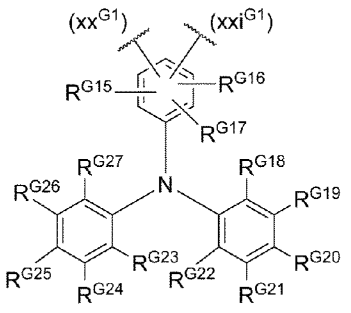 ; 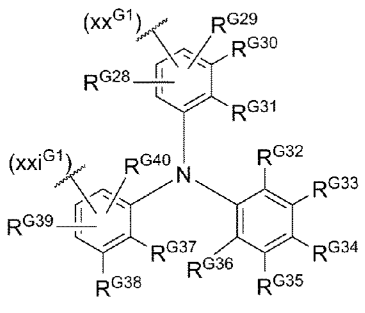 ;

**(G1)** **(G2)** **(G3)**

ausgewählt sind,
wobei,
im Falle dass $R^1$ = **(G1),** die durch (xix$^{G1}$) gekennzeichnete Bindung die Bindung zu $L^1$ darstellt,
im Falle dass $R^{1'}$ = **(G1),** die durch (xix$^{G1}$) gekennzeichnete Bindung die Bindung zu $L^{1'}$ darstellt,
im Falle dass $R^{2'}$ = **(G1),** die durch (xix$^{G1}$) gekennzeichnete Bindung die Bindung zu $L^{2'}$ darstellt,
im Falle dass $R^{3'}$= **(G1),** die durch (xix$^{G1}$) gekennzeichnete Bindung die Bindung zu $L^{3'}$ darstellt,
im Falle dass $R^2$ = **(G2)** oder **(G3),** die durch (xx$^{G1}$) gekennzeichnete Bindung die Bindung zu $L^2$ darstellt und die durch (xxi$^{G1}$) gekennzeichnete Bindung die Bindung zu $L^3$ darstellt,
im Falle dass $R^4$ = **(G2)** oder **(G3),** die durch (xx$^{G1}$) gekennzeichnete Bindung die Bindung zu $L^4$ darstellt und die durch (xxi$^{G1}$) gekennzeichnete Bindung die Bindung zu $L^5$ darstellt,
im Falle dass $R^5$ = **(G2)** oder **(G3),** die durch (xx$^{G1}$) gekennzeichnete Bindung die Bindung zu $L^6$ darstellt und die durch (xxi$^{G1}$) gekennzeichnete Bindung die Bindung zu $L^7$ darstellt,
wobei die Reste $R^{G1}$, $R^{G2}$, $R^{G3}$, $R^{G4}$, $R^{G5}$, $R^{G6}$, $R^{G7}$, $R^{G8}$, $R^{G9}$, $R^{G10}$, $R^{G11}$, $R^{G12}$, $R^{G13}$ $R^{G14}$, $R^{G15}$, $R^{G16}$ $R^{G17}$ $R^{G18}$ $R^{G19}$ $R^{G20}$ $R^{G21}$ $R^{G22}$ $R^{G23}$ $R^{G24}$ $R^{G25}$ $R^{G26}$ $R^{G27}$ $R^{G28}$, $R^{G29}$ $R^{G30}$ $R^{G31}$ $R^{G32}$ $R^{G33}$ $R^{G34}$ $R^{G35}$ $R^{G36}$ $R^{G37}$

$R^{G38}$ $R^{G39}$ $R^{G40}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen, (hetero)aromatischer Rest, wobei der (hetero)aromatische Rest mit mindestens einer Gruppe ausgewählt aus Halogen (Halo)Alkyl, (Halo)alkoxy, Cyano, Carbonsäureester, substituiert sein kann, ausgewählt sind;

und wobei in den Fällen, in denen die Reste $R^1$, $R^2$, $R^4$, $R^5$, $R^{1'}$, $R^{2'}$, $R^{3'}$ in den Strukturen **(I)**, **(II)** bzw. **(III)** jeweils eine redoxaktive Viologenfunktion **(H)** sind, dies bedeutet, dass die Reste $R^1$, $R^{1'}$, $R^{2'}$, $R^{3'}$ unabhängig voneinander jeweils aus der Gruppe bestehend aus den Strukturen **(H1), (H2)** ausgewählt sind, und die Reste $R^2$, $R^4$, $R^5$ unabhängig voneinander jeweils aus der Gruppe bestehend aus den Strukturen **(H3), (H4), (H5), (H6), (H7)** ausgewählt sind, wobei

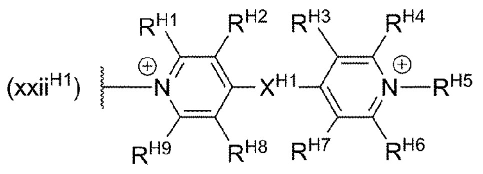 ;

**(H1)**

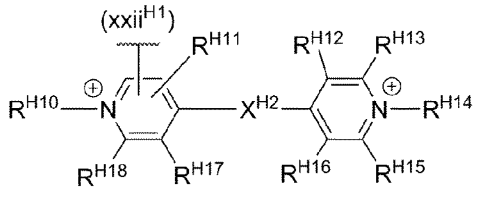 ;

**(H2)**

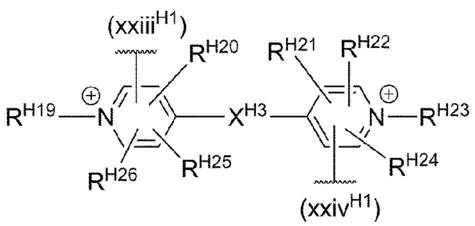 ;

**(H3)**

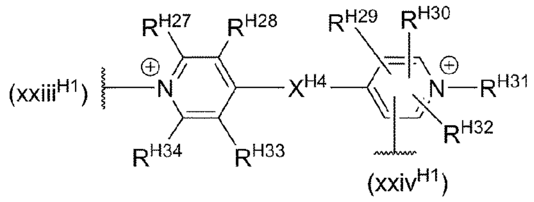 ;

**(H4)**

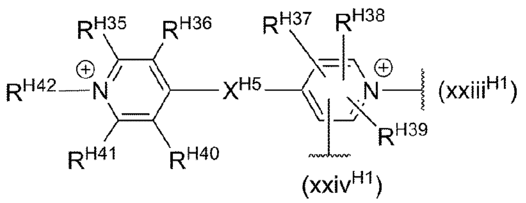 ;

**(H5)**

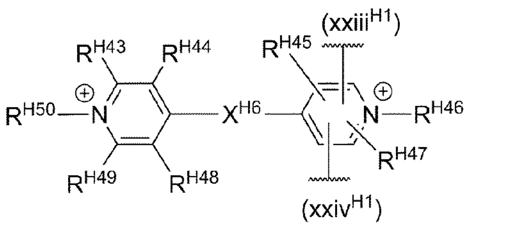 ;

**(H6)**

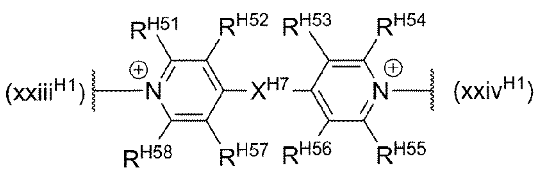 ;

**(H7)**

wobei,

im Falle dass $R^1$ = **(H1)** oder **(H2),** die durch ($xxii^{H1}$) gekennzeichnete Bindung die Bindung zu $L^1$ darstellt,

im Falle dass $R^{1'}$ = **(H1)** oder **(H2),** die durch ($xxii^{H1}$) gekennzeichnete Bindung die Bindung zu $L^{1'}$ darstellt,

im Falle dass $R^{2'}$ = **(H1)** oder **(H2),** die durch ($xxii^{H1}$) gekennzeichnete Bindung die Bindung zu $L^{2'}$ darstellt,

im Falle dass $R^{3'}$= **(H1)** oder **(H2),** die durch ($xxii^{H1}$) gekennzeichnete Bindung die Bindung zu $L^{3'}$ darstellt,

im Falle dass $R^2$ = **(H3), (H4), (H5), (H6)** oder **(H7),** die durch ($xxiii^{H1}$) gekennzeichnete Bindung die Bindung

zu $L^2$ darstellt und die durch ($xxiv^{H1}$) gekennzeichnete Bindung die Bindung zu $L^3$ darstellt, im Falle dass $R^4$ = **(H3), (H4), (H5), (H6)** oder **(H7),** die durch ($xxiii^{11}$) gekennzeichnete Bindung die Bindung zu $L^4$ darstellt und die durch ($xxiv^{H1}$) gekennzeichnete Bindung die Bindung zu $L^5$ darstellt, im Falle dass $R^5$ = **(H3), (H4), (H5), (H6)** oder **(H7),** die durch ($xxiii^{11}$) gekennzeichnete Bindung die Bindung zu $L^6$ darstellt und die durch ($xxiv^{H1}$) gekennzeichnete Bindung die Bindung zu $L^7$ darstellt,

und wobei die Reste $R^{H1}$, $R^{H2}$, $R^{H3}$, $R^{H4}$, $R^{H6}$, $R^{H7}$ , $R^{H8}$, $R^{H9}$, $R^{H11}$, $R^{H12}$, $R^{H13}$, $R^{H15}$, $R^{H16}$, $R^{H17}$, $R^{H18}$, $R^{H20}$, $R^{H21}$, $R^{H22}$, $R^{H24}$, $R^{H25}$, $R^{H26}$, $R^{H27}$, $R^{H28}$, $R^{H29}$, $R^{H30}$, $R^{H32}$, $R^{H33}$, $R^{H34}$, $R^{H35}$, $R^{H36}$, $R^{H37}$, $R^{H38}$, $R^{H39}$, $R^{H40}$, $R^{H41}$, $R^{H43}$, $R^{H44}$, $R^{H45}$, $R^{H47}$, $R^{H48}$, $R^{H49}$, $R^{H5,1}$ $R^{H52}$, $R^{H53}$, $R^{H54}$, $R^{H55}$, $R^{H56}$, $R^{H57}$, $R^{H58}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt sind,

und wobei die Reste $R^{H5}$, $R^{H10}$, $R^{H14}$, $R^{H19}$, $R^{H23}$, $R^{H31}$, $R^{H42}$, $R^{H46}$, $R^{H50}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl ausgewählt sind,

und wobei die Reste $X^{H1}$, $X^{H2}$, $X^{H3}$, $X^{H4}$, $X^{H5}$, $X^{H6}$, $X^{H7}$ unabhängig voneinander jeweils aus der Gruppe bestehend aus direkte Bindung, zweiwertiger konjugierter aliphatischer Rest, zweiwertiger konjugierter (hetero)aromatischer Rest ausgewählt sind;

und wobei in den Fällen, in denen die Reste $R^1$, $R^2$, $R^4$, $R^5$, $R^{1'}$, $R^{2'}$, $R^{3'}$ in den Strukturen **(I)**, **(II)** bzw. **(III)** jeweils eine redoxaktive Ferrocenfunktion **(J)** sind, dies bedeutet, dass die Reste $R^1$, $R^{1'}$, $R^{2'}$, $R^{3'}$ unabhängig voneinander jeweils die folgende Struktur **(J1)** aufweisen und die Reste $R^2$, $R^4$, $R^5$ unabhängig voneinander jeweils aus der Gruppe bestehend aus den folgenden Strukturen **(J2), (J3), (J4)** mit

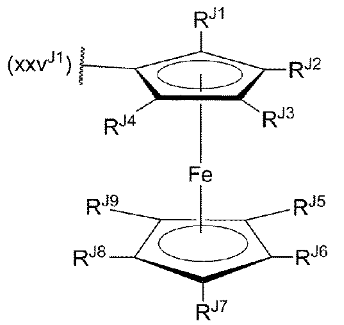

**(J1)**

;

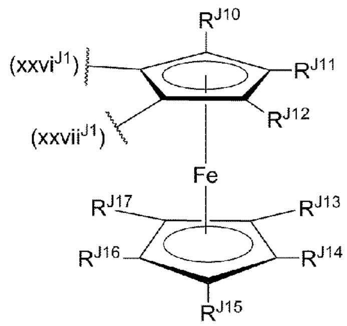

**(J2)**

;

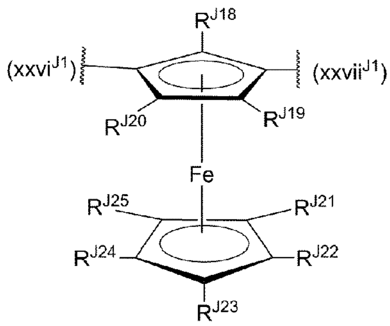

**(J3)**

;

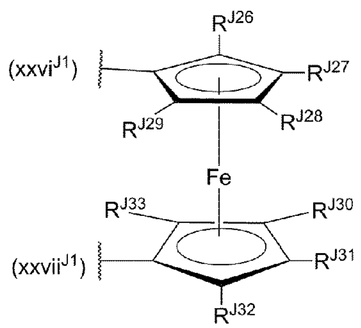

**(J4)**

ausgewählt sind,

wobei,

im Falle dass $R^1$ = **(J1),** die durch ($xxv^{J1}$) gekennzeichnete Bindung die Bindung zu $L^1$ darstellt,
im Falle dass $R^{1'}$ = **(J1),** die durch ($xxv^{J1}$) gekennzeichnete Bindung die Bindung zu $L^{1'}$ darstellt,
im Falle dass $R^{2'}$ = **(J1),** die durch ($xxv^{J1}$) gekennzeichnete Bindung die Bindung zu $L^{2'}$ darstellt,
im Falle dass $R^{3'}$= **(J1),** die durch ($xxv^{J1}$) gekennzeichnete Bindung die Bindung zu $L^{3'}$ darstellt,

im Falle dass $R^2$ = **(J2), (J3)** oder **(J4),** die durch ($xxvi^{J1}$) gekennzeichnete Bindung die Bindung zu $L^2$ darstellt und die durch ($xxvii^{J1}$) gekennzeichnete Bindung die Bindung zu $L^3$ darstellt,
im Falle dass $R^4$ = **(J2), (J3)** oder **(J4),** die durch ($xxvi^{J1}$) gekennzeichnete Bindung die Bindung zu $L^4$ darstellt und die durch ($xxvii^{J1}$) gekennzeichnete Bindung die Bindung zu $L^5$ darstellt,
im Falle dass $R^5$ = **(J2), (J3)** oder **(J4),** die durch ($xxvi^{J1}$) gekennzeichnete Bindung die Bindung zu $L^6$ darstellt und die durch ($xxvii^{J1}$) gekennzeichnete Bindung die Bindung zu $L^7$ darstellt,
und wobei die Reste $R^{J1}$, $R^{J2}$, $R^{J3}$, $R^{J4}$, $R^{J5}$, $R^{J6}$, $R^{J7}$, $R^{J8}$, $R^{J9}$, $R^{J10}$, $R^{J11}$, $R^{J12}$, $R^{J13}$, $R^{J14}$, $R^{J15}$, $R^{J16}$, $R^{J17}$ , $R^{J18,}$ $R^{J19,}$ $R^{J20}$ $R^{J21}$ $R^{J22}$ $R^{J23}$ $R^{J24}$ $R^{J25}$ $R^{J26}$ $R^{J27}$ $R^{J28}$ $R^{J29}$, $R^{J30}$, $R^{J31}$ $R^{J32}$ $R^{J33}$ unabhängig voneinander jeweils aus der Gruppe bestehend aus Wasserstoff, (Halo)Alkylgruppe, Alkenylgruppe, Alkinylgruppe, (Halo)Alkoxygruppe, Cycloalkylgruppe, Carbonylalkyl, -C(=O)-H, Carbonsäure, Carbonsäureamid, Carbonsäureester, Sulfonsäureester, Phosphorsäureester, Amin, Mono(halo)alkylamino, Di(halo)alkylamino, Cyano, Hydroxyl, Halogen ausgewählt sind,
wobei $L^1$, $L^2$, $L^3$, $L^4$, $L^5$, $L^6$, $L^7$, $L^{1'}$, $L^{2'}$, $L^{3'}$ in den Strukturen **(I), (II)** bzw. **(III)** unabhängig voneinander jeweils aus der Gruppe bestehend aus direkte Bindung, **(L11), (L12)** mit

**(L11)**: $♣\text{-}(X^{L1})_{p1}\text{-}[C{=}X^{L2}]_{p2}\text{-}(X^{L3})_{p3}\text{-}B^{L1}\text{-}(Y^{L1})_{q1}\text{-}[C{=}Y^{L2}]_{q2}\text{-}(Y^{L3})_{q3}\text{-}♠$,

**(L12)**: $♣\text{-}(Y^{L4})_{q4}\text{-}[C{=}Y^{L5}]_{q5}\text{-}(Y^{L6})_{q6}\text{-}♠$

ausgewählt sind,
wobei p1, p2, p3 jeweils 0 oder 1 sind, wobei der Fall "p2 = 0, p1 = p3 = 1" ausgeschlossen ist,
wobei q1, q2, q3 jeweils 0 oder 1 sind, wobei der Fall "q2 = 0, q1 = q3 = 1" ausgeschlossen ist,
wobei q4, q5, q6 jeweils 0 oder 1 sind, wobei mindestens einer von q4, q5, q6 = 1 ist und der Fall "q5 = 0, q4 = q6 = 1" ausgeschlossen ist,
wobei $X^{L2}$, $Y^{L2}$, $Y^{L5}$ unabhängig voneinander jeweils aus der Gruppe bestehend aus O, S ausgewählt sind,
wobei $X^{L1}$, $X^{L3}$, $Y^{L1}$, $Y^{L3}$, $Y^{L4}$, $Y^{L6}$ unabhängig voneinander jeweils aus der Gruppe bestehend aus O, S, NH, N[(Halo)Alkyl] ausgewählt sind,
wobei $B^{L1}$ aus der Gruppe bestehend aus zweiwertiger (hetero)aromatischer Rest, zweiwertiger, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest ausgewählt ist,
und wobei in den Fällen, in denen $L^1$, $L^2$, $L^3$, $L^4$, $L^5$, $L^6$, $L^7$, $L^{1'}$, $L^{2'}$ bzw. $L^{3'}$ an ein von Kohlenstoff verschiedenes Atom der jeweiligen redoxaktiven Gruppe $R^1$, $R^2$, $R^4$, $R^5$, $R^{1'}$, $R^{2'}$ bzw. $R^{3'}$ bindet, für die Struktur (L11) die zusätzliche Bedingung "q3 = 0, q2 = 1, q1 = 1 oder q3 = q2 = q1 = 0 oder q3 = 0, q2 = 1, q1 = 0", bevorzugt die Bedingung "q3 = q2 = q1 = 0", gilt, und für die Struktur (L12) die zusätzliche Bedingung "q6 = 0, q5 = 1, q4 = 1 oder q6 = 0, q5 = 1, q4 = 0" gilt,
und wobei "♠" für $L^1$ die zu $R^1$ weisende Bindung bezeichnet, für $L^{1'}$ die zu $R^{1'}$ weisende Bindung bezeichnet, für $L^2$ die zu $R^2$ weisende Bindung bezeichnet, für $L^{2'}$ die zu $R^{2'}$ weisende Bindung bezeichnet, für $L^3$ die zu $R^2$ weisende Bindung bezeichnet, für $L^{3'}$ die zu $R^{3'}$ weisende Bindung bezeichnet, für $L^4$ die zu $R^4$ weisende Bindung bezeichnet, für $L^5$ die zu $R^4$ weisende Bindung bezeichnet, für $L^6$ die zu $R^5$ weisende Bindung bezeichnet, für $L^7$ die zu $R^5$ weisende Bindung bezeichnet,
und wobei "♣" für $L^1$ die zu $X^1$ weisende Bindung bezeichnet, für $L^{1'}$ die zu $X^1$ weisende Bindung bezeichnet, für $L^2$ die zu $X^2$ weisende Bindung bezeichnet, für $L^{2'}$ die zu $X^2$ weisende Bindung bezeichnet, für $L^3$ die zu $X^3$ weisende Bindung bezeichnet, für $L^{3'}$ die zu $X^3$ weisende Bindung bezeichnet, für $L^4$ die zu $X^4$ weisende Bindung bezeichnet, für $L^5$ die zu $X^5$ weisende Bindung bezeichnet, für $L^6$ die zu $X^4$ weisende Bindung bezeichnet, für $L^7$ die zu $X^5$ weisende Bindung bezeichnet,
wobei die Reste $X^1$, $X^2$, $X^3$, $X^4$, $X^5$ in den Strukturen **(I), (II)** bzw. **(III)** unabhängig voneinander nichtkonjugierte organische Gruppen sind, die aus den nachfolgenden Strukturen **(X1), (X2), (X3), (X4), (X5)** mit

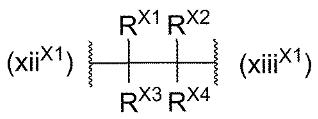 ; 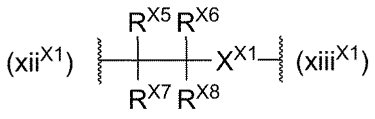 ; 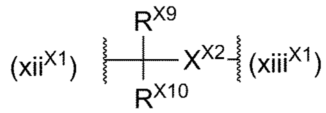 ;

**(X1)** **(X2)** **(X3)**

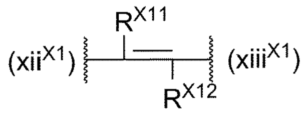 ; 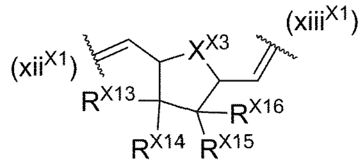 ;

**(X4)** **(X5)**

ausgewählt sind,

wobei, im Falle dass **(X1)** = $X^1$, einer von $R^{X1}$, $R^{X2}$, $R^{X3}$, $R^{X4}$ die Bindung zu $L^1$ und ein anderer von $R^{X1}$, $R^{X2}$, $R^{X3}$, $R^{X4}$ die Bindung zu $L^{1'}$ bezeichnet,

wobei, im Falle dass **(X1)** = $X^2$, einer von $R^{X1}$, $R^{X2}$, $R^{X3}$, $R^{X4}$ die Bindung zu $L^2$ und ein anderer von $R^{X1}$, $R^{X2}$, $R^{X3}$, $R^{X4}$ die Bindung zu $L^{2'}$ bezeichnet,

wobei, im Falle dass **(X1)** = $X^3$, einer von $R^{X1}$, $R^{X2}$, $R^{X3}$, $R^{X4}$ die Bindung zu $L^3$ und ein anderer von $R^{X1}$, $R^{X2}$, $R^{X3}$, $R^{X4}$ die Bindung zu $L^{3'}$ bezeichnet,

wobei, im Falle dass **(X1)** = $X^4$, einer von $R^{X1}$, $R^{X2}$, $R^{X3}$, $R^{X4}$ die Bindung zu $L^4$ und ein anderer von $R^{X1}$, $R^{X2}$, $R^{X3}$, $R^{X4}$ die Bindung zu $L^6$ bezeichnet,

wobei, im Falle dass **(X1)** = $X^5$, einer von $R^{X1}$, $R^{X2}$, $R^{X3}$, $R^{X4}$ die Bindung zu $L^5$ und ein anderer von $R^{X1}$, $R^{X2}$, $R^{X3}$, $R^{X4}$ die Bindung zu $L^7$ bezeichnet,

wobei, im Falle dass **(X2)** = $X^1$, einer von $R^{x5}$, $R^{X6}$, $R^{X7}$, $R^{X8}$ die Bindung zu $L^1$ und ein anderer von $R^{X5}$, $R^{X6}$, $R^{X7}$, $R^{X8}$ die Bindung zu $L^{1'}$ bezeichnet,

wobei, im Falle dass **(X2)** = $X^2$, einer von $R^{x5}$, $R^{X6}$, $R^{X7}$, $R^{X8}$ die Bindung zu $L^2$ und ein anderer von $R^{x5}$, $R^{X6}$, $R^{X7}$, $R^{X8}$ die Bindung zu $L^{2'}$ bezeichnet,

wobei, im Falle dass **(X2)** = $X^3$, einer von $R^{X5}$, $R^{X6}$, $R^{X7}$, $R^{X8}$ die Bindung zu $L^3$ und ein anderer von $R^{X5}$, $R^{X6}$, $R^{X7}$, $R^{X8}$ die Bindung zu $L^{3'}$ bezeichnet,

wobei, im Falle dass **(X2)** = $X^4$, einer von $R^{x5}$, $R^{X6}$, $R^{X7}$, $R^{X8}$ die Bindung zu $L^4$ und ein anderer von $R^{x5}$, $R^{X6}$, $R^{X7}$, $R^{X8}$ die Bindung zu $L^6$ bezeichnet,

wobei, im Falle dass **(X2)** = $X^5$, einer von $R^{X5}$, $R^{X6}$, $R^{X7}$, $R^{X8}$ die Bindung zu $L^5$ und ein anderer von $R^{x5}$, $R^{X6}$, $R^{X7}$, $R^{X8}$ die Bindung zu $L^7$ bezeichnet,

wobei, im Falle dass **(X3)** = $X^1$, $R^{X9}$ die Bindung zu $L^1$ und $R^{X10}$ die Bindung zu $L^{1'}$ bezeichnet,

wobei, im Falle dass **(X3)** = $X^2$, $R^{X9}$ die Bindung zu $L^2$ und $R^{X10}$ die Bindung zu $L^{2'}$ bezeichnet,

wobei, im Falle dass **(X3)** = $X^3$, $R^{X9}$ die Bindung zu $L^3$ und $R^{X10}$ die Bindung zu $L^{3'}$ bezeichnet,

wobei, im Falle dass **(X3)** = $X^4$, $R^{X9}$ die Bindung zu $L^4$ und $R^{X10}$ die Bindung zu $L^6$ bezeichnet,

wobei, im Falle dass **(X3)** = $X^5$, $R^{X9}$ die Bindung zu $L^5$ und $R^{X10}$ die Bindung zu $L^7$ bezeichnet,

wobei, im Falle dass **(X4)** = $X^1$, einer von $R^{X11}$, $R^{X12}$ die Bindung zu $L^1$ und der andere von $R^{X11}$, $R^{X12}$ die Bindung zu $L^{1'}$ bezeichnet,

wobei, im Falle dass **(X4)** = $X^2$, einer von $R^{X11}$, $R^{X12}$ die Bindung zu $L^2$ und der andere von $R^{X11}$, $R^{X12}$ die Bindung zu $L^{2'}$ bezeichnet,

wobei, im Falle dass **(X4)** = $X^3$, einer von $R^{X11}$, $R^{X12}$ die Bindung zu $L^3$ und der andere von $R^{X11}$, $R^{X12}$ die Bindung zu $L^{3'}$ bezeichnet,

wobei, im Falle dass **(X4)** = $X^4$, einer von $R^{X11}$, $R^{X12}$ die Bindung zu $L^4$ und der andere von $R^{X11}$, $R^{X12}$ die Bindung zu $L^6$ bezeichnet,

wobei, im Falle dass **(X4)** = $X^5$, einer von $R^{X11}$, $R^{X12}$ die Bindung zu $L^5$ und der andere von $R^{X11}$, $R^{X12}$ die Bindung zu $L^7$ bezeichnet,

wobei, im Falle dass **(X5)** = $X^1$, einer von $R^{X13}$, $R^{X14}$, $R^{X15}$, $R^{X16}$ die Bindung zu $L^1$ bezeichnet und ein anderer von $R^{X13}$, $R^{X14}$, $R^{X15}$, $R^{X16}$ die Bindung zu $L^{1'}$ bezeichnet,

wobei, im Falle dass **(X5)** = $X^2$, einer von $R^{X13}$, $R^{X14}$, $R^{X15}$, $R^{X16}$ die Bindung zu $L^2$ bezeichnet und ein anderer von $R^{X13}$, $R^{X14}$, $R^{X15}$, $R^{X16}$ die Bindung zu $L^{2'}$ bezeichnet,

wobei, im Falle dass **(X5)** = $X^3$, einer von $R^{X13}$, $R^{X14}$, $R^{X15}$, $R^{X16}$ die Bindung zu $L^3$ bezeichnet und ein anderer von $R^{X13}$, $R^{X14}$, $R^{X15}$, $R^{X16}$ die Bindung zu $L^{3'}$ bezeichnet,

wobei, im Falle dass **(X5)** = $X^4$, einer von $R^{X13}$, $R^{X14}$, $R^{X15}$, $R^{X16}$ die Bindung zu $L^4$ bezeichnet und ein anderer von $R^{X13}$, $R^{X14}$, $R^{X15}$, $R^{X16}$ die Bindung zu $L^6$ bezeichnet,

wobei, im Falle dass **(X5)** = $X^5$, einer von $R^{X13}$, $R^{X14}$, $R^{X15}$, $R^{X16}$ die Bindung zu $L^5$ bezeichnet und ein anderer von $R^{X13}$, $R^{X14}$, $R^{X15}$, $R^{X16}$ die Bindung zu $L^7$ bezeichnet,

und wobei diejenigen von $R^{X1}$, $R^{X2}$, $R^{X3}$, $R^{X4}$, $R^{X5}$, $R^{X6}$, $R^{X7}$, $R^{X8}$, $R^{X13}$, $R^{X14}$, $R^{X15}$, $R^{X16}$, die keine Bindung zu $L^1$, $L^{1'}$, $L^2$, $L^{2'}$, $L^3$, $L^{3'}$, $L^4$, $L^5$, $L^6$ oder $L^7$ bezeichnen, Reste sind, die unabhängig voneinander jeweils aus der Gruppe bestehend aus Wasserstoff, (hetero)aromatischer Rest, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest ausgewählt sind,

und wobei $X^{X1}$, $X^{X2}$ unabhängig voneinander jeweils aus der Gruppe bestehend aus O, S ausgewählt sind, und wobei $X^{X3}$ aus der Gruppe bestehend aus O, S, $-CH_2-$ ausgewählt ist,

und wobei die jeweils durch ($xii^{X1}$) gekennzeichnete Bindung derjenigen entspricht, die in den Strukturen **(I), (II)** und **(III)** jeweils durch "*", "#", "&", "§" bzw. "$" gekennzeichnet ist,

und wobei die jeweils durch ($xiii^{X1}$) gekennzeichnete Bindung derjenigen entspricht, die in den Strukturen **(I), (II)** und **(III)** in den Fällen, in denen $m^1 = 0$, $m^2 = 0$, $m^3 = 0$, $m^4 = 0$ bzw. $m^5 = 0$ jeweils an "**", "##", "&&", "§§" bzw. "$$" bindet und in den Fällen, in denen $m^1 > 0$, $m^2 > 0$, $m^3 > 0$, $m^4 > 0$ bzw. $m^5 > 0$ jeweils an $Y^1$, $Y^2$, $Y^3$, $Y^4$ bzw. $Y^5$ bindet,

wobei $Y^1$, $Y^2$, $Y^3$, $Y^4$, $Y^5$ in den Strukturen **(I), (II)** bzw. **(III)** unabhängig voneinander jeweils nichtkonjugierte organische Spacereinheiten sind, die aus den nachfolgenden Strukturen **(Y1), (Y2), (Y3), (Y4), (Y5)** mit

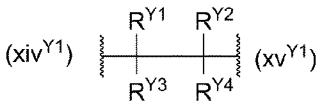 ; 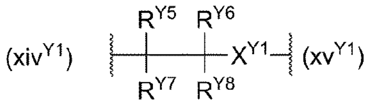 ; 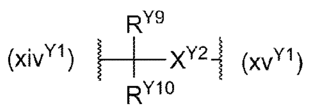 ;

**(Y1)** **(Y2)** **(Y3)**

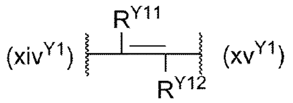 ; 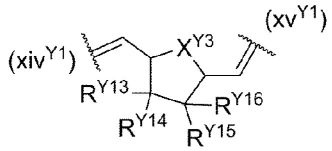 ;

**(Y4)** **(Y5)**

ausgewählt sind,

wobei $R^{Y1}$, $R^{Y2}$, $R^{Y3}$, $R^{Y4}$, $R^{Y5}$, $R^{Y6}$, $R^{Y7}$, $R^{Y8}$, $R^{Y9}$, $R^{Y10}$, $R^{Y11}$, $R^{Y12}$, $R^{Y13}$, $R^{Y14}$, $R^{Y15}$, $R^{Y16}$ unabhängig voneinander jeweils aus der Gruppe bestehend aus Wasserstoff, (hetero)aromatischer Rest, gegebenenfalls mit mindestens einer Gruppe ausgewählt aus Nitrogruppe, $-NH_2$, -CN, -SH, -OH, Halogen substituierter und gegebenenfalls mindestens eine Gruppe ausgewählt aus Ether, Thioether, Aminoether, Carbonylgruppe, Carbonsäureester, Carbonsäureamidgruppe, Sulfonsäureester, Phosphorsäureester aufweisender aliphatischer Rest ausgewählt sind,

und wobei $X^{Y1}$, $X^{Y2}$ unabhängig voneinander jeweils aus der Gruppe bestehend aus O, S ausgewählt sind, und wobei $X^{Y3}$ aus der Gruppe bestehend aus O, S, $-CH_2-$ ausgewählt ist,

und wobei die jeweils durch ($xv^{Y1}$) gekennzeichnete Bindung derjenigen entspricht, die in den Strukturen **(I), (II)** und **(III)** durch "**", "##", "&&", "§§" bzw. "$$" gekennzeichnet ist,

und wobei die jeweils durch ($xiv^{Y1}$) gekennzeichnete Bindung derjenigen entspricht, die in den Strukturen **(I), (II)** und **(III)** an $X^1$, $X^2$, $X^3$, $X^4$ bzw. $X^5$ bindet,

wobei die ionische Flüssigkeit eine Struktur $Q^+A^-$ aufweist, worin $Q^+$ ein Kation ist, welches aus der Gruppe bestehend aus den Strukturen **(Q1), (Q2), (Q3), (Q4), (Q5)** mit

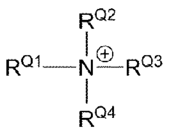 ; 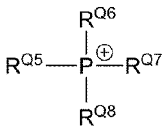 ; 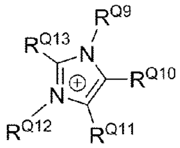 ; 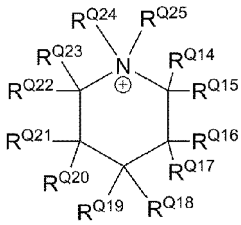 ; 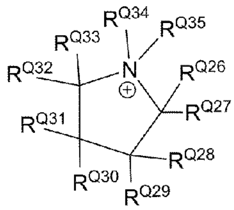 ;

(Q1) (Q2) (Q3) (Q4) (Q5)

ausgewählt ist,
wobei $R^{Q1}$, $R^{Q2}$, $R^{Q3}$, $R^{Q4}$, $R^{Q5}$, $R^{Q6}$, $R^{Q7}$, $R^{Q8}$ unabhängig voneinander jeweils aus der Gruppe bestehend aus (Halo)Alkylgruppe, Cycloalkylgruppe ausgewählt sind,
wobei $R^{Q9}$, $R^{Q10}$, $R^{Q11}$ $R^{Q12}$ , $R^{Q}13$, $R^{Q14}$, $R^{Q15}$ $R^{Q16}$, $R^{Q17}$ $R^{Q18}$ $R^{Q19}$ $R^{Q20}$, $R^{Q21}$ $R^{Q22}$ $R^{Q23}$ $R^{Q24}$ $R^{Q25}$, $R^{Q26}$, $R^{Q27}$, $R^{Q28}$, $R^{Q29}$, $R^{Q30}$, $R^{Q31}$, $R^{Q32}$, $R^{Q33}$, $R^{Q34}$, $R^{Q35}$ unabhängig voneinander jeweils aus der Gruppe bestehend aus Wasserstoff, (Halo)Alkylgruppe, die mindestens eine Ethergruppe aufweisen kann, Cycloalkylgruppe ausgewählt sind,
und worin A- ein Anion ist, welches insbesondere aus der Gruppe bestehend aus Phosphat, Phosphonat, Alkylphosphonat, Monoalkylphosphat, Dialkylphosphat, Bis[trifluormethansulfonyl]imid, (Halo)alkylsulfonat, (Halo)alkylsulfat, Bis[fluorsulfonyl]imid, Halogenid, Dicyanamid, Hexafluorophosphat, Sulfat, Tetrafluoroborat, Trifluormethansulfonat, Perchlorat, Hydrogensulfat, (Halo)alkylcarboxylat, Formiat, Bisoxalatoborat, Tetrachloroaluminat, Dihydrogenphosphat, Monoalkylhydrogenphosphat, Nitrat ausgewählt ist.

2. Elektrodenmaterial nach Anspruch 1, worin das Gesamtgewicht der vom Elektrodenmaterial umfassten ionischen Flüssigkeit, bezogen auf das Gesamtgewicht des vom Elektrodenmaterial umfassten, in der Hauptkette nichtkonjugierten, organischen Redox-Polymers **P,** im Bereich 0.1 bis 1000 Gew.-% liegt.

3. Elektrodenmaterial nach Anspruch 1 oder 2, wobei das Leitfähigkeitsadditiv ausgewählt ist aus der Gruppe bestehend aus Kohlenstoffmaterialien, elektrisch leitenden Polymeren, Metallen, Halbmetallen, (Halb)metallverbindungen.

4. Elektrodenmaterial nach einem der Ansprüche 1 bis 3, wobei das Gesamtgewicht des vom Elektrodenmaterial umfassten Leitfähigkeitsadditivs, bezogen auf das Gesamtgewicht des vom Elektrodenmaterial umfassten Redox-Polymers **P,** im Bereich 0.1 bis 1000 Gew.-% liegt.

5. Elektrodenmaterial nach einem der Ansprüche 1 bis 4, weiterhin umfassend ein Bindeadditiv, welches bevorzugt ein Polymer ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylat, Polymethacrylat, Polysulfon, Cellulosederivate, Polyurethan ist.

6. Elektrodenmaterial nach Anspruch 5, wobei das das Gesamtgewicht des vom Elektrodenmaterial umfassten Bindeadditivs, bezogen auf das Gesamtgewicht des vom Elektrodenmaterial umfassten Redox-Polymers **P,** im Bereich 0.001 bis 100 Gew.-% liegt.

7. Elektrode umfassend ein Elektrodenmaterial nach einem der Ansprüche 1 bis 6 und ein Substrat, welches insbesondere ausgewählt ist aus der Gruppe bestehend aus Metallen, Kohlenstoffmaterialien, Oxidsubstanzen.

8. Ladungsspeicher, insbesondere Sekundärbatterie, umfassend eine Elektrode nach Anspruch 7.

9. Verfahren zur Herstellung einer Elektrode umfassend die folgenden Schritte:

(a) mindestens ein in der Hauptkette nichtkonjugiertes, organisches Redox-Polymer **P,** mindestens eine ionische Flüssigkeit, mindestens ein Leitfähigkeitsadditiv, gegebenenfalls mindestens ein Lösungsmittel und gegebenenfalls mindestens ein Bindeadditiv, werden vermischt, wodurch eine Mischung **M** erhalten wird,
(b) die Mischung **M** wird auf ein Substrat aufgetragen,
(c) gegebenenfalls wird das Lösungsmittel mindestens teilweise entfernt,
wobei in Schritt (a) ein wie in Anspruch 1 definiertes nichtkonjugiertes, organisches Redox-Polymer **P** eingesetzt wird,

und wobei in Schritt (a) eine wie in Anspruch 1 definierte ionische Flüssigkeit der Struktur $Q^+A^-$eingesetzt wird.

**10.** Verfahren nach Anspruch 9, wobei das Gesamtgewicht der in Schritt (a) eingesetzten ionischen Flüssigkeit, bezogen auf das Gesamtgewicht des in Schritt (a) eingesetzten, in der Hauptkette nichtkonjugierten, organischen Redox-Polymers **P,** im Bereich 0.1 bis 1000 Gew.-% liegt.

**11.** Verfahren nach Anspruch 9 oder 10, wobei das in Schritt (a) eingesetzte Leitfähigkeitsadditiv aus der Gruppe bestehend aus Kohlenstoffmaterialien, elektrisch leitenden Polymeren, Metallen, Halbmetallen, (Halb)metallverbindungen ausgewählt ist.

**12.** Verfahren nach einem der Ansprüche 9 bis 11, wobei das Gesamtgewicht des in Schritt (a) eingesetzten Leitfähigkeitsadditivs, bezogen auf das Gesamtgewicht des in Schritt (a) eingesetzten, in der Hauptkette nichtkonjugierten, organischen Redox-Polymers **P,** im Bereich 0.1 bis 1000 Gew.-% liegt.

**13.** Verfahren nach einem der Ansprüche 9 bis 12, wobei in Schritt (a) ein Bindeadditiv, welches bevorzugt aus der Gruppe bestehend aus Polytetrafluoroethylen, Polyvinylidenfluorid, Polyhexafluoropropylen, Polyvinylchlorid, Polycarbonat, Polystyrol, Polyacrylat, Polymethacrylat, Polysulfon, Cellulosederivate, Polyurethan ausgewählt ist, eingesetzt wird.

**14.** Verfahren nach Anspruch 13, wobei das Gesamtgewicht des in Schritt (a) eingesetzten Bindeadditivs, bezogen auf das Gesamtgewicht des in Schritt (a) eingesetzten, in der Hauptkette nichtkonjugierten, organischen Redox-Polymers **P,** im Bereich 0.001 bis 100 Gew.-% liegt.

**15.** Verfahren nach einem der Ansprüche 9 bis 14, wobei in Schritt (a) ein Lösungsmittel eingesetzt wird, welches bevorzugt aus der Gruppe bestehend aus *N*-Methyl-2-pyrrolidon, Wasser, Dimethylsulfoxid, Ethylencarbonat, Propylencarbonat, Dimethylcarbonat, Methylethylcarbonat, γ-Butyrolacton, Tetrahydrofuran, Dioxolan, Sulfolan, *N,N'*-Dimethylformamid, *N,N'*-Dimethylacetamid ausgewählt ist.

**16.** Verfahren nach Anspruch 15, wobei soviel Lösungsmittel in Schritt (a) eingesetzt wird, dass die Konzentration des Polymers **P** in der erhaltenen Mischung **M** im Bereich zwischen 10 und 1000 mg/ml liegt.

**17.** Verfahren nach einem der Ansprüche 9 bis 16, wobei das Substrat in Schritt (b) aus der Gruppe bestehend aus Metallen, Kohlenstoffmaterialien, Oxidsubstanzen ausgewählt ist.

**18.** Elektrode erhältlich nach dem Verfahren nach einem der Ansprüche 9 bis 17.

**19.** Ladungsspeicher, insbesondere Sekundärbatterie, umfassend eine Elektrode nach Anspruch 18.

## Claims

**1.** An electrode material comprising at least one conductivity additive, at least one ionic liquid and at least one organic redox polymer **P** not conjugated in the main chain,

wherein the non-conjugated organic redox polymer **P** comprises $n^1$ repeat units of chemical structure **(I)** linked to one another and/or $n^2$ repeat units of chemical structure **(II)** linked to one another and/or $n^3$ repeat units of chemical structure **(III)** linked to one another with

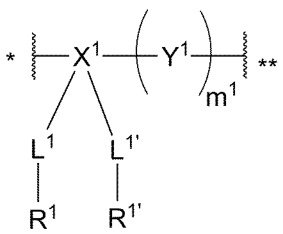 ; 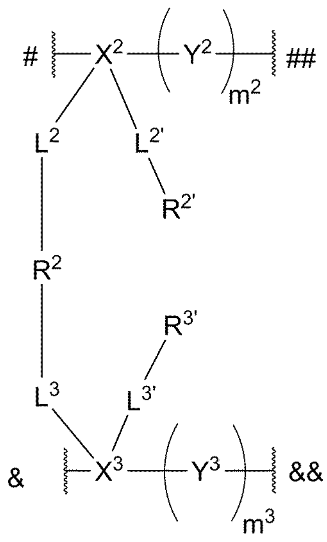 ; 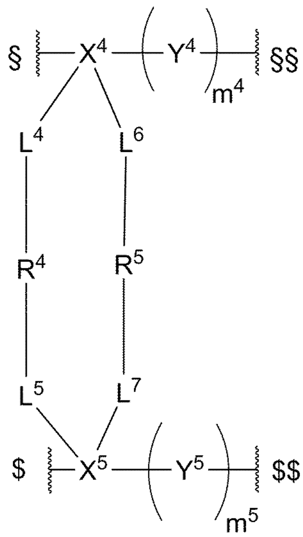 ;

(I) (II) (III)

comprising
wherein n', $n^2$ and $n^3$ are in each case independently an integer ≥ 4,
wherein $m^1$, $m^2$, $m^3$, $m^4$ and $m^5$ are in each case independently an integer ≥ 0,
wherein the repeat units of chemical structure **(I)** within the polymer **P** are the same or at least partially different from one another,
wherein the repeat units of chemical structure **(II)** within the polymer **P** are the same or at least partially different from one another,
wherein the repeat units of chemical structure **(III)** within the polymer **P** are the same or at least partially different from one another,
wherein the repeat units of chemical structure **(I)** within the polymer are linked to one another such that the bond of a particular repeat unit denoted by "**" is linked to the bond of the adjacent repeat unit denoted by "*",
wherein the repeat units of chemical structure **(II)** within the polymer are linked to one another such that the bond of a particular repeat unit denoted by "##" is linked to the bond of the adjacent repeat unit denoted by "#" and the bond of a particular repeat unit denoted by "&&" is linked to the bond of the adjacent repeat unit denoted by "&",
wherein the repeat units of chemical structure **(III)** within the polymer are linked to one another such that the bond of a particular repeat unit denoted by "§§" is linked to the bond of the adjacent repeat unit denoted by "§" and the bond of a particular repeat unit denoted by "$$" is linked to the bond of the adjacent repeat unit denoted by "$",
wherein $R^1$, $R^2$, $R^4$, $R^5$, $R^{1'}$, $R^{2'}$, $R^{3'}$ in structures **(I), (II)** and **(III),** independently, are in each case organic redox-active groups selected from the group consisting of redox-active aromatic imide function **(A),** redox-active organic function comprising at least one stable oxygen radical **(B),** redox-active anthraquinone/carbazole function **(C),** redox-active dialkoxybenzene function **(D),** redox-active benzoquinone function **(E),** redox-active triphenylamine function **(G),** redox-active viologen function **(H),** redox-active ferrocene function **(J)** and $R^{1'}$, $R^{2'}$, $R^{3'}$ may also in each case be a hydrogen residue,
wherein, in the cases in which the residues $R^1$, $R^2$, $R^4$, $R^5$, $R^{1'}$, $R^{2'}$, $R^{3'}$ in structures **(I), (II)** and **(III)** are in each case a redox-active aromatic imide function **(A),** the residues $R^1$, $R^2$, $R^4$, $R^5$, $R^{1'}$, $R^{2'}$, $R^{3'}$ independently in each case have the following structure **(A1)** and the residues $R^2$, $R^4$, $R^5$ also independently in each case have the following structure **(A2)** with

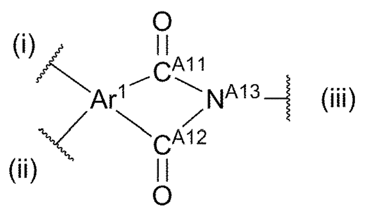 ; 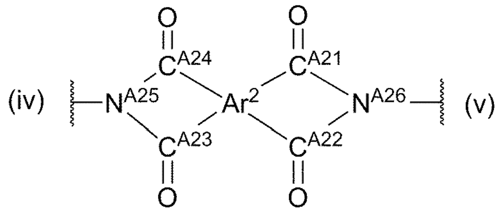 ;

(A1) (A2)

,

wherein the residue $Ar^1$ in **(A1)** and the residue $Ar^2$ in **(A2)** are in each case independently a (hetero)aromatic residue comprising one or more (hetero)aromatic rings,
wherein the (hetero)aromatic rings of $Ar^1$ in **(A1)** and the (hetero)aromatic rings of $Ar^2$ in **(A2)** can in each case independently be substituted with at least one residue selected from the group consisting of (halo)alkyl group, alkenyl group, alkynyl group, (halo)alkoxy group, cycloalkyl group, carbonylalkyl group, -C(=O)-H, carboxylic acid residue, carboxamide, carboxylic ester, sulfonic ester, phosphoric ester, amine, mono(halo)alkylamino, di(halo)alkylamino, cyano, hydroxyl, halogen,
wherein in **(A1)** two of the ring atoms of $Ar^1$ in each case form a five-membered ring, six-membered ring or seven-membered ring with the two carbon atoms $C^{A11}$ and $C^{A12}$ and the nitrogen atom $N^{A13}$,
wherein in **(A2)** two of the ring atoms of $Ar^2$ in each case form a five-membered ring, six-membered ring or seven-membered ring with the two carbon atoms $C^{A21}$ and $C^{A22}$ and the nitrogen atom $N^{A26}$, and two ring atoms of $Ar^2$ different therefrom in each case form a five-membered ring, six-membered ring or seven-membered ring with the two carbon atoms $C^{A23}$ and $C^{A24}$ and the nitrogen atom $N^{A25}$,
and wherein two aromatic carbon atoms of the same (hetero)aromatic ring in $Ar^1$ and two aromatic carbon atoms of the same (hetero)aromatic ring in $Ar^2$ may also be bridged via a divalent aliphatic residue,
and wherein in the case that the residue $Ar^1$ comprises a plurality of (hetero)aromatic rings, these may be at least partially condensed with one another in $Ar^1$,
and wherein in the case that the residue $Ar^2$ comprises a plurality of (hetero)aromatic rings, these may be at least partially condensed with one another in $Ar^2$,
and wherein in the case that the residue $Ar^1$ comprises a plurality of (hetero)aromatic rings, two aromatic carbon atoms of different (hetero)aromatic rings in $Ar^1$ may also be bridged via a direct bond, or a residue selected from the group consisting of heteroatom, divalent aliphatic residue,
and wherein in the case that the residue $Ar^2$ comprises a plurality of (hetero)aromatic rings, two aromatic carbon atoms of different (hetero)aromatic rings in $Ar^2$ may also be bridged via a direct bond, or a residue selected from the group consisting of heteroatom, divalent aliphatic residue,
wherein the bonds (i) and (ii) originate from aromatic carbon atoms of $Ar^1$,
and wherein
in the case that $R^1$ = **(A1),** one of the bonds identified by (i), (ii), (iii) represents the bond to $L^1$,
in the case that $R^{1'}$ = **(A1),** one of the bonds identified by (i), (ii), (iii) represents the bond to $L^{1'}$,
in the case that $R^{2'}$ = **(A1),** one of the bonds identified by (i), (ii), (iii) represents the bond to $L^{2'}$,
in the case that $R^{3'}$ = **(A1),** one of the bonds identified by (i), (ii), (iii) represents the bond to $L^{3'}$,
in the case that $R^2$ = **(A1),** one of the bonds identified by (i), (ii), (iii) represents the bond to $L^2$ and another one of the bonds identified by (i), (ii), (iii) represents the bond to $L^3$,
in the case that $R^4$ = **(A1),** one of the bonds identified by (i), (ii), (iii) represents the bond to $L^4$ and another one of the bonds identified by (i), (ii), (iii) represents the bond to $L^5$,
in the case that $R^5$ = **(A1),** one of the bonds identified by (i), (ii), (iii) represents the bond to $L^6$ and another one of the bonds identified by (i), (ii), (iii) represents the bond to $L^7$,
in the case that $R^2$ = **(A2),** the bond identified by (iv) represents the bond to $L^2$ and the bond identified by (v) represents the bond to $L^3$,
in the case that $R^4$ = **(A2),** the bond identified by (iv) represents the bond to $L^4$ and the bond identified by (v) represents the bond to $L^5$,
in the case that $R^5$ = **(A2),** the bond identified by (iv) represents the bond to $L^6$ and the bond identified by (v) represents the bond to $L^7$,
and then those of the bonds identified by (i) and (ii) which do not represent a bond to $L^1$, $L^2$, $L^3$, $L^4$, $L^5$, $L^6$, $L^7$, $L^{1'}$, $L^{2'}$ or $L^{3'}$ are in each case independently linked with a residue selected from the group consisting of hydrogen,

(halo)alkyl group, alkenyl group, alkynyl group, (halo)alkoxy group, cycloalkyl group, carbonylalkyl, -C(=O)-H, carboxylic acid residue, carboxamide, carboxylic ester, sulfonic ester, phosphoric ester, amine, mono(halo)alkylamino, di(halo)alkylamino, cyano, hydroxyl, halogen,

and the bond identified by (iii), if it does not represent a bond to $L^1$, $L^2$, $L^3$, $L^4$, $L^5$, $L^6$, $L^7$, $L^{1'}$, $L^{2'}$ or $L^{3'}$, is linked with a residue selected from the group consisting of hydrogen, (halo)alkyl group, alkenyl group, alkynyl group, (halo)alkoxy group, cycloalkyl group, carbonylalkyl, -C(=O)-H, carboxylic acid residue, carboxamide, carboxylic ester, cyano, hydroxyl, halogen;

and wherein in the cases in which the residues $R^1$, $R^2$, $R^4$, $R^5$, $R^{1'}$, $R^{2'}$, $R^{3'}$ in structures **(I), (II)** and **(III),** respectively, are in each case a redox-active organic function comprising at least one stable oxygen radical **(B),** the residues $R^1$, $R^2$, $R^4$, $R^5$, $R^{1'}$, $R^{2'}$, $R^{3'}$, independently, are in each case selected from one of the following structures **(B1), (B2)** with

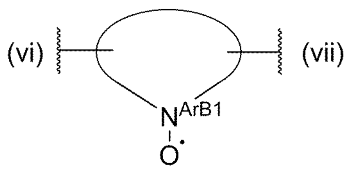

**(B1)**

;

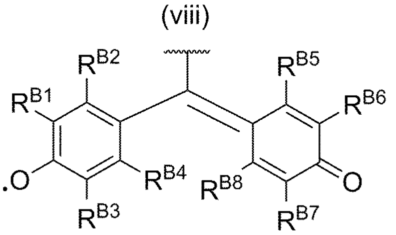

**(B2)**

;

,

wherein in structure **(B1)** the nitrogen atom $N^{ArB1}$ is part of an aliphatic ring $Ar^{B1}$ which, in addition to the nitrogen atom $N^{ArB1}$, can comprise further heteroatom- and heteroatom-containing groups and which can be condensed with one or more further aliphatic or aromatic rings and linked via a *spiro* bond to one or more further aliphatic rings which in turn optionally have further heteroatom- and heteroatom-containing groups,

wherein at least one ring carbon atom of $Ar^{B1}$ can be substituted with a group selected from (halo)alkyl group, alkenyl group, alkynyl group, (halo)alkoxy group, cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen,

wherein the bonds identified by (vi) and (vii) originate from ring carbon atoms of $Ar^{B1}$ and/or from ring carbon atoms of the rings condensed with $Ar^{B1}$ or linked via a *spiro* bond,

wherein, in case that $R^1$ = **(B1),** the bond identified by (vi) represents the bond to $L^1$ and the bond identified by (vii) represents a bond to hydrogen,

wherein, in case that $R^{1'}$ = **(B1),** the bond identified by (vi) represents the bond to $L^{1'}$ and the bond identified by (vii) represents a bond to hydrogen,

wherein, in case that $R^{2'}$ = **(B1),** the bond identified by (vi) represents the bond to $L^{2'}$ and the bond identified by (vii) represents a bond to hydrogen,

wherein, in case that $R^{3'}$ = **(B1),** the bond identified by (vi) represents the bond to $L^{3'}$ and the bond identified by (vii) represents a bond to hydrogen,

and wherein, in case that $R^2$ = **(B1),** the bond identified by (vi) represents the bond to $L^2$ and the bond identified by (vii) represents the bond to $L^3$,

and wherein, in case that $R^4$ = **(B1),** the bond identified by (vi) represents the bond to $L^4$ and the bond identified by (vii) represents the bond to $L^5$,

and wherein, in case that $R^5$ = **(B1),** the bond identified by (vi) represents the bond to $L^6$ and the bond identified by (vii) represents the bond to $L^7$,

wherein, in case that $R^1$, $R^{1'}$, $R^{2'}$ or $R^{3'}$ = **(B2),** the bond identified by (viii) represents the bond to $L^1$, $L^{1'}$, $L^{2'}$ or $L^{3'}$ and $R^{B1}$, $R^{B2}$, $R^{B3}$, $R^{B4}$, $R^{B5}$, $R^{B6}$, $R^{B7}$, $R^{B8}$ are in each case independently selected from the group consisting of hydrogen, (halo)alkyl group, alkenyl group, alkynyl group, (halo)alkoxy group, cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen,

and wherein, in case that $R^2$, $R^4$ or $R^5$ = **(B2),** the bond identified by (viii) represents the bond to $L^2$, $L^4$ or $L^6$ and one of the residues $R^{B7}$, $R^{B8}$ represents a direct bond to $L^3$, $L^5$ or $L^7$, wherein then the residues $R^{B1}$, $R^{B2}$, $R^{B3}$, $R^{B4}$, $R^{B5}$, $R^{B6}$ and that one of the two residues $R^{B7}$, $R^{B8}$ which does not represent a direct bond to $L^3$, $L^5$

or $L^7$ are in each case independently selected from the group consisting of hydrogen, (halo)alkyl group, alkenyl group, alkynyl group, (halo)alkoxy group, cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen;
and wherein in the cases in which the residues $R^1$, $R^2$, $R^4$, $R^5$, $R^{1'}$, $R^{2'}$, $R^{3'}$ in structures **(I), (II)** and **(III)** are in each case a redox-active anthraquinone/carbazole function **(C),** the residues $R^1$, $R^{1'}$, $R^{2'}$, $R^{3'}$ are in each case independently selected from the group consisting of structures **(C1), (C2)** and the residues $R^2$, $R^4$, $R^5$ are in each case independently selected from the group consisting of structures **(C3), (C4)** with

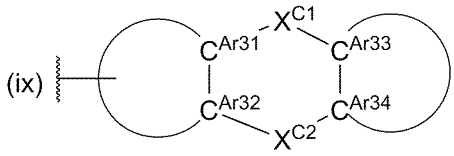

**(C1)**

;

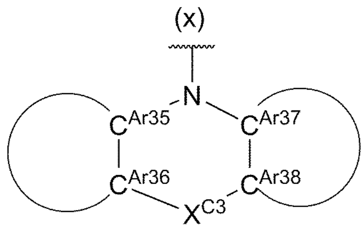

**(C2)**

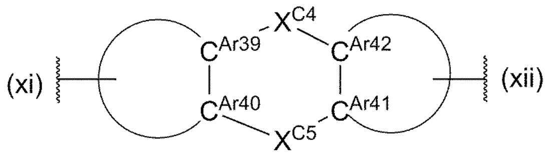

**(C3)**

;

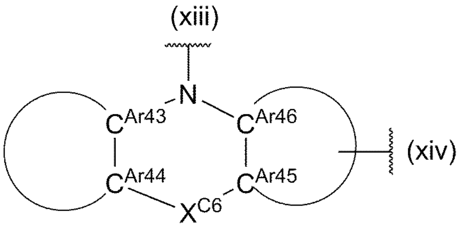

**(C4)**

;

,

wherein in structure **(C1)** the carbon atoms represented by $C^{Ar31}$ and $C^{Ar32}$ are part of a (hetero)aromatic five-membered ring or six-membered ring, wherein at least one of the carbon atoms different from $C^{Ar31}$ and $C^{Ar32}$ and, if present, at least one nitrogen atom in this ring can be substituted with a substituent selected from (halo)alkyl group, alkenyl group, alkynyl group, (halo)alkoxy group, cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen,
wherein in structure **(C1)** the carbon atoms represented by $C^{Ar33}$ and $C^{Ar34}$ are part of a (hetero)aromatic five-membered ring or six-membered ring, wherein at least one of the carbon atoms different from $C^{Ar33}$ and $C^{Ar34}$ and, if present, at least one nitrogen atom in this ring can be substituted with a substituent selected from (halo)alkyl group, alkenyl group, alkynyl group, (halo)alkoxy group, cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen,
wherein in structure **(C2)** the carbon atoms represented by $C^{Ar35}$ and $C^{Ar36}$ and the carbon atoms represented by $C^{Ar37}$ and $C^{Ar38}$ are in each case part of a (hetero)aromatic five-membered ring or six-membered ring, wherein at least one of the carbon atoms different from $C^{Ar35}$, $C^{Ar36}$, $C^{Ar37}$, $C^{Ar38}$ and, if present, at least one nitrogen atom in this ring can be substituted with a substituent selected from (halo)alkyl group, alkenyl group, alkynyl group, (halo)alkoxy group, cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen,
wherein in structure **(C3)** the carbon atoms represented by $C^{Ar39}$ and $C^{Ar40}$ and the carbon atoms represented by $C^{Ar41}$ and $C^{Ar42}$ are in each case part of a (hetero)aromatic five-membered ring or six-membered ring, wherein at least one of the carbon atoms different from $C^{Ar39}$, $C^{Ar40}$, $C^{Ar41}$ and $C^{Ar42}$ and, if present, at least one nitrogen atom in the two rings can be substituted with a substituent selected from (halo)alkyl group, alkenyl group, alkynyl group, (halo)alkoxy group, cycloalkyl group, carbonylalkyl, -C(=O)-H, carboxylic acid, carboxamide, carboxylic

ester, sulfonic ester, phosphoric ester, amine, mono(halo)alkylamino, di(halo)alkylamino, cyano, hydroxyl, halogen,

wherein in structure **(C4)** the carbon atoms represented by $C^{Ar43}$ and $C^{Ar44}$ are part of a (hetero)aromatic five-membered ring or six-membered ring, wherein at least one of the carbon atoms different from $C^{Ar43}$ and $C^{Ar44}$ and, if present, at least one nitrogen atom in this ring can be substituted with a substituent selected from (halo)alkyl group, alkenyl group, alkynyl group, (halo)alkoxy group, cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen,

wherein in structure **(C4)** the carbon atoms represented by $C^{Ar45}$ and $C^{Ar46}$ are part of a (hetero)aromatic five-membered ring or six-membered ring, wherein at least one of the carbon atoms different from $C^{Ar45}$ and $C^{Ar46}$ and, if present, at least one nitrogen atom in this ring can be substituted with a substituent selected from (halo)alkyl group, alkenyl group, alkynyl group, (halo)alkoxy group, cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen,

wherein $X^{C1}$, $X^{C2}$, $X^{C3}$, $X^{C4}$, $X^{C5}$, $X^{C6}$ are in each case independently selected from the group consisting of -C(=$Y^{C1}$)-, -O-, -S-, -NH-, -N(haloalkyl)-, -N(alkyl)-, and $X^{C2}$, $X^{C3}$, $X^{C5}$, $X^{C6}$ may also in each case be a direct bond, and wherein $X^{C1}$, $X^{C4}$ may also in each case be a group of the general formula ($\alpha^{C1}$)-C(=O)-C(=O)-($\beta^{C1}$), wherein ($\alpha^{C1}$) represents the bond to $C^{Ar31}$ and $C^{Ar39}$ and ($\beta^{C1}$) marks the bond to $C^{Ar33}$ and $C^{Ar42}$,

wherein $Y^{C1}$ is selected from the group consisting of O, S, and one of the structures **($Y^{C11}$), ($Y^{C12}$), ($Y^{C13}$)** with

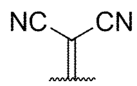 ; 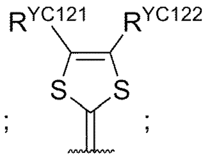 ; 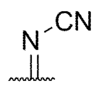 ;

**($Y^{C11}$)** **($Y^{C12}$)** **($Y^{C13}$)**

wherein $R^{YC121}$, $R^{YC122}$ are in each case independently selected from the group consisting of hydrogen, (halo)alkyl group, alkenyl group, alkynyl group, (halo)alkoxy group, cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen,

wherein the (hetero)aromatic five-membered ring or six-membered ring comprising $C^{Ar31}$ and $C^{Ar32}$ may be bridged with the (hetero)aromatic five-membered ring or six-membered ring comprising $C^{Ar33}$ and $Q^{Ar34}$ in addition to $X^{C1}$ and $X^{C2}$ via a further divalent organic residue,

wherein the (hetero)aromatic five-membered ring or six-membered ring comprising CAr39 and CAr40 may be bridged with the (hetero)aromatic five-membered ring or six-membered ring comprising CAr41 and CAr42 in addition to XC4 and XC5 via a further divalent organic residue,

wherein the bond identified by (ix) originates from one of the atoms which form the (hetero)aromatic five- or six-membered ring including $C^{Ar31}$ and $C^{Ar32}$,

wherein the bond identified by (xi) originates from one of the atoms which form the (hetero)aromatic five- or six-membered ring including $C^{Ar39}$ and $c^{Ar40}$,

wherein the bond identified by (xii) originates from one of the atoms which form the (hetero)aromatic five- or six-membered ring including $C^{Ar41}$ and $C^{Ar42}$,

wherein the bond identified by (xiv) originates from one of the atoms which form the (hetero)aromatic five- or six-membered ring including $C^{Ar45}$ and $C^{Ar46}$,

and wherein

in the case that $R^1$ = **(C1)** or **(C2),** the bonds identified by (ix) or (x) in each case represent the bond to $L^1$,

in the case that R1' = (C1) or (C2), the bonds identified by (ix) or (x) in each case represent the bond to L1',

in the case that $R^{2'}$ = **(C1)** or **(C2),** the bonds identified by (ix) or (x) in each case represent the bond to $L^{2'}$,

in the case that $R^{3'}$ = **(C1)** or **(C2),** the bonds identified by (ix) or (x) in each case represent the bond to $L^{3'}$,

in the case that R2 = (C3) or (C4), the bonds identified by (xi) or (xiii) in each case represent the bond to L2 and the bonds identified by (xii) or (xiv) in each case represent the bond to L3,

in the case that $R^4$ = **(C3)** or **(C4),** the bonds identified by (xi) or (xiii) in each case represent the bond to $L^4$ and the bonds identified by (xii) or (xiv) in each case represent the bond to $L^5$,

in the case that $R^5$ = **(C3)** or **(C4),** the bonds identified by (xi) or (xiii) in each case represent the bond to $L^6$ and the bonds identified by (xii) or (xiv) in each case represent the bond to $L^7$;

and wherein, in the cases in which the residues $R^1$, $R^2$, $R^4$, $R^5$, $R^{1'}$, $R^{2'}$, $R^{3'}$ in structures **(I), (II)** and **(III)** are in

each case a redox-active dialkoxybenzene function **(D),** this means that the residues $R^1$, $R^{1'}$, $R^{2'}$, $R^{3'}$ independently in each case have the following structure **(D1)** and $R^2$, $R^4$, $R^5$ independently in each case have the following structure **(D2)**

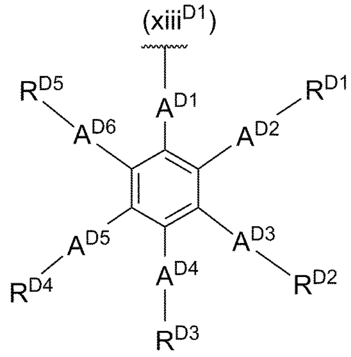

**(D1)**

;

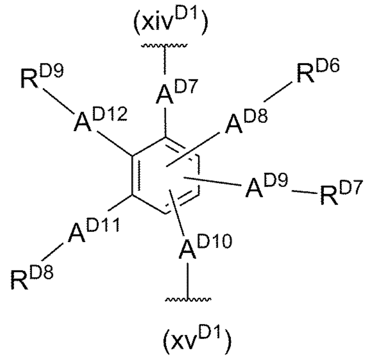

**(D2)**

;

wherein, in case that $R^1$ = **(D1),** the bond identified by ($xiii^{D1}$) represents the bond to $L^1$, in the case that $R^{1'}$ = **(D1),** the bond identified by ($xiii^{D1}$) represents the bond to $L^{1'}$, in the case that $R^{2'}$ = **(D1),** the bond identified by ($xiii^{D1}$) represents the bond to $L^{2'}$, in the case that $R^{3'}$ = **(D1),** the bond identified by ($xiii^{D1}$) represents the bond to $L^{3'}$, in the case that $R^2$ = **(D2),** the bond identified by ($xiv^{D1}$) represents the bond to $L^2$, and the bond identified by ($xv^{D1}$) represents the bond to $L^3$, in the case that $R^4$ = **(D2),** the bond identified by ($xiv^{D1}$) represents the bond to $L^4$, and the bond identified by ($xv^{D1}$) represents the bond to $L^5$, in the case that $R^5$ = **(D2),** the bond identified by ($xiv^{D1}$) represents the bond to $L^6$, and the bond identified by ($xv^{D1}$) represents the bond to $L^7$, and wherein at least two of the residues $A^{D1}$, $A^{D2}$, $A^{D3}$, $A^{D4}$, $A^{D5}$, $A^{D6}$ are in each case independently selected from the group consisting of -O-, -S- and the other of the residues $A^{D1}$, $A^{D2}$, $A^{D3}$, $A^{D4}$, $A^{D5}$, $A^{D6}$ are in each case a direct bond, and wherein at least two of the residues $A^{D7}$, $A^{D8}$, $A^{D9}$, $A^{D10}$, $A^{D11}$, $A^{D12}$ are in each case independently selected from the group consisting of -O-, -S- and the other of the residues $A^{D7}$, $A^{D8}$, $A^{D9}$, $A^{D10}$, $A^{D11}$, $A^{D12}$ are in each case a direct bond, and wherein the residues $R^{D1}$, $R^{D2}$, $R^{D3}$, $R^{D4}$, $R^{D5}$, $R^{D6}$, $R^{D7}$, $R^{D8}$, $R^{D9}$ are in each case independently selected from the group consisting of hydrogen, (hetero)aromatic residue, alkyl group, alkenyl group, alkynyl group, cycloalkyl group, wherein the (hetero)aromatic residue, the alkyl group, the alkenyl group, the alkynyl group, the cycloalkyl group can in each case be substituted with at least one residue selected from the group consisting of nitro group, $-NH_2$, -CN, -SH, -OH, halogen, and wherein the alkyl group, the alkenyl group, the alkynyl group, the cycloalkyl group can have at least one group selected from the group consisting of ether, thioether, aminoether, carbonyl group, carboxylic ester, carboxamide group, sulfonic ester, phosphoric ester, and wherein at least two residues of the residues $R^{D1}$, $R^{D2}$, $R^{D3}$, $R^{D4}$, $R^{D5}$ and of the residues $R^{D6}$, $R^{D7}$, $R^{D8}$, $R^{D9}$ can in each case also be bridged via a divalent aliphatic residue, wherein the aliphatic residue can be substituted with at least one group selected from the group consisting of nitro group, $-NH_2$, -CN, -SH, -OH, halogen, alkyl group and can have at least one group selected from the group consisting of ether, thioether, aminoether, carbonyl group, carboxylic ester, carboxamide group, sulfonic ester, phosphoric ester, and wherein the residue $R^{D1}$ in the case that $A^{D2}$ = direct bond, the residue $R^{D2}$ in the case that $A^{D3}$ = direct bond, the residue $R^{D3}$ in the case that $A^{D4}$ = direct bond, the residue $R^{D4}$ in the case that $A^{D5}$ = direct bond, the residue $R^{D5}$ in the case that $A^{D6}$ = direct bond, the residue $R^{D6}$ in the case that $A^{D8}$ = direct bond, the residue $R^{D7}$ in the case that $A^{D9}$ = direct bond, the residue $R^{D8}$ in the case that $A^{D11}$ = direct bond, the residue $R^{D9}$ in the case that $A^{D12}$ = direct bond, can in each case independently also be selected from the group consisting of nitro group, -CN, -F, -Cl, -Br, -I, - $C(=O)NHR^{D13}$, $-NR^{D14}R^{D15}$, $-COOR^{D16}$, $-COR^{D17}$, wherein $R^{D13}$, $R^{D14}$, $R^{D15}$, $R^{D16}$, $R^{D17}$ are in each case independently selected from the group consisting of hydrogen, (hetero)aromatic residue, aliphatic residue optionally substituted with at least one group selected from nitro group, $-NH_2$, -CN, -SH, -OH, halogen and optionally having at least one group selected from ether,

thioether, aminoether, carbonyl group, carboxylic ester, carboxamide group, sulfonic ester, phosphoric ester; and wherein, in the cases in which the residues $R^1$, $R^2$, $R^4$, $R^5$, $R^{1'}$, $R^{2'}$, $R^{3'}$ in structures **(I)**, **(II)** and **(III)** are in each case a redox-active benzoquinone function **(E)**, this means that the residues $R^1$, $R^{1'}$, $R^{2'}$, $R^{3'}$ independently in each case are selected from the group consisting of structures **(E1)**, **(E2)**, **(E3)** with

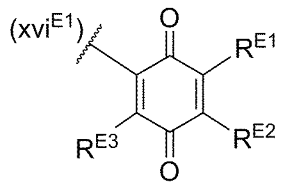 ; 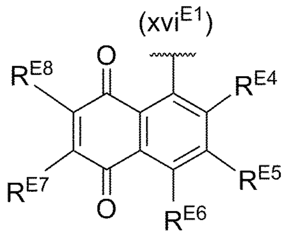 ; 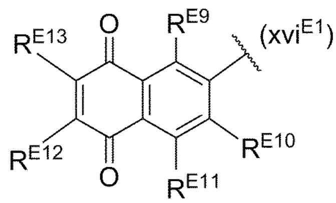 ;

**(E1)** **(E2)** **(E3)**

,

and the residues $R^2$, $R^4$, $R^5$ are in each case independently selected from the group consisting of structures **(E4)**, **(E5)**, **(E6)**, **(E7)**, **(E8)**, **(E9)** with

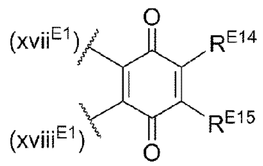 ; 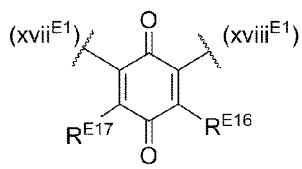 ; 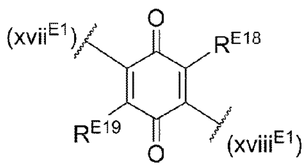 ;

**(E4)** **(E5)** **(E6)**

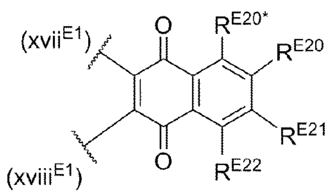 ; 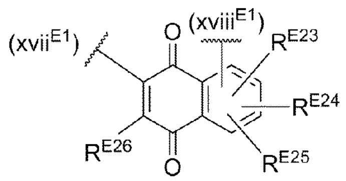 ; 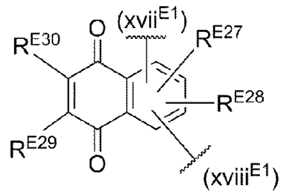 ;

**(E7)** **(E8)** **(E9)**

wherein,
in the case that $R^1$ = **(E1)**, **(E2)** or **(E3)**, the bond identified by ($xvi^{E1}$) represents the bond to $L^1$,
in the case that $R^{1'}$ = **(E1)**, **(E2)** or **(E3)**, the bond identified by ($xvi^{E1}$) represents the bond to $L^{1'}$,
in the case that $R^{2'}$ = **(E1)**, **(E2)** or **(E3)**, the bond identified by ($xvi^{E1}$) represents the bond to $L^{2'}$,
in the case that $R^{3'}$ = **(E1)**, **(E2)** or **(E3)**, the bond identified by ($xvi^{E1}$) represents the bond to $L^{3'}$,
in the case that $R^2$ = **(E4)**, **(E5)**, **(E6)**, **(E7)**, **(E8)** or **(E9)**, the bond identified by ($xvii^{E1}$) represents the bond to $L^2$ and the bond identified by ($xviii^{E1}$) represents the bond to $L^3$,
in the case that $R^4$ = **(E4)**, **(E5)**, **(E6)**, **(E7)**, **(E8)** or **(E9)**, the bond identified by ($xvii^{E1}$) represents the bond to $L^4$ and the bond identified by ($xviii^{E1}$) represents the bond to $L^5$,
in the case that $R^5$ = **(E4)**, **(E5)**, **(E6)**, **(E7)**, **(E8)** or **(E9)**, the bond identified by ($xvii^{E1}$) represents the bond to $L^6$ and the bond identified by ($xviii^{E1}$) represents the bond to $L^7$,
and wherein the residues $R^{E1}$, $R^{E2}$, $R^{E3}$, $R^{E4}$, $R^{E5}$, $R^{E6}$, $R^{E7}$, $R^{E8}$, $R^{E9}$, $R^{E10}$, $R^{E11}$, $R^{E12}$, $R^{E13}$, $R^{E14}$, $R^{E15}$, $R^{E16}$, $R^{E17}$, $R^{E18}$, $R^{E19}$, $R^{E20}$ $R^{E20*}$, $R^{E21}$, $R^{E22}$, $R^{E23}$, $R^{E24}$, $R^{E25}$, $R^{E26}$, $R^{E27}$, $R^{E28}$, $R^{E29}$, $R^{E30}$ are selected from the group consisting of hydrogen, -OH, -SH, nitro group, -CN, -F, -Cl, -Br, -I, - C(=O)NHR$^{E31}$, -NR$^{E32}$R$^{E33}$, -COOR$^{E34}$, -COR$^{E35}$, sulfonic acid ester, phosphoric acid ester, (hetero)aromatic residue, alkyl group, alkenyl group, alkynyl group,

wherein the (hetero)aromatic residue, the alkyl group, the alkenyl group, the alkynyl group can in each case be substituted with at least one group selected from nitro group, $-NH_2$, -CN, -SH, -OH, halogen and wherein the alkyl group, the alkenyl group, the alkynyl group can have at least one group selected from ether, thioether, aminoether, carbonyl group, carboxylic ester, carboxamide group, sulfonic ester, phosphoric ester,

and wherein $R^{E31}$, $R^{E32}$, $R^{E33}$, $R^{E34}$, $R^{E35}$ are in each case independently selected from the group consisting of hydrogen, (hetero)aromatic residue, aliphatic residue optionally substituted with at least one group selected from nitro group, $-NH_2$, -CN, -SH, -OH, halogen and optionally having at least one group selected from ether, thioether, aminoether, carbonyl group, carboxylic ester, carboxamide group, sulfonic ester, phosphoric ester,

and wherein two residues of the residues $R^{E1}$, $R^{E2}$, $R^{E4}$, $R^{E5}$, $R^{E6}$, $R^{E7}$, $R^{E8}$, $R^{E10}$, $R^{E11}$, $R^{E12}$, $R^{E13}$, $R^{E14}$, $R^{E15}$, $R^{E20}$, $R^{E20*}$, $R^{E21}$, $R^{E22}$, $R^{E23}$, $R^{E24}$, $R^{E25}$, $R^{E27}$, $R^{E28}$, $R^{E29}$, $R^{E30}$ in *ortho* position to one another can be bridged with a divalent aliphatic residue optionally substituted with at least one group selected from nitro group, $-NH_2$, -CN, -SH, -OH, halogen, alkyl group and optionally having at least one group selected from ether, thioether, aminoether, carbonyl group, carboxylic ester, carboxamide group, sulfonic ester, phosphoric ester;
and wherein, in the cases in which the residues R1, R2, R4, R5, R1', R2', R3' in structures (I), (II) and (III) are in each case a redox-active triphenylamine function (G), this means that the residues R1, R1', R2', R3' independently in each case have the structure (G1) and the residues R2, R4, R5, are independently selected in each case from the group consisting of the structures (G2), (G3)

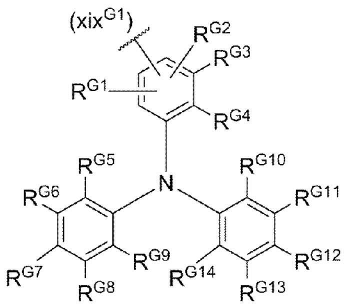
;
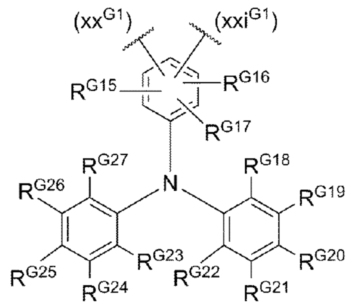
;
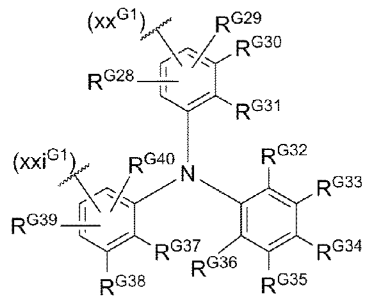
;

**(G1)** **(G2)** **(G3)**

,

wherein,
in the case that $R^1$ = **(G1),** the bond identified by $(xix^{G1})$ represents the bond to $L^1$,
in the case that $R^{1'}$ = **(G1),** the bond identified by $(xix^{G1})$ represents the bond to $L^{1'}$,
in the case that $R^{2'}$ = **(G1),** the bond identified by $(xix^{G1})$ represents the bond to $L^{2'}$,
in the case that $R^{3'}$ = **(G1),** the bond identified by $(xix^{G1})$ represents the bond to $L^{3'}$,
in the case that $R^2$ = **(G2)** or **(G3),** the bond identified by $(xx^{G1})$ represents the bond to $L^2$ and the bond identified by $(xxi^{G1})$ represents the bond to $L^3$,
in the case that $R^4$ = **(G2)** or **(G3),** the bond identified by $(xx^{G1})$ represents the bond to $L^4$ and the bond identified by $(xxi^{G1})$ represents the bond to $L^5$,
in the case that $R^5$ = **(G2)** or **(G3),** the bond identified by $(xx^{G1})$ represents the bond to $L^6$ and the bond identified by $(xxi^{G1})$ represents the bond to $L^7$,
wherein the residues $R^{G1}$, $R^{G2}$, $R^{G3}$, $R^{G4}$, $R^{G5}$, $R^{G6}$, $R^{G7}$, $R^{G8}$, $R^{G9}$, $R^{G10}$, $R^{G11}$, $R^{G12}$ $R^{G13}$, $R^{G14}$, $R^{G15}$, $R^{G16}$, $R^{G17}$, $R^{G18}$, $R^{G19}$, $R^{G20}$, $R^{G21}$, $R^{G22}$, $R^{G23}$, $R^{G24}$, $R^{G25}$, $R^{G26}$, $R^{G27}$, $R^{G28}$, $R^{G29}$, $R^{G30}$, $R^{G31}$, $R^{G32}$, $R^{G33}$, $R^{G34}$, $R^{G35}$, $R^{G36}$, $R^{G37}$, $R^{G38}$, $R^{G39}$, $R^{G40}$ are in each case independently selected from the group consisting of hydrogen, (halo)alkyl group, alkenyl group, alkynyl group, (halo)alkoxy group,
cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen, (hetero)aromatic residue, wherein the (hetero)aromatic residue may be substituted with at least one group selected from halogen, (halo)alkyl, (halo)alkoxy, cyano, carboxylic ester;
and wherein, in the cases in which the residues $R^1$, $R^2$, $R^4$, $R^5$, $R^{1'}$, $R^{2'}$, $R^{3'}$ in structures **(I), (II)** and **(III)** are in each case a redox-active viologen function **(H),** this means that the residues $R^1$, $R^{1'}$, $R^{2'}$, $R^{3'}$ independently in

each case are selected from the group consisting of structures **(H1), (H2),** and the residues $R^2$, $R^4$, $R^5$ independently in each case are selected from the group consisting of structures **(H3), (H4), (H5), (H6), (H7),** wherein

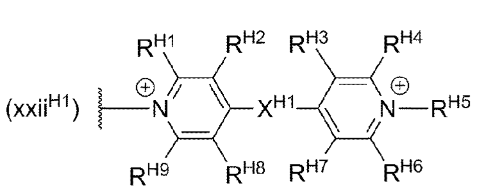

;

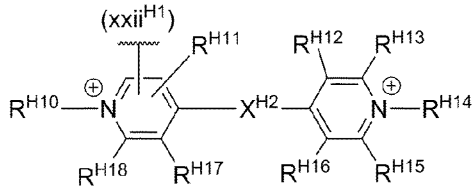

;

**(H1)** **(H2)**

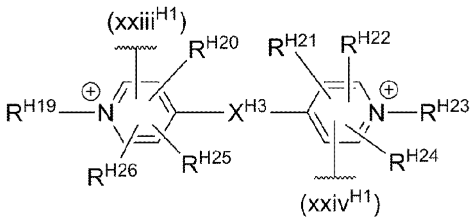

;

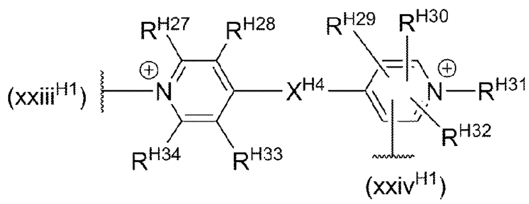

;

**(H3)** **(H4)**

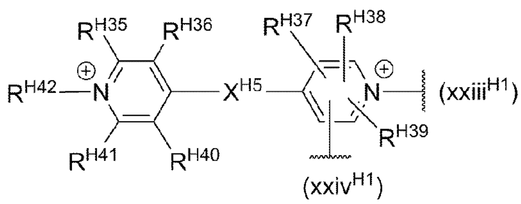

;

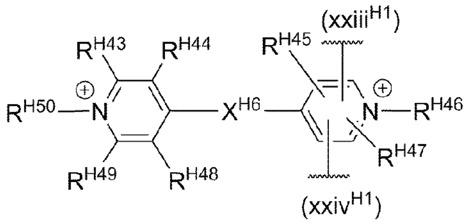

;

**(H5)** **(H6)**

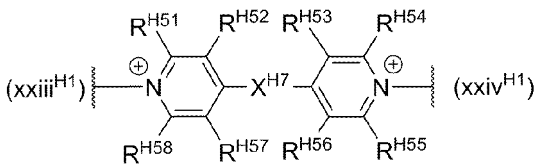

;

**(H7)**

wherein,
in the case that $R^1$ = **(H1)** or **(H2),** the bond identified by ($xxii^{H1}$) represents the bond to $L^1$,
in the case that $R^{1'}$ = **(H1)** or **(H2),** the bond identified by ($xxii^{H1}$) represents the bond to $L^{1'}$,
in the case that $R^{2'}$ = **(H1)** or **(H2),** the bond identified by ($xxii^{H1}$) represents the bond to $L^{2'}$,
in the case that $R^{3'}$ = **(H1)** or **(H2),** the bond identified by ($xxii^{H1}$) represents the bond to $L^{3'}$,
in the case that $R^2$ = **(H3), (H4), (H5), (H6)** or **(H7),** the bond identified by ($xxiii^{H1}$) represents the bond to $L^2$ and the bond identified by ($xxiv^{H1}$) represents the bond to $L^3$,
in the case that $R^4$ = **(H3), (H4), (H5), (H6)** or **(H7),** the bond identified by ($xxiii^{H1}$) represents the bond to $L^4$ and the bond identified by ($xxiv^{H1}$) represents the bond to $L^5$,
in the case that R5 = (H3), (H4), (H5), (H6) or (H7), the bond identified by (xxiiiH1) represents the bond to L6 and the bond identified by (xxivH1) represents the bond to L7,
and wherein the residues $R^{H1}$, $R^{H2}$, $R^{H3}$, $R^{H4}$, $R^{H6}$, $R^{H7}$, $R^{H8}$, $R^{H9}$, $R^{H11}$, $R^{H12}$, $R^{H13}$, $R^{H15}$, $R^{H16}$, $R^{H17}$, $R^{H18}$, $R^{H20}$, RH21, $R^{H22}$, $R^{H24}$, $R^{H25}$, $R^{H26}$, $R^{H27}$, $R^{H28}$, $R^{H29}$, $R^{H30}$, $R^{H32}$, $R^{H33}$, $R^{H34}$, $R^{H35}$, $R^{H36}$, $R^{H37}$, $R^{H38}$, $R^{H39}$, $R^{H40}$, $R^{H41}$, $R^{H43}$, $R^{H44}$, $R^{H45}$, $R^{H47}$, $R^{H48}$, $R^{H49}$, $R^{H51}$, $R^{H52}$, $R^{H53}$, $R^{H54}$, $R^{H55}$, $R^{H56}$, $R^{H57}$, $R^{H58}$ are in each case independently selected from the group consisting of hydrogen, (halo)alkyl group, alkenyl group, alkynyl

group, (halo)alkoxy group, cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen,

and wherein the residues $R^{H5}$, $R^{H10}$, $R^{H14}$, $R^{H19}$, $R^{H23}$, $R^{H31}$, $R^{H42}$, $R^{H46}$, $R^{H50}$ are in each case independently selected from the group consisting of hydrogen, (halo)alkyl group, alkenyl group, alkynyl group, (halo)alkoxy group, cycloalkyl group, carbonylalkyl,

and wherein the residues $X^{H1}$, $X^{H2}$, $X^{H3}$, $X^{H4}$, $X^{H5}$, $X^{H6}$, $X^{H7}$ are in each case independently selected from the group consisting of direct bond, divalent conjugated aliphatic residue, divalent conjugated (hetero)aromatic residue;

and wherein, in the cases in which the residues $R^1$, $R^2$, $R^4$, $R^5$, $R^{1'}$, $R^{2'}$, $R^{3'}$ in structures **(I), (II)** and **(III)** are in each case a redox-active ferrocene function **(J),** this means that the residues $R^1$, $R^{1'}$, $R^{2'}$, $R^{3'}$ independently in each case have the following structure **(J1)** and the residues $R^2$, $R^4$, $R^5$ are selected independently in each case have the following structures **(J2), (J3), (J4)**

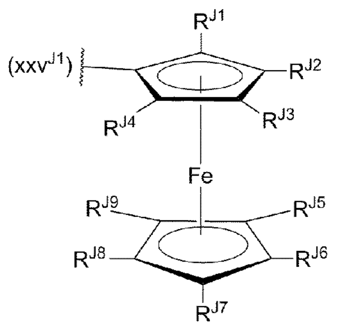
;
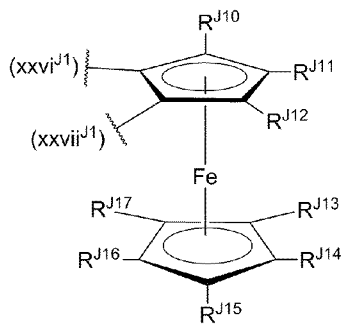
;

**(J1)** **(J2)**

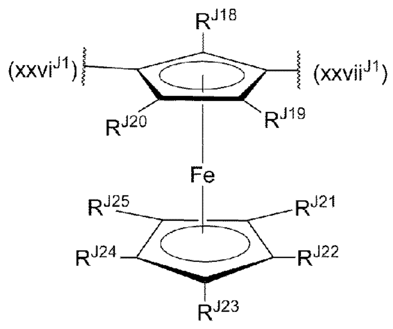
;
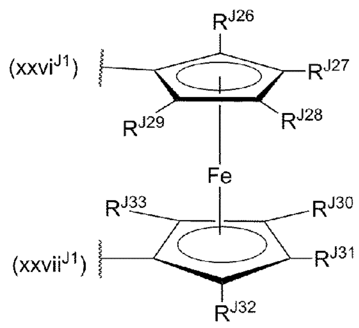
;

**(J3)** **(J4)**

,

wherein,

in the case that $R^1$ = **(J1),** the bond identified by ($xxv^{J1}$) represents the bond to $L^1$,

in the case that $R^{1'}$ = **(J1),** the bond identified by ($xxv^{J1}$) represents the bond to $L^{1'}$,

in the case that $R^{2'}$ = **(J1),** the bond identified by ($xxv^{J1}$) represents the bond to $L^{2'}$,

in the case that $R^{3'}$ = **(J1),** the bond identified by ($xxv^{J1}$) represents the bond to $L^{3'}$,

in the case that $R^2$ = **(J2), (J3)** or **(J4),** the bond identified by ($xxvi^{J1}$) represents the bond to $L^2$ and the bond identified by ($xxvii^{J1}$) represents the bond to $L^3$,

in the case that $R^4$ = **(J2), (J3)** or **(J4),** the bond identified by ($xxvi^{J1}$) represents the bond to $L^4$ and the bond identified by ($xxvii^{J1}$) represents the bond to $L^5$,

in the case that $R^5$ = **(J2), (J3)** or **(J4),** the bond identified by ($xxvi^{J1}$) represents the bond to $L^6$ and the bond identified by ($xxvii^{J1}$) represents the bond to $L^7$,

and wherein the residues $R^{J1}$, $R^{J2}$, $R^{J3}$, $R^{J4}$, $R^{J5}$, $R^{J6}$, $R^{J7}$, $R^{J8}$, $R^{J9}$, $R^{J10}$, $R^{J11}$, $R^{J12}$, $R^{J13}$, $R^{J14}$, $R^{J15}$, $R^{J16}$,

$R^{J17}$, $R^{J18}$, $R^{J19}$, $R^{J20}$, $R^{J21}$, $R^{J22}$, $R^{J23}$, $R^{J24}$, $R^{J25}$, $R^{J26}$, $R^{J27}$, $R^{J28}$, $R^{J29}$, $R^{J30}$, $R^{J31}$, $R^{J32}$, $R^{J33}$ are in each case independently selected from the group consisting of hydrogen, (halo)alkyl group, alkenyl group, alkynyl group, (halo)alkoxy group, cycloalkyl group, carbonylalkyl, -C(=O)-H, carboxylic acid, carboxamide, carboxylic ester, sulfonic ester, phosphoric ester, amine, mono(halo)alkylamino, di(halo)alkylamino, cyano, hydroxyl, halogen,
wherein $L^1$, $L^2$, $L^3$, $L^4$, $L^5$, $L^6$, $L^7$, $L^{1'}$, $L^{2'}$, $L^{3'}$ in structures **(I), (II)** and **(III)** are in each case independently selected from the group consisting of direct bond, **(L11), (L12)** with

**(L11)**: ♣-$(X^{L1})_{p1}$-$[C{=}X^{L2}]_{p2}$-$(X^{L3})_{p3}$-$B^{L1}$-$(Y^{L1})_{q1}$-$[C{=}Y^{L2}]_{q2}$-$(Y^{L3})_{q3}$-♠,

**(L12)**: ♣-$(Y^{L4})_{q4}$-$[C{=}Y^{L5}]_{q5}$-$(Y^{L6})_{q6}$-♠

,

wherein p1, p2, p3 are in each case 0 or 1, wherein the case "p2 = 0, p1 = p3 = 1" is excluded,
wherein q1, q2, q3 are in each case 0 or 1, wherein the case "q2 = 0, q1 = q3 = 1" is excluded,
wherein q4, q5, q6 are in each case 0 or 1, wherein at least one of q4, q5, q6 = 1 and the case "q5 = 0, q4 = q6 = 1" is excluded,
wherein $X^{L2}$, $Y^{L2}$, $Y^{L5}$ are in each case independently selected from the group consisting of O, S,
wherein $X^{L1}$, $X^{L3}$, $Y^{L1}$, $Y^{L3}$, $Y^{L4}$, $Y^{L6}$ are in each case independently selected from the group consisting of O, S, NH, N[(halo)alkyl],
wherein $B^{L1}$ is selected from the group consisting of divalent (hetero)aromatic residue, divalent aliphatic residue optionally substituted with at least one group selected from nitro group, $-NH_2$, -CN, -SH, -OH, halogen and optionally having at least one group selected from ether, thioether, aminoether, carbonyl group, carboxylic ester, carboxamide group, sulfonic ester, phosphoric ester,
and wherein, in the cases in which $L^1$, $L^2$, $L^3$, $L^4$, $L^5$, $L^6$, $L^7$, $L^{1'}$, $L^{2'}$ and $L^{3'}$ are bonded to an atom other than carbon of the respective redox-active group $R^1$, $R^2$, $R^4$, $R^5$, $R^{1'}$, $R^{2'}$ and $R^{3'}$, the additional condition "q3 = 0, q2 = 1, q1 = 1 or q3 = q2 = q1 = 0 or q3 = 0, q2 = 1, q1 = 0", preferably the condition "q3 = q2 = q1 = 0", applies to structure **(L11),** and the additional condition "q6 = 0, q5 = 1, q4 = 1 or q6 = 0, q5 = 1, q4 = 0" applies to structure **(L12),**
and wherein "♠" denotes the bond pointing to $R^1$ for $L^1$, denotes the bond pointing to $R^{1'}$ for $L^1$, denotes the bond pointing to $R^2$ for $L^2$, denotes the bond pointing to $R^{2'}$ for $L^2$, denotes the bond pointing to $R^2$ for $L^3$, denotes the bond pointing to $R^{3'}$ for $L^3$, denotes the bond pointing to R4 for $L^4$, denotes the bond pointing to $R^4$ for $L^5$, denotes the bond pointing to $R^5$ for $L^6$, denotes the bond pointing to $R^5$ for $L^7$,
and wherein "♣" denotes the bond pointing to $X^1$ for $L^1$, denotes the bond pointing to $X^1$ for $L^1$, denotes the bond pointing to $X^2$ for $L^2$, denotes the bond pointing to $X^2$ for $L^2$, denotes the bond pointing to $X^3$ for $L^3$, denotes the bond pointing to $X^3$ for $L^{3'}$ for $L^4$, denotes the bond pointing to $X^4$ for $L^5$, denotes the bond pointing to $X^5$ for $L^6$, denotes the bond pointing to $X^4$ for $L^7$, denotes the bond pointing to $X^5$,
wherein the residues $X^1$, $X^2$, $X^3$, $X^4$, $X^5$ in structures **(I), (II)** and **(III),** respectively, are independently non-conjugated organic groups selected from the following structures **(X1), (X2), (X3), (X4), (X5)** with

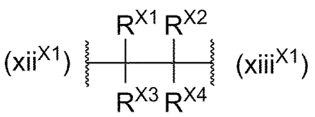 ; 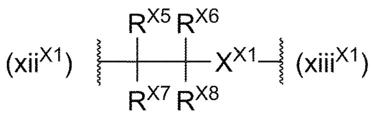 ; 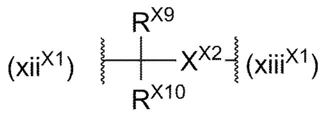 ;

**(X1)** **(X2)** **(X3)**

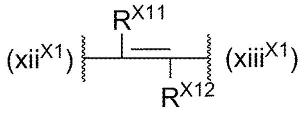 ;

**(X4)**

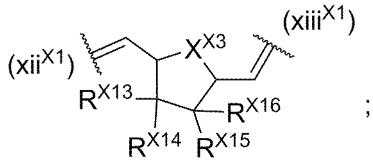 ;

**(X5)**

,

wherein, in case that **(X1)** = $X^1$, one of $R^{X1}$, $R^{X2}$, $R^{X3}$, $R^{X4}$ denotes the bond to $L^1$ and another one of $R^{X1}$, $R^{X2}$, $R^{X3}$, $R^{X4}$ denotes the bond to $L^{1'}$,
wherein, in case that **(X1)** = $X^2$, one of $R^{X1}$, $R^{X2}$, $R^{X3}$, $R^{X4}$ denotes the bond to $L^2$ and another one of $R^{X1}$, $R^{X2}$, $R^{X3}$, $R^{X4}$ denotes the bond to $L^{2'}$,
wherein, in case that **(X1)** = $X^3$, one of $R^{X1}$, $R^{X2}$, $R^{X3}$, $R^{X4}$ denotes the bond to $L^3$ and another one of $R^{X1}$, $R^{X2}$, $R^{X3}$, $R^{X4}$ denotes the bond to $L^{3'}$,
wherein, in case that **(X1)** = $X^4$, one of $R^{X1}$, $R^{X2}$, $R^{X3}$, $R^{X4}$ denotes the bond to $L^4$ and another one of $R^{X1}$, $R^{X2}$, $R^{X3}$, $R^{X4}$ denotes the bond to $L^6$,
wherein, in case that **(X1)** = $X^5$, one of $R^{X1}$, $R^{X2}$, $R^{X3}$, $R^{X4}$ denotes the bond to $L^5$ and another one of $R^{X1}$, $R^{X2}$, $R^{X3}$, $R^{X4}$ denotes the bond to $L^7$,
wherein, in case that **(X2)** = $X^1$, one of $R^{X5}$, $R^{x6}$, $R^{X7}$, $R^{X8}$ denotes the bond to $L^1$ and another one of $R^{X5}$, $R^{X6}$, $R^{X7}$, $R^{X8}$ denotes the bond to $L^{1'}$,
wherein, in case that **(X2)** = $X^2$, one of $R^{X5}$, $R^{x6}$, $R^{X7}$, $R^{X8}$ denotes the bond to $L^2$ and another one of $R^{X5}$, $R^{X6}$, $R^{X7}$, $R^{X8}$ denotes the bond to $L^{2'}$,
wherein, in case that **(X2)** = $X^3$, one of $R^{X5}$, $R^{x6}$, $R^{X7}$, $R^{X8}$ denotes the bond to $L^3$ and another one of $R^{X5}$, $R^{X6}$, $R^{X7}$, $R^{X8}$ denotes the bond to $L^{3'}$,
wherein, in case that **(X2)** = $X^4$, one of $R^{X5}$, $R^{x6}$, $R^{X7}$, $R^{X8}$ denotes the bond to $L^4$ and another one of $R^{X5}$, $R^{X6}$, $R^{X7}$, $R^{X8}$ denotes the bond to $L^6$,
wherein, in case that **(X2)** = $X^5$, one of $R^{X5}$, $R^{x6}$, $R^{X7}$, $R^{X8}$ denotes the bond to $L^5$ and another one of $R^{X5}$, $R^{X6}$, $R^{X7}$, $R^{X8}$ denotes the bond to $L^7$,
wherein, in case that **(X3)** = $X^1$, $R^{X9}$ denotes the bond to $L^1$ and $R^{X10}$ denotes the bond to $L^{1'}$,
wherein, in case that **(X3)** = $X^2$, $R^{X9}$ denotes the bond to $L^2$ and $R^{X10}$ denotes the bond to $L^{2'}$,
wherein, in case that **(X3)** = $X^3$, $R^{X9}$ denotes the bond to $L^3$ and $R^{X10}$ denotes the bond to $L^{3'}$,
wherein, in case that **(X3)** = $X^4$, $R^{X9}$ denotes the bond to $L^4$ and $R^{X10}$ denotes the bond to $L^6$,
wherein, in case that **(X3)** = $X^5$, $R^{X9}$ denotes the bond to $L^5$ and $R^{X10}$ denotes the bond to $L^7$,
wherein, in case that **(X4)** = $X^1$, one of $R^{X11}$, $R^{X12}$ denotes the bond to $L^1$ and the other of $R^{X11}$, $R^{X12}$ denotes the bond to $L^{1'}$,
wherein, in case that **(X4)** = $X^2$, one of $R^{X11}$, $R^{X12}$ denotes the bond to $L^2$ and the other of $R^{X11}$, $R^{X12}$ denotes the bond to $L^{2'}$,
wherein, in case that **(X4)** = $X^3$, one of $R^{X11}$, $R^{X12}$ denotes the bond to $L^3$ and the other of $R^{X11}$, $R^{X12}$ denotes the bond to $L^{3'}$,
wherein, in case that **(X4)** = $X^4$, one of $R^{X11}$, $R^{X12}$ denotes the bond to $L^4$ and the other of $R^{X11}$, $R^{X12}$ denotes the bond to $L^6$,
wherein, in case that **(X4)** = $X^5$, one of $R^{X11}$, $R^{X12}$ denotes the bond to $L^5$ and the other of $R^{X11}$, $R^{X12}$ denotes the bond to $L^7$,
wherein, in case that **(X5)** = $X^1$, one of $R^{X13}$, $R^{X14}$, $R^{X15}$, $R^{X16}$ denotes the bond to $L^1$ and another of $R^{X13}$, $R^{X14}$, $R^{X15}$, $R^{X16}$ denotes the bond to $L^{1'}$,
wherein, in case that **(X5)** = $X^2$, one of $R^{X13}$, $R^{X14}$, $R^{X15}$, $R^{X16}$ denotes the bond to $L^2$ and another of $R^{X13}$, $R^{X14}$, $R^{X15}$, $R^{X16}$ denotes the bond to $L^{2'}$,
wherein, in case that **(X5)** = $X^3$, one of $R^{X13}$, $R^{X14}$, $R^{X15}$, $R^{X16}$ denotes the bond to $L^3$ and another of $R^{X13}$, $R^{X14}$, $R^{X15}$, $R^{X16}$ denotes the bond to $L^{3'}$,
wherein, in case that **(X5)** = $X^4$, one of $R^{X13}$, $R^{X14}$, $R^{X15}$, $R^{X16}$ denotes the bond to $L^4$ and another of $R^{X13}$, $R^{X14}$, $R^{X15}$, $R^{X16}$ denotes the bond to $L^6$,
wherein, in case that **(X5)** = $X^5$, one of $R^{X13}$, $R^{X14}$, $R^{X15}$, $R^{X16}$ denotes the bond to $L^5$ and another of $R^{X13}$, $R^{X14}$, $R^{X15}$, $R^{X16}$ denotes the bond to $L^7$,
and wherein those of $R^{X1}$, $R^{X2}$, $R^{X3}$, $R^{X4}$, $R^{X5}$, $R^{X6}$, $R^{X7}$, $R^{X8}$, $R^{X13}$, $R^{X14}$, $R^{X15}$, $R^{X16}$ which do not denote a

bond to $L^1$, $L^{1'}$, $L^2$, $L^{2'}$, $L^3$, $L^{3'}$, $L^4$, $L^5$, $L^6$ or $L^7$ are residues which are in each case independently selected from the group consisting of hydrogen, (hetero)aromatic residue, aliphatic residue optionally substituted with at least one group selected from nitro group, $-NH_2$, -CN, -SH, - OH, halogen and optionally having at least one group selected from ether, thioether, aminoether, carbonyl group, carboxylic ester, carboxamide group, sulfonic ester, phosphoric ester,

and wherein $X^{X1}$, $X^{X2}$ are in each case independently selected from the group consisting of O, S,

and wherein $X^{X3}$ is selected from the group consisting of O, S, $-CH_2-$,

and wherein the bond identified in each case by ($xii^{X1}$) corresponds to that identified in structures **(I), (II)** and **(III)** in each case by "*", "#", "&", "§" and "$", respectively,

and wherein the bond identified in each case by ($xiii^{X1}$) corresponds to that which in structures **(I), (II)** and **(III)** in the cases in which $m^1 = 0$, $m^2 = 0$, $m^3 = 0$, $m^4 = 0$ and $m^5 = 0$ in each case binds to "**", "##", "&&", "§" and "$$" and in the cases in which $m^1 > 0$, $m^2 > 0$, $m^3 > 0$, $m^4 > 0$ and $m^5 > 0$ in each case binds to $Y^1$, $Y^2$, $Y^3$, $Y^4$ and $Y^5$, respectively,

wherein $Y^1$, $Y^2$, $Y^3$, $Y^4$, $Y^5$ in structures **(I), (II)** and **(III),** respectively, are independently non-conjugated organic spacer units selected from the following structures **(Y1), (Y2), (Y3), (Y4), (Y5)** with

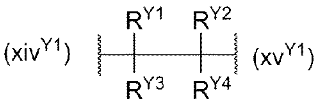 ; 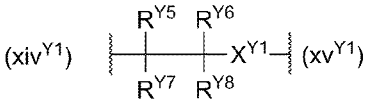 ; 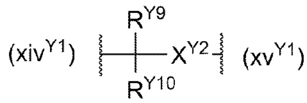 ;

**(Y1)** **(Y2)** **(Y3)**

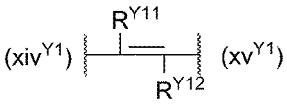 ; 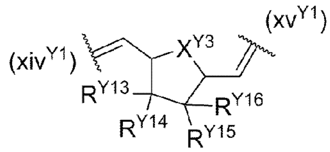 ;

**(Y4)** **(Y5)**

wherein $R^{Y1}$, $R^{Y2}$, $R^{Y3}$, $R^{Y4}$, $R^{Y5}$, $R^{Y6}$, $R^{Y7}$, $R^{Y8}$, $R^{Y9}$, $R^{Y10}$, $R^{Y11}$, $R^{Y12}$, $R^{Y13}$, $R^{Y14}$, $R^{Y15}$, $R^{Y16}$ are in each case independently selected from the group consisting of hydrogen, (hetero)aromatic residue, optionally substituted with at least one group selected from nitro group, $-NH_2$, -CN, -SH, -OH, halogen and optionally having at least one group selected from ether, thioether, aminoether, carbonyl group, carboxylic ester, carboxamide group, sulfonic ester, phosphoric ester,

and wherein $X^{Y1}$, $X^{Y2}$ are in each case independently selected from the group consisting of O, S, and wherein $X^{Y3}$ is selected from the group consisting of O, S, $-CH_2-$,

and wherein the bond identified in each case by ($xv^{Y1}$) corresponds to that identified in structures **(I), (II)** and **(III)** by "**", "##", "&&", "§" and "$$", respectively,

and wherein the bond identified in each case by ($xiv^{Y1}$) corresponds to that which in structures **(I), (II)** and **(III)** binds to $X^1$, $X^2$, $X^3$, $X^4$ and $X^5$, respectively,

wherein the ionic liquid has a structure $Q^+A^-$, in which $Q^+$ is a cation which is selected from the group consisting of structures **(Q1), (Q2), (Q3), (Q4), (Q5)** with

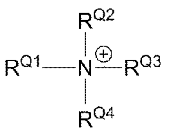 ; 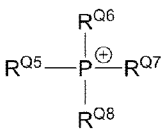 ; 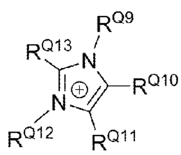 ; 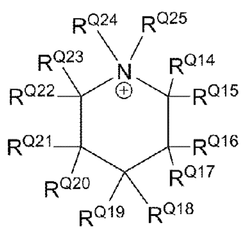 ; 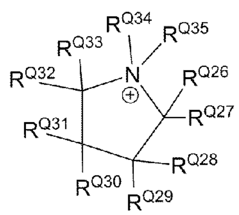 ;

**(Q1)** **(Q2)** **(Q3)** **(Q4)** **(Q5)**

,

wherein $R^{Q1}$, $R^{Q2}$, $R^{Q3}$, $R^{Q4}$, $R^{Q5}$, $R^{Q6}$, $R^{Q7}$, $R^{Q8}$ are in each case independently selected from the group consisting of (halo)alkyl group, cycloalkyl group,
wherein $R^{Q9}$, $R^{Q10}$, $R^{Q11}$, $R^{Q12}$, $R^{Q13}$, $R^{Q14}$, $R^{Q15}$, $R^{Q16}$, $R^{Q17}$, $R^{Q18}$, $R^{Q19}$, $R^{Q20}$, $R^{Q21}$, $R^{Q22}$, $R^{Q23}$, $R^{Q24}$, $R^{Q25}$, $R^{Q26}$, $R^{Q27}$, $R^{Q28}$, $R^{Q29}$, $R^{Q30}$, $R^{Q31}$, $R^{Q32}$, $R^{Q33}$, $R^{Q34}$, $R^{Q35}$ are in each case independently selected from the group consisting of hydrogen, (halo)alkyl group, which can have at least one ether group, cycloalkyl group,
and in which A is an anion which is in particular selected from the group consisting of phosphate, phosphonate, alkylphosphonate, monoalkylphosphate, dialkylphosphate, bis[trifluoromethanesulfonyl]imide, (halo)alkylsulfonate, (halo)alkylsulfate, bis[fluorosulfonyl]imide, halide, dicyanamide, hexafluorophosphate, sulfate, tetrafluoroborate, trifluoromethanesulfonate, perchlorate, hydrogen sulfate, (halo)alkylcarboxylate, formate, bisoxalatoborate, tetrachloroaluminate, dihydrogen phosphate, monoalkylhydrogen phosphate, nitrate.

**2.** The electrode material according to claim 1, in which the total weight of the ionic liquid comprised by the electrode material, based on the total weight of the organic redox polymer P not conjugated in the main chain comprised by the electrode material, is in the range from 0.1 to 1000% by weight.

**3.** The electrode material according to claim 1 or 2, wherein the conductivity additive is selected from the group consisting of carbon materials, electrically conductive polymers, metals, semimetals, (semi)metal compounds.

**4.** The electrode material according to any one of claims 1 to 3, wherein the total weight of the conductivity additive comprised by the electrode material, based on the total weight of the redox polymer P comprised by the electrode material, is in the range from 0.1 to 1000% by weight.

**5.** The electrode material according to any one of claims 1 to 4, further comprising a binding additive which is preferably a polymer selected from the group consisting of polytetrafluoroethylene, polyvinylidene fluoride, polyhexafluoropropylene, polyvinyl chloride, polycarbonate, polystyrene, polyacrylate, polymethacrylate, polysulfone, cellulose derivatives, polyurethane.

**6.** The electrode material according to claim 5, wherein the total weight of the binding additive comprised by the electrode material, based on the total weight of the redox polymer **P** comprised by the electrode material, is in the range from 0.001 to 100% by weight.

**7.** An electrode comprising an electrode material according to any one of claims 1 to 6 and a substrate which is in particular selected from the group consisting of metals, carbon materials, oxide substances.

**8.** A charge storage, in particular a secondary battery, comprising an electrode according to claim 7.

**9.** A method for manufacturing an electrode comprising the following steps:

(a) at least one organic redox polymer **P** not conjugated in the main chain, at least one ionic liquid, at least one conductivity additive, optionally at least one solvent and optionally at least one binding additive are mixed, whereby a mixture **M** is obtained,
(b) the mixture **M** is applied to a substrate,
(c) optionally the solvent is at least partially removed,
wherein in step (a) a non-conjugated organic redox polymer **P** as defined in claim 1 is used,
and wherein in step (a) an ionic liquid of structure $Q^+A^-$ as defined in claim 1 is used.

**10.** The method according to claim 9, wherein the total weight of the ionic liquid used in step (a), based on the total weight of the organic redox polymer **P** not conjugated in the main chain used in step (a), is in the range from 0.1 to 1000% by weight.

**11.** The method according to claim 9 or 10, wherein the conductivity additive used in step (a) is selected from the group consisting of carbon materials, electrically conductive polymers, metals, semimetals, (semi)metal compounds.

**12.** The method according to any one of claims 9 to 11, wherein the total weight of the conductivity additive used in step (a), based on the total weight of the organic redox polymer **P** not conjugated in the main chain used in step (a), is in the range from 0.1 to 1000% by weight.

**13.** The method according to any one of claims 9 to 12, wherein in step (a) a binding additive which is preferably selected from the group consisting of polytetrafluoroethylene, polyvinylidene fluoride, polyhexafluoropropylene, polyvinyl chloride, polycarbonate, polystyrene, polyacrylate, polymethacrylate, polysulfone, cellulose derivatives, polyurethane is used.

**14.** The method according to claim 13, wherein the total weight of the binding additive used in step (a), based on the total weight of the organic redox polymer **P** not conjugated in the main chain used in step (a), is in the range from 0.001 to 100% by weight.

**15.** The method according to any one of claims 9 to 14, wherein in step (a) a solvent is used which is preferably selected from the group consisting of *N*-methyl-2-pyrrolidone, water, dimethyl sulfoxide, ethylene carbonate, propylene carbonate, dimethyl carbonate, methylethyl carbonate, γ-butyrolactone, tetrahydrofuran, dioxolane, sulfolane, *N*,*N*'-dimethylformamide, *N,N*-dimethylacetamide.

**16.** The method according to claim 15, wherein sufficient solvent is used in step (a) such that the concentration of the polymer **P** in the mixture **M** obtained is in the range between 10 and 1000 mg/ml.

**17.** The method according to any one of claims 9 to 16, wherein the substrate in step (b) is selected from the group consisting of metals, carbon materials, oxide substances.

**18.** An electrode obtainable by the method according to any one of claims 9 to 17.

**19.** A charge storage, in particular a secondary battery, comprising an electrode according to claim 18.

**Revendications**

**1.** Matériau d'électrode comprenant au moins un additif de conductivité, au moins un liquide ionique et au moins un polymère organique à activité redox non conjugué **P** dans la chaîne principale,

où le polymère organique à activité redox non conjugué **P** comprend $n^1$ unités répétitives liées entre elles de la structure chimique **(I)** et/ou $n^2$ unités répétitives liées entre elles de la structure chimique **(II)** et/ou $n^3$ unités répétitives liées entre elles de la structure chimique **(III),**

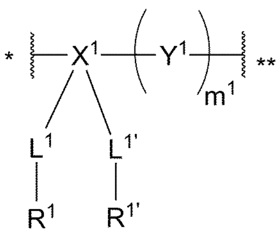
;
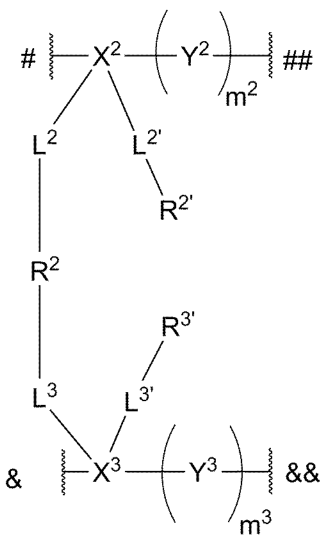
;
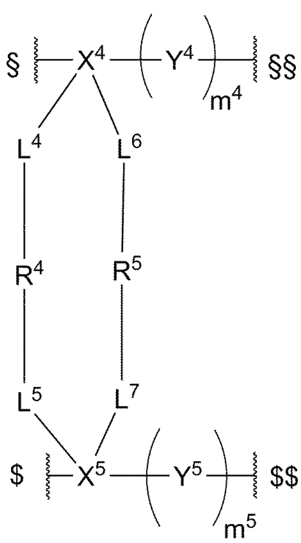
;

**(I)** **(II)** **(III)**

où $n^1$, $n^2$ et $n^3$ sont chacun indépendamment un nombre entier ≥ 4,
où $m^1$, $m^2$, $m^3$, $m^4$ et $m^5$ sont chacun indépendamment un nombre entier ≥ 0,
où les unités répétitives de la structure chimique **(I)** sont identiques ou au moins partiellement différentes les

unes des autres à l'intérieur du polymère **P,**
où les unités répétitives de la structure chimique **(II)** sont identiques ou au moins partiellement différentes les unes des autres à l'intérieur du polymère **P,**
où les unités répétitives de la structure chimique **(III)** sont identiques ou au moins partiellement différentes les unes des autres à l'intérieur du polymère **P,**
où les unités répétitives de la structure chimique **(I)** sont liées entre elles à l'intérieur du polymère de telle sorte que la liaison d'une unité répétitive donnée marquée par "**" est liée à la liaison de l'unité répétitive voisine marquée par "*",
où les unités répétitives de la structure chimique **(II)** sont liées les unes aux autres à l'intérieur du polymère de telle sorte que la liaison d'une unité répétitive donnée marquée par "##" est liée à la liaison de l'unité répétitive voisine marquée par "#" et la liaison d'une unité répétitive donnée marquée par "&&" est liée à la liaison de l'unité répétitive voisine marquée par "&", où les unités répétitives de la structure chimique **(III)** sont liées les unes aux autres à l'intérieur du polymère de telle sorte que la liaison d'une unité répétitive donnée marquée par "§§" est liée à la liaison de l'unité répétitive voisine marquée par "§" et la liaison d'une unité répétitive particulière marquée par "$$" est liée à la liaison de l'unité répétitive voisine marquée par "$",
où $R^1$, $R^2$, $R^4$, $R^5$, $R^{1'}$, $R^{2'}$, $R^{3'}$ dans les structures **(I), (II)** et **(III),** sont respectivement des groupes organiques à activité redox choisis indépendamment les uns des autres dans le groupe constitué par une fonction imide aromatique à activité redox **(A),** fonction organique à activité redox comprenant au moins un reste oxygène stable **(B),** fonction anthraquinone/carbazole à activité redox **(C),** fonction dialcoxybenzène à activité redox **(D),** fonction benzoquinone à activité redox **(E),** fonction triphénylamine à activité redox **(G),** fonction viologène à activité redox **(H),** fonction ferrocène à activité redox **(J),** et $R^{1'}$, $R^{2'}$, $R^{3'}$ peuvent également être chacun un reste hydrogène,
où, dans les cas où les restes $R^1$, $R^2$, $R^4$, $R^5$, $R^{1'}$, $R^{2'}$, $R^{3'}$ dans les structures **(I), (II)** et **(III),** respectivement, sont chacun une fonction imide aromatique à activité redox **(A),** les restes $R^1$, $R^2$, $R^4$, $R^5$, $R^{1'}$, $R^{2'}$, $R^{3'}$ présentent chacun, indépendamment les uns des autres, la structure **(A1)** suivante et les restes $R^2$, $R^4$, $R^5$ peuvent présenter également chacun indépendamment les uns des autres la structure **(A2)** suivante avec

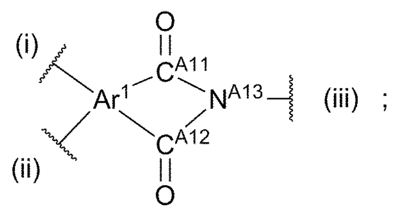

**(A1)**

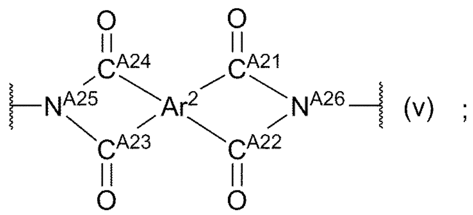

**(A2)**

où le reste $Ar^1$ dans **(A1)** et le reste $Ar^2$ dans **(A2)** sont chacun indépendamment l'un de l'autre un reste (hétéro)aromatique comprenant un ou plusieurs cycles (hétéro)aromatiques,
où les cycles (hétéro)aromatiques de $Ar^1$ dans **(A1)** respectivement les cycles (hétéro)aromatiques de $Ar^2$ dans **(A2)** peuvent être substitués chacun indépendamment les uns des autres à au moins un reste choisi dans le groupe constitué par un groupe (halo)alkyle, groupe alcényle, groupe alcynyle, groupe (halo)alcoxy, groupe cycloalkyle, carbonylalkyle, -C(=O)-H, reste d'acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène,
où, dans **(A1),** deux des atomes du cycle de $Ar^1$ forment respectivement avec les deux atomes de carbone $C^{A11}$ et $C^{A12}$ et l'atome d'azote $N^{A13}$, un cycle à cinq, six ou sept chaînons,
où, dans **(A2),** deux des atomes du cycle de $Ar^2$ forment respectivement avec les deux atomes de carbone $C^{A21}$ et $C^{A22}$ et l'atome d'azote $N^{A26}$, un cycle à cinq, six ou sept chaînons,
et deux des atomes du cycle de $Ar^2$, différents de ceux-ci, forment, respectivement avec les deux atomes de carbone $C^{A23}$ et $C^{A24}$ et l'atome d'azote $N^{A25}$, un cycle à cinq, six ou sept chaînons,
et où deux atomes de carbone aromatiques du même cycle (hétéro)aromatique dans $Ar^1$ ou deux atomes de carbone aromatiques du même cycle (hétéro)aromatique dans $Ar^2$ peuvent également être pontés par un reste aliphatique divalent,
et dans le cas où le reste $Ar^1$ comprend plusieurs cycles (hétéro)aromatiques, ceux-ci peuvent être au moins partiellement condensés entre eux dans $Ar^1$,
et dans le cas où le reste $Ar^2$ comprend plusieurs cycles (hétéro)aromatiques, ceux-ci peuvent être au moins partiellement condensés entre eux dans $Ar^2$,

et dans le cas où le reste $Ar^1$ comprend plusieurs cycles (hétéro)aromatiques, deux atomes de carbone aromatiques de différents cycles (hétéro)aromatiques dans $Ar^1$ peuvent également être pontés par une liaison directe, ou un reste choisi dans le groupe constitué par un hétéroatome, un reste aliphatique divalent,
et dans le cas où le reste $Ar^2$ comprend plusieurs cycles (hétéro)aromatiques, deux atomes de carbone aromatiques de différents cycles (hétéro)aromatiques dans $Ar^2$ peuvent également être pontés par une liaison directe, ou un reste choisi dans le groupe constitué par un hétéroatome, un reste aliphatique divalent,
où les liaisons **(I)** et **(II)** proviennent d'atomes de carbone aromatiques de $Ar^1$,
et où
dans le cas où $R^1$ = **(A1),** l'une des liaisons marquées par (i), (ii), (iii) représente la liaison à $L^1$,
dans le cas où $R^{1'}$ = **(A1),** l'une des liaisons marquées par (i), (ii), (iii) représente la liaison à $L^{1'}$,
dans le cas où $R^{2'}$ = **(A1),** l'une des liaisons marquées par (i), (ii), (iii) représente la liaison à $L^{2'}$,
dans le cas où $R^{3'}$ = **(A1),** l'une des liaisons marquées par (i), (ii), (iii) représente la liaison à $L^{3'}$,
dans le cas où $R^2$ = **(A1),** l'une des liaisons marquées par (i), (ii), (iii) représente la liaison à $L^2$ et une autre des liaisons marquées par (i), (ii), (iii) représente la liaison à $L^3$,
dans le cas où $R^4$ = **(A1),** l'une des liaisons marquées par (i), (ii), (iii) représente la liaison à $L^4$ et une autre des liaisons marquées par (i), (ii), (iii) représente la liaison à $L^5$,
dans le cas où $R^5$ = **(A1),** l'une des liaisons marquées par (i), (ii), (iii) représente la liaison à $L^6$ et une autre des liaisons marquées par (i), (ii), (iii) représente la liaison à $L^7$,
dans le cas où $R^2$ = **(A2),** la liaison marquée par (iv) représente la liaison à $L^2$ et la liaison marquée par (v) représente la liaison à $L^3$,
dans le cas où $R^4$ = **(A2),** la liaison marquée par (iv) représente la liaison à $L^4$ et la liaison marquée par (v) représente la liaison à $L^5$,
dans le cas où $R^5$ = **(A2),** la liaison marquée par (iv) représente la liaison à $L^6$ et la liaison marquée par (v) représente la liaison à $L^7$,
puis, respectivement, celles des liaisons marquée par (i) et (ii) qui ne représentent pas une liaison à $L^1$, $L^2$, $L^3$, $L^4$, $L^5$, $L^6$, $L^7$, $L^{1'}$, $L^{2'}$ ou $L^{3'}$, sont liées chacune indépendamment des autres, avec un reste choisi dans le groupe constitué par un hydrogène, groupe (halo)alkyle, groupe alcényle, groupe alcynyle, groupe (halo)alcoxy, groupe cycloalkyle, carbonylalkyle, - C(=O)-H, reste d'acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène,
et la liaison marquée par (iii), si elle ne représente pas une liaison à $L^1$, $L^2$, $L^3$, $L^4$, $L^5$, $L^6$, $L^7$, $L^{1'}$, $L^{2'}$ ou $L^{3'}$, est liée avec un reste choisi dans le groupe constitué par l'hydrogène, un groupe (halo)alkyle, alcényle, un groupe alcynyle, un groupe (halo)alcoxy, un groupe cycloalkyle, un groupe carbonylalkyle, -C(=O)-H, un reste d'acide carboxylique, un amide d'acide carboxylique, un ester d'acide carboxylique, un cyano, un hydroxyle, un halogène ;
et dans les cas où les restes $R^1$, $R^2$, $R^4$, $R^5$, $R^{1'}$, $R^{2'}$, $R^{3'}$ dans les structures **(I), (II)** et **(III),** respectivement, sont chacun une fonction organique à activité redox comprenant au moins un reste oxygène stable **(B),** les restes $R^1$, $R^2$, $R^4$, $R^5$, $R^{1'}$, $R^{2'}$, $R^{3'}$ sont chacun choisis indépendamment les uns des autres parmi l'une des structures suivantes **(B1), (B2)** avec

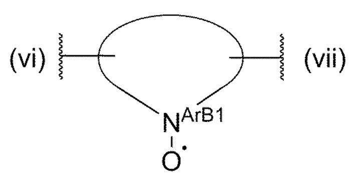

**(B1)**

;

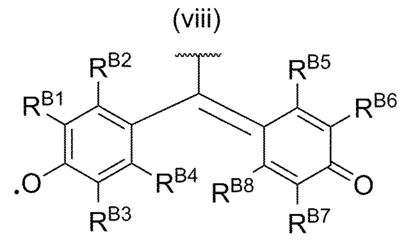

**(B2)**

;

où, dans la structure **(B1)**, l'atome d'azote $N^{ArB1}$ fait partie d'un cycle aliphatique $Ar^{B1}$ qui, outre l'atome d'azote $N^{ArB1}$, peut comprendre d'autres hétéroatomes et groupes contenant des hétéroatomes et qui peut être condensé avec un ou plusieurs autres cycles aliphatiques ou aromatiques et peut être lié par une liaison *spiro* à un ou plusieurs autres cycles aliphatiques qui, à leur tour, présentent éventuellement d'autres hétéroatomes et groupes contenant des hétéroatomes,
où au moins un atome de carbone du cycle de $Ar^{B1}$ peut être substitué par un groupe choisi parmi un groupe (halo)alkyle, groupe alcényle, groupe alcynyle, groupe (halo)alcoxy, groupe cycloalkyle, groupe carbonylalkyle,

-C(=O)-H, acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène, où les liaisons marquées par (vi) et (vii) proviennent d'atomes de carbone du cycle de $Ar^{B1}$ et/ou d'atomes de carbone du cycle des cycles condensés avec $Ar^{B1}$ ou liés par une liaison *spiro,*

où, dans le cas où $R^1$ = **(B1),** la liaison marquée par (vi) représente la liaison à $L^1$ et la liaison marquée par (vii) représente une liaison à l'hydrogène,

où, dans le cas où $R^{1'}$ = **(B1),** la liaison marquée par (vi) représente la liaison à $L^{1'}$ et la liaison marquée par (vii) représente une liaison à l'hydrogène,

où, dans le cas où $R^{2'}$ = **(B1),** la liaison marquée par (vi) représente la liaison à $L^{2'}$ et la liaison marquée par (vii) représente une liaison à l'hydrogène,

où, dans le cas où $R^{3'}$ = **(B1),** la liaison marquée par (vi) représente la liaison à $L^{3'}$ et la liaison marquée par (vii) représente une liaison à l'hydrogène,

et où, dans le cas où $R^2$ = **(B1)**, la liaison marquée par (vi) représente la liaison à $L^2$ et la liaison marquée par (vii) représente la liaison à $L^3$,

et dans le cas où $R^4$ = **(B1),** la liaison marquée par (vi) représente la liaison à $L^4$ et la liaison marquée par (vii) représente la liaison à $L^5$,

et dans le cas où $R^5$ = **(B1),** la liaison marquée par (vi) représente la liaison à $L^6$ et la liaison marquée par (vii) représente la liaison à $L^7$,

où, dans le cas où $R^1$, $R^{1'}$, $R^{2'}$ ou $R^{3'}$ = **(B2),** la liaison marquée par (viii) est la liaison à $L^1$, $L^{1'}$, $L^{2'}$ et $L^{3'}$, respectivement, et $R^{B1}$, $R^{B2}$, $R^{B3}$, $R^{B4}$, $R^{B5}$, $R^{B6}$, $R^{B7}$, $R^{B8}$ sont chacun indépendamment choisis dans le groupe constitué par l'hydrogène, un groupe (halo)alkyle, groupe alcényle, groupe alcynyle, groupe (halo)alcoxy, groupe cycloalkyle, carbonylalkyle, -C(=O)-H, acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène,

et où, dans le cas où $R^2$, $R^4$ ou $R^5$ = **(B2),** la liaison marquée par (viii) représente la liaison à $L^2$, $L^4$ et $L^6$, respectivement, et l'un des restes $R^{B7}$, $R^{B8}$ représente une liaison directe à $L^3$, $L^5$ et L7, respectivement, alors les restes $R^{B1}$, $R^{B2}$, $R^{B3}$, $R^{B4}$, $R^{B5}$, $R^{B6}$ et celui des deux restes $R^{B7}$, $R^{B8}$ qui ne représente pas une liaison directe à $L^3$, $L^5$ respectivement $L^7$ sont choisis chacun indépendamment les uns des autres dans le groupe constitué par l'hydrogène, un groupe (halo)alkyle, groupe alcényle, alcynyle, groupe (halo)alcoxy, groupe cycloalkyle, carbonylalkyle, -C(=O)-H, acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène ;

et où, dans les cas où les restes $R^1$, $R^2$, $R^4$, $R^5$, $R^{1'}$, $R^{2'}$, $R^{3'}$ dans les structures **(I), (II)** et **(III)** respectivement sont une fonction anthraquinone/carbazole **(C)** à activité redox, les restes $R^1$, $R^{1'}$, $R^{2'}$, $R^{3'}$ sont choisis chacun indépendamment les uns des autres dans le groupe constitué par les structures **(C1), (C2)** et les restes $R^2$, $R^4$, $R^5$ sont choisis chacun indépendamment les uns des autres dans le groupe constitué par les structures **(C3), (C4)** avec

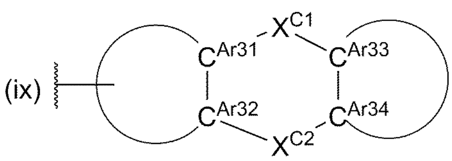

**(C1)**

;

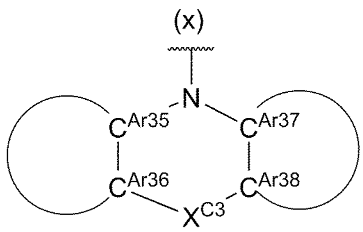

**(C2)**

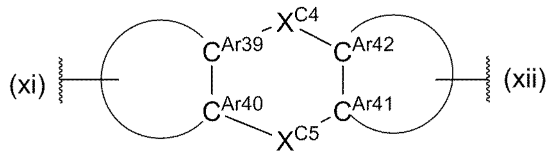

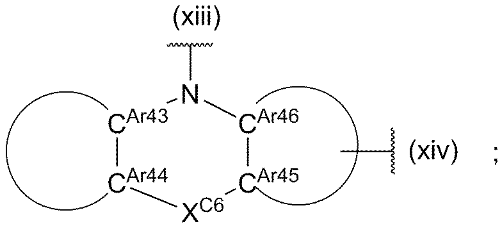

**(C3)** **(C4)**

où, dans la structure **(C1),** les atomes de carbone identifiés par $C^{Ar31}$ et $C^{Ar32}$ font partie d'un cycle (hétéro)aromatique à cinq ou six chaînons, où au moins l'un des atomes de carbone autres que $C^{Ar31}$ et $C^{Ar32}$ et, s'il est présent, au moins un atome d'azote dans ce cycle peut être substitué par un substituant choisi parmi un groupe (halo)alkyle, groupe alcényle, groupe alcynyle, groupe (halo)alcoxy, groupe cycloalkyle, groupe carbonylalkyle, -C(=O)-H, acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène,

où, dans la structure **(C1),** les atomes de carbone identifiés par $C^{Ar33}$ et $C^{Ar34}$ font partie d'un cycle (hétéro)aromatique à cinq ou six chaînons, au moins l'un des atomes de carbone autres que $C^{Ar33}$ et $C^{Ar34}$ et, s'il est présent, au moins un atome d'azote dans ce cycle peut être substitué par un substituant choisi parmi un groupe (halo)alkyle, groupe alcényle, groupe alcynyle, groupe (halo)alcoxy, groupe cycloalkyle, groupe carbonylalkyle, -C(=O)-H, acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène,

où, dans la structure **(C2),** les atomes représentés par $C^{Ar35}$ et $C^{Ar36}$, respectivement, les atomes de carbone représentés par $C^{Ar37}$ et $C^{Ar38}$ font chacun partie d'un cycle (hétéro)aromatique à cinq ou six chaînons, au moins l'un des atomes de carbone autres que $CAr^{35}$, $C^{Ar36}$, $C^{Ar37}$, $C^{Ar38}$ et, s'il est présent, au moins un atome d'azote dans ce cycle peut être substitué par un substituant choisi parmi un groupe (halo)alkyle, groupe alcényle, groupe alcynyle, groupe (halo)alcoxy, groupe cycloalkyle, groupe carbonylalkyle, -C(=O)-H, acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène,

où, dans la structure **(C3),** les groupes représentés par $C^{Ar39}$ et $C^{Ar40}$, respectivement, $C^{Ar41}$ et $C^{Ar42}$ font chacun partie d'un cycle (hétéro)aromatique à cinq ou six chaînons, au moins un des atomes de carbone autres que $C^{Ar39}$, $C^{Ar40}$, $C^{Ar41}$ et $C^{Ar42}$ et, s'il est présent, au moins un atome d'azote dans les deux cycles peut être substitué par un substituant choisi parmi un groupe (halo)alkyle, groupe alcényle, groupe alcynyle, groupe (halo)alcoxy, groupe cycloalkyle, groupe carbonylalkyle, -C(=O)-H, acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène,

où, dans la structure **(C4),** les atomes de carbone représentés par $C^{Ar43}$ et $C^{Ar44}$ font partie d'un cycle (hétéro)aromatique à cinq ou six chaînons, au moins l'un des atomes de carbone autres que $C^{Ar43}$ et $C^{Ar44}$ et, s'il est présent, au moins un atome d'azote dans ledit cycle peut être substitué par un substituant choisi parmi un groupe (halo)alkyle, groupe alcényle, groupe alcynyle, groupe (halo)alcoxy, groupe cycloalkyle, groupe carbonylalkyle, -C(=O)-H, acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène,

où, dans la structure **(C4),** les atomes de carbone représentés par $C^{Ar45}$ et $C^{Ar46}$ font partie d'un cycle (hétéro)aromatique à cinq ou six chaînons, au moins l'un des atomes de carbone autres que $C^{Ar45}$ et $C^{Ar46}$ et, s'il est présent, au moins un atome d'azote dans ce cycle peut être substitué par un substituant choisi parmi un groupe (halo)alkyle, groupe alcényle, groupe alcynyle, groupe (halo)alcoxy, groupe cycloalkyle, groupe carbonylalkyle, -C(=O)-H, acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène,

où $X^{C1}$, $X^{C2}$, $X^{C3}$, $X^{C4}$, $X^{C5}$, $X^{C6}$ sont chacun indépendamment les uns des autres choisis dans le groupe constitué par C(=YC1)-, -O-, -S-, NH-, N(haloalkyl)-, N(alkyl)-,

et $X^{C2}$, $X^{C3}$, $X^{C5}$, $X^{C6}$ peuvent également être chacun une liaison directe,

et où $X^{C1}$, $X^{C4}$ peuvent également être chacun un groupe de formule générale ($\alpha$C1)-C(=O)-C(=O)-($\beta$C1),

où ($\alpha^{C1}$) représente la liaison à $C^{Ar31}$ respectivement $C^{Ar39}$ et ($\beta^{C1}$) caractérise la liaison à $C^{Ar33}$ respectivement $C^{Ar42}$,

où $Y^{C1}$ est choisi dans le groupe constitué par O, S, et l'une des structures **($Y^{C11}$), ($Y^{C12}$), ($Y^{C13}$)** avec

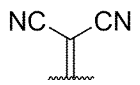 ; 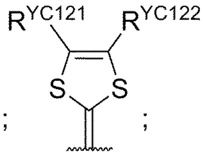 ; 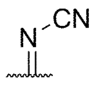 ;

**($Y^{C11}$)** **($Y^{C12}$)** **($Y^{C13}$)**

où $R^{YC121}$, $R^{YC122}$ sont chacun indépendamment les uns des autres choisis dans le groupe constitué par l'hydrogène, un groupe (halo)alkyle, groupe alcényle, groupe alcynyle, groupe (halo)alcoxy, groupe cycloalkyle, groupe carbonylalkyle, -C(=O)-H, acide carboxylique, amide d'acide carboxylique, ester d'acide carboxylique, ester d'acide sulfonique, ester d'acide phosphorique, amine, mono(halo)alkylamino, di(halo)alkylamino, cyano, hydroxyle, halogène,

où le cycle (hétéro)aromatique à cinq ou six chaînons comprenant $C^{Ar31}$ et $C^{Ar32}$ peut être ponté avec le cycle (hétéro)aromatique à cinq ou six chaînons comprenant $C^{Ar33}$ et $C^{Ar34}$, en plus de $X^{C1}$ et $X^{C2}$, par l'intermédiaire d'un autre reste organique divalent,

où le cycle (hétéro)aromatique à cinq ou six chaînons comprenant $C^{Ar39}$ et $C^{Ar40}$ peut être ponté avec le cycle (hétéro)aromatique à cinq ou six chaînons comprenant $C^{Ar41}$ et $C^{Ar42}$, en plus de $X^{C4}$ et $X^{C}5$, par l'intermédiaire d'un autre reste organique divalent,

où la liaison marquée par (ix) part de l'un des atomes formant le cycle (hétéro)aromatique à cinq ou six chaînons contenant $C^{Ar31}$ et $C^{Ar32}$

où la liaison marquée par (xi) part de l'un des atomes formant le cycle (hétéro)aromatique à cinq ou six chaînons contenant $C^{Ar39}$ et $C^{Ar40}$,

où la liaison marquée par (xii) part de l'un des atomes formant le cycle (hétéro)aromatique à cinq ou six chaînons contenant $C^{Ar41}$ et $C^{Ar42}$,

où la liaison marquée par (xiv) part de l'un des atomes formant le cycle (hétéro)aromatique à cinq ou six chaînons contenant $C^{Ar45}$ et $C^{Ar46}$,

et où

dans le cas où $R^1$ = **(C1)** ou **(C2),** les liaisons marquées par (ix) ou (x) représentent chacune la liaison à $L^1$,

dans le cas où $R^{1'}$ = **(C1)** ou **(C2),** les liaisons marquées par (ix) ou (x) représentent respectivement la liaison à $L^{1'}$,

dans le cas où $R^{2'}$ = **(C1)** ou **(C2),** les liaisons marquées par (ix) ou (x) représentent respectivement la liaison à $L^{2'}$,

dans le cas où $R^{3'}$ = **(C1)** ou **(C2),** les liaisons marquées par (ix) ou (x) représentent respectivement la liaison à $L^{3'}$,

dans le cas où $R^2$ = **(C3)** ou **(C4),** les liaisons marquées par (xi) ou (xiii) représentent respectivement la liaison à $L^2$ et les liaisons marquées par (xii) ou (xiv) représentent respectivement la liaison à $L^3$,

dans le cas où $R^4$ = **(C3)** ou **(C4),** les liaisons marquées par (xi) ou (xiii) représentent chacune la liaison à $L^4$ et les liaisons marquées par (xii) ou (xiv) représentent chacune la liaison à $L^5$, dans le cas où $R^5$ = **(C3)** ou **(C4),** les liaisons marquées par (xi) ou (xiii) représentent chacune la liaison à $L^6$ et les liaisons marquées par (xii) ou (xiv) représentent chacune la liaison à $L^7$ ;

et où, dans les cas où les restes $R^1$, $R^2$, $R^4$, $R^5$, $R^{1'}$, $R^{2'}$, $R^{3'}$ dans les structures **(I), (II)** ou **(III)** sont chacun une fonction dialcoxybenzène à activité redox **(D),** cela signifie que les restes $R^1$, $R^{1'}$, $R^{2'}$, $R^{3'}$ présentent chacun indépendamment les uns des autres la structure **(D1)** suivante et $R^2$, $R^4$, $R^5$ présentent chacun indépendamment les uns des autres la structure **(D2)** suivante

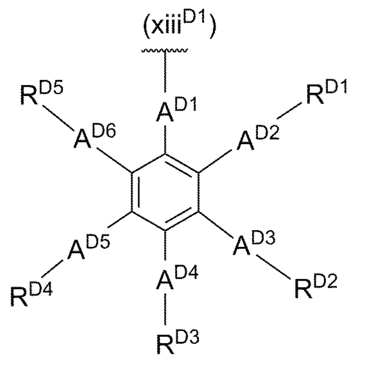 ; 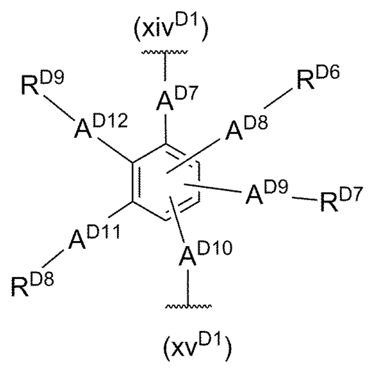 ;

**(D1)** **(D2)**

où, dans le cas où $R^1$ = **(D1),** la liaison marquée par (xiii$^{D1}$) représente la liaison à $L^1$, dans le cas où $R^{1'}$ = **(D1),** la liaison marquée par (xiii$^{D1}$) représente la liaison à $L^{1'}$, dans le cas où $R^{2'}$ = **(D1),** la liaison marquée par (xiii$^{D1}$) représente la liaison à $L^{2'}$,

dans le cas où $R^{3'}$ = **(D1),** la liaison marquée par (xiii$^{D1}$) représente la liaison à $L^{3'}$,

dans le cas où $R^2$ = **(D2),** la liaison marquée par (xiv$^{D1}$) représente la liaison à $L^2$, et la liaison marquée par (xv$^{D1}$) représente la liaison à $L^3$,

dans le cas où $R^4$ = **(D2),** la liaison marquée par (xiv$^{D1}$) représente la liaison à $L^4$, et celle marquée par (xv$^{D1}$) représente la liaison à $L^5$,

dans le cas où $R^5$ = **(D2),** la liaison marquée par (xiv$^{D1}$) représente la liaison à $L^6$, et celle marquée par (xv$^{D1}$) représente la liaison à $L^7$,

et où au moins deux des restes $A^{D1}$, $A^{D2}$, $A^{D3}$, $A^{D4}$, $A^{D5}$, $A^{D6}$ sont chacun indépendamment les uns des autres choisis dans le groupe constitué de -O-, -S- et les autres des restes $A^{D1}$, $A^{D2}$, $A^{D3}$, $A^{D4}$, $A^{D5}$, $A^{D6}$ sont chacun une liaison directe,

et où au moins deux des restes $A^{D7}$, $A^{D8}$, $A^{D9}$, $A^{D10}$, $A^{D11}$, $A^{D12}$ sont chacun indépendamment choisis les uns des autres dans le groupe constitué de -O-, -S- et les autres des restes $A^{D7}$, $A^{D8}$, $A^{D9}$, $A^{D10}$, $A^{D11}$, $A^{D12}$ sont chacun une liaison directe,

et où les restes $R^{D1}$, $R^{D2}$, $R^{D3}$, $R^{D4}$, $R^{D5}$, $R^{D6}$, $R^{D7}$, $R^{D8}$, $R^{D9}$ sont chacun indépendamment les uns des autres choisis dans le groupe constitué par un hydrogène, un reste (hétéro)aromatique, un groupe alkyle, un groupe alcényle, un groupe alcynyle, un groupe cycloalkyle,

où le reste (hétéro)aromatique, le groupe alkyle, le groupe alcényle, le groupe alcynyle, le groupe cycloalkyle peuvent chacun être substitués par au moins un reste choisi dans le groupe constitué par le groupe nitro, $-NH^2$, -CN, -SH, -OH, un halogène,

et où le groupe alkyle, le groupe alcényle, le groupe alcynyle, le groupe cycloalkyle peuvent avoir au moins un groupe choisi dans le groupe constitué par éther, thioéther, aminoéther, groupe carbonyle, ester d'acide carboxylique, groupe amide d'acide carboxylique, ester d'acide sulfonique, ester d'acide phosphorique,

et où au moins deux des restes $R^{D1}$, $R^{D2}$, $R^{D3}$, $R^{D4}$, $R^{D5}$, respectivement des restes $R^{D6}$, $R^{D7}$, $R^{D8}$, $R^{D9}$ peuvent également être pontés chacun par un reste aliphatique divalent, où le reste aliphatique peut être substitué par au moins un groupe choisi dans le groupe constitué par un groupe nitro, $-NH^2$, -CN, -SH, -OH, un halogène, un groupe alkyle, et peut présenter au moins un groupe choisi dans le groupe constitué par un éther, thioéther, aminoéther, groupe carbonyle, ester d'acide carboxylique, groupe amide d'acide carboxylique, ester d'acide sulfonique, ester d'acide phosphorique,

et où le reste $R^{D1}$ dans le cas où $A^{D2}$ = liaison directe, le reste $R^{D2}$ dans le cas où $A^{D3}$ = liaison directe, le reste $R^{D3}$ dans le cas où $A^{D4}$ = liaison directe, le reste $R^{D4}$ dans le cas où $A^{D5}$ = liaison directe, le reste $R^{D5}$ dans le cas où $A^{D6}$ = liaison directe, le reste $R^{D6}$ dans le cas où $A^{D8}$ = liaison directe, le reste $R^{D7}$ dans le cas où $A^{D9}$ = liaison directe, le reste $R^{D8}$ dans le cas où $A^{D11}$ = liaison directe, le reste $R^{D9}$ dans le cas où $A^{D12}$ = liaison directe, peuvent également être choisis indépendamment les uns des autres chacun dans le groupe constitué par le groupe nitro, -CN, -F, -Cl, -Br, -I, $C(=O)NHR^{D13}$, $-NR^{D14}R^{D15}$, $-COOR^{D16}$, $-CORD^{17}$,

où $R^{D13}$, $R^{D14}$, $R^{D15}$, $R^{D16}$, $R^{D17}$ sont chacun choisis indépendamment les uns des autres dans le groupe constitué par l'hydrogène, un reste (hétéro)aromatique, un reste aliphatique éventuellement substitué par au moins un groupe choisi parmi le groupe nitro, $-NH^2$, -CN, -SH, -OH, un halogène et comportant éventuellement au moins un groupe choisi parmi un éther, un thioéther, un aminoéther, un groupe carbonyle, un ester d'acide carboxylique, un groupe amide d'acide carboxylique, un ester d'acide sulfonique, un ester d'acide phosphorique ;

et où, dans les cas où les restes $R^1$, $R^2$, $R^4$, $R^5$, $R^{1'}$, $R^{2'}$, $R^{3'}$ dans les structures **(I), (II)** ou **(III)** sont chacun une fonction benzoquinone **(E)** à activité redox, cela signifie que les restes $R^1$, $R^{1'}$, $R^{2'}$, $R^{3'}$ sont choisis chacun indépendamment les uns des autres dans le groupe constitué par les structures **(E1), (E2), (E3)** avec

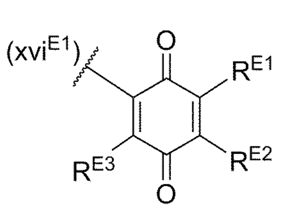

**(E1)**

;

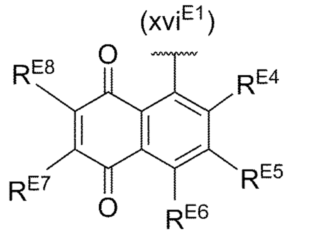

**(E2)**

;

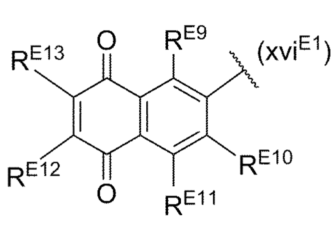

**(E3)**

;

et les restes $R^2$, $R^4$, $R^5$ sont choisis chacun indépendamment les uns des autres dans le groupe constitué par

les structures **(E4), (E5), (E6), (E7), (E8), (E9)** avec

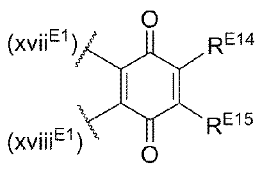 ; 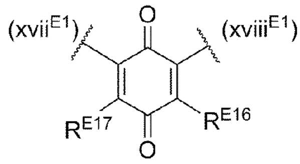 ; 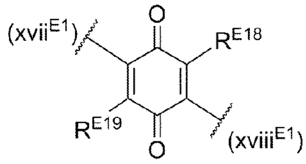 ;

**(E4)** **(E5)** **(E6)**

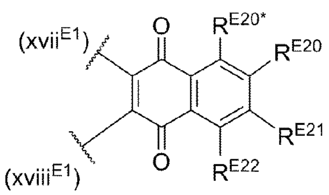 ; 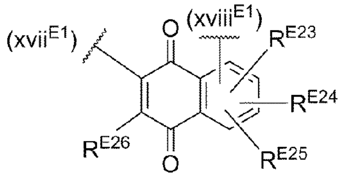 ; 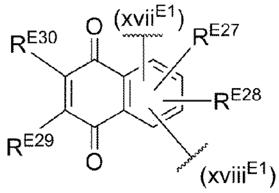 ;

**(E7)** **(E8)** **(E9)**

où,
dans le cas où $R^1$ = **(E1), (E2)** ou **(E3),** la liaison marquée par ($xvi^{E1}$) représente la liaison à $L^1$,
dans le cas où $R^{1'}$ = **(E1), (E2)** ou **(E3),** la liaison marquée par ($xvi^{E1}$) représente la liaison à $L^{1'}$,
dans le cas où $R^{2'}$ = **(E1), (E2)** ou **(E3),** la liaison marquée par ($xvi^{E1}$) représente la liaison à $L^{2'}$,
dans le cas où $R^{3'}$ = **(E1), (E2)** ou **(E3),** la liaison marquée par ($xvi^{E1}$) représente la liaison à $L^{3'}$,
dans le cas où $R^2$ = **(E4), (E5), (E6), (E7), (E8)** ou **(E9),** la liaison marquée par ($xvii^{E1}$) représente la liaison à $L^2$ et la liaison marquée par ($xviii^{E1}$) représente la liaison à $L^3$,
dans le cas où $R^4$ = **(E4), (E5), (E6), (E7), (E8)** ou **(E9),** la liaison marquée par ($xvii^{E1}$) représente la liaison à $L^4$ et la liaison marquée par ($xviii^{E1}$) représente la liaison à $L^5$,
dans le cas où $R^5$ = **(E4), (E5), (E6), (E7), (E8)** ou **(E9),** la liaison marquée par ($xvii^{E1}$) représente la liaison à $L^6$ et la liaison marquée par ($xviii^{E1}$) représente la liaison à $L^7$,
et où les restes $R^{E1}$, $R^{E2}$, $R^{E3}$, $R^{E4}$, $R^{E5}$, $R^{E6}$, $R^{E7}$, $R^{E8}$, $R^{E9}$, $R^{E10}$, $R^{E11}$, $R^{E12}$, $R^{E13}$, $R^{E14}$, $R^{E15}$, $R^{E16}$, $R^{E17}$, $R^{E18}$, $R^{E19}$, $RE^{20}$, $R^{E20*}$, $R^{E21}$, $R^{E22}$, $R^{E23}$, $R^{E24}$, $R^{E25}$, $R^{E26}$, $R^{E27}$, $R^{E28}$, $R^{E29}$, $R^{E30}$, sont choisis dans le groupe constitué par l'hydrogène, -OH, -SH, groupe nitro, -CN, -F, -Cl, - Br, -I, $C(=O)NHR^{E31}$, $NR^{E32}R^{E33}$, $-COOR^{E34}$, $COR^{E35}$, ester d'acide sulfonique, ester d'acide phosphorique, reste (hétéro)aromatique, groupe alkyle, groupe alcényle, groupe alcynyle,

où le reste (hétéro)aromatique, le groupe alkyle, le groupe alcényle, le groupe alcynyle peuvent chacun être substitués par au moins un groupe choisi parmi le groupe nitro, - $NH_2$, -CN, -SH, -OH, un halogène, et où le groupe alkyle, le groupe alcényle, le groupe alcynyle peuvent avoir au moins un groupe choisi parmi un éther, un thioéther, un aminoéther, un groupe carbonyle, un ester d'acide carboxylique, un groupe carboxamide, un ester d'acide sulfonique, un ester d'acide phosphorique,
et où $R^{E31}$, $R^{E32}$, $R^{E33}$, $R^{E34}$, $R^{E35}$ sont chacun indépendamment choisis dans le groupe constitué par l'hydrogène, un reste (hétéro)aromatique, un reste aliphatique éventuellement substitué par au moins un groupe choisi parmi un groupe nitro, $-NH^2$, -CN, - SH, -OH, un halogène et comportant éventuellement au moins un groupe choisi parmi un éther, un thioéther, un aminoéther, un groupe carbonyle, un ester d'acide carboxylique, un groupe amide d'acide carboxylique, un ester d'acide sulfonique, un ester d'acide phosphorique,

et où deux restes en position *ortho* l'un par rapport à l'autre parmi les restes $R^{E1}$, $R^{E2}$, $R^{E4}$, $R^{E5}$, $R^{E6}$, $R^{E7}$, $R^{E8}$, $R^{E10}$, $R^{E11}$, $R^{E12}$, $R^{E13}$, $R^{E14}$, $R^{E15}$, $R^{E20}$, $R^{E20*}$, $R^{E21}$, $R^{E22}$, $R^{E23}$, $R^{E24}$, $R^{E25}$, $R^{E27}$, $R^{E28}$, $R^{E29}$, $R^{E30}$ peuvent être pontés par un reste aliphatique divalent éventuellement substitué par au moins un groupe choisi parmi le groupe nitro, $-NH^2$, -CN, -SH, -OH, halogène, groupe alkyle et présentant éventuellement au moins un groupe choisi parmi éther, thioéther, aminoéther, groupe carbonyle, ester d'acide carboxylique, groupe amide d'acide carboxylique, ester d'acide sulfonique, ester d'acide phosphorique,
et où dans les cas où les restes $R^1$, $R^2$, $R^4$, $R^5$, $R^{1'}$, $R^{2'}$, $R^{3'}$ dans les structures **(I), (II)** ou **(III)** sont chacun une

fonction triphénylamine à activité redox **(G),** cela signifie que les restes $R^1$, $R^{1'}$, $R^{2'}$, $R^{3'}$ présentent chacun indépendamment les uns des autres la structure **(G1)** et que les restes $R^2$, $R^4$, $R^5$ sont chacun choisis indépendamment les uns des autres dans le groupe constitué par les structures **(G2), (G3)** avec

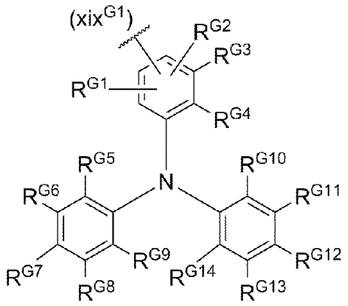
;
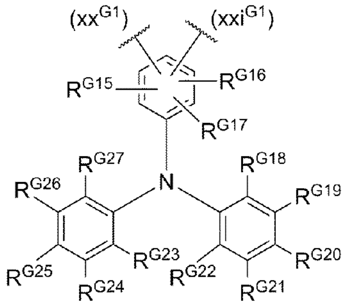
;
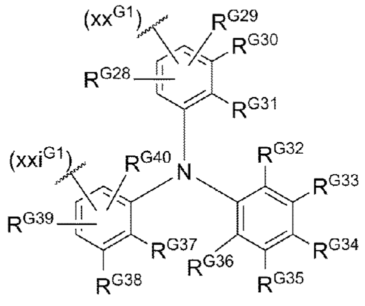
;

**(G1)** **(G2)** **(G3)**

où,
dans le cas où $R^1$ = **(G1)**, la liaison marquée par ($xix^{G1}$) représente la liaison à $L^1$,
dans le cas où $R^{1'}$ = **(G1)**, la liaison marquée par ($xix^{G1}$) représente la liaison à $L^{1'}$,
dans le cas où $R^{2'}$ = **(G1)**, la liaison marquée par ($xix^{G1}$) représente la liaison à $L^{2'}$,
dans le cas où $R^{3'}$ = **(G1)**, la liaison marquée par ($xix^{G1}$) représente la liaison à $L^{3'}$,
dans le cas où $R^2$ = **(G2)** ou **(G3),** la liaison marquée par ($xx^{G1}$) représente la liaison à $L^2$ et la liaison marquée par ($xxi^{G1}$) représente la liaison à $L^3$,
dans le cas où $R^4$ = **(G2)** ou **(G3),** la liaison marquée par ($xx^{G1}$) représente la liaison à $L^4$ et la liaison marquée par ($xxi^{G1}$) représente la liaison à $L^5$,
dans le cas où $R^5$ = **(G2)** ou **(G3),** la liaison marquée par ($xx^{G1}$) représente la liaison à $L^6$ et la liaison marquée par ($xxi^{G1}$) représente la liaison à $L^7$,
où les restes $R^{G1}$, $R^{G2}$, $R^{G3}$, $R^{G4}$, $R^{G5}$, $R^{G6}$, $R^{G7}$, $R^{G8}$, $R^{G9}$, $R^{G10}$, $R^{G11}$, $R^{G12}$, $R^{G13}$, $R^{G14}$, $R^{G15}$, $R^{G16}$, $R^{G17}$, $R^{G18}$, $R^{G19}$, $R^{G20}$, $R^{G21}$, $R^{G22}$, $R^{G23}$, $R^{G24}$, $R^{G25}$, $R^{G26}$, $R^{G27}$, $R^{G28}$, $R^{G29}$, $R^{G30}$, $R^{G31}$, $R^{G32}$, $R^{G33}$, $R^{G34}$, $R^{G35}$, $R^{G36}$, $R^{G37}$, $R^{G38}$, $R^{G39}$, $R^{G40}$ sont choisis indépendamment les uns des autres dans le groupe constitué par l'hydrogène, groupe (halo)alkyle, groupe alcényle, groupe alcynyle, groupe (halo)alcoxy, groupe cycloalkyle, carbonylalkyle, -C(=O)-H, acide carboxylique, carboxamide, ester d'acide carboxylique, ester d'acide sulfonique, ester d'acide phosphorique, amine, mono(halo)alkylamino, reste di(halo)alkylamino, cyano, hydroxyle, halogène, reste (hétéro)aromatique, où le reste (hétéro)aromatique peut être substitué par au moins un groupe choisi parmi halogène (halo)alkyle, (halo)alcoxy, cyano, acide carboxylique ester,
et où, dans les cas où les restes $R^1$, $R^2$, $R^4$, $R^5$, $R^{1'}$, $R^{2'}$, $R^{3'}$ dans les structures **(I), (II)** et **(III)** sont chacun une fonction viologène à activité rédox **(H),** cela signifie que les restes $R^1$, $R^{1'}$, $R^{2'}$, $R^{3'}$ sont chacun choisis indépendamment les uns des autres dans le groupe constitué par les structures **(H1), (H2),** et que les restes $R^2$, $R^4$, $R^5$ sont chacun choisis indépendamment les uns des autres dans le groupe constitués des structures **(H3), (H4), (H5), (H6), (H7),** où

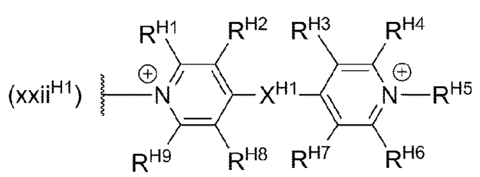
;
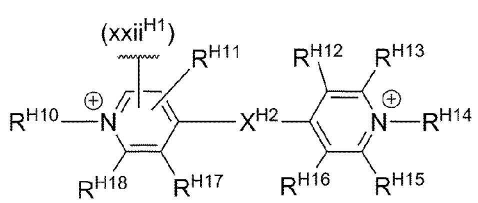
;

**(H1)** **(H2)**

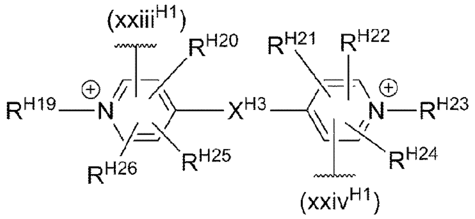 ; 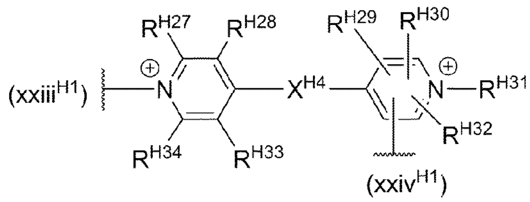 ;

**(H3)** **(H4)**

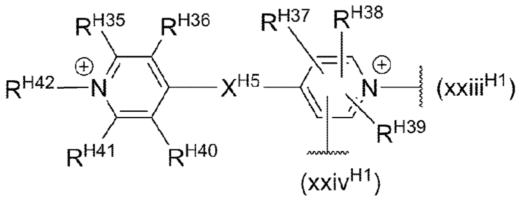 ; 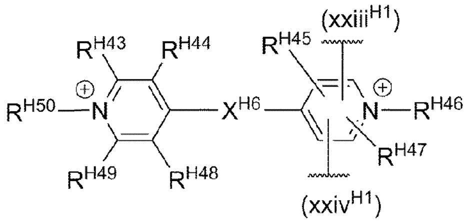 ;

**(H5)** **(H6)**

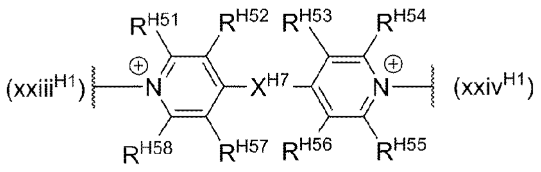 ;

**(H7)**

où,

dans le cas où $R^1$ = **(H1)** ou **(H2),** la liaison marquée par ($xxii^{H1}$) représente la liaison à $L^1$,
dans le cas où $R^{1'}$ = **(H1)** ou **(H2),** la liaison marquée par ($xxii^{H1}$) représente la liaison à $L^{1'}$,
dans le cas où $R^{2'}$ = **(H1)** ou **(H2),** la liaison marquée par ($xxii^{H1}$) représente la liaison à $L^{2'}$,
dans le cas où $R^{3'}$ = **(H1)** ou **(H2),** la liaison marquée par ($xxii^{H1}$) représente la liaison à $L^{3'}$,
dans le cas où $R^2$ = **(H3), (H4), (H5), (H6)** ou **(H7),** la liaison marquée par ($xxiii^{H1}$) représente la liaison à $L^2$ et la liaison marquée par ($xxiv^{H1}$) représente la liaison à $L^3$,
dans le cas où $R^4$ = **(H3), (H4), (H5), (H6)** ou **(H7),** la liaison marquée par ($xxiii^{H1}$) représente la liaison à $L^4$ et la liaison marquée par ($xxiv^{H1}$) représente la liaison à $L^5$,
dans le cas où $R^5$ = **(H3), (H4), (H5), (H6)** ou **(H7),** la liaison marquée par ($xxiii^{H1}$) représente la liaison à $L^6$ et la liaison marquée par ($xxiv^{H1}$) représente la liaison à $L^7$,
et où les restes $R^{H1}$, $R^{H2}$, $R^{H3}$, $R^{H4}$, $R^{H6}$, $R^{H7}$, $R^{H8}$, $R^{H9}$, $R^{H11}$, $R^{H12}$, $R^{H13}$, $R^{H15}$, $R^{H16}$, $R^{H17}$, $R^{H18}$, $R^{H2}0$, $R^{H21}$, $R^{H22}$, $R^{H24}$, $R^{H25}$, $R^{H26}$, $R^{H27}$, $R^{H28}$, $R^{H29}$, $R^{H3}0$, $R^{H32}$, $R^{H33}$, $R^{H34}$, $R^{H35}$, $R^{H36}$, $R^{H37}$, $R^{H38}$, $R^{H39}$, $R^{H40}$, $R^{H41}$, $R^{H43}$, $R^{H44}$, $R^{H45}$, $R^{H47}$, $R^{H48}$, $R^{H49}$, $R^{H51}$, $R^{H52}$, $R^{H53}$, $R^{H54}$, $R^{H55}$, $R^{H56}$, $R^{H57}$, $R^{H58}$ sont chacun choisis indépendamment les uns des autres dans le groupe constitué par l'hydrogène, groupe (halo)alkyle, groupe alcényle, groupe alcynyle, d'un groupe (halo)alcoxy, groupe cycloalkyle, carbonylalkyle, -C(=O)-H, acide carboxylique, d'un carboxamide, un ester d'acide carboxylique, ester d'acide sulfonique, ester d'acide phosphorique, amine, mono(halo)alkylamino, di(halo)alkylamino, cyano, hydroxyle, halogène,
et dans lequel les restes $R^{H5}$, $R^{H10}$, $R^{H14}$, $R^{H19}$, $R^{H23}$, $R^{H31}$, $R^{H42}$, $R^{H46}$, $R^{H50}$ sont chacun indépendamment choisis dans le groupe constitué par l'hydrogène, groupe (halo)alkyle, groupe alcényle, groupe alcynyle, groupe (halo)alcoxy, groupe cycloalkyle, carbonylalkyle,
et dans lequel les restes $X^{H1}$, $X^{H2}$, $X^{H3}$, $X^{H4}$, $X^{H5}$, $X^{H6}$,
et où dans les cas où les restes $R^1$, $R^2$, $R^4$, $R^5$, $R^{1'}$, $R^{2'}$, $R^{3'}$ dans les structures **(I), (II)** et **(III)** sont chacun une fonction ferrocène à activité rédox **(J),** cela signifie que les restes $R^1$, $R^{1'}$, $R^{2'}$, $R^{3'}$ sont chacun choisi indépendamment les uns des autres la structure suivante **(J1)** et les restes $R^2$, $R^4$, $R^5$
chacun indépendamment les uns des autres du groupe constitué des structures suivantes **(J2), (J3), (J4)** avec

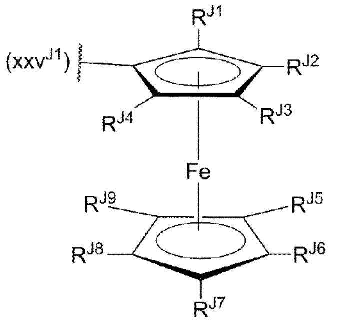
;
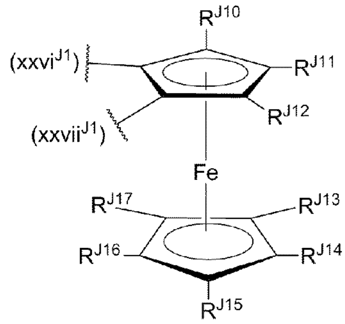
;

**(J1)** **(J2)**

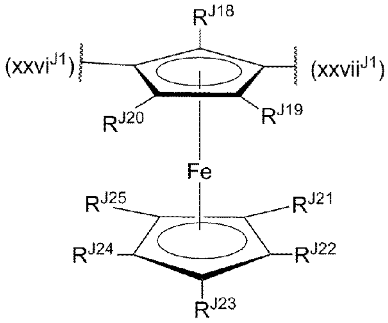
;
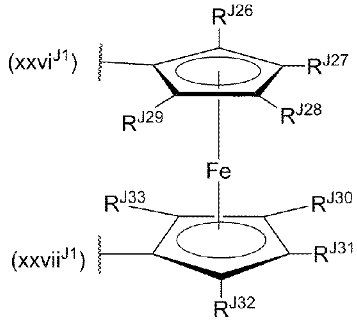
;

**(J3)** **(J4)**

où,
dans le cas où $R^1$ = **(J1)**, la liaison marquée par ($xxv^{J1}$) représente la liaison à $L^1$,
dans le cas où $R^{1'}$ = **(J1),** la liaison marquée par ($xxv^{J1}$) représente la liaison à $L^{1'}$,
dans le cas où $R^{2'}$ = **(J1)**, la liaison marquée par ($xxv^{J1}$) représente la liaison à $L^{2'}$,
dans le cas où $R^{3'}$ = **(J1)**, la liaison marquée par ($xxv^{J1}$) représente la liaison à $L^{3'}$,
dans le cas où $R^2$ = **(J2), (J3)** ou **(J4),** la liaison marquée par ($xxvi^{J1}$) représente la liaison à $L^2$ et la liaison marquée par ($xxvii^{J1}$) représente la liaison à $L^3$,
dans le cas où $R^4$ = **(J2), (J3)** ou **(J4),** la liaison marquée par ($xxvi^{J1}$) représente la liaison à $L^4$ et la liaison marquée par ($xxvii^{J1}$) représente la liaison à $L^5$,
dans le cas où $R^5$ = **(J2), (J3)** ou **(J4),** la liaison marquée par ($xxvi^{J1}$) représente la liaison à $L^6$ et la liaison marquée par ($xxvii^{J1}$) représente la liaison à $L^7$,
et où les restes $R^{J1}$, $R^{J2}$, $R^{J3}$, $R^{J4}$, $R^{J5}$, $R^{J6}$, $R^{J7}$, $R^{J8}$, $R^{J9}$, $R^{J1}0$, $R^{J11}$, $R^{J12}$, $R^{J13}$, $R^{J14}$, $R^{J15}$, $R^{J16}$, $R^{J17}$, $R^{J18}$, $R^{J19}$, $R^{J2}0$, $R^{J21}$, $R^{J22}$, $R^{J23}$, $R^{J24}$, $R^{J25}$, $R^{J26}$, $R^{J27}$, $R^{J28}$, $R^{J29}$, $R^{J3}0$, $R^{J31}$, $R^{J32}$, $R^{J33}$, sont chacun choisis indépendamment les uns des autres dans le groupe constitué par l'hydrogène, groupe (halo)alkyle, groupe alcényle, groupe alcynyle, groupe (halo)alcoxy, groupe cycloalkyle, carbonylalkyle. , -C(=O)-H, acide carboxylique, carboxamide, ester d'acide carboxylique, ester d'acide sulfonique, ester d'acide phosphorique, amine, mono(halo)alkylamino, di(halo)alkylamino, cyano, hydroxyle, halogène
où $L^1$, $L^2$, $L^3$, $L^4$, $L^5$, $L^6$, $L^7$, $L^{1'}$, $L^{2'}$, $L^{3'}$ dans les structures **(I), (II)** respectivement **(III)** sont choisis indépendamment l'une de l'autre dans le groupe constitué par la liaison directe, **(L11), (L12)** avec

**(L11)**: ♣-$(X^{L1})_p{}^1$-$[C{=}X^{L2}]_p{}^2$-$(X^{L3})_p{}^3$-$B^{L1}$-$(Y^{L1})_q{}^1$-$[C{=}Y^{L2}]_q{}^2$-$(Y^{L3})_q{}^3$-♠,

**(L12)**: ♣-$(Y^{L4})_q{}^4$-$[C{=}Y^{L5}]_q{}^5$-$(Y^{L6})_q{}^6$-♠

où p1, p2, p3 valent chacun 0 ou 1, où le cas « p2 = 0, p1 = p3 = 1 » est exclu,
où q1, q2, q3 valent chacun 0 ou 1, où le cas « q2 = 0, q1 = q3 = 1 » est exclu,
où q4, q5, q6 valent chacun 0 ou 1, où au moins l'un de q4, q5, q6 = 1 et le cas « q5 = 0, q4 = q6 = 1 » est exclu,

où $X^{L2}$, $Y^{L2}$, $Y^{L5}$ sont chacun indépendamment les uns des autres choisis dans le groupe constitué par O, S, où $X^{L1}$, $X^{L3}$, $Y^{L1}$, $Y^{L3}$, $Y^{L4}$, $Y^{L6}$ sont chacun indépendamment les uns des autres choisis dans le groupe constitué par O, S, NH, N[(Halo)Alkyl],
où $B^{L1}$ est choisi dans le groupe constitué par un reste (hétéro)aromatique divalent, reste divalent comprenant un reste aliphatique, éventuellement substitué par au moins un groupe choisi parmi le groupe nitro, $-NH^2$, -CN, -SH, -OH, halogène et éventuellement comprenant éventuellement au moins un groupe choisi parmi éther, thioéther, aminoéther, un groupe carbonyle, un ester d'acide carboxylique, un groupe carboxamide, un ester d'acide sulfonique, un ester d'acide phosphorique,
et où dans les cas où $L^1$, $L^2$, $L^3$, $L^4$, $L^5$, L6, $L^7$, $L^{1'}$, $L^{2'}$ ou $L^{3'}$ est lié à un atome autre que le carbone du groupe à activité rédox respectif $R^1$, $R^2$, $R^4$, $R^5$, $R^{1'}$, $R^{2'}$ ou $R^{3'}$, pour la structure **(L11)** la condition supplémentaire "q3 = 0, q2 = 1, q1 = 1 ou q3 = q2 = q1 = 0 ou q3 = 0, q2 = 1, q1 = 0", de préférence la condition "q3 = q2 = q1 = 0" s'applique, et pour la structure **(L12)** la condition supplémentaire "q6 = 0, q5 = 1, q4 = 1 ou q6 = 0, q5 = 1 , q4 = 0" s'applique,
et où « ♠ » désigne la liaison pointant vers $R^1$ pour $L^1$, désigne la liaison pointant vers $R^{1'}$ pour $L^{1'}$, désigne la liaison pointant vers $R^2$ pour $L^2$, désigne la liaison pointant vers $R^{2'}$ pour $L^{2'}$, désigne la liaison pointant vers $R^2$ pour $L^3$, désigne la liaison pointant vers $R^{3'}$ pour $L^{3'}$, désigne la liaison pointant vers $R^4$ pour $L^4$, désigne la liaison pointant vers $R^4$ pour $L^5$, désigne la liaison pointant vers $R^5$ pour $L^6$, désigne la liaison pointant vers $R^5$ pour $L^7$,
et où "4" désigne la liaison pointant vers $X^1$ pour $L^1$, pour $L^{1'}$ désigne la liaison pointant vers $X^1$ pour $L^{1'}$, désigne la liaison pointant vers $X^2$ pour $L^2$, désigne la liaison pointant vers $X^2$ pour $L^{2'}$, désigne la liaison pointant vers $X^3$ pour $L^{3'}$, désigne la liaison pointant vers $X^4$ pour $L^4$, désigne la liaison pointant vers $X^5$ pour $L^5$, désigne la liaison pointant vers $X^4$ pour $L^6$, désigne la liaison pointant vers $X^5$ pour $L^7$,
où les restes $X^1$, $X^2$, $X^3$, $X^4$, $X^5$ dans les structures **(I), (II)** et **(III)** sont indépendamment les uns des autres des groupes organiques non conjugués qui sont choisis parmi les structures suivantes **(X1), (X2), (X3), (X4), (X5)** avec

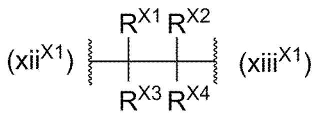 ; 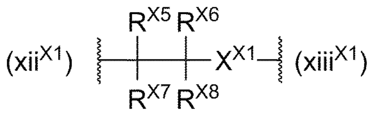 ; 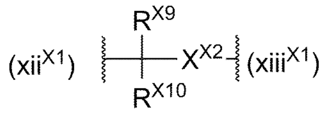 ;

**(X1)** **(X2)** **(X3)**

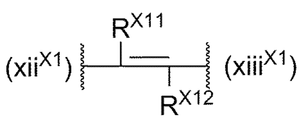 ; 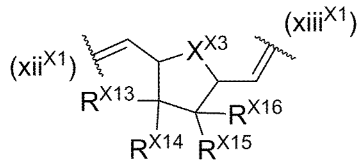 ;

**(X4)** **(X5)**

où, dans le cas où **(X1)** = $X^1$, l'un parmi $R^{X1}$, $R^{X2}$, $R^{X3}$, $R^{X4}$ désigne la liaison à $L^1$ et un autre parmi $R^{X1}$, $R^{X2}$, $R^{X3}$, $R^{X4}$ désigne la liaison à $L^{1'}$,
où, dans le cas où **(X1)** = $X^2$, l'un parmi $R^{X1}$, $R^{X2}$, $R^{X3}$, $R^{X4}$ désigne la liaison à $L^2$ et un autre parmi $R^{X1}$, $R^{X2}$, $R^{X3}$, $R^{X4}$ désigne la liaison à $L^{2'}$
où, dans le cas où **(X1)** = $X^3$, l'un parmi $R^{X1}$, $R^{X2}$, $R^{X3}$, $R^{X4}$ désigne la liaison à $L^3$ et un autre parmi $R^{X1}$, $R^{X2}$, $R^{X3}$, $R^{X4}$ la liaison à $L^{3'}$
où, dans le cas où **(X1)** = $X^4$, l'un parmi $R^{X1}$, $R^{X2}$, $R^{X3}$, $R^{X4}$ désigne la liaison à $L^4$ et un autre parmi $R^{X1}$, $R^{X2}$, $R^{X3}$, $R^{X4}$ désigne la liaison à L6,
où, dans le cas **(X1)** = $X^5$, l'un parmi $R^{X1}$, $R^{X2}$, $R^{X3}$, $R^{X4}$ désigne la liaison à $L^5$ et un autre parmi $R^{X1}$, $R^{X2}$, $R^{X3}$, $R^{X4}$ désigne la liaison à $L^7$,
où, dans le cas où **(X2)** = $X^1$, l'un parmi $R^{X5}$, $R^{X6}$, $R^{X7}$, $R^{X8}$ désigne la liaison à $L^1$ et un autre parmi $R^{X5}$, $R^{X6}$, $R^{X7}$, $R^{X8}$ désigne la liaison à $L^{1'}$,
où, dans le cas où **(X2)** = $X^2$, l'un parmi $R^{X5}$, $R^{X6}$, $R^{X7}$, $R^{X8}$ désigne la liaison à $L^2$ et un autre parmi $R^{X5}$, $R^{X6}$, $R^{X7}$, $R^{X8}$ désigne la liaison avec L2',
où, dans le cas où **(X2)** = $X^3$, l'un parmi $R^{X5}$, $R^{X6}$, $R^{X7}$, $R^{X8}$ désigne la liaison à $L^3$ et un autre parmi $R^{X5}$, $R^{X6}$,

$R^{X7}$, $R^{X8}$ désigne la liaison à L3',
où, dans le cas où **(X2)** = $X^4$, l'un parmi $R^{X5}$, $R^{X6}$, $R^{X7}$, $R^{X8}$ désigne la liaison à $L^4$ et un autre parmi $R^{X5}$, $R^{X6}$, $R^{X7}$, $R^{X8}$ désigne la liaison à $L^6$,
où, dans le cas où **(X2)** = $X^5$, l'un parmi $R^{X5}$, $R^{X6}$, $R^{X7}$, $R^{X8}$ désigne la liaison à $L^5$ et un autre parmi $R^{X5}$, $R^{X6}$, $R^{X7}$, $R^{X8}$ désigne la liaison à $L^7$,
où, dans le cas où **(X3)** = $X^1$, $R^{X9}$ désigne la liaison à $L^1$ et $R^{X10}$ désigne la liaison à $L^{1'}$,
où, dans le cas où **(X3)** = $X^2$, $R^{X9}$ désigne la liaison à $L^2$ et $R^{X10}$ désigne la liaison à $L^{2'}$,
où, dans le cas où **(X3)** = $X^3$, $R^{X9}$ désigne la liaison à $L^3$ et $R^{X10}$ désigne la liaison à $L^{3'}$,
où, dans le cas où **(X3)** = $X^4$, $R^{X9}$ désigne la liaison avec $L^4$ et $R^{X10}$ désigne la liaison à $L^6$,
où, dans le cas où **(X3)** = $X^5$, $R^{X9}$ désigne la liaison avec $L^5$ et $R^{X10}$ désigne la liaison à $L^7$,
où, dans le cas où **(X$^4$)** = $X^1$, l'un parmi $R^{X11}$, $R^{X12}$ désigne la liaison à $L^1$ et l'autre parmi $R^{X11}$, $R^{X12}$ désigne la liaison à $L^{1'}$,
où, dans le cas où **(X$^4$)** = $X^2$, l'un parmi $R^{X11}$, $R^{X12}$ désigne la liaison à $L^2$ et l'autre parmi $R^{X11}$, $R^{X12}$ désigne la liaison à $L^{2'}$,
où, dans le cas où **(X4)** = $X^3$, l'un parmi $R^{X11}$, $R^{X12}$ désigne la liaison à $L^3$ et l'autre parmi $R^{X11}$, $R^{X12}$ désigne la liaison à $L^{3'}$,
où, dans le cas où **(X4)** = $X^4$, l'un parmi $R^{X11}$, $R^{X12}$ désigne la liaison à $L^4$ et l'autre parmi $R^{X11}$, $R^{X12}$ désigne la liaison à $L^6$,
où, dans le cas où **(X4)** = $X^5$, l'un parmi $R^{X11}$, $R^{X12}$ désigne la liaison à $L^5$ et l'autre parmi $R^{X11}$, $R^{X12}$ désigne la liaison à $L^7$,
où, dans le cas où **(X5)** = $X^1$, l'un parmi $R^{X13}$, $R^{X14}$, $R^{X15}$, $R^{X16}$ désigne la liaison à $L^1$ et un autre parmi $R^{X13}$, $R^{X14}$, $R^{X15}$, $R^{X16}$ désigne la liaison à $L^{1'}$,
où, dans le cas où **(X5)** = $X^2$, l'un parmi $R^{X13}$, $R^{X14}$, $R^{X15}$, $R^{X16}$ désigne la liaison à $L^2$ et un autre parmi $R^{X13}$, $R^{X14}$, $R^{X15}$, $R^{X16}$ désigne la liaison à $L^{2'}$,
où, dans le cas où **(X5)** = $X^3$, l'un parmi $R^{X13}$, $R^{X14}$, $R^{X15}$, $R^{X16}$ désigne la liaison à $L^3$ et un autre parmi $R^{X13}$, $R^{X14}$, $R^{X15}$, $R^{X16}$ désigne la liaison à $L^{3'}$,
où, dans le cas où **(X5)** = $X^4$, l'un parmi $R^{X13}$, $R^{X14}$, $R^{X15}$, $R^{X16}$ désigne la liaison à $L^4$ et un autre parmi $R^{X13}$, $R^{X14}$, $R^{X15}$, $R^{X16}$ désigne la liaison à $L^6$,
dans le cas où **(X5)** = $X^5$, l'un parmi $R^{X13}$, $R^{X14}$, $R^{X15}$, $R^{X16}$ désigne la liaison à $L^5$ et un autre parmi $R^{X13}$, $R^{X14}$, $R^{X15}$, $R^{X16}$ désigne la liaison à $L^7$,
et où ceux parmi $R^{X1}$, $R^{X2}$, $R^{X3}$, $R^{X4}$, $R^{X5}$, $R^{X}6$, $R^{X7}$, $R^{X8}$, $R^{X13}$, $R^{X14}$, $R^{X15}$, $R^{X16}$ qui ne désignent pas une liaison à $L^1$, $L^{1'}$, $L^2$, $L^{2'}$, $L^3$, $L^{3'}$, $L^4$, $L^5$, $L^6$ ou $L^7$ sont des restes choisis chacun indépendamment les uns des autres dans le groupe constitué par l'hydrogène, un reste (hétéro)aromatique, éventuellement substitué par au moins un groupe choisi parmi le groupe nitro, $-NH_2$, -CN, -SH, -OH, un atome d'halogène et éventuellement un reste aliphatique comprenant au moins un groupe choisi parmi un éther, un thioéther, un aminoéther, un groupe carbonyle, un ester d'acide carboxylique, un groupe amide d'acide carboxylique, un ester d'acide sulfonique, un ester d'acide phosphorique,
et où $X^{X1}$, $X^{X2}$ sont chacun indépendamment choisis dans le groupe constitué par O, S, et dans laquelle $X^{X3}$ est choisi dans le groupe constitué par O, S, $-CH_2-$,
et où chaque liaison marquée par ($xii^{X1}$) correspond à celle marquée par "*", "#", "&", "§" et "$", respectivement, dans les structures **(I)**, **(II)** et **(III)**,
et où la liaison respectivement marquée par ($xiii^{X1}$) correspond à celle qui, dans les structures **(I)**, **(II)** et **(III)**, dans les cas où $m^1 = 0$, $m^2 = 0$, $m^3 = 0$, $m^4 = 0$ et resp. $m^5 = 0$ se lie respectivement à "**", "##", "&&", "§§" et "$$" et dans les cas où $m^1 > 0$, $m^2 > 0$, $m^3 > 0$, $m^4 > 0$ et $m^5 > 0$ se lie respectivement à $Y^1$, $Y^2$, $Y^3$, $Y^4$ et $Y^5$.
où $Y^1$, $Y^2$, $Y^3$, $Y^4$, $Y^5$ dans les structures **(I)**, **(II)** ou **(III)** sont, indépendamment les uns des autres, des unités d'espaceur organiques non conjuguées, qui sont choisies parmi les structures suivantes **(Y1), (Y2), (Y3), (Y4), (Y5)** avec

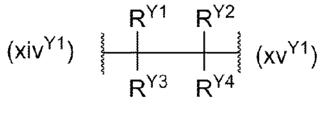
;
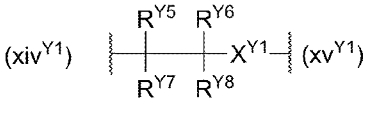
;
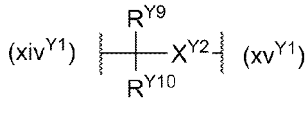
;

**(Y1)** **(Y2)** **(Y3)**

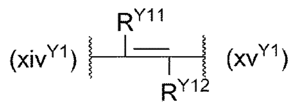 ; 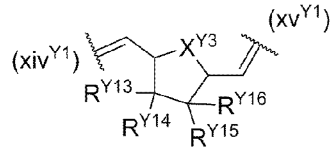 ;

**(Y4)** **(Y5)**

où $R^{Y1}$, $R^{Y2}$, $R^{Y3}$, $R^{Y4}$, $R^{Y5}$, $R^{Y6}$, $R^{Y7}$, $R^{Y8}$, $R^{Y9}$, $R^{Y10}$, $R^{Y11}$, $R^{Y12}$, $R^{Y13}$, $R^{Y14}$, $R^{Y15}$, $R^{Y16}$ sont chacun indépendamment les uns des autres choisis dans le groupe constitué par l'hydrogène, un reste (hétéro)aromatique, un reste aliphatique éventuellement substitué par au moins un groupe choisi parmi un groupe nitro, $-NH_2$, -CN, -SH, -OH, halogène et comportant éventuellement au moins un groupe choisi parmi un éther, un thioéther, un aminoéther, un groupe carbonyle, un ester d'acide carboxylique, un groupe amide d'acide carboxylique, un ester d'acide sulfonique, un ester d'acide phosphorique,
et où $X^{Y1}$, $X^{Y2}$ sont chacun indépendamment l'un de l'autre choisis dans le groupe constitué par O, S, et où $X^{Y3}$ est choisi dans le groupe constitué de O, S, $-CH_2-$,
et où la liaison respectivement désignée par ($xv^{Y1}$) correspond à celle qui est désignée par "**", "##", "&&", "§§" et "$$", respectivement, dans les structures **(I)**, **(II)** et **(III)**,
et où la liaison respectivement désignée par ($xiv^{Y1}$) correspond à celle qui, dans les structures **(I)**, **(II)** et **(III)**, se lie respectivement à $X^1$, $X^2$, $X^3$, $X^4$ et $X^5$,
et où ledit liquide ionique a une structure $Q^+A^-$, où $Q^+$ est un cation choisi dans le groupe constitué par les structures **(Q1), (Q2), (Q3), (Q4), (Q5)** avec

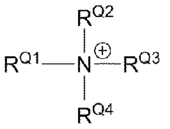 ; 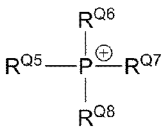 ; 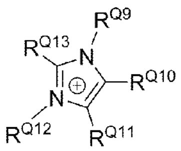 ; 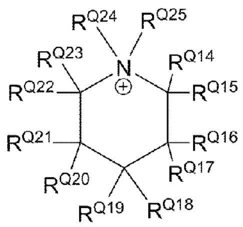 ; 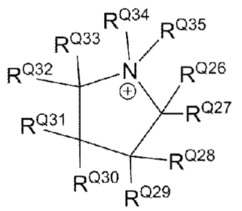 ;

**(Q1)** **(Q2)** **(Q3)** **(Q4)** **(Q5)**

où $R^{Q1}$, $R^{Q2}$, $R^{Q3}$, $R^{Q4}$, $R^{Q5}$, $R^{Q}6$, $R^{Q7}$, $R^{Q8}$ sont chacun indépendamment les uns des autres choisis dans le groupe constitué par un groupe (halo)alkyle, un groupe cycloalkyle,
où $R^{Q9}$, $R^{Q1}0$, $R^{Q11}$, $R^{Q12}$, $R^{Q13}$, $R^{Q14}$, $R^{Q15}$, $R^{Q1}6$, $R^{Q17}$, $R^{Q18}$, $R^{Q19}$, $R^{Q2}0$, $R^{Q21}$, $R^{Q22}$, $R^{Q23}$, $R^{Q24}$, $R^{Q25}$, $R^{Q2}6$, $R^{Q27}$, $R^{Q28}$, $R^{Q29}$, $R^{Q3}0$, $R^{Q31}$, $R^{Q32}$, $R^{Q33}$, $R^{Q34}$, $R^{Q35}$ sont chacun indépendamment les uns des autres choisis dans le groupe constitué par l'hydrogène, un groupe (halo)alkyle qui peut avoir au moins un groupe éther, un groupe cycloalkyle,
et où $A^-$ est un anion choisi en particulier dans le groupe constitué par un phosphate, phosphonate, alkylphosphonate, monoalkylphosphate, dialkylphosphate, bis[trifluorométhanesulfonyl]imide, (halo)alkylsulfonate, (halo)alkylsulfate, bis[fluorosulfonyl]imide, halogénure, dicyanamide, hexafluorophosphate, sulfate, tétrafluoroborate, trifluorométhanesulfonate, perchlorate, hydrogénosulfate, (halo)alkylcarboxylate, formiate, bisoxalatoborate, tétrachloroaluminate, dihydrogénophosphate, monoalkylhydrogénophosphate, nitrate.

2. Matériau d'électrode selon la revendication 1, dans lequel le poids total du liquide ionique compris dans le matériau d'électrode, par rapport au poids total du polymère organique à activité redox P non conjugué dans la chaîne principale, compris dans le matériau d'électrode, est compris entre 0,1 et 1000 % en poids.

3. Matériau d'électrode selon la revendication 1 ou 2, dans lequel l'additif de conductivité est choisi dans le groupe constitué par les matériaux carbonés, polymères conducteurs d'électricité, métaux, semi-métaux, composés (semi)métalliques.

4. Matériau d'électrode selon l'une quelconque des revendications 1 à 3, dans lequel le poids total de l'additif de conductivité compris dans le matériau d'électrode, par rapport au poids total du polymère à activité redox P compris dans le matériau d'électrode, est compris entre 0,1 et 1000 % en poids.

**5.** Matériau d'électrode selon l'une quelconque des revendications 1 à 4, comprenant en outre un additif liant qui est de préférence un polymère choisi dans le groupe constitué par le polytétrafluoroéthylène, le polyfluorure de vinylidène, le polyhexafluoropropylène, le polychlorure de vinyle, le polycarbonate, le polystyrène, le polyacrylate, le polyméthacrylate, le polysulfone, les dérivés de cellulose, le polyuréthane.

**6.** Matériau d'électrode selon la revendication 5, dans lequel le poids total de l'additif liant compris dans le matériau d'électrode, par rapport au poids total du polymère à activité redox P compris dans le matériau d'électrode, est compris entre 0,001 et 100 % en poids.

**7.** Electrode comprenant un matériau d'électrode selon l'une quelconque des revendications 1 à 6 et un substrat qui est notamment choisi dans le groupe constitué par les métaux, les matériaux carbonés, les substances oxydes.

**8.** Accumulateur de charge, en particulier batterie secondaire, comprenant une électrode selon la revendication 7.

**9.** Procédé de fabrication d'une électrode comprenant les étapes suivantes :

(a) on mélange au moins un polymère organique à activité redox P non conjugué dans la chaîne principale, au moins un liquide ionique, au moins un additif de conductivité, éventuellement au moins un solvant et éventuellement au moins un additif liant, ce qui permet d'obtenir un mélange M,
(b) le mélange M est appliqué sur un substrat,
(c) éventuellement, le solvant est au moins partiellement éliminé,
dans lequel, à l'étape (a), on utilise un polymère organique à activité redox P non conjugué tel que défini dans la revendication 1,
et dans lequel un liquide ionique de structure $Q^+A^-$, tel que défini dans la revendication 1, est utilisé dans l'étape (a).

**10.** Procédé selon la revendication 9, dans lequel le poids total du liquide ionique utilisé dans l'étape (a), par rapport au poids total du polymère organique redox P non conjugué dans la chaîne principale utilisé dans l'étape (a), se situe dans la plage de 0,1 à 1000 % en poids.

**11.** Procédé selon la revendication 9 ou 10, dans lequel l'additif de conductivité utilisé dans l'étape (a) est choisi dans le groupe constitué par les matériaux carbonés, les polymères conducteurs d'électricité, les métaux, les semi-métaux, les composés (semi)métalliques.

**12.** Procédé selon l'une quelconque des revendications 9 à 11, dans lequel le poids total de l'additif de conductivité utilisé dans l'étape (a), par rapport au poids total du polymère organique redox P non conjugué dans la chaîne principale utilisé dans l'étape (a), est compris entre 0,1 et 1000 % en poids.

**13.** Procédé selon l'une quelconque des revendications 9 à 12, dans lequel on utilise à l'étape (a) un additif liant choisi de préférence dans le groupe constitué par le polytétrafluoroéthylène, le polyfluorure de vinylidène, le polyhexafluoropropylène, le polychlorure de vinyle, le polycarbonate, le polystyrène, le polyacrylate, le polyméthacrylate, la polysulfone, les dérivés de cellulose, le polyuréthane.

**14.** Procédé selon la revendication 13, dans lequel le poids total de l'additif liant utilisé dans l'étape (a), par rapport au poids total du polymère organique redox P non conjugué, dans la chaîne principale utilisé dans l'étape (a), est compris entre $0,00^1$ à 100 % en poids.

**15.** Procédé selon l'une quelconque des revendications 9 à 14, dans lequel on utilise à l'étape (a) un solvant choisi de préférence dans le groupe constitué par la *N*-méthyl-2-pyrrolidonel'eau, le diméthylsulfoxyde, le carbonate d'éthylène, le carbonate de propylène, le carbonate de diméthyle, le carbonate de méthyléthyle, la $\gamma$-butyrolactone, le tétrahydrofurane, le dioxolane, le sulfolane, le *N,N'*-diméthylformamide, le *N,N'*-diméthylacétamide.

**16.** Procédé selon la revendication 15, dans lequel on utilise suffisamment de solvant à l'étape (a) pour que la concentration du polymère P dans le mélange M obtenu soit comprise entre 10 et 1000 mg/ml.

**17.** Procédé selon l'une quelconque des revendications 9 à 16, dans lequel le substrat à l'étape (b) est choisi dans le groupe constitué par les métaux, les matériaux carbonés, les substances oxydes.

**18.** Electrode susceptible d’être obtenue par le procédé selon l’une quelconque des revendications 9 à 17.

**19.** Accumulateur de charge, en particulier batterie secondaire, comprenant une électrode selon la revendication 18.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20170222232 A1
- US 9397341 B2
- US 9520598 B2
- US 9276292 B1
- WO 2017220965 A1
- WO 2015003725 A1
- US 4898915 A
- WO 2017207325 A1
- EP 1752474 A1
- WO 2015032951 A1
- CN 104530424 A
- CN 104530426 A
- WO 2015132374 A1
- WO 2015144798 A1
- EP 3279223 A1
- WO 2018024901 A1
- US 20170077518 A1
- US 20170077517 A1
- US 20170104214 A1
- WO 2017032583 A1
- EP 3136410 A1
- EP 3135704 A1
- WO 2017032582 A1
- JP 2011074316 A
- JP 2011074317 A
- CN 107118332 A
- WO 2018060680 A1
- US 9397341 B1
- WO 2004016631 A1
- WO 2006134015 A1
- US 20110247494 A1
- US 20080251759 A1
- WO 2018046387 A1


### In der Beschreibung aufgeführte Nicht-Patentliteratur


- **S. MUENCH ; A. WILD ; C. FRIEBE ; B. HÄUPLER ; T. JANOSCHKA ; U.S. SCHUBERT.** *Chem. Rev.,* 2016, vol. 116, 9438-9484
- **T. SUGA ; H. OHSHIRO ; S. SUGITA ; K. OYAIZU ; H. NISHIDE.** *Adv. Mater.,* 2009, vol. 21, 1627-1630
- **T. SUGA ; S. SUGITA ; H. OHSHIRO ; K. OYAIZU ; H. NISHIDE.** *Adv. Mater.,* 2011, vol. 3, 751-754
- **D. SCHMIDT ; B. HÄUPLER ; C. STOLZE ; M.D. HAGER ; U.S. SCHUBERT.** Part A: Polym. Chem. *J. Polym. Sci.,* 2015, vol. 53, 2517-2523
- **M.E. SPEER ; M. KOLEK ; J.J. JASSOY ; J. HEINE ; M. WINTER ; P.M. BIEKER ; B. ESSER.** *Chem. Commun.,* 2015, vol. 51, 15261-15264
- **M. BAIBARAC ; M. LIRA-CANTÜ ; J. ORÓ SOL ; I. BALTOG ; N. CASAÑ-PASTOR ; P. GOMEZ-ROMERO.** *Compos. Sci. Technol.,* 2007, vol. 67, 2556-2563
- **P. NESVADBA ; L. B. FOLGER ; P. MAIRE ; P. NOVAK.** *Synth. Met.,* 2011, vol. 161, 259-262
- **W. WENG ; Z.C. ZHANG ; A. ABOUIMRANE ; P.C. REDFERN ; L.A. CURTISS ; K. AMINE.** *Adv. Funct. Mater.,* 2012, vol. 22, 4485-4492
- **K. TAMURA ; N. AKUTAGAWA ; M. SATOH ; J. WADA ; T. MASUDA.** *Macromol. Rapid Commun.,* 2008, vol. 29, 1944-1949